(19)

Europäisches
Patentamt
European
Patent Office
Office européen
des brevets

(11) **EP 2 453 623 A1**

(12) **EUROPEAN PATENT APPLICATION**
published in accordance with Art. 153(4) EPC

(43) Date of publication:
**16.05.2012 Bulletin 2012/20**

(51) Int Cl.:
*H04L 27/26* (2006.01)     *H04J 11/00* (2006.01)

(21) Application number: **10796689.7**

(22) Date of filing: **03.06.2010**

(86) International application number:
**PCT/CN2010/073517**

(87) International publication number:
**WO 2011/003312 (13.01.2011 Gazette 2011/02)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.07.2009 CN 200910159442**

(71) Applicant: **ZTE Corporation**
**Shenzhen, Guangdong 518057 (CN)**

(72) Inventors:
• **ZHU, Dengkui**
**Guangdong 518057 (CN)**
• **LI, Zirong**
**Guangdong 518057 (CN)**

• **LIANG, Ting**
**Guangdong 518057 (CN)**
• **SUN, Bo**
**Guangdong 518057 (CN)**
• **SUN, Changyin**
**Guangdong 518057 (CN)**
• **LU, Zhaohua**
**Guangdong 518057 (CN)**

(74) Representative: **Quinterno, Giuseppe et al**
**Jacobacci & Partners S.p.A.**
**Corso Emilia 8**
**10152 Torino (IT)**

(54) **METHOD FOR SENDING MIDDLE PILOT**

(57) A method for sending a middle pilot is disclosed. The sending method comprises: selecting a middle pilot sequence set; creating a middle pilot subcarrier union; mapping by a base station a middle pilot sequence in the middle pilot sequence set after modulation through an OFDMA or OFDM symbol for transmitting the middle pilot onto a middle pilot subcarrier in a middle pilot subcarrier union corresponding to each transmission antenna, or, mapping by a base station a middle pilot sequence in the middle pilot sequence set through an OFDMA or OFDM symbol for transmitting the middle pilot onto a middle pilot subcarrier in a middle pilot subcarrier union corresponding to each transmission antenna and then performing modulation on the data at the subcarrier. By way of the present invention, the sending of middle pilot sequences is achieved, and the method reduces the periodicity of pilot symbols in the frequency domain and improves downlink performance of user data.

Fig. 2

EP 2 453 623 A1

**Description**

**Field of the Invention**

The present invention relates to the communication field and in particular to a method for sending a middle pilot.

**Background of the Invention**

In the wireless communication field, in order to improve system performance and meet the continuously increasing data service requirements of users, Orthogonal Frequency Division Multiplexing (abbreviated as OFDM) and Multiple-Input Multiple-Output (abbreviated as MIMO) are introduced.

During transmission, in order to further improve transmission quality, the data flow and pilot after MIMO encoding can be pre-coded and then mapped onto different antennae for transmitting. Thus, dedicated pilot appears. In an MIMO system which uses dedicated pilot mode, what is obtained by using channel estimation is an equivalent channel after pre-coding, and as to a system which needs to feed back real channel condition, the equivalent channel has to be converted to the real channel, while the process of converting the equivalent channel to the real channel is complicated and even cannot be achieved; in addition, as to a terminal which does not transmit any data during a time period, it cannot obtain the real channel situation periodically. For this end, it needs to measure the current real channel condition to meet the requirements of system feedback.

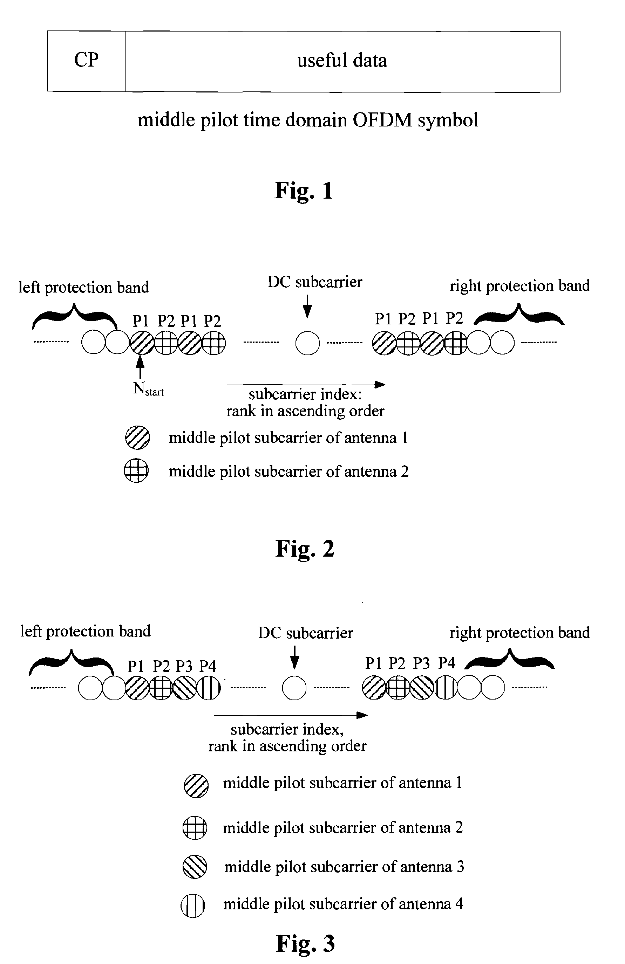

Middle pilot sequence refers to inserting a specific pilot sequence on a specific OFDM symbol (Fig. 1) in a downlink wireless resource frame, and it is different from ordinary dedicated pilot and is not pre-coding processed so that the receiver carries out channel measurement. The middle pilot can be used to estimate the channels of all carrier locations on the entire symbol, so that it is convenient for the transmitter to rationally use highly efficient transmission strategy according to the current channel condition. In a wireless communication system, rationally using middle pilot to measure real channel condition, correctly feeding back channel quality information (abbreviated as CQI), pre-coding matrix index (abbreviated as PMI) and rank indication (abbreviated as RI) of the channel are very important for improving the transmission efficiency of the system.

Since the orthogonal frequency division system is a multi-carrier system, different sequences of frequency domain modulation will affect the maximum peak-to-average power ratio (PAPR) of its time domain symbol, thus affecting the efficiency of system power amplifier; if the PAPR corresponding to the modulated middle pilot is too big, it would cause the transmitter to carry out non-linear processing, thus affecting the channel estimation accuracy of the receiver, which will finally affect the downlink performance of the users. On the other hand, since the middle pilot sequence is sent through the same OFDM symbol of the same subframe of a plurality of adjacent cells, the interference maybe exist therebetween, which makes the terminal to receive middle pilot signals of the serving base station and adjacent base station simultaneously. As to any rational design and rationally sending the middle pilot sequence, there is still no effective solution currently.

During the implementation of the present invention, the inventors recognized that there are the following defects in the prior art: during the process of sending middle pilot, the pilot symbol has periodicity in the frequency domain, thus affecting the downlink performance of user data.

**Summary of the Invention**

The present invention is proposed by considering that there is problem in relevant art of affecting the downlink performance of user data since the pilot symbol has periodicity in the frequency domain.

A method for sending a middle pilot is provided according to one aspect of the present invention. The method comprises: selecting a middle pilot sequence set; creating a middle pilot subcarrier union; mapping by a base station a middle pilot sequence in the middle pilot sequence set after modulation, through an OFDMA or OFDM symbol used for transmitting the middle pilot, onto a middle pilot subcarrier in a middle pilot subcarrier union corresponding to each transmission antenna, or, mapping by a base station a middle pilot sequence in the middle pilot sequence set, through an OFDMA or OFDM symbol used for transmitting the middle pilot, onto a middle pilot subcarrier in a middle pilot subcarrier union corresponding to each transmission antenna and then performing modulation on data at the subcarrier.

Preferably, the step of creating a middle pilot subcarrier union comprises: setting a subcarrier in the OFDMA or OFDM symbol, the index of which meets the following condition, as a union of the middle pilot subcarriers, for transmitting the middle pilot sequence, of all wireless communication networking units:

$$\left[ N_{start} : 1 : N_{start} + f\left(\frac{N_{used}-1}{2}\right) - 1, N_{start} + f\left(\frac{N_{used}-1}{2}\right) + 1 : 1 : N_{start} + N_{used} - 1 \right]$$

the above formula represents that the index increases to $N_{start} + f\left(\dfrac{N_{used}-1}{2}\right) - 1$ in the unit of 1 starting from

$N_{start}$, and then increases to $N_{start} + N_{used}$ -1 in the unit of 1 starting from $N_{start} + f\left(\dfrac{N_{used}-1}{2}\right) + 1$, wherein

both $N_{start}$ and $N_{used}$ are positive integers, wherein $N_{used}$ is the number of the subcarriers other than protection band subcarriers in an OFDMA or OFDM system, and $f\left(\dfrac{N_{used}-1}{2}\right)$ represents the integral value by flooring the

$$\frac{N_{used}-1}{2}.$$

Preferably, when $N_{used}$ is odd, $f\left(\dfrac{N_{used}-1}{2}\right) = \dfrac{N_{used}-1}{2}$, when $N_{used}$ is even, $f\left(\dfrac{N_{used}-1}{2}\right)$ is the minimum integer greater than $\dfrac{N_{used}-1}{2}$ or the maximum integer less than $\dfrac{N_{used}-1}{2}$, or the number obtained by rounding $f\left(\dfrac{N_{used}-1}{2}\right)$.

Preferably, said middle pilot sequence is a binary sequence. The above method further comprises: if the middle pilot sequence is represented by hexadecimal, then the hexadecimal middle pilot sequence is converted into said binary middle pilot sequence to be transmitted.

Preferably, said modulation is to modulate element 0 in the sequence to be 1, modulate element 1 in the sequence to be -1, or modulate element 0 in the sequence to be -1 and modulate element 1 in the sequence to be 1.

Preferably, the middle pilot sequence $b_n b_{n-1} \cdots b_0$ which have been modulated or not are successively mapped, in an order from the highest valid element $b_n$ to the lowest valid element $b_0$, onto middle pilot subcarriers ranked in ascending order corresponding to each transmission antenna, wherein $b_n$ is mapped onto a middle pilot subcarrier with the minimum index or onto a middle pilot subcarrier with the maximum index.

Preferably, during the mapping, the middle pilot subcarrier, the index of which meets the following condition, in $N_{used}$ subcarriers is regarded as the middle pilot subcarrier used by a middle pilot symbol corresponding to the transmission antenna n:

$$\left[ N_{start} + offset + n : \Delta : N_{start} + offset + n + \left(\frac{P}{2} - 1\right) * \Delta, \right.$$

$$N_{start} + offset + \frac{N_{used} - 1}{2} + n + 1 : \Delta : N_{start} + offset + \frac{N_{used} - 1}{2} + n + 1 + \left( \frac{P}{2} - 1 \right) * \Delta \Big]$$

representing that it increase to $N_{start} + offset + n + \left( \frac{P}{2} - 1 \right) * \Delta$ by the interval of $\Delta$ starting from $N_{start}$ + offset

+ n, and then increase to $N_{start} + offset + \frac{N_{used} - 1}{2} + n + 1 + \left( \frac{P}{2} - 1 \right) * \Delta$ by the interval of $\Delta$ starting from

$$N_{start} + offset + \frac{N_{used} - 1}{2} + n + 1,$$ wherein $0 \leq n \leq N_{Tx} - 1$, $\Delta$ is the interval between adjacent middle pilot subcarriers in each transmission antenna, $N_{Tx}$ is the number of transmission antennae, P is the number of middle pilot subcarriers used by each transmission antenna through the middle pilot symbol, *offset* is the number of specific offset subcarriers corresponding to the wireless communication networking unit and is an integer; and $N_{used}$ is the number of subcarriers other than the protection band subcarrier in the OFDMA or OFDM system; wherein *offset* is determined by at least one of the following: the index of the wireless communication networking unit and a frequency division multiplexing factor.

Preferably, the middle pilot sequence set to which the binary middle pilot sequence corresponding to the wireless communication networking unit belongs is determined at least one of the following factors: the number of transmission antennae corresponding to the wireless communication networking unit, system bandwidth, the number of subcarriers of the system, the number of discrete Fourier transform points, and the index of the wireless communication networking unit; and the following factors determine the index of the binary middle pilot sequence in the middle pilot sequence set to which the binary middle pilot sequence belongs, with the binary middle pilot sequence being the one to be transmitted and corresponding to the wireless communication networking unit: the index of the wireless communication networking unit, the number of part or all of sequences contained in a predetermined sequence set to which the middle pilot sequence corresponding to the index of the wireless communication networking unit belongs.

Preferably, said wireless communication networking unit comprises at least one of the following: a cell, a base station, a sector, and a segment.

Preferably, the index I of said middle pilot sequence to be transmitted in the middle pilot sequence set to which said middle pilot sequence belongs is one of the following:

    I = f(BSID,CellID,MaxSeqNum),
    I = f(BSID,SegmentID,MaxSeqNum)
    I = f(CellID,MaxSeqNum)
    I = f(SegmentID,MaxSeqNum) I = f(CellID,SegmentID,MaxSeqNum)
    I = f(SectorID,SegmentID,MaxSeqNum)
    I = f(CellID,SectorID, MaxSeqNum)
    I = f(CellID,SectorID)
    I = f(CellID,SegmentID)

wherein *MaxSeqNum*+1 is the number of part or all of sequences contained in the middle pilot sequence set to which the base station or cell or sector belongs.

Preferably, after the modulation and the mapping are completed, the data at the subcarrier of an OFDMA symbol corresponding to n-th transmission antenna are:

$$P_{CellID,n}(k) = \begin{cases} 1 - 2q_{CellId}(m), if \ k = m*\Delta + N_{start} + offset + n + \left\lfloor \dfrac{m*\Delta}{\dfrac{N_{used}-1}{2}} \right\rfloor \\ \\ 0, otherwise \end{cases}$$

wherein $k = N_{start}$, $N_{start} + 1$, $\cdots N_{start} + N_{used} - 1$, $k \neq N_{start} + \dfrac{N_{used}-1}{2}$, $m=0,1,....,P-1$, $q_{CellID}$ is a middle pilot sequence with the index of *CellID* and corresponding to the wireless communication networking unit; $\Delta$ is the interval between adjacent middle pilots of each antenna, and *offset* is the offset of the specific subcarrier corresponding to the wireless communication networking unit.

Preferably, the middle pilot sequence set is generated via at least one of the following operations:

selecting a natural number *n* for a middle pilot sequence set which contains S sequences, wherein *n* is the minimum natural number which meets   $2^n \geq \dfrac{m}{2}$   or ($2^n \geq m$), and *m* is the length of each sequence in the middle pilot sequence set, and *S* is a natural number;

or generating n middle sequences $x_i(k)$, wherein $1 \leq i \leq n$ and $1 \leq k \leq 2^n$, the length of each middle sequence is $2^n$, wherein the *i* ($1 \leq i \leq n$) th middle sequence is $x_i = (1,1,\cdots 1,0,0,\cdots 0,\cdots 1,1,\cdots 1,0,0,\cdots 0)$ wherein the number of the consecutive 1s or consecutive 0s is $2^n/2^i$;

or generating S' permutation sequences of sequence $[1,2,\cdots n]$ or S' different arrangements of sequence $[1,2,\cdots n]$, wherein $S' \geq S$ and S is the number of sequences in said middle pilot sequence set;

or generating S' Golay complementary sequence pairs of $a_i$ and $b_i$ with the length of $2^n$, wherein $1 \leq i \leq S'$;

wherein,   $a_i = \displaystyle\sum_{l=1}^{n-1} x_{\pi_i(l)} x_{\pi_i(l+1)}, b_i = \displaystyle\sum_{l=1}^{n-1} x_{\pi_i(l)} x_{\pi(l+1)} + x_{\pi_i(1)}$   , and $\pi_i(l)$ represents the *l-th* element of *i-th* sequence in S' permutation sequences;

or selecting M index sequences   $I_j = \left[ i_1^j, i_2^j, \cdots i_m^j \right]$,   wherein $1 \leq j \leq M$, and any two elements in each index sequences are different and each element belongs to an interval $[1, 2^n]$;

or in the generated S' Golay complementary sequence pairs, selecting for each sequence $a_i$ and/or $b_i$ elements corresponding to index $I_j$ to construct a new sequence and totally construct *S'M* new sequences, wherein when *n* is the minimum natural number which meets   $2^n \geq \dfrac{m}{2}$,   the generated new sequence is $[a_i(I_j),b_i(I_j)]$ ($1 \leq i \leq S'$, $1 \leq j \leq M$), and when *n* is the minimum natural number which meets $2^n \geq m$, the generated new sequence is $a_i(I_j)$ or $b_i(I_j)$ ($1 \leq i \leq S', 1 \leq j \leq M$);

wherein $a_i(I_j)$ represents to select the elements with the index of $I_j$ in $a_i$ to generate a new sequence, and $[a_i(I_j),b_i(I_j)]$ represents to cascade the two new sequences $a_i(I_j)$ and $b_i(I_j)$ to form one sequence;

selecting, from said *S'M* new sequences, S sequences which meet a predetermined condition to construct a middle pilot sequence set, wherein said predetermined condition is: the maximum peak-to-average power ratios of said S sequences are all less than a first threshold value and the correlation coefficient between any two sequences is less than a second threshold value; and

selecting a middle pilot sequence in the generated middle pilot sequence set.

Preferably, the peak-to-average power ratio is obtained by: mapping said *S'M* new sequences onto *m* subcarriers in $N_{FFT}$ carriers according to a specific mode, setting the remaining $N_{FFT}$-m carriers as zero, forming a sequence F of $N_{FFT}$, and then obtaining a sequence T by performing the discrete Fourier transform of $N_{FFT}$ points on sequence F, with the peak-to-average power ratio being:

$$PAPR = 10 * \log 10 \left( \frac{N_{FFT} * \max \left( T \otimes conj(T) \right)}{\sum_{i=1}^{N_{FFT}} |T(i)|^2} \right)$$

wherein '$\otimes$' represents that corresponding elements of the sequence multiply with each other, and $conj(T)$ represents to take conjugation on each element of sequence T;
said correlation coefficient between any two sequences is:

$$R_{kl}(\tau) = \frac{\sum_{i=1}^{N_{FFT}} T_k(i) * conj\left( T_l \left( \mod(i+\tau, N_{FFT}) \right) \right)}{m}, \tau = 0,1,\cdots N_{FFT} - 1$$

wherein $T_k$ represents the *k-th* sequence obtained according to the above method.

Preferably, the middle pilot sequence set is generated via at least one of the following operations:

generating *n* middle sequences $x_i(k)$, wherein $1 \leq i \leq n$ and $1 \leq k \leq 2^n$, and the length of each middle sequence is $2^n$, wherein the $i$ $(1 \leq i \leq n)$ th middle sequence is:
$x_i = (1,1,\cdots 1,0,0,\cdots 0,\cdots 1,1,\cdots 1,0,0,\cdots 0)$, wherein the number of the consecutive 1s s or consecutive 0s is $2^n/2^i$;
generating S' permutation sequences $\pi_i$ (i = 1,2,...S') of sequence $[1,2,\cdots n]$ or S' different arrangements $\pi_i$ (i = 1,2....S') of $[1,2,\cdots n]$, wherein $S' \geq S$ and S is the number of sequences in said middle pilot sequence set;
generating $A_1$ different binary Golay sequences $P_i$, i =1,2,...$A_1$, with the length of $2^N$, wherein $A_1 \geq A$ and A is the number of middle pilot sequences in said middle pilot sequence set;

said $P_i = \sum_{l=1}^{n-1} x_{\pi_i(l)} x_{\pi(l+1)} + \sum_{l=1}^{n} c_l x_l + c$, $c_l$ and *c* are any binary numbers (0 or 1); and

inserting into each generated binary Golay sequence $P_i$ a binary sequence *a* with the length of $M-2^N$ to obtain a sequence $S_i$ with the length of *M*, wherein the $j(1 \leq j \leq M-2^N)$th element of binary sequence *a* is the $(9*j)$th element of sequence $S_i$, wherein $1 \leq j \leq M-2^N$;
wherein said binary sequence a meets: a is a sequence, which enables Si to have the maximum peak-to-average power ratio, in all $2^{M-2^N}$ binary sequences with the length of $M - 2^N$.

Preferably, other $N-N_{used}$ subcarriers in N subcarriers are set to be in idle state, wherein N is the number of subcarriers of the system or the number of discrete Fourier transform points.
Preferably, said method further comprises performing a power/amplitude boosting operation on the modulated sequence.
Preferably, said step of selecting a middle pilot sequence set comprises:

selecting a middle pilot sequence set from a plurality of preset middle pilot sequence sets according to a first preset factor, wherein said first preset factor includes at least one of the following: the number of transmission antennas of the wireless communication networking unit, system bandwidth used by the system, the number of subcarriers of the system, the number of discrete Fourier transform points of the system, and the index of the wireless communication networking unit; and
selecting said middle pilot sequence to be transmitted from said selected middle pilot sequence set according to a second preset factor, wherein said second preset factor includes at least one of the following: the index of the wireless communication networking unit, and the number of part or all of sequences contained in a preset sequence set to which a middle pilot sequence corresponding to the wireless communication networking unit belongs; wherein said wireless communication networking unit includes at least one of the following: a cell, a base station, a sector, and a segment.

Preferably, the index $I$ of said middle pilot sequence to be transmitted comprises one of the following:

$I = f(BSID,CellID,MaxSeqNum)$,
$I = f(BSID,SegmentID,MaxSeqNum)$,
$I = f(CellID, MaxSeqNum)$,
$I = f(SegmentID,MaxSeqNum)$
$I = f(CellID,SegmentID,MaxSeqNum)$,

wherein $MaxSeqNum + 1$ is the number of part or all of sequences contained in the middle pilot sequence set to which the wireless communication networking unit belongs, BSID is the index of a base station, and Cell ID or Segment ID is cell index or sector index.

Preferably, the step of selecting a middle pilot sequence set comprises:

at least one of the following factors determining the middle pilot sequence set to which the middle pilot sequence to be transmitted and corresponding to the wireless communication networking unit belongs: the number of transmission antennae corresponding to the wireless communication networking unit, system bandwidth, the number of subcarriers of the system, the number of discrete Fourier transform points of the system; and
the following factors determining the index of the middle pilot sequence in the middle pilot sequence set to which the middle pilot sequence belongs, with the middle pilot sequence being the one to be transmitted and corresponding to the wireless communication networking unit: the index of the wireless communication networking unit, and the number of part or all of sequences contained in a predetermined sequence set to which the middle pilot sequence corresponding to the wireless communication networking unit belongs;
wherein said wireless communication networking unit includes at least one of the following: a cell, a base station, a sector, and a segment.

Preferably, the middle pilot sequence set is generated via the following operations:

choosing a natural number $N$ and enabling $N$ to be the maximum integer which meets $2^N \leq M$, wherein $M$ is the length of the middle pilot sequence in the middle pilot sequence set;
generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:
$x_i = (1,1,\cdots 1,0,0,\cdots 0,\cdots 1,1,\cdots 1,0,0,\cdots 0)$, wherein the number of consecutive 1s or consecutive 0s is $2^n/2^i$;
generating S' permutation sequences $\pi_i$, $i = 1,2,...S'$, of sequence $[1,2,\cdots n]$ or S' different arrangements $\pi_i$, $i = 1,2,...S'$, of $[1,2,\cdots n]$, wherein $S' \geq S$ and $S$ is the number of sequences in said middle pilot sequence set;
generating $A_I$ different binary Golay sequences $P_i$, $i = 1,2,...A_I$, with the length of $2^N$, wherein $A_I \geq A$ and $A$ is the number of middle pilot sequences in said middle pilot sequence set;

said $P_i = \sum_{l=1}^{n-1} x_{\pi,(l)} x_{\pi(l+1)} + \sum_{l=1}^{n} c_l x_l + c$, $c_l$ and $c$ are any binary numbers (0 or 1);and

inserting into each generated binary Golay sequence $P_i$ a binary sequence $a$ with the length of $M$-$2^N$ to obtain a sequence $S_i$ with the length of $M$, wherein the $j$($1 \leq j \leq M$-$2^N$)th element of binary sequence $a$ is the ($9*j$)th element of sequence $S_i$, wherein $1 \leq j \leq M$-$2^N$;
wherein said binary sequence $a$ meets: $a$ is a sequence, which enables $S_i$ to have the maximum peak-to-average power ratio, in $2^{M-2n}$ binary sequences with the length of $M$-$2^N$.

Preferably, the middle pilot sequence set is generated via at least one of the following operations:

selecting, for a middle pilot sequence set which contains S sequences, a natural number n, wherein $n$ is the minimum natural number which $2^n \geq \dfrac{m}{2}$ meets or ($2^n \geq m$), $m$ is the length of each sequence in the middle pilot sequence set, and $S$ is a natural number;

generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:

$x_i = (1,1,\cdots 1,0,0,\cdots 0,\cdots 1,1,\cdots 1,0,0 \cdots 0)$, wherein the number of consecutive 1s or consecutive 0s is $2^n/2^i$;

generating $S'$ permutation sequences of sequence $[1,2,\cdots n]$ or $S'$ different arrangements of $[1,2,\cdots n]$, wherein $S' \geq S$ and S is the number of sequences in said middle pilot sequence set;

generating $S'$ Golay complementary sequence pairs of $a_i$ and $b_i$ with the length of $2^n$, wherein $1 \leq i \leq S'$;

wherein, $a_i = \displaystyle\sum_{l=1}^{n} x_{\pi_i(l)} x_{\pi_i(l+1)}$, $b_i = \displaystyle\sum_{l=1}^{n} x_{\pi_i(l)} x_{\pi(l+1)} + x_{\pi_i(1)}$, and $\pi_i(l)$ represents the $l$-th element of $i$-th sequence in $S'$ permutation sequences;

selecting $M$ index sequences $I_j = \left[ i_1^j, i_2^j, \cdots i_m^j \right]$, wherein $1 \leq j \leq M$, and any two elements in each index sequence are different and each element belongs to an interval $[1,2^n]$; and

in the generated $S'$ Golay complementary sequence pairs, selecting, for each sequence $a_i$ and/or $b_i$, elements corresponding to index $I_j$ to construct a new sequence and totally construct $S'M$ new sequences, wherein when $n$ is the minimum natural number which meets $2^n \geq \dfrac{m}{2}$, the generated new sequence is $[a_i(I_j), b_i(I_j)]$ ($1 \leq i \leq S', 1 \leq j \leq M$), and when $n$ is the minimum natural number which meets $2^n \geq m$, the generated new sequence is $a_i(I_j)$ or $b_i(I_j)$ ($1 \leq i \leq S'$, $1 \leq j \leq M$);

wherein $a_i(I_j)$ represents to select elements with the index **of** $I_j$ in $a_i$ to generate a new sequence, and $[a_i(I_j), b_i(I_j)]$ represents to cascade the two new sequences $a_i(I_j)$ and $b_i(I_j)$ to form one sequence; and

selecting, from said $S'M$ new sequences, S sequences meeting a predetermined condition, to construct said middle pilot sequence set, wherein said predetermined condition is: the maximum peak-to-average power ratios of said S sequences are all less than a first threshold value and the correlation coefficient between any two sequences is less than a second threshold value.

Preferably, the method of generating the middle pilot sequence set comprises at least one of the following operations:

selecting, for a middle pilot sequence set which contains S sequences, a natural number n, wherein $n$ is the minimum natural number which meets $2^n \geq \dfrac{m}{2}$ or ($2^n \geq m$), $m$ is the length of each sequence in the middle pilot sequence set, and S is a natural number;

generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:

$x_i = (1,1,\cdots 1,0,0,\cdots 0,\cdots 1,1,\cdots 1,0,0,0,0)$, wherein the number of consecutive 1s or consecutive 0s is $2^n/2^i$;

generating S' permutation sequences of sequence $[1,2,\cdots n]$ or S' different arrangements of $[1,2,\cdots n]$, wherein $S' \geq S$ and S is the number of sequences in said middle pilot sequence set;

generating S' Golay complementary sequence pairs of $a_i$ and $b_i$ with the length of $2^n$, wherein $1 \leq i \leq S'$;

wherein, $a_i = \displaystyle\sum_{l=1}^{n} x_{\pi_i(l)} x_{\pi_i(l+1)}$, $b_i = \displaystyle\sum_{l=1}^{n} x_{\pi_i(l)} x_{\pi(l+1)} + x_{\pi_i(1)}$, and $\pi_i(l)$ represents the $l$-th element of $i$-th sequence in S' permutation sequences;

selecting M index sequences $I_j = \left[ i_1^j, i_2^j, \cdots i_m^j \right]$, wherein $1 \leq j \leq M$, and any two elements in each index sequence are different and each element belongs to an interval $[1, 2^n]$; and

in the generated S' Golay complementary sequence pairs, selecting, for each sequence $a_i$ and/or $b_i$, elements corresponding to index $I_j$ to construct a new sequence and totally construct $S'M$ new sequences, wherein when $n$

is the minimum natural number which meets $2^n \geq \dfrac{m}{2}$, the generated new sequence is $[a_i(I_j), b_i(I_j)]$ ($1 \leq i \leq S', 1 \leq j \leq M$),

and when $n$ is the minimum natural number which meets $2^n \geq m$, the generated new sequence is $a_i(I_j)$ or $b_i(I_j)$ ($1 \leq i \leq S'$, $1 \leq j \leq M$);

wherein $a_i(I_j)$ represents to select elements with the index of $I_j$ in $a_i$ to generate a new sequence, and $[a_i(I_j), b_i(I_j)]$ represents to cascade the two new sequences $a_i(I_j)$ and $b_i(I_j)$ to form one sequence; and

selecting, from said $S'M$ new sequences, S sequences meeting a predetermined condition, to construct said middle pilot sequence set, wherein said predetermined condition is: the maximum peak-to-average power ratios of said S sequences are all less than a first threshold value and the correlation coefficient between any two sequences is less than a second threshold value.

A method for generating a middle pilot sequence set is further provided according to another aspect of the present invention, which comprises at least one of the following operations:

generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is: $x_i = (1,1,\cdots 1,0,0,\cdots 0,\cdots 1,1,\cdots 1,0,0,\cdots 0)$, wherein the number of consecutive 1s or consecutive 0s is $2^n/2^i$; generating S' permutation sequences $\pi_i$ ($i = 1,2,...S'$) of sequence $[1,2,\cdots n]$ or S' different arrangements $\pi_i$, $i = 1,2,\cdots S'$ of $[1,2,\cdots n]$, wherein $S' \geq S$ and $S$ is the number of sequences in the middle pilot sequence set; generating $A_l$ different binary Golay sequences $P_i$ ($i = 1,2,\cdots A_l$) with the length of $2^N$, wherein $A_l > A$ and $A$ is the number of middle pilot sequences in the middle pilot sequence set;

$$P_i = \sum_{l=1}^{n-1} x_{\pi_i(l)} x_{\pi(l+1)} + \sum_{l=1}^{n} c_l x_l + c, \; c_l \text{ and } c \text{ are any binary numbers (0 or 1);}$$

as to each generated binary Golay sequence $P_i$, inserting a binary sequence **a** with the length of $M - 2^N$ to obtain a sequence $S_i$ with the length of M, wherein the $j$ ($1 \leq j \leq M - 2^N$)th element of binary sequence **a** is the ($9 \ast j$)th element of sequence $S_i$, wherein $1 \leq j \leq M - 2^N$; wherein binary sequence **a** meets following requirement: **a** is a sequence in $2^{M-2N}$ binary sequences with the length of $M - 2^N$ which enables $S_i$ to have the maximum peak-to-average power ratio.

By way of the method of the embodiments of the present invention, the correlation of pilot symbol in frequency domain can be avoided, thus improving downlink performance. In addition, in conjunction with the method for generating a middle pilot sequence set and the method for determining the same of the present invention, the middle pilot sequence has relatively low maximum peak-to-average power ratio and negative correlation and the cell interference can be reduced and the accuracy of the channel estimation can be improved by setting part of available subcarriers which meet the condition of the present invention to transmit a middle pilot sequence.

Other features and advantages of the present invention will be described in the following description and partly become obvious from the description, or be understood by implementing the present invention. The objects and other advantages of the present invention can be realized and obtained through the structures specially indicated by the description, claims, and drawings.

## Brief Description of the Accompanying Drawings

The drawings herein are used to provide a further understanding of the present invention and form a part of the specification, which are used to explain the present invention together with the embodiments of the present invention without unduly limiting the scope of the present invention. In the drawings:

Fig. 1 is a structural schematic diagram of a middle pilot time domain symbol according to relevant art;
Fig. 2 is a first schematic diagram of a subcarrier of a middle pilot symbol of 2 transmission antennas in the frequency domain according to the embodiments of the present invention;

Fig. 3 is a schematic diagram of a subcarrier of a middle pilot symbol of 4 transmission antennae in the frequency domain according to the embodiments of the present invention;

Fig. 4 is a schematic diagram of a subcarrier of a middle pilot symbol of 8 transmission antennae in the frequency domain according to the embodiments of the present invention;

Fig. 5 is a second schematic diagram of a subcarrier of a middle pilot symbol of 2 transmission antennae in the frequency domain according to the embodiments of the present invention;

Fig. 6 is a second schematic diagram of a subcarrier of a middle pilot symbol of 4 transmission antennae in the frequency domain according to the embodiments of the present invention; and

Fig. 7 is a second schematic diagram of a subcarrier of a middle pilot symbol of 8 transmission antennae in the frequency domain according to the embodiments of the present invention.

In order to meet the format requirements of statement, the corresponding labels of specification and accompanying drawings are as follows:

"$N_{start}$" in the specification corresponds to '$N_{start}$" in the accompanying drawings; and
"Offset" in the specification corresponds to "offset" in the accompanying drawings.

## Detailed Description of the Embodiments

The preferred embodiments of the invention will be described in conjunction with the accompanying drawings, and it shall be understood that the preferred embodiments described here are only for the purpose of illustration and not to limit the present invention.

The embodiments of the present invention provide a design solution for a middle pilot sequence and a method for sending a middle pilot sequence, which enables an OFDM symbol of each antenna port at the transmitter to have a very small PAPR value in the time domain, thus system power can be saved and the channel estimation accuracy of the terminal can be improved; in addition, in the embodiments of the present invention, as to each cell or sector or base station using $N_{used}$-1 carriers to transmit all the corresponding middle pilot sequences, adjacent cells or base stations or sectors use different middle pilot sequences, and the correlation coefficient of their corresponding middle pilot symbols (i.e. including symbols of middle pilot subcarriers which are used by the user to send middle pilot sequences) are maintained at a relatively low level in the time domain, thus interference between adjacent cells can be reduced and the channel estimation accuracy is improved. As to each cell or sector or base station using $\dfrac{N_{used}-1}{3}$ carriers to transmit all the corresponding middle pilot sequences, their corresponding middle pilot symbols (i.e. including symbols of middle pilot subcarriers which are used by the user to send middle pilot sequences) has relatively low peak-to-average power ratio values.

In the embodiments of the present invention, middle pilot symbol refers to a specific OFDM symbol in the downlink wireless frame structure and is used for transmitting middle pilot sequences, and this OFDM symbol is not used for transmitting data, and at the same time this pilot data is not processed by pre-coding. Middle pilot carriers are distributed through the entire OFDM symbol. The middle pilot is used for the terminal to carry out channel measurement so as to obtain a downlink channel coefficient, and in open loop MIMO (Multi Input Multi Output), the middle pilot can be used for channel quality indication (abbreviated as CQI) estimation, and in closed loop MIMO, the middle pilot can be used for the calculation of pre-coding matrix index (PMI).

Provided is a method for sending a middle pilot. The method comprises: selecting a middle pilot sequence set; creating a middle pilot subcarrier union; mapping by a base station a middle pilot sequence in the middle pilot sequence set after modulation through an OFDMA or OFDM symbol for transmitting the middle pilot onto a middle pilot subcarrier in a middle pilot subcarrier union corresponding to each transmission antenna, or, mapping by a base station a middle pilot sequence in the middle pilot sequence set through an OFDMA or OFDM symbol for transmitting the middle pilot onto a middle pilot subcarrier in a middle pilot subcarrier union corresponding to each transmission antenna and then performing modulation on the data through the subcarrier. By way of corresponding to the middle pilot subcarriers which correspond to each transmission antenna on different pilot sequences, correlation of pilot symbols in the frequency domain is avoided and downlink performance is improved. The steps of each embodiment will be described in detail hereinafter.

## Method for generating a middle pilot sequence set

The middle pilot sequence used in the embodiments of the present invention is preferably selected from a preset middle pilot sequence set, and in the embodiments of the present invention, two methods for generating a middle pilot sequence set is provided, of course, the present invention is not limited to this.

Mode I: generating a middle pilot sequence set via the following operations:

as to a middle pilot sequence set which contains S sequences, selecting a natural number $n$, wherein $n$ is the minimum natural number which meets $2^n \geq \dfrac{m}{2}$ or ($2^n \geq m$), $m$ is the length of each sequence in the middle pilot sequence set, and S is a natural number;
generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:
$x_i = (1,1,\cdots 1,0,0,\cdots 0,\cdots 1,1,\cdots 1,0,0,\cdots 0)$, wherein the number of consecutive 1s or consecutive 0s is $2^n/2^i$;
generating $S'$ permutation sequences of sequence $[1,2,\cdots n]$ or $S'$ different arrangements of $[1,2,\cdots n]$, wherein $S' > S$ and $S$ is the number of sequences in the middle pilot sequence set;
generating $S'$ Golay complementary sequence pairs of $a_i$ and $b_i$ with the length of $2^n$, wherein $1 \leq i \leq S'$;

wherein $a_i = \displaystyle\sum_{l=1}^{n} x_{\pi_i(l)} x_{\pi_i(l+1)}, \; b_i = \displaystyle\sum_{l=1}^{n} x_{\pi_i(l)} x_{\pi(l+1)} + x_{\pi_i(1)}$, and $\pi_i(l)$ represents the $l$th

element of $i$th sequence in $S'$ permutation sequences.

selecting M index sequences $I_j = \left[ i_1^j, i_2^j, \cdots i_m^j \right]$, wherein $1 \leq j \leq M$, and any two elements in each index sequences are different and each element belongs to an interval $[1,2^n]$;
in the generated $S'$ Golay complementary sequence pairs, as to each sequence $a_i$ and/or $b_i$, selecting an element corresponding to index $I_j$ to construct a new sequence and totally construct $S'M$ new sequences, wherein when $n$

is the minimum natural number which meets $2^n \geq \dfrac{m}{2}$, the generated new sequence is $[a_i(I_j), b_i(I_j)]$ ($1 \leq i \leq S', 1 \leq j \leq M$),

and when $n$ is the minimum natural number which meets $2^n \geq m$, the generated new sequence is $a_i(I_j)$ or $b_i(I_j)$ ($1 \leq i \leq S'$, $1 \leq j \leq M$);
wherein $a_i(I_j)$ indicates to select an element with the index of $I_j$ in $a_i$ to generate a new sequence, and $[a_i(I_j), b_i(I_j)]$ indicates to cascade the two new sequences $a_i(I_j)$ and $b_i(I_j)$ to form a sequence; and
from $S'M$ new sequences, selecting S sequences which meet a predetermined condition to construct a middle pilot sequence set, wherein the predetermined condition is: the maximum peak-to-average power ratios of S sequences are all less than a first threshold value and the correlation coefficient between any two sequences is less than a second threshold value.

The middle pilot sequence set generated by this method is as shown from Tables 1 to 5 hereinafter.

Mode II:

generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:
$x_i = (1,1,\cdots 1,0,0,\cdots 0,\cdots 1,1,\cdots 1,0,0,\cdots 0)$, wherein the number of consecutive 1s or consecutive 0s is $2^n/2^i$;
generating $S'$ permutation sequences $\pi_i$, $i = 1,2,...S'$, of sequence $[1,2,\cdots n]$ or $S'$ different arrangements $\pi_i$, $i = 1,2,\cdots S'$ of $[1,2,\cdots n]$, wherein $S' > S$ and $S$ is the number of sequences in the middle pilot sequence set;
generating $A_1$ different binary Golay sequences $P_i$ ($i = 1,2,\cdots A_1$) with the length of $2^N$, wherein $A_1 > A$ and $A$ is the number of middle pilot sequences in the middle pilot sequence set;

$P_i = \displaystyle\sum_{l=1}^{n-1} x_{\pi_i(l)} x_{\pi(l+1)} + \displaystyle\sum_{l=1}^{n} c_l x_l + c$, $C_1$ and $c$ are any binary numbers (0 or 1);

as to each generated binary Golay sequence $P_i$, inserting a binary sequence $a$ with the length of $M\text{-}2^N$ to obtain a sequence $S_i$ with the length of $M$, wherein the $j$ ($1{\leq}j{\leq}M - 2^N$)th element of binary sequence $a$ is the ($9*j$)th element of sequence $S_i$, wherein $1{\leq}j{\leq}M - 2^N$;

wherein the binary sequence $a$ meets: $a$ is a sequence, which enables $S_i$ to have the maximum peak-to-average power ratio, in $2^{M\text{-}2N}$ binary sequences with the length of $M\text{-}2^N$.

The middle pilot sequence set generated by this method is as shown from Tables 6 to 10 hereinafter.

It needs to note that a sequence set can be generated by any sequence generating mode, and then selecting a sequence in the generated sequence set as a middle pilot sequence. selecting from any of the above Tables 1 to 10. In addition, the tables hereinafter are only exemplary, and the correspondence relationship between the sequences and Cell ID in the tables can be adjusted according to the requirements of implementation, and the elements in the tables can also be deleted or added, for example, part of the elements in the tables hereinafter can be used as a middle pilot sequence set, which are all in the protection scope of the present invention.

**Method for determining a middle pilot sequence**

A method for determining a middle pilot sequence is disclosed, which comprises: selecting a middle pilot sequence set in a plurality of preset middle pilot sequence sets according to a first preset factor, wherein the first preset factor includes at least one of the following: the number of transmission antennae(s) of wireless communication networking unit, system bandwidth used by the system, the number of subcarriers of the system, the number of discrete Fourier transform point of the system, and index of the wireless communication networking unit; selecting the middle pilot sequence to be transmitted from the middle pilot sequence set according to a second preset factor, wherein the second preset factor includes at least one of the following: index of the wireless communication networking unit, the number of part or all of sequences contained in a preset sequence set to which a middle pilot sequence corresponding to the wireless communication networking unit belongs; and

a method for determining a middle pilot sequence is further disclosed, which comprises: the middle pilot sequence set to which the middle pilot sequence corresponding to the wireless communication networking unit belongs is determined by at least one of the following factors: the number of transmission antennae(s) corresponding to the wireless communication networking unit, system bandwidth, the number of subcarriers of the system, the number of discrete Fourier transform points of the system; and the following factors determine the index of the middle pilot sequence in the middle pilot sequence set to which the middle pilot sequence belongs, with the middle pilot sequence being the one to be transmitted and corresponding to the wireless communication networking unit: the index of the wireless communication networking unit, the number of part of or all of sequences contained in a predetermined sequence set to which the middle pilot sequence corresponding to the wireless communication networking unit belongs; and wherein the wireless communication networking unit includes at least one of the following: a cell, a base station, a sector, and a segment. In the above, the wireless communication networking unit includes at least one of the following: a cell, a base station, a sector, and a segment.

Embodiments 1 to 5 are 5 sequence sets generated using the above sequence generating mode I, wherein the number of sequences contained in each sequence set is S = 342, and of course any other S values can also be selected.

**Embodiment 1**

Table 1 is a set consisted of sequences with the length of 54, where the set totally includes 768 sequences, and each element of each sequence is a hexadecimal number, which represents a 4-bits binary bit (0 and 1) and the high position (order) is on the left and the low position (order) is on the right. In this case, the last two binary symbols of each sequence are 0 and 0, and during the modulation, these last two binary symbols are removed. Part or all of sequences of this sequence collection are used for a system in which the number of discrete Fourier transform points is $N_{FFT}$ = 512 and the number of transmission antennae is $N_{Tx}$ = 8 and are used as the middle pilot sequence. In this case, the middle pilots corresponding to all the antennae of each wireless communication networking unit totally occupy 432 subcarriers. Herein, the wireless communication networking unit can be one or more of the base station, the sector, the cell and the segment.

**Embodiment 2**

Table 2 is a set consisted of sequences with the length of 108, wherein the set totally includes 342 sequences, and each element of each sequence is a hexadecimal number, which represents a 4-bits binary bit (0 and 1) and the high position (order) is on the left and the low position (order) is on the right. Part or all of sequences of this sequence set are used for at least one of the following three systems and used as a middle pilot sequence:

System I: the number of discrete Fourier transform points is $N_{FFT}= 512$ and the number of transmission antennae is $N_{Tx} = 2$; wherein the middle pilots corresponding to all the antennae of each wireless communication networking unit totally occupy 216 subcarriers.
System II: the number of discrete Fourier transform points is $N_{FFT} = 512$ and the number of transmission antennae is $N_{TX} = 4$; wherein the middle pilots corresponding to all the antennae of each wireless communication networking unit totally occupy 432 subcarriers.
System III: the number of discrete Fourier transform points is $N_{FFT} = 1024$ and the number of transmission antennas is $N_{Tx} = 8$. In this case, the middle pilots corresponding to all the antennas of each wireless communication networking unit totally occupy 864 subcarriers.

**Embodiment 3**

Table 3 is a set consisted of sequences with the length of 216, wherein the set totally includes 342 sequences, and each sequence is assigned with a specific base station. Each element of each sequence is a hexadecimal number, which represents a 4-bits binary bit (0 and 1) and the high position (order) is on the left and the low position (order) is on the right. Part or all of sequences of this set are used for at least one of the following four systems:

System I: the number of discrete Fourier transform points is $N_{FFT} = 512$ and the number of transmission antennas is $N_{Tx} = 2$; wherein the middle pilots corresponding to all the antennas of each wireless communication networking unit totally occupy 432 subcarriers.
System II: the number of discrete Fourier transform points is $N_{FFT} = 1024$ and the number of transmission antennas is $N_{Tx} = 2$. In this case, the middle pilots corresponding to all the antennas of each wireless communication networking unit totally occupy 864 subcarriers.
System III: the number of discrete Fourier transform points is $N_{FFT} = 1024$ and the number of transmission antennas is $N_{Tx} = 4$. In this case, the middle pilots corresponding to all the antennas of each wireless communication networking unit totally occupy 432 subcarriers.
System IV: the number of discrete Fourier transform points is $N_{FFT}= 2048$ and the number of transmission antennas is $N_{Tx} = 8$. In this case, the middle pilots corresponding to all the antennas of each wireless communication networking unit totally occupy 1728 subcarriers.

**Embodiment 4**

Table 4 is a set consisted of sequences with the length of 432, wherein the set totally includes 342 sequences. Each element of each sequence is a hexadecimal number, which represents a 4-bits binary bit (0 and 1). Part or all of sequences of this set are used for at least one of the following three systems:

System I: the number of discrete Fourier transform points is $N_{FFT} = 1024$ and the number of transmission antennas is $N_{Tx} = 2$. In this case, the middle pilots corresponding to all the antennae of each wireless communication networking unit totally occupy 864 subcarriers.
System II: the number of discrete Fourier transform points is $N_{FFT}= 2048$ and the number of transmission antennae is $N_{Tx} = 2$; wherein the middle pilots corresponding to all the antennae of each wireless communication networking unit totally occupy 864 subcarriers.
System III: the number of discrete Fourier transform points is $N_{FFT} = 2048$ and the number of transmission antennae is $N_{Tx} = 4$. In this case, the middle pilots corresponding to all the antennae of each wireless communication networking unit totally occupy 1728 subcarriers.

**Embodiment 5**

Table 5 is a set consisted of sequences with the length of 864, wherein the set totally includes 342 sequences, and each element of each sequence is a hexadecimal number, which represents a 4-bits binary bit (0 and 1) and the high position (order) is on the left and the low position (order) is on the right. Part or all of sequences of this sequence set are used for a system in which the number of discrete Fourier transform points is $N_{FFT} = 2048$ and the number of transmission antennae is $N_{Tx} = 2$ and are used as a middle pilot sequence. In this case, the middle pilots corresponding to all the antennae of each wireless communication networking unit totally occupy 1728 subcarriers.
Embodiments 6 to 10 are 5 sequence sets generated using the above sequence generating mode II, wherein the number of sequences contained in each sequence set is S = 768, and of course any other S value can also be selected.

**Embodiment 6**

Table 6 is a set consisted of sequences with the length of 18, wherein the set totally includes 512 sequences, and each element of each sequence is a hexadecimal number, which represents a 4-bits binary bit (0 and 1) and the high position (order) is on the left and the low position (order) is on the right. In this case, the last two binary symbols of each sequence are 0 and 0, and during the modulation, these last two binary symbols are removed. Part or all of sequences of this sequence set are used for the number of discrete Fourier transform points being $N_{FFT} = 512$ and the number of transmission antennas being $N_{Tx} = 8$ and used as a middle pilot sequence, wherein the middle pilots corresponding to all the antennae of each wireless communication networking unit totally occupy 144 subcarriers.

**Embodiment 7**

Table 7 is a set consisted of sequences with the length of 36, wherein the set totally includes 512 sequences, and each element of each sequence is a hexadecimal number, which represents a 4-bits binary bit (0 and 1) and the high position (order) is on the left and the low position (order) is on the right. This sequence is used for at least one of the following three systems and used as a middle pilot sequence:

System I: the number of discrete Fourier transform points is $N_{FFT} = 512$ and the number of transmission antennae is $N_{Tx} = 4$; wherein the middle pilots corresponding to all the antennae of each wireless communication networking unit totally occupy 144 subcarriers.
System II: the number of discrete Fourier transform points is $N_{FFT} = 1024$ and the number of transmission antennae is $N_{Tx} = 8$. In this case, the middle pilots corresponding to all the antennae of each wireless communication networking unit totally occupy 288 subcarriers.

**Embodiment 8**

Table 8 is a set consisted of sequences with the length of 72, wherein the set totally includes 114 sequences, and each sequence is assigned with a specific base station. Each element of each sequence is a hexadecimal number, which represents a 4-bits binary bit (0 and 1) and the high position (order) is on the left and the low position (order) is on the right. This sequence can be used for at least one of the following several systems and used as the middle pilot sequence:

System I: the number of discrete Fourier transform points is $N_{FFT} = 512$ and the number of transmission antennae is $N_{Tx} = 2$; wherein the middle pilots corresponding to all the antennae of each wireless communication networking unit totally occupy 144 subcarriers.
System II: the number of discrete Fourier transform points is $N_{FFT} = 1024$ and the number of transmission antennae is $N_{Tx} = 4$; wherein the middle pilots corresponding to all the antennae of each wireless communication networking unit totally occupy 288 subcarriers.
System III: the number of discrete Fourier transform points is $N_{FFT} = 2048$ and the number of transmission antennae is $N_{Tx} = 8$; wherein the middle pilots corresponding to all the antennae of each wireless communication networking unit totally occupy 576 subcarriers.

**Embodiment 9**

Table 9 is a set consisted of sequences with the length of 144, wherein the set totally includes 512 sequences, and each sequence is assigned with a specific base station. Each element of each sequence is a hexadecimal number, which represents a 4-bits binary bit (0 and 1). Part or all of sequences of this sequence set are used for at least one of the following two systems and used as the middle pilot sequence:

System I: the number of discrete Fourier transform points is $N_{FFT} = 1024$ and the number of transmission antennae is $N_{Tx} = 2$. In this case, the middle pilots corresponding to all the antennae of each wireless communication networking unit totally occupy 288 subcarriers.
System II: the number of discrete Fourier transform points is $N_{FFT} = 2048$ and the number of transmission antennae is $N_{Tx} = 4$. In this case, the middle pilots corresponding to all the antennae of each wireless communication networking unit totally occupy 576 subcarriers.

In the following embodiments, the starting position of available subcarriers is selected as $-\dfrac{N_{used}}{2}$, and it is not limited to this value in practice and can be otherwise set according to the requirements of the implementation.

**Embodiment 10**

Table 10 is a set consisted of sequences with the length of 288, wherein the set totally includes 114 sequences, and each element of each sequence is a hexadecimal number, which represents a 4-bits binary bit (0 and 1) and the high position (order) is on the left and the low position (order) is on the right. This sequence set are used for a system in which the number of discrete Fourier transform points is $N_{FFT}$ = 2048 and the number of transmission antennae is $N_{Tx}$ = 2 and used as the middle pilot sequence.

In the following embodiments, the starting position of available subcarriers is selected as $-\dfrac{N_{used}}{2}$, and it is not limited to this value in practice and can be otherwise set according to the requirements of the implementation.

In the following embodiment, all the sequences of each sequence set is used as the middle pilot sequence set under a specific system and a specific scene, and part of the sequences of the sequence set can also be used as the middle pilot sequence set under a specific system and a specific scene.

In the following embodiment 11-23, *offset* = 0.

In the following embodiments 11-23, the correspondence relationship between cell index and corresponding middle pilot sequence set is: *I* = *mod*(*CellID,MaxSeqNum*) and of course other correspondences relationship can also be used.

In the following embodiments 11-23, when the elements of the sequence are mapped onto the subcarriers, other carriers except for the zero carrier use the mode of elements of one sequence being mapped onto every other $\Delta$ subcarriers, and of course, other mapping modes can also be used to enable the elements of the sequence to be mapped onto the subcarriers, such as unequal interval mode, as long as each element of the sequence can be mapped onto different subcarriers.

**Embodiment 11**

As to a Cell ID = 32 cell, the number of discrete Fourier transform points used is $N_{FFT}$ = 512, and 2 transmission antennae are used in the downlink, and the middle pilot sequence corresponding thereto is the sequence with the index of *I* = mod(32,768) = 32 in Table 3.

In this case, the number of available subcarriers of the system is $N_{used}$ = 432 (except for DC subcarriers and protection bands on both sides of system bandwidth), and the interval of adjacent pilots of each antenna is $\Delta$ = 2, then the middle pilot OFDM symbol corresponding to antenna 1 is modulated to each binary element of the sequence with the index of 32 on the subcarriers with the index of [-216:2:-2,1:2:215] in order; the middle pilot OFDM symbol corresponding to antenna 2 is modulated to each binary element of the sequence with the index of 32 on the subcarriers with the index of [-215:2:-1,2:2:216] in order; as to each element of the sequence, the modulation method is as follows: if it is 0, then it is modulated to signal 1; if it is 1, then it is modulated to signal -1.

**Sending of a middle pilot**

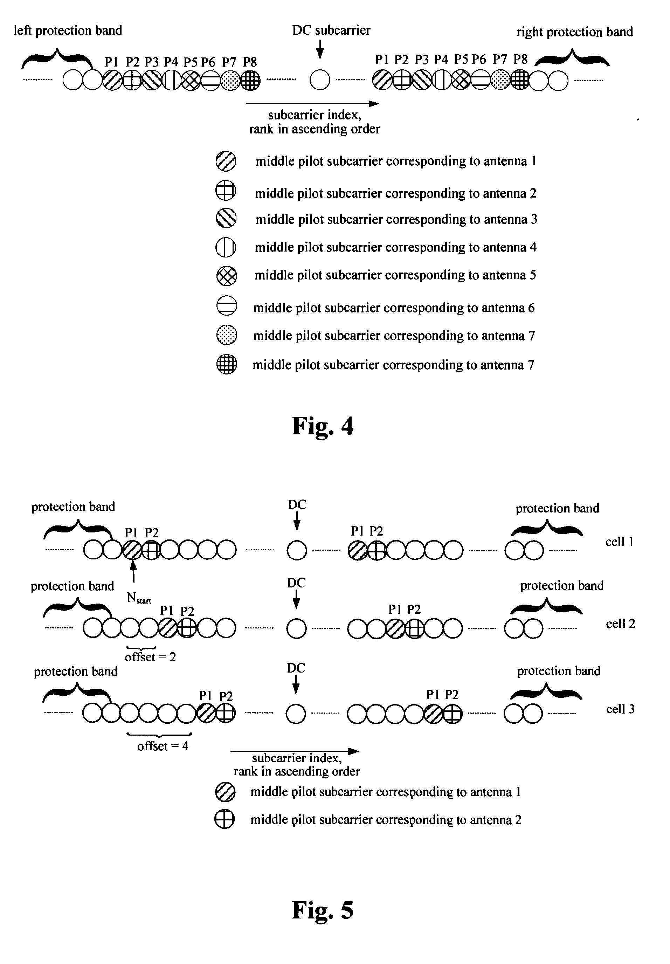

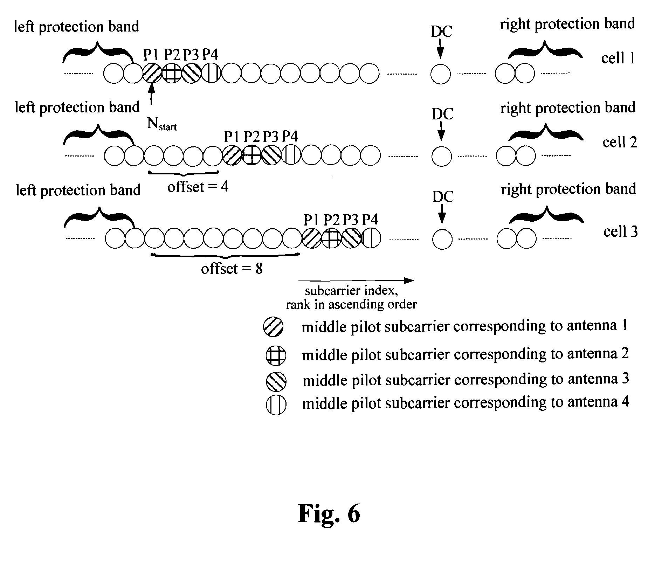

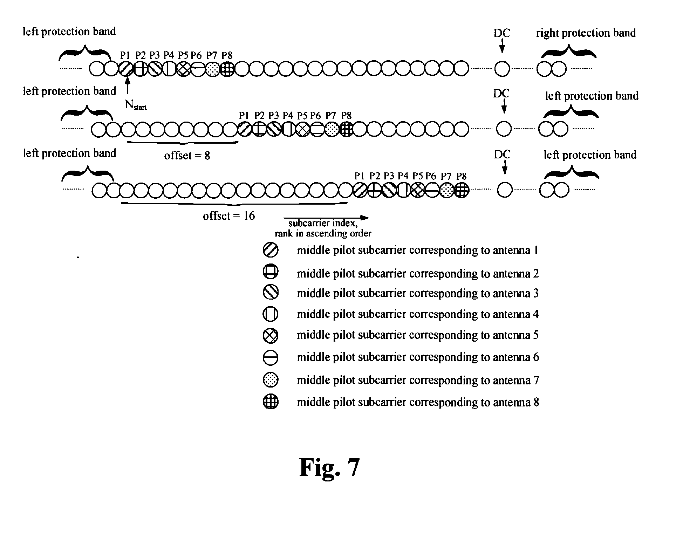

Fig. 2 is a first schematic diagram of a subcarrier of a middle pilot symbol of 2 transmission antennae in the frequency domain according to the embodiments of the present invention; Fig. 3 is a schematic diagram of a subcarrier of a middle pilot symbol of 4 transmission antennae in the frequency domain according to the embodiments of the present invention; Fig. 4 is a schematic diagram of a subcarrier of a middle pilot symbol of 8 transmission antennae in the frequency domain according to the embodiments of the present invention; Fig. 5 is a second schematic diagram of a subcarrier of a middle pilot symbol of 2 transmission antennae in the frequency domain according to the embodiments of the present invention; Fig. 6 is a second schematic diagram of a subcarrier of a middle pilot symbol of 4 transmission antennae in the frequency domain according to the embodiments of the present invention; and Fig. 7 is a second schematic diagram of a subcarrier of a middle pilot symbol of 8 transmission antennae in the frequency domain according to the embodiments of the present invention.

A method for sending a middle pilot is disclosed, which method comprises: setting subcarriers, the index of which meet the following condition, in the OFDMA or OFDM symbol as a union of the middle pilot subcarriers, which are used for transmitting middle pilot sequences, of all wireless communication networking units:

$$\left[ N_{start} : 1 : N_{start} + f\left(\frac{N_{used}-1}{2}\right) - 1, N_{start} + f\left(\frac{N_{used}-1}{2}\right) + 1 : 1 : N_{start} + N_{used} - 1 \right]$$

, which represents that the index increases to $N_{start} + f\left(\dfrac{N_{used}-1}{2}\right) - 1$ in the unit of 1 starting from $N_{start}$, and

then increases to $N_{start} + N_{used}$-1 in the unit of 1 starting from $N_{start} + f\left(\dfrac{N_{used}-1}{2}\right) + 1$ , wherein both $N_{start}$

and $N_{used}$ are positive integer, wherein $N_{used}$ is the number of the subcarriers other than protection band subcarrier(s) in an OFDMA or OFDM system, and $f\left(\dfrac{N_{used}-1}{2}\right)$ represents the integral value by flooring the $\dfrac{N_{used}-1}{2}$; and

the base station maps the middle pilot sequence after the modulation through an OFDMA or OFDM symbol for transmitting the middle pilot onto the middle pilot subcarrier in a union of the middle pilot subcarrier(s) corresponding to each transmission antenna, or, the base station maps the middle pilot sequence through an OFDMA or OFDM symbol for transmitting the middle pilot onto the middle pilot subcarrier in a union of the middle pilot subcarrier corresponding to each transmission antenna and then performs the modulation on data at the subcarrier.

The disclosed method for sending a middle pilot can avoid the periodicity of pilot symbols in the frequency domain and improve downlink performance of user data.

**Embodiment 12**

As to a cell with Cell ID = 32, the number of discrete Fourier transform points used is $N_{FFT}$ = 512, and 4 transmission antennae are used in the downlink, and the middle pilot sequence corresponding thereto is a sequence with the index of $I$ = mod(32, 768) = 32 in Table 2.

In this case, the number of available subcarriers which can be used for transmitting the middle pilot sequence in the system is $N_{used}$ = 432 (expcept DC subcarriers and protection bands on both sides of system bandwidth), and the interval of the adjacent pilots of each antenna is $\Delta$ = 4, then the middle pilot OFDM symbol corresponding to antenna 1 is modulated to the sequence with the index of 32 on the subcarriers with the index of [-216:4:-4,1:4:213] (as shown in Fig. 3); the middle pilot OFDM symbol corresponding to antenna 2 is modulated to the sequence with the index of 32 on the subcarriers with the index of [-215:4:-3,2:4:214]; the middle pilot OFDM symbol corresponding to antenna 3 is modulated to the sequence with the index of 32 on the subcarriers with the index of [-214:4:-2,3:4:215]; the middle pilot OFDM symbol corresponding to antenna 4 is modulated to the sequence with the index of 32 on the subcarriers with the index of [-213:4:-1,4:4:216].

The modulation method used in the above processing is as follows: as to each element of the sequence, if it is 0, then it is modulated as signal 1, if it is 1, then it is modulated as signal -1.

**Embodiment 13**

As to a cell with Cell ID = 32, the number of discrete Fourier transform points used is $N_{FFT}$ = 512, and 8 transmission antennas are used in the downlink, and the middle pilot sequence corresponding thereto is a sequence with the index of $I$ = mod(32,768) = 32 in Table 1.

In this case, the number of available subcarriers which can be used for transmitting the middle pilot sequence in the system is $N_{used}$ = 432 (except for DC subcarriers and protection bands on both sides of system bandwidth), and the interval of adjacent pilots of each antenna is $\Delta$ = 8, then the middle pilot OFDM symbol corresponding to antenna 1 is modulated to each binary element of the sequence with the index of 32 on the subcarriers with the index of [-216:8:-8,1:8:209] in order; the middle pilot OFDM symbol corresponding to antenna 2 is modulated to each binary element of the sequence with the index of 32 on the subcarriers with the index of [-215:8:-7,2:8:210] in order; the middle pilot OFDM symbol corresponding to antenna 3 is modulated to each binary element of the sequence with the index of 32 on the subcarriers with the indexes of [-214:8:-6,3:8:211] in order; the middle pilot OFDM symbol corresponding to antenna 4 is modulated to each binary element of the sequence with the index of 32 on the subcarriers with the indexes of [-213:8:-5, 4:8:212] in order; then the middle pilot OFDM symbol corresponding to antenna 1 is modulated to each binary element of the sequence with the index of 32 on the subcarriers with the indexes of [-212:8:-4,5:8:213] in order; the middle pilot OFDM symbol corresponding to antenna 2 is modulated to each binary element of the sequence with the index of 32 on the subcarriers with the indexes of [-211:8:-3,6:8:214] in order; then the middle pilot OFDM symbol corresponding to antenna 3 is modulated to each binary element in the sequence with the index of 32 on the subcarriers with the indexes of [-210:8:-2,7:8:215] in order; and the middle pilot OFDM symbol corresponding to antenna 4 is modulated to each binary element of the sequence with the index of 32 on the subcarriers with the indexes of[-209:8:-1,8:8:216] in order.

The modulation method used in the above processing is as follows: as to each element of the sequence, if it is 0, then it is modulated as signal 1, if it is 1, then it is modulated as signal -1.

### Embodiment 14

As to the cell with any Cell ID, such as Cell ID = 78, the number of discrete Fourier transform points used is $N_{FFT}$ = 1024, and 2 transmission antennae are used in the downlink, and the middle pilot sequence corresponding thereto is a sequence with the index of $I$ = mod (78,768) = 78 in Table 4.

In this case, the number of available subcarriers of the system is $N_{used}$ = 864 (except for DC subcarriers and protection bands on both sides of system bandwidth), and the interval of adjacent pilots of each antenna is $\Delta$ = 2, the middle pilot OFDM symbol corresponding to antenna 1 is modulated to each binary element in the sequence with the index of 78 on the subcarriers with the indexes of [-432:2:-2,1:2:431] in order; and the middle pilot OFDM symbol corresponding to antenna 2 is modulated to each binary element in the sequence with the index of 78 on the subcarriers with the indexes of [-431:2:-1,2:2:432] in order.

The modulation method used in the above processing is as follows: as to each element of the sequence, if it is 0, then it is modulated as signal 1, if it is 1, then it is modulated as signal -1.

### Embodiment 15

As to the cell with any Cell ID, such as Cell ID = 368, the number of discrete Fourier transform points used is $N_{FFT}$ = 1024, and 4 transmission antennae are used in the downlink, and the middle pilot sequence corresponding thereto is a sequence with the index of $I$ = mod (794,768) = 26 in Table 3.

In this case, the number of available subcarriers in the system is $N_{used}$ = 864 (expect DC subcarriers and protection bands on both sides of system bandwidth), and the interval of adjacent pilots of each antenna is $\Delta$ = 4, then the middle pilot OFDM symbol corresponding to antenna 1 is modulated to the sequence with the index of 26 on the subcarriers with the indexes of [-432:4:-4,1:4:429]; the middle pilot OFDM symbol corresponding to antenna 2 is modulated to each binary element in the sequence with the index of 26 on the subcarriers with the indexes of [-431:4:-3,2:4:430] in order; the middle pilot OFDM symbol corresponding to antenna 3 is modulated to each binary element in the sequence with the index of 26 on the subcarriers with the indexes of [-430:4:-2,3:4:431] in order; and the middle pilot OFDM symbol corresponding to antenna 4 is modulated to each binary element in the sequence with the index of 26 on the subcarriers with the indexes of [-429:4:-1,4:4:432] in order.

The modulation method used in the above processing is as follows: as to each element of the sequence, if it is 0, then it is modulated as signal 1, if it is 1, then it is modulated as signal -1.

### Embodiment 16

As to the cell with any Cell ID, such as Cell ID = 78, the number of discrete Fourier transform points used is $N_{FFT}$ = 1024, and 8 transmission antennae are used in the downlink, and the middle pilot sequence corresponding thereto is a sequence with the index of $I$=mod (794,768) = 78 in Table 2.

In this case, the number of available subcarriers in the system is $N_{used}$ = 864 (except for DC subcarriers and protection bands on both sides of system bandwidth), and the interval of adjacent pilots of each antenna is $\Delta$ = 8, then the middle pilot OFDM symbol corresponding to antenna 1 is modulated to each binary element in the sequence with the index of 78 on the subcarriers with the indexes of [-432:8:-8,1:8:425] in order; the middle pilot OFDM symbol corresponding to antenna 2 is modulated to each binary element in the sequence with the index of 78 on the subcarriers with the indexes of [-431:8:-7,2:8:426] in order; the middle pilot OFDM symbol corresponding to antenna 3 is modulated to each binary element in the sequence with the index of 78 on the subcarriers with the indexes of [-430:8:-6,3:8:427] in order; the middle pilot OFDM symbol corresponding to antenna 4 is modulated to each binary element in the sequence with the index of 78 on the subcarriers with the indexes of [-429:8:-5,4:8:428] in order; the middle pilot OFDM symbol corresponding to antenna 5 is modulated to each binary element in the sequence with the index of 78 on the subcarriers with the indexes of [-428:8:-4,5:8:429] in order; the middle pilot OFDM symbol corresponding to antenna 6 is modulated to each binary element in the sequence with the index of 78 on the subcarriers with the indexes of [-427:8:-3,6:8:430] in order; the middle pilot OFDM symbol corresponding to antenna 7 is modulated to each binary element in the sequence with the index of 78 on the subcarriers with the indexes of [-426:8:-2,7:8:431] in order; and the middle pilot OFDM symbol corresponding to antenna 8 is modulated to each binary element in the sequence with the index of 78 on the subcarriers with the indexes of [-425:8:-1,8:8:432] in order.

The modulation method used in the above processing is as follows: as to each element of the sequence, if it is 0, then it is modulated as signal 1, if it is 1, then it is modulated as signal -1.

## Embodiment 17

As to the cell with any Cell ID, such as Cell ID = 78, the number of discrete Fourier transform points used is $N_{FFT}$ = 2048, and 2 transmission antennae are used in the downlink, and the middle pilot sequence corresponding thereto is a sequence with the index of $I$= mod(78, 768) = 78 in Table 5.

In this case, the number of available subcarriers of the system is $N_{used}$ = 1728 (except for DC subcarriers and protection bands on both sides of system bandwidth), and the interval of adjacent pilots of each antenna is $\Delta$ = 2, the middle pilot OFDM symbol corresponding to antenna 1 is modulated to each binary element in the sequence with the index of 78 on the subcarriers with the indexes of [-864:2:-2,1:2:863] in order; the middle pilot OFDM symbol corresponding to antenna 2 is modulated to each binary element in the sequence with the index of 78 on the subcarriers with the indexes of[-863:2:-1,2:2:864] in order.

The modulation method used in the above processing is as follows: as to each element of the sequence, if it is 0, then it is modulated as signal 1, if it is 1, then it is modulated as signal -1.

## Embodiment 18

As to the cell with any Cell ID, such as Cell ID = 368, the number of discrete Fourier transform points used is $N_{FFT}$ = 2048, and 4 transmission antennae are used in the downlink, and the middle pilot sequence corresponding thereto is a sequence with the index of $I$=mod (794, 768) = 26 in Table 4.

In this case, the number of available subcarriers in the system is $N_{used}$ = 1728 (except for DC subcarriers and protection bands on both sides of system bandwidth), and the interval of adjacent pilots of each antenna is $\Delta$ = 4, then the middle pilot OFDM symbol corresponding to antenna 1 is modulated to the sequence with the index of 26 on the subcarriers with the indexes of [-864:4:-4,1:4:861]; the middle pilot OFDM symbol corresponding to antenna 2 is modulated to each binary element in the sequence with the index of 26 on the subcarriers with the indexes of [-863:4:-3,2:4:862] in order; the middle pilot OFDM symbol corresponding to antenna 3 is modulated to each binary element in the sequence with the index of 26 on the subcarriers with the indexes of [-862:4:-2,3:4:863] in order; and the middle pilot OFDM symbol corresponding to antenna 4 is modulated to each binary element in the sequence with the index of 26 on the subcarriers with the indexes of [-861:4:-1,4:4:864] in order.

The modulation method used in the above processing is as follows: as to each element of the sequence, if it is 0, then it is modulated as signal 1, if it is 1, then it is modulated as signal -1.

## Embodiment 19

As to the cell with any Cell ID, such as Cell ID = 368, the number of discrete Fourier transform points used is $N_{FFT}$ = 2048, and 8 transmission antennae are used in the downlink, and the middle pilot sequence corresponding thereto is a sequence with the index of $I$ = mod (794, 768) = 26 in Table 3.

In this case, the number of available subcarriers in the system is $N_{used}$ = 1728 (except for DC subcarriers and protection bands on both sides of system bandwidth), and the interval of adjacent pilots of each antenna is $\Delta$ = 8, then the middle pilot OFDM symbol corresponding to antenna 1 is modulated to the sequence with the index of 26 on the subcarriers with the indexes of [-864:8:-8,1:8:857]; the middle pilot OFDM symbol corresponding to antenna 2 is modulated to each binary element in the sequence with the index of 26 on the subcarriers with the indexes of [-863:8:-7,2:8:858] in order; the middle pilot OFDM symbol corresponding to antenna 3 is modulated to each binary element in the sequence with the index of 26 on the subcarriers with the indexes of [-862:8:-6,3:8:859] in order; the middle pilot OFDM symbol corresponding to antenna 4 is modulated to each binary element in the sequence with the index of 26 on the subcarriers with the indexes of [-861:8:-5,4:8:860] in order; then the middle pilot OFDM symbol corresponding to antenna 5 is modulated to each binary element in the sequence with the index of 26 on the subcarriers with the indexes of [-860:8:-4,5:8:861] in order; the middle pilot OFDM symbol corresponding to antenna 6 is modulated to each binary element in the sequence with the index of 26 on the subcarriers with the indexes of [-859:8:-3,6:8:862] in order; the middle pilot OFDM symbol corresponding to antenna 7 is modulated to each binary element in the sequence the index of which is 26 on the subcarriers with the indexes of [-858:8:-2,7:8:863] in order; and the middle pilot OFDM symbol corresponding to antenna 8 is modulated to each binary element in the sequence the index of which is 26 on the subcarriers with the indexes of [-857:8:-1,8:8:864] in order.

The modulation method used in the above processing is as follows: as to each element of the sequence, if it is 0, then it is modulated as signal 1, if it is 1, then it is modulated as signal -1.

**Embodiment 20**

As to the cell with any Cell ID, such as Cell ID = 368, the number of discrete Fourier transform points used is $N_{FFT}$ = 512, and 2 transmission antennae are used in the downlink, and the middle pilot sequence corresponding thereto is a sequence with the index of $I$ = mod (794, 768) = 26 in Table 2.

In this case, the number of available subcarriers of the system is $N_{used}$ = 432 (except for DC subcarriers and protection bands on both sides of system bandwidth), and the interval of adjacent pilots of each antenna is $\Delta$ = 4, the middle pilot OFDM symbol corresponding to antenna 1 is modulated to each binary element in the sequence with the index of 26 on the subcarriers with the indexes of [-216:4:-4,1:4:213] in order; and the middle pilot OFDM symbol corresponding to antenna 2 is modulated to each binary element in the sequence with the index of 26 on the subcarriers with the indexes of [-215:4:-3,2:4:214] in order.

The modulation method used in the above processing is as follows: as to each element of the sequence, if it is 0, then it is modulated as signal 1, if it is 1, then it is modulated as signal -1.

**Embodiment 21**

As to the cell with any Cell ID, such as Cell ID = 368, the number of discrete Fourier transform points used is $N_{FFT}$ = 1024, and 2 transmission antennae are used in the downlink, and the middle pilot sequence corresponding thereto is a sequence with the index of $I$ = mod (794, 768) = 26 in Table 3.

In this case, the number of available subcarriers of the system is $N_{used}$ = 864 (except for DC subcarriers and protection bands on both sides of system bandwidth), and the interval of adjacent pilots of each antenna is $\Delta$ = 4, the middle pilot OFDM symbol corresponding to antenna 1 is modulated to each binary element in the sequence with the index of 26 on the subcarriers with the indexes of [-432:4:-4,1:4:429] in order; the middle pilot OFDM symbol corresponding to antenna 2 is modulated to each binary element in the sequence with the index of 26 on the subcarriers with the indexes of [-431:4:-3,2:4:430] in order.

The modulation method used in the above processing is as follows: as to each element of the sequence, if it is 0, then it is modulated as signal 1, if it is 1, then it is modulated as signal -1.

**Embodiment 22**

As to the cell with any Cell ID, such as Cell ID = 368, the number of discrete Fourier transform points used is $N_{FFT}$ = 2048, and 2 transmission antennae are used in the downlink, and the middle pilot sequence corresponding thereto is a sequence with the index of $I$ = mod (794, 768) = 26 in Table 4.

In this case, the number of available subcarriers of the system is $N_{used}$ = 1728 (except for DC subcarriers and protection bands on both sides of system bandwidth), and the interval of adjacent pilots of each antenna is $\Delta$ = 4, the middle pilot OFDM symbol corresponding to antenna 1 is modulated to each binary element in the sequence with the index of 26 on the subcarriers with the indexes of [-864:4:-4,1:4:861] in order; and the middle pilot OFDM symbol corresponding to antenna 2 is modulated to each binary element in the sequence with the index of 26 on the subcarriers with the indexes of [-863:4:-3,2:4:862] in order.

The modulation method used in the above processing is as follows: as to each element of the sequence, if it is 0, then it is modulated as signal 1, if it is 1, then it is modulated as signal -1.

**Embodiment 23**

As to the cell with any Cell ID, such as Cell ID = 368, the number of discrete Fourier transform points used is $N_{FFT}$ = 2048, and 2 transmission antennae are used in the downlink, and the middle pilot sequence corresponding thereto is a sequence with the index of $I$ = mod (794, 768) = 26 in Table 5.

In this case, the number of available subcarriers of the system is $N_{used}$ = 1728 (except for DC subcarriers and protection bands on both sides of system bandwidth), and the interval of adjacent pilots of each antenna is $\Delta$ = 2, the middle pilot OFDM symbol corresponding to antenna 1 is modulated to each binary element in the sequence with the index of 26 on the subcarriers with the indexes of [-864:2:-2,1:4:863] in order; and the middle pilot OFDM symbol corresponding to antenna 2 is modulated to each binary element in the sequence with the index of 26 on the subcarriers with the indexes of[-863:2:-1,2:2:864] in order.

The modulation method used in the above processing is as follows: as to each element of the sequence, if it is 0, then it is modulated as signal 1, if it is 1, then it is modulated as signal -1.

In the following embodiment, the middle pilot subcarriers occupied by all the antennae of each cell are 1/3 of the available subcarriers.

### Embodiment 24

As to three cells Cell IDs of which are respectively 97, the number of discrete Fourier transform points used is $N_{FFT}$ = 512, and 2 transmission antennae are used in the downlink, and the middle pilot sequence corresponding thereto is a sequence with the index of $I = \mathbf{mod}\left(\left\lfloor \dfrac{97}{3} \right\rfloor, 512\right) = 32$ in Table 8.

In this case, the number of available subcarriers of the system is $N_{used}$ = 432 (except for DC subcarriers and protection bands on both sides of system bandwidth), and the interval of adjacent pilots of each antenna is $\Delta = 6$, *offset* = mod (97,3)*$N_{Tx}$ = 2 , then the middle pilot OFDM symbol corresponding to antenna 1 of the cell with CellId = 97 is modulated to each binary element in the sequence with the index of 32 on the subcarriers with the indexes of [-214:6:-4,3:6:213] in order; and the middle pilot OFDM symbol corresponding to antenna 2 is modulated to each binary element in the sequence with the index of 32 on the subcarriers with the indexes of [-213:6:-3,4:6:214] in order; as to each element of the sequence, the modulation method is as follows: if it is 0, then it is modulated to signal 1; if it is 1, then it is modulated to signal -1.

### Embodiment 25

As to a base station with Cell ID = 97, the number of discrete Fourier transform points used is $N_{FFT}$ = 512, and 4 transmission antennae are used in the downlink, and the middle pilot sequence corresponding thereto is a sequence with the index of $I = \mathbf{mod}\left(\left\lfloor \dfrac{97}{3} \right\rfloor, 512\right) = 32$ in Table 7.

In this case, the number of available subcarriers which can be used for transmitting the middle pilot sequence in the system is $N_{used}$ = 432 (except for DC subcarriers and protection bands on both sides of system bandwidth), and the interval of adjacent pilots of each antenna is $\Delta = 12$ and *offset* = mod (97,3) * $N_{Tx}$ = 4 , then the middle pilot OFDM symbol corresponding to antenna 1 is modulated to the sequence with the index of 32 on the subcarriers with the indexes of [-212:12:-8,5:12:209] (as shown in Fig. 3); the middle pilot OFDM symbol corresponding to antenna 2 is modulated to the sequence with the index of 32 on the subcarriers with the indexes of [-211:12:-7,6:12:210]; the middle pilot OFDM symbol corresponding to antenna 3 is modulated to the sequence with the index of 32 on the subcarriers with the indexes of [-210:12:-6,7:12:211]; and the middle pilot OFDM symbol corresponding to antenna 4 is modulated to the sequence with the index of 32 on the subcarriers with the indexes of [-209:12:-5,8:12:212].

The modulation method used in the above processing is as follows: as to each element of the sequence, if it is 0, then it is modulated as signal 1, if it is 1, then it is modulated as signal -1.

### Embodiment 26

As to a cell with Cell ID = 97, the number of discrete Fourier transform points used is $N_{FFT}$ = 512, and 8 transmission antennae are used in the downlink, and the middle pilot sequence corresponding thereto is a sequence with the index of $I = \mathbf{mod}\left(\left\lfloor \dfrac{97}{3} \right\rfloor, 512\right) = 32$ in Table 6.

In this case, the number of available subcarriers which can be used for transmitting the middle pilot sequence in the system is $N_{used}$ = 432 (except for DC subcarriers and protection bands on both sides of system bandwidth), and the interval of adjacent pilots of each antenna is $\Delta = 24$ and *offset* = mod(97,3)*$N_{Tx}$ =8, then the middle pilot OFDM symbol corresponding to antenna 1 is modulated to each binary element in the sequence with the index of 32 on the subcarriers with the indexes of [-208:24:-16,9:24:201] in order; and the middle pilot OFDM symbol corresponding to antenna 2 is modulated to each binary element in the sequence with the index of 32 on the subcarriers with the indexes of [-207:24:-15,10:24:202] in order; then the middle pilot OFDM symbol corresponding to antenna 3 is modulated to each binary element in the sequence with the index of 32 on the subcarriers with the indexes of [-206:24:-14,11:24:203] in order; the middle pilot OFDM symbol corresponding to antenna 4 is modulated to each binary element in the sequence with the index of 32 on the subcarriers with the indexes of [-205:24:-13,12:24:204] in order; then the middle pilot OFDM symbol corresponding to antenna 1 is modulated to each binary element in the sequence with the index of 32 on the subcarriers with the indexes of [-204:24:-12,13:24:205] in order; and the middle pilot OFDM symbol corresponding to antenna 2 is modulated to each binary element in the sequence with the index of 32 on the subcarriers with the indexes of [-203:24:-11,14:24:206] in order; and then the middle pilot OFDM symbol corresponding to antenna 3 is modulated to each binary element in the sequence with the index of 32 on the subcarriers with the indexes of [-202:24:-10,15:24:207] in order; and the middle pilot OFDM symbol corresponding to antenna 4 is modulated to each binary element in the sequence with the index of 32 on the subcarriers with the indexes of [-201:24:-9,16:24:208] in order.

The modulation method used in the above processing is as follows: as to each element of the sequence, if it is 0, then it is modulated as signal 1, if it is 1, then it is modulated as signal -1.

**Embodiment 27**

As to the cell with any Cell ID, such as Cell ID = 236, the number of discrete Fourier transform points used is $N_{FFT}$ = 1024, and 2 transmission antennae are used in the downlink, and the middle pilot sequence corresponding thereto is a sequence with the index of $I = \mathbf{mod}\left(\left\lfloor \dfrac{236}{3} \right\rfloor, 512\right) = 78$ in Table 9.

In this case, the number of available subcarriers of the system is $N_{used}$ = 864 (except for DC subcarriers and protection bands on both sides of system bandwidth), and the interval of adjacent pilots of each antenna is $\Delta$ = 6 and offset = mod(236,3) $^*$ $N_{Tx}$ = 4, the middle pilot OFDM symbol corresponding to antenna 1 is modulated to each binary element in the sequence with the index of 78 on the subcarriers with the indexes of [-428:6:-2,5:2:431] in order; and the middle pilot OFDM symbol corresponding to antenna 2 is modulated to each binary element in the sequence with the index of 78 on the subcarriers with the indexes of [-427:6:-1,6:6:432] in order.

The modulation method used in the above processing is as follows: as to each element of the sequence, if it is 0, then it is modulated as signal 1, if it is 1, then it is modulated as signal -1.

**Embodiment 28**

As to the cell with any Cell ID, such as Cell ID = 78, the number of discrete Fourier transform points used is $N_{FFT}$ = 1024, and 4 transmission antennae are used in the downlink, and the middle pilot sequence corresponding thereto is a sequence with the index of $I = \mathbf{mod}\left(\left\lfloor \dfrac{78}{3} \right\rfloor, 512\right) = 26$ in Table 8.

In this case, the number of available subcarriers in the system is $N_{used}$ = 864 (except for DC subcarriers and protection bands on both sides of system bandwidth), and the interval of adjacent pilots of each antenna is $\Delta$ = 12, and offset = mod(78,3) *$N_{Tx}$ = 0, then the middle pilot OFDM symbol corresponding to antenna 1 is modulated to each binary element in the sequence with the index of 26 on the subcarriers with the indexes of [-432:12:-12,1:12:421] in order; the middle pilot OFDM symbol corresponding to antenna 2 is modulated to each binary element in the sequence with the index of 26 on the subcarriers with the indexes of [-431:12:-11,2:12:422] in order; the middle pilot OFDM symbol corresponding to antenna 3 is modulated to each binary element in the sequence with the index of 26 on the subcarriers with the indexes of [-430:12:-l0,3:12:423] in order; and the middle pilot OFDM symbol corresponding to antenna 4 is modulated to each binary element in the sequence with the index of 26 on the subcarriers with the indexes of [-429:12:-9,4:12:424] in order.

The modulation method used in the above processing is as follows: as to each element of the sequence, if it is 0, then it is modulated as signal 1, if it is 1, then it is modulated as signal -1.

**Embodiment 29**

As to the cell with any Cell ID, such as Cell ID = 236, the number of discrete Fourier transform points used is

$N_{FFT}$ = 1024, and 8 transmission antennae are used in the downlink, and the middle pilot sequence corresponding thereto is a sequence with the index of $I = \text{mod}\left(\left\lfloor\dfrac{236}{3}\right\rfloor, 512\right) = 78$ in Table 7.

In this case, the number of available subcarriers in the system is $N_{used}$ = 864 (except for DC subcarriers and protection bands on both sides of system bandwidth), and the interval of adjacent pilots of each antenna is Δ= 24 and *offset* = mod(236,3)*$N_{Tx}$ = 16, the middle pilot OFDM symbol corresponding to antenna 1 is modulated to each binary element in the sequence with the index of 78 on the subcarriers with the indexes of [-416:24:-8,17:24:425] in order; the middle pilot OFDM symbol corresponding to antenna 2 is modulated to each binary element in the sequence with the index of 78 on the subcarriers with the indexes of [-415:24:-7,18:24:426] in order; the middle pilot OFDM symbol corresponding to antenna 3 is modulated to each binary element in the sequence with the index of 78 on the subcarriers with the indexes of [-414:8:-6,19:24:427] in order; the middle pilot OFDM symbol corresponding to antenna 4 is modulated to each binary element in the sequence with the index of 78 on the subcarriers with the indexes of [-413:24:-5,20:8:428] in order; the middle pilot OFDM symbol corresponding to antenna 5 is modulated to each binary element in the sequence with the index of 78 on the subcarriers with the indexes of [-412:24:-4,21:24:429] in order; the middle pilot OFDM symbol corresponding to antenna 6 is modulated to each binary element in the sequence with the index of 78 on the subcarriers with the indexes of [-411:24:-3,22:24:430] in order; the middle pilot OFDM symbol corresponding to antenna 7 is modulated to each binary element in the sequence with the index of 78 on the subcarriers with the indexes of [-410:24:-2,23:24:431] in order; and the middle pilot OFDM symbol corresponding to antenna 8 is modulated to each binary element in the sequence with the index of 78 on the subcarriers with the indexes of [-409:24:-1.24:24:432] in order.

The modulation method used in the above processing is as follows: as to each element of the sequence, if it is 0, then it is modulated as signal 1, if it is 1, then it is modulated as signal -1.

**Embodiment 30**

As to the cell with any Cell ID, such as Cell ID = 236, the number of discrete Fourier transform points used is $N_{FFT}$ = 2048, and 2 transmission antennae are used in the downlink, and the middle pilot sequence corresponding thereto is a sequence with the index of $I = \text{mod}\left(\left\lfloor\dfrac{236}{3}\right\rfloor, 512\right) = 78$ in Table 10.

In this case, the number of available subcarriers of the system is $N_{used}$ = 1728 (except for DC subcarriers and protection bands on both sides of system bandwidth), and the interval of adjacent pilots of each antenna is Δ = 6 and *offset* = mod(236,3)*$N_{Tx}$ = 4 , the middle pilot OFDM symbol corresponding to antenna 1 is modulated to each binary element in the sequence with the index of 78 on the subcarriers with the indexes of [-860:6:-2,5:6:863] in order; and the middle pilot OFDM symbol corresponding to antenna 2 is modulated to each binary element in the sequence with the index of 78 on the subcarriers with the indexes of [-859:6:-1,6:6:864] in order.

The modulation method used in the above processing is as follows: as to each element of the sequence, if it is 0, then it is modulated as signal 1, if it is 1, then it is modulated as signal -1.

**Embodiment 31**

As to the cell with any Cell ID, such as Cell ID = 78, the number of discrete Fourier transform points used is $N_{FFT}$ = 2048, and 4 transmission antennae are used in the downlink, and the middle pilot sequence corresponding thereto is a sequence with the index of $I = \text{mod}\left(\left\lfloor\dfrac{78}{3}\right\rfloor, 512\right) = 26$ in Table 9.

In this case, the number of available subcarriers which can be used for transmitting the middle pilot sequence in the system is $N_{used}$ = 1728 (except for DC subcarriers and protection bands on both sides of system bandwidth), and the interval of adjacent pilots of each antenna is Δ = 12 and *offset* = mod(78,3)*$N_{Tx}$ = 0, then the middle pilot OFDM symbol corresponding to antenna 1 is modulated to the sequence with the index of 26 on the subcarriers with the indexes of [-864:12:-12,1:12:853] in order; the middle pilot OFDM symbol corresponding to antenna 2 is modulated to each binary element in the sequence with the index of 26 on the subcarriers with the indexes of [-863:12:-11,2:12:854] in order; the middle pilot OFDM symbol corresponding to antenna 3 is modulated to each binary element in the sequence with the index of 26 on the subcarriers with the indexes of [-862:12:-10,3:12:855] in order; and the middle pilot OFDM symbol corresponding to antenna 4 is modulated to each binary element in the sequence with the index of 26 on the subcarriers with the indexes of [-861:12:-9,3:12:856] in order.

The modulation method used in the above processing is as follows: as to each element of the sequence, if it is 0, then it is modulated as signal 1, if it is 1, then it is modulated as signal -1.

## Embodiment 32

As to the cell with any Cell ID, such as Cell ID = 78, the number of discrete Fourier transform points used is $N_{FFT}$ = 2048, and 8 transmission antennae are used in the downlink, and the middle pilot sequence corresponding thereto is a sequence with the index of $I = \mathrm{mod}\left(\left\lfloor \dfrac{78}{3} \right\rfloor, 512\right) = 26$ in Table 3.

In this case, the number of available subcarriers of the system is $N_{used}$ = 1728 (except for DC subcarriers and protection bands on both sides of system bandwidth), and the interval of adjacent pilots of each antenna is $\Delta$ = 24 and *offset* = mod(78,3)*$N_{Tx}$ = 0, then the middle pilot OFDM symbol corresponding to antenna 1 is modulated to the sequence with the index of 26 on the subcarriers with the indexes of [-864:24:-24,1:24:841]; the middle pilot OFDM symbol corresponding to antenna 2 is modulated to each binary element in the sequence with the index of 26 on the subcarriers with the indexes of [-863:24:-23,2:24:842] in order; the middle pilot OFDM symbol corresponding to antenna 3 is modulated to each binary element in the sequence with the index of 26 on the subcarriers with the indexes of [-862:24:-22,3:24:843]; the middle pilot OFDM symbol corresponding to antenna 4 is modulated to each binary element in the sequence with the index of 26 on the subcarriers with the indexes of [-861:24:-21,4:24:844]; then the middle pilot OFDM symbol corresponding to antenna 5 is modulated to each binary element in the sequence with the index of 26 on the subcarriers with the indexes of [-860:24:-20,4:24:845]; the middle pilot OFDM symbol corresponding to antenna 6 is modulated to each binary element in the sequence with the index of 26 on the subcarriers with the indexes of [-859:24:-19,5:24:846]; the middle pilot OFDM symbol corresponding to antenna 7 is modulated to each binary element in the sequence with the index of 26 on the subcarriers with the indexes of [-858:24:-18,6:24:847]; and the middle pilot OFDM symbol corresponding to antenna 8 is modulated to each binary element in the sequence with the index of 26 on the subcarriers with the indexes of [-857:24:-17,8:24:848].

The modulation method used in the above processing is as follows: as to each element of the sequence, if it is 0, then it is modulated as signal 1, if it is 1, then it is modulated as signal -1.

The following embodiments describe the index of the middle pilot indexed by the wireless communication networking unit in a subset of a specific sequence set.

## Embodiment 33

The sum of the number of middle pilot subcarriers occupied by all the transmission antennae of the wireless communication networking unit is equal to $N_{used}$, the index of the middle pilot sequence of a cell with the cell index of CellID in a specific sequence set or a subset thereof is $I = f(CellID, MaxSeqNum) = \mathrm{mod}(CellID, MaxSeqNum)$.

## Embodiment 34

The sum of the number of middle pilot subcarriers occupied by all the transmission antennae of the wireless communication networking unit is equal to $\dfrac{N_{used}}{3}$, the index of the middle pilot sequence of a cell with the cell index of CellID in a specific sequence set or a subset thereof is

$$I = f\left(CellID, MaxSeqNum\right) = \mathrm{mod}\left(\left\lfloor \frac{CellID}{3} \right\rfloor, MaxSeqNum\right);$$

and the corresponding middle pilot subcarrier offset thereof is *offset* = mod(CellID,3)*$N_{Tx}$

**Embodiment 35**

The sum of the number of middle pilot subcarriers occupied by all the transmission antennae of the wireless communication networking unit is equal to $N_{used}$, the index of the middle pilot sequence of a cell with the cell index of CellID in a specific sequence set or a subset thereof is as follows:

$$I = f\left(CellID, MaxSeqNum\right) = \mathrm{mod}\left(3 * CellID + SegmentID, MaxSeqNum\right)。$$

Table 1 $N_{FFT}$ = 512, $N_{Tx}$ = 8 length=54

| Index | Midamble Sequence | Index | Midamble Sequence | Index | Midamble Sequence | Index | Midamble Sequence |
|---|---|---|---|---|---|---|---|
| 0 | 2E17472E001AF4 | 192 | FE1986281161E0 | 384 | F540392C908F28 | 576 | 191EED81515F40 |
| 1 | 194597A201B920 | 193 | 4C05682C279950 | 385 | 1BC0A46C90AAF0 | 577 | 481C43F1934AD4 |
| 2 | 650BB1206A73CC | 194 | 566283AC93C868 | 386 | 892967851FA8D8 | 578 | E22B0094B778C0 |
| 3 | 8853785B743228 | 195 | 886D408782E5CC | 387 | 105831229FC8D4 | 579 | A3069DB720341C |
| 4 | A35514F80769C0 | 196 | 2C07C88B2E7158 | 388 | 0B2F5CB9840668 | 580 | 815D3BD6311B40 |
| 5 | B9E109D20B1450 | 197 | FCC492268254A0 | 389 | 18A27A205BC8B0 | 581 | 3D10905C6F1D70 |
| 6 | F850AE26789360 | 198 | A7AC0721CC8880 | 390 | 19D130850A07B4 | 582 | BA680B8B474468 |
| 7 | 91941D60772688 | 199 | A0988906A73DC0 | 391 | 7E11C25373F150 | 583 | 0A72060B7C2CD0 |
| 8 | 164961F9D42128 | 200 | 5B814063AB1A50 | 392 | 4B846825051ECC | 584 | 53F4782E385490 |
| 9 | 375052CCD18A54 | 201 | A8D0A6963F031C | 393 | 31114A5E8193E8 | 585 | 85C9B214B3D010 |
| 10 | 73F2134A341084 | 202 | 87D82506D999E8 | 394 | 523614209C737C | 586 | EA50E87D4D3240 |
| 11 | 611FC2C6CD48C4 | 203 | F2020A47317AA4 | 395 | 5D53031330E900 | 587 | 3C8FC3246DC008 |
| 12 | 0F88C97435A810 | 204 | 3432518EAB9434 | 396 | 9133CAC8A61848 | 588 | 03A3047279CB20 |
| 13 | A075299D634434 | 205 | 941D8A69F88020 | 397 | 03B687BD18A194 | 589 | 6F2C926280A744 |

EP 2 453 623 A1

(continued)

| Index | Midamble Sequence | Index | Midamble Sequence | Index | Midamble Sequence | Index | Midamble Sequence |
|---|---|---|---|---|---|---|---|
| 14 | 1327870E9350 54 | 206 | 6C091080796614 | 398 | 2BA06EF2C429A4 | 590 | 106535B03 A11F4 |
| 15 | 42A8467F104 94C | 207 | A81E7483202C6 C | 399 | 5C34963026431C | 591 | 26AE191B4 E3800 |
| 16 | BB342237092 DE0 | 208 | 29BAC5D93107E 0 | 400 | 9E0C8173AAA720 | 592 | 6E2C3D408 91278 |
| 17 | A0A21B7A16 6AD0 | 209 | 425359BFB246A 0 | 401 | 2279035CC4A5D0 | 593 | D860B20AF 446D4 |
| 18 | 5A41C507660 3A4 | 210 | 3E2495CC4A247 C | 402 | A974D0DB998020 | 594 | 43D899EA A43830 |
| 19 | 4A685C0EE23 A70 | 211 | 0D354F30462734 | 403 | 24FE2735024158 | 595 | 147C77A99 A4880 |
| 20 | 023BA064C54 B68 | 212 | 2638F9174A8484 | 404 | 4D4F852AB007C4 | 596 | 465DA10A0 95A4C |
| 21 | 195208A93CA 1E8 | 213 | 104B7228B63EA 4 | 405 | 547A9648263830 | 597 | 3FA12306B 591C0 |
| 22 | 71AE352D404 1B0 | 214 | 9A9C5E07640D5 0 | 406 | 4BF2242622A89C | 598 | B70044F4E 3955C |
| 23 | 504E8E39A94 038 | 215 | 3D0B4C17CCC4 18 | 407 | 314D8816A25CF4 | 599 | 7DA010AC CAE1C4 |
| 24 | 720C28C6D21 7FC | 216 | B10669672306B4 | 408 | 440AB5BA0AC23 8 | 600 | AB9CFB32 121BC0 |
| 25 | 7025ECB240A 338 | 17 | B959A4F404216 C | 409 | F22D227150058C | 601 | C554B30E8 07930 |
| 26 | 827E37886264 48 | 218 | 65540AD9215BC 4 | 410 | DB58859A287A08 | 602 | C8494878B A20B8 |
| 27 | 02816B755D3 2F0 | 219 | 0CDA21DDE5E0 20 | 411 | 781655173738C0 | 603 | 41C28D740 F3324 |
| 28 | B8009D475C6 D24 | 220 | 05631458683874 | 412 | 3ACF14099D03D0 | 604 | B803231AE 92348 |

EP 2 453 623 A1

26

(continued)

| Index | Midamble Sequence | Index | Midamble Sequence | Index | Midamble Sequence | Index | Midamble Sequence |
|---|---|---|---|---|---|---|---|
| 29 | 16D0F780289518 | 221 | 2CA4610A3E0DB8 | 413 | 11720C0372BAB0 | 605 | 6748BC8D860CC4 |
| 30 | DD8046896E8AC0 | 222 | 86A87E7922D440 | 414 | 84C8C51DF701D0 | 606 | 12E9E9603C2198 |
| 31 | EB9A28C1686424 | 223 | C740058D7449C8 | 415 | 29126BAAE60718 | 607 | 8D328A0906E6BC |
| 32 | 960866CBAF058C | 224 | 84A48DF8E2E418 | 416 | 3B56C60074034C | 608 | 2D3F08D9777088 |
| 33 | C9A0EE941C6884 | 225 | BA4ED2889C5C40 | 417 | C8366B7CAB2160 | 609 | 862445E5C6F78C |
| 34 | 8823936E1C96A4 | 226 | 270132C871CDE8 | 418 | C91D2EEA00AC70 | 610 | 060FB53C0DAA90 |
| 35 | C2327C55ABB080 | 227 | CFE9209634172 0 | 419 | 5AC40394D887D0 | 611 | B1024C2BC514AC |
| 36 | 49418FCA9330F8 | 228 | B6543D8E3A80D0 | 420 | 1231EAC94D111C | 612 | 0B6F34C282E478 |
| 37 | 0716E80BB30960 | 229 | B82594EA52E020 | 421 | 0E807CCD291344 | 613 | 2BA6400ECF63A0 |
| 38 | A397104E996E20 | 230 | 69165E40671ABC | 422 | 15E9099908516C | 614 | BC2CC37AE70284 |
| 39 | 11BFC343492220 | 231 | 5D4128024E8E64 | 423 | 402AF2AE486C98 | 615 | F823B2F3250824 |
| 40 | 68E0C039886BC8 | 232 | 28C2918B81D92C | 424 | 1D0452DC34CFB0 | 616 | 01C7B6741A9A28 |
| 41 | 0F666030C54934 | 233 | 82B2841C3A6D04 | 425 | 35CD5C27B21608 | 617 | 8582CA615DC468 |
| 42 | FA1812F2611530 | 234 | C0D650138D68D8 | 426 | 7C016294 11B2D4 | 618 | 36455B1048E048 |
| 43 | 623A1B4882F7C8 | 235 | BC101744E129C | 427 | 4604AEFA689660 | 619 | 0D2A953D8DA1CC |

(continued)

| Index | Midamble Sequence | Index | Midamble Sequence | Index | Midamble Sequence | Index | Midamble Sequence |
|---|---|---|---|---|---|---|---|
| 44 | 79702ADA338124 | 236 | 04AD2E97382710 | 428 | 2053A91D352760 | 620 | 4A10E8317E4B1C |
| 45 | 2E0B01A59C06FC | 237 | C8638A83E911B0 | 429 | D071081C4A8CBC | 621 | |
| 46 | E056D50C8F2518 | 238 | 7E5728616C223C | 430 | 23145BCB2E81F0 | 622 | BCCBA421842518 |
| 47 | 751606085F9064 | 239 | FA54DE6E0CA930 | 431 | 00433C82EE3A58 | 623 | FCA0798BDA3840 |
| 48 | 5132A4A1E770DC | 240 | 31241F0E431DB8 | 432 | 0B92F78C868AD8 | 624 | 003CA4DD2F0F50 |
| 49 | BFD819216349A8 | 241 | 042F9A2E36D1A8 | 433 | 04FAB0A7572690 | 625 | 6CC6BD1C4160C0 |
| 50 | D2B580268E024C | 242 | 7004E13D460A78 | 434 | 2E4BA8646031F8 | 626 | C0E3FA9A8C5888 |
| 51 | C2F9BAAD3800CC | 243 | 92154E8206B1F4 | 435 | 1075B9125148B4 | 627 | B83DE68A421414 |
| 52 | 18C4DA0EB74F08 | 244 | A45406630BFA64 | 436 | 22A85B92029C4C | 628 | 614011E9992CF4 |
| 53 | 2884B62FE0C950 | 245 | 2C3856538C05D8 | 437 | 42247947D71244 | 629 | 263A80A7DC2D08 |
| 54 | 0EE40C2DEB64A0 | 246 | 54EC5D1A84B4C4 | 438 | 438A0BF36E2218 | 630 | 74B401B9499E24 |
| 55 | 8A059855B1F20C | 247 | B4B80C8A182674 | 439 | 34672D08855650 | 631 | 1807B2C54C0E7C |
| 56 | 644B3CE11F442C | 248 | 560E4F810BAC98 | 440 | EBCA58680622D8 | 632 | 0E23FE92F19288 |
| 57 | 08A91A669718DC | 249 | B6321ADC201B20 | 441 | 4445B88F6B861C | 633 | 469D8D544E0164 |
| 58 | C9444518971A0C | 250 | 4AE5237D150608 | 442 | 4B82C63035D604 | 634 | 72388AD4B140F8 |

EP 2 453 623 A1

28

(continued)

| Index | Midamble Sequence | Index | Midamble Sequence | Index | Midamble Sequence | Index | Midamble Sequence |
|---|---|---|---|---|---|---|---|
| 59 | 61E88912D5A04C | 251 | 2514D906383C48 | 443 | 77892841C16BA4 | 635 | 971325608730AC |
| 60 | 811AE2935B0D84 | 252 | F418E400C9DD48 | 444 | 10DD2C4AC15B18 | 636 | 67A5883103D92C |
| 61 | A1171F2D482610 | 253 | 004D16D0FCA854 | 445 | 6ED1D18D9442C0 | 637 | AA30B0D80378AC |
| 62 | 32DC2A1A193114 | 254 | 3BCED40341B240 | 446 | 83962032755078 | 638 | 2472E581480FD4 |
| 63 | 4EBC26CE7B0A00 | 255 | 7785518F0014C8 | 447 | 854E18B280F6D8 | 639 | 542470ADF24374 |
| 64 | 95A68AA588F1D8 | 256 | 421185FB702B24 | 448 | C3061A9D921908 | 640 | 3CBE93B13520E0 |
| 65 | A493AC08599984 | 257 | 17E394B6C40320 | 449 | C150AE78D98450 | 641 | 406D87172568A4 |
| 66 | 847944DE5E0044 | 258 | 3CF64684E02A80 | 450 | 27D48E2A5E0504 | 642 | E8705C8E10D890 |
| 67 | 8261E637E84A40 | 259 | 01BC4ED5D60894 | 451 | 75724A3E030A70 | 643 | 0A0C1ADF1AEA24 |
| 68 | 6056CAE95834CC | 260 | 832CFA923A5038 | 452 | D11484D08FB780 | 644 | B09EF09158B2A0 |
| 69 | 986C084BA97CD0 | 261 | C0243F286DA954 | 453 | 4C474037AFC284 | 645 | AF389509B99824 |
| 70 | 0608D4D7F230D8 | 262 | CA00254CE1E074 | 454 | 4AAB662B4A1304 | 646 | C65094CD12AF88 |
| 71 | 8C961401F51B64 | 263 | 2B310DED019354 | 455 | E924AA2B007310 | 647 | 2860DE26913730 |
| 72 | 890258C196FA54 | 264 | D170A08F21EE44 | 456 | 416508E35C9A14 | 648 | 31C4850CD26D6C |
| 73 | 43E4C670468960 | 265 | B1FCC52E8484D8 | 457 | 14C206AF8709A8 | 649 | 21E021B30426E8 |

(continued)

| Index | Midamble Sequence | Index | Midamble Sequence | Index | Midamble Sequence | Index | Midamble Sequence |
|---|---|---|---|---|---|---|---|
| 74 | 92EC9183D6B808 | 266 | 5EA6692026EE18 | 458 | 10B506E197E7C0 | 650 | 72193125ABAC20 |
| 75 | 869B728ECA0720 | 267 | 68F410C245DE68 | 459 | 62EF1C55C06010 | 651 | E44907B57114C0 |
| 76 | 170239925A46AC | 268 | 988C53D1E2EDA4 | 460 | 861946126AC5EC | 652 | 45D222DC1390B0 |
| 77 | 65563C326DCC00 | 269 | 00725A9B851B1C | 461 | A067A23D2296CC | 653 | 85A45464A3CD70 |
| 78 | 76F202E689650C | 270 | 3C688880DA6588 | 462 | 13C143EB589650 | 654 | 219ECDA7E2A244 |
| 79 | 4036B71833E2D4 | 271 | EB14422938 1784 | 463 | 2242A7CCB86328 | 655 | 214C198616ABF4 |
| 80 | 71AB41B262081C | 272 | D9B17986A295D0 | 464 | A29367ED018C28 | 656 | 7923849908675C |
| 81 | EF348F1A9882C0 | 273 | 9DE11C0953C340 | 465 | 6176A1C3A90330 | 657 | 067D72E27104B0 |
| 82 | D8DE085E5154A4 | 274 | 88B14134AC7298 | 466 | 0917920E73A2AC | 658 | A29F30E253D464 |
| 83 | 39592793E00CC4 | 275 | E239709680 9068 | 467 | 182A03E91964C4 | 659 | E51920B69989D0 |
| 84 | DD82A398369108 | 276 | 3467411BF1BC20 | 468 | 4A7B519 02341F4 | 660 | 520E286371A8FC |
| 85 | A66A015A4D18F8 | 277 | 80F0B33AA10DB0 | 469 | 6FB93050EC3088 | 661 | 42F02BBA104338 |
| 86 | E643CA00C47C28 | 278 | 325058B49C45D8 | 470 | CE0081EB953258 | 662 | 7382F4A6D24478 |
| 87 | CEF2048CA0C7C0 | 279 | 91104DAE043F08 | 471 | 58146A49BE1774 | 663 | 6259551982 5A1C |
| 88 | 198AA12786D2A4 | 280 | 148E4065D5E960 | 472 | 490CDEF0A13E14 | 664 | 415281A78CB884 |

(continued)

| Index | Midamble Sequence | Index | Midamble Sequence | Index | Midamble Sequence | Index | Midamble Sequence |
|---|---|---|---|---|---|---|---|
| 89 | 83CB18077AA510 | 281 | A009E92362F718 | 473 | 8D07046F334A9C | 665 | 589E9D6D228038 |
| 90 | 40A960ECAA7B64 | 282 | 23C53173B05640 | 474 | 65984600F0AB48 | 666 | 8B882C8E4BD380 |
| 91 | 8BD1125A653E608 | 283 | 3F4502A163131C | 475 | B8AE36642036E0 | 667 | 594BF808F3A260 |
| 92 | 6E30CB9CAC145C | 284 | 711178B80252E0 | 476 | B89C57093B6040 | 668 | 041EFCD238A528 |
| 93 | 426E830B10E5E4 | 285 | 3930C00A2C7F14 | 477 | CA00AAC4BC99E0 | 669 | A00AE329F43934 |
| 94 | 02B6B54CB0C830 | 286 | 38C1558FF4244C | 478 | 05A4A88C689BC4 | 670 | 0A76485168A3B0 |
| 95 | AB59CE00F2B200 | 287 | B34A2761480E0C | 479 | 80558D1EF23848 | 671 | 26D574339F2060 |
| 96 | 43C1B6F0233108 | 288 | 423913BDC3092C | 480 | B8656F2198B210 | 672 | 3A22422E1BD964 |
| 97 | 286A4963B74110 | 289 | 6840D72D51EC44 | 481 | 1018F4593715E8 | 673 | 1015AB8674298C |
| 98 | 09664602D66AF8 | 290 | EB81061A179194 | 482 | 20746221774A58 | 674 | 3DA930C3EA1A20 |
| 99 | 0E2CC58CA76014 | 291 | 25DF90FC420524 | 483 | 3484342215F978 | 675 | C2A613A4317604 |
| 100 | 1D6091406 97B2C | 292 | 4B0FAE4E467004 | 484 | E1E69030741560 | 676 | C847956510 80DC |
| 101 | 4071EC33132ED4 | 293 | 0C2E4E48F32D10 | 485 | 1D216851309AC | 677 | 5A835C44960938 |
| 102 | 6149A24E7F81A8 | 294 | 18400EE64F0D58 | 486 | 8D2AE48541083C | 678 | 73101C392D0DB0 |
| 103 | ADF305C8B59C18 | 295 | 4CD4F9608D5438 | 487 | 4B1D40EEE24490 | 679 | 564F3C2A028DD8 |

(continued)

| Index | Midamble Sequence | Index | Midamble Sequence | Index | Midamble Sequence | Index | Midamble Sequence |
|---|---|---|---|---|---|---|---|
| 104 | 260BE51F184888 | 296 | D6A711B2784110 | 488 | 6003D935E46A4C | 680 | 1D80B16E2CA324 |
| 105 | 11830DAAB7A104 | 297 | 93EA9D288EC210 | 489 | A190709E41BB10 | 681 | 311B761A8F4C50 |
| 106 | EC12271434B460 | 298 | 8ECFB90540D268 | 490 | 90DD7125C3D508 | 682 | 51371C9052C520 |
| 107 | 0FF0E147322534 | 299 | 22809DC28D624C | 491 | A49F082C21CDD0 | 683 | D6A017CC08CA8C |
| 108 | 416C8DDF14118C | 300 | 6A7731CC819680 | 492 | 17E82A50F67894 | 684 | 6944242 7F5460C |
| 109 | 2B421C40DACA2C | 301 | A42094AF331F14 | 493 | B51B1047B38140 | 685 | CD7069D12800DC |
| 110 | 8085C3B684D8EC | 302 | B016C6102933D4 | 494 | 0D53138644BA50 | 686 | 218BA6081AE95C |
| 111 | 4052C73DDA0F88 | 303 | 4CDC12031CBA9C | 495 | 8582A75D845960 | 687 | AFC49C8AA09260 |
| 112 | D25A1DC7044488 | 304 | 67CA8D82CA7280 | 496 | 4E75619F040F44 | 688 | CA5D94406721A0 |
| 113 | C602F146C881A8 | 305 | CB4070BEA88CB4 | 497 | 9541C2C05F8D10 | 689 | 5CED60C1D45808 |
| 114 | AA950120FB398C | 306 | 755C3A7D8CD040 | 498 | A25CD9CD041728 | 690 | D3A3459EC0E418 |
| 115 | B220748B38F430 | 307 | 5808B47303DA74 | 499 | 186035D410DC88 | 691 | 56393E0CE80B10 |
| 116 | C77034B26284E8 | 308 | DB1EA98202A790 | 500 | 28ED31F8B0012C | 692 | 6154837103F79C |
| 117 | 8465301AA1764C | 309 | 67136AB4E40810 | 501 | 461F1052A1FD7C | 693 | 9245FD886206E0 |
| 118 | 93050EED642544 | 310 | 8556DE681BC580 | 502 | 2489847CC3EB54 | 694 | 1E814E29D86248 |

(continued)

| Index | Midamble Sequence | Index | Midamble Sequence | Index | Midamble Sequence | Index | Midamble Sequence |
|---|---|---|---|---|---|---|---|
| 119 | 1EA0912329C6CC | 311 | D240A22FC52F10 | 503 | 6D3862320D59E8 | 695 | 324A92E2C46070 |
| 120 | 24D03B43C75440 | 312 | B780D94182B120 | 504 | A182335345C0A4 | 696 | 044A62AB0437F0 |
| 121 | 0303DE4C725EA8 | 313 | D8A78F9522086C | 505 | 970856840436CC | 697 | 81BB5D630E8904 |
| 122 | CD411B612781D4 | 314 | 8A6A5D0B1BB018 | 506 | 575E122F00B320 | 698 | 4B228861542DCC |
| 123 | 4D84B3A1DE2540 | 315 | 3B05940FFA30B4 | 507 | 28598DDB456480 | 699 | 9809B0957780C0 |
| 124 | A30A351989A27C | 316 | E64B0E7012A834 | 508 | 866625287F0688 | 700 | 93B3D41C942874 |
| 125 | 77328741685 8C0 | 317 | 50D64370E13468 | 509 | 50813E06E986B8 | 701 | C812609F983938 |
| 126 | 26C650C7029B04 | 318 | 61C066BB73C054 | 510 | C314AE8D097088 | 702 | 442CB2EDE14D00 |
| 127 | 9B8871502FD698 | 319 | 390406CD43EE18 | 511 | 62E0B01A63D20C | 703 | 76B08C088B50EC |
| 128 | E529A61AA80C18 | 320 | 75B090F1AB2A04 | 512 | 1E248A1D9CE710 | 704 | 801C44AC3A4EAC |
| 129 | 9005474E7183F0 | 321 | 23D0930B1FCA80 | 513 | 85481133D868EC | 705 | E0D40D462CD270 |
| 130 | B45902266243D0 | 322 | C366BD40B514D0 | 514 | EC88844F5281E0 | 706 | 41107625A2C6D8 |
| 131 | 602A2533386 05C | 323 | B028BB11ADACF0 | 515 | 00489E71EB1B90 | 707 | B0736E30409A44 |
| 132 | 193AEAE364B084 | 324 | EE0C0B101754B8 | 516 | 619A17C2248654 | 708 | 5F436E074D4084 |
| 133 | 25993318805E28 | 325 | 2294F21913D524 | 517 | E84164C32A74BC | 709 | 7EA1B2065DAC20 |

| Index | Midamble Sequence | Index | Midamble Sequence | Index | Midamble Sequence | Index | Midamble Sequence |
|---|---|---|---|---|---|---|---|
| 134 | F195591B3E0 148 | 326 | 64EAEC304857A 4 | 518 | 543F23C9338A0C | 710 | 041B6310B E42E8 |
| 135 | 7DC97282437 160 | 327 | 139A8A0DB7681 8 | 519 | 724401E1D6B370 | 711 | 0E3A6053A 97424 |
| 136 | 11C9448BCE D1D0 | 328 | 849521C4741CD 8 | 520 | BC82F3499B1428 | 712 | 08D17AD84 45F84 |
| 137 | 3CC8C155049 58C | 329 | 643D801A70B95 4 | 521 | 058A53E1D51B18 | 713 | 801AAC759 22C24 |
| 138 | 7498392C15C 08C | 330 | C06A1F6261C29 0 | 522 | 19E9983C892784 | 714 | EB22A003C 3B434 |
| 139 | 63524E175081 F8 | 331 | C58716E9888940 | 523 | 0DE1A3C8328BB 0 | 715 | 78BC95620 0E894 |
| 140 | B054CC7FA1 28E0 | 332 | 840D2C9026AB9 C | 524 | 27C22A4EC21AC C | 716 | 54ED84185 E6038 |
| 141 | 907B4B82A58 8A0 | 333 | 7ADE3423905D1 0 | 525 | CA6A9849D583D 8 | 717 | F2855CAC8 AA080 |
| 142 | 020F03A6B52 C60 | 334 | 682A8573CD837 0 | 526 | 10FC96B22A0C40 | 718 | 6A0E8C690 06AF0 |
| 143 | 92A9070C88B F60 | 335 | C091BAC5524E4 0 | 527 | 31E16FC428B414 | 719 | A02978ED9 01D48 |
| 144 | 3A04AA3F34 B0C8 | 336 | 1201952CE55704 | 528 | 1F05768023A640 | 720 | 760304541B CB0C |
| 145 | 39E8948E938 204 | 337 | D46C0F60B3614 4 | 529 | 138E061947D428 | 721 | 4C5F9C594 2B248 |
| 146 | 608D4FBC1D 7404 | 338 | 34EC82A83AC36 0 | 530 | 9E8C8B849A0854 | 722 | 98FB160212 A0D0 |
| 147 | 053AE70185C 494 | 339 | F564400DA9C9A 4 | 531 | 6B95E1868E8930 | 723 | F06B9106F 28628 |
| 148 | 0F5A423C5C A204 | 340 | 1CCB27B01480B 8 | 532 | 41762A184736E4 | 724 | 2F00E1DD D6A624 |

34

(continued)

| Index | Midamble Sequence | Index | Midamble Sequence | Index | Midamble Sequence | Index | Midamble Sequence |
|---|---|---|---|---|---|---|---|
| 149 | 084666E2E91 6C0 | 341 | A528B2B113E09 C | 533 | 300827FC2DAE34 | 725 | 91E370075F 2A64 |
| 150 | E16CF136946 020 | 342 | C3B5875FC2203 0 | 534 | 7B98910905385C | 726 | 2DC8620F5 C303C |
| 151 | 00B9655A9B1 B84 | 343 | 92D4D0EC02E43 8 | 535 | 3A0E7AA10E64D 0 | 727 | 2E555A749 04674 |
| 152 | 58266D58798 408 | 344 | 85E480B4199CA 8 | 536 | 8513842C90EECC | 728 | 0F4604DC6 EE3A8 |
| 153 | 8C3C0DF9142 548 | 345 | 81BB34C8F28A9 4 | 537 | 1E0C8889563BE0 | 729 | 617AD12EC C430C |
| 154 | 0A480BFD331 A38 | 346 | 052A8E7227ACC 8 | 538 | 7640D887B05128 | 730 | 14F9610CB 2B570 |
| 155 | CF82D282A6 CC00 | 347 | BC8106AD093A 84 | 539 | E41864E4B79230 | 731 | 1A511CFA2 F7058 |
| 156 | 334568878564 50 | 348 | ECA68D3012876 8 | 540 | 5A8D86E2C81160 | 732 | 027669B758 F018 |
| 157 | 76A143145C1 B18 | 349 | 15934B42A8479 C | 541 | 11EE296B124C4C | 733 | 65A4AB078 BD180 |
| 158 | C02013C5595 8F0 | 350 | BA1C0960AF44 C4 | 542 | 056CA10FC79158 | 734 | 684EDC647 24940 |
| 159 | 101BC16B8C4 918 | 351 | 2C61F868144D54 | 543 | 5E08E52224CDC4 | 735 | D1AB08470 9BEC8 |
| 160 | CB1A4360F37 114 | 352 | 718F8AB6269200 | 544 | 327C95518F2008 | 736 | 99412E43C 0E5E8 |
| 161 | D49B8F9C4B 1008 | 353 | 632D46148476E0 | 545 | E70AD8D12B2580 | 737 | D89F35B0C 928C0 |
| 162 | 4B901213A08 BCC | 354 | 023378FE4AE92 0 | 546 | 2C0451EAD2BA6 4 | 738 | 94859A103 C54C4 |
| 163 | DC40DEB058 2D64 | 355 | 488F78493150BC | 547 | 9B21C13A9D4630 | 739 | 9CCC17DA 601428 |

(continued)

| Index | Midamble Sequence | Index | Midamble Sequence | Index | Midamble Sequence | Index | Midamble Sequence |
|---|---|---|---|---|---|---|---|
| 164 | 4A38FC8404F234 | 356 | 4AA64EC11C1610 | 548 | E433A6B7A30D80 | 740 | 6E8071EA006424 |
| 165 | 20B11E37368C2C | 357 | 0224E73B05D75C | 549 | 6B2823E2143C5C | 741 | 04B3071A173750 |
| 166 | 9A2A2D79DB00D0 | 358 | 68AA361CD2D400 | 550 | 79825790E056D8 | 742 | 68E31CA007A37C |
| 167 | B11C201336BD04 | 359 | 1A006676384BA4 | 551 | 8A37004B58D90C | 743 | 1416057DDA1CF0 |
| 168 | F1B3C0A51212D4 | 360 | 1DD2B0E2106974 | 552 | D31A100BACD3D0 | 744 | 791C48A3076A60 |
| 169 | 81CFD624590F70 | 361 | 5055B2F8E81DA8 | 553 | DAC1E8808DD320 | 745 | 80951A6B729B90 |
| 170 | 71262341FB2868 | 362 | 4DA8014659CC5C | 554 | 624E09B4E62124 | 746 | 099EDCEE881784 |
| 171 | F106D5BC218888 | 363 | B33601A5D0AC30 | 555 | 6221FBB2214750 | 747 | 85FB8713A08668 |
| 172 | A91B051C7213D8 | 364 | E86088D9745B0 | 556 | 74C8EA4403D0E8 | 748 | 352E128CD9611C |
| 173 | 46DA884A78A68C | 365 | 92932399C60A90 | 557 | 59481CB406C0AC | 749 | A10C07D930A990 |
| 174 | 6627A01DD7250C | 366 | 2675050E1D26B4 | 558 | DA606812AE6578 | 750 | D28C053443C6F8 |
| 175 | A34A8869B1D360 | 367 | E1388054A283E4 | 559 | 240C782D798CC8 | 751 | B859588FA10124 |
| 176 | C58DC249410C5C | 368 | B5CA0106EC69F0 | 560 | 4A863698088A7C | 752 | 27D116AE28D0B0 |
| 177 | 7478657C898024 | 369 | 4749B3980E55A4 | 561 | B289DEB2729060 | 753 | 4618907BAD1C8C |
| 178 | 91A120A03F7658 | 370 | C3B1E892536048 | 562 | FC4A24A41C8C00 | 754 | 276882C18F95E0 |

| Index | Midamble Sequence | Index | Midamble Sequence | Index | Midamble Sequence | Index | Midamble Sequence |
|---|---|---|---|---|---|---|---|
| 179 | 29351888A7E B0C | 371 | B5583CC05980E 4 | 563 | 39A50642E2B704 | 755 | 18C09263D 6EC04 |
| 180 | D48190B445B BC0 | 372 | 07B2C62CE8B54 0 | 564 | CC8EA04090D7B 0 | 756 | 7CB524A70 8DC18 |
| 181 | 11283C23A88 B78 | 373 | 48B078918DDC1 4 | 565 | 4A71504F46E99C | 757 | C244CA031 EBCC8 |
| 182 | 4B3519278CE 03C | 374 | A0BE6778E084A 0 | 566 | 530908D7E1A558 | 758 | 06A84393E A4304 |
| 183 | C712D561010 BE0 | 375 | 41120D77343E44 | 567 | 940842F596A184 | 759 | 12681CEA2 92E6C |
| 184 | 08ADDF3016 C1C4 | 376 | 598CEC02B461A 4 | 568 | 31CBF9B0C1B214 | 760 | 2B7C0C13E 4B644 |
| 185 | F3400D09EA9 CE4 | 377 | 36406561BA85C 4 | 569 | C4A50469B279A8 | 761 | 7E4C6232C 2C0AC |
| 186 | 8176129279D 388 | 378 | 661AFC052597A 0 | 570 | 32D170CE15A02C | 762 | 9E5E0828C D0F60 |
| 187 | 4596EE590A0 E24 | 379 | 8EE11120960E4C | 571 | D06233553675A0 | 763 | 1402E98C1 E9C88 |
| 188 | 5ABB3711A5 9004 | 380 | A56236DB1D1E0 0 | 572 | 1C550A2DD2341C | 764 | 063483290F AA28 |
| 189 | D5A0291A60 E8CC | 381 | 4479288BDA838 4 | 573 | 9271752352801C | 765 | BE284462D 06794 |
| 190 | 598C58A53D2 8B8 | 382 | D41518997E7820 | 574 | 382741A653570C | 766 | 0BA7815A6 24108 |
| 191 | 54C163F06E4 844 | 383 | 885F09C2483AB 8 | 575 | 76549C4C7D7080 | 767 | 941FA840E 4BA6C |

Table 2 $N_{FFT}$ = 512/1024, $N_{Tx}$ = 4/8 , Length=108

| Index | Midamble | Index | Miamble |
|---|---|---|---|
| 0 | 7890D37679740B6044B056210F5 | 384 | 39939A7C58362843E88A80AA031 |
| 1 | 9E3EC411053511A49F6A81CA064 | 385 | 684F14C86621024DE8BA7A162D0 |
| 2 | 8883E033C03A1ECB2B3012D75AD | 386 | 168A890FD1960B48A983EED8C61 |
| 3 | 2F68A4A55718227CCAD7E280CC8 | 387 | 201BSD3D60F61A8B83808BCE705 |
| 4 | 4025180D50EDA668C18232E6B6C | 388 | 29974905F8DE5E141F296C55A01 |
| 5 | EB80C1815B514178CC21B784DB2 | 389 | 04AE139008AB4F4F52130271639 |
| 6 | 073D0032214D3C79BB9A8D660B4 | 390 | 1747F741226049F0C16E8CD3588 |
| 7 | 2A036D1870120FA773BA11C1D52 | 391 | 2D3F11DD7980E8548746D1D3240 |
| 8 | DF036508C7D91C2D08834A38597 | 392 | 121382230ED947FB1818AC370B6 |
| 9 | 6711130A587E75B760364811728 | 393 | D0890403E1C9588C6DD6F2D48F7 |
| 10 | 4E944D46009AE8F14ADD17246C3 | 394 | EC2835CBC0E961633945A80994D |
| 11 | 2E2A54298646452D09AECBE6085 | 395 | 1030DECF34A73A9809F9511B220 |
| 12 | 7010F56805D11685423839FB49C | 396 | 4E69880888F24152993E855F0D0 |
| 13 | 917848BADF44330323060A5EE91 | 397 | 61709F5950699A604768588A980 |
| 14 | 3636C207204A2AC28CDBA775025 | 398 | A8E0CC384B21DB262D03F521114 |
| 15 | A32EAFB2407587F099918246605 | 399 | 44A725853C1663E54CD28FA8608 |
| 16 | A8E9A2B39738589621CD800263E | 400 | DD8649E0404D4107438E9842B1B |
| 17 | 928CA5841EA3823C49FD029524C | 401 | 813262F6A9D750065B448351482 |
| 18 | B9C904890F3F015700EC654A1B0 | 402 | 046217328AACBA158F4C1007A59 |
| 19 | F906867D42C4804198684C13D71 | 403 | A71BA13BC4B1708A837DB383651 |
| 20 | 095068CD21A38195BFF00D6392A | 404 | 80E8CCB10FC453E538D188C1248 |
| 21 | 572138602D0C50763900B4D4BBE | 405 | 4C395C610C80CFE685380416BA2 |
| 22 | 88F597233D98016ED03A105A33A | 406 | 8C5C292B8BCDF88253E804D144C |
| 23 | E2728F08042157F042483455C22 | 407 | D8C600B314193D5823972D4981D |
| 24 | E1831A239AD67E929906A950E82 | 408 | 83C4ADD43534175F3114A23C43C |
| 25 | 6CAE468CB20810E977901F83A4A | 409 | 467D208E122E00849327539D142 |
| 26 | 1813BC5738058B69495C4549B0F | 410 | 83DF2301A39551003904634B0DD |
| 27 | 33737AD538740711087A3824A18 | 411 | 8BFE1660167C86999AE68C2C490 |
| 28 | 0049D165D52F1B08E172435CD2E | 412 | B28A13A31EEB84372E0590D9894 |
| 29 | EF80C485A3208FA14D8EDC71C83 | 413 | B66308D3003CC74A1345E206525 |
| 30 | E254AB15534FD2640140A4A6037 | 414 | 4CA8629ED9A16004F8968C4E14D |
| 31 | 37B850590A5AF6C3B208C0EA45D | 415 | 085B917B94F2445840661C01B55 |
| 32 | 55DAD0B648B15C2CB083EB1B003 | 416 | D2D446E5C720040D70CC1F311E8 |
| 33 | 01A48951B38767DC34282D8D74C | 417 | F08A031848927D16A5D99418642 |
| 34 | 264E359AB0D15A0340187F6A16F | 418 | 1560BE5281870848784C5F2EE42 |
| 35 | 9263C85D7E4751210056C1AA919 | 419 | AEA088BC3CDF2149201702A41B8 |

(continued)

| Index | Midamble | Index | Miamble |
|---|---|---|---|
| 36 | D9306F061328242152A5E22EE23 | 420 | 0D01B70781AABB2051A48D5E74C |
| 37 | 92C4C704E544885EBBC3CA45A40 | 421 | B12042006F24A08BC375C849CAF |
| 38 | 5687441AC0ECF524BCE4A3E04C7 | 422 | 5142EC088A071A48781EB1D98C9 |
| 39 | 1D588063AAF1864AD3405069D99 | 423 | 938FBE0E04A6415314F13708243 |
| 40 | A02E4920A3A24F85E39C2C429CD | 424 | CC654DCC02AC0B80506695B5DA2 |
| 41 | 0A8BE097997D6B08050A5CC268C | 425 | E13758114C466B6E0A494AB0450 |
| 42 | A892079034610FBC175299E9884 | 426 | 05411B3A5C30D96C003F8311CB1 |
| 43 | 52414C7FE20947C1853628663AC | 427 | 0621849B10F18BA45D2589915E5 |
| 44 | 0EE4388A9B9450E2D72D97C88B4 | 428 | 1C570E5C6227D6CA34A4B806503 |
| 45 | 04BB386DF6380A86805CC999C1E | 429 | 01205DB1D0D0192AA21DD41A34F |
| 46 | 799953C403D7D085226A5C045D2 | 430 | 45005B9F6151F22984FC65A47C9 |
| 47 | D539705811A0D498D7920B88A5D | 431 | 18CC998880AD5593CF0627D5149 |
| 48 | D04160E46D76A658A68DE0B9117 | 432 | 8D2B8694609B20D0E80D551CCC4 |
| 49 | 627C08AE32DC33C53C6CC020D5A | 433 | 47136225EA5CCB035A4129C443A |
| 50 | 58D693486C005D1984C98348E8F | 434 | 0588795ACC26D98F06E052400BB |
| 51 | F1692011C9D4AA0CD959708DB13 | 435 | 68F46CB11ADFD189278812910CF |
| 52 | 2ED40FF7B2C1C1710B4444F88C0 | 436 | 4206B4524191CE90CE9963FEA05 |
| 53 | C51EC82A4A3486898C8033E4D08 | 437 | 3A4442E584E219FEB186D52222F |
| 54 | 0B58AB925EFA0D5CD5E2200CB20 | 438 | 1A7422DBEC0485A207909491A74 |
| 55 | FADAA2D01D107910710A7743139 | 439 | 70AC9C9143928D920B9EB43DC40 |
| 56 | DC125D4363B2706FF80C20E22C4 | 440 | E453073624C500D4A0459F46A38 |
| 57 | 9D486A61BE2BD63098B6822D6E0 | 441 | 30A82D23DC4DAC3E1A634EF4749 |
| 58 | 7D409920228DCCB4C44F4B5C0F1 | 442 | 909537EAA943899E042A1326BC2 |
| 59 | 40F14876AB018D3B02785DD6006 | 443 | EC08E071C9490AFD8A2E6C4AA41 |
| 60 | A60B24E3B522B97784B91E04840 | 444 | 2C426BEE789468EBA2610120A14 |
| 61 | 7C8A87C54F5A643B536B025C030 | 445 | 0459FD3F41A8054A3A21160E1C2 |
| 62 | DA2E0663DD05BF0D4B2321D2013 | 446 | C01D2F6182468938414421FAADE |
| 63 | D155A85CC03125EC3A0845CF560 | 447 | 028D0CDCEAE61441721206EE7A8 |
| 64 | 8083A299D10E929C6ACC470A92B | 448 | 3C8B4EA1AB60352CE0306088CC5 |
| 65 | C7117962724206A9032C9F07EDA | 449 | C7A1A9B0BA528A0864A94818F44 |
| 66 | 04B0CD2A80DCD8ADA0D0C5CAE32 | 450 | 338DFA79C1A55501E4D057242B1 |
| 67 | 354D037632B00F9ED26883B0707 | 451 | E4DBB68DCE8854404A7C0CB2A86 |
| 68 | 016699CB45A74214538E1E2041F | 452 | 7B10973E1C351529A66D9891C07 |
| 69 | B50750E03A4832E253D860E7D39 | 453 | B8E1236C162386733F229044156 |

(continued)

| Index | Midamble | Index | Miamble |
|-------|----------|-------|---------|
| 70 | E6AFF53E1617225481CE4117580 | 454 | EB26416F02631932A62468A1728 |
| 71 | 2A27C92D22245B35E6701E9CC16 | 455 | 486AD9481924E268121C8DD2F14 |
| 72 | 8BA45182116D0B92C68CEE95097 | 456 | CB01845F2AA23603D891AC5A225 |
| 73 | C22B0B11A56A3514F50429C9FB0 | 457 | 885684C8F03C02EB892D74DA8C7 |
| 74 | B2C9EF397098B906EA918087106 | 458 | 099A0C66351178490DA0E875856 |
| 75 | 87804080F093E0D59A598CD5744 | 459 | D03701005537E72C5ABC171487A |
| 76 | 94091E247066017B265C92B0B69 | 460 | 324EA55F090C2A5C07F320A238E |
| 77 | 869C76558FD338657000A5606A5 | 461 | F81AC5FF07065B1A9AE12414231 |
| 78 | 1095D47E2169F317B2D840D0891 | 462 | 6350E49AB631B1D2834C2D913C0 |
| 79 | C9DFC10081CC4193640F52A83E5 | 463 | 16039D2671C3D02C85C88996548 |
| 80 | 351403CA8254E58D192F8D63B80 | 464 | 2F21684125565613900FDF0CBCD |
| 81 | B49545C9F28B4122676090E4628 | 465 | A197B4A320E1509369A8D206807 |
| 82 | D288A9C89086C74623C88C7E149 | 466 | 18E7606D848E052DCC004B7356B |
| 83 | 619898506BEB88B316A16C050F8 | 467 | F278B598A06C869CAEF28440CA4 |
| 84 | C351E406DFEACE66877C03810A2 | 468 | 44380089CA1CC8A6701E953EC9A |
| 85 | 2DE27E863E84824F5508145E62C | 469 | 08EA0AC4F37F8C1113864AC9786 |
| 86 | BA40F21E63BEB51325191523C20 | 470 | BA29C1E8EB40466A4F846734847 |
| 87 | C060D2882B2B743C01BD5D3CD58 | 471 | 3D4085885CC2B61E8309E2714BA |
| 88 | 377B839CA2859E20405B4689507 | 472 | 8206DA2E62D895D36100B3D0AE6 |
| 89 | 60821326D5D46887A51C107F1D1 | 473 | 90C054AD5E47244E88F084D288B |
| 90 | 61981A63460116ADB572A23EC26 | 474 | 7BAA0B2E913B0502B29D3642306 |
| 91 | 5A0827B956CC6412214C19E0EBB | 475 | B05984A05101791E5E5ABBA800D |
| 92 | 80D0B2EC0D78AC0C783A598018E | 476 | 148A8876844BD3530372AB8044B |
| 93 | 805425A472DA6C3466207BF31D4 | 477 | D378018D295FB0AA680C1A78DC0 |
| 94 | 42D8338207A32BD4D94A9162218 | 478 | 885464570997247A8A4940D18F9 |
| 95 | 669158B90406C416E92BED6A2EE | 479 | 239B303D844D2561103068FB612 |
| 96 | 0870A104F2A4E22BA973FA4CC48 | 480 | 923C5A4116B79D1214C21FD50A8 |
| 97 | 26948D815748F346A2788ACB384 | 481 | 9E114305834D102F866038EF541 |
| 98 | ED053D0E43644531C3D4452B02C | 482 | A43724F80281963DB624E55A31C |
| 99 | C4464F5F8481961D64939862BE2 | 483 | 2F1A425C11669156F7CC1408ABC |
| 100 | 90B30851EBE1386AF5966A0323C | 484 | E375AFC2A4C1202D3161C6909F0 |
| 101 | D3E0075D027669220D02C2A5E5B | 485 | 79487881C01B8810DD7C1C9ACF5 |
| 102 | 874F54A388877E45BE2DDC1CC14 | 486 | D8589287682F5C4E6111166593B |
| 103 | D26EB9085C4B98E22B2C3302407 | 487 | 1C03060B8979A696357B80E6750 |
| 104 | 2D82609C92EBE61A98898290977 | 488 | 695A4DEFA08ACA50E6185513BC3 |
| 105 | 67A938004D7070DF1E4A08E1A42 | 489 | 9C9097D932A0408CE5D2C5042F0 |
| 106 | F08059E269988929C28CA7E15EA | 490 | 4B9511B2B1EF6C2371592580616 |

(continued)

| Index | Midamble | Index | Miamble |
|---|---|---|---|
| 107 | 1D7474DB7A02C4031891FB49D61 | 491 | 103523A19C606DE4AAEB8282243 |
| 108 | 35907252AEDC0FD4D847054610D | 492 | FE286365B4C7A10CC042648BA74 |
| 109 | 831ECF85C09A0B292AC80D462BF | 493 | 0BA4781A750C7EBA50A266C77D0 |
| 110 | 59B9862A286F62810960F834B4F | 494 | C0A25CAB2A96D783D0024DA0467 |
| 111 | 2386834D764130AF46CCC48531A | 495 | CFD50800306C4BEC24DE2D8478C |
| 112 | 6BA579201A54781DA1C485B8323 | 496 | 84602A9AC33A302C180FF4DC897 |
| 113 | 20246F725C6E0D62403B8A48AB6 | 497 | 54FA0B0804864047919837F345A |
| 114 | CDE425429A5032552E388120E6F | 498 | 3C2DEA5CF9C102CD2265544108E |
| 115 | 5D277844BA194BE4258BE808151 | 499 | AA0A419A971C273E93D26E4B20A |
| 116 | 88A305854B8DD865C920573F081 | 500 | C0F1E58AB91B77B0321A8F20115 |
| 117 | E6D04D0C3809E52250F71162D67 | 501 | 8D14DC968A68F040736E40DE75A |
| 118 | 8F9A4EC07921103154442AC57E9 | 502 | 3189EA4644FB474F15BC44A049E |
| 119 | CE83B00592E9D3176979D484718 | 503 | C18D432F1085E2D926001A2B65E |
| 120 | 400E2AED9149C8C2D5B07243D93 | 504 | 20A6C02DCA6C916EFD1A4E4E01D |
| 121 | 1D8F6308DF22682BB2303CB1C51 | 505 | 951A48738B388316005516EBC06 |
| 122 | 27B5C96760156741B159D3A0061 | 506 | C94D6D6932B864088B7C0E86419 |
| 123 | D859C3E0341A6D1218394633EAA | 507 | 91080F918684BA29B990721475D |
| 124 | 6D44930A9D828902DCE643C6068 | 508 | 4C8A1241B817B7C329EE8D14112 |
| 125 | C90228A55E0F848FD4091E99CC4 | 509 | 0423D418F1C07EC9B2A6531B1F5 |
| 126 | 46A57259CA4F8715242C9AAEE00 | 510 | 338124B9C2ECE89D07CA2AB5400 |
| 127 | 138752D0D809D14A2078F2A3BC8 | 511 | E9B00C3613B610674AD426A1819 |
| 128 | D017EA9444A895C1B1E9BCC6070 | 512 | A1CBE1EBE9040B02E4210ACC84F |
| 129 | 2223382A11332E55C331DA443CA | 513 | 361CC00650A045193D9B9ECA2A1 |
| 130 | 9080A94F095FA1473225A222CDF | 514 | 70ED13000AC0DE20EB8D4C913DE |
| 131 | 359D944502908E185F15F6803F7 | 515 | 642311E00B6821746EEB4A40F5C |
| 132 | 4D1ED2256167B5E605D704401A0 | 516 | 502188EE9B6AE3F2383272D5424 |
| 133 | 8A636B03C5F45AE4800D22C61AF | 517 | 9C9DB0451D824086B1933A799C4 |
| 134 | A881C2729B636FE9C0487B0052C | 518 | 7D2359EDA2207E8D168212EOAD2 |
| 135 | F680D8268C96833B0893B5A4554 | 519 | B6A2164102CE8E3612CF240833F |
| 136 | B0EA080D29CC744F5E9C54A39A0 | 520 | 3B8CE95198B000302FE74973304 |
| 137 | 969671FA230084B8084D403BE8C | 521 | 7287094AF86B94E2B04CA284130 |
| 138 | 9183CCC6CBAD041584D38813D4F | 522 | 44DB0019D960871A682A155E46D |
| 139 | 5119634B3016DD2D73D50E02202 | 523 | 38462C2F66F984091F3A1828BA8 |
| 140 | F201541EC912A9C1101D0ADCF0D | 524 | 2A9D5C98CEE3484A0020BEF0CA3 |

(continued)

| Index | Midamble | Index | Miamble |
|---|---|---|---|
| 141 | B7CE82AD86B5400C1086B763705 | 525 | 7C84E0A61E06216F70D26AF4981 |
| 142 | 0A663464D6063D86EBD174459BD | 526 | A6D48990F5B28D7240386A30A58 |
| 143 | 9A30F4683CBC6531DA15219FB01 | 527 | AADA80BE9309C5C48A2C49DB347 |
| 144 | 9890B0069A6C55AF05551A143B6 | 528 | 182B292165067BAC892EE201C0D |
| 145 | 927DC9D05447B8E0C290C24E26B | 529 | BCE40EAE0AC9312A58C03113921 |
| 146 | 0C8328274193C37F94027CE94E2 | 530 | 947B69E3295002710699311BB74 |
| 147 | A2C948407A682142953B99F106D | 531 | 4C6453A86007A9A03C601ACD9C9 |
| 148 | B030416ESF1EC1001D6A4139E32 | 532 | 902227D07904450E72BA7E5C398 |
| 149 | FE1C480B24C642628E35B86A937 | 533 | 8A43A7BF1AF250013B10651524A |
| 150 | E9890F09F6D80E25E19E00A40CE | 534 | 246DE1B011A50A337E0D92C510A |
| 151 | 2EC7E9AD58D880026E29DB60863 | 535 | 3C832A7E63ACC7C09B14595A5A8 |
| 152 | 7E047F6C6E60CB0E80A1A0A9068 | 536 | 9804BBEEA616D8BCC0F0990C85C |
| 153 | 097845093A8791444A34DD398D6 | 537 | DA59F116DE420092807119C9316 |
| 154 | C26DF883209928A722DE02C3C44 | 538 | 7470A5C74E5B8358812C32BD240 |
| 155 | 6A0D083C991846250CEB27E7E00 | 539 | 06AA80271CB2EE2AC9CF9B53301 |
| 156 | 586F7F06D1CD010889C996B2058 | 540 | BA851B16424FE9624D104B04825 |
| 157 | S100E7A6E433D0DB0364E0EB482 | 541 | 567F22C8F3307050FD15703A410 |
| 158 | 0A6E80F581C459C7964E06A751B | 542 | EEEE48C3689A5A7344350297880 |
| 159 | 8723C090015CC887BD2CAE587C9 | 543 | 110268074CA476C6A59B5D51C06 |
| 160 | BE05646C549A64C6DCF71090431 | 544 | 78122F002C5DF83DC61A31E4DF4 |
| 161 | 1E4121CE8C950885A7CD5D8E83B | 545 | A076EF36608BAEB6912DC530332 |
| 162 | 8C6A10F95D7852BBC0128A807E6 | 546 | 5C97F41B3CDC0A9E0349489958A |
| 163 | D9552404F0C2AE16A3E1C6CB92C | 547 | 0488AC49B2B5A4B1578CEA21C3D |
| 164 | 6D12D086F0C2C6130205932D59C | 548 | 224B4C26E0FB515EC8A85027C7D |
| 165 | 90C77EB4022251E94756C041E4C | 549 | 88A1356D5FD895402CBCC6586D8 |
| 166 | C819CBF189F4D8404A9612D51F2 | 550 | 46B7046081299F8159E69078472 |
| 167 | C25F46D6C98A29582C1A631004F | 551 | 100D8F96BE7532E44A808FA1B45 |
| 168 | 5E6991517806057AC47D8256253 | 552 | 9C5322B9488284F92F141F4808C |
| 169 | A454967CA5A40331B882A4E2EB1 | 553 | 25066E61F458601376750BC86A5 |
| 170 | BD57DC4CF8AE6013358221438F6 | 554 | 457ADA60D4207A5B92A907B1900 |
| 171 | 80A319878848BE07798BEF29604 | 555 | 84A06ED01CA201CA8778F70D171 |
| 172 | 0903F11CF58E23153809A7213EB | 556 | 6D88B9720101C5E312D181631D6 |
| 173 | C7B350E40BA6EE0EF0803966E32 | 557 | DA38CC29109088BA0DF4C3AC087 |
| 174 | D7CD423AC058153251C618985C9 | 558 | F8F8D66A5C4270896410560D852 |
| 175 | E3F98718043748286DA9359A95A | 559 | AC7B0A214B47D4019232F407F3C |

(continued)

| Index | Midamble | Index | Miamble |
|---|---|---|---|
| 176 | 82BB3C66F9006051E6502302D52 | 560 | 8C0ED3005C1999EF353F25EA051 |
| 177 | CE2CE2A7C482481A0694C2D76ED | 561 | 207C5635544C2A5952E40A6D73E |
| 178 | BD0A61C823E83A363B0D55332A4 | 562 | 020D027EA1834545D4F1B5AA178 |
| 179 | 4CB640D7791C21142DA1B285A11 | 563 | D929104BCB37F82569B0ACC41C4 |
| 180 | F814A11513317076B9B0410B8EE | 564 | 50C18AD413BA52BB24085C72369 |
| 181 | 52A6F1E00193113253831C327E0 | 565 | 7A6C8CAC882475D820D053BF5D0 |
| 182 | B602C4550BA00FED86A98E289BF | 566 | 329DC051C61217F03A1855BC2BC |
| 183 | 18A07244A8826D34B0B886BFDC8 | 567 | B62D6B95482221E7C104742CE8D |
| 184 | D12239C6871A90CE090642D65F4 | 568 | CA1B2E06D120D38CE226B275487 |
| 185 | B01FAA52120C23C0F4AA8217199 | 569 | C4F40C6B9E5A24278BB621349C1 |
| 186 | E8E65CA52580A4560B054776C68 | 570 | CC45926AB23BCFC30C015A1B515 |
| 187 | 14E0FA5AAB77429218F4AEB6284 | 571 | 3775A0415A8C71F3A4E0DA0D80D |
| 188 | 0429BB1F389920AE0A412DEA11F | 572 | 0553310EC270A127B2B5404B3E7 |
| 189 | 433CF3205503052F513DE27CB88 | 573 | A14CE89A6D4FC649E109439612A |
| 190 | 891E553344F0C8045426A5EB433 | 574 | FB7093518D8976CE4938C01A520 |
| 191 | CFOEEEC683E8D4042498257459E | 575 | B940D813F2302E114F91B198E45 |
| 192 | 8C2AF4576E74443B16C2C213A58 | 576 | 9D14CA903D5E60B64420620F9E9 |
| 193 | AB65B99F18682B88B8317018265 | 577 | EEC0562174D41 C69D63A0362DA8 |
| 194 | 87E40C28BF45048342484527B8D | 578 | D06E881FEB23189454E0C06164D |
| 195 | 4724178A900337B43F38F498071 | 579 | 37748D834AA0290EB3C19C89D8E |
| 196 | 1473245236214261C5C37BB2784 | 580 | B415789B505B3E163600B8CCA11 |
| 197 | 4C0BABB033CB2D0DCA56D8DE001 | 581 | 44486A9E0C76A4007519F24AC76 |
| 198 | A00860C50EB52B8E26B48D36C2 | 582 | 3A8FD84F5200282A5E264D38C5D |
| 199 | 97B052C1842D830715EEEC4194C | 583 | 060E364E26AEB29CB5E3F02C453 |
| 200 | C2F30CADC7074B44CAA02223662 | 584 | 3093031AC7600F5418F822B935B |
| 201 | 157120BE08422E5C2A37D8F5898 | 585 | C290A4516E7F4B802E884CA888C |
| 202 | FED453D23B1A86C45C69B62D106 | 586 | 45A23B3B76CA232D03A52404198 |
| 203 | ABCE480CA60269B3059DE325832 | 587 | 1AA051AB40F07846695B576F024 |
| 204 | 98109B396C2A7CD02C2AA29947A | 588 | 93D8A50680B819189E5C538E46E |
| 205 | 14087B85F8E9088DB701AA8EE69 | 589 | 24CAC52198EE5B0679163F05C10 |
| 206 | 7044FC69415C2254F440D18E6FB | 590 | 568F29F911884FB162B6269241C |
| 207 | 9AE6022ECB1397951C942B00191 | 591 | 85190B38685CE4042B9DE2E92C2 |
| 208 | EFB8B20E0C6E9918019C8D289DA | 592 | 24300AC63F9391C52590B346952 |
| 209 | 663C4BDF406529C2E40189A7990 | 593 | B851D256521099B049EBD0A462C |
| 210 | 7DD0E834E2207ACD4D48197084C | 594 | 72708DF6C1569200263AAD851A9 |

(continued)

| Index | Midamble | Index | Miamble |
|-------|----------|-------|---------|
| 211 | 3E6047121B36C5984177A1A2429 | 595 | D32C8B1E2ED04CD7AB09C1D9002 |
| 212 | CF2CE80F174AF5B38562012D659 | 596 | 2981368CB82C7B22D44DC618158 |
| 213 | 78A72884CD89C0215BCAE3A2492 | 597 | 8C58F5F47913590C7F00502AC44 |
| 214 | 0F6D62C1891F48351B329C2A452 | 598 | 67219D9D10860D2AF368E9275D0 |
| 215 | F4E28974ED18D2C2ABC2227D00C | 599 | C59404163BC9170698548E8F43 D |
| 216 | 441316A61AFD38083B05AE09494 | 600 | 0145C42427986C6868679591ABB |
| 217 | 314180C54161C8FE88176BC2386 | 601 | 03C23815D08670EC3E50A6E082D |
| 218 | 87B1C789955A31E45896E440250 | 602 | AD1199F6925BD2292051C24F850 |
| 219 | 0A84264CB71548EF4BC27A705DC | 603 | 6061D6518CB8725674DE4D0025C |
| 220 | 581127D0AED372694094353DA00 | 604 | B1EC513EB747193D866C24401E1 |
| 221 | 4C5AC4284041E078137396EC564 | 605 | 4E030199A30A4A81969D60EE68A |
| 222 | 34855891E3F1120767A8A4590A7 | 606 | 9F1342B00171BD60ACB4297320D |
| 223 | AE14E0C26B21B9C9620007CE889 | 607 | 341E04BB66CC543010F2155FCD4 |
| 224 | 40605A81A6C903F049584AAD4F9 | 608 | AC028B6CE4A336F8B998051485B |
| 225 | 764F2A3A9916E5349010A17C28A | 609 | 85C39FF50D07688DD41B620132A |
| 226 | AF51076C2B66F149300753C9668 | 610 | 89624519DC1D1094CEOF5C2AF24 |
| 227 | 64C2FCB0D0355142905630D7CA6 | 611 | E7C02859311AE4C72727960C578 |
| 228 | 391F3C0E6129493B7E931079449 | 612 | F3C25D82968532804C6F568CC30 |
| 229 | 500BCC6C262CCD8DC295E72C185 | 613 | 4321CE2497F53D15A2285A052B8 |
| 230 | 18924812B955A1607907F142EEA | 614 | A331A7967DD108A56056C00D16E |
| 231 | 2BD124AE5039E24CA2880B53CF4 | 615 | 523E18BF3F419B4D30431A0E527 |
| 232 | C8525E9211CAABCF8825CA06A00 | 616 | 5871C82200D1EB8A18F13D42674 |
| 233 | C09925F536329CD64F462AC2081 | 617 | 4D16008C55BA9BB5843F1673450 |
| 234 | 4E0C16DC76C09A15A9A417EA224 | 618 | 3871F401AB78EE3B1B2508C3645 |
| 235 | AEADC85738A4831023B41626571 | 619 | 3162D55A83B3C0D835BC95C4101 |
| 236 | E6991A1408E02413AB5A4AB61D0 | 620 | 0E1773027591637E8B2804064E5 |
| 237 | 8A7828541C97A098043496D5B31 | 621 | C2782CE61D013A4A2A347E2CD1A |
| 238 | 983E89B5C00845F51275E0421C5 | 622 | CA0067250A1B35884690A7D4A0F |
| 239 | D4072C950573CA693E8191381E5 | 623 | 5993CF04A8A087F895076D0E360 |
| 240 | E3B603DA4C286A1854A61134807 | 624 | 60067B3E78E2F540E1B84A54449 |
| 241 | 215786DE065E8620803A5354748 | 625 | 58082F26C18F6E26754FD54A031 |
| 242 | 428E5188CD617050993021E193F | 626 | 2DD2EC600D110C24A9F01538D4D |
| 243 | 934A706A828E77406641 BFA422A | 627 | 5293D86C93BEB04C0A20C181A9D |
| 244 | CA1E6F68CC465028A70D4436482 | 628 | 4D48A42C28AB0017DF083916CF0 |
| 245 | CB5130423014959312FD7941C6E | 629 | 20F9448728D4F5812660BC0AAA5 |
| 246 | 6D80CB5710930CA953809D4441D | 630 | AAE660A43939ABB0160631CB36E |

(continued)

| Index | Midamble | Index | Miamble |
|---|---|---|---|
| 247 | 330ADFA31452C0B5201F20F2B28 | 631 | D5DA8AB298E1C04180E17209E60 |
| 248 | 9BA497224646E0035835C60238B | 632 | F39651227A15D83A5050A419E66 |
| 249 | 45BD0C0233A49A0F484F28CA154 | 633 | 8D97431712105015AF07C21865B |
| 250 | 649F1C7C050372BC299C681015C | 634 | 02AAC9727918D3A6A410238039D |
| 251 | 748A6051E6AE0A0209C0CB7603D | 635 | 347680216BA2085CC6293568F18 |
| 252 | 636866612C41C5BB84C357D5281 | 636 | 7953428711607C291173341BC20 |
| 253 | 6E0A44914A60BBD4CB9B1882943 | 637 | 9F8AE21B263B0A1D52EC310890A |
| 254 | 9E2448330B7F641D08A971704D2 | 638 | DA278C3607A092500AB6ACEEC21 |
| 255 | 16C7CC103450B84770824A9BE1A | 639 | 63207644FB214A384AA9584FB12 |
| 256 | 847E3CB42289378FE2AB6602501 | 640 | CF13C714D0ABDEEC1300ACB02D8 |
| 257 | B760C17309ABC17FC980A12D215 | 641 | 9C39F3C290C2291598A4516C07F |
| 258 | 026670B51AE8C3CA82B2847AFC9 | 642 | EA8F5361030B1A1022CA2DEA0CD |
| 259 | 42310D083D6D654E44303E2A6C1 | 643 | 4734D2B820A5239926152CBBA61 |
| 260 | E931E59004046636CA6C38E907F | 644 | 162893D417498DBC694DA3300A5 |
| 261 | 1A6478871600BAE66283C903AA1 | 645 | CB80362DC3616D556E1CD489007 |
| 262 | 2709009970BE9BB06392C6E8988 | 646 | 3CE9156496B63514C6650881FE0 |
| 263 | CE38449ECF07C115464815496D6 | 647 | 221C0185E6217725B6E2D355156 |
| 264 | 4880DE125E130BC2B2BDC7D8254 | 648 | 5A3B485D2E11211B22B39939407 |
| 265 | 58B6C038C08030A6E045A7F7B03 | 649 | 071B4808CC6849459EE6C9DD435 |
| 266 | D067AF14A40207359A0F9B464EC | 650 | E50099F118433B4F414048853E3 |
| 267 | 06E44412A6483308F69D0C192F3 | 651 | 1700A3C275DB472928113A225E9 |
| 268 | D6C00D308270C1331571349172F | 652 | C7C250FC4EE84B11D5C80441266 |
| 269 | B24801E98D91502CCC746E1419E | 653 | 4D6064FA0CDC18A136F78108F68 |
| 270 | 0664118D11987D710215FA2BB05 | 654 | E2084FD20983907CAF53055D35E |
| 271 | 111FE4527559A8861E595342127 | 655 | 269E1CBBF1109658C616B3482A0 |
| 272 | 1B89D6017645B2420D4821B1715 | 656 | B6CB93001D1821CD21D27EAC501 |
| 273 | 5E2D9A093368171E520CEC2384A | 657 | 79208451C863660DAE478AD880D |
| 274 | A2647D8494B4FB4E022C3817710 | 658 | 8D81F2941412ADCD37282293630 |
| 275 | 9FA941C01D48DA6DEC803CB210C | 659 | 058FAF86089B9204C046932A72B |
| 276 | AD27165D84708869C3DE1682C49 | 660 | 1EA1A4471301045CB7D802170E7 |
| 277 | 0C78BFE4AB54D24CCC06E202096 | 661 | 09F6A78488CA38C132C13436AA0 |
| 278 | 6F23AD8781D104E0DF520CB109C | 662 | 3537122E76F434E282922C0710C |
| 279 | 4E2169D802845FE54D2258AE61D | 663 | 820D46AF0179896DF2D9131770C |
| 280 | 071FE9162DAAA358AC8402E10DC | 664 | 60B25545C081C6E4279CB3687B4 |
| 281 | E5002B2D2E8D2814663A07DA6DF | 665 | FDE1074EAA1C81C359A52B4160B |

(continued)

| Index | Midamble | Index | Miamble |
|-------|----------|-------|---------|
| 282 | AD08811F5416E8232516E53218D | 666 | 9AB00F2B5DB0218AAA5E4966C10 |
| 283 | EA182C116DEA1EC228258D84B7E | 667 | 4338243EE0A410285D8F1C4F662 |
| 284 | BBCC6652F881C01D58911EB285D | 668 | A4E402C2917974C48F12E6B2D13 |
| 285 | CA5E8A104BBC6D4C08099F0C7A9 | 669 | EAB46690B1C57A74B4739B26002 |
| 286 | 5A8BE2D35E406228AB1BB02E18D | 670 | 38040ABA39537C90ECCD25103D0 |
| 287 | 25CE1033B07CC46F5A6264D7444 | 671 | 25C1C199AAA584649F6E8809C62 |
| 288 | 58001B2CFF05481A690B2AEE173 | 672 | AB4169144437A32BC6228B961E9 |
| 289 | 210C432C1BA0DE0BBE34316E7C5 | 673 | 6E8D77CA6106164CA808FEA3324 |
| 290 | DB8321EB268281014A52AA53E59 | 674 | B709D174BF11826003293CD478C |
| 291 | B83448C88055BAD0C0E86D23CD3 | 675 | 833BACC820A413B2BE3B2915EF0 |
| 292 | C8276360E342A452C88B06F5FC6 | 676 | 8AE5610032E2F69A75B5C054DC2 |
| 293 | 2482B2EBA18870C6F80E080DC87 | 677 | 69A32CA291E7047E272140C46D5 |
| 294 | 09E26238B738B15A40E8D048959 | 678 | 6E77496212A63D8960A0115E705A |
| 295 | 451788168585F5504D8E7C8C012 | 679 | 92621819D2BEA107AE32F03C4E1 |
| 296 | 212F3522C52464FEE0831948344 | 680 | CC64009760E418E41C25B77A14F |
| 297 | 14615E32C5939F4D666400B8A80 | 681 | 05067C0704E125B8CE88155AED0 |
| 298 | 7C2B082447BAB14CB80C7195131 | 682 | 18D2ACB1B1F7562610265683039 |
| 299 | CE69086AC788F1A014CDE8C0928 | 683 | 04C41060DD6E95CB623507EBA19 |
| 300 | 8D3806634BB3FD2E889A5C28EA0 | 684 | 47261B2E43F833564021449C425 |
| 301 | 08FFF05B2471C58C944C0B08CDA | 685 | 01C9E177277A61468117E1291B2 |
| 302 | 985E89688881062BA8787B4206D | 686 | 82FB9B001E4E220D2220C73593A |
| 303 | BC0162289FAC207A96249A84383 | 687 | 90EB8CC1042F4BF8545C2260986 |
| 304 | 00B194AD2FD1A45185D98B81288 | 688 | FA1D9B512CADC8708DCD438A213 |
| 305 | 04A3D986BD07759109052B9181D | 689 | F83C13ED072E72115314B20A8E9 |
| 306 | A9E92010871F2B60BC88A505F66 | 690 | 89C185129E179CA20EE48B32C0D |
| 307 | 172E4539ED4953648884810C70E | 691 | 247208650DFEA4564236FCA9533 |
| 308 | 907C062B122AC5D46024D2C2EC9 | 692 | D0219B9304B6D5FE8CB108C0E89 |
| 309 | B0DF00040D2AB4DD938B6B8A03C | 693 | 2912D189E601911512ED1EBA3D4 |
| 310 | 46D3C6A0E12064A2569A68A2F24 | 694 | 8E3229218ED9B1154F288D2A999 |
| 311 | 092A122E434D0C04F12F8C90E77 | 695 | CEE2C4C087B35E045487407996C |
| 312 | 40C5E522C67C2419F374C0242AA | 696 | 509CA4143E955A08B58D1CF077C |
| 313 | CD803A964BB84612B8E9880BA91 | 697 | 97B693A840A0433411DDAB2A76B |
| 314 | ABABB20154A41D683A426E1E462 | 698 | 030809FE6F56D45A954CAC407C8 |
| 315 | 8ABF4262442413C1BED03147819 | 699 | 017A1E120558268928E2F8C36CD |
| 316 | 34C16379200360C47796D1B1626 | 700 | 6941E2308FB1862D904A2276A17 |
| 317 | 08C20B61CC4FC16D19D75170A1D | 701 | E2CED0697504E81F04C568D4419 |
| 318 | 0745FB18B0F4D02ECD4CA580424 | 702 | 11F3DEB699030EF0C580A65200A |

(continued)

| Index | Midamble | Index | Miamble |
|---|---|---|---|
| 319 | 3A38039B6EC2D1A939473022F8A | 703 | F8F9212A614106C03C672C72DA0 |
| 320 | 5F0CE45A8CD4AEC20E0062A0BBC | 704 | 86187F75015B50A2C9395878241 |
| 321 | 0222D58F4345265DE8312D9C03A | 705 | 8D9E810A6F9B910763B06A80514 |
| 322 | 41EFA5C8E455969435008464F56 | 706 | 545838BB34E986288FE8C02B207 |
| 323 | 72100AB045ED52DA23806707A5C | 707 | 455B6687419D02E9B0A8E530254 |
| 324 | F9450E3A817A18404523CC76105 | 708 | 0F93D76409804D844075D152B72 |
| 325 | 830B074340581D86397114C8977 | 709 | 68B097C086918512300BF6FD1BD |
| 326 | 9A32D01A8C1A1E686403CAC037C | 710 | 08D8A48E210C9F4A89E0B38698F |
| 327 | A05242E173A690665C7E01CA860 | 711 | B0A90330B438CEB55CE84E6A481 |
| 328 | 64149AA46FF8BC51B49AE118475 | 712 | 502BB18D4096FE3F370758A6328 |
| 329 | A1A2DB2C33CD9E909C451CA03F0 | 713 | BEB85203B233C1996C0604A69B0 |
| 330 | A082C11E291F10F304DCDA021B5 | 714 | 0A14DC316AA0B22ED61B8404674 |
| 331 | 9685041598ABE51E930E666D605 | 715 | C00885519CD4CD18BAD685B625F |
| 332 | 28FA11E686059E05114B7264AE6 | 716 | 28010835E276CF0AE0717AC87B0 |
| 333 | 167811939560BF68204EB588602 | 717 | EB019424643DC5149D129C35690 |
| 334 | 5989A43C13F70128089079ACCB0 | 718 | 26C3486054FFEB344AD2054B8C3 |
| 335 | 4CF662145C576C46C214B136748 | 719 | 4AA0A2924A8C93EC306785AB191 |
| 336 | 42164158D12E2D0E021FD726E10 | 720 | 10205E4AEDDC56BC2C82F231D80 |
| 337 | 84DA51A4689D505C0C7F51A0A08 | 721 | 0F972556483C2421B8D5023EF12 |
| 338 | E482C48B112D9B561F9CE319549 | 722 | 72E056BB484C41B22B090E0D60D |
| 339 | 39A821A2EDA85304E98948859B8 | 723 | 3E38394CCA2DB286AF1823D431A |
| 340 | 1B2E1422C0C704529C8278A6F83 | 724 | 1BA1768BEB83E538E9294A10111 |
| 341 | 5322E1B88B0C25108CA182D7CBC | 725 | 8EDC4137B7603B695421CF069D0 |
| 342 | D301CF2F3244C07F2AB218848A5 | 726 | 5326AFC1D879116B9E9A007A413 |
| 343 | 80D8C9E55D20052E12E762C5535 | 727 | 6F6B80C2EC8DD75A60890E9064A |
| 344 | 72CD198173583B904EA455E5902 | 728 | F94F34151296C3B8CD1888C1C11 |
| 345 | 914E19E9C93D2AE3A1490212504 | 729 | 426B54310D8A8974CEF9316B860 |
| 346 | 11723460CB386BD68830D961282 | 730 | 2650386C3F9103110F3882A366A |
| 347 | 4E324805404D9CAD7742A18B813 | 731 | 215A3EEC8462B16D0D884B8C2DC |
| 348 | 12D335119608798B440D17E29FC | 732 | 4CE939E16D021665757B80099C8 |
| 349 | 8E664A599BBA0A7EC1204870822 | 733 | 8A4CB2FDBF1CC2B5531033B4046 |
| 350 | 988DD02034F96079951BC250B20 | 734 | 143AA271BEAC808502310FE136B |
| 351 | 0F8812E7ED6204364286C92443A | 735 | DC508D0D822EDACD356B59A9101 |
| 352 | E22C30206C691FBCAD228CD23A3 | 736 | 06964D1 D7A26EB9082635508FCC |
| 353 | 50BD8D4349831FB96425440AE06 | 737 | E40642C323785C146129ED164AB |
| 354 | 431208ABF47B0A438E0B9303911 | 738 | 2070C18C68DACF1160DCF2D2688 |

(continued)

| Index | Midamble | Index | Miamble |
|---|---|---|---|
| 355 | 71AAD044D50841F04509B87FC29 | 739 | 1F34022F2438182F56639228C36 |
| 356 | 066351A4ABB0094A515C074A64D | 740 | 88960163E8B582EEEA562E590C1 |
| 357 | 905AEF283A00AC64FA64871F2A9 | 741 | 0D63277D98AC26FC12053582438 |
| 358 | C3A931881B8405B059A4053BA77 | 742 | 142D0EFA44227788F05A9693061 |
| 359 | 91991518A6500382409ED74B72C | 743 | 384CB00DA34EA4BFA4445CAE823 |
| 360 | 93E432ECD4004B1261683BB893C | 744 | F46BCC5C5904E5038580C66EC90 |
| 361 | 13C824F5A18168442ACB6370275 | 745 | A5098874536448FAF9F4DC39C44 |
| 362 | 66369460166E1B5E031421D41D2 | 746 | 489240E631C8DA3E8593F14055E |
| 363 | 39A5D098B40085E78C4A90155DC | 747 | A322D2271C0B137C3184F4A4AC1 |
| 364 | 106107A3A1CE9535390BBCA13CE | 748 | 215E83CD2C91154BCB8201E40C6 |
| 365 | 9043450F600DC7CC6E2F490A15 | 749 | 84618D0F1F0621B3D03CC4CF242 |
| 366 | 4E01ADAEC7F4620C8B08544C160 | 750 | D79C1748D464BA4849C64F208A4 |
| 367 | 945879987680CC74ED281E8DD07 | 751 | 6E1CBB690186DD119C3418AE14A |
| 368 | 7D6855771263100366849284C1C1 | 752 | 8B02405938DD909EA975F018C0A |
| 369 | C170A99863090749C014B3E784C | 753 | FD100C4415C822DCC24B3729A8F |
| 370 | 31B115246CB071F0ACD10DDE050 | 754 | C1AC8F912B48E4E4544B0A27E92 |
| 371 | 849ACA0601A5DBB444C120A7713 | 755 | C19E2B6938913209C088423FAAD |
| 372 | 4F27084C099237A920D41C4BE9C | 756 | 194DB42689AB10E1D2B4F081CC6 |
| 373 | 204C94C038693D72AE88A62F0C4 | 757 | 93A0250307C652E30D52754B3CC |
| 374 | 1D90D03014DA00E90E5BB99A87C | 758 | 8A005B73DB150575327940ADB10 |
| 375 | A40B298E64412757CB9538C391C | 759 | 012C3AE88629987BD851AB0513E |
| 376 | D3087F169F0C9958A8E02023525 | 760 | 0D4F2435C31EA156738A2428189 |
| 377 | 44839816220F71F5A4828874B55 | 761 | 3BF2D473F00E9068C0C96422557 |
| 378 | 58B365C832194EEEBC010B13082 | 762 | 100D00A9271DD16CC197497A3BC |
| 379 | 7174C110C5886B1C11ECD612A4E | 763 | A3E63304E40BD0C42C253D73 |
| 380 | 24103A1B93932E254D972830AE2 | 764 | 0BA1C74F74224475B1E5506F904 |
| 381 | 44058CC208F04C466FC1B559976 | 765 | 2045553B10C3A2C36B7B6899C13 |
| 382 | 4999AA5AC400C3EB95089E41A6A | 766 | E957C02C9F5348A07C734841A84 |
| 383 | CD309ED1EB264AA791023820540 | 767 | 2254F5774D398F0984FC958801A |

Table 3 $N_{FFT}$ = 512/1024/2048/,$N_{Tx}$ = 2/4/8,Length=216

| Index | Midamble Sequence |
|---|---|
| 0 | 572DC451691E82443A5590E419804A42CCCF95C30EDD525B73F3AA |
| 1 | 21500303942227F425C69ED1A1EB03CBE4A983156DDC58B11EA793 |
| 2 | 0923CB08ABA0A0526D8F7E6361599667CCF880851BCF7229121EF0 |
| 3 | 883CB69E7AD50DC95B4A8012265A373B203F9F8C26781F1CC9A0AD |
| 4 | B43B61EA66BC769730245C40649144BA86FE8C4A13A94DFE0FCE55 |

(continued)

| Index | Midamble Sequence |
|-------|-------------------|
| 5 | EB66B50190CBE488A46218F20E607E5FA1478AE9BBB33A2FB150D3 |
| 6 | 66A7A14602A2E81F1ECF28C98221E4236C82488729CC7B73747772 |
| 7 | 26530DD6160B8605FAA19903F02FE61576E7FC581B1840937378D9 |
| 8 | 8BE8223AA64D6A02574B593E11404CFC3DC8B64204B39543E7FF28 |
| 9 | 9B8760C635D358D004007A21F674A6223AF526D0209E15498F6E1 |
| 10 | 833D2850824902AAD2A383E8EFDACFF55E138218CCD7D9848F0E91 |
| 11 | 297110E4D7559AA2002AEF4B6806F1CE25F9772697E90C580C4EC0 |
| 12 | F7104B410AE244495A1AA59B2C97A01A8E26E7BA9C081DA3732EB8 |
| 13 | C22B90260642577C211ABC6593940C2ACD96EA3BF2DBFAA6242E39 |
| 14 | 396086DF00C5990989573D32A8CC5E32A965969503012B47FBBDF5 |
| 15 | BF6A85D658A1C276828CCC348473E5C52EA7F125C07A3E9E3D8964 |
| 16 | A6F703221D2A4E4030DA1462C470607E31F15DD73BEC81AA7610E4 |
| 17 | 17AD74A561860C5146FC8C1017DDDAFA5C66E1F52B11C0A4E07454 |
| 18 | 0B1A072706854639B4CA4022F681941A93F56FE42CA3235039151D |
| 19 | 54279123E5529A31666C6D801C813436729571D1421FB8A8531DC7 |
| 20 | 2751C43E28CDF8E440C33894A0582939111E300DDFAF815D364DA5 |
| 21 | B2E82674ABC733D80A0C68A3112A235725A966B89B30EC1EFF0C25 |
| 22 | 9305A83233D3B6E0A036803A9ACF23F10EE1069A978353C7896452 |
| 23 | C4D16C0F7830B0C7010D7C825806A5633524F7578C575ED25D122A |
| 24 | AD05FCC0880125861F0E96930DC83B1BFDDDEA118EDF8479326D4A |
| 25 | B4B2CC52190C52AA01FF444A5AD3839FAA3BB3B9B310D0644C357A |
| 26 | E0AD85A0A32C3BC841BBF4CB1F8F7A6629173C8DB30936D8F9A922 |
| 27 | AED6DDCDA44559691F40430F0380A273FD1A5784E43E0C977286F1 |
| 28 | 1EE2805624E03629250CD49EB7B5FBB8441C31674365A2284D98F8 |
| 29 | 27A5A0B1AEF18416892ACEBC11DA35CAE0C4BB308F815DFAD981B0 |
| 30 | 433D1303481492124B516EE8BD91B7FA558D8A6E3B4603A1674C65 |
| 31 | 2D40ED2532A2239035C4357F3400D552FCB0895505B3AE5FBFC86C |
| 32 | 3CB9514C0466E8294C87918CA6722EC20DD5AE07C3C31A0432AF3F |
| 33 | E441D548F47A8A46962012ECB6DB20DCBC3C23D0A9E4CDAB70C686 |
| 34 | C143C5D122A844C3B9F6C82E5A99A80F4F61DFB94B850C6F2EB0AC |
| 35 | 41E4F1F933285A0A004172CF714EDF3374F6103BE804D4BDC00D6A |
| 36 | D8D01C94B82B2155407FA6366C4BB169C6E01ADB5AEB866B4BB421 |
| 37 | DE2ACC12A29A0656E243A23225D2C21FDCC235CFF1E00C890AC7E7 |
| 38 | 48892D8E408D0F53B4A0C83AE8CB545E8CC31BB8193DE4DFB613F0 |
| 39 | 998C48134173F69988925488879F592A976AB1FB8C84F10C5F1C15 |
| 40 | 032665B74BFE0257AD45826A0B1A0310E39913F2BA7F4829C2AB3D |
| 41 | 5002EDD6347A63DE671252801646FBE74E899E3B28A99CA15605E6 |
| 42 | BEA3CD10705DA8600600D196B356D45F1D09D9834FDBB969146B08 |

(continued)

| Index | Midamble Sequence |
|---|---|
| 43 | 9044786C016C1C39FF989467E28D21FB5DADA4236128DD183AE92F |
| 44 | 3903100BFA55195C74618A745A602F65E069352FBF4ABF16364343 |
| 45 | 920C4E3A8BF1A4B561AC5FA552228EF6C36EC13904C6EAE1408C1F |
| 46 | C8A2B32585A252360607A83FC12A74EDA12E450457D882DF985617 |
| 47 | 4DB6010025AF9D88D162AC673A9EC1AB8935D503783F35170E30BE |
| 48 | 060619D5A1695177A54A2364B0533589478CBADBE338151600DE86 |
| 49 | 10A3135272803A2FDB40F9C088A1FB34CFF8622FA4DA841232E46B |
| 50 | 824943F0BD3A82A8BD846B0330CB50114422BF5587D99A6376D63E |
| 51 | 51226553106B35E696C95800E387C8982C2C1F07845DCC4FAA27F1 |
| 52 | 2729BC4A265C922822D8C7297E24AF0A6EEACB1C1447B91F19BD6 |
| 53 | 371F4E2932626FC946D081076E4F4D600557A028A7AE18E1CE5BAD |
| 54 | 34A387872500671C1AC9AA8FC2CD7506E95C2215846E888C857CF6 |
| 55 | 1522450E5199BC76ECE4B240D4F8FBE063D4EA246DD846F1211A39 |
| 56 | AE640104946838AC5FA3367B211C3E5197675CD5F940E04DC2C7F0 |
| 57 | 8A6C3A312295C1FCBD90A2230842DEA0C7DABC6994718A47D1FA42 |
| 58 | 20288E8A6D9B584BBC0F44058C1E51A9398D031CDF8E29E1B5EB62 |
| 59 | 0066D2362BD4DF48603552A6A69F72037B855461D8876F304879AF |
| 60 | 72A2FFE4D980561C3228841E62ED8CBD086AF231026A1BAA397394 |
| 61 | CEA0A58FE50968A1B0DEB0D162D315FDD0EB0647FC9A8A6D801626 |
| 62 | E512A48447A6475229C81BC3BA772C85D231129B7C5415D5347BAB |
| 63 | 6D1798BC5E878274039C09924E6956D7467FBC511B6F131003AA63 |
| 64 | 940696A6C26AB85032DDFE05643296259E1BF0350311CB6722FADB |
| 65 | 2D01AC4F044AA467008CA7DFF71E2A9761A5C282ACE59B2C657F1E |
| 66 | 2D436123DDC005D588E51A047889CDB7A2A621F95DB82028D2CC63 |
| 67 | 6C9C7442C384C6FA0D42C47B01057151EEBE9C871506AF5641B785 |
| 68 | B131E4D263A29D1A006B3E3A235341040A5FBB63871BD751DED956 |
| 69 | 0EBA8B20BD429407E4C21B5D2461E22733C5EFC3B3533E094B688E |
| 70 | 89AEC268A499D40756132E1F0C80B0BE2F48BDECE5835EC6363CC1 |
| 71 | C2116A04A14BF21E68293F9B4D29C07C05F772E5BFC7236160E69E |
| 72 | 482B74144E2A83F6AD7124254AB4332329131661ACF084B27D8A7E |
| 73 | 08CA8580D1565D0CD338259EED29ECC60CD5F2B5E003DAA09513CA |
| 74 | 2961CA12A07239366DFDD03924F806BEA2611C970F52786A70752F |
| 75 | 9F2890E84015DBD4F6B2EA20747B897E0ED99126A7714424BDB677 |
| 76 | 0A31792D4364DC8069B8A61A327FBD45655EC969325E1589E09176 |
| 77 | 9A6D20F5A79E926691225462C8515F805C2B2A5313B19F8AEEAE18 |
| 78 | 8CD0182A1D9650E715159F4351AC66DF38440158CA45FB73C5AC0B |
| 79 | 0620F21823CBC100DA8D517DBD76F5CCB7746220BCC37981276257 |
| 80 | 4F4AA80A02E1C2F4F4C99C6CBE3A1993B09E2C46DA476DD24E1C29 |

(continued)

| Index | Midamble Sequence |
|-------|-------------------|
| 81 | 273A3221900C70B6358B61045FF71306ACCF35D3F05524BD035648 |
| 82 | 45302BEFC9CB1B15A176219EA603C95C6A2C4EA41CBA29C7FFD521 |
| 83 | E43E63632EA8A1C020DCC91B0598935E52AC47BD4F2F5F36A04417 |
| 84 | 2D15624F8EA885684A092FD88C040ABF99B666617FC223B8A78E7C |
| 85 | 290BB41101BA720E929B36F45260721F2F58B2D51ED68FDF411754 |
| 86 | 6BA910784A4F480A0725545B60BE4795049B1F7C621C6382C8B67E |
| 87 | A41B48694117B26A672C1C4EA49A2E01A8B8ECB3256E990A55C3DF |
| 88 | A35C06164D00D97F6E22728CC8DC99C600ED29ED4FBA0DEF8D07C2 |
| 89 | 9D9048DBB2523527388E8077187121AD0E7BA6C2E7BE24965CA0F5 |
| 90 | C72965F69A38342D4FC22C0244EA8EBC111BE89F2C6698255CCDD7 |
| 91 | 9D356D42BEC1048B938B9502B0E2DF88566AF2374B2D855135C4F6 |
| 92 | C824E8221DCBEC025BC0B189227ED5E98F59E9E934805E5A7045DE |
| 93 | 81186EA029F30264F186AA86CC651B06C6782D0F77E261567C5232 |
| 94 | 145B320B85236A072C4A3D9C38E3EC49683DC50946687BA793E8DD |
| 95 | 71C12A10FDD086365536044ECE996681473037FE718957E36FA9C4 |
| 96 | C3E0778F7A90E0AC904112CC93B26A7C67CE54D27256093F5C8357 |
| 97 | 10EA986318A26E57033D65C642A497BF084D061D24DBB070FBAB3E |
| 98 | B03877EA012BBB491130D98524829F8043058D778CB3A13BAA9DC2 |
| 99 | 16986E7BDE3C7A0103EB1C940A776C6554D7665DC0BEE0A07C3493 |
| 100 | BC31C01DE289C2781C514CC4602D6D712709A5BF59216A9D602466 |
| 101 | 49E09FC093BF5D15D233036A148C65E38F644F0F034A1D3F57A8842 |
| 102 | 46CACB1C3E698F10E80775DC041D6530DA8DECE4C6AEDD5AF228B2 |
| 103 | 5B7BD7034CAA82845CE150907C4612BE90C9D54B70C26C53DBF261 |
| 104 | 410202D29B86EC585871DB8D44394343F028DC36CCFCD8F76D4025 |
| 105 | 0B2BE0976655ECC6083656F1A013140ACDF69F7A1A0A628BA85D36 |
| 106 | BF49140630290A844E5315C67D0D5960C62AC7636DB2970D18EF5D |
| 107 | 85B4B1E0298244D982C04A7DD3A739EB35340A66F302AAA791A89B |
| 108 | 90582B00C80AC6E53E7E4CC82EF7A86A97720F2E18B5ADE64F451E |
| 109 | C9A0062199E1201774B6ADC947049F55217AC38942FEA382F26ACC |
| 110 | 4028E2FC5E71B6F9074CB158060DACDACC1786859756F5142C7AE3 |
| 111 | 638102B12AC93722D6C20ABA746BFBE145B6CAC80633607F681E83 |
| 112 | 03AB9594AD96262F6F8CC9803F89F5F9DB8071C42A222C1697F617 |
| 113 | 144813C8B6034C0EB2C15271E9D6A9910C0FDD9BA27233D2A1AEF3 |
| 114 | 40248B3B2258BB0ED58098673B215E2AA525D9C67B077650D7FC1 |
| 115 | 8800176D0D7EA512598180BBB9CADAD25EC978C378DD94C6855E2E |
| 116 | 00D8CF4E27206508B844EAD895DF22089E3B7E397F9464AF1D4F42 |
| 117 | BS0C287277281431E4964E039DD06C6DE06AF765351344DAB81B44 |
| 118 | AA5322E4805F00251445F9B65059C58D079CFDCABDC1425078A667 |

(continued)

| Index | Midamble Sequence |
|-------|-------------------|
| 119 | 92B165C2519E70116A2FE80B0D0E7C68DD15C8369B6172BF38190A |
| 120 | 78011CAF833425F6ABBAB14831291D1F81E9AE238C3DA2569EAD3A |
| 121 | E0C741B962D10F02033CBDAD4A99C2BE713A09ADB819B64E768AAA |
| 122 | D18C90382D30D1FB4905656EF04C09931DCBE28DCACE6B83B97C3C |
| 123 | 88474B016286FD4D927DC05688C143D6DC085C9994F4B3B7F87D1B |
| 124 | CDFD1EC5480B052447213HC180C5D47EF40125A4DEEC508D79E3E |
| 125 | 7A7CC44A8300C5AA66A10A6EC010E8E3FD063289BEB85948B63760 |
| 126 | 89A7E017407C54C9089CD5635E472DFD389EF4C96CDAC758801415 |
| 127 | E8DC509A5E272D260ECC3296C099F440231CF0D7BA2EE4B46067F6 |
| 128 | 7245F113C91401A9969D982C24895D2C5B39267EFD5D4E02828D60 |
| 129 | 20060483F156E42CEE37F1718AA9AAE16B63D616971CA3CD9AA70D |
| 130 | 71936B68AB03E0224E8A8920397703A32971FDCC742659D2BC1218 |
| 131 | E0BFCD359C281A8874E29E0428CA849ABD5134EC97D1DA93E3D4CC |
| 132 | A1893FAC05A20D8350458F4379229F7AB9738C1E4A362771526329 |
| 133 | F4E9894A65059DF5D809504460C76C071ED019C138F887EDBBF07D |
| 134 | 4F3090356122737437A6DF585C43204E4E3F7352E84AF34075BC771 |
| 135 | 80958AAC13CB0F6D743078784937D994D64877DC7F4B9261AC0D4A |
| 136 | 4B2199642BD91049D06A62C3177462585D9D1C7F0E8FB8728AE129 |
| 137 | 6D5CD91AA525A0F023A053865C890339C397DE792187A2D1FD934C |
| 138 | 61110341C9672666C722D7E10D71F74A3B54C2EF7504092E2BA2B7 |
| 139 | 093A1E9C62332E1960D9F320AB185701B700AEEBD84B7BCA3F57AC |
| 140 | A36F4132AA26958088D446D7D94B064E9FE14C9052288CF8B8723D |
| 141 | 7009AE5420A1EF0FF4505D2C9095BF7B9A22741E5D1E305033DC28 |
| 142 | 5CB88C745B90B9582281398A14A680ABBD311050FFFA0FF348F4B8 |
| 143 | 995060B1E4C42A8AB8436E7A6CA9458C1F20CAFDAF3FE1BD320C45 |
| 144 | 506E7E1E4658468A0C254A58C03B8EDC8333249957DAE508EF4129 |
| 145 | 392237CF74930431E0E4B430C46E594DEC51B77AC0C7024230627E |
| 146 | 40B8B49FB717A684D9843E78A8035BE0FF71E6B0C4533808D9BD18 |
| 147 | E20995376865020F46F2C43D933C2EDAC58D720F5725369990F872 |
| 148 | A5F0A256A69C362A0AE83815A9D68DF66F13BE29E900B6CB798A64 |
| 149 | 0DA844A4495FEBC385691592792D902291F88C3033CDDD7179AD39 |
| 150 | 80F56B8C8E412E28DE1F104C1680733ECA8EA8964EF0646A43D647 |
| 151 | A1D5E62EAE23030BC9708A42613C8B5356D02123C81B63DAB9CE69 |
| 152 | A1F8390C95C91617462D656A9C2147669E8DE417159A5E10EF9217 |
| 153 | 11DCD91C12381580083D37BE43B53AD2D6A71109DC3A26CFA61907 |
| 154 | F29B129C744C0FAA0DCAE070902DF7D28F36137261217695C257C4 |
| 155 | 8239879D9029217388F574182323FC54939F03FC94CD325E350037 |
| 156 | 4081A0C681179AECD590753E18A40D7A7D88AF9D827A9691B6B876 |

(continued)

| Index | Midamble Sequence |
|-------|-------------------|
| 157 | 5CC6E40652292B8FA780A55404FBF36F8F19FE6F174A5244A51047 |
| 158 | 8A666040C9395A603116B30BDFC79A25DF09241A2396B82F9D9DA1 |
| 159 | 1464022073FC75D00717524BCA9F24FFA302DD23370FA2862DC8D2 |
| 160 | 2C0693F00A21634EBCEE2CE46629E2D0A09D204C477F70DB5C0D74 |
| 161 | C2D08FA2B150A7211D15D100BB39E4DC210F66B29852E94F5AD660 |
| 162 | 2D302352E2C40CF2D9E5873AA44C9FDD4876AFD9D4645700E61343 |
| 163 | 9B35AA8F91EC09C000DA8267C363A5195C0F5A7389D559233EA165 |
| 164 | 8D3922527D54879184E410A161C8CC8CE4AD824F156DACEDBCB0EE |
| 165 | 00E198B75F514272C39695493C448E58ECA54C9BB7460FFE81085D |
| 166 | E49F4A3E4A15163053B5B836450D57080C27ECA1B4B78F63C67723 |
| 167 | 13673B2FFA11A040803B6378B85DDE18AB7DA6F8A21AF27580E24B |
| 168 | 4157506B51B0CAD95C5108A01A74F52C4A9B9A16CBC9390DF7F481 |
| 169 | E9FC49A01602A5684490DA217A3A7D8126EBAF3FC22E18327A2833 |
| 170 | 28F8C07E9180DF1294D6A02951E22DB6B82478B35DBE5CD090AB06 |
| 171 | 0C9A506BBA83ED49521070EB0C4BC42B1BA30676ECBAAEA4F9FA69 |
| 172 | 59169CAA1DA45444FA38C1A284F091916E21559F5F31F983F34AB3 |
| 173 | B8F8459FC31A25060655DE24CD0BACF5C1DE9945CB59F092442D01 |
| 174 | 409CA8A3F7532C4C833E5CD0035BF59D582914612F0BD2E73CA615 |
| 175 | B05F0413B1985AF82AECC034609E0326304041DB8627EC3CD3D5EC |
| 176 | 46479D30CC0A99D4B4595AA92D142BFE95D3E033E4D1C45C714176 |
| 177 | 20FC554C40640D46A69DB648217B44784F50238847B870A5CE3F6F |
| 178 | 2E10652298079F924686898F00DC9D53870A30D371DF65EF1750AE |
| 179 | 41B8378B9A44B36081309B9873A551C723834FFB59E5ECEEFA8026 |
| 180 | F10AC1332C72D24B4BF35EA2A2083B189F8AA44298E8CAF56376E1 |
| 181 | 5A9E815DCA31460CABC9AA6228FF2660102106DCEF63D329AB2B39 |
| 182 | 93302413188A65600D8FC46D7566B407EA3A3AED78C78EA3C63B17 |
| 183 | 997F788172D7075B67089023A923989E99AFCB4AAC3173B08902EB |
| 184 | 7738CD547C7000075A972C10DC08D6DAFB4AEC07E02E4F4841934E |
| 185 | ED270A2DB802342A55160FEFE8420E4467ABBF02CC4C453DC56B0D |
| 186 | 759120967BC604F117907C3D88625364A9BC25250F5E06FCEB53BB |
| 187 | 2F94E066E9624A21098E56671BBE01AEBD49560EA04E87BF44FAC0 |
| 188 | C51A0646110FA5219AE70C648DDE0DECF7D09AB4838020303F7A83 |
| 189 | D24387B249C7A09190945BD4D68D841BFEF160DD12BCC7CDF39D0 |
| 190 | 845A608B12E1351F9520764417C2DC6024EDB7B96AD546D48AAE74 |
| 191 | 8910CC0A11C5B9EA458D1B22AD31BFF5A4BE1B784CE32C0A681839 |
| 192 | 7A9A324D4CC3604430F7ABB42A0A4BAB216378749339C97B4426F9 |
| 193 | E5889A5DB71DC1201983025978C1B7032FCDDD25A8A92B3432FA08 |
| 194 | C005CD6D6E2C98B18653203C6CCC07E81388E1F189A6BD4AA4DDB2 |

(continued)

| Index | Midamble Sequence |
|-------|-------------------|
| 195 | 9020481769F17425C56590D2A98E97B2FA40E3270ADE5067B02342 |
| 196 | 93E7029FEA8DC268804F10E35918F163D7E62433B9DF0072D2B61D |
| 197 | 16165AD5B7E060403D93B133B33EC19AAD235887085E2D870DE717 |
| 198 | A12401825E3A1372849FDC471262C6F84C1A99F110E6F953F6E383 |
| 199 | 1DEA61994FF093D26042F1A827CA8AC1A3F5398CCAA6754276CF0E |
| 200 | C8DD02446BF3A6047A53337D2EA3A741546F2CD279E672EA8EED9A |
| 201 | 218C7020412793E89130EDA2F3E5A7A9B868F450BC41DD3B13AA45 |
| 202 | 74D5529C12B7172982D80E22F7C0C5FEF17648A56E0C60FA005F94 |
| 203 | 88A610019053B035768A9C959BCAA6EC7D21E10AC47BCF71B79C19 |
| 204 | 515F200C0293E45BA621E6A64B50F250BFDCD070597B33A09A85A4 |
| 205 | B904DD06DC12382791D9229C1F32951E0CCED8C779747C61C92E3F |
| 206 | 8850C109866F227C30355A7D64A29D38E39E13B8B8A835A87D1B48 |
| 207 | 50259197B1D122344AB2FBA6C83D707EF2967B4B82F1C1B5852862 |
| 208 | ABA3A3846AEBDC25ACC020258E476F99B093B59A16AE9251214196 |
| 209 | C28A09B7231E80478CE197CD94476628841FE2045E566D75F5BCE7 |
| 210 | 4836418228374968CABE720A3C3F27955EA587EBFAB036290372C0 |
| 211 | 59E39288D06C1C8084B0ED932A47031007B5ADF8BC142AA155D781 |
| 212 | 809198F2B14748A4244C35D2EE9813DCD083DF66ED34781E2C2847 |
| 213 | 6CC548BB58D1C41B2058301245173FE81152811FCFA0F25B0D6363 |
| 214 | 0C984F7018950E4AABF3D6D1D822504285E6F126F602EEBE1B967A |
| 215 | 8AE262695328D8998CC1DBD9C0A649F0DA9350C7411F1EFFF48F78 |
| 216 | 6B2C10AA3A1DEE50CD320329024C7E5D0EC4FEC880F7E7480C5092 |
| 217 | B04DC780A6B7E694F12D660A04450315E69819C6CE3BF6A968CC94 |
| 218 | DA8430418893B30103605F64F15CAFCA76EFF0843414B2573936CC |
| 219 | 9E4A03F4439DA98F24C240F8B4866C622BEF0FB26CDEBD32681DA3 |
| 220 | B3CA0E89C011400C785AA7B543822DA5E65F2B220E7B9847012DDF |
| 221 | 66EC81C1930CAA0009EC471F972EB5FABC2CA5C537B5B98F70D682 |
| 222 | E2245C8CD453D303C59A8748228AA7FC7E5297E90368691B8E0806 |
| 223 | 0CADD0D3BE06F8E0C12258CC8B0EFB406852CC351C957729BB6F0D |
| 224 | 097D6030091916DC0B1723BD4A74B719345C1293B2766670C3A1AB |
| 225 | 78C0822012F1FA05EA4D5B18975A5AB0DE535D993E4C95EDF400CB |
| 226 | 14041B891910614D853BC9BAACECB4272BC41EB713E5BB17DC60CA |
| 227 | 3855662E4152CA2CAE911AEF5C23E71E9D3111D09FE3F83046016C |
| 228 | 70B3875B3024AD0645D012E274C5BBFC79ADA7A214A920A929D623 |
| 229 | C42407DD6CAFA30044698A6586A929724D3930EFB63FC5478B9023 |
| 230 | 4608AA3C6740819A817ADCC40B3B24AFE8736404F6A64151B3D517 |
| 231 | 7B50434168D15190CFE329001663B912A99F51734C836BE45AFB44 |
| 232 | D10C58E0488E51F85880AEE2D3BEA3B496D07913A38D2EBE93A1B2 |

(continued)

| Index | Midamble Sequence |
|---|---|
| 233 | 094D11AFA079848063D740AD25A30D2377991C7CED3B3158A114FF |
| 234 | 1AE6FC57C1AF7270162436B448017D9561509B0543CAD5D6DB0A4F |
| 235 | 878AF7BC221058BB76D406293AC4CCEA88DE6967E35D3C399C0FC3 |
| 236 | D0075C2C48E339AC2CDA49AB4C5987BBC16E632028BBAA76921EBB |
| 237 | C9720E63835588AB9B332894281D71820CB6A81A9BB071713D95FE |
| 238 | 1C468B587518CBE00FECC41A489265CCECF42C5BDA5EBED540F352 |
| 239 | 957219A404918662363CF1552CE27B64491617B1B50260B7FD3C55 |
| 240 | 8A286356422A6596FBA47014836023EC2FC60993CFF968DEB1B303 |
| 241 | 5CF34D584C348DC214F42030A2F59E96064774050975C2EEE9954B |
| 242 | A22003CAE8D1D54B4444311A81FD7C9CF4DB1E5BA01C58B16129C8 |
| 243 | EB0A5C9C9285E843EA5730707894DD54F32B2118A649FA4F23A5CC |
| 244 | CF8241ACE91144426B0CD592F5074BA338AA086DF30B67E14F814D |
| 245 | 302B022959654778C87755368810CB9FC7FC8DCD264352BC5C6B0E |
| 246 | 747142D2C3F6029831AE562F630338CA25BD6AA271F2610D85F226 |
| 247 | 180AAB217299F0D90F38686A5F6DB96B6D7947C38180BE13510EB7 |
| 248 | 037400A4E3B39205041D6096A97A500C6E103779995DF2A1D41B66 |
| 249 | 19725BE13BB0A5305034F51A148CCBC24986B73A21B8A11D4163EF |
| 250 | 600DD139A0311530C77F05CBE05938978F592A47391A21C4071594 |
| 251 | F711DE140523031018003E15A39918161E784D255A95F3A5C04FF8 |
| 252 | E682A632210D1B61D911215F5A7BC6A5E73D24C28A44323DD76C2D |
| 253 | 3A0D62A15CCD881600B485E7661D6930A2F1CC7B349B15570C03F6 |
| 254 | 11A899707626900244551825DF8C8CAC0AE66F0689FA53EE835985 |
| 255 | 1F11220A088802EA2657C74A4494049E7352858759712CF93DC0FF |
| 256 | 5429C81E411863CEBC5B830334D0B674D272557F8A7E0A2C7CEC42 |
| 257 | 10115F6A9DC314E2230112FF4169DB572E53CF286B69EC5F3A3E83 |
| 258 | 2E4D1FCCBC00A5380FF3B830E68A0F6B85914A5696775727C8D540 |
| 259 | 2418958880FDC81639E99117A259785DC4E585E0F2A9E4A6510FAA |
| 260 | D3CD560F88D29F2A8C697C09044B6061CDEC7F8C24428EEB52FAA4 |
| 261 | 459214619D2A5D4964E4E10DE4ECB80DD949BE3D843382266E31D9 |
| 262 | CB505F2144F4FCE6453013F1444E2310735F36A81964263BCAE65F |
| 263 | E0341396AD64A44EE910411A3A12A08E1855FF74338ADE38DC33C9 |
| 264 | 39D7A7215890534C8B6C0E31D24CA892F08583A0A702697E757BE5 |
| 265 | 3D0894E725DSCA12F7846CD0442C11F2521AAAF98CE7BEC2FE93E0 |
| 266 | 2CC3448C41ED209539159AA46D5C1DF27FEAD2504691210D5DF8F5 |
| 267 | 28F3A861F01A95CE4836175C89AC1134B411AFEF70FCF0871B177A |
| 268 | 93B73B9041CE7520B506888221E26F2FDCC30EE042D5C514BD2570 |
| 269 | 47A4A6F5097D6C689001B72E18A9DE50742B4E46EB3A3BBF20D164 |
| 270 | DB1A8F5680CE1400A3A6E9C2655EC43FD055E8F81ABF5AF32C3021 |

(continued)

| Index | Midamble Sequence |
|---|---|
| 271 | 8A0E180C45DF1F80EAE480AD2C2A73DAA1CDB77E2D1B242AF43F4E |
| 272 | 6C12D3C370A8843C83F21109FB023EF8A3B20B5E773E1FB9240AC6 |
| 273 | C031C5B11A95938415C143150363ECED793482CFD40E7F0A1914F1 |
| 274 | 382A958CA9504546580E31293FF25C8903E26F11245E7A4497BEDC |
| 275 | 1DE2A5222804C33D00457A1F226AC0C369D4D94E9C5A50A13963FF |
| 276 | 57356A0E3330C86E0C1C2B91559682F88DB1CB59ADFF0C0ADF4A5F |
| 277 | 4709B87301309508E0F6B48B69ABC46F91728E49494A933EB78507 |
| 278 | 3A1D201ED1AD5C53DA3C4825211E389A8F9230C192E65E6E46C7892 |
| 279 | 721A48A0B20F19531A2876EE83CAD434B272AF280FA3642B2F7267 |
| 280 | 220ADCB1D21D712028D603E31880512EFAD3FEBD26E5622DE45581 |
| 281 | 1C51EB1AD36BE10B1A8C8104032D00CFD1F8F71978EA8293A355C9 |
| 282 | 0320E9C444CBF7CD22847209E9AC21FBC4B7AC82D2D9B8960B51D6 |
| 283 | CE7D12D360C4308124EA22DCD1C3C15A32322DA2429F362FB1A3AD |
| 284 | D6AF1634710555240DB63846E0683F375710C1EBB1CF69C0F00CCB |
| 285 | 95D8AF4CA60CCB98821A8289C09926E0F2FFD65A428703409EDAAD |
| 286 | 2C5884458D3908FE8CE20460AF9BB1AFEF4CA1FE48A8D0A2A8AD44 |
| 287 | 9DE21CE2862191C8452E3C3A0D209682384EE8DA7CEED15594FD6E |
| 288 | C922E4520E984828B44C252F68E61E51B62888C521FBC2FD293BA9 |
| 289 | 5A1EEC9D1087D25116D5E0DB0A84D472F5D8EF0C65F30B6413CCDD |
| 290 | 0310E04735F20DF41238F1FA9919C6A93EE1FB70543F2911155679 |
| 291 | D0F60E74882848D09648A21115138AE30D68174D45006A55E7F796 |
| 292 | F18F9216EC50E34233AE30558C0FC94235DBBF9064827D1D174E6E |
| 293 | 0689AB22D1223F47CE0046123D147ED4D3D8F53527B9E91E94A9E2 |
| 294 | 72144874D21A0A4D8D8AF57CC91CFC814E89CEE1EF413CB650E2FA |
| 295 | F8CA2F5439411A10CF42648DD560857FD286468CAF09CAC3EC985B |
| 296 | 8C8822CA553C5707D4F790838BEAF2CD74D1BB2B15068359874E06 |
| 297 | 8119BA1852E5E96C135020CFC75051D825E6DA3D05552EE1BA62D3 |
| 298 | 8E4E7C92A9FB1C4820686E1027357C95710A7C2AA3ACA1C1733BEE |
| 299 | E323571DFE70912C10159E11446DA670E1727CDC92C9780457E999 |
| 300 | 8E80A6519AB9C120855D317E06C7FFA62C686D02C52B62232F8625 |
| 301 | 3E3231C91FE5C1006A2819C485A45C04EC3F24ED5051D61D59CDFB |
| 302 | 045AA488F151D1A4F6B272486121BD5B245C1BF8D71DBA255206B4 |
| 303 | 2AA8EFED437810D9D261121A4103713ED439A60C4BCDE2B8F6DF44 |
| 304 | 84262B9632520AA892B709118C7A9F389EEF925611D32AF2E068EC |
| 305 | 829B69A14905EAC9C28C3F0D899C86609D6852B3BE25EEC236F182 |
| 306 | 4C5C105BCF7A893D0C1BE65C04979B9921BB8E8BE01031A14AECBF |
| 307 | 9CD0D049C0F44AD64E54038EA3809B3FF0568FDE63D14AAE19A6C0 |
| 308 | D74A22C2DBC5058F3355A0487C050B415A19A233BFDD97CF50E718 |

(continued)

| Index | Midamble Sequence |
|---|---|
| 309 | 662D040E8B035158D748AF2E608C6ABA53A47FB3D80B85A1C811B6 |
| 310 | 8E5A9A2AC942ECA91C989742AC0CA87C52E1306120DAF51E7DADD9 |
| 311 | AA988999296410E7287D80C2371881A354E3FFDCD240FBA4C5C9A6 |
| 312 | 09D46B6A50090701352673C3A33BB882533782CECFAF8361F907B0 |
| 313 | 40989151BB0E87E0644056D7C8ADE94F94D0C0C3708178ACD30F5F |
| 314 | 94722DD0600DCE59E4140D0AB825FF02BA5636653C695D6D01234D |
| 315 | 50B9C291C9123D6368AF020FD909B615393FEA35B0FD8A4F678202 |
| 316 | 7CBE32A2B0B7F197914030C80A468713F2DAC5A5009F61E2CC9A9D |
| 317 | E05A2BB4A5AC4D5F05090E1941879219AD8CF116E7C0666B452F98 |
| 318 | 56C0507AA80FBE2C4027B668A8135ACB2EF4BC362F307611230C5C |
| 319 | 1DEF4130D0F5C411B0B719C71A6CBA265B9120AC17722CB6F93133 |
| 320 | 3B27600A9A19A38C9928A6935AB9F6830C910480E3E2F3FD891D45 |
| 321 | CFB65170050941689C356B8CBD47DC0A8F4D1F4AF2BB9E041B7217 |
| 322 | BF0E754F80501A0263A7A242D8745ABF6CF2449D1CF2D9B14BC0C0 |
| 323 | 3A1990783475844254908A7F15F447D317B1B34186FA3CAF6C8507 |
| 324 | 157A6746CA0D690B0186DFA41CD7AD268EAE611E8493253399BA95 |
| 325 | 94ECE911ACC204AEA9F226A3C4C7AA8A35CC39233C5C4FC844E859 |
| 326 | 86D487F8805139C9CC9257E00A5082D8593DBAF52299A363B60F9F |
| 327 | 82F567B56F3C25500068A62E0BC3B2766090F5D9A15452CCA74147 |
| 328 | 4433330961B61020F38D1A6E2BE990ADFEAE25D226059CBBAEB25 |
| 329 | E1CAABA74242A37DC6BC51A1500C64D78B5A7BE4CBBC0E420C6609 |
| 330 | 12F5427C7354405C53A5C4A094D13CE00A4B6FE260B1751BD0FD99 |
| 331 | 2581367532352646BC9C090D7C08A32D5FE9D7181474187BE943C8 |
| 332 | 8382045A13327E1BD3AC9E2619DE9228B1DCF20EED66B097EB8A37 |
| 333 | B2A5242202A9388DAC563A8514D1B780E79ABC1BF0A2716067783F |
| 334 | CD0A5E78B8046896F2C6C162CB63BF7C9D4BF70185542421DD07A9 |
| 335 | 69970225D41052F1615A2FB3B080530A7B1B64FE2858FC66B62795 |
| 336 | F7A0AC200B0970F0AFC2229A0B9C531D05A6C663FD0AAB1459BE5A |
| 337 | 925204BD640B81CE2ADD586162C79BB7C567203B8E292CE72481BB |
| 338 | 072AEA5382DDA1850865B47C25BC56475469058C9FB47A20554DEB |
| 339 | 034EB9C0F80A4745E69A1C282439A723769393DAF6C19A3882152B |
| 340 | A488C640DA3BA18748175C61607B38F43D1832ADF598DA66AD8EA0 |
| 341 | C8F9692E425DA3919A9400B53D0028ACF554D66EDF3BA687227F86 |
| 342 | 245E2C6689584E8E9490D698346933BAB7C06B029ABD930FEF5A8C |
| 343 | 677869132C280B10A5BB87657B2982F973EAAE90E10857A6928BB8 |
| 344 | 7655894A87316875D307184692415D1C410FA1EFC0C8E2FF51C8E9 |
| 345 | 433EF72ACAFAD1B152004E3214C8E45C207DB79C357671F710370B |
| 346 | 02CE416C03BC340F90F56CD02E52C4D6C7C8DC9C3779C444107569 |

(continued)

| Index | Midamble Sequence |
|---|---|
| 347 | AF5296D89A10167D44263E99030DAEC928523B39D9A78B7B40E395 |
| 348 | CADCC12A0AA2FA4CE4F70B25424E2324B9477687FCC46AAC4F3C87 |
| 349 | C5823206AB15573144F324C04AD78B121B59DC5FE1BC058D3BE085 |
| 350 | EA80C4B58908C691164B5A69F39629B2DDA995B969F831D8C381C4 |
| 351 | 07086A01EF300A956FDF588099591E80DBD3DB8BB9748462E9AB3A |
| 352 | 6DAF10B1202990720B8BEF1085D81B20A92C6061D3BABDA25752C7 |
| 353 | 53BF2860CC9D1B4054083EAD4F0433071A2B7D35F9E03444A243EB |
| 354 | 6641C6072B0D20EF86AE30D70C67E1EB224F70580B92D0CD789D36 |
| 355 | 4056652FB44E360027399CAC405A39571869E31AA24B93B2E5DABA |
| 356 | 24C4B068D12DD6353C499B9E10CE1D07B8969E77F01B735114E246 |
| 357 | 43A96D007C90CECC2153322B83962182F6FA26A432A065BEFAFE90 |
| 358 | CE414F4F62BF08C950E281560B2694FF6480E2EAB7AB78C4468981 |
| 359 | B47985508CF4643AEC40D3A04815968150547568FE275CC76D23E3 |
| 360 | 889A1FCB3C12270911E0F2D54E04C279C6ED2EA07B421276AF1B76 |
| 361 | 47F315680A4C4DE3124D0345CB538D39243FCA9E1814F1B43FD31C |
| 362 | 20E165A427CB2613994509D2EC63B541A76B78FB88B7033A1991EE |
| 363 | 79C3AAC528343C524D8128FD130E518EECC4B628B6D42C08586FEC |
| 364 | 0E47D8080C5AD396985C880CF212CA99E6C335365FD3218ACE88F3 |
| 365 | 2830A003E8DDC9322D437818B49458342EEA88C646F2D770DE2D83 |
| 366 | 88756CE70601003953848AB9ED2CCD55D111C93E606F606D2C136E |
| 367 | 8E721A636661008108727693D0826FA26EFEA15B1C3CBE1C26C2A0 |
| 368 | 98AD336C1379E08204D746208483B416A2F08EB30F6C85CFF6A473 |
| 369 | 253FAA71B70C01482DD188A2264D1B664F27F54381C50C41A8BD3A |
| 370 | 8F2D36CB12C8883D506A63014539CF4B6140FA846987D1EF29049F |
| 371 | 34B623600412E0C161C967AE1BF452EF18589A8AE4D5CC41523CFA |
| 372 | 85F4F5BEE22D10103BE0AA209502F1F193ADEC3A89E2D235E0C476 |
| 373 | A056A4D58430190E6C2979853FC4C3E854041C93F369F23C31EB5F |
| 374 | 709340504675D2C0171C63E6A130EF892D56C051AF620DAC7FBD36 |
| 375 | 4181739C808F58F14229B94AB7D1EF96BC5898EAAA69F8E20F700D |
| 376 | E92CFB0A82CF24B4204F80B3336B6BB960AD13F05804CC2AFA3DAD |
| 377 | DACC531A106F1622F0A1802C0967D24DE30FD20555492AB22BDE9D |
| 378 | E486BE0C83F54845823224D43D5219A57728DB8F71713B69D65058 |
| 379 | 39CC703157357D09554909306A627168937D4BAF81BC385B96F91C |
| 380 | 8A93F40A946E304CF80A5174692ECE537081737E968AB8FB2CE5C1 |
| 381 | 020634A0C58C46E0DDE6200786BF3364D8E1C9FB0AAEB282A969B3 |
| 382 | C54892118D084B65A540CD0B2F90057ABD823DE75C9656B8C445D1 |
| 383 | 278381A2442B7697097530C0D2DA4DCD172074848869ECED791F71 |
| 384 | B93E71C1C09BB205AAC089845E3D29671BE14310CF63D550C8D5CC |

(continued)

| Index | Midamble Sequence |
|---|---|
| 385 | E961E024177669635A44E0522A8F329091CCC917AB07C47DF609A7 |
| 386 | 29473A8F7675D90E68292EA0A07B2A07827D039AA8377F5EC9C9DB |
| 387 | 8284AF8F608E06E151E148939B88FD8154FAE692D1DFD8859A2622 |
| 388 | AB2D4D1223536405271A490DB211C6346883F55E183A7A21783D8F |
| 389 | 206C8204A771E781D8F451F48764BAB30F1E25FD1B1A8BBC269071 |
| 390 | 72C3604ED08BC9B7A9356931B91792F9A00848AF5551B6E72838DE |
| 391 | 46422C9072C1FA7425DA69C23B311D6D0DE1B6B9EB1757E2090A18 |
| 392 | AAC906B98C4431F08523C5B59B07462AE3F3E9D72CA0FB8A353A43 |
| 393 | 013E8F24A4F2F68FBB97142066569D3ADDD0F44FF51826B43F1E2F |
| 394 | 0EAAF8C3E05F18CCA390E441B4A6CCB73A4B9E7BBE1505AD7895C9 |
| 395 | A0934009A9419F5C540E6AF13A19CE698C85C1595991FF365D2F80 |
| 396 | EE06B4E210963EAE104D50B60742B2881C739E22DF986C5CB45DA9 |
| 397 | 24581211C1559D7B8AB982326146D1E88576EC8442F26907FC0F1D |
| 398 | 41288EFEC0484C6E03289C10BBF8A19E069A55C759CC1A9FE0ADE8 |
| 399 | 12702DB98B66B88CEDA0803812C0054AF34DC74F23111E36A8FE87 |
| 400 | 916B854D65E4FD48161DC20A223A23C2021BBB3DD7A8822D7B9A76 |
| 401 | 3ECB28058C62C046A9887FE08D01F682A79B9CFB2AA1C1E9C8B3C5 |
| 402 | 4207608263F34AA68D7B77481EAB93045223BC13D4D8D0D15EED75 |
| 403 | 523E40376EB334CD413900642D627B3CBA8BEFD2D3901D39718344 |
| 404 | 11DB0C5B6A26E1E8E2266E14C22F0C6973420BFD2A9C2355A82BBB |
| 405 | 936437BC188419C2192ADA13A7010BA511BF8CD50DCB534DD1F75E |
| 406 | 45D3B981820CD4AE0A1BD85359297C3E3121167A462AD1D204DFB5 |
| 407 | 281997E5BAB5291B520B5CA6445E01A6BAE4FAC504538534A68EDD |
| 408 | 48B2E57499C88386D0EF003FD430B367788EA5C7B4CC6940308B51 |
| 409 | 8C0AE505A6BAA391C24CA0168EEA3D309C1CFAC5D97AC368EA3A46 |
| 410 | 15181026D54A4885B31CEABBF8D7283DC861C550B6BF2B6D6E5429 |
| 411 | 56C164D09DDF0A1D94854424260182DBF8554C59B42309D80F91FB |
| 412 | 490A518AF5A106ECB0C790462AACD3A487E1FEC7B72246051BE815 |
| 413 | F548F5CA5EC249881862FC0F02457D8BA38348CC29895670237A8B |
| 414 | 083AA50133A915F645D288681E9286539DB1E76D656394C24799B2 |
| 415 | B6BD564D04D34EF84965A28000290767C4EDAC846E7C4EBD0C6B3A |
| 416 | 2560E3C192F132CB25CA98200416514677CC40BAE14AA4F78648EF |
| 417 | D6D39C4954F9D6A41520E38A09D7FC2CDBFFA407D25E5D3A52540C |
| 418 | D1C044AE4404F013FC4F720A65BDE9530B2BCAF80D8EAC03B3C6B1 |
| 419 | A982C1CA1C9EC6DC0C093609ABA38DD4DFD79FE3B59124728906B0 |
| 420 | C50911AF18083E5B3263636884B255A8435F23EBDC7771E12582BC |
| 421 | 10803930B2194B6A67C61D916EDDD3F98A2562ED86A360A302E39E |
| 422 | 39649C8B1B94A3ACC2071D80F28D911E7FD8148AA9EEBE57393C0D |

(continued)

| Index | Midamble Sequence |
|---|---|
| 423 | D1D4E5683A84F182A899980934637E17B372C0C4D3A1AA592994CA |
| 424 | 3D1776241DCB000E4D07163218E2DB72BD3FA3F12D0E36516473FC |
| 425 | 898B5C20A48AE799074110B71CFC276917A0ECD5DBAD1F89026457 |
| 426 | A29406F849B070EC397899609B932A2465F6AC61976B79A4253E0D |
| 427 | D919E809918C41083457615CBE19761B5EADEE400CAC2DCD9360F6 |
| 428 | C3C84CB204E51D1BA9E6AC02A11A84E28BEBD898727EE1825FC21C |
| 429 | C170D001243C7568059413DE3A9F93199F1C126C2C6B5232126BFA |
| 430 | C14873CE321B896167692B1D321A58F0239F2074CAA662A8DF36AC |
| 431 | 3636C24478A8C13D550E5215F381707154B26A7F72549B7272F12F |
| 432 | 5132508A928311C3F44817F8E731844F29B59B1A5F9E1A7A2045C3 |
| 433 | 3069F421391668B336C007703F4E1D65F79791E7D6D50131C80C1E |
| 434 | EEEF8920223868477249A14EA2690FF20BF44ABF9285C5C50CA2D2 |
| 435 | 39D073C7311529F3893C83C7402DBB0E9F8D8647D19A1746FA80F2 |
| 436 | C5B035E163E0D7010B9C569C624065AEF40B5D71640F5D4F8760AE |
| 437 | 708847A342C14261F07DDC97E6853754B06B1086F3BA025C24FF51 |
| 438 | CA1DDE60B78983FB00D0882021B7616CAF2B0BE12564BA43AA7EE3 |
| 439 | 6140790D5A43C8196E1D3A24977DCEE31543856BCC8C0BFC4327D4 |
| 440 | 96937D481112D51493460AE1E36708740DC4DF76E6AD4C860E7778 |
| 441 | 7C439EE250C0C2BE05F1379826A0DB89206DF685A3383A5AB9558C |
| 442 | 1EAF13C24454312E6FC00EB04B3AAC0BD2F6DB2F1B6EA8171BB029 |
| 443 | 218029E52225DDCD924F850236061CF0E6A83E4AFFA69DC174BF05 |
| 444 | 6E241B3180150BD1344651AE38F63904FD209C24999E7CA6F5ABA1 |
| 445 | 988880AEA4A9420D4F3EBB0F1196DAED98236710992E6BE60C14BE |
| 446 | 29888540622D37F9353023594AC6EF50DC302D7CCA59C93C2C9F01 |
| 447 | 00699329D0034D8BBC94C0D5C0C91133A1D87FA6677A2C9285D61B |
| 448 | 2C712CED4C713B3A844C0918D78751FF6B812285E51F5426AD10ED |
| 449 | 80AE4CC84CCBD9AE9D065F03501A3C290630E17FF2989CF3EFAACD |
| 450 | BF021D4842474B3A4FA9644A28A4D7924107A538299AD8E57D5CCE |
| 451 | 2AA1E102A1F4B99C37CF478548176E7B453DA0DD0B97E4111461ED |
| 452 | E0F30FDA0EA73A6D409948206258679E5F1B590A81AA99F523FE90 |
| 453 | 0806CA3ACB0A43C0237EA13D12532210E59C995BD5712EBB20DD8B |
| 454 | 70EE630017B88892D3D66645812A7A1D95F273C6AE0701C2A55BE7 |
| 455 | 659670D50C3B21A3972F84062E01A5704EAD641D6272D8FD5133A8 |
| 456 | 1C4B408475852D8E12C57D1BB22ABDAE434A33DACE4B00ED55801D |
| 457 | 31B231783CD780211C0DC6EB21E106FD26C8932FA6A4A5BD0E1AFB |
| 458 | A69B07C63A4F63401878F1120AD737527C4ADB6772A0104B988D4E |
| 459 | 6532C28B900E458241690B57EC372ACFDD1BC9A029B0AE4921C9F6 |
| 460 | 341E5FA8ACE39CF407548210464771A69D9D3F04552E67A604AC4B |

(continued)

| Index | Midamble Sequence |
|---|---|
| 461 | C8A4A8C4375B2348AA7855A465AD56DE74CBC3BFE3C3A09E018DAA |
| 462 | ADE1402829F5A6566958320166A5814E139F983755D660FD7D9078 |
| 463 | 613D82450425D71A0785D51B91A76E6815B6D590332BC31779DA4C |
| 464 | 05518C912B8087324A7E8F0E3485B884E70830697DBFD9CD8C5A17 |
| 465 | 89B06361CF42C938CA008563E2D0BF5439FDDEA30AC51FA783906D |
| 466 | 8D200E2341EB78B15124E75824AB7BD491E37D53100E84CB176073 |
| 467 | 3D5A095FC0DF849D1BE910432353D6AAE8402583DA7E0DDB4D5C66 |
| 468 | AB167D27090EA96004AA805838D50A5B60C27132FCB8A7745F109 |
| 469 | 095723191E7511637B4305904B8574E1EEDC8AE520A32E46FD4B19 |
| 470 | 10CBCD142743F4BC4530E033D846167C0F70978C4CBBCD50927FA7 |
| 471 | F62A6B8D9B0B16A8E0167213E309CA46F960B1D4D418A9F1B9908F |
| 472 | C45304583125007D22EA843A7387C6034D95BFA3577A0C5138DAAC |
| 473 | 07AA61CED807354C48B0A7028B65CED500CD9FFC845C731E5972C1 |
| 474 | 46C43F58B587245920F698ED832C2E6608C205DED70C61979BA2B6 |
| 475 | 53E27095822514BBC1FB02CE80CE51E07DFA50074D84828D9D9BDC |
| 476 | 1FD1310001BFD1FB88A5863484B2EFD984DF470D0A645312354CD2 |
| 477 | 23E24154B327710F0383144197627B5DE329DDB8A4BD03061521B6 |
| 478 | 86B583CCDD468A997014AF0E2AAE1F7886DF243CE63066768CCD0A |
| 479 | 219C720AE3EE86912D5C610D18E6DC4D32556C65C0257D16839761 |
| 480 | 2161720C4AC12E39813E1B443D94065B46D1568B0DD5666D5F2A44 |
| 481 | C6CCF946051E3404A753063A26D91A7D1C611790CCEC2BA13547A3 |
| 482 | 9661DC0C84891A236D17295B484071B7538D37031DF734AC1D3E93 |
| 483 | 138CC6901083454E89545F1707B2767B2D2E1BB051EFA320600FB4 |
| 484 | 99774356E36C318823465227824A826C0371297F1ADECB0A4F59B0 |
| 485 | 9441C82240EC11B588DA19586E63B26066B25F92B17C65FAC30520 |
| 486 | 668B02E9A22125530F2A225E0BB2953987A8BC7EBD96E52ECE019D |
| 487 | 825225D1D9D25F4F809129C111E89E307274FDE6411BCEE2BDCC2A |
| 488 | 5B4A0326AF19906FA380997609886854507F39C250C65ECCDE167B |
| 489 | 521D510F692047D757803B92E665A80A30A59C4FA51F3E7FD320C9 |
| 490 | D50F704A6E0814BF92857EDB164B9AAF7230FC59D8600D4E165346 |
| 491 | 568061141F5A2C1C70B5881D55F46B3B47231A406CCC53A5F7F8F3 |
| 492 | 823C520AA803E89DAAC4B04B853B2118C65154C6B07EDDA5AFF813 |
| 493 | 0CF93708D7816C2690351C8D5E24708E4AE75926B365F0E3D3A2AE |
| 494 | 25931985F7960882F03431023C62F43C11F302E618FDF82EC037A5 |
| 495 | A3698E26C81757648521F38A95C6DFECE578909A6485BE21046C3D |
| 496 | 95C40C6B96452E62A7B588B47286D03FF06DA4743C2CA913499E27 |
| 497 | F0641E48073DA29648C2F31ACF527EB5620A2903174F18C642FF74 |
| 498 | 04D0C109B03EA90F8411EA681C424FB94E01647AD841737891F399 |

(continued)

| Index | Midamble Sequence |
|---|---|
| 499 | 046CB36C03CC94152280AFB9516FA5C3902A87DA39D0DB99D98F25 |
| 500 | B38B09DE190AA262962045D10E84B0A2724ACB9E966D151EA59B06 |
| 501 | 3109BD25EAA2B20A2F17C40A4E89DF6851CEBD2436748FF5E081E1 |
| 502 | 40F251D09B57228EFF3157001CBB80BC1B4AF667C5645157893CD6 |
| 503 | 05E3D468B008EE5E12B4CDF054E1B58526F6FB4EF545D4C025A766 |
| 504 | 161D9C6809292734F47D0C201C434EA5A204127AF5987BBEABC4EA |
| 505 | 1854CEB50DDB273E68012CC6EE1547A70FA2C3235E26B4FF01F5B2 |
| 506 | 6F259A9D3820AB84E90F31C08A48025AA2B21C6CD71CAF63D4170D |
| 507 | 4E23BCF842D405395CF0D5A8B9069F9A522B1C597FB81D8DB5C40D |
| 508 | E179220C9426414D03352E46C6E91C117E214B7AE370D8CA2DB6CB |
| 509 | 64D4542380FA312269AF0ECBA6C405C78DC9C16F6C5FE890606245 |
| 510 | D4E890662580D93E90E6024F0FC9E94FC80935933AA98ABA7FD685 |
| 511 | E28621485818A77BA11C30F8A265F2869113A0D03AA0FBECEEE485 |
| 512 | 3227D361110A47848031ECAF7756B80EA807AC949D91EAB6C168F7 |
| 513 | 944D11904FB0A9414A14AC965DBD7D26115B1983D9EC77E410A3F3 |
| 514 | 403739B17A0D22C0B274EB15161808EA11BB3346F85276FB8A551C |
| 515 | AE1AD7CA80157B146079938C090FC623B2166EC47F82EA9F123592 |
| 516 | B467B520048D86838A64F70CC823681F503AC80713F54D6FA1D77D |
| 517 | 86BE81E2696837037AF401B1B70300319D4B3CAAF97A363CFADE02 |
| 518 | 93C835AF28E751C6837A4ED003A4C68F21E1AEB33796A85589B29A |
| 519 | 08613D219DCB785DE79720201F6D0A2EC5E2A295206EEEF0CF2CE6 |
| 520 | 11AC5381485CA41D1B2730F9167AFDCC047E0964F7D9971A5A5015 |
| 521 | 44369C2395EF0FD5C2023286E8B8274876A9667E1296E0CF979A42 |
| 522 | 66F97EE4C8099455D280D0D00F0A2496CE99273954238C3EEE171F |
| 523 | 81E01DA8D432094AA7E803ED04AD0849A79C1CB4BC6545B58468CF |
| 524 | 3D33736A6224E3AA061F2A8290897446BB0E2D1BF13E788D3D304C |
| 525 | 4CE829C32FE6663381C33D250200D29D9EBD1D6D6B6100AD4DA1D8 |
| 526 | 368D07334116F056D094A086BDC9EF7F90B661CE8A54975448BC1B |
| 527 | 2D6BAC31F2081F232A451BA138ADE3FD985111990FEDA3529E6606 |
| 528 | 6A80C281FA47625A1E456CA2543ABCFD43383CFF02C64A8256D7D5 |
| 529 | D7A91A12041171382B2C654AEE11613C037E922ABB43BBE95BE90E |
| 530 | D0DC40B629ECBC020CC2249EE26037A7AD5D0D178573D1628A870D |
| 531 | F4C1719A0EE5099B4201C055E500AD8C9624FBB1F25BA6768CE0F4 |
| 532 | 03A068A50BBCB939F0C61E16A37B78D96192F1CF29432BE17EC0C6 |
| 533 | 12951024DAD2894124CE49DAE7CB81C6623EB1674065C616BA804E |
| 534 | CAF040DF846C7815505EA4508C50C9726B0ED8CC889D269FE3410D |
| 535 | 9E5060C743F24BCA638078662C87103E3CEF253B1187B81DDED82C |
| 536 | 10D1DC4A4A512452EDAF09C7C18D8BDD2126E5F34FA43119631B2A |

(continued)

| Index | Midamble Sequence |
|---|---|
| 537 | 0C85BF883894DFE6229409C4C8A1BE1687DF1B69AE822C95E62451 |
| 538 | 833AF814408454A32C937C9790C8C1E318E99D9E1E4DC94ABA15A4 |
| 539 | 88DD0E0684048CD2C17E013E2D72973E77C45AFA121C96CA270EAC |
| 540 | 786861C74282FB50555A0FB0821B788D44CED425AE8743B6CC4C73 |
| 541 | C74D5C97A11CE7959592B1328C065FD7B488ACD643C5F39067E900 |
| 542 | AD2058C11A499C301956C044FBF1D572F886E2D793528E4DDDE6C1 |
| 543 | 2BC4414D38583DC2403C17EC817ECC371B973854DEEE2A890269EA |
| 544 | FE806A5F063E40461292555C01CF184D38388D70EBC3AlD763310A2 |
| 545 | 74C8EOF9EF629A090551192A6944A0EE6F811845ED03F65DB8C1CA |
| 546 | 120FCEOAFF610272D1715D899221BADB870B457A3AE09C130B547B |
| 547 | 25044132EF29807CC4950E2E37881019DB474F4DDE5FD4CD6ECD54 |
| 548 | EC6D6A77BC475940004DE0410B386C32C839F1DBA7A045A86BB644 |
| 549 | 214A0SEBFD279F0B4ASC058D44A835D4CEAC21AF0F04E9A00CDAFD |
| 550 | 813042ABB804BE00B8EDBB4D21F7AC324A143045E93E2E5ECE81EA |
| 551 | 0C09E90626092DF370B00E9F94CF00AE8835577B775A9219F4A378 |
| 552 | 8F4398526AE65106D782482808152F985F1468EFIC184FE32216EE |
| 553 | 2B268A083E0F8A15B342B83252DB0D67D8D0E73322C5272B788957 |
| 554 | E8F4C28DOA5E7C0024570CB0FAIECOAACCFDBD2B29611C79DOD92A |
| 555 | DB24050BA49B195078199C228E3D383928E637ACE92FAEE3033B2A |
| 556 | 10B479C0778E6B588807415581583A523681DlBBDDE327A6B69593 |
| 557 | 4995C36805F0648C3AlE2BA4E57091AA86DFB16E39E7022864A7D4 |
| 558 | 42FAD0CB911B8D2A16864B302550468CF61B7EFEA6838616EAEE3F |
| 559 | FE1C1 BD04BC144CBA122822206F0266C1D5AAD6610762BA63CB4E7 |
| 560 | 21C90446389606C54A23CAFEFE6B1D65520CEA9E6EB74A1F1A71C4 |
| 561 | 54B506459C56FA06D90730EA821F2745CE3E155B224762069BCF12 |
| 562 | 42034573E387C4C51105508C6C7BAC79B1C431DF1FE81BE06B66C9 |
| 563 | 1AB01A6922A59C24672FD0191792A79E321C850B9350D6EBCE170F |
| 564 | CA27802E8DD71575C84CA58775CF476E460C6A43DB6438965A2CB7 |
| 565 | 821BC488084C83DD82COFOB4FFE47E7084DCA469757FDOBB1949A3 |
| 566 | D280A6218EF8689D36D0569E1207FA9D6978264F3B118888C5D813 |
| 567 | A9C48CC1779EC4D86114427ASF1026747843CEFOSC4CF72AA97B93 |
| 568 | 2FF6640C59013639391E09137352DC79E0721E11682D6F5C57F188 |
| 569 | 14C195BD04DA077D3442E72088653AAADSB9181194F7DSF248B382 |
| 570 | 44223F7423BB23D068962D4B0343DCF8E8019A75B53EI2CCEFE116 |
| 571 | A44E55A4DB1886BC69AB026422139C71JDAC8F07DI449172F2BA85 |
| 572 | 980E8509DB22325C359CAB9928ACD7182A0AD49BC65FBF0C09A5BC |
| 573 | 54C91E3ADA401E6F1726467088629453DCAB92876182A987EC1D97 |
| 574 | E21B9A4D50502F9F3CB249311ADB8DD3DF5D41DA16E40903BEE22E |

(continued)

| Index | Midamble Sequence |
|-------|-------------------|
| 575 | 6192E1C4D10255D6D5644E80AED58C8A45C7A83E2A76C1832B3DFE |
| 576 | 780558518C44E5758811DDE620D4A94CA4DD1A7C71E681A2C2C1FE |
| 577 | DC37D56C90528A0D752C48216237BB8760CA40689E66A0E8FDA61E |
| 578 | 51A018165772D0C69F0B3B01CB95DF8AEA58EA1916E39D0BD474C8 |
| 579 | 67DFDC730700536545220520AAC2CECD4461F0BB01DEF39E85AE16 |
| 580 | 74FA80F2CB4730A9A61A8485001614AE522E522846C47FD9F82A16 |
| 581 | AC98C96711D42158087CD290FA0E9201C17B063DD3F354ECC91D68 |
| 582 | 5628A1D656EC1BB49496018CE6DF0E709AFDF7E46039B13973447C |
| 583 | DE8D655D3E5790000CF3500F1128AF992DB631D72121F8A1793EAD |
| 584 | 34484886E291D1AB56420C6D176DAF08A9DC0393BCAA6C1C6523FD |
| 585 | BCCD7B311D63C284960A78646AOFDA42CC4238A20FFD7692E15C89 |
| 586 | DCDFC70ACE0D2610742CB82892B0B506EDE4448859ADCE4A5551AF |
| 587 | 9739B08D9B11205C0156731BD4F5243F3F3COB518EF77977A05F8A |
| 588 | 1864A39694443F450CD3F765272407A2277E997B94ED70DA70E01E |
| 589 | 8EBC29FC11311AE41849792491AED76750A160F1370468D6736ECF |
| 590 | 003472779AE915CC02A305C8BA6D2E704A1FB83B3102F1757F314E |
| 591 | 511F923AA614848988174231B01F6CB614E188463A95CCDB850A65 |
| 592 | 373500228BB48618D9DC12593CC22ED8CA3BCSBAB679017944A647 |
| 593 | 25D62C4D62529070D85ED430AA2FE6A60D9E97EAC035C4928C60B6 |
| 594 | 210A9966921A495D103E7DA8CEF8F3A846E5340FD2FF0748AD1779 |
| 595 | 9583627BC61BB1600CD025 E2CD49C5411718C7F4C8FAED2D84CCAD |
| 596 | 9C865D072A15DAC65139540150E59840CC8C9F90B5B5DA0D98FA3A |
| 597 | 85F46801A8AE1562F530FF440B1E1EEA8639E0CB26329C94191E3E |
| 598 | 4064B415332E080638A72775F6C5BB58341D635958792AF03864EF |
| 599 | 93507CSFD3A48C0C6356A20ED0D504E773AC86ADSB89604FFC6E9E |
| 600 | 83D12FEBCCC1CA1CA1044215DC1B4B642EBBA26178C9C8F4A214BD |
| 601 | 2DD5E421OFEE9060083C23E8B98843A8149D540DBC98E2CD7231BD |
| 602 | AA7COC16E18A959E964430A0430C85EF326A8472FFBEA9527E0A19 |
| 603 | E5A2DA0F7204711F351815C408392C6918DE71727D9A3848651A89 |
| 604 | 1F0A13621F7945488A414E149380A76958941D14E8FAD247198E49 |
| 605 | 192BC882A7206CE88DC344ECC4C9D5BD6B043872BC9D5045B8A23A |
| 606 | 313BA4C464FE4879028F13E50011FAA6D0402A724D71D87AA7CEBB |
| 607 | CA2585A0ADD15DB1A19A881890239114F46EE7018CSF7E9BE13035 |
| 608 | 12181FA58403C88C78EBD024FF47623C0FE8FDEA17634DC92C4D14 |
| 609 | 2840806EC58B3923DD24F0A786C604E4F74A4753C9445D9BCFD2AE |
| 610 | EC0969B4128AC7ACSC7F109508B894630FDE034C3D6A539B49F6DC |
| 611 | A88380F21EDC800FF6ED0954402E259EC7CFB955C306505C82720C |
| 612 | FA5395327403E7A20FF0159813035E6B141D2FDCED644AOF6FCDD2 |

(continued)

| Index | Midamble Sequence |
|---|---|
| 613 | 7C4925DC35D01542423882E94ECB1AD248D202BAD6732E7D9B022E |
| 614 | 763383057C4FD84483305A2C2439D1357CD5238F2B637623D287FB |
| 615 | 780B268DF390D2B8279A918602478F48652AB2E55445FE27712C0E |
| 616 | B23E1B895E8820B807445E237FCC542D7995736B27C2CD2037E651 |
| 617 | 05C07AD644392628E8622CC9D4690A355034C75FDA19A0C7F1E35B |
| 618 | 91485C3099BC6165CE0A74AC9AE46875D8B293D2B4CB0502079DFB |
| 619 | 4BC85410D59B1E6F432ED14B04A1F315A36435992203B6AE6643E3 |
| 620 | 4C867CSD26353B00E7C03D91A72506C37C1C2B7B26A9EF8AA30AC1 |
| 621 | 0CA0A6F6E089AF3E27F625449A338A9BE42F9EC72C960A296B5C5B |
| 622 | 2BB74F1C2C210814DA9D41F297C33C647ED112DD5E7DC604F33B89 |
| 623 | 13920F11128937ES1E93901714C8110F46953463D0E77A85BD145A |
| 624 | AE3B6D5B858E00882B25204B4CC0A0D23ACD5475F0A65787F089EE |
| 625 | 46567428DE103F2E17915C671B024982E65BDB790611F79E88B169 |
| 626 | 3A7446AD89DD0C1AD902483A1E55204F7753E31FE4CD00EA3022F9 |
| 627 | 5C3284996A140C67FSSC32B9024AD0B4F229AC69FB3FBCC2032F14 |
| 628 | F500B00D106CAADF32264BF6C64C42A6BD6FA1E0A67275D494C7E1 |
| 629 | 5492958381CFCB52F8762CSAE268A9433027C4E275903FFBEF6944 |
| 630 | 48809A0D2EE59B169CB70FC28C758115A5BC0664BAE924C933FFA5 |
| 631 | A64BC76440D755ADBCEC18E0072E421DEC25D13CA34275689BB1D2 |
| 632 | 91026F360A5A1B4E6E1DF4050749288B14D8FC46321C63A975D746 |
| 633 | 6578FC4512414E7A2415AE2D4C0213DF3CD86D3114EDF3A63B302C |
| 634 | 0115B213E542A0EFC4B2466125235A98F3B84174C582BDB75C2093 |
| 635 | 9366FE84BF42A68D0042BC80855E362371382B2DBB4C321AE389CB |
| 636 | 1260930B332IDCD97A7F19E19808A5D231707AEF4814EE8F14C77D |
| 637 | DB787A4523A94F00C19C460075420E5D1ECB85B777041DD0E4ADAE |
| 638 | 1C9A300B9F0C588991FA72501D238CDOCA17D38EC46EBF20E19849 |
| 639 | CC969853855FD13B24IA30B94846F4040CD914FA2E4EE271B8B0DD |
| 640 | 267383DBC8B397F4480325A08B1364844524AFABC095AAD593F5F8 |
| 641 | 1C87A0655A98547B820869DED07DC417323587228BC2EBC34DB07E |
| 642 | D9F23C0184E99D834E6C4214D82E1E41DF6A64948D4F0C8E05108E |
| 643 | 406316A29FB861DA10DC7C082C1A1858588A88DB673D7ECF25907E |
| 644 | C00207DF3AA4D258FB32A85B888A075FCD91B397133529AB53C7B8 |
| 645 | 29A884822F49D70AC76218E869528628985C0A46828F72FB091A78 |
| 646 | 0597514518BAD6B118C5F2823D9708301494B782266C3F3B3DDA15 |
| 647 | E616EEEF7424B1816903CI24922E7A25077911E9B846FFE52C80A8 |
| 648 | 83A14E0BB1A3E16964311A419715311D725F4AF99629BD1408E03C |
| 649 | E670F6B90940865437A2F4E0A079566C6484D67260F7A0D28E9ABB |
| 650 | 0442CA46BEAC883CE1A3E8F95C0531779B1D21948B655A48CCF1B9 |

(continued)

| Index | Midamble Sequence |
|-------|-------------------|
| 651 | 610D0338441762DBDD271883E81B58BA5B743549B563336F99051C |
| 652 | E4CC3292E0A8958AD5E4B218948731CA2D31DF9C8197034FD9C415 |
| 653 | 644F18E8252AE10894FA1FF1806285010D1D138ECFFDD2CB136597 |
| 654 | 8A09437FD22D422181236A969B56A3C9BD7FC01753FCBB5046F146 |
| 655 | 3A82B1F98D242DC41C1ED20A296C2E4E25DF6C887370A78B606AD1 |
| 656 | A0D9E83F5359565C68009E198373978DAFE956E08911733DB709B1 |
| 657 | 86DD4DC8650A64203924D813D51EABA5EC504A1608C3F7D245C60F |
| 658 | DA99F03708C2B934E8C010A49C4A910417DFC63F7242EFE866A93E |
| 659 | C851A72E325099D190C1F1B949AB4647DD83E41BE61D3855C20AB5 |
| 660 | 3EB5781E8709C840A6D2944AB06B07A8911DBF7DA662BF8CB79127 |
| 661 | CE675D8A801604347C619606B412D4F78B22C65DEDDOAB79A1B28A |
| 662 | 68828B8DE1C1CFEB9B23A2249122F83DDE4761BB87B2277B182219 |
| 663 | 9EB128C58D3F041F387C588E60D1CFA092A8B2E69671A34A77753B |
| 664 | CE828354070C74E1248203F7E4AF87785CC9124A7F00BD90E45071 |
| 665 | 5310806ED6F4ACAD20BA398545B593370FEBD1B03CF4DB8991AA81 |
| 666 | 48EC44289374C24161A8B95A73B15C3D8DBE60FE8F7C982741ASE3 |
| 667 | 7136C301DACCD9B98308614BF72E8F69517EA28A50DF835C8C2EAC |
| 668 | 81B178A42243364D44D794A8A943D9AF5F5B4D2CA3005DCFBA6642 |
| 669 | 2A20084E6A111FD80F53C64A156A1EC90BB6C5D9960BAE5E1D8D48 |
| 670 | 814A4C7EA58FE1C2137A920A055F45B06901AB43AF28178999F35B |
| 671 | 249C0639E929882A15064EA5760C1D437FE44A5DF1262AAE40C6E6 |
| 672 | 130C5E19C880A9E2A98F24C589C500C11BEAA5457ADB436B785377 |
| 673 | A0D00D516CCDF9139E11C1084B953E0266DBA2D283EDD4EF2CA72B |
| 674 | 054C282F264200FC13DB4706B3D2C3C88D6B891BDCDFB70D53B0A7 |
| 675 | 12D78E04CDC8A985A7B6A81C82C2688C3728DEE7B845847DBD0B1C |
| 676 | AB09A115D3B8D0D84BA70D4FEB0CC5E378D48DA84DF91C31EEC31F |
| 677 | CB981ED702F923183696C9180C619A6FED4307AC27C9B7CA293B52 |
| 678 | ECF0509ECBA6C100508E92837864FD946478A4793F44653D91A95B |
| 679 | 28B4A9FA175632D99C480B8FC02AC38122461CDE78C26496FEE6B5 |
| 680 | AC884728C082AD390076733F630B6AF740D2079C0ABF1A8F63DD25 |
| 681 | 78EB052B54D5191226422718F62BA9A2CB6E86DF848B823391D7CA |
| 682 | 4321F43002A436487FEA2871087DB86A32ED075281E40A46DB723F |
| 683 | A0F13A406C6AAE805248FAB61E78B719287E897EF1E91D0274D8A7 |
| 684 | 9D1585C9048208E3EDD3C3344277AA4920CAB301C722965A777B6B |
| 685 | BB84C8CB5D1C8DFC60E140B96862CFA4A451FDB75BB48425DA499B |
| 686 | AAAEC796CB6099480103B8B1E630DC5EF018F6A3C02A9E95ED3B83 |
| 687 | 21AB1BB413826255B9314E42C144D670A0B6B17300EDFC762D027E |
| 688 | 0E6110D0E426850F5E3851BA08B36E66C9E62913577585BC348777 |

(continued)

| Index | Midamble Sequence |
|-------|-------------------|
| 689 | 06838D0C1248831667A0E465FE8DEE5816DBCB0CEA90EA350AF2EE |
| 690 | C3FB066E08AB6E26C030A8099448A65D2318FE03539F879BA4A7B2 |
| 691 | 96333DB450A38444A0605D863A84034EAFEB3B37088BEFB3074026 |
| 692 | D297B391810678141B870DA98C61370F5AA0914A9B6175CFB007B7 |
| 693 | 2787E8E2D5854171C2CC55161035A76ECF8E12EA0557B8A42FC7AE |
| 694 | 5D9E43F8C9F7B21020C42E68F300ADB149F3DAFD23409FB71519F9 |
| 695 | 863E9034124C61ACC9E1382842D71D94178860555F8F4E26906F6E |
| 696 | 0DCE30028753C37D0863363DA86FD67056E4AC8A65A2A49926A9F9 |
| 697 | 933AD01DBA1F81C60F024A0D210B79EAF80A1C98E4A7C2B7D1562C |
| 698 | 4C86ED10B0898A294C63E1211BDA582956A88F0DEA0801D47EF589 |
| 699 | 154FAE74BA333A10BE4051C429F278B7D3C9B80E94B202C5EE532C |
| 700 | 93B31B7061D12D002FBA50B828190E781CE650096D95D065F771E9 |
| 701 | 548117309489806174A22EBEF4E5A33E850AB586DE642A1E72CF66 |
| 702 | 02917E0976CE5CAB81314AAAF0892E22221B9D7270CC0FE7CBCCB7 |
| 703 | 81653B324709C9896132195C9CF11A5D22947A407E66FAF571D425 |
| 704 | 06CFC8C48B82A082A85F48B1BCA23640334A9F9DACEA33513B9EF1 |
| 705 | 32107009B54FDACEA69ED31098C10765E825D1B37A4AAE083BF5E3 |
| 706 | C5F20056FBAB106293B8B4C4D04D38D8084D9825D8EF55D9949658 |
| 707 | 6730244091CCF0CAF515610E58430F8D249FC03C79031B925453B3 |
| 708 | 1BC1A6974B5A3108886E99D61086C25076B50C11F42AAAE7A6E2E3 |
| 709 | F2443D822CE43C91C753A0E8129416DC76FBBB99AD9B352F402115 |
| 710 | C112531423FC1F4283D6E23907A90CE59BB560D6CEA7873E00C14E |
| 711 | 70EE10D46A238D64A99E6C88B2AF5C5A8D88520FD28B271E469ED2 |
| 712 | 10A5492841C7DCC9C368B5550747D9C728657817FE58F808CF5FC0 |
| 713 | 396DC53A05909A8154A4B030FB8CA590FDC4631DFF502D7863B68F |
| 714 | 65D04344F554FE0A6FA4A40B0666F37AD0C473928697110AF8CD7A |
| 715 | 07290C822FC0E95BD38583343D882248C6466DFFA9C68245FCAA51 |
| 716 | 1949DEC4121FC14301808CEF44B80B93176234E53D06815E49A3AD |
| 717 | 08400B6C690F970860FACCB1CEF3D50685A83F8E97C44ECAB1DE2C |
| 718 | B91A304A94277008EE21BDB834A6EC0E02F7A638FE85C27F6A9914 |
| 719 | 17D098FA3610739BCC081359D0AB4808A816B67DE3CADBA16F8750 |
| 720 | F4CC4544A1A1C5383817FD0D04140C4E033DCEDC1FE768FB6DA50B |
| 721 | 842B441C797D0D221746634355C51E07EEDD067EBE01650AB860AD |
| 722 | 892B679AA4B381A04998BDCCDE1C41FF208B8F1ABF4DA49072BF0C |
| 723 | 0F419D24D206919BF462448262FD79CB5E808F045D58C3B4564763 |
| 724 | 60A11BE046B16AB40D669953717075E22EFC7973BB86D10841DD6D |
| 725 | B6E30C27276C4828249A90CA7665D77C0F63CB39FA80680B83BB48 |
| 726 | 408177BD8CEA545FC63952E30023B5B069A27B26C6D5D599DA7641 |

(continued)

| Index | Midamble Sequence |
|---|---|
| 727 | C825730B220646F53C93E5483C4C0A7EFBBBE9E5050CB2D00E5C0C |
| 728 | 507B86E1278822A1454151005EF6632B6F9C93B8101A32A3D27B1E |
| 729 | 0DF9002E448C241D11EBB2635A70857B3C465DF1545540E788D68E |
| 730 | 4E86E4B0D5211276DC92C81AAACEAC1B2040E90A7392B9BF5A3E3E |
| 731 | 06985DE250A689901181CBCA96F50732DBDBF014CB176B2CECAC68 |
| 732 | AD14004298D589838E91F6FA9082E632910F5804DDC35F15A7A6DD |
| 733 | 2403D38163BBAA04E61CF22DA3A2D47666D5B5041 B2491FB21A899 |
| 734 | A4B519BE31F48A197100014FF79BA3B20C978C55C5D12CD93335BB |
| 735 | 2C995EC35553A6F38822A090AF94248BC86F0319ESFEF8879F4E51 |
| 736 | 15D918307C3C1013 A42DD4CAB427196CF847491ED8B0328717C655 |
| 737 | E031A96CA406C2D7E43C011AFCA743180E9CB1B8F6CDD8275C68BB |
| 738 | 62831C4D62D37CD7123845ABA247247C5EA9BF3F65A040686B4992 |
| 739 | B7ABB2C1A0B311149604A33651990CA198B2AEECC23D0A53DFB8B4 |
| 740 | 33A0D6AF2F5071D810BAC7514209885F364C07A46ADDFD3D683658 |
| 741 | 2D39E94D3A84A10E80E1BDF1820E81B8D9C6DB50BB00E5D55A8CB6 |
| 742 | 238A084AE4484499A45881D3E542F87684E0BBBAFED4B6011E3258 |
| 743 | E5C4D1DED3308042A646807A18E8BED05B8492A6ADFD8E6AD5D244 |
| 744 | 01D1BEC7D09847172919491CA284BC593178DD6B28B2EF4848564C |
| 745 | CBD8462BBF9610604681C11664B2CF2C824B3F44B3EF102AA80DE9 |
| 746 | 10493ED2C7EC0184F1203A01FA9C9156C5C6FB16D44FA988AD7C5C |
| 747 | A104BC7D4802020291F3267A9C739687A3EA1338E030E98451DBAD |
| 748 | 3A160BEC40B4A18B49DAEE70C96A2DA1BB63617BC95787462A4338 |
| 749 | 1211BF41AB2E2C78CA22B81E664642C4682DB43EDD81EF73E61574 |
| 750 | EF05618F93488CA2E0441C84511BD334B50A0D3F5E75DE894E11B1 |
| 751 | 66E1F6105448E93146B02AD2A053E4747401A0A6E70FD573935E12 |
| 752 | 37829B487B0EF000F3451B88CD8297DDB57F7C1361AD5EB10A00CB |
| 753 | 511721F48301DC4399170EEAD74C0DCD56D129920C97F248A527D7 |
| 754 | 57B9B2CC84739401B08686255D02AA2169BC9103CSD9E576583C7D |
| 755 | D4934A7DA5C64250611E6955088E0D33634E8318DD6323CF4AB25F |
| 756 | 23999D4D888BE658182C2C308E161694B8A01E32D42B501F752FE6 |
| 757 | A811CD320021AE00C60BCFD3FA9581ECD987ECC6B0596730B2E217 |
| 758 | 38E128F6ACF3AC2471228F96490286B375FDF3AB97A4E80AC26C6C |
| 759 | 06AE362802F8463D299383A31131D0DAC21CB5E28142614D135DED |
| 760 | A4DCF67A3E25D007A011216B98B0407DF8B2E965A89C568A733678 |
| 761 | 0241F43E696C7E69FA5118199D0DB8EB4D810E2AAB8E5039D3B556 |
| 762 | F0C54203982BB21C0BF3CE21892F4AA30758D0AFA48666E2FD651D |
| 763 | 97323748C5743205F0E8F1BC004AB2D92E3CB2217F42D0BC5DF94F |
| 764 | 08C24B1541B01DB80699BB5063B9E2884F5B5FCE0C74D529DD122B |

(continued)

| Index | Midamble Sequence |
|-------|-------------------|
| 765 | 19CD6585F45429508CAB72A47E828CD4D5BAE92674E316249C2A7F |
| 766 | 0C211A917F4642D22C857874D21498EB54FC8CAB7F2D0C73BFE413 |
| 767 | 8ECA0B8BF5CB010D0C05AC3240A9B9876571FE3D3B83C02546C9C6 |

Table 4 $N_{FFT}$ =1024/2048/, $N_{Tx}$ = 2/4,Length=432

| Index | Midamble Sequence |
|---|---|
| 0 | B2D64D68A682782402AB337341495960E3F0BC7F63D6AF372CE21CE190901D3765E37D8<br>D76A9738D82A080FF588F150C612BBAA09B12 |
| 1 | 255612161CEB2A9B784F5F050B74ECC2815CC5F84E41A06D589AECA108E16068910FA5<br>B52F2F544D5C7412DF2335B4D108F74AFE4944 |
| 2 | 19EFF912BAA5E8E56FDA23C90A26E7B0B4FA80C1B40004D653E02656135D29A278C40<br>E343E25250DEFD93612450353BD649B30E2712E |
| 3 | 7F1BA1B749F7C7267E06259253F981D45211CF43ACA74620221485D851C705DC8E82930<br>DEA66EF42E99E7AB234205036394CBBCA8E9B |
| 4 | 96209A07E481F069F8A50C29798AF8E168F72744F0BEC9C415A924683A72D678110D83E<br>C939EAA221A37961E142A80616AE71D09E0F5 |
| 5 | D63C233340FCAEE670426AAB1C206A13B927DD7771841A4900B0353A66A2958619924C<br>528ACE87B21BB53275E015DE1342E1E30263E9 |
| 6 | D9E8F8E86172B88B17568102666B0845947C6E33B3D4A48E308EEB48F89798A02E8436A<br>526B697FE0C39AED110429BC9B82AD278D574 |
| 7 | 8D2F5A2500686CFCA373196E09E0A455DFBE4DAD249E4B918B505085462BF5C4CD0A1<br>4C2B825DB1C2EE690659F14A3DF3C9A8AFC32D2 |
| 8 | 0ED524338230186D0BB7E20EAC61303E77A1B2A1201825D6A2BE9D54D27C741C21FB0<br>A94562EA11DE4A4CC6EC5EA1C1AE8C4F98B4C35 |
| 9 | 7D83270D48D7C840A80AE1A25D3EBBDC7F0098A3391CA1DB422BD7243BCC43A9606<br>CE6403D0B1276468ACEE8DD34523B776126B321BB |
| 10 | 005EF3ABA2616B61B845DF1B6D356B957A5D2450A48504C63873914238166866115B3108<br>BB0FA7D7401B162D0706CD6D7C4E2ACA1C2CF |
| 11 | AB276A8494553308BC5F97BE0A2BEC548A58187E3DCBAA9CA8869024975C1A01741FB<br>711BB0B1B5B0C24E8D7F890A3C6848F6332F4A2 |
| 12 | 8EB0A1244C13EB223D6E6373EE0BDEC786C00AB369405741656C9653E183815FEC0883<br>E55AF8DC5094C3B243EE6CDF420952248709F4 |
| 13 | 9A8E0F9B8E89A235B8E50419407F3A29E1AD0DE8BC20A6934B0710E4C81EFA46CF612<br>A1F266C43188AFAB27F55D080934CC32973D2F5 |

| Index | Midamble Sequence |
|---|---|
| 14 | 6E05094EEA6171E53DAA3907CDA2D7EB050E181082FA37D88A9DF95110512BEC586BA 4A7A22F0C74C94B930E00C4E7FA05A8DACCF305 |
| 15 | 13179C6AB187DA8CDB1596FA8E5CB5B0E2B8254F307297D5A4B448C818882C3ADE94B 2076F2FCD2CC7E7100A53A800127A08573935E4 |
| 16 | 9EE4402CFF2FDD65FC8473B2BC5A47B45109C0CF0A8E89E019C7DA20143737CA65518 B3DE2362E5A1D8998F163A1355B7A92BC015604 |
| 17 | 45700C78B72C9ED7BF69016B72A7B6C09F288270BC289C926073011D002CCFC310F2A11 C59F9406BFEE7994297969A19F6448E0CE6A9 |
| 18 | 03867C118F71D06A335C9B7F20716C6AC7357CFB42074B397799894BA2E1092C9210E120 E1FE8DD9422F445EDF1FD1898DCC7032907E |
| 19 | 00329984331CF2C47287DD1F50839F897E4267C37D517679293C981397A7939E86933A3C A1546882B74E80E014FD35CCB417A1B9954B |
| 20 | 03AB35BEE3BD7008BA286AD5C083469758636F680E764B8E8A0185087F03C631C338278 2874EA12FBA51FD29B58D884AE8D927B9905C |
| 21 | 84A1E0F5D4E6994632290580C45D6336CFD66310D392DEAD0994E01406F7A0CD527CCF 054C39D20567D61C401B8E9C56A5DF4CD3069A |
| 22 | 804465CFD8ECBB21402D022852CA83B9DB1AE7413437DB65456F17D21F7518E8791960 E319A9D0C0C2B16C10B4578B0BD3DABA3CB20B |
| 23 | 778E8313E12D05612DB81C5F0429D064911A55DE556F690BBD9BCDA258002C5D38BB64 A8ED2159FB99542CE3E630E454F0225DB1BC5B |
| 24 | 1E88DCF081D1FACB9452967921DB2425ED6B9600018DAA3F4D560801224D4E048E3181 9446329A3EF9F7DD8BCFD032F7C85512B15BB1 |
| 25 | 64F32C7459A3E8F17745165CB4296FED52B6465D28A504B91208FAC4422A933CF4BF99C C8C371D4557C161D0B8B31AF73B9E9360CE42 |
| 26 | DAC4A66EE1589B51497BF85D13049A9C7859C2C14B62A7B027E9299DA26F2A1F1B638 AA0991ADF8310BD67936C82C10289F00AEFDE32 |
| 27 | 60D587099BE0E32D35E49704AFF8655015DE3503414CFAAC6763D69927E2EEF82A7DE4 8548B019EEDCFC58BA586286035024A1BB438D |

EP 2 453 623 A1

| Index | Midamble Sequence |
|---|---|
| 28 | CD536205AE90AA5B1E813ECCF1E0061D426066BDC451FF065D95A8648AA0F00CB04A C7C7E23AFACC347257C04ECA3A0D2CB13F0CAA55 |
| 29 | EB7E86CF44BF6386219C00AD27E602BE42DA9C6307C1A46A26CAD06B5DEDAF6D19A 62749A1CF440A422E501AED17199058D8AD188FA9 |
| 30 | C02DB414C1931604B7B1C31EB84A5096E46DE364D8B530F15CC2F5CC4186B83C778232 97F71EE0203E5F2992523A081C00359DBAF75F |
| 31 | 9257CC08057E6B112B5C2DD06079070293CB09754DF5AB3A8C66DE8FE92546AA2D6256 B948F9E7B1A80210141AE99E93B603D11E7415 |
| 32 | 7CAEE24E7707A38F35FA2681C57A6489B9CAC1050C0542A6C74420F17440A94242691F2 E2F09DFB05D2E9D9A7FA3232CAA923A31AAC2 |
| 33 | 8876C9F941C1038C8064CE96EA1EADDB00B205A66C1C1CA66FEA4E15B33DC09F7FA0 98D36021250586A4268823E5587E528AF4537A89 |
| 34 | 928EBA27458019C4C6A94C5EB7F32D6D8A85EB83ED07CB4DF60C325458BA2B12447A4 D5DF3DBF011079104F3F6581806198CB4F2CB13 |
| 35 | CEE0DBC35BF2E1721C88F514720D27A404C3585E0E686BE5D748EB287C805566F43C1D F8A0F6C710D66E60653E5BFA160CA5EA12ACC9 |
| 36 | D9F2CBDD8CD9D8914104FC77C03051485D14A60EADE398773766C5D08A6852C361C47 4AB41AA131005B9176D55D4F821C834FB225863 |
| 37 | 38D2D32841BBC27C8F6125A9598E647F9324452E7A9B31A6930CD1BC987037D60716E56 0C88D0B87E79492FD099E796569BB31013671 |
| 38 | A322615CFB38E5C6D3A5E46C1A60287CEAB0BC22D060841C4EAF40453A9EF6410028B E2367B8417BB541B4954B0426E0E6249F8DE806 |
| 39 | 8124E0747A11FF1A4B0B11025F704350E497CEBCF7A0C82FB9D6A2407B8238690E75CC 325EB799C1F26F463A98397AA02880EA775268 |
| 40 | 5519531B32F753C658612E6232C8A9531BE160BF1480F10B031BF56451E4CD7249FB909B 15DF04DCA502CA73C6EA5840613A5AA31A45 |
| 41 | 2D98F800493B814D25974D11D56AD28B6A3921045A1FCBA60EF0AC250172CC77B81F6F B4309B09B9B95ECD5120F474E1B1446AD07342 |

(continued)

| Index | Midamble Sequence |
|---|---|
| 42 | EA513CC22B631F288218569F9183A3A71AB67C6F3304D51EC1F4844B46D528A0DA2D5 AE38C36B0156A759BCC66DB008942046AEB6D26 |
| 43 | E17A9A61CB34296B395150D89B2126676A3AD802974D88DD6585724E26EAEE484CA5F5 20CC9050CE6F2BF955E84F97673A8C528408C1 |
| 44 | C65E8D2ED806641088D2A989AD547671880515526EF04862A4EEE7B330795C2AC4CF98 F10AE1FF3F21D164A7091065BA1A1811A1145A |
| 45 | 1EC23E66476C26A5F0381A879E3AC34236D7A8A72105FDEC40A4D5B2AF89D0E098910 5B48D0D57145C0B22B659CD1FF8225D6A15D707 |
| 46 | 87BC233897CE22D8A831724AF7290999F18EA1E2C36D4D135BE17473BF08591E4260DC 959DC92F7B9B4827011445D2C81A98F6635651 |
| 47 | 70C3547D149BD52CB78118796D29A04291EC8708A87F568580CB9E19D8644F51968D1B5 46EE63006E8259D9A87DC82E3363D818BA720 |
| 48 | 22F21C4DDC8D13E5E506EB619F4ADEF80297003852363A284ED9F3E7D2A3352F3C8072 348117168F49176CF1E088598691D9DC97D398 |
| 49 | 09B8534E0B7766BE92F594074297C1B41C7B3DD2445D03C189A8B24E3A1133C3878D9E DD4AE58610AF16C0073804CAB90DFF8BF21527 |
| 50 | 26E10C9090BC2B2B489CE74D3B21940267971EB719AD7E02EAC602F4AFC3B4C2218147 D0EF5B5089A81D3C61C3039B0C22E3F45C6607 |
| 51 | BA410AE019919F77D8D1493ABC11E7045D828AA930478BDCBC15A34D858804CE293E3 B95A755D6EA1906E2E4B3E5BE3854A459630C03 |
| 52 | CB0DD00D5794F7040C9289BCE9164A94F5CF775F7E78D0155C04E4128B43A8AD5F0D4 F60704026F23605FB26F20D03DEA86A217114EC |
| 53 | A138BDA4777C559C598221605C3436CD1F809A508976D50779DA226E20B0447B9041C60 A2DD8B6C4BD8E09154A3C1FC5AE3C6A0635C6 |
| 54 | A7F41705C14F1B327513510CE3BFCFA6DF8621DAAB50A480E45021A962247DC28DA9F 302329278624B4E33A8EE7E2951CC6EE6B18C13 |
| 55 | 65B30FB4141221CA4A9B8AE3CA6887D5CE594E9CFAC33BC1881B29DD9060F43E583A5 4A125F24F472E31904C66726C23FF1B2F7808D5 |

(continued)

| Index | Midamble Sequence |
|---|---|
| 56 | 2FD7869636816CC517F15560F4410A69C6A40240A36C2E94EC2E660EAB892436424750B ECDD7FF30A3A7A53C729478009619CAAC637E |
| 57 | 9BDABD0CD46D494A8F8C88732D0518DABA9920FF2FC0432A94D3708493248F0AFC33 C1003EC40C8D8B5CF89D3BCE906B2476AC7C6A99 |
| 58 | 40100C9D713121A86AE8B7BD7FA095449B16FAD39AC5CC780C85B7398DAE7A1165660 3454B8C7353B47FE89F4147FC010F34592A0296 |
| 59 | D204C031AC0DCD7826A086D68510E1BA28DA6957D47B098FACBDBC9508099573718C 74D768D5AE7E00C4811CCC444CB951FAF4E941EB |
| 60 | 9BD4847C0FEF4CE15B8171995B6400C32078B6230B9D13171E13ADFB5EC2681781079D B22BDAB4D24F7301D926CD3F4265A508040535 |
| 61 | 6406FE87C5A2B54977D5E8C2398554FBEA98A23191386D6A9A280B71576F10DC91F0E3 105B4A8522664C1225B74010395CED847DF1CE |
| 62 | 16E642DC070E745D49B25E0774362C5038981A6BB3B52501B6A334CCB14C462BB21B42 92AB8003F789579C562D5A388106BE6BE62B47 |
| 63 | 478E2552D032C23FE92D387B839648E8EEAC947C135042C9531F9398FC8F4CE737A9203 540C86484CE739D2AD4B079A067DA234FB563 |
| 64 | 5A302CD8C8F3C3C31E02C9ACD80430B5533BCE4714DC4600FDB65F9F06EB736A39170 ACCE16B925510F6A91B77AEB40E5C1005178FA0 |
| 65 | 250D8B7D8C6A4682148EA8B1BDAC84411A02F881D44F5BC32C37AF4C96633E0A35A3 D900D9DF4152746C9F6A728E07189E83E71D071B |
| 66 | BA4D62A980A255A9C01B512720126F4E7B6457C37C3A986F0B682E02E1CE01018EB565 6B0E9BCA4BBF4033FCD1818D0E9FA36A7E28A1 |
| 67 | EB10FE655E4527A5A8C529B3AAB28F5CC19282C1E8F4A5813F60420A37CBD314836CF E9CC374486DD28804FC82986D52138B95D232CB |
| 68 | CA10340818C2068E8BD95FE6A9A61DBDA89B63EAA0616C02DFC7A849298C9C3BC5C B2982FE011E7A2751DC0B160B5AD7EA05611CE08C |
| 69 | 0377CEDED55F3C262E20D636E60FD29CB04C2683594E65007285CD36F8164804DEADC7 0B95C413D155D1C15F2388412874F826073925 |

(continued)

| Index | Midamble Sequence |
|---|---|
| 70 | A488B088068E2D84F9C11CCAD623E26B4B1AF415D9F3E6714E2980CD19B8C3119D5285 C19F6C1106D9ED82F516007B2D5D76A0FE420A |
| 71 | 122438899A56552A68C490EEDCB3D89900FF270E1E4BC7E02FBC559A4EAF51C64032E7 E36934C2965BCE7A0F10EA592A636866FB4024 |
| 72 | FE11F4E973D2E5B0117C03D1149D7BD2810345C630AE0042ECB1F2934E2C3D38B76D25 2EC6648E81A472ACEF63CC59016B9863241697 |
| 73 | 8ECD336D94FA051FF1F4ACE93AB78139011196009090B50214D1FB50E729BC139157B55 7C5891C66090D2CB44197F3685E1D5506E1BB |
| 74 | 67122867E41C4B368AECABD1B884243657EB1836598F0CA76168B20148518D890AFF51E 7A6489A7521326E586AC45C07171554B2FBB0 |
| 75 | D280D37DC8409086FA97932429750124C1CC67AA53B370ED387DC52F2C331E1578A1D2 B0DC7F7C41DCCCC33DA6DD01008B570D5A4AEE |
| 76 | 719D09FE542A030142927587A367C8139AA99094C3FC0E38B2C26B1B43A0724169B96D4 004A99ABA6A961918F4B9756DA6F99BD9429D |
| 77 | 54046F09398CD47E733AC1A8A9ED30B34DD6807C89D6789944C7AE4C0D98814DDB95C 190C6A858115BB6BE8E9B7887321623DA872FD0 |
| 78 | 15B1C40877E9E79053B0EEEAE18A2C5C0400D3B0987A08CCF4DE569108534772BD81F8 4F711432422FC6F77096142853DB924D2AB9AE |
| 79 | 859F1E4EA72493EB23B3F09E9C5843CEC82AC4C3335895EA53023F2BFBE539430822EC 7A5FC87D100CDD0D1E309CAC0DD288A49A1BCD |
| 80 | F8B959E5D605640ADEBE26C8D88E4F58AE288D1D710F8402E40D56B26425AE41BF239 C01345CF0B9B5EA7C3CF30CFD7C9164312091A3 |
| 81 | FC38AB43D60CD47893DFB7A30122DB8A88981D84A42601BD7C8E316768BE2674971B6 448A084E143698352DA2C1A105C6D2C97D7E69B |
| 82 | E627C0F5E3294F8DAC17A7A3571D0930CE8C584CC263EB08F7020CE9854331507592A18 130E309E971FBF62625E768A019148491FE18 |
| 83 | F1BD34DC6322ACA542815879C85DB06370F24BB034E2A8E08618FAC06EFA200C4E565E 9A11A0FACDC9394BF33598E6AD5201330D5906 |

| Index | Midamble Sequence |
|---|---|
| 84 | 920959D8D5948EE1D238CCDB2E9E79157063C19BE56C82417E8437F68713C3220702656A0ECA45E2B2510903C3C420B1B5CD8E1D49C6 |
| 85 | 0C94D5C8550D96354FEC5473405A09C64FB11E7223ABD60992146A3EA6CF0710589A9F611B6FAB67DB948153F879E9841240381545B0 |
| 86 | EE556218E0B89BFD7B5820B41AC635854B6141AE092BE1C831320457685F8488DC220D6187EB031B1A9A2B4A25FFC77D0EB130AF38E0 |
| 87 | D7FC5242378415355B12E09920571E98FBEC700EC2C5F53225CF1BF27DE33B0201B19E8210A8069B6185C1A6B10799121FD46354713C |
| 88 | 8A30089772669530947C22140DFF5CCD3F6CABC40A65B0571CE24FEC5E9C05D7594D04F996A55CCC4B150F3AF93C2833C21B83A58E25 |
| 89 | 504C1C95AFD3E84EE2047389C9B250E8B3807C7C761A66A2DFD003E6D3AEDA17055DA88186E31628E2FAA69FCE0A68CA3032816746EC |
| 90 | 30897A7D7C39587AC984312D0CCC9C97760D222AF513B444D6130A4C2EB3035522E2D045F8E648094948FFCB8FB29BD3475402673F81 |
| 91 | 357254A6DF641B079AF18F0013E279EC7A4FA1A7A668BA0668A69942282474742772EFFBD2B1AAA1D7E35E4E231DD494F049228A498A |
| 92 | BA65B66F13CD21D4AF0AC630991AF5ED64F15204173C79481294A3E3A3B0722A5DC192EF6972CCE7E3340C3FA003AE81422897342890 |
| 93 | A0729722601ADA64CE6609907C98BF55BC3CF910DF608630CE848DC219FD274DA882027B7A2A0DC74B635705A8266BEE2D5706096891 |
| 94 | 4452A1DF660E345360EED1635EBC8EC27EA7996C1C913F44B08E48C18819352C855C3CDFE4E50D6EF63C8B0DC012F5928283DDE37D5A |
| 95 | 1ADA557BC09A498FE749E41BB288B89362983C3E573D1B0231228E176A008A9921C68D3AD3DBB1109E7594E308509383E092EFEAAF47 |
| 96 | CAD89E404506D600E703B190967E87CEEBCAA1D61BEE3D6CD38E06251C9280C22BA1DEF9C9BC84B0B1F249999BC757911A1E367BB010 |

EP 2 453 623 A1

| Index | Midamble Sequence |
|---|---|
| 97 | F184F4651806888F0CE79A3C4B44B25042F5A1072EBD69D2760BF570C7910536FC00B03 89E3E194D9B1028568FCA80915F8A5934A8CA |
| 98 | 46BC6D967331EDA405504AA51A084E91C31B1B6264DDFED49B4FB0D46C40C7D74866 F8306E943D87C23B95010EBD77B8B7E0132443C2 |
| 99 | 086E830599F7052DA000C4D25F0DFA2E8C5A37CC97C996E3F4CA2E9538D445028E3DD 413CC4A1063942263046D5C678BE07EB15EA022 |
| 100 | 90999313284F118493F7B7CF65D20F5690AD5534D334A1802CFA2E3D7A81DAE0692447E 4ED2C86D783118A3CD00902774CCDF61AB971 |
| 101 | 1273EF20BA923A99602B095E673A084F047165E780DD975D52E1E64F217E489EAB26B9D 5FA06A1C04328B333508E34219E63CE23A766 |
| 102 | 4DBBCF76159833A1BC587856EA61C33089B1CEDBD0E40D01CB55034D6C84054D60217 54E1B7549665C2BC7DD992BA4B7A52E8A018574 |
| 103 | 4115BC9A9A072A57BE6CB1426825053A7A9F23118706B4C579ED5C7827B56C0FB34FE1 7A695985985D3098C6E0210B98C2DBD744918B |
| 104 | 229912928B46C25C3DDA8DC75E62C73C658BEB90861C531422A5AFC1E06B00E1DD653 33D4A209AA204A67A6C9BAC6F0D57E874FC4C6A |
| 105 | B4712DDC10BE7AB2112B5F24F4C56D41F98E20341B5CD0A855A3095605CBA674510B8 31B4B8505C89664384E7A2B62C1FDC18DF07D92 |
| 106 | A3D199A78FD229CBA91388F748A914C07F0D7C1F5797F4C502402095D67AA4239BC4A1 E33ED8129CE0ACE912E16051C0B4CC3CEC98B1 |
| 107 | D6A24740E4CE8FB26A26211E1208EF015F434BD31C8DB702A22D8DCD31EE1B00C5E25 50E75AC4E852D4156D64FD545AFA01114B8D93C |
| 108 | FBA0938C441AC85730C8CFC1BD94D19E852D745AAC4B86909C2676D72CD148D19004 BE5AB3565F052D40FB34F28C8860049E97ECC236 |
| 109 | F9AC319FBC837B07BF341302A4520F4169004546283277DB2C92227CFC19622A9AB3100 DB8E75858312CC6DCBDC5314FC0C8B40B4092 |
| 110 | 5C483067BFE11D463C456ED4A396A2428C99874E3B79A5D73A3C3A8C2AA441B5B0299 FFD1FC6084CC5160757626364BD8B0E24D039EC |

| Index | Midamble Sequence |
|---|---|
| 111 | 20F20E71C7B8E5DE670C22841F96E88DD41DD2569392D661EA8332D9028164814B4405E 1DE47104E53883617E0F7CD8BB1FE2485FFB0 |
| 112 | 2F9FC5B51E1940C4DD8188A9B68811845C754F070F0F4509735BFB9427CA481B4C0EA61 F0CB1628A00F754B66F768A0370D6D2694A9F |
| 113 | CBD20F6540197B26F2D297A108C46BC8C3C81140EC8E5830F9BAA2556A29B262B0A616 6F9220ED732ADA8A5A2F21B30312581F437D56 |
| 114 | F8E821893C08904BEF1C5D4C8B7A5320A73262701A4DA375A887709F1DA5A092AC07D B106F20CBAA8873A0544C17AD26A93ABCAD1625 |
| 115 | 28A4482D7F44F5931C5935727CE3E13DA0D0C4353211BA9415F3C854C9D117D4C5604E2 858573FC9921AAE4057859EB6852884827D3E |
| 116 | 9F496628DE7FACDD86F6F94C5369D20A03404D2AD50C51387434A0D62C4C7A8262B41 DBCDCECEE2E4254DDBA5C260234C37AE4BD9154 |
| 117 | 7724FCA16A38800F24E15472604962B17997D53823133754BAFE0FC49390052C97CF63267 DBC8F8012240F02FCF38CC8B4605E13AA44A |
| 118 | F3128E88AC94F8EE2D3E2C73DE0311942C29222E4C6741852FE5D344C1D00CA27B032D 4BBD3246872993F9B82B27A5A15FB88DD327BE |
| 119 | 092C7BE069FCF083DA30B2BF435C506317328912B8490815BFAE78B518664DDE3D56F15 0222AC5365884E8E492D90A4A3347A1716273 |
| 120 | 603E2A8F6C94D778FC1FDA0968938C9912A102FF0428CE54C2FC6D81974EC0C64E305B 9C7BEB0318CE4178CA0187DE8A3A2A2FB5171C |
| 121 | 0E23411C4736968FD1EC13AA94959A9DD8E9067370EA603FDF0C11DD23DF3B0A92065 517218E526FA95B50AB8B4B30583F5059C394A7 |
| 122 | 10064537DF5DB18910BF02C74B8E008A46F46D2E374288E7CDBA61F6E8A79440D5FEC3 A3179DFA002241F44171A1221A88C0796909D7 |
| 123 | BCEA01B410DE6833CC846152C3BDB68558B04633B7F1832AEFE25200F2C7342B3631E0 0BAD443224B24EB2A4E89C75BD5C458AAA687A |
| 124 | A7C9CD2D6CE19EC9100CAE90390B5BE41DB979CCE628650D018B37674A6D474ED051 E1C7D14A77955CB07C827EB56164194B94164964 |

EP 2 453 623 A1

| Index | Midamble Sequence |
|---|---|
| 125 | A77E7552E54B69F4EA8F0BACA000E1B25812D5A82861A94DB48BCB69C8F1D3F2ADE1 14E698D056144FE11A2C6FD14807531EE9EC8460 |
| 126 | C2180280F31D81856F7B0C8BEAF0ECC98A0EA929595D9EF81C6B396A48C1EBA4440F4 C9B3769803A155AE2D77585D463786A67452165 |
| 127 | CB28ECE17BA213E45A7F1233FB4335AD402466281D899EE8A5AFA482AF30E192579811 708700000094FFE89C37BB74CE793D438BE5A6 |
| 128 | DE93B6E04FBA463720381DBA52D93C20B0026EA396065BEF3E6A8097269F05B6B54685 634A2750FC661980CEF8C51812612F0058FAB1 |
| 129 | 81B10486CF2D6FA008F0685F33C72B206809F7118641572A558B3F9690F1AE3B5A1A7441 0569E64884157A392581479B0B7BC4C38F3B |
| 130 | 0823AD9A47A89564BC8C6A38CE8BC3541C1D648B5C133699D849EFF603F14888C1AB7 2DECE0C857B6F35192DA0505BCE222DDA55FD30 |
| 131 | C3A57C2D60E4BD46ACA64FC28533CD9DE81AAB5FAC310AE0B2888BC71217D90FBA3 01847B82FFE5F32CCEA988A1DE9F40C363E0A2508 |
| 132 | 2C1889CC003440AC4941F6008C8D6A55F8E3C9115FB83F479E872E309B7EC35A58370C7 DED131754A258D5ED7BA382D210C11535D663 |
| 133 | B43500E19945AE41899DD35FF87348BCB8487A270527B022EA4795ACC37CFA650A104A 6FA88A17EBF84345635E402B470F11498C6C68 |
| 134 | 99954B56C1E9F8A9BE0A184F82F0149AD14B326310D3F26AA3A454716BFC61A8816477 960229B832A446089EB2F03FBA74611E4B1456 |
| 135 | B7C0EC77FD5C4271E4B1D0D1A19015689E8247C710CAB939DE7C9ABA417A5AC88F4E 66065C32479ECF40E3000F9114BB8E5DB1B8621E |
| 136 | 86117B262F86977AE1D76F72E01A4DB40A2DDD0D2F4F8ADC099BD0A35B249D874CCA CBF0FC368FE33311ED12F888B00CBDD704220019 |
| 137 | 918A5505FC90DA096090FE6BAEC1C1B72FF890C6D81F640A24BEB22C9D062521C1C1B 1D7780B518E6A43006691B51EE7995CBE40C137 |
| 138 | 6E06899D84C2F442FAF0AA92F29C4AD8D8151E78E1E68F4884911E23C411109D1886655 DFF642752786E0915CEF2705F9209E34027D1 |

| Index | Midamble Sequence |
|---|---|
| 139 | 55BC8B9090618CF10A6283A2502FEB27881F23FB3487CE3655989BBD69F5A38FCC9E690AA1C861720C9B381D848C22055E7484F62A6A |
| 140 | 559E3B94E9824AAD0512289875CCD102CE8F354AE422640EF116A7F30DC76746A04D87A6A4C2D0F81ED9A1AFA2677F9888AEA00AAB32 |
| 141 | FBB64865FCDF0C1FF4163B994FB86DA7278A27D11ACBF00216582AF5DB43609B1780F338AD2200CC162E4F8A23A1296C5EC54C4C4AB7 |
| 142 | AD4E2AB4560195BE43F238A92B404B965B3EA98C10683832805AC3F90C3F3E061C0D2DC2443464C68E3CC17E84DC429DB9763B01349E |
| 143 | B9006F2E7C6FB1AC1CD01A99FED89C4382C32830DA0ABD57B389A517AE681FBFC847204612356545C14C4E24B3B501419BA4950518EA |
| 144 | 936D40FCAF52B53E92B2B64F44890844A28FDB833C904644264BCE3A093468E1892F2B15E0555869FC72569831EE489ACFF65420E15F |
| 145 | 46AFDE69E96768E37D02291383DAE092A78D10904FA0D18D985A4341B50066D33D4A1F7AD5C822642AFEA9BC522239CF3F003F819067 |
| 146 | 1817426B3EA648FF81CAB46723CC6E831BC980A6897A41BC6B3170EBBD4AA48008E26042D29124FE44F3E37F8A1AA1C0F17AFF537192 |
| 147 | A796160729EC35F80C6A34530A01828667F3AB3B58DA20514944C06E16ABA45A8C467C72F19B401579C09FD63001C9F9176784AE2C68 |
| 148 | 6C7834F99384D511E3E125B14DEC5B92185423D5C74C6E98990A4E14D0021A0147F80220732AE68FDAED4D10BFCDF2ACB72AA9837296 |
| 149 | 04808FBF3597B792C3CC041A9AF47980293F5DBACBA8E2BA1753C2F856C35AA19172C13429DCFC29A3F178824ED914470D86DEC6F603 |
| 150 | EE8BFDCF3022E20DF6876252A68856401697B14503F84CDFAE2854E1AB6E16B944AEC02471DBBBB8AE883AC3E0596C54D29BC13A59C6 |
| 151 | A01F4748FD87C52204251B0A59431899DABD992BC2EFE49580665D969FC2962B78105D53FB5E8E0082A69910FAE306891C6C52C5D298 |
| 152 | 050620FDA66094ABE8590BF8D639044CA11B4E6F6C5768DDA8223A44DB485613C3A2CCE81BFC7B84C55A9A6DB0C9C8C06686649A834F |

(continued)

| Index | Midamble Sequence |
|---|---|
| 153 | AD98A8D18199E8C29FBC0329290D2546A5861D200EBD61EBA2FEC7406592FB0CC31F2 6AC03E76E1101F23E333D9110BC9E26EC965E05 |
| 154 | 853B9945E6541C2B2B6AF23BF9119D8F2052479C87B8866DD340B70BEFD1A61AD20A57 975F06AF0164CC864D9C93949001444F752762 |
| 155 | B8365635E26294217005836EFB121046AB9A0353868723E04DCE8D17177A8DC7FC819A6 D0D2F2049F31B60A391E954C11B107D063D50 |
| 156 | 059F9300482911149B2F638AF08BE38D11C6869BD30BBEE49D4DA865D6A9E7DE491456 6F32213341580F5C08F0A4871C3042BD8EBD13 |
| 157 | A27A8CDE1B132212C20562446E70FF39B119754EF860CFBA7E568A85A21DDFC803FCD 13848FAD4DF4B68E4AB62D8D6D368F421A98044 |
| 158 | 2E2EE9FCB721328D3597D044F15D3471B0152F5CA4D13839B6720787206B40322B45140E FA51CF0BF70BB72CE83A24F4AD7A409FA251 |
| 159 | 4F058060DB14F8FA22321AF14DAC618B3B6FB480625EA0C82DA5286208AA1E73F6F43 D7DEE016889DAFCA5A91FE98AC50DC188F91845 |
| 160 | 427638A400E32A3D609453B0BC11E65B8AED2DD1E726C8C31B5FA5F43CC1157AA5051 6105E855A908CD73C929A609FC4029F55474CEF |
| 161 | AD348F3332DE850B34271BB2BC7BD8B8E89F5250906DF2B4E0600D9801BEAA3C2E7E C9C399B9D28012C206179D042B716EB3B1C680F6 |
| 162 | 44CC20561E4B8853222FD89833A10D4B9C52CB7DB173D9E307C053AA405A7325E8BE4 D066395A1369535D4C1E458541F8C32E717A5E7 |
| 163 | 908F15581503E2EA0D41766E7C2E05041DEFB7C1A2C2D7B82D70CB42CCE91347D901C 7DEC15BCB090350D268CC43704CC5D990EF2297 |
| 164 | 8081BAE42CA62F7E695B70FCE866880A6892090AF585682AA35E7EA45D38F506B004AB F194D6C306B436767A445D0FD3AC27A09432C8 |
| 165 | D70C8E991B0CD38AA851D01DFB4272E8FCA03C33E801BE566A464693A99D40B062C23 2AD8F65C6F2439CD910D34F6160F6AB2C366120 |
| 166 | ACFEE84189B31B815E70BFCF3E000CB6324B1703BF7098EC90800B53EF50A9D21ED63 A58BC1E5C7605485B0C51513AA613A28A53B27A |
| 167 | 9AAE3EEA24770BA29621702969CDEE965179A22C406676911AF1B4C7C084D1765E26C0 F38D43453E5188E621F36BE6B4031F4ED7D614 |

81

(continued)

| Index | Midamble Sequence |
|---|---|
| 168 | 894834A7910F4D0111224B68CF07C89488FEE70147FB9DD7CE065729C56025FC827ED57E06222DE2F2EECA24771E1AA34BE8740D4C2C |
| 169 | 2A96425458FEDFA4F34F201A93E5863BE710999E485098894C733E8393E01402D01F2738D4A8035FF2FD2A4B834FD8C3B866259AEE81 |
| 170 | FF65C4E21248A3556F7D0CD0722AEE0A652D4EE6085024C69E272BA9166E02BA109CDE10CE7CC9C3C86641F27C60A10B470FC96E3E13 |
| 171 | 7820602A50D089BD49D36EC61EF4519A7D03EF34A001D1317551DA94FC8F40850FDDA5ECB8CB0529750A2A49432ECDBC4531112DC291 |
| 172 | 3E6990E8134D650F2AB38879000E1CB3B748683AD73B6E2BCE7A5A221EEA9D4AF792D1233E40B140533448426D7C32337BC44A4D85E5 |
| 173 | 03873BCE7C6BAC2F6347B2799BA42F8972D71736A3803541A22C5A6D1F2F20C4CB06F44BEAC0C7D0A3F98A18787F2D3B24D2D10815AA |
| 174 | 0D8E155124EE8AC3C8F8CCCBC7A8CE1B2EBA2498044496B1B517758A58545671E45CAB6E96414BF080A063D9EB10D6C089506A437EB3 |
| 175 | 507DFDD62C1029612A72615115A0D834089EEBF65891DEAB8AA54BE795C17A666135ACC5F61C302FD1548519E2E59F4278F584A0E152 |
| 176 | 5526D3E0D3E4CC252D8A392C6B5A15CB6943375F082A25ABC1300696D9054C6A7676FE197AFA0E75C2A962086547746109A7FE189A17 |
| 177 | 645F7EDA97C30041DF46B1BA32C8DF87838A267126F8096248465169DB7EC63437A3B5821773382D37834A2167B51D855746F820AC44 |
| 178 | A82F5CC70C8E6253EE21629241F1D4254589D93453B9DD96A23645C061CF02CA4CF60F7AA18C02DE879496051E669DF94C6969424EF4 |
| 179 | 905776E878D31FD0AE5DB45921E12D097BAE626353C563AE289E04F81B2C099E7E87F418A42E8E13C1946135CE0C94CE4E6B812D512F |
| 180 | 769B57AC6A6C1136D6AE909885A3AE4788F5A280650885AC0D99D58A66BC50E9FD44DEA66F58448665BA9AB800AF1D0F316D5C309259 |
| 181 | D450302B993F1454A7AB063D36AF340791F99E4125332181A7139BCC0BA7812EDAB7748105403C8996233D86CA53370E57599D5168D8 |
| 182 | 2B67266430DDAAC0818B0E998274557A4B979B8B22B54CEA28E41A0F2B26796A0DD3607AAC4328ACB9B76D19CE31D11C0CC01E1B5D40 |

EP 2 453 623 A1

| Index | Midamble Sequence |
|---|---|
| 183 | 56809087949A67174E6698638D0D4166E85F79794032F77DEE76F8B95C9C52BDCA183F00 13E0884D4EB0D70B7858AFBD2EF33C18581F |
| 184 | E0AA97E4CCB46F443A4DA6632A61944BCD6D846BD21050CE1B8E14A18002791A02BE 4548F4392D9AF9F94B4E8562C421CCDC16C9BB01 |
| 185 | 374401813ADFA39FB344851F33D00F37AAC3922916B3ABCA35E188D20128A963DAB37 5D4EA8553164140ADEC4DEF13D964767E225EE2 |
| 186 | A2479204568CEF26C172420A4EBBC1630B6B1B5341C22E2E5C3AF7C5ADCBEAD182B0 184A6A1C17688367AD41859F42DAA3723EC1469D |
| 187 | 07655046CE732472784F913926F4B1CA28C41AD68D19FE5E9C2CDB60BE2878B5BCC955 634D61D360E1FECAC50410E242182415BF758D |
| 188 | 5DFDEACA080E1AC2791652874FA960252FAB3C34F417E432029CD120E7D9C1224E8357 04F94C5A2D19CC561D51B947FF0B54BB634912 |
| 189 | D44A6202F117C97B122EBF71CFAB5B84904A7708C44ACF003A76145ADBF8FE0C440F9 B109245ADA0A80C371E28D0306A580F730E6437 |
| 190 | F6243823951DCE0092E4C5428C9693AFFFD67982383E2A6C63025ECA9A936834490CF43 0B74082721857E6F5F310C095EAC4DF8673D0 |
| 191 | A6B7F81B80E89E026636D4E4B8C5350C61B2AC28D7E0F3C88A4AC7D9E2880DDA04D9 23732BD6226C6D74309AC50A17AEA7D14F12908A |
| 192 | 9F853D3C0973638C529A5D656CD612B18A499483F2EAE152CA80682204E92DF14E027F C8DE8D28D21514C2461F42C2BBBCBAF7781A39 |
| 193 | 8057DE34FDAF801C4CDE4DF84AD128866652EA1C8B1A33A030B78FA894127B26D077D FC2E251C152C8296516BD0918B94EC604BC3130 |
| 194 | 3D0EF3BF1B249A682EE104485B88E1BE5AACA9A4E281FCB8A1943538CF91B3EA4F630 3109D643CE429E7104DA80B3F1CDE290EDF8588 |
| 195 | 1DB4CCB03082566E4DBC47F0BC8DA17741405A3C20937D063DA5AAB7031C7AE84486 662BD00789C4A2D245383BAE111E77C1FEF52C98 |
| 196 | 3524C04E2AE78F602A6B39010122871486FD19F1BEF5BBD0164C2968523CDAD8B37C72 D52BB08FCFB1970917E880A6180C3373C47609 |
| 197 | 905C732F70B382ED32624877317CCE313CD64D6A050FFD514A4E004ADE3B900C08347B 26EDC7E73BA7394199E7848B8C1D1AA750A570 |

EP 2 453 623 A1

| Index | Midamble Sequence |
|---|---|
| 198 | 06AE556C234C8C2C8361934C2A0DC35F41606A1AD81F7DDED11AE74E60D0F7AD91D9 EC1C697DB1424A903CB9D158B565019FE4C20DA2 |
| 199 | 71A6C76C43D1D92F4F4808695CE520991DE8CF4D8E10AB7F24A0866A2A3BCF8D31261 58CD1E9DCB0628A7E07A1F3A18EB1690A7C163C |
| 200 | F4143AC4CEF20177A5478B3BF71624B84E40E8B9EAC808D5441229202491E757FCF911C DC83E44B145C02836082F229E2AFAA4B6D6C4 |
| 201 | 8F9A725DF04A3FB9074299FDAEE625AC800467C4743C3B0B51325FB4749EE535336E8B 340B402E5F6F868D94087AAA3BEA18C945CDCC |
| 202 | 9F66E8363640EA516EC877A4E450005F311CDC43EF99A5207123C9C15AB17B531F80FF1 A14184C8192CBB4682D9E12D3DC947A7AB3CE |
| 203 | 90E7D518C6466471549913AC423EF1BD8AA0130F420FD3DB5848C70F530F86F9EC14DD A5E362AF242A1A2492431373732207645A00FE |
| 204 | F1C3B9529B5D2C2EEBEEC714AC3FAFA0262D2786C428655082024A64CCF84339B88B76 5F23B0AD589329BEAD80B114C2566B07AC7022 |
| 205 | 4B094B8438BAD6A48925554BE0DCC903EB3359A78CE36082C866F1D0080736ED03FB7 A698ABB38E0198B9E78FAC566D64A903F628034 |
| 206 | 88AF50618A4F25F68F3B2B9859DC0EF4F6F088D81207E36A404EB6824C8BB1BCD7B893 0D54618A11243C32E6F9E607D570550448FCC2 |
| 207 | BEDAE8EE3E7172254B06CC00CD40B3AD2256291B273D1298F79258725DA05C22911FD D44BB321F554138C44F5F27B9D0328754220A05 |
| 208 | D19656DF1622BDD0BC4C505CB8F67F0C06422C4AF6211FD3D10E3D02C8F4CF8A27B61 906E15548B9E5D9B7789257E65A28117A0E7A92 |
| 209 | 82DF4E24539F98D71A31417FB7BA26F68661D176571B0B183A809B9746C75FD5CB711C6 E09326CE12821765F3A1A743144D2C930802D |
| 210 | ACBC9C7FA5705CB315A1AB4034646852AA397D44B507BD16CBBE20D806D231A51CE C812CD2700A1D106C9CB1F1A1311E77EB753B435C |
| 211 | EC516302395B266A4E76475EEA0D0EB9E2E7D888382B0A8D2992E25C1D8EE0B2FFA1E D93C0A200A7464861AF176A051B1B5DFD72609D |
| 212 | 9B9783B14C02829B2280ABB9031724BB5E6D79B725AD6752372F2C71A271AC08DB2CC C56EE3270A681B517A80121CB3623C196FF84AC |

| Index | Midamble Sequence |
|---|---|
| 213 | D17AFEF16CECE3A15111458222379012E5A4CE98687096B03885C61271D5AFD89519658A41C82697C6BA5B10F14BD90B081EC913FA50 |
| 214 | CEBD88224DA45D46BA82BD9837046723663221 83AD0C35AB1ADC35F6A45C0F3F552E7E41652E148C84F897C62BE166E951025A420656 |
| 215 | C861B6A540EBC5A53A881B97A9D024A0D56458BCFA0681342D1F5F09A4B04AE2268359FC601CF4FFCC57CC843E23F2989685D145A288 |
| 216 | 48397A1F64B4E0AA218D63AB667CB0F07FBB1A3B9D3104E1DB4AD4F540014A3639E93327B04CA139AD955863A27F6911B8654740A46A |
| 217 | 01A106C164320E6B89FD499E769F2A5965D1654063BE9C8193374E299C97C21BA5DAFD7782684AC704BC541955D65D1A3E1588029F9A |
| 218 | 30C9A0784B096D721E601960F95B66EF4BC71BA80767E37348AE96C6C27D5EC00AE6266D7063FC3239A938E38BCE67E6D7CD681A2460 |
| 219 | D7E5CD99048A0D80EB7644448B4070A56E45D647BD6020D36EB874778C894AD532C2E73CE099D00D8E18C0874617571B36F8FC833843 |
| 220 | A3454AF345F32CA25A3D1AE01BE0B8594F44994A6887C4E63BC2D870F7BFADAF8B1F6AA017005589A820410CA0D7555BD45D35E4468F |
| 221 | 4B451203F1961401620D6AADCA370146B49D932FBC993E4567A6E84BA9314D2E325F28459E8D540A5DB755F5256048C7CE04786167A4 |
| 222 | 6E22323AA57D6F184B5211C072A763BA35855C16A435A07CBDADD801ED475EB831DB72AF622B394D1771C83E19EA25548B9068618080 |
| 223 | 01772415575609C59B4CDCC02DA4C59A5E9C1D17E66431ED465AA29C1CBF1BF100B5A7D7D18803D1FA27A389069C05022D662B4519BB |
| 224 | C91C44283C8A4286372FDE533826B34D507C236867D06ACD342E9F6E717A624383EA82420EE7545A6002CE6DB73514FD6A07DEF13219 |
| 225 | 1C7C8FB9392A2F27181682912725911780D0395CA2A95F651647099FBBD5AD7B050E8207680A6672DEEDC01F1A210AA3A5118E2D0671 |
| 226 | 209B0238A277460BB9E8E79C829584E4D026CD0CF2FAA9CABFBE8C66CFD3859BD8BC429A00A10D77762074A60A85C2BC95EBEF2184DC |
| 227 | 1ABD5AAEEACE98490015DE01A88887BD9632D1EA2E7AFC512421A3B0F3843E6219B5BAB40C589A98BD6D1F1594C7681564B8795E8E45 |

EP 2 453 623 A1

85

| Index | Midamble Sequence |
|-------|-------------------|
| 228 | 413952CD5AC1F9F943D6580CC09CC3BD66DE04BCB5A51C19A4762006D27C3EA6C20B 2E22743A3AD89D5342FF314D9E68244E8E3E9562 |
| 229 | A9F57566CDFB57302590F869830A6A1C1A88CE8566313A37601308972F240313A5047CA 3B74B60C06E171FD415C12CD493241BA6784D |
| 230 | 3E03C0B8054FD56D8DF2D125A0CEF134520310B6EFB9B567E2EF0188358DE714E9C103 54AF287889C95CE84610363F4D76303BF92578 |
| 231 | A642D79A550129361BA97589993D8481DA73C6CA9CB020093668B3193ACA1F31260062 D0F95348EB49AF0233D491DAA235C67EA8D425 |
| 232 | E8BD43D65D667F98D87132170005A19E45BABB4D795551F2F6C89128C67D7B6815B4C1 85AB18500807A67A5E88062C886EC56FCE821D |
| 233 | 74DB7113A78A60EF55F3D59CA15E0601153F66A5C4D40A44E5180366A22BB40204EE1F 4B0C125FDA5D30848D8472D7D5E7234B953863 |
| 234 | E336FCFA8A6EA3F64F3B4C82218A789134469103B14B285861641B06073096D4F6047CD BB509293E9F4A1EA960BC100DD88A915E14D1 |
| 235 | C53A8710B92E9155FCD9143E15B991BE122A275080EB43419972A6C4BC999DE0420BE8 C3DCE2FD2D2042121A6B8029313CF66D2271C5 |
| 236 | E575D893724F312073E4C743A6847F68A0632FE8E69163311D2FCC7F298CB19D1AE95B5 8BB963221015BB63A085CD49069FE72A30488 |
| 237 | F3A8ACD8865486B8E13C90F1EE8972491255A54003BC5FF8F31ECC2F43C89E2503508D A4FEB11A80DA185B2EE45D9068592070476EEE |
| 238 | 8D4E50285B6F9CCCE3549DD82A4DA2E1CDB3007876F61F40C4E500453CE993F339A2D C486A63205129B7A9CBCED644948C65D6C04BB5 |
| 239 | 5174ACF04747823E014B48888F2354CBB38612F84143936B8E93C81B80867784275C97253 3A76D262FA3B6B41456632824DAC0CA43E8 |
| 240 | 85B8D3D108294AB65D321A6AD69916CC814CA9E4D701EE2091AACD2797C80F298267B 093FA2140C7197C099BD3F435B09C978CAAA0EA |
| 241 | 6A0A262BE0F0607690AF1453307DCEA9562ABD7E71659240CA49D83D448E785F706205 DDC4899435DFCD0AB878B0108E16BF4686DB82 |
| 242 | 731DC232E28F2C80FD46B4420F2A77230933028B5376C99169284C0C2C48B3C206D97997 FF6E01538518272128F4F653D683171A9EB6 |
| 243 | 3D16D7C53D295CFB610194E183818BD51381F278414525F336F0698CFB152B6449F01D2C A48044A12B632D99C1EE868970B8129C7DC4 |

EP 2 453 623 A1

(continued)

| Index | Midamble Sequence |
|---|---|
| 244 | 1511FC08E98D824CB2018B1F88C2A9857FACF676C82ACF198AF23A7D0610620DCAF455 9DAA968D274D0D91B9308A869DAA45A71779E8 |
| 245 | F6AEBD67F29C07B66E40E0104C5191C56D70A4A0EED6EC031F0715819D90D635819494 B2FF11207B86C03D5442A272FD59C4F26C2D0B |
| 246 | 268BDC94A3210F5E6C12EB2C8B0A2B4F60B4AF356AF2742B3A106A18424DD60F08C03 F3EE8210AB27B3BB4F7A554261D0262CA16469E |
| 247 | C37E5088488087B49994198C5B1FB62AE1197272EB70B659315421D0D81FA7116E294D83 32D0937CAEE7AF49839122C15B1855D0C2C0 |
| 248 | 41D0122EB10E7A5CAC68B5B1EB95268EDAE8158AC824521449DEE37E207313320B9FB 71545208DBD140E25499E0EA6E3D5FF3D00CE38 |
| 249 | D25D6C0382EF5D3763A222239A9E7F266410F4A6C3E9310A0F599818A1BA93A94B0AF4 44360C629B78F8602AFB067D62F9CA8468CF21 |
| 250 | 405C01F0443442F575279687C8C695F326C9CFA2A3B22C655BD3D43426276855227B951E 9B3289B32F0E4DAD34801BF2902EF843D703 |
| 251 | 4DA53741989C67B2C8A7B54A013A2A98205D2F8D1E55E5EAE5D18075385B4E49AB690 FB01A1F38C92BCA404AFEA6023640B166F20EEA |
| 252 | CF49431807F94383C226AABE6A5D9959D2382597F5040A4D5F27186C0D461680E28D6B A5751F241C444F0F4E6753CE69B56B6ED8601B |
| 253 | 12812891F9B67A4787254E968CAF6C5C115F80C98257AF6434F2CED953824C56F691A518 FA9E12A020DC61398E89EDC3E153680577B9 |
| 254 | 878C3791202611D96FFC835020B63F740F168C6F5C6462D0DC56BC4C690FBA95AFB82E1 EC95017A68205D80FC6578B04C5624B32AD2F |
| 255 | A1EB0A5C93CF98114B819234B35B2E0FA4C1CBCF1A777110837444B5C84AD14E0ACFE D016F905012A1E0722D7BB5504F30DC4026F68F |
| 256 | EE913A4989A39E91C59149002CBC4FEE1AF62501C6201CF83482282DD45216F59AE1FC 967912C2F32A5D8A5B0601272A258A17A9E478 |
| 257 | 0BEB7967121F9F804114C02E08A8C6A7EE12DD0042E67911BE5719B01C9DA30C5B56F3 20C2BAA95C378A0368E4AFA148656B3BE145CC |
| 258 | 85E39FE0CE3D804C712A6520BA6A436BE51403679CAAC372959C339405124337EEC96F 5EF5750E15382540747B02C0CCCF28D3E26460 |

| Index | Midamble Sequence |
|---|---|
| 259 | AFDC81BD65C015246457B0885B5CA1469AC1C2A437B0BF9D1642A2DF23406E72C688F5A071BD5A21A08E19818C6217003534CD3F166A |
| 260 | A8DAE14DE1C57A62799F70AE5564A42846F440454FF0CBE0C6487EE4BB65F0C48100376C282124F9332EC6409FCF98B670360BE878F6 |
| 261 | AF17E7FD28C24BE0C0D7602CE58A40A482FA9B157D239919243C269F0C1EDC288557EBF26E9025B271D7E8C0072E98DAE60272C29880 |
| 262 | F47C2B394972D853B84F43A2129520931216F048F9CE4917AEFE580181412A38F7D75C448B812881E79093F554C7E0CEE964C9BDE24F |
| 263 | C0CA2EB86348E22164349A7655A9C489C870698943F836EA2F3B5BB0D908B5B3955D7005449D23806EB904D199CC625116B3E74DC388 |
| 264 | C4587467EA47D9C9D0188F4C24FBB788F7CD7499415A73A043324BC4B0A7F07ED1874DB43A2586934628A4168FCFB803AB483171EEB0 |
| 265 | 2A06FE308274FD8F9E9923130266A34C690F8D16CCD74D1B1BF3CA1447F314B6047FDB030E32AD471B8248AD40872AAF56412D07C1F5A |
| 266 | 05B7204429BC6D1AD90837DE0295A64B40848A1CCD4C3BD4F25CB56443C9D6FC798981564ECEFAF81B96695F988654E090D052316E12 |
| 267 | D0B8ACF0A4084AB2F40BAD309DE021AFD8B15E6018208391EF3728C506233D70105EAE59D79C65048311BF03A419C3E719F88F896BEC |
| 268 | 61159372889AD0CAE6A9A079A307F6DF9CA82E21365830D98A5600A0887B848A82857EA34EE0734DC2992C78D5B3953EE26E6E8281ED |
| 269 | 9ACFF79872BA81185945704D1A78921DF60C59E71C9F47AB0426CA6ED6C74A18C1363E01C529EC092B50F708AB50B176171E0E6753D5 |
| 270 | E075BDE612EA8B0681028B38B70D3D9391419865853C567A0BE819F0FC40A8B558D31966366B18968F8A3A6AC37326CE93E65CAEA1A0 |
| 271 | D9A6D6602351F4D18CE319EF857CFB4C61C0DC14A91013B36B30B4911AC4AB895CDE8F177A0253BE3DB4549C350F404BA27E89282185 |
| 272 | 4A3897F6B01CB62A219CFE238626B242F1B13AF3CF84CDC8990AF122068BD1AFF5675C83034E7E0463909056EA484E5439DB5CD924E1 |
| 273 | 7522C107B184D8062FBD2659BA6B39174E9210AA9A4566CF84FECD0E92A12730F50F9FB8C13F541C90D60BCE49854A5C05136A47D5D3 |

EP 2 453 623 A1

88

| Index | Midamble Sequence |
|---|---|
| 274 | CB5B586D2603FD374440C748801711039FBA93EE092231EC0D682B7B9D24DB1594D4AC 39F48FC9811E7E0480E3719F15347333848D71 |
| 275 | 4D0D610E8663FDF814EE80F481D848B9D7C378526D068B722879C786F8A559B0E609063 36657D6BA91596D8542B6B4B57C022EC99821 |
| 276 | 2C1E704ED7D0E27281A6B35A611CBE62C320F9850C64ED21C5DF9E4D3E7BF9A85720A 8802AA0EC06FB11BF26C45294EB752450C297A4 |
| 277 | F8AB19980B021CC905E9D110DF8E0A9E97F637449703FD4E1D1D7E3B20C5203D4416F2 3F82C45C21F9D6878584848AC9F7C5A429EBB8 |
| 278 | 962673CB232166F598E01AD2E612A2CF7E914E10D5F4C3B513560F03A22C8755E56FB01 402680CF04BB05194C5CE0B19E1CACAEDE684 |
| 279 | A6928494484C146C55F34AC9D69082DD8EA1461D2257E6DCFFA74D20382755458141D4 A9BDAC4437CC125C66FDC247CBE03055E3C256 |
| 280 | B0E551A9527A0F96335DA6A24C1E6097930FE62F30707940B59DA738EA71D3B8BC188B A69A879D9D53191B9D686802353F4092B600FD |
| 281 | C3608714D9E1DEDD68276C6C521E34EE3695807B580B3F314C2913490A21FB608F6B442 993480A20ADCAECFEDF6C90AEAA0DB5B18070 |
| 282 | 163A008C7CCEF9C8CE4149BEB4AD8536C589B3E18E2ABE680EA820035C83EC44584C2 2759EBD8CC35EA0A36689597502507EC7A1BAEC |
| 283 | 230943173D39A0852AA81E806719F16617C061F308EAAE4BB72DE26BA74D402D002242 4382D1E1E7D91AEA91CF8A9BB5BD69D1296326 |
| 284 | 13DAFC76D234E469E6286B2A2881A9396F473422F402AAEDC31FC68E0AE6E40995AFD 3A6D40B1B021DB4DD7389AB3469848493C38099 |
| 285 | 717E09A2012B858A40B33096DAF08465ABBD378F1B52113F8AB659DEEA1A1730565D0 BD70DC5BCB6494327200B63D01F6079454D456E |
| 286 | 24500FA09506335449D5D6BC2770A56E2F3BA17A63A6D906F7CB80BE2F01E2497582727 1183BE30B2D57DC91280956319E26C427833B |
| 287 | 515C4B29DB685113A17F7BAE0305883860CACDCCFE27D48C480D6152570167384152CD 8102F7B0A0683B56ED91BCDCAFB05507F926BE |
| 288 | 53F91235208815F501F634D5D889AD60DC3F229DCBD52BA10D8525D2D96C0CB7571520 C3BA0B8F494F18081980C937E6EB11B360B643 |

EP 2 453 623 A1

| Index | Midamble Sequence |
|---|---|
| 289 | 3A797679C0A5FC088BD27A9A66E5A2F47C8DAA2401AEBC17FC30C0F64E8A5CEC59A 4267084C1FFAF08E2F0C1AD7C2B5C0ECF02B0E926 |
| 290 | B0D1F40E451075BD9D499AACBF2C98CFA9D1CEB0582524930054E3C45B03AB3FB9591 C646F978ECA100DD60C3DD10C345D2110929B1C |
| 291 | C5AF0E47BCC14813116F282B84232F033AD5847C015792D472DFE82FB9B12A1B0E24C1 B13C815F7CE467234C7E20C8785DA071B2A40A |
| 292 | 8C7F4093FA90D1303F94C288C2078A1B33D5A736E518B5BB246207F5199E9C3C1B84800 1567FCAAD39E28D2623865AAEA6EEA076B3D5 |
| 293 | 6ACCAA961A6302CB5E4D9A29419A75A4C0A3CF06E89119D5509BCD3FD1E14864C492 0E58090856B4D51478E8E43FD225FDFE954D63C9 |
| 294 | DAB2985C8C281E5AF315EB4E7B4CB508DCAA99B507BD84C378402B42717DE416A236 262D10B0BC30676D87CD7BC809D4C7203610D952 |
| 295 | 251EC40627AA0AC08E04301723EAFF1883D39DB24FF22FB40FA7937247FA7083839F251 1185EE2D4E7830E62ACD9064F5300912A97E9 |
| 296 | 1EDF934F4C277450B0329503D2267086D97A5C097543060E368D8430A1E2AC805DAD446 3A4C66B75BA35083B83FCC728534084DBC3CA |
| 297 | EA0755C25B519608581D7344D561472C3FEB238E17E88D0E3A1018441A649526C4D745A 4DBDD269031FED73AC44B34C6A1910F4B7131 |
| 298 | 822D9B64D9BB21B2AE3EFBAE28560496F05747AB2050289A8842EC3321B2138900397E E6F18E0CB6FBF4201E172F8ED03B6A1741C512 |
| 299 | C4D3A9C25243441290DEA279D98486D014E836673AAA4E9FA440F757A39EBD39D97843 187CD12FD12C94F8A006A0740869B0332B5EE1 |
| 300 | 43D9A2C33FC81001202BE25A06B827279DB15583D6F34FD0E4C42B3E78B1E43576353C 2057F3B518CDE1E4EEAF1126B58450A83AAD02 |
| 301 | 12DCEF97031D98C5020A4EBE6635A517FED4D763E833E4790E9460590524DE575A2464 B05CBAE0ACCC3C08E35969496999103E2FB3DC |
| 302 | 255B69919D72817749341C0BC2874457F558C9792023CDD5CAFAA452FADAF348D87A4D 16337F1186EE8F7A61964B8C588262EEE0C62B |
| 303 | 153BAD20CF932FF32FC84615C0178794C99A1111FB4144094FCB06F00766759000738F19 B9AA978050B8876254E2CBD0D7909A866F4E |

| Index | Midamble Sequence |
|---|---|
| 304 | E1B5DE09CB56671693621F1339DD3C070D06062F9860E2C08D3327506DA512CC12F390 DF23487ACAA79B3616E4FE816116849B1ACC27 |
| 305 | E2EBED1CD88CCAE2507DC3174654597DA48C1A143025A89972F2C4AC6F609A254502C 810CF330640AF51A9F87D75595A144F9692D97B |
| 306 | B2060E19CB4895A080E03539CAAE3FBA7AC668CDB41856B1B941BBACC5902AC89DB AE8564AA136A13DFCC76C15202438A0B4943CA7F2 |
| 307 | E40E5D013456D40F0482AA145ECD3470FCF02198EDE18D3CD4FCFD9A04652ACB3BC4 AD28A5253F4B196643AE30DD530639519FA75403 |
| 308 | 6BEFAA07E64B582DD061E949CF04E33280A1018157E21B18C113FF819596D6EF2F473F3 2B10F8A412550F3901E12C77B264DCC39E891 |
| 309 | 02BF97DA21F56062B2A31CE044C63F198738CFD291845E38C17D9704EB2630D0C1CABF AD3A0C13FA2E7BA3C057CF12874326D20D1325 |
| 310 | C45E903D36B153D1E6D8760C9053FE8EDA41F22E2470259B0084B4B392071110D6650A3 D241E5F100359341AE3FB4B6376DC29F8A24A |
| 311 | 62CA1A99AF20B3B6C7FA082904CE8E388E425E02DA50D1B1DA57D892CA6A0DF5A37F 6CD036D87C70179944624AF8F2A7030844080A05 |
| 312 | EA344B012B1488221F6DA3E84DEC8C38A814CB95C53C3C3818A74DAA029CB1E2CB2F A7F28C99451A7AF8832804C49301137539C603EF |
| 313 | C5A6653E84B5D8EF3C42618C4867E0BE102FBA20AC12619D0EC4AF61652DFAE73E55C 8AB4F38F4770AA3D2EB28C71AF12060271C040A |
| 314 | 5C0B1D1CC61654598C515B82109F007E48936DBDB0BC5C0A57DF58AE0CC7109264D49 485D2D5B109C8EFA80BDAB5C9B613687C8F2412 |
| 315 | F9AA044EC003C23CE5E8ABA042CB5EA62ED89DAE192D5DA4A44194EAC76A702D595 08E3368CE8C77486B5002E13BF077A520F0F7D018 |
| 316 | E143A83C0DD197610424675F064BC9BAD0AB450A8EF17399DD85253D10ACD1E47D87 D5520F810A57A0E140F5D58B29388A0CD7558C35 |
| 317 | CCE07EA31BBF394D8139454389D6C6D949B64E2576501B00ED6E4695F18D3A13906AA9 C50F21EB4129F806199D22CA7ADC38C43A3BD6 |
| 318 | D9CD3AE00DAC16209EA57CBC40D13CE2B6C6AC2123D369C364C9DD2819690D3B446 911C2571A6A41C33C4451E50768A3F8BADB85B62B |

| Index | Midamble Sequence |
|---|---|
| 319 | 44105325A1861B85D61D610923CBD4CFF940ED2EFF3BBE35CD0807E0E25F7E6E4361ED 3F1A30AE4E0AD1981A9662A3FE04BA0F161909 |
| 320 | 631125764AA246D7793AABD1AD0C227FC8907FC4B06F0747A08E776AEBBCFA9140C60 09E4CF1497F9FA91B806318F9328092516AA4B7 |
| 321 | 4261BFC414BD0734CECF956135C2831090947C3BE3C4A44BDF0AE11E25339BB2EDA91 76D0A14F4EBD8A4BC8CA8B2321C7E9A9C722E31 |
| 322 | 9358407B7A37B39646CB76131CE7513C5B884107098A466444EC7530D5C4A43F9FEFCF4 787606429BC495180681AF1AC282BA6095F10 |
| 323 | 7E0A6B4F2265D6ACE537A68F01380A7FE1C38A5BFB37056834304290944E41D124D40B 95C907B72BCA5A9F73E333476CAB9A51936D1C |
| 324 | A941946D11476BB09388A630A4CD7808C2CE49FB3707D5B36912DC5BD94829E83F407B 84C7A15D79308026DB506309EAA6C1D8999AD0 |
| 325 | E1E617759581520A48A4CF4224148B9B66E5A23FE201ECCD02D24917E13743654922D99 7C610AA31C672C5F0C11442207D4C7FBD666B |
| 326 | C96297500FE5CF902B7435AEC03F02F12A927355A114C68E731D71CC6C359E52C797289 5A9999069EA3A058390CFA1ADF56061F26460 |
| 327 | 17CDC1D8D4AA9E72EB81D2D3A3812961BEC88252A6A138A69370E7A37FF7555978620 202E136820E260FE72B162324BC1D7035878099 |
| 328 | 3C5CB4B31657509CEAEDC96C4E4BC2BE820801D7942A8267119AC4144321C0286E7A01 CC2CAD369C48871D4CF32FF03B6680BE4DE4D6 |
| 329 | E9A57594F6ADA75246397810BA53E4548E45794AE06809360E13A6FD896C1C2846B1511 3C5A74C72EB8E6C1E8D01FA8D7547C6138CDE |
| 330 | CF173ABFCC008CC61F748C7F04145C48FF02D8B09C4B1340DA59C225C25985AD30C33 BAA8E4CD6A647C0AB529AE5DC30DB8A61C1972A |
| 331 | 1271C69F129E3C4B15B0452CE23CA187D265408B78D5D0A7D534721142759259C5EDBF 9ED5A8D60971009EDE808CC5E88091E5615A9A |
| 332 | D5AAFBAB488238962DE09ED54550A322070B426ADF784744B1B7E2860C6DED13B9331 EEEEF64235767420C5A5D41BA419004136A9393 |
| 333 | D4FBC8091BA095EB73DE12BEC15BD800676E7971365863922FA050C8B33D22D03B4A3 DCFCD18009813A24C3A5D881E75F62DDD6EA520 |

| Index | Midamble Sequence |
|---|---|
| 334 | 8E1169D4C050436E353C2ED896D166F5C23E8A264303366AED46F38CF216562F4D9FD10 B552D10F290A453EF89020C7747699E432289 |
| 335 | F018D4052F4574337CBEAC3BE48F0F1D66EB1A59C9B920AF90E029A1731966F2E0FCB5 21E6D7A3276770456D1718D18A4092990C81CF |
| 336 | 32F3CE2FEE14C433043F0C943420F5812EB996C79300CC51EAA63E8FB0A934757D48881 DCA0C4DD825ABD078BFAE281182D00F6B5FC9 |
| 337 | 0162F48798C5292C88842FB03B22E7FA50B0C2E34D0B58A3868F9618658528E7A59FF7A6 F0707589B4C296CF2761C990414C36077686 |
| 338 | 3BCB93450001BEDDE401AC7321D0C26075B0B299F1CE6E4DFC6F0CA50B2008986A1A1 FF55834316C5CC1D2B5CA15250A333331E5F43F |
| 339 | A3EA5E7AB16207CD8615A6260D2E1CFB88D39040B7657102CAB437ED04038210F05CD D69A9D726DF4C1C6237395D17E13F047641A888 |
| 340 | A86075BDD5099ABFFB932655B22262080199CF4F058FC45E1087E64260FE4CBE5328AE CC4CFE479AF04FADACBC50D6C48366B4A4C481 |
| 341 | 155E961329C36B45E5D6C0CBFC03110BD85CE18A6E4A58A392F2E431F0922F15103A5F E2274A6F369B0E714F425D630C390E583946E6 |
| 342 | C62985C663223D2FDFA20120A02EED4567CBE131A3B3877B53524B03176F4099710C075 22B146D0F5603759BD42729EDF16DAED56004 |
| 343 | D42CAF0E56FB351E2E50719978E0240A2417F29A1E1BD59492AC5046546297291ECA722 4E42F1960CF7E57495F92550CC3FA87412B84 |
| 344 | 08DA1CDD539476D2CB00303874DC9500A9F814B2B4BB783DC3CB033E4D7CB05956AF 4057E775406718FEE56AB504685608268BD31C62 |
| 345 | 90E8AA855771C3B767A4A0A65FA687629203BAA48AACAC51F27395B38B7A0DC9C82D D256000835EE2314FA3FBEEC8252C84A724C9F83 |
| 346 | EB006D95E2F6B5C06918C52672314CB2AAA9FC0BB112829EC63E18C2AC0E29560E6FE 04411D5D408ECC2EDC92E78BC072CC1DD37E692 |
| 347 | 433D32F098E1AAFB80920382D69B7E18FB8279C812EC91BEC93EB04EC492821C9B0707 62D48678036B1DE964A125DB7A9D493C7BDEC5 |
| 348 | 766C64C0165F5A4EDCB3C5C0281B879BC4E9DC508E75A72A13C3BDD32387D29D527E 51C8DC23ED9D629028305BC0AA994E47A4BF0183 |

EP 2 453 623 A1

93

| Index | Midamble Sequence |
|---|---|
| 349 | 09CD06588BFC16B1FD6E9AB9F8AA0FE32DADE60A432079A34A59146FA101CA0C4D16C9DDA123A0E397E409554FBC6AF5C945C812B47F |
| 350 | A01ED27CA283A9C1C762146E10C7FBAF5A08990B11269A28B6A99297FDC0523678FCB090D929690784B8E847E5686329645E8B533AF8 |
| 351 | A227B61512D358E449CC86164F7A74A6FA473E6A84D70A64AAB27A9FA101C281F94FE4C14DA779936186B9F000F423980B2CC3CD2DF4 |
| 352 | 2B6D1382C9B1B2B0C19FB5F42712985DBC1141B0B43CB5BC6AAD54DC84B7928C893F105C0E3B99A9F70096DBB8D0A32B07D40C224768 |
| 353 | 0A79F69CBC2E3E382FA72CE55A4B40619844055CA01DA8749073E2248FCA8CAFDBCC316AE0FA93D4170208A159FE8E7291C77A7E4B80 |
| 354 | 72414E2A6CE1846E943684262D3CCD122E54D425F7B4BAFF00787200826612172CDCE432FF9F3784FB2C60875F85576A2FB5E6B06B482 |
| 355 | 58612501FEDC7A722D96E538469CCC0C52D7B31DA5291113792EF58B7AE83AA917E8D41395C4C34F18C30FB860CF139B56100F664649 |
| 356 | 55441DF8E1471747A3D00426417D169664E3AE1DB3FD85508896953970DBE831B591690F4771A966A61DD20502C732AC04AEE19DB8E2 |
| 357 | 20987F3A0FA524223BC09A2E8D5E7872666B0B07A948425CEB0C3F06773B75664BB9F503257C1598D820D2180EA0A80D21704D968F7A |
| 358 | EC69741329715FA709A050261ED591716433B0D2102D521E161F74A70A5670BBF9A8801937781AD14470F9899CDB6A851E892575BD6B |
| 359 | 026AE6951D11E4647CD6267F88998645B4ECEB606F6BB1D08210846AEFC03FEB60E71A7579302E403018E7A05824DA6C10568E470C7F |
| 360 | 48D21311FDD7003514AA46812513EDD00FEC7C518093079C93BEA2364881054DDD263351EF9C7F5BAB9DA5318C7892495134234230F5 |
| 361 | 971EC85D6D32CB1B5243DDFD6228051836F602A0129020DB79155F15DAB709615F1750D8D0462C2226E8C641C2C50D4AE273E83F12E8 |
| 362 | C4CBB587FE0D80D716054130574506D70310E0B2D2F88F6CE645B232C18A4A384491B9DFE3534426E0E68A405267CB9A016F33F9E03B |
| 363 | A243CFA0855FEBAB82196FAA48609B9C2EE12C426281692BD27FEF40B8E6C25F491947C128C22205D28796B1DB41E2BA33CEE99D3509 |
| 364 | 7C12EF671C6EFA5DC2DC494858B4EC3CE3ECD0220E1344CAC05165DEA4C332E06BC6448A0907A7217CAACD0921C3A91B90F333BDE561 |

| Index | Midamble Sequence |
|---|---|
| 365 | 1B8F1591CC25423885B00C0CCCB7D40856C8C36B889932FFEDDAF1758538528AF9D339 06F524964FE0E6E718521C9B3C542900BE93F4 |
| 366 | FF18C4C34AE24281730E45B86C6B80A9DFF8E48C6007C5B6995337B84827F2A9CA504F 6687BDD73712D6E040FFD0134595024A387146 |
| 367 | B10A0161F99CA8A9644902A7E4A06322CF58EF13FCA528C307565B18FF437F375A53376 28A58B4A0F523493CE0915033CE326786641A |
| 368 | F13AC92B818E02C3BAD5126851DC04816A8E42E06617F9507368ADE1F7163B344A40A9 151E86FFB900060DC6419B80A55377A8293F32 |
| 369 | 3E1970A01BAB6C773D8883C6C015741D9FC15AE319F18400248A45E44B155E66181719C C1C8838F480E63DBBEBCE3C71ACBF52458212 |
| 370 | 9DD04E76B5486B1B793C0E08DD69138ED22A656A3E927CE1CC0C86F5FA181C0A7A1A 20A34433A4050524DD3303F6FF227C13C10A9E11 |
| 371 | 5908724117084ED472714AC0142ABFA57B0D5A933295532F38F2A5AF342B8C07ADB745 40EF2659983091C6924D03C91E635DDD8D209E |
| 372 | 13377D471CA6E853365DA9E05CA7B1214E3C2B97E103E1A1105CC71103E9F7AC0670A4 B3D1F072D3C14F50D153398467B27A546A9280 |
| 373 | E599AB821CCA0A95F102DE56C51190CAF684B4D45B88BAA13810774F01811BEEB1022 9D0A4FD3306C6DFE01687EB9BE3CBD663854EC6 |
| 374 | 6B29C528D7B008E3D9A63B75C05844D9D6D7F0F225A1D45AED2221DA0C7CB212C574 781B5910C58F1C14B8DDD74080D556C49832D399 |
| 375 | 604C053E428B2CD6D26C73B5085DF8703D5182ADCD419BA14E4CEEC486FBAAA4CB1 D485B35E73500526A87B5085351BA0B64062C73C2 |
| 376 | 42193219D303394CA99C7AF88354C3B29724EA10566BFBBACA5096C7C8B82232CF6729 F65C1757240278233A454D81DC403137970AF4 |
| 377 | F5695D8E42F2AC1A4BA6172925B9F632AB073FF0A5C1384204825046E8AE6063670B0E0 4AF4608348FC1EE8DF77E843534F40BBE17A6 |
| 378 | 2C003443E52012E5172A6FE1A0142539D118173BAADD56389BD8B599361083CF88B6E24 371DF50D043790ACCFE3AC091B800E72FA923 |
| 379 | 134D028B50C180BFD9F9070472C72E768DB6F61F09F4885FD886C725183262A0C65F90E DDAB6707944E1231A7159882FFB3851731044 |

| Index | Midamble Sequence |
|---|---|
| 380 | 0A6174B59752638CC5D1B0B6B4D7347AA0A163BB023FB253B51361AEB5BED9F4B3041A21840028F771D025EE0ADA4665E9197229B220 |
| 381 | 4A90A11D0CE3A68C6F8C9D47706739A19785D5972714B37E0174DA9D06900DE48F263EB00F7C88751C699B55B08EBCED2F4BCAA240A4 |
| 382 | 461BD8CA0F65865A5D6A5B3E02F08E81EA9664267B4CE8EF8080B0429E0A5854E195A97C57828DE30ECF7DDC3F79B80E44143320CBE9 |
| 383 | 49512EF7702F652F75D39EEB358DB44A1A0851850A540652BD0179B745EC8623311E9E6B50D763963CAB45CEE4403BE7B2A664E34050 |
| 384 | 437E008EA9786F0C2E74C445925B91EE19F46B4F03C3C8C4C05066DB31B99BED432048E8F743992592A05157C527E2091D169D08D119 |
| 385 | 223BB6765D5FC196078B50B04A3A15E8B77FE2184EC16D366D4D807ACDFBDCD9E21AAB6848628F292856C810C164F19E21DE9C3A6189 |
| 386 | 3B56B4F49609875413E483A24889443936303B1F8629F6DE678AD22FF4DA0952188A2B5981A7BFB8648A0CF10E8468F430D97C0691D1 |
| 387 | 40AD743A09565383E83E81E18484A04D909C489CA687A2AE5EDD3734C64C1356BC35EC28F119A9D4A0C3CBC12CF4F95C44E886AB8BC8 |
| 388 | 530E2820639FBA1E3049AC74DBB6011666A67847EDB54F16B9C0E32A6578629DED1667203FD85AD564175D8CC554AD662A632604B20F |
| 389 | 47635554A0A1C74982A91621110BF8BB9EB7FE45390B856C3D7C17951E0B8199BB41D1EA1269C055BBBB1D64267CA2400C7985BD25DE |
| 390 | D0103D4040870746B466BC4D52A3B3C01D9811E3F56D67886D5F03643EB79F4C000C5ADA4CBD520CE5FAC92240CA2CC2324FB488C632 |
| 391 | 97F711D1A84E44C30FBE53CDCAA6C92D1AABB1B206956F0070BD190634893027E5A0F8A74C13646844ADD6BFF701C6DB2AD8A14C6748 |
| 392 | 644E8A07293BFD18279D82FF919A44C0F3024147C69C899847B4FF55843984168F3BD13D8DADD2E2C15B25456A8B5BC0516856E56326 |
| 393 | BEC178A4DD7A5C38B334023D922B08A50E3CC49BBB8021B68B3E6FF029B04CC66FF28590BCA791F1759C2351897D414281C77A82DCCD |
| 394 | 6E566AC1F42EE86C0E4BCE923A518B195D11DA7DD81B4046B2E45265EC00FE714015B458430698FEF43594F25B9DAA38C6E367D35888 |

EP 2 453 623 A1

| Index | Midamble Sequence |
|---|---|
| 395 | B19AB807B790041C668ACEE2832824E25ECD1F40FAFEDD450ECFCCA759656C6542335 39C0011CE635A24CB9E3EABF7F70BA30C64892E |
| 396 | B88048D8674E5139B2610D2728D14A79384995EA8D6A21C17BEB595D82C32E582FBD40 21DC3BCEB1F99AC5A93990D0430290C23F6AFC |
| 397 | B02D1F1FC3CFFD940527401E0B56E41914B728A0C5022116C5125E29A03143639F8BEF2 A91498BFFCF823A63633B5C4E06B16253C433 |
| 398 | 084E2CB796059A3C9AA3190C5B1427A4CF70E1080CFDDD99B6BED55EA815B7CD51D5 461B1101D07E014BED96ADAA660FA6604117625C |
| 399 | D5C65F633ECBE01D1E55AF456DA5261901A0DE90D8912128E0222965DCF8CC6748B2F 48C0B64F84BDDC0280355B2C24A734C77F4AF30 |
| 400 | BCAE59A7E4EA1B697859A49995145D298DE83A3102730248DA4A2A3EC3403BC758460 02D2F55BB024C119BB11E6CAFD81DC90DE4722E |
| 401 | 31A8C104C9E582E9D938E2C3805527050449CE7FA897E25A6ACA736980E74B0720D0B34 A9BDD143E0147608649555ECBFC21322475A7 |
| 402 | DDB649DF8991753DE170EA1F10B724080FD8AB31717586888CB851CBA05D23BCA8770 97EACD8EE1BC486C035EC6532DA82B14AE905C7 |
| 403 | D50A0AFE08A41889F2F9B5A4889096A6077088D78F6A77B2171DE4DCBB28D47158C3F 42E04B123D661FCA00F201F73D7C15767440842 |
| 404 | CC05E91D5BC59004EA4BA300AE9F40E0CBF310A866DCF43088C2735384B8B1B4F5069 F5D1883F400E748B0754540D99BBA6E579B090C |
| 405 | 46D2498AE874E3CE8D81D322FB32B7D436A275F60636C519E16593ED962124C6AF6FB5 04FB7F001A4AEC04B51E81ACE3708D12E2BBCE |
| 406 | B844D6ED29723F51A506428FC262F81C1E7C9B15B046490397BF1678AE918CE62CEA921 CB9E49407094F6E8C79D191982551013CC9C5 |
| 407 | ADB5C09EDBB55D44BB9E3D4492C4429752783B2D278861C2A937EC7FCB88282FA8334 3B10608A3F571B343071665274C801DA961B4E7 |
| 408 | B1083273EB5E1CA2D4392E1ACE2CD91D8E0AC4D0B239430C09A94397FBA07AE299E5 B255478069058B1950707B19FE42A903B47913F1 |
| 409 | 41E036D092DA6B21CAA771DC65E01573343114CA1A662405E5EFA133CA810D7C688CE BCF0EC13DD6B51275AA3070F35CF3E6B62B4083 |

EP 2 453 623 A1

| Index | Midamble Sequence |
|---|---|
| 410 | 1809FD388D3A00A3CE0B2F74FBD4EE881A3FD701A5CC470903F3C4ABEA23B8276938F285D2C521223B76CA9FD2E005CC7B2A2C893615 |
| 411 | F8B7E5022B9449319D715604D1BD8AC2C7D2D5FFF46E115DE4C017FBDBF31D4CB0F4B7E96120859E31DB8A590DA21D1D104E09CE6543 |
| 412 | E1A0ED88E0439CC393F68D7FB0B7D092C52D26AA4481997D97355A2AB0F563F230D35E1D4BB85E03306868C532AE262B97AA0105E659 |
| 413 | 2F3F5F00F540884658517E6E95CEDDE97C9A9C7054B85028E25A4A104B5456866A70F9E00129432B58DDF0E5C71F51E698983D759AB4 |
| 414 | D6196C345124A5CA3794A44AC52EBD407797AC014E25DE1215BA9EB487E29A480B71839C11BFB5AC4C24F982FECD04A9B043FE1B6D9E |
| 415 | CC4C6041B610899DBFB192681C99BA8170D636FC7EA9872C14A03F1F08492D06D8618771410CA6912E9E32CA17E229D43574F70D9F27 |
| 416 | D8AAC054C9221C0B41AA536D03F32627711FDBCB51289D092A4C6FC766869643D1E3A8406E57BCF726208855633B22E418D0055B4297 |
| 417 | 873EB8C23E9F5F43EACA04EE5424959E56898D5ADDD0F60041648114D84D72722C444122CBB150E39DE7A2611CE698EF56CE891085F7 |
| 418 | EF1144E11464B4F27CD17BEB5103128895934F13A816197D8132D46652FBD88498CA782A686254418B78393A0944EA650F16D9EEE07A |
| 419 | CF04A9370F7B0943B8088EA3E4C4066A258207EA4D5EC1D1CBF410037D9F472D509010C65A8B0ECED978A489569F08809C5CCE7FBE3D |
| 420 | 616C20B434C45A0F1EF288C8F4EE9B55B381888B60DBD7807CA60B8F374192407D0F16C1763566A810C557B1A720F24953AA6AE727A6 |
| 421 | F0620DE2ADBCC2490F2F499864E34FE4648E9DDC50C57431541D3E5C14AA8CDA78481D42194732FB555B47B8B81E625D961768638CCC |
| 422 | 859AA14E5940DACC7C6EEA9A304879DCB0032CA366047E92A8B3EC8B92D02C42B781C346DD8195BBEE1147C351B970D166B7563EB85B |
| 423 | A0506B1A10DAC72693589C072DBE59CBDB60D12D87ABEE07CD9310C48248C6A0D5C75C5B87F54199E264126B6A0C5445DC18B78B08AA |
| 424 | 361AB05BDE09C3935235252248F3DCEDE120937CCC6C6181DD0625298413B03051F13B7159FA46A89FEDB542986570C3DD352A1EEB12 |

| Index | Midamble Sequence |
|---|---|
| 425 | 19754B6118F92A7FD2206044F2EE7F3D78648F83D4078193C023A1FCF0B7044ABF088266 70D62D8FBD6738CA374E6B40293667021359 |
| 426 | 2E884CB3DAE4609591C8E764A91E805EA9EF13842C3624D2AC2E5CAF200281CD120626 252FD08EB9C5D9045B8F9B7E43BE2F3C8A8714 |
| 427 | 573A11DCCB67554FC4223F0272803826CE70B4E664041067C5F2A895468D8D33065B3EE 1A5F050A5D53D90398FC4B85C5D522B24A130 |
| 428 | E8CC678ED72FFC80BAE3834CD44B5A23D8CCB868C82244F72E52D445248AADD2C8B5 4B61F00B828F78C8BF8E5A5A63DBD21840AB1B89 |
| 429 | C6D29633A31736405885DB0C0EAAF150617B88AA0B72C77244B0D889E13E855066DB19 4C3159FF6CC70009DFA4AC8ED11BF8284888F2 |
| 430 | 223F4695D6BC94B20AF3A1ADF1C16F67F824D0743522AB549B40E5A0C08CF04BCE918 C53A5312C0C9A0C85EE82BB05D1F9EE8C3EF04D |
| 431 | 906CA1F17F5D8FFC0D7DEE35B8129A584CA56CCC3D2B03504342D08E65DDCE2C55E9 818845DE467FBDC142C2C035D3C308C2B5B1933D |
| 432 | C2E7E4AB64AE217AE189AEF65C039A0341122CA11FF991D00A7470C3ADAE1DC88272 9C29E0406074760629C18137D26B69E429555BCF |
| 433 | 9B92417441042F9C84AC0A66BDB82499061EB9E3F2788E9276A70DD60AD98C74C7B927 3A0F3B913F54691C5F0097525223460524CDC2 |
| 434 | A4C01C123EE72D00C7E4B4872A46EA41124EE38A5EBCF6BF7CA0686C607ACF4CB115 00FF51C891E1B920EE5D61E0FB6F946D18A46CC4 |
| 435 | 5BA012D34D0756BD8A882FA38D060893886BFEA3190B4BAA5F798376050FA01D673250 52A04B89F981F9D862C75A6D6858333503D2FD |
| 436 | EC98946FEA8EA72CA366F2109169A40D14E45FA7C12CEED45820606A0439E6B8FC508C C2825260D91AC36B7692FA642AE0192E9AA736 |
| 437 | 9AB33BFF4D4ED6A9580C40CBC48E44443098D9CFAB5CD727518F388AB20D5B7AC4F3 29A752EF4C2B13E002AF6BF8A6259E69FB310CB2 |
| 438 | FC333E9204F244293505123A271C6812CDF3AEEB9CE9301A7C6B9DB4DA0F69465F58A6 63D435AC5D720EEA6A3D0BC40404547F287889 |
| 439 | B072302CDEFB881793911C1D91DB554A0541403B379571015A660F77A70592792076DF51 E22304B13C70C1DB5AF893641E00450B829F |

| Index | Midamble Sequence |
|---|---|
| 440 | 33A39D542A08F850351E059443C18DDDD75268492A83FF1679B7760B723284664A01F2A18406B1B1B3E6FCEB04BBE025BC152DE6B1AA |
| 441 | F87D639082F9A68A23B94E1DEF58C0C756C218218A859883ADA9E63A5C96036049836C4262C825615F338E2F00AEC4D3D2BDDFD71210 |
| 442 | 416051FF4A1027CC190C3459AB87B1E68E70B164EAFB5C41A65D90F72575AA7C0CF6243F14A3446474794F4104469B8FD60F6372BE84 |
| 443 | E0E8822315680F15AB6B79ECA624F5AEE49369CA4B2449FF739E863AD03DFFDA0B60859D55104CC0E5AE1DEA97227488E96AC927E448 |
| 444 | F0EB336461EFF33EC5C9CA2933D32136492988A927BC80E903DC80E86AAC602A587CBBC3A54B16B93CC00BE9412950E0D60F87B7B3BB |
| 445 | 39446B5C4AD8DB889487CA2C2345C3112A0956E07EAF5317917753E43C22D85B472DB07371E15025E603A211639D7206AEA6491D5D03 |
| 446 | E3DC486CE0036248342E31F294150A8EEE2CFB1C24E47542AF7811EF85A18E101E800A17143234A3F3DACD4B1276B51AD901945BFDC9 |
| 447 | 5A2E2E3C60AE68CBDDD6154BFA823C1E722FD8982838940F614F9489730CE6E8288871B7A061B102C369CB2BD25F68C4B37D0F9BEA1C |
| 448 | 534029D83956EDAB46BF5FE29E7B791217A789C07643E6F000C50C54EDF2B48EE206009BCDDD989CD2688582541C8710DEA2F5453CB3 |
| 449 | 41945595BD9CAC4DBD481F31018E2CCBEA2B8CDCB22D17BC40CB86C43B39D70FE5800BF4A8C819A44246C61E66313430CDD1EB9FB617 |
| 450 | AC5A7A5AF11E258633D0D8DA18C2E9138EF1F42DD7CD81762A40A8846F5D87132C0016793214B2260EBECAF0F38D59C0AD08613DB15D |
| 451 | AC53C3CD4497AD2FE2B3105D548BB78713F46881C4B886B9721045299C0E5287F5092452899C0B48058361269BA60B0DBE43F96D5B72 |
| 452 | 2CC07D58179AAD118D66EC41E1C113D9F79402C52E3AF27D8A4A39D9AA674626B02A01A5445EFF5B24FDA0E0A57A302BC424DF08019C |
| 453 | 3F7CA882E05D39C767B18F95C6F0B065F40CAB1072BC40496878A4F2CCBFA6EA216A32A55D2100C10DF41ED4AE511A6469B80F17BD64 |
| 454 | 67031ABE9494C624AA7E9883EB7391200AE145FB813851F3D72A616044B0A607E62D3F242017F64D44557C4959267E816F32F52DA6DA |

| Index | Midamble Sequence |
|-------|-------------------|
| 455 | 8B89FB1EFDF89674B812F99C741433ACF85231A0D6440CC424321070846CEAE7000BB3B4A7F42FCD18FC46E08C322D3EC8A1EE0A1A9A |
| 456 | 72D1A861C67269BBB0DA1D6343E218CA34FA70070B2E962139DCA0DE180E20E23CB4EC2594B261820AC70FF92F77743A88F9500EB7C8 |
| 457 | F578950E7AD59665A6146034C1AC64D5B0AC102630B107F9B8E46D1EA53226FEDA0332AD2941345A421BF55BA9DDC0446C01C51EC7A5 |
| 458 | B81A1D1E5179846D447B6B4F00AF0E1102032BE34D376020699B76CC2E8C6A68A446DB559BABC71A96540A643BB24C61AF57923CA291 |
| 459 | E28C369ADC496D6A9ACDA94726C436672E04212DA2A5166ACC816743269E5C15F9D908761E32B92D93C4EE92055624D124C8C787991A |
| 460 | E681613987201403282ABFDD34DD81894F7FAC9152FEAA2E9962727BF0287BC27A6845CA9EE81DB63F454AC30C655F19D14501D488E9 |
| 461 | B614540C498F13382ED1F7D3BA927D0F77530CF202CBA8908C3954B1B524C6754CC808CDCE4F86E12E2C5725094690551D665F0165D5 |
| 462 | 8A4D679FCBE15116C11B385BF96C4A4FC4B0456092FF90C666259CB11BB6F53E2E69827016A8AB4D908251E327D21ED1B689EA8538D4 |
| 463 | 9FE27BC841DD2F1C993ED4822D153295D45A31E0CBEE113DC348125CA5F20D85F9DAE83F5585CE544F6F22B9DD091E89792543685094 |
| 464 | 2D9F9A9F9B40DCAC4FCA239336011140FD8677044CB8163CCC282FEE224F4C48CF60202754C4AF6DAD7475FA5E54E2A6108110DC65B5 |
| 465 | 0F44BA86BA58E83882523A4B381C4A6BB11E87CEEB65540F6278C9983153108839D8B9D7E3E3AA5B60E2C82699B00F70A2F366835BB1 |
| 466 | 8E538800ED37A6BC3326F49D45D9B08D9547586C74A94416A9DE82B7A1B3B8634E86AA1C7092FCD29FD82A84CEBD1451BC506D82D86E |
| 467 | 4A26CC89E311FBE0C8024F9E971A6C196C521E021C6E67682F4FE4F65F6C54F0FDC416C4836B7AFA6C58042051A9AC265A05F98E1E22 |
| 468 | 45E038217C1979C6668EA40B067D327A50DB6275BA50ABF1A5999D4E62A1D40CB68A6DF89C81351F1F61BD0006B1AC80B2B903D287A2 |
| 469 | 2AEB93CD928A2C4A53D8E991E72943C31A94C8C3A1EC2163C4CE629991DF0584848C138430937D2FC8D925D7450CB1D19250483EBFCE |

| Index | Midamble Sequence |
|---|---|
| 470 | 7B15A4F3E3EBA82DB26C2D7920D42A546DB86F73E0508645A258390190954BEF41FB5A 59E3061924B480D3D4F47002E70DCF374451C2 |
| 471 | 0C8F3164930D74049C9CE0E92A998C9618A0FF3FA2AE02D4BF503B4EAAED701267CDA 6C41175B06B7AD9B31C5643049281BC33D6A6C7 |
| 472 | F0CD2080C3A2D612DCD24E0C3249BF63822BB2503FD9BC4E87BABA8237C31B73983F0 622106DB9054766CD6C6B5767A8EF901B8384E6 |
| 473 | C17C25A68244B8DDB1AF12015C228E52E0CBD2A7E6CE1BEE58920D4A479A9114F0BD EE32B1941B2098B839D03ACCC835A7A3FD4188AC |
| 474 | 815305417C357815336B2AA7708B7D287E078C10A73C73395C7660E07E9885812806AD3B 69BAE80E94F4C904EC0C5BE2756861A31389 |
| 475 | 42CAE02185FC1C5F3A7B4706BB16574E183A9672BF80431D6868471423E06B3A5FADAB 27E3EBC143D6DDC30A4090DA6EA72C4390A498 |
| 476 | 1164CBB7E465736D8085648E6C2A060F614F283B1683C47081FE05EA40A0BD3B246428C B7CC5A801685CA2DF4A77846EA6A28E0B5D14 |
| 477 | 1931466A75449F741D36163F58E010D7499A8CC8C67ABEE31320434203C3BA18E6B604A 202DA4032DF1BFD2E42EADFA4BD4DB589C827 |
| 478 | 2666797AC11546736556256C1265B02FAEE4E16D30EE71296B0E5A5218E161A88F4205FB 2B208AB7CEB1ECE12CDD543ACB8F8302EB68 |
| 479 | CD53B1408C502C4C438065CA5CDED9E884C3A6206BDB3D52FF131B7A22BC494BD094 65383EF8DC7A2BAF7093121D3E94CD321B8B0B04 |
| 480 | E111E400BF7D1C1F8C28B62B9A5A4C5541913312B9081C953F893E25AA10E908086D1D CE68FB8512492C08B1F9644DFD73FBF4E0BE14 |
| 481 | 41AA2677719857244F89468C51E61020EB286FD1D36868A39050F6507F7EDC55493600262 2B983595B046C529CA09AAB82CB3B23F20B |
| 482 | 9D01A719E1ABE8DA788594A25F838C12146715173E8C7F3519988C31C5208C123CD968F 18A5C1327D7AC0E5E8BC45CDBB08280F57D53 |
| 483 | DE448C0E86A6CD2A23B08D908CD824580CF0CA29D64E5579ECE3E2801666290A3D5F6 48A60380F23A8578C5E7944491FC059E86FA31A |
| 484 | 944E251BA9ABBA63C159FF26F863C29E9144606B28A645CE0145EBE5D416128C15500B C62BC1B995088F24CD7E2F6C24BA1C9CAD23B0 |

(continued)

| Index | Midamble Sequence |
|---|---|
| 485 | F8F4B9C1077F93AA7A25A152461A964D05B7B4DA85902A9CEE08AA752A45867D80A2AB73B16CE174CF0B36622CF437078B30896504A1 |
| 486 | FA5D485BB9010A88403364DC8A00ED3A418E48906CDB0E2964F3D4A987C03E0371FC14A78151951839EF0283ADDBAA30C3676DF06AFB |
| 487 | 3D726257A22F18CB070E8C865AB3F543BA69CC862B32181031926D87F243183783AA705AAE0504DD1F9292EFF52C89243C9617750DB3 |
| 488 | FC4503E61BA9A35778E4082C6155C482169D4E9A4133EAC48F6EA31B13656CAFC112F1DBAFD2CB098B17B1B53D050C604792200C03B5 |
| 489 | 115AF0C6C89E7B5106A52471484F775C4AF60CB76AA3684060E876D0C1EF5D11D87FF71D2D70BF60E242E209F20964EDD0466D8438CD |
| 490 | C60A309CEE5420FDF81EE6B0F1461EDB1C9B1AA10C6896BA5F7E24A09D0760338DACA1454767969218DE0885D0C2AE8C0960FD03BF2D |
| 491 | 6A09DB91A67B255D232E2C21AC4E2115617C598574B7201A93D95296C07BEB0C244CF1477C05F2CB7F3FC2B81A2B470202509C208BC7 |
| 492 | FC47BC6A8254005475CF3D4323E4CDF2684408F8F838B085C874B9758835F780D5A3D4AED18189581B6C33B60E941D4CE05B3044693A |
| 493 | 9FDB0CA8A64227FE38A59FBD39A14647D68112FE0115C956510C0B99C26DC4DB85DEBC918E1B62B490850E061C240D9B83896D88B2BA |
| 494 | 396C562F7B8C0BC488C242DE6FE2CF0C60A8044348ADFA59B6DD4BF465EDED80A9FA3EC9080B8CB155062E20FF81C05C549252EE2532 |
| 495 | 8CA46F305F86940D53FBEC474265D8D053E42C0F13C23A347ED9D7AA03D7192AE000B769670F4937F671398486C65E171746E69CD2FD |
| 496 | 809572E1FDBA2658640DE9A9CA2D8209787BD6ABE29E4C4F888C6D8D06A7E92BB6580F46C10435D9B43E989ADFDD3C75C00FE164F613 |
| 497 | 6A1A05EF04179628FB46A021A32C5C90E0B6592DD0187EC61683DDD4B198286169B4E1F9972DD226E771D0497268526BCB53360E009E |
| 498 | F8DA745076A545218A9EA86592C1C71295F5980C8D0223F0679FFA8B3D70F785EDD264DE62E9409C0359222A901B4E7F5ED12483E780 |
| 499 | D5C132BC165245A0F3AF1E3EE81B55897443B1032D1B46648EE01944507D158F773354B6BF5D04159D46236782AF33E0EC2F27000742 |

| Index | Midamble Sequence |
|-------|-------------------|
| 500 | 0E5AB0B1A9151866416FB9D9D58E63E40BA60B35BA4848D25F98F1D0638C2D17CA91F 9409683CE66805A2558CBC5F576DCE4E8751B82 |
| 501 | 13E3845A06DF13AF994D15A66FF260401908A6639A4FC02B131CD59D43033D8A0E258E 85D8CCA782ABFABA2CAB591A01E5C00E79AAAB |
| 502 | 7FCA6D195F0B414FCF515325B2B3693C0501589CC6619F3A602F13B3FA2282646118C68 D2C33A042FED423FE91155F15F2B3D3108C9D |
| 503 | EDA4311A1A3BA4D84504F24967DC0C21925508772A7778049D72F00F3521D90E5483B20 38616C2162E5F924563F97FFB8CA3499D1878 |
| 504 | 610B749E010F9A04392D81B72A6C5E11600FA9D9D6858F58F5C83A18C9C23BF904322CE 4BF24C53EDF2F09BDDC8E184D0D80AF3C860B |
| 505 | 7AB9C16706AD3F5D0D20A680214F390A55CF94B45272336723873C544B0B5C52C5CCE7 FF6B03C0A82912551D35969D06A8CD7799C447 |
| 506 | 9017F4DF6856BA3C3A91F9596855EE8FC0F18C0483B401664509F1083EBE157D25CE674 0FDBB09944C48B4FF4EF361034631504C0514 |
| 507 | 0D21CB341C86913EB5B1C43892E9AAC4581D7D658937C5668C57904EB477BDD7AD4A6 A11248F1B51A3C384A5CC0F8422219F362669EC |
| 508 | 5F42B31DC5302DAD19E9672EB20B97FC58108E60646850373E61DF6CB094404AD214633 A116E1B33D0427EFE28DDA3B6E1667251F06B |
| 509 | BE0A496A575B2C9F6637C455B026F52C1C8EA15A10BC3112C189E0D2F457A14223FEFB E477BBA1461E9A1844314235B09915B8A95722 |
| 510 | 340B24C85030A2A026BB2B793FE8491171EA33786CE2EFD9945B0C3F046BDD0D360055 9055B839D59CEBB28CAD338DC00733D3869542 |
| 511 | 7F89C88E2146570CCAD0598285606998BAB6CFA9E7A4485CEEDD496C4B2EC9EC60DD 520259F705BE861E760A3B3E6A793C29079608E9 |
| 512 | 826262B3A520C491E917B71A04A316F410A7DDB49D0AC04A9EB8C543E9D5179C7F262 11512424440B2653DDC0EC7AEC5DE6859ABB0B9 |
| 513 | 2E4A21578A9DF37C420D5164D936DF24F17212C644A39245C9F6881999BB0B00C2AD88 08CD9DEDE0BA19884FFF1CA48062ADB1724392 |
| 514 | 245EEEE4E381BE22413A66732EB2628B2C3220ECC805A2A25BDCFDAFA525CADB32A5 D31F270DED6DF504905220FA445E8C768E02855B |

| Index | Midamble Sequence |
|---|---|
| 515 | D3773C8A8FC5029958AFFE02382330CE948980141309DCB6928681A4B965595067FB9C1 B7A5E4CABEC90A4313B0482D01162C9BFB0C3 |
| 516 | 5CA0635BE055F72A8109D404066A17028712B66525C92B4F6DAFAEC1712404D036C8ED B457A4B3F78895AE88222BEE5B18E32632E527 |
| 517 | 3DC09D1203DD9FA44AC29A7013AB892335B2FED31088B0CAC40297EAACC082E0195D 90D8D93DF12316CD36BEA3DAC85E070F24599BCA |
| 518 | 2159D7ABD2D8D46D30F85802769AD4C1B89B19B6C6335F6300A77E0972DCCA5B0792B 3A8C442448C2FEBE41A17DD9FD0F646393C50A6 |
| 519 | 038B6E28C978420EDBF24DA11FF5F2E124A752A764A028D4107EBF543AC74BB8CE5CD 473206623C30F50D19FB01D45ECD45408F72E62 |
| 520 | F7B87D4316912350014C702CD68A565E699EA32C38EA5DF2AC8493764A869FF082073C4 89CF3F37DD722A2010DAC94953D0590949BB6 |
| 521 | E16C9BD41D0363F091941C64D41F6AB11FD245521BCE839D8928AB93BDA141053E2E85 11537F3C002932C23FC9CA0532D545E4359303 |
| 522 | 65CBDB7E46EEF087524451A1101CB26A3034E3C96A14BE21E3028A4111627348D683C8 A20BCDC4CF90C6220D90DCDFEF06770A88B7F9 |
| 523 | 5114C2C7A64C3CD73504A66520E4D3CF6047EA7281D5DD29B4601E5E0696B70F928880 30020185782FA750AB1F63ACC7A92B5667603C |
| 524 | 3242F5E154F7758E911F0A319656F51039E0A323FE1C426D133369D290C87A70924840B6 D167C359785FE628E3232D7CF8D6BA4F0224 |
| 525 | 103C061DE9F7276231FDA60AA21EE26B78F4C5CC422872E232E25F0B14B16838FE520B5 D6ACC480B7F17853C8AFC0E11CCD4814F2615 |
| 526 | 5ACC14043D99E7A518F5510382D02F8CD90DF4607F217547D74AEF97808FD444493FCE5 436C648C16D21998464F1678D2FAF700261A6 |
| 527 | 73E386C12F209735010A435A2D225B45540645B06D4A179FDA8F9823442A3CCA1FA5808 F00AAAF27D8E16DFBA344ECFDC9D100B442B8 |
| 528 | 51A0665D3E5DD5AA04AA0972AB582F535830B8F98D4C59E87438EC151805E807B6712E FAB68EBB06476204B4F5E260EDD8C70016FF1D |
| 529 | 72CEA153ACA9D3AEDBA72980CA85014A84A890F898519922EDF88E2078410FBF01673 9F440C08FEC6C36F0103D943EA4784B98CA833A |

| Index | Midamble Sequence |
|---|---|
| 530 | 4C8D9FFA7456BDC1EF009BE6086C294864A79876A0C13A584B777AE2E744FCD4FEE1E 1CA886104A84198E989397A4790768592D2AAA1 |
| 531 | B70225F1EC1CE96896E4C629383F79A9C57F55C158CC1611064751695DE8E91D136E39E1 74E08530B411FB3400724CE4D87B65A40B92 |
| 532 | BB018A8A903E9E2A9EB7734012235AD117EDF18CE9B342192EE8840E1452E4CE7D2FA0 9A0C7F03684624F85B4B221465CADFB49AB491 |
| 533 | E24EBC1DE84546E8381922BD46B82B131E292585CE5040FDC8EBBDDBE1506FDE28A75 F0126D0B9CE00E61B3CFF3331C0082E84EB0928 |
| 534 | A394478D88B401980858892807D2F50DC3B72C7BF8671ED960A9BD015916E94B8DCA56 2AB5DFC8531524399A82DC2E3E18672C832DC2 |
| 535 | 875B4E9585B33347B5D0BF01820A22BFA5815795E51097540ADC014CF6AE5824CA34F03 0316576015F038296F673385DF7FE46B08084 |
| 536 | D8356D85BCF844E848C9483462FE4AE47E2B41584E994ED2982CC172E03553D1E2EDEE 4128102EEC018037929B08F491BD7477A10706 |
| 537 | 48C19D00C368AF3B90D623BAA651ACD9CE2A3DB71B94410FD7D02372E0B8574D4208 57C68C2EED310B98FEA75E460D90737D3F8207E0 |
| 538 | A241CB70202760D6BB1CAAF0B1391230C9CA484A475583A5B5F9F0574DD396D144C4A A2A96AB3CD612C0CA60FD8992B35BE43D088810 |
| 539 | 8F00563960B326AD85C887004AFB2CB451A0D8F8DF3D9B837DE03A9E18DC6BDB37961 2617AC37002DB1BEAE90D00817D886668A60A4C |
| 540 | 1A3395EE736013A2D2EAC0C3F003DC6D01F00C14B6EC8F8DC8743820DA0242E92CD71 3879FF995E7AB0E1076554838763D028CAF4B9E |
| 541 | 3E41D736E6535781479C2C585414F4BEDADC0117085BA3D6A5D83AC7E23DC2459CC35 102D7A892E6D434C790B0BF2AC826937951CF27 |
| 542 | C58CEA3CC4A2ECADD26EE83AADE3C2A87A2E60DBBB11C821183E72B5A2496E50501 AA806D52FE2DD1887470DFAE01FD8BA60927D9CB7 |
| 543 | 3ED9EE536511CFB8D84316C419552963C85DA00D89E2231EB96A16B2F09D8D21038A45 4D9898C587E20B2B2DA03B58E32DE2EC5A6AA9 |
| 544 | 78DCEA2EA7A094A30B1530D2AF1D0F597260388DDD712212870C9C1172905C04DC1F9 645F930128DB99D8612DD046E0EA7B869EED452 |

| Index | Midamble Sequence |
|---|---|
| 545 | 9DDFB007E571823C16CAE7E7C9956EFEA8970958420C91E48436522B11DDC9CA1A08D49C4CFBE40FE09CE1952002B1DA0A9CACB0FBB0 |
| 546 | 158630C8AE7A0246DAC464707C0DA806D7297DA3842821DD393D69189D3FC688F099234573335EC1681E1941479A8624D3EDD63B1489 |
| 547 | 16DB52828E9FC366737A0EDA7A487D968891088489675E2F0897C09F3B18008FF75CB54BB99E1D25F00580405646AAFC02D536D7A32A |
| 548 | 6E64F541B78D7216A8E2C134E691971E2988069E90E3EA95B6FFDA68B47AAA45924BF6D90C022074AB2BA7F8096EB1A25C39F91615F4 |
| 549 | 8818FF8450B10FDB2BCF52EBDA634B9588BDB190040278563A50C0B8B6064A044CA4F0265899D41C74579FD526B1031316447F9BF178 |
| 550 | 346A31E5AB905B43D61451D2357C6604E2DA6018682DFC6731B006C4FC629578AE66B766C68855FB4EAC8E244B10D215A70A921704C4 |
| 551 | 04023E9EA1407BF4E282E642F0E77E21B4322C5A0E1AF063D22D80D37DC2F48708F8A91CE1A801F0481CAD3C6F26C8D230BC8B823277 |
| 552 | 2BFEF5647CF27FC46C28516ACE08E667024B8671168AB440059747C62AC3CA11120B3E8EB923525C8A40D9660C73ABEFD4A44611D4AB |
| 553 | 1DA4CBDEF8A6E8C2185F8F68F1057398AF8149B90F5736084825AC72AC2E2E28FF1A2B05C23B0D0F311A8DB1D0314CA30F32E0ADAE6D |
| 554 | 0E3126045F9FEC90237B56AD18D8AA1008D430EAC725FA521E11E2D65697080256094DA054113266DA4E10F65975F84FCB1A6AAD17D4 |
| 555 | 0B9469F8B99E4B2DDDC66F21640B55FD03B49B1C5AC8A010F930011F45B3A72338E81674AC913E55DE6870C9508D7C1A38B4AEFB02B6 |
| 556 | E280F2E5970B9804D4B831CB22B5C43E1CDF876217633122A51F45C942158CC84BA62FDB2B705507856CE24B685F062BF60A87D39EE1 |
| 557 | 33555C83C5411FCB30CD5B51E0E49EFB98C038E91C191584E4E943FA34EE166743B12B6F3B324A5644DC00D0BD20C54751DBF9116C22 |
| 558 | 8866C378D773FBF1681D774A8B873A663732CB2D520305BD129A8243C826CE2B0FF05A401308D53F0F012A056E789DDFD611FFEC0A09 |
| 559 | 888213E68B9D307533BC47D142CFCDC56C08930B6866C288B5710D562E541B4338D5633DF7547A019EC8B116DC5CB1C342C638024CC8 |

EP 2 453 623 A1

107

| Index | Midamble Sequence |
|---|---|
| 560 | 54B26A4F08015629AEB01A26D03E4C00F2F73357CFFC9D14EEE36811060075A7C94AB8889213C9CB12E6B4FC0EC4FC9A753800C0A5FE |
| 561 | 8C2C93D43EDEA291875333A1554106510B7B5080B4DD8C3A78576612BE61183D53C729888F295065A99333103DBE291085B7A7D6E33C |
| 562 | 48F49B4C0C19CCA085ECB21ABED37680D49B0AA53BF24BC65156601541A8D95A4B7F60C0223C74D748D18C1788212B87DDFDA68F4EB8 |
| 563 | 9F4B9E9C1083481C332A90E1D957E416E676862039CB986F0053389A27B268BDAB13418830AF78DBB698B845C0562805ED462F39B835 |
| 564 | 29DC62FFB1E8218457A934E09085DA759D927A3B511D4A410EBDDD45B7651F0119728B0661889770046BC63E2CE23171F920F0F75E56 |
| 565 | 950F92806EE72527C555600168274E8AD2C665435252D3BC524FEBC92C07C129266240DCAAECE06EAA2C89CB7FA2BDEB73E7033419F0 |
| 566 | 5D2B3117325991A48E045B21DA6DE23D014F788F9FFF6245C370A819E1CD7C595232C2A2966D1F96BC1DC1819E2EAE028AE97E4708F5 |
| 567 | C2861EF5CA6AB68F420588041F88060AB77777CF74A529053274367CC3A10F2CE9F34413A9166FA50989FEA66C273629E8270BB8A09A |
| 568 | 90F5812EBECABE5D301CB52A51044E524B1DE7F2349461204E256609F9CE00FA25A5CFDB26A40BE9E798A0A063E4B211D026299193F3 |
| 569 | F2087F5F80155481E2C0BB324CAC1ADDF05B31C24216E6C7D6C267C7B846960BD0561F8E414CA2CDD7974E8737BDC2706304114D4DB0 |
| 570 | C7C18D2E3B044781BB425C4D8E386E29A62B0D83049713655F7AE98308A379E917A04CDB4D9B4083404837ED5FE4858AF12B99AD18FC |
| 571 | 4FB318D9F387F1134317220D65B7928F0D365F010B0204B04AF2C7B8FB7AA04EA5487F981B15897E0AE74664179194C6A4E3AC20A9C6 |
| 572 | F64F241DD24C0843E473433D43A752F989C48C85940A99B33D7321F8F02E3B3CA14F06159B41E28A9379740AA6D52403D374916A41E7 |
| 573 | 81B69794C3B138047E57C89EB6492560CE3E10115685F1A00F61FCD36520C8742CB46D069834D630A209A984ECABD14508513953ABFA |
| 574 | 9B3785C99F3CF23DC58EF4076A0CB85AA6C56AA758E36704900068DE5C450E5B222F3F2A0009DE06364C420BF4ADC7CA5E190BBCD6E6 |

EP 2 453 623 A1

| Index | Midamble Sequence |
|---|---|
| 575 | 733558F87DE927C23879A2236F548AF0F030823B87D31BCA30E3BD32C03E91E9032400F E2AA4537948DD63CA4A614647D580A5D66CB0 |
| 576 | 13CEB1DC9B1D0CDA0FD32DF869758B81C18E76A82AAA212D9C3E07066F0A32775F06 02A682D409ADDCE69262A277EBA17701426F78DC |
| 577 | 78970B38E6123C7792A29EC36C8FDF599A349BBEE9204A060423037F012281E5BDA1CA 51C2406AC625AF403BAD9C4C5F5E28A8AEA275 |
| 578 | 214A64B2984C33C17952D1BF0671C20F5766B1FA233E6E81CEDDC443B810D467D31023 F93C89EA0D5FA0545CD8D0E5685F59E69E4C49 |
| 579 | 849C786A67F82BA1236E3640DD64054C79D526E80EFA445309E9A7E7B64FC2FF4720072 239050F49B69B20E5021BACCC713A4495B8EA |
| 580 | 9BD6F3153082F4C02E58492EE643A45C9C68EE6774E03804893D759FB75A6BCA2956269 011B20BCD8025B91D253993C792FBE0B40BC5 |
| 581 | 483C8ED21C41637524DD7568A63BE30C471CAFCE088D72FB878107860CE2C9B4254C4F 50F4B8E662D02FF211B158D2AB1E246FB3696B |
| 582 | 89621679E96FF1EEB08A0A65DE56082F1BA0885657C5871730322E16D7D9C95D9369C70 856F0192B738FBD2B05EE501FE2842457A132 |
| 583 | F5D0DB147F20143996F84BBF1BB69322FB31506553A2820305836E488F04753C54840E613 A0B724B6768B342F11897F48E5AC598D107 |
| 584 | 2EA3B14D094AEC921051480EC3DF6911F59770D88E7B322D6530FE1BD09C230965186D 4359D47BF7FB458146F86C4327251C683E5929 |
| 585 | E6493F45D297C12C3B007D2632EB3558F00A7898A23784989B1F89AD63139ED19E1494A 45488128B451173250B21C5F3CB7D791192FD |
| 586 | 34DA0BC232AD4B377461BAC935064329C85DFA2F74AC84442FCA6EA5CC34E4DA49F8 9C11E238DEDBC04CEF747080F28F8CF8684BE861 |
| 587 | 5EA06A2BE2AAD9C6161BB280D83C76CD4A202C8B0F3C17C60DE45CAC713AD02F919 1A0E4E39811B12DD59BC60F9B71B361054B7C1072 |
| 588 | 9E947358B6C6851D9BAC2E6E3510644F480E14E3C9806277FBBB6D3F00091581BA34477 0AF90F8B92A1FEA5594EF68F3857114D26E58 |
| 589 | CB3BC4F6B0AE1B1C52EC7C24413667EFE870C29D8292A020187138989BCFABC21279E3 EB5340D92C886DBABC80CC4DA0EF312C5DF450 |

109

EP 2 453 623 A1

| Index | Midamble Sequence |
|---|---|
| 590 | D0722FBCC2951A9EDC858B2A84D8F43A38B8532E8C51C652C982134302225350551C2572 93CB35516EDF7DC8D5A0D6B42BC488B2AEB53 |
| 591 | 15A3BDC170E3001A34E72B0B403E58194A8DEE470839F8BBAEE411351A4F70756CBB86 ECF556730F24D31E86100C47EA920F2285A82E |
| 592 | 60ABA234C0BD0447C17553EECDC0E34B78E8C4709163B29B151A34A7E49FC910FC431 2188F700F6B8E53A48A1DD07CD00A65A3C756FF |
| 593 | DDC08D04660D2557E24E360927575859B2EF1FA80B163E22BB0A85559631A4D89DCAF3 AB4A679C0A54A2AC4D56109709E140A05300C9 |
| 594 | 58E81E8BEE482BC7E3037D74B5230C1AD0305D60633161D458C22B05F3F18CD145A910 0C616D76EA10486F135102431359FBA26CF3DE |
| 595 | 16F3C9D1974FA27314B38B600E704EF78A0AF02ECA8CCC4EA93CB03A19E44E84EB6B3 E53673C23863449DD406C05039AF3A42500C0A0 |
| 596 | 1F6FA25C82521CB0AA34A1A0F07BC6D038ADC75207CF9C92F024DCBE763F647A87F32 CAC0A4C255937666A5EEF1085873672124C00D7 |
| 597 | C45494320F4C27B4D34F8C080344E447786EDD5A9BF6C7A8D3C0C1D0FE5A4015EACCF A60FA24D1C244CB125CE820DD50B94F513F5A45 |
| 598 | 4A98011500DACDF42E806E16BCA09EFBC9C0E0C6B1B9B4A1A887CA8D24338D362C55 748113D600D6CBA370FF02253EC701943B76EBFB |
| 599 | DD3CBB0B7C6A21221CDFFE729DA4EC960F5B20DDEC00C884441C6C43AA43F92A687 B0CE232DEB1897654A4D0368946865ED241C6191C |
| 600 | 8F6E8E12208EBA48590FE7F9E8E84E4884F13D72C3298A241BF44306AFD10B81BED6FE 148D92A682A670484C1B6305A1C68716C22630 |
| 601 | 07ECF180E8F810AA0B87DB50980EFEBB04E084BB96A3D324C9DB15E7232E10D4C8C0 AB5D66208083069CD119DB4BD6DA9F2DC378DB99 |
| 602 | 1AC7127134D1741449C67E92F87710736EE2C8AFDADF47E0F29001A1E179A677B6DC01 064A1B6F68400E62A0BB8F571838D90933A269 |
| 603 | 0ACFE8024F9078424912CB9A3B32CF9763A303540AA38BFF44ED36DFD818081821284E AC2DA4B16A5A235722BD8F06B17C62579EA71C |
| 604 | F9F4E6D361BAFFED1F32124351FCCD10AF18B32691A0852086A0A2EDB94A958BB8C03 943E1D6B03E4152016E97DAEB57562600A5DD0D |

(continued)

| Index | Midamble Sequence |
|---|---|
| 605 | D289B80EF0C6C508103E40433341D73FB270D73F14FDFDF2B880C925C551A88726727E0 475A6A9278AC7E920B7A649173BCE24F31451 |
| 606 | 645A1E871353C78AD282C4AD85FBB0487732A1C0704ED785147D6DF9260D9CDE66200 9847345824A0C744D9A728A5C9DD7997695E9 |
| 607 | 35D95C9B380B38AA0D270ED4B9F6329441B0636676A0E611B770125AD2254ABA0791D9 C7507DA039738FBA2D4D804CE3B70C98887122 |
| 608 | 64F08DB3B16060B2658194911 0AB0A5E74FA7A2656DCC08F88C1CC738F31572842F3EE E0136275639 15C3C6A9759B053C242FB928DB4 |
| 609 | 1E0C2AF2C6A6ABE41E37D3803FCEE2A300B8BD131C5846BE47530820944E5C6A3F3F6 A570B249A206602EBE0CF938E3166AD82CB1846 |
| 610 | D0785159AF0031DC37CAE0B0BDC1D0DEBB040683F2209198B751D544A7A7E8018052D 0C6222CB1A26F14749929FC25F6898446457F0F . |
| 611 | 47C06E710A0F217A049C1F6FA6C82F4C0EC82C9F440AB53F36332355FA30C11D6A101E 89FB23CDB124520E268E8DD5A6111F624FDEB6 |
| 612 | 8930913EA822F329C3EEFD27C590C36220FDB3360CD2212C9A113D87056B5F5AB91BF6 4D298D68C26079E72341EA0F998471735253B4 |
| 613 | 7D01A5F2E950170060E380D4E62018C92A55F5B3AC03A7673D12414EBDD4169C629AF3 A92C091980C7ABA70523C5DC0E0F6E0F4E4063 |
| 614 | E6ED30E5B00B92E1A412D73254A56575504BD8F68122FA0E592503A3F5130CACE4E7AE AE001BAAAF98C501722700A8FA095C3493C4AC3 |
| 615 | AE2621D0F1B80F8E5D48545A29543234E1447B9B8E28C2858B3B2C773254ABB8BBDE0 E6F3CE6DC312309CBA60613285A16129B56442E |
| 616 | 58BBDE10546D6CFB315D6416C71601EA59B0C0CD115F9B0C651C6AAC7BB5722A44011 913859498B25AEA5DD71EDD1038D98C5E8D2E69 |
| 617 | 3718F080C4B9125B842A80A7AB01F58A6071962ADBB37E06C51FCA163A20F094C62D5 DE15142C88BD4C644C82D129DFE57770F3AB24E |
| 618 | 66065A2746CB041F8150FA6E264CB590A96BB82C90273BDD4108E9DC11C5CDB4875C8 E078AE185756F3080B63897AB7F374A886C0880 |
| 619 | E432503E78C219447F5586B107A11E59D6C59955294B3D04AE83E673269DD6E08DA5155 6B331F4E987DCB1A856856C2C2BF8E0346A60 |

| Index | Midamble Sequence |
|---|---|
| 620 | 293CBD1A107099FC4EBD3A4EC94CE9CB465682A4D4DA92CDCC9571A884545F500B08CAF012E5A62BED4E3263A0B7B0FFD53952C4C5F0 |
| 621 | 4A8D18842F3F5C2C8271607B25EDAE4DBC184CB627C2DEDD4D5C819C299389C87B0D999F0B54419F29324AC817AAE821645971EF451A |
| 622 | 0E36036A3D3FC1FB0384668A59B1B2630BB700D5D26451BAD235C9D184238AC7E3B8A82B4E7E6C6028E7646F6B5BD4082902A1F9919B |
| 623 | 249742B9187BB06E33F4EEBF360A84B5168CE70E0046983D2960329DFD99EAE40C812DA3A64DB8B8041A7E8103C24A668893B991F945 |
| 624 | C7AD7A2CA44414704FD088801280387 62A9DBFF322BABDC16504866D61C54F02F2CA26CC042F23FBE0C0C5AA997870A2CBF9D6939D1A |
| 625 | 997386F1AEEEEA20E82752C095F827F1D6AD91665A6B121290455D0C544B0ABF9A44E048A85DEBE580B86B077850EC0A0106CB578C0B |
| 626 | 9916F513089A6D6B19B9B72A2AEABB1BD8C4A0467821D022AA079810332596BA431E8585C14C50E367FF2A06E9CAEFFEB546813DA0CE |
| 627 | F345501B825762F04D8104091B9EF0C2F44420D5EE65BA7F94B7499DF092771B2E6E1B37A6815A0A1388650790E86767D5AE57B0AA30 |
| 628 | B0BA6CE9794EFF5BAA4B5D4B814915C4B884A9A5273B500312B3A1340F488304F37CF7781C801B9C39A2C697B012BF35578CD161022F |
| 629 | F24936CF14BD8984E48F3EA0E926A6B0B180FC1C01E87E9BA171F34538D5728800AA4BE883721AE794C855CECD65DC85BE0CAA57D0DE |
| 630 | 9B82BD0E4492B5F199BF0E96239010E3D0578D49DC904BA46815B4470F436698C743983C7740C8837B9B816B6D0D4A5A5474FC0CBE44 |
| 631 | B8AE0B8BA8D19DB471662057EB968362149798776E121421F9AB05DDEBA942CACBC0A6FE49748B248104F37506D6241923F4006A52C0 |
| 632 | A49756E807C0555964546DEC88A11D10D32EC0F1700BCBD149E27BBB08ECE7D9FF0C292A360AC798621528C899CC9B1CA7430069D4C6 |
| 633 | 53F7D2C481998F0461BDC30700942453206E30E6386A355A847EFE47CC42AA9270866BD0FCBEF05336C0404605B51992895177B33D98 |
| 634 | E13A0496402AC6D0E6CBD517D2ACE1013D5972F80EA0DBAA0693ABD925B52D0466C11339892AB1CA852395037AE8725F6458E97835A6 |

(continued)

| Index | Midamble Sequence |
|---|---|
| 635 | 518348F81CF96C20CA697DF80A420B8AD10435DB9CFFEE581C950659F37174DD64014CBE048CD2778E49DD852999EB22F5B58431316B |
| 636 | 30DC802AE9062D232F1D1A05027E7C9B610E8E47B3D554751739357127A02782ADEA17C5E9961280E959535D2DB600F1890E379C853 |
| 637 | 87BFD833E331222DDDB00FE583A18C82686DCC5A88095F453895A4A22402357081 90284726B9BC56E99C6D69B036B94258AFCA5768F3 |
| 638 | C9752525EB07B84D4FE7328AA274B8E766406B861F1C33280A0E0009BE2608A8A700C8FE39D3A4A473FA994D485DB9E99154F92C10B8 |
| 639 | 045F4EEB9FDA5E6F32A504D710186F20FA6B929B4890402B64E2D1C51A0FF304A11768A2FD1F0518C31D5A95949C75C11D1A4EF1CC89 |
| 640 | 66C011DA198BB587174B1BB00E36BB31AAC0821DC297C3AB41F85A9D9C769B261CD009AF835D98D4A41B174605584DD94BB905710E69 |
| 641 | 0F68D26F8AB08348857E81D647B8DD6D4032F67C843C6220C39615846A384353D0688A9AA4300E454BA3B6AB3B1774880E645FE6B94D |
| 642 | 09175DFD185A10B397982D94942F79D3EF9C6BE66059012485B584166B9800176A06A58DB25BD178009BAAA2A9571D92E23F3E1C1FC77 |
| 643 | 0069D72B1F9B166E7C3D81BBAC440A3C39E82825FAA0C42A25C38C125FF03088844309B19541986D71ECCD324CBAC32F3942F5BF4B68 |
| 644 | 1352C835FC226B91C5952A74A569011F1AC93082D46DC7FF6E7632D46CE04CB0D34E139A86C80330FCD517F9D234779E91586976CC39 |
| 645 | 2E726D600DC508AF631CE26D003301635F84493151E99970F9B875A1F837AD929D5AA63D9122020CF568FAA0795B4270D093123AC507 |
| 646 | 398436F695EBD8582D409D0AF513EC74A6CB312A6BFC2488898F4237191D7D2C8A0A5140FECB1A9A5C11004E2A6C330AF30E9F744E13 |
| 647 | F017F42C456E4763FAE530D41D22C33F38825DB8D8DD02A95C43548C9D3C2A00F922FEB70D43734418082ECEE564D9FF70AB0B33670A |
| 648 | ECE004A2F5EBA5995200A36EF9C00BA5850437B932E92FC4199C2871E8DB9B41089AE5F958D1B10DC498A7B6ACAB187660540AC3544D |
| 649 | E5AD420EA3ABABDD6BA69516E29B20124D206C016A48E400A633BDD1163E6E48E293AEB75A13D2BA4B4203AEA293C3789013E0F4B1C5 |

(continued)

| Index | Midamble Sequence |
|---|---|
| 650 | 56CD4A720D555FB60A0A5AFBD28041C42039B8085FA5BEDEE7422F3C66635455BAB88 65BFAC70FBD8208C451C14D46C3068708B385E2 |
| 651 | 311944F3C11C69224315AECEEC56907949F3A27BF7B9B416D0BB6465CE2E6BE0BB82B C9B331C13CFF258F97502216B5C2A0AE23762C1 |
| 652 | 9B1242AA905D29512754210E8976D2C1C6ED3A7FDD9050A5624BD15CE60E686833D33 F4195EA18399C0A291BFDDC5E5441ED61CC175 |
| 653 | 38E2C064DA28D7A75F1C601FD87E0496E534E4D6C2E2B314918FAF5A25E5EEC19702E0 DD823536E44250F118CA68A13BCF8130D2057 |
| 654 | 221E24F4C98F60A06C17020383C65E870E3C5B41FC7A4A5D3DBD1B5DBE920514B33EF 6478B0247AC1BB6023565B19CCD502059D21B9E |
| 655 | 9D45AFDB317E1030699DC210122123C264C4B394FE0583D4F39D6655B72E6F06939290E 2DABD00EC55421855DF580A2F309431A43137 |
| 656 | 451F0154683058D927A2F6AE51B1BEBA88954B2C27FCE2622E035A8011224D47103C619 3CEE19263E4A3A40F570C70857BBCBD15FC7C |
| 657 | 92044D70300AA112B3226F5D6F859C976572BE11612DEB90685FC091FA0C19292EB82789 5B8734F630321C3C7E5240B31B11C31BD673 |
| 658 | F2D891C346551748C736E463DB46ECFA93A23F8058210D813E5AA4EBAC50500BE3CF24 9907A10CD9A85E05008F3241DAF8CE477A6750 |
| 659 | 94DB4E55089C2D518C2D6C2698BCB76A670EE6A4FC4D42D6EE1BA85228314B146D826 FAF8DBD645263C35908EB678A8C734776274AC0 |
| 660 | E9B360E53E8A4B2F452A7807A65140E3690A6129740E091A3CFE59312C215ABEA900A2 F830589B5EEE1FBAA12B8065DE58811B818C7F |
| 661 | C0DEAA95878628B9A854400F3499DE20E48208F9756D7C4B52EAA48D6259E96401C56B 338739CF18CD640AE426CF91430BED830DCCD8 |
| 662 | 8233D0694E156F40DDD0C529110875F8C982C8708A3DBABF91C43AD5BAC4133D2E50A 9B7BCFD2369F7D0897102208B45AC1ADA8646149 |
| 663 | 46749F2327BED7050D0F7857E45A58F15581E08D9A3B1569968A865F07D214DC16DE488 448199F767F81AE90C5EBC08C0C61D2AB93C1 |
| 664 | C0B2B4B1C28EAB2AD67DD62F258240F1AFAF904C5B7E31A53200733DA0369D3CDF98 0BF1A315C31CF2DF8921CC811D11516F7328C278 |

| Index | Midamble Sequence |
|---|---|
| 665 | C3927119A94E44AAE4D6C1072362AFA1317A8572293A3EBA0A6050DC56FD0CE88FD81 71A62F380C6E2C9C1A4219D835CDDF21126F4B5 |
| 666 | 4000458D7663A3E3CC3A79226C7B02E6AEC10B0B0ED482EAA6B8FC5431C8BF1092E06 F1129D57010269876EE4CDFFE84AC34962913C1 |
| 667 | 7836E2584D08121EDA83D4A35DB1E16A8C262FA994E5BAE8394D000D1DA401985306A 04569C1B1D15D8F29713317B69BC49F3C5E78EB |
| 668 | CF027C21C4284228F015B1EB34DC178A1B85E9D9AB8A8CD93744A7528261D65C83D84 0FFDB137B2C4E4AD83C535105FC18230CA870BA |
| 669 | 61108BAA4C838AFF086CE1FE2DB9D2D851F069E61074398135711474BA34B8F2674A4C 5B70D4688E6AA776C56601A192A6342C48DA42 |
| 670 | 3C3A1A2A90448AD611FED6289596C2F9926FC5647D0E1B7BC12905E6E112757F61816A3 8C098F59BD520F49148D29375425CEE6C1086 |
| 671 | B3134B3D1583C6A56248E3D3028A43000F25FFE417EC14591CC5B21E2CE78675C778652 9C06FCA68182AB7707C952701A362489DD9E8 |
| 672 | E1117D9373946021B1D22A34740820A7378AFABDC74C09EA4F76F3B460589B5CDA718B 3746A1382A535C59AC99DB15371A223899ADE4 |
| 673 | E5E1D910813E59C8787869D92221945D476BE509393CA11F570B418C048B450A0AE7389 E305BAE7D420666B3F935BF7518C9E8163509 |
| 674 | 1BB8241357109751E075D204522F6D8C2E89E9834A89C0F756E9384A82882A0EE459F61E 264A70DA02BF0052DF9A731D9ADBBFC0700E |
| 675 | 404755A41B25CC68A60199E79B62E3BF597EE89207562B2BB21581C5D49BE42352E4B49 8406168D33A44FD07093A292AA33BC3BEBB7A |
| 676 | 42865E6EC08AEA020F5DF4F189CE0E0EA2563ECCD425D3AEC92F247163380DF3C85A1 527C67AD6267FA8100F50ECE5C1B58FD3C2D0E0 |
| 677 | DA6238A211904C10479B006E9B4A5C5CAF62109D1CCA81BF536D46D0556708970EE9F BAE81C29E0AE9A4EA850D0E33896915609385D1 |
| 678 | 78672528F0868A84EF746B612C4CD82E492252F94500DA69E81E8EEC40F11CE63235D509 32890EE7E58081926FAD5F73D4187BA08F92 |
| 679 | 044D0CCB03BC9E66350772C0A9D139381208B4535D32FBF4A3B36E4764C2363115A0EE D670DA210D98374853CF4B194BD4710502B91D |

| Index | Midamble Sequence |
|---|---|
| 680 | AC24E640C5220B7B2400A40FBE05ADD3367E6979D1DC06F39B0BA69605C3174B08AC17725AA958295F99F45F0A12C35A3B3AC3CEDC65 |
| 681 | F22D2848458A17E48B652F868413045E8EFFA6283EDB014FE1DC229DFDB49815E9918D513B56420C66A1A02C59E8B54A46BF48E97615 |
| 682 | E8B195C41D2854FDB2AC28381960A5E69376856B05B8DC4141CE41A38552743FB78E7B74F84B1EF0927610340066EA6641581AE7D20C |
| 683 | 6F465C4E0C5A3858D16634E518FBE243A2A323C2DEB065BC22DCC68A594025130069E77B2F607F370AA5A7B1A151FC89FA4E02626C1A |
| 684 | F50C882604402DC564F15848A8E903F843F3149A77CBADFBC569EB90EB0A03939DE350C157AB360DB3876888DFE8B362952362F9AFA0 |
| 685 | 3000BD3C3F751664AB8E9AC205258C186FDD576C05309423C256F5D060A0971A1F8786592397A4F81FC6214C3D989974F24CBE8B3431 |
| 686 | 1AC2A18306FCAE921C48874448C6D9E1234E26624C8AD859E4DEF775D6044F3D2583C230DD3748E04FAE348D1ED6240EE75C059AA092 |
| 687 | E4A260D61561575C6560CD414CD651AB6A055453062EDCBB75418D3F96691B5802C357A6DD989C866768725348652BB8E56223C9900C |
| 688 | 7655365395E96145CA89CF912667E8AA0024DE37E02B06CDA0B392CD70E96C95C6122F48F67562D6530D00694A1E6430E92427DD8235 |
| 689 | C932374E9080553BD9F2FC7578DE39DE18197429A2A881A5A0141943C5B0E3D6D9ACFC4454507625D0491DF62236E6E73D0539A1CD39 |
| 690 | BB1B4745556D634336C67F6945C1735A09F42964D028889E05C8E912AD16F90E21226F8288DC641436A6C60A75727D0B1040E7968ABF |
| 691 | 614075F20D07388ED8C7F0E0D00A40D378546D0A2DE9850AFA64F93548A204C83F51473C0DFF08E8EF529474F3C17543912B32097059 |
| 692 | CB26C20EF4C84AD32663A08B015D902A941EB60E6071E76CF6092D481014AEFA230B286DE31E330119FACCFBABF14390D313016CCD9B |
| 693 | F419890E4315C6803A07CB2CDDA1F0B409B4953A6A3ECDCCFAC49CD2098743BAC38D12513AD625CE622B6F02D569B29F022D1870CF11 |
| 694 | 38FF606C4BD3050C73046B90B51D860A79648672E178E79C549C24DFD4B26EED0BCA35B01567C7FC0F2048231F3C150C4230441F3142 |

EP 2 453 623 A1

| Index | Midamble Sequence |
|---|---|
| 695 | 25B3FE1E12CD06318F59094B5C748332616D011AFD011F0993C4E545D38950421B1C9989 AA85EA571D4F9EA46898D00DD527D779A01E |
| 696 | 29D4E7C67F804A6807AE95543B324831B4A14C28E2AB2C9EA1AB2341F187C73C84DCE DEA519520806433572FAB87C03E5409FB961D9D |
| 697 | 6A781D8FE314EC04D6383826B3C669CAD8BAAD722104D2DB6465BB8ABBD6790841F1 1E8C05F21F155756C03092918E4918B14A5CF576 |
| 698 | 1795B04AC226C8F395FA4BCC675444FE495839E2C00ADB202270C04C88AC610B1E74F6 113C11334171B91A401435FF74A3E13CDBA7F4 |
| 699 | 07045811C0E9618492D0334CA77A8EDE507928E3D33D0DAEBA0D1153B7724E505988BC 7ED9C855DAF5F9A1148D888361912DD814A794 |
| 700 | 913211F80E82A5DFCC30E343D12897CEBE4B52C1E0AAFAE16442E4989373A380432E62 5D6E17FF9654437903DC4DA9E17BD02090D045 |
| 701 | 898A05C1130D5DDB0EB3062760F755DDE42B37D68C20C8B86921941506E97FD4A3F592 27B5B8B096019DBC86D90FC6000F7A92A71915 |
| 702 | C9960BA7B5A3813C0DBFD7EE47405842AD10C81746117E85B28456F76CE1F6666B19384 A44B06564870B5EE30C49FDAA45494842C7A9 |
| 703 | 97661DD2A4337107F3158F391C3C75C060356740E6710010F6DF5ECAA093EB1204FB9E6 F4135850251ECBAF5514616BE0B5A83EC1A75 |
| 704 | 70AF63436ECC3FA37243B422766DBF193B3816027069A9584611B4AD5BFC0C059F81BA 27789027DD6036645AB813C22D30E5B05064EA |
| 705 | A983B9F8AF0F156000400442B7B3293845F5B3C8F62949846BE025B024F37B6044CD2FF0 855D61BA3E90D8972335A8B1AC2A9616AB4D |
| 706 | 9291AA980AD6D469BB5E64329BD4ABD8000AC111BADE21D4F2E85AB095D055090D2F E6CBA04A79C64E9231EB8B9EA630F191B4712648 |
| 707 | FEF374C22D524C5D28A0828DB2096B7C42806F65316143E93BA8C59D234A88D0DFE147 D57A624ED329962A42E6F56884899E8730E468 |
| 708 | 152AE122C028603568D2787B84266DC4B5D863EC14ABF5EDA1BAC511471A7A9A10784 6A30F1565F96220CA868CB220ECFF4496D1635F |
| 709 | A87E5D668D3231DC217D9437C8644A9C35650CA80A291FC668215F471B3686869C30576 CC03132EA3B7AA2DA5001CCCCE7CED8A99498 |

| Index | Midamble Sequence |
|---|---|
| 710 | 103AEA7324116F042737AB1F3318FEE59B11A05A9AAAAC43B49A1A8BF000F9A730AE A98D08E4E272618F32611FB57F1A840E75CE9205 |
| 711 | 2E708D607E6B439EEA401862D35C1D6F072F8A7A4CEE4548FD0481A59B206EBE829C83 7BF1D568282130CC5EA704CAACAA7472E0AEF0 |
| 712 | CBB334794BA3084F7CE52B047758015982AE5405CF89D98C0F01086E9C98AA9DAA87D C67301C02A71721521AED1F10B8508474F923A7 |
| 713 | 820F2888D569B3254B4E302B5E0B14F095DF7D46C91C743DA607FCD0BA80D49C9ECB6 D5EE3A5898B75D7601B92904802C645154F837A |
| 714 | 31A3D32DE16AE300C4003A3EC148936026E4CDB3F0BB97445DD2FEE83DEB66060B66F 26CB02FFA2A38CAE2C841DD9C66F3883D0A2846 |
| 715 | F33DF885301A0F8C0A62013810688C4D70D15222517FF8AA293BF6A45E0B89E619FC900 FA16029BD2F3271AF59B722DAC00881E950B1 |
| 716 | 013EE3862A6BD9B6094766C82CE2F88BB53ECC9CCC30B4D0D79051DADD8EE9D15D7 7B88053469D2C611190C00ACC22ECD7892329C3AD |
| 717 | B684697BAB283460D3E25D02401DB05F0D34546FA4E2BAC21E5CED1EA383993AB528E 849108CF3D0324E3F89A7524DF23C04CC4A1E87 |
| 718 | 3F14530006305D0A4D2E688AE224A1DB4FDBB6F27897B34F070199611B25403F0F399538 4BCEE03EE891B320540F5F79EDB02B25C623 |
| 719 | 1AE4989CD402F1AB0859F3EBA8AB66B36E73BB924A90A0CF06558543C3172626404D49 AE56F88968AD280614F7A6293CAD75A68D5106 |
| 720 | 004A5FDD8BCCE608546137DA151431AD9E35A317C6F5580F2BA4A02870BD28796CDB DD36ED736751459E106530A2004327678A4740B7 |
| 721 | 7519620632AAB90B46E41B16908DF35E8E3A5C23864064AF5D4DE0BD3FD3D9D3197D8 8640492535A2E122E4FC1E0BA24696010F69E6D |
| 722 | 7AC0125ADF7D7DF442FC95036CE30082C0A9A46EAF0CED39A8879882AD5DD0D13D1 A885062B6E317E4AE99B14E17682009DBDA54C92E |
| 723 | 44FF22C3A011075B12D6739535691A0C6FAC154266CD95F3C87FA9C014D71BB458D3A5 43D97AAF288C17ADAF744851DD4582C042C326 |
| 724 | D80B34F25C2E41EAC28E111D7A839A51ACD0AA8DC6B9E478306D071EF668B771FED7 F4500C34C1551B13E54980FDD112600560A93380 |

| Index | Midamble Sequence |
|---|---|
| 725 | 331A63C1674DB384FFC0A8171A0A48DBC066348F793D1B990E471897083709D5B246D8 1059973811A50E055A4135EF6D2F6C320C5CDC |
| 726 | E20016D1173425AC90FC2A90ABD47C79FECACCC164777392C2D8BE32F60106441E8D3 3029A89B90273D98392F2D379B385422A71FE96 |
| 727 | B615532C25416C820C80289C4D71DD3A1855C3B2D072F72F425F99701EE73C7CD0D63B A018FF53810D19027B14980BADABA78B096E2A |
| 728 | 46F485EA4B99030981E64C8C68A51CFC57A65194A6D4EF1B3362A273D817C354BDA76 C304002E2973D3A33DD126A2D406F56EFC44482 |
| 729 | 26B361AECCAD83B22860937614A7134462B4C7AD3517B92F2756AEA0CDB04D59D2E15 0DD9D1E6C9445A268A28E112DF4431E8C29F6B7 |
| 730 | 4F21C0C9C921DA02CC63FD38A78CF4F2674E3C2F0E1A13D760BC1FA755D568825B2911 DEB5B2DB051BF4B44B3FC48028A962189C5D30 |
| 731 | C98A74C6CDF3E8B81C00110415CE74CC3B07DECFE0521FC09EC276053CCC551D4C28C 05FB414D25E18771F6E03259C3319BE78F0B454 |
| 732 | 9E86626564CB4377522BE05728B874C3A0E84EB4254687C3E2C1D547BDF6171E63B6EB8 A796615065080AF18F015CCC9B601D7890269 |
| 733 | 3813577ABF0E840C62AC2B0000808A7CD846E3BFFA2261F7F4FAC993F38E5B8545BC24 31B348F027F46D722E21019792A778A3F9095C |
| 734 | D0D2E50CAD6C01675D203EB45960794D6CC504C56FEAA12524521FC09249A87E71F5C 0608E9C5264A3BB5FABA3E06E8303921B1346B1 |
| 735 | D015C2B4E81C0321885DA6EC232A5D8032C70F1D645D7D735DFFA54F91C5B906C845C 9CB6FA80FCD6662118F94AD33C504E4A8D016AB |
| 736 | C85AD90262C5062DA06633324A0037ADA0329E6A5B1FB756CDEA8C0449ECCABE592E 33E81AE43B66B884AA65F514E9822E398BFB0C17 |
| 737 | 355B07DB174A3EDCCF885599ACA101F6B164A553010D1FD7810430F12B62055258277E0 93FB8084EEA2AA14F14934C5AE699B78E6BB0 |
| 738 | E3EBEF158026F0516229068A8472A698CB6168F149815890DE37C6AA9A8420B9BFB7A4 DACFB61A31A814EE5960092E3710C9DC2572DE |
| 739 | CE4021F843479C9D7ADF03B3C59601D913C4A586D6C78422EED852C9E359BE583C1241 3D79C4DD13BB5821A6021390F7C5BE039F1795 |

(continued)

| Index | Midamble Sequence |
|---|---|
| 740 | 5301381531C492ED6648A107A106E39DF90940447AB13C20FEE77E86D8B2A2ACFB4C1CD8A9596D2F14C30EB91203DB1FB43A531E6224 |
| 741 | A901FF02408684A71C95B108D1D5B7EBD4482CA8AA66DFA1BAAD898D35B69197FA07E44AD8034F832AC10CDA1C81E9830F199837A96E |
| 742 | 4CD63C08A865487C960DCB64586B420DA61DA0B71EB0F7B2CCBAF06BBC80CC1C9A1302A21A9784C22BFF063A3C9EC093B711A5CB98DF |
| 743 | CDE3AB1DD7A4003D02A5D537788896862B45AF3098BD58F6A265E228049062506FD54B48BFD5658443ADFDC6EC8740FCF827E7AEB0F2 |
| 744 | 084297B1BC8B2E550E0288A874C98D16FA0E6D60280DA9E96DCBEE7455B94376C406AA7780F7DC18AB4A403683407108021B1B6E68BD |
| 745 | 4167CEA40FA591412A3577D5FC054148310A4848FBF74CC3581AE2BE420CCE61F802481B14EA1EB56DCDF6C8EDC36C507E2098552B6A |
| 746 | D71E611D0544A4AD44B2051420F5F568E2CC6BD416E0E4D23F262A2013D4114FA32860F6A6DDD03DE6BC25E039A4D4CC038B77959046 |
| 747 | 901E23A528A728BBC93D618A0DE742490C16226F611EC78FE96D17C4E4AB266460F6CD66D24B8310A1605750DB4173151E1F48762F66 |
| 748 | C332D216BACED4CE103A74B719980E0B33B17148136887FC320ADC30C272069F599D1B019CC08BA556552D4A04C7B874EACF64DED608 |
| 749 | 9D357AC5142EF94C2D9594B84327F060A69F81639E4D935C80F90004316E5FA90B2D82FD5883C3DE09E225FB2D01FC1DD22A8202338F |
| 750 | 2493122EE5E03CBBF2FA23A4B4A84CF156C8BE021C5BA31D0D1857D5B9078286BDACB39A7A1B038A1310019851219F3B52F3AED0CAF0 |
| 751 | 1814B0DE2637093FF0D30F39AB0B3C78A0B98640D021D2747C76881C883119A5F444D6DA3661BBD52CC08789878226B22A5CCC3DEC0A |
| 752 | CEC5A60B6A562EB3EFE1382BB531C686BA4CB06DEB941A51725C0280DE2B3312411EB06F0FB511430B18BBB93628CB77391C1EC46938 |
| 753 | 840650FE103289F55D34759AE2EF3AD9D2C5A96F63B6EB9006270FD12A716868B237F6C8ACBC27AB101463487A7562B2C21BD2309242 |
| 754 | 4FA9D9217352A6741BA5C9BAE990EA80A470FB0C51F618082B30ABC38439DA821E779F8A40ABDB6B609C4F2A732E606697C300C67308 |

| Index | Midamble Sequence |
|-------|-------------------|
| 755 | 8697C00AB51B0734BDECC251095D3EA1873E4519670676B1B0598672D17D818F88433C8 0A113B8A7E7F64BC3FF12AB046F8116B0361B |
| 756 | E542C41636E4507D0466BC6410AE64103A88DAD7EBF84D50776426579E7A04EC3A5589 80628035D9AE5F0F0953A513EB932A641A489B |
| 757 | 6360AC9A3B975851106184A1F6B9B2CE2C3D59EF9221B1A81CBF132C09C60CBAED763 6F7E629D05E5FA8C4E6CF801128C205D637B60F |
| 758 | 3759E1925605C9D4C8A642473C00A7700BDCD1940550FFD376071E0E1F6F071FBB30432 A52048F33C560488E6D1CDE7F13629A8ED2D2 |
| 759 | 90BCFA950D44CBF3A64D5447B515766DEA2FF008D8D04A312380004F2C955A09325E96 8D4754E65AAB45EF04182F38CD7524A45B7681 |
| 760 | 03A83534AAA56A9D80ED2A474F6C90D7E54BA4898D619A043CDDA784B9A27BDC635 18E019A7C520554FF5C54EC3B30B48BD9305E5C70 |
| 761 | 2A6744CA9C9977628602C282F2A4D274264F55CE1E84EADA2B14DD56CFE8A403AB0D 582EDE20A6C05791F1C6FC207A2447626D36DA31 |
| 762 | 4E4720366F8C7D140D490F144D144E6C8150AF0F962163B67638C6506AE7ED73028C7781 3889269F03784B241C8E20EEB251CF507AE0 |
| 763 | 5D45A1336B44A70B237369B2F4775F2CDE52421419401CA91D061DBD751813865A3C3C D07B91E982A6AEE6998456398017843EF4418D |
| 764 | AF93894B73F5317CE328B465805CF7D061282019D0018F49F535CD450A346C8E68C3F977 61A96C825301D70A62A51AADB4205C9F2CD6 |
| 765 | 2444039764957808D57392E61F1E3DE66CE6166A4BD9D14FDCC4D60D821BB8FC13CCB 650C7EE100A9C6F029E285113FE3B6F135D0BB4 |
| 766 | 07102E269270C9EC03793A1E8FB2F31A4B92335E784055F168A30B86453E80E10C5A3B65 3580B8F3477F453D4881CC0378ED29040F7F |
| 767 | 771EDF1182AC9F6F078A1C16CEE25ABA3C12204E542F2565021791E760197BD9B41918C 19DA183B4203F221A2F805DC698E3D929AA82 |

Table 5 $N_{FFT}$=2048/, $N_{Tx}$ = 2,1,ength=864

| Index | Midamble Sequence |
|---|---|
| 0 | 7D1C1F290A456E82620BD3F751005CCA0BF4026582B7D79497729388F702B2ADB6CD0B CDE1572554C70D2CD22205206980CAF2F297229FEEFDA52C0FF96227481C127898E5C0 B61271F140395A28DE77799D5A509AC10989EE49AC9D0B0E474DB5EE1C46BB953414C 913E708 |
| 1 | DB02875F4D83D04C983CDA6AA9015F81413296FAEBBB2DDE9AA356D2366665D20B68<br><br>CC911B9EADA8704B800263A62979D1822C3212D2ABD431E59464FF63B977B9945CF8F3 065316486BC37A4775E0D7A1B3E841E6A77030656E10460AA92751E382751DABFDD840 4A07C752 |
| 2 | 964E17C97B8401A54626E33EAB6E140C02EB1D197C589F9B5CEA4BD31653B1C883901A ACBA4A16546626EB1D0AFB106D6A4E09A5536362DBBF5B74309EE44EBD205141C5B5 679082CDDB4D159DFA0FCA907AC7B3E0751E7EED3DB343511CA983422550BFD0D095 5912E22DFA |
| 3 | 90CC3532ADC880396F49B3C15A224E588CB93CB59490F8B826B00271DAA2B79074E4B2 062770C230C061DACF49EA53110D76F5D50C9EAF1490C7590CC0C68BEA757173302204 59F8D39EF06EA2EFA40BAB5C88BA9D80E9B9624D3E81DA241949D72B8BF9F629D8A9 7B84DBF5 |
| 4 | 857B81CF72B41B6CBF378C20B3212402A1817C1E8DA2470FCECF01C07B3F617FA0CF50 2AA460CF218B2D2AE060B57D46A01BF90109564D598F4CA426C59BE779C13DCBD3BF CA83D53242D3FD66BF51881D97ADA83487DB6AC3040E747C390721D0D13A3C4EF3B3 82EBAF3495 |
| 5 | 92819D21962A15B924FC010F754ECC390C478D8C5943341D9BF2A282AD358F132335566 BD1F0F4D70CADD03E0810CE6ED81E7D9261B02E5025B09421E5F02CBEFC18CE7F339E 35CFEF060B3039FBB830794DB877412E2EA3BAF9A1724959491B85454070CD52966E81F 468ED |
| 6 | 290537C52862C5A26526A5E2C9C0CFD2C612527694A15D358975029EE54BA346C2A90E F9FE1B39256FE031F1291C8FBBA9098771DA8B5248D54F2AAF674AAE77F7280B08DC9 271B992B4AECB1ABAA2A2A84162A28679B7BA58333176964B24C9566D348DFD7EDB2 B468D18BC |
| 7 | 84F113FF9A2ADBCD10D31DC293E2770B7EF443E1C080895AF042429314599D52713CCC 83B5A3C3E8492A944E3999553712D64E0171112BC56235EE520B133EF558BABD9ACBF5 3FCE47E4B9EB1701E017C35BD2F0D13C9707890B059560CE3666FB75AE648F4936D9CE 31C793 |

| Index | Midamble Sequence |
|---|---|
| 8 | 8F11D8D8AACA33104E0E8CAF263E60C60BE838A28FDCA9425123986B9A6FB2D4CC41 1ADC986AC1EB5A7A4C94613E3321B2132A94629236F8C16D1E955BCC16B2A62FBE1CF 889DA95D3BEA14D4ED31FB0809228DE509520F60FD09166C63D08E9A3E6121BF8F5D1 0FA3F44DE9 |
| 9 | 7BB48C1E08E83B6DC630634BA71202F965BA798ECF80E757B14B7FFC298103F4208F8234F14888 A5652A8208F2EE56221511E87A9801DD9846B22E7D58A6D2767EB394E7AB016906B56D6DC9422 01F62B879EE91ABE75A0325CF5DBE328CD997A2E982EFC4453DA4D023D2D9 |
| 10 | 7EA58FD844BE96898496200AE41CCD55C2F2D00E22C336ED8053D526D8A73B93B8A7E 8C94E62D4E42432919282AB9B2674AFCFDCB0281F2A42688F6E0000E343FB439AEC853 F423B2E2DD8C7E591E62F7C493FF5F031B94433F4C42A94EFB17145714FCB142AD02E5 71961D6 |
| 11 | 2117963D247351B543A511A604F4E483B118CBF2A7E8A1E30F4B807538643C8C501680A3 BABB79EA55E7E966A8D32C2D532215DBEA88F338F33F4C92341504E82DBD9506E98A1 5E9C55CFCD2069A54D7E91FCD9639E06CDD8CC0685E2C39CC20269C8EC03D18FBEE2 73136D3 |
| 12 | A671CB4F5808D6AFA9C7271D8B1CC9DD31AC2009E89861B7635AF98ABDA0A88298B8 7C108D735B991BEE903EA85699B069A2CA8243F16613E6F47F15F233A05DF4736550930 D282907B19CBEC63D2D0FCA5D06F51884F4B731ED2A329811690F3640A64557A148C25 DBCA987 |
| 13 | 1D9FB6E747D610CFFCF7143130020D6F00DDA061F60324098A8BE05E0A78121747A8240 5529C0C20451D7175AD61FB3D69360A678BF143829576F4094CAE69AE7C98E7E34C774 C1DAF213BC75B17E2BF858E4A8AD1ED6E08D061EE4862807D50D633E6B868F60F5DB6 7A6812 |
| 14 | C4A110BBCD8FFDA2C076F66184EED42F2A0D9B0B1AA1F0D31AE04B0D620484D791E DFB3FC94E093D05585AFD59B48043C441FA01197978500FBF02F4EF95E89F9344C817E2 FF510121ABF36241546350C50F02E1206D91568223BB833EE37EF123BB4D575D1955E971 FB5E75 |
| 15 | 0B05C3BD82259849DCA05B9848574B666B99836B21D92792B58EE416D5CCCE04A106B2 F4782A5F6BA0871198605617641116E7FEB8015DCEF2B00F74FBFC2F6C179404101128 74 815AC86E9852AD4588B8825CF208E9C52DC74F24B3DF965AC4A1FD046E5DFEB746EA0 067AA |
| 16 | EC7EDE11643FAC7A53F559218DDAF8D9D084A0F5263384222DBB7E18C644E6E41A2E1 1E5461FABC3B355FB532A3809EC2B118889409A6C7860ADAD5A4E3B974F94F29B44A9 00B7E301B15EC54D735DDF8BD87B07A66B4ECD4D3E1C53B103D14FF7F884510338F6C 6E16D8751 |

| Index | Midamble Sequence |
|---|---|
| 17 | 5C6290E0CFE2498FBC21AA67FE93EA8C7A59F16E9202F9C2A966502BF9F400D1A1484B 0CF8FA92AC1C46D5BD52263D56987703A5D978B95074CFAE3DB75D18496E82CC731D1 DBFC4817C354D0D092616286BB23AB8D2D2F490A1EF7277AE51B47239031648 34D606E<br><br>CD8E37A |
| 18 | 34B5C8885E7E4C31C5BF85DA88934F588DE42430CF8A91561CCEA032D00B1E0CA0A42 5F3A4B8A8E6CE4A470B699C0A2B38DE3F24FC0782B5613F3EE536C7A49CF82AB07697 734BB01998C1F61DF4E81360AFAAE6AC6E922CC8C152D84D089D2C06757A791EAAAF 5DBB318AEB |
| 19 | 58A5818405CB9713F5928918447D7DA882E585B5AF12AC0117B918F0CF0DD30BEFF7D4 2F23D0CDAC4C6C84B4C4AE860A24E59006F8F9088378366B85BEEA07D599521AD02E3 DF8240932F07A4D3EC8268EBCC73492D57F3B91B059F4AEB79C3E13C52C8F0A6A53A9 52C74B39 |
| 20 | 58A7702055B118270D3C70DF03445A54055A017566850A84A9E05D9BBF9DF1ECBEE419 A9BD1C2157F6480CBD4324F641957AA963858C7074DCB0E5DD8BE25FE729C08FB0EA E0748D2D5EE62DD319867AA69B70A6EEA8AEADC681CEDF6D1D83053425A58D946676 642FA971DB |
| 21 | 4C55CA54BCF575030B088DED50F60129250F2D8CA203FE801898A5F625A2D8769105941 9878B00EF3D91B8D81D39AB80DE83EB4424E6C6DE430BA3D521F67686971BC221560D CA956270612AFB44AE440E48FAB54DC553298290620F4F5972FBB0FC5E61D3C46EFAD7 C76B5C |
| 22 | C0068AF668CD68DF608173C5ABE60A73F9BF969C8E2A72D3F2412F8F20C6D1EDE1EA8 B800091650E57A624990562D628C8E120D80D6DDE2C90DC99A8A38FAA04DD60F3D49F C75AA59C8C357BBFE28FCBEE69C10906F64694A1C2DC7E8C4FE4436BF7D0C95C1BA3 CA566642DF |
| 23 | 73F137B68833010CAC1A916FC8FF55AC3F45EBDED71E4730C7D6708523179725C111883 994CAE053008BA26226BFC9C0569D74F4F4D5E8C636B535D0362613BEDF0980CF74B2A A46B9BD296427906961B42161FB246774DEDB7487585142EB443D37AD52778F8C7D4B4 AD74E |
| 24 | 2AAE64F97B4F5EA1974967C9EA2A5EA483600BEF52CB111574D726BAC70B26F33052C F02D97E0120C07E6022908C1AC093092EAE63FE25215D1140CF85A3F797179A27803FA9 DCF429C27D8717C5AC78CE81672C5C2FCD4F09889CF4E0288D339194B95AB61B56CDE 13704AF |

EP 2 453 623 A1

| Index | Midamble Sequence |
|---|---|
| 25 | C79DA77C306FB8AE95532773275ABBF4922C83A0031CDF800D80113C4A4D3B5E63DF9 01AF828A6484B0A3B0406970B4533B20B52F6291B75A985704672438BFC5CAD4E9E9664 BEA1E91C07ECE3A15C9213FE27A30FF20224E792AEC2F0C22517EBBB9B350FE74D8D1 ABD0C23 |
| 26 | 60EB305D4A8EB8A7F2FD85C6D046053D5DD088392D9720076157A8A2E4DBC188EA1A 695919884B4174B20AAB7E8DBEF23C10C141DA583CA5B0AB09BACD683673FD1F63C0 9EB23542369802B74C04152D88A20F6444A1C64A5A80874C80B2F9E7F96A95685A6C8D0 F7B7FB343 |
| 27 | C14C90A6CE07AF915302CC823997BCF12080B35E6E23403E1AB45F8000CAEF2CCD9231 2B1445F0AC98FDB630C363877262BDAD8839F5DB7090F9FBAC780798464DD178EEDFE EDC088636554074ECD9CF2D8BEEA891AED2553D02B51897082BBD8023A99B6DB0EC9 52E61CB2A |
| 28 | 2AF836D43E6BCC1C1F95B7E7AB0BB80100188F634163F7E669CDF6B1C2333487818B56 4F1393D2D0E60C92BC2A845C5D5D212140F68C556055E0D76AFCDC99654D72B1927E54 33D8C9D4255EEDF421AED205A9904B6F7A2D73C960F5C137250AA74230DDA5D500389 CAA67D9 |
| 29 | 33BBCDC495D005D95000A34D8DC22F7466282080DAA22EF6822D26D7524A1271CEC4C 2598CAF5457B51F85F7A536C39F2E1EF6D94909A9FD2FACAAAF2B4454A79EB157CCD 9F39EED9BB300BCD3967507E1CD65914A613859307A8D924C437DC32D51F173149B4C8 C84E8906D |
| 30 | 6BB7EDAE13593C867D800035B3D384869640AE631576ABBAF383914EF11530529A9CFD 4B26EA902B8006980395B20426C19C8D75069A17F29868043299A2CCB701A7925BF2C7C 1257804CC72345E21C77386548FCB0439139C0AFFD71327629DB1A3764F6A9BCC0CAF8 3FC67 |
| 31 | 0EEE84969ED24794664A3DCCA83792D80D7173233915C4D48F15E7204802B7B9FDBA3D 4B1B7F349527421E81168134E41DA898BB03977B424D17F9C87822D3BE5DF67854E4420 D33BC6D80A46F542C76B78A323514AA180F7099E13B5B550134D95329A68367BD9263E 4AB0B |
| 32 | F2BA870060F41E5270F87D7244C1000F1889B8E4B61704D865C5AC689621DDD66E91148 E299C13DE3E2F5E0AFB94312CFCC816B583450EE44879829A72E4D04CB639D44CB0CF B4FC41711DAF8E4CABB93BECC72161C7971D64B1631884E38FD7E5D42F737D7DBA73 0EB225BD |
| 33 | F07ED2988B5B40D5B718D71F3085F6F607B554845A2F22F4EF15A005F34E7194410C4BE A046405BC0156898E1E62B6E46D14B24C34E4A1B8B1C8A28800D6E731E8719B8E61ED6 48EE2F337F5B1F132F1D83EDB9B6BDAA5D2AC2C936419E767CABDEA0F14407BF786D |

EP 2 453 623 A1

125

| Index | Midamble Sequence |
|---|---|
| | 056A4D4 |
| 34 | 446A7810D76A1772DA03CCD07BF1A11402B09AE1C4AF3295590A90045AC701BAAFB8 8B4CC70F2953E27CF84A044E32DBFE41C075B2275011BC13DE1CD42868EE16462E053A 79612DF4EAC1ABF5583E02A0985E2846515C092040CDEB42CE39D6FA789DBFC0461175 7D5B573A |
| 35 | 26032BD6E5E7810F4906F2AC0434064BB9553684CDDCA139D0C10976CC6196B38614D2 3E6029702067370AB3EC902C8FA8B37C306F74FEF27615B394D665DC26549AC82B5B47 C543C1C7CEEE80F02310B2A951A61EFAA5437E4BC3012A3C76B96D190D74E6C299EFF 61C6068 |
| 36 | 0641D7AE6C4258068011EA4E1278412CD98C80A8640CE7A3A1D86A7D63A9A0B6E5169 06EBF539C7BB32CD1243D443B81B64BC6ED6C14AB0C147D551DC672362A124BB11FA 65C801159332787BCA46F898E9D5AB27F7EDD30076BA5AF7443B986753296063B745A7 BDBA75E01 |
| 37 | 61A106B3A1F67456A34EFB8482C83E164D0DE30779C798A3A78BF96006AD5AA90547A 175528C56D779B756492A430DFD60E4119966F47A7B85FAF877AB759B5D02D534E5E90F 2FF70189F3201E48398855EB27C10A14FF1DC4C92B88CD8D255A1E0C0867ED2C1E1B33 712F63 |
| 38 | 2D33685DA06BE5CBC1B1389AAB28155AA2F6B0D00B1460577555A658A4C07A0E9476 D5E356C7D310FA05537488DE5B8A5EDC76075B6481BC05B5062371E05EDE5DCDE038B 38A5F96BCEEBBF9C68244619D057F3DB1E025EDB3424CC691C75C87C8A2E230F3D3E AC01EA95A79 |
| 39 | 5F9574DD10793DB88924288A6EAD44C29B184496020EB1944686D7A51FCB85FBB0D9C5 0908155253204E624B5F83E4F1863FF8D52F8AF228844BD3F34FD649584E49DD9DE8079 A3BBF473576E2D8F19BB75AD8ADC4A143CED139DF0B5FADFC0044C1A38007688ED5 CEBC02B6 |
| 40 | 949CB4F0618A62AA0329588F75832083EE477F4455EECD54E451BB255EC2D968CF7FF80 A89C89C8D44CF6077E3EFEC3341D081100DE7917F8DB2C5925BA8E2B87D4F9854C2C4 F3B0489CA93296BCEC9F0C386D57DDC3B7EB09BC22F82B77C7E6F02F3C3DE8261EBA AEE92328 |
| 41 | 5B44EA3EBA1247B9D2EC71463579D21C98BC3502E8875FF32B820605849E59978593C19 900EB497E8263E5B9883C80F58F25A0C6E48616425CD42ACDAF949A798CA8BBEAD714 2C0364E6B9E0C28CA66D92FD10196ED335D66F586CFF12E70F57DAB3D849FC29A87AF AE6989A |

| Index | Midamble Sequence |
|---|---|
| 42 | AC4064F425D633AC64AD26E3323FBF35460D638A8BA638A3DC3C717C2E4D422847783 524A7AA94E4EBEF6F43B28D8E8852370A6F7259783DC14EF5110DB51E0ECF3D0D6D02 D0A789FFA056FD4CFE0AE098652536506A09B196C402308413F9E6FEFA20CDDFAA43D B5981EE97 |
| 43 | 16E836007BD7A62AF55F8A8B22BE9D497F730A0883A46B3127B27B2701B40E1889A319 142A7381E1AAD0A2E5E403BA53087AB64D1B6B6EF02040BE183CE4DA66E4BED8E949 B9B939C70C968491060BC296030B7A7EB899904AF84B436AA69A22871955FF0D3BB345 7BB2FBA7 |
| 44 | 412E9D161650B366859A81EA74605E4B0E0E0294C2317645F6C116CBDC18B8B337EA591 9643BA54C1B7218A100F253FAB4ED8E3F7BD0328626EC8A25B1FD2D6218EF30C108A2 0E6CFF27A2D37DED480C8C7BB9CCFC18704167C369C4A6046AA1D14B7F2D72DE5C77 F4B11EC5 |
| 45 | D6913F3C8F6FBF6AF82681522C65ADA0D19D8CC9263DB45CA2D521280FC8068A3A7D 009E141A03E9F2EC291633566BACCB602300F0575C67C56937E300CED2A87676E39FC49 4642F6E60EF7A94C0E1B685F21A83CFD8E919C4AFAE046325334D51BFBC9EC45744706 CD44510 |
| 46 | 3C44283E26E17EBEFCC70AC80417EB75658E64A09A35CC25C8F205B843640114F2A8307 C00CF38A4E8225F9D8AC13628C78BC6FC529534BDDB1841FA1752C24F541C54E27DDB 707D734379FBD12912D501C3394E4066EC6E640B66DC726A10DA4370C0DC1921EFA50F A2B154 |
| 47 | E398407B116D3431A4AB58DA99DE9AB3F83874A0D95D7AB399CA611542C063241C39E 2AAE85F9281711D2B20DA4528DEC3D7B48431A576EA46CF8D3B70625E628B7D29EE95 E166B32D9E4C0F531954961064312AFC45D4FC34B3281150D3DA13A2D5F92C5B117FE3 E0DC8AD6 |
| 48 | 4901DBFD8A99CB4B450801D6F71185C4ED923336310F190DEDFB377247A0B8D76A0E09 9485C0B0E957B2D38239D0D9160758E1814EF42B5545133 71ACD1F840C5BD01D4BD7BC AE17642CE72F6247F48B49314A4A49BEEB515F5779DBBEA9D80E38E41A03E1BB092EA 8663774 |
| 49 | C18DF6C17DE9DE059A2473A4C0146A3D3B7221684F3AE9D0C24714E6A0125B02474E11 D66D8FF5ABF1C40C83C5695796B63CDCD4865A9A0B6308525FB07E1ED5E5C38D013D E39CD5DE6A746A0767E30944E2EFB2E7988FC1AA7263A48C914BD4A5B5DB611A91CE  E1CB11122E |

EP 2 453 623 A1

(continued)

| Index | Midamble Sequence |
|---|---|
| 50 | 740E2E5D10AD092A46A302E8765D71C297AB0B29A2EA770F732598EA131E31C808AC1 02F53E934192B23AC1706306BAB13844A7605EED8DF1B0E55455AFDE6F1383689299666 26A6ABFD088B30E1D0B936396B3E7E96FA06EC8AA89C509AA16177C491AEF9AA7580 616ECBE5 |
| 51 | 4740FB1C2E828860D1293AA927F5B450A8B55058BA49FC3F548318C5876B7128ABC6385 CDA71033646F98712FEB0479A6D1CBC3BB85C191D64DA11A363822496639DF0FA37BE9 1281FD5FEA9AA4B22CDBE8E6C1BBBF25A033065BDBB16B4311D557A9755251E52025 A22AEC17 |
| 52 | 1676B6D855D4B09C328917323C13291BD9F8C0AD7F2CD2CB4F82A3F094A2DDA9634C2 E4E4B97758BE20A06C3E64E9EAD26E3A0420BCAD0C80F9E44B16A75D500628873BCF8 E1EAD3E37D205C688BCF7E6B83BA3B89973066A63A7159E777B16AC62D1F0DB6F1441 1785F2DBF |
| 53 | E4E2EE5BA3473F78CD44C120324A9918A30B61CA710794868F6E830FAFAB49E0093DD5 A0A32A4A9DB6A2DA1D82C203F2864083123E3BEFF007BAAAF12355DAC0FE8D066AF 801C8775DAE44843658740B0A6ED4551657500B8C437041070EBF0B31F3CB171EFAF6C1 FDC62D19 |
| 54 | E1CF422E49C4272617B18C56F5182168 1DC2F15E59162C34EA611C4F3FB6791C0ED1A16 DEF03101 02E926502981A971F4BEAE526FEB06DAE9CFA441374 1294E16CE76CEC2DC8 C376C92C512AD5CDC3A0A1BCCCF10B90F5532B92E3FF20C21AFE920634D2110AAAD B2E98EA75 |
| 55 | 772F033405DC0845337361DE5E2B6EC6C8EFBC329F83BB7C8112403A65F6280C30D2490 E59284 1B816C4C4E1DAC390B79F73D80E021602A0D6EAA1093B33113BA4CFB99FCB50 DAC517D8CAD0C3A650DEA0439FFF47255BCD7EB6AAFF4BA4DFC140E160C424D399E 90F377AC8 |
| 56 | C087D8CCC1751061FA31FE761DDA9F5C03C9FAE01880105D4E60A6221F1AE669934C66 902AE4840788D20ADB28ED696FD2E0AB833699BB683A09B34A37AFA73B78C2431E445 7F34EDF3A70B439D488A535799AB04A6E3771448CE0F716F106A09D8EB70A790A5E17F 3812C4F |
| 57 | 020F81A405E7E409A4C34C26F0E237F3B88857CE4A37EFAC42D25E4E192E181E2C053B D269C6224E917579A1B16F17C18340EAA7860DF8F56C11655A392A64CA9AAC2C4D90D 4D2B7BAB7227E0F2D9BF06FA05534C72A12DC771FDE57208E1AF08F8C67D80E8537576 C694618 |

EP 2 453 623 A1

| Index | Midamble Sequence |
|---|---|
| 58 | 2868130202F5A16968D4095C8042189E2D69792A3546E2FFCE32CDE17937E9031317128F5EAC31F8DD061693C3038EB8B6A354D13181A9D5050EE9C94FC31D87FDF002B0B1B51491AE24D73442517C37D303F8B0E7D9ECA0290DC333C7E05EF71E131946FDA43C851F45BFD3 |
| 59 | CFBD58320933CF1EB288447179E3645F688A75CE5943EF892C672051196C3C0485D12269DDA5C23EA691C45C11DEC9303A4242805934707815ED47BFA51783AB3B00C6D5BB79BA9F684F7F8BF4027E34C0AF0CD0D0C8213F9814C59EFFEC4423F14942749AD6BBD117F27B3C |
| 60 | A9BB16B850A844FACBA80A38BAB04DEC22203B2F2736D41FA27991120BD2E331683456CE875000DF096BDADF11AD34E6290FBD0FEB2CDA62267EE17741AAEA214536FED63477A4D3C23D5979E35910D433DDE16D46328BABD702D61850650829D31E69F2182B826A564A5E44 |
| 61 | CC806C7D5BE698A010C2B0DA4A2448BCA1716BB1CA857C5FDCA50F742502AE8E67386581967B29FC3BA1F1573527D524BEBEC088848C08075BEBCBA5B3ED75A63A708E0F113400E582460673B82982E68121DB44B5714E1CB4AF5963A391AB7D3FF1E3069152748A75F4B3DA |
| 62 | A853F6DBF76C4ED994B05144BA9BA915DB81F95148D74E422D769BA3426417A4C505012042CEA26C11A8A968CBBAD2F10D516D74805AE2867C1EA7C5C999CFECA61C2B4422990D7FC46B87AF8528FD81F8878F56F4BAB8BBE3273899A0AB800BA6C1794E6C8900F18C9CDEDA |
| 63 | CAB0814639045C777D29753AC21671771A57CE6D0701B2F1BAED8805B63E0C3A1859836CCAD482119FB76B02AF4518CF8B449D3406F409388DAA7A04933394CD1EAF5AD8AE103EE89FC64CF0DAD5955C70F74CECFAEFD2DE8300D110449D2E108EFB0C8893513F774938ACF2 |
| 64 | 6C0166F5CAA870DFBD89AD8E583074FDD6C28E44C60E285A4C959E300BE488D950228D20480C2632677D21CE2C1B1635F983FA615AE95DCA2CFD4F38A6025946140C72AFE8EA01DE72EF3B99235D95BB9053970139142E988C725C3F82A166FC41A7E527C98584F2D5BCCDB8 |
| 65 | 2D1041883C1F8B826963AED0C0B9E404F63A7A611EDDDC7104D5EDA1E9DCF7176EF2EC0A82BA8FD10C6720395B9851DD8BA68C0210872E64AFC2EBDBACA5AF45B2AF013B8217AB6ABD81C6B48B0D3053FA6F50CCC510B648FD7FA9034024ABC0FF756C55ED0345C8BE3406E5 |

| Index | Midamble Sequence |
|---|---|
| 66 | 11C1C119AA50A8F025995CA5C10601F36EAE0068E05DF188DF7A263402B163013B24901 EBDB4E16021363F5A66B8D7E5E7E09A457C8BF7D714ACB4D2D7D076344590B8DB6C3 725A398E1447F0DB40E0E7EE12ECFFC2B00B45D802F628439A54F68A9C63C388AA9FC3 EB85C0A |
| 67 | 94A28BE3AE9C53CD330B90DE92C5A97282D4C734F0882C2E5AF997E15B3048F8C68FA 728B4B885AF53A201594C1AE8558063109EA44AAE4F3F62207860467A880742A7FC4655 FB2CF519E253D96073693F2F796A89A6C437C00A470C80359FB5C2EDE06441B1E68FC39 EAECA |
| 68 | B0E2353068E61ACEAB55E146643241628DBE8F822089D63C1138B052C0E2760D6B2A849 66C70A64A1BF287FB3C6E9E13483E9E654A38FA4EA5704A26CF776F18D292AA9ABEC0 0493727CDBA05B4B58C0314CA07955FA3800DE9E5F9A947077818B5DB6C5A684F1C90F 0BA6C7 |
| 69 | 9518BC691544EDBB8F0B9229908C371E77A54E57D1C1252E9947389CD1081322A104BA CB4ED4019AC0CDF72702F068836AEEE6302B84EA21E54E07A8EBB3341A6C39C65F1E7 09DCABA6CFE1C1810F611C098DB490F2455EE7C61FFFB44CAE628F6E405564C7DAA5 AEE5D7A6A |
| 70 | 0E0B5830EEAAA345F733156A77BB836038A9C641E7E3D061E794E4721E2A8826C38FAC 94620710FD1BFF915391501328528E92D68BA9EE7A541F6821F5FDE46B702957C0A4F552 34141F702D4C0030B5A77F0865B83CA9ABDDC5BF798EE107618C2BF26A6E87D825C4A DDB2B |
| 71 | 899640EE1E53AB434F08A5C4BAAC223FE487652304173ECD3C58A84A3042FAD1E77F0 DA37BA63AACBE190E525619DF4ABC16602C1DAA9E95DAD6A2FB5F0F572034966B3E E02FF43883D09C2C0D05F98A6F5240638A1215A6EE34DB98FBC20FDF6FBFB0A771F64 CC73C516120 |
| 72 | AEB9772C7B28CFFB52151C2486622A62CE2E98FEE5CB3300312BA6C574DC02BA91E00 0F9E73008CFEC633687362C5E4E9C62C96EA563810BA20D2FE2E1F284F0C368A00FA387 521009AC8D432A56BFB442EF9AF457B3AEC371B4DB1A72E69F225383FA4ABDD8FE04 F22D16F0 |
| 73 | 691FCD433E08F5A478C0F08D5248F5C4D030062C149FDD499188E1F2A31E5C02FD2D5F 3A71120136A592B08ECAB8D10DC25F564F6D2E18BFB5E55072D6F009B91F6DD660F9A 417CFE12D3A7732CDD057F5660B44A56A15128A8D1F47A818E3AE14DEAC603D938EC 87186479D |

| Index | Midamble Sequence |
|---|---|
| 74 | 1D49192341E095D3C1BBF2BC053E1373988807D63F4B83A542304218A921DB8FDA00DA 1883F20AA835344B0E6D9D538E82BEF67AC26999A613BB3DB55FECAC5AB9244828680 843F3FB94226012FD7BCDD18065268E2A2FCA82DB8A13CEF81C7F96ABC856159EC65F 3B51E60C |
| 75 | 380716A0CA71F53D0CB77168E9C193A441139F0061622B4C74CF151940F78F69B12F42A ADE6575672D8A40423728C2E1B28AFA1D841B5122B6765BEDF24108367DB722293D845 06E2DEBA9130AB61DA534FAA42FB1A8FBD6FF6C46380980C5267770E4B3F05C6DCE4 BD21B5F |
| 76 | 340FCE0B911DF7AD2D2825754AC21A403F394C7F1094D48E655E088C2F65D47E3740127 78D4A4DC4B78CBB808EA0AF32C023F2D3AE079B4260B98A149FA7F736EE47C6F61737 CA5E0917B35078C6E8E5B59D93AECB94321694F9A59F36303578021012C3C5156A658A5 9AD78 |
| 77 | 0B809EC3E42D7B990A120C5E1B30457273169E59072CB1F1DCDC02F3CC68DB173D888 CAF81C495E9AFEC4197527E7731521744954470AA3E4A04F873599227993ACBD5A3EAE DB5149A99A610E9183356BE5EFEFE0898D20F6C2ED97A98F8330111701A6E54522CF0D 2EC32DF |
| 78 | 35D2D33AA45061E4098BC53CB5280738FE60840BD064843D0074731F7136F923B3F28F8F 2DB68BD6241A739FEA00702B45047CC94CAACCBC05ABF04CDE34900D88D470349832 A031CE3A97F1B0F0F0AA372B4FCE3B8728BD7669DED0291D2B7CD9BB7682D627FD0 DF579810D |
| 79 | 2A4ABD6B453A564B63B416DD2773A22496A4940D863E28C74F00AA9E6C19621524262 DF20C70632700F0A74D1BB955177DFE29B58B462615C3BBBCC8D5CC6251580201B50B CD98FE43F5D7F795C499198E1C16023582CBB6843C5D67588107CFF9EA5B71C54FC81B ED26B111 |
| 80 | D4A5118404067DDAD8B574BFC991718618C9CF6A647156446CEEF485083DB274652F232 A1C6661C8F0AFAA74762C26A8045CC0DB1C2196298919AADF8BA01B66D2EBE5F4006 2E1B62F250DADB61F2AEA113C333A10F86135FECAC7E21B29A848F7D273D7B05FB47 ADDFF4738 |
| 81 | FAA4162F1C86E5C9E964A70617540CD90E4FE208E3B6453510396EB7AE83B73593B0A44 0421BF09886EEEC90884FCE9B15CF39D74793B2C5EE33F0CBB48A8E514BAA654D089C A184950F38CA1869203D76CCD7CB996773FC51EA5D9105F9254E8EDEE7DE5D6966474F 18C00A |

| Index | Midamble Sequence |
|---|---|
| 82 | 2CD1659BB52F080511AA41F2380A13A19B0C98C0C923103C091E93BC6B7E2FA7AF6B6 E0413E37589C3988AFA5EB9F8CD3017BF390FA0BC754DCE9893AF2235F8446D6548AA2 6A66543E9905DB09633A6AD7B91DECE7CC64E0ABB54682DBA1C866EF5C2FA9C0B88 EF0BA58979 |
| 83 | 0C81421F9CDB0AC66C22981404A488D9726A7E277E03351542094A83B0FA7347D6514D6 CB28B9BDF0B7814DEBA20D6FB714AFACA9F2AA939D48CB56AEA04CE51E711FF615A 39E38059295AF8F8CDB8E689D25240356904C3606FF0E5B65658F15D0C1BFF33230BEEC 7AB5D98 |
| 84 | C5F95029DE2666999D5E832368EC05E09A0DD13CFB690A3CDD4E1C5635B8C82B58E0D B046868507E0826488C1060A31AFCAC0C49435B16BDA07916B7C7FE923E2ECB019783B C88FE384098E2EDD75794EF718CD5FE4725B298C992F724798053580455586920D5A2BA 9FC7F4 |
| 85 | 465D546B47069CD5D457BE708CBE929847ADF6643300880845C24DB5692ECA8C83AB51 4EDC10B4A5DAC07206AE031F34755F6275BA049927924F1759CFBBD50746E380F3D0FA 74F128217D4D07E7F0B71A3DBDE8BA6DBADC0401FC2C05C41CC2C7B86F0C7289BC4 F6EE9DA4E |
| 86 | B62385E81B162119994C012B977ADA01946DEDD33E880C93CA98E3AEA92DD6E7B530C 1B6EF8141F8C88390D841F75313166495B4229FF081836D74BBCB2DB66E5020587445EC0 714D1EAF969255F6ECEBEF319BAD854545B8643BE2E5C5311CE0A73C66659075C7C9EE 11FD0 |
| 87 | 16AD78F0D42DAC680A166BE8345A924F40D087F6DAAE8E1162886A93610920A3FCFC1 DC1991A82450347E29D2449F09502E2B56ABBF3673187BA10959C825572260477BCBBA3 4EEFEFC11FDCC6FE6DFD308609AE2739F5014C1D92C78FCA7A33C0311620F7DDC2741 A513716 |
| 88 | 8A00C16461157813D12F5B080E20D804650E770977C13894771D1256061F688E2FE29965F 3B2BB9EB85183AB9A9477A5995BDBA84A31F52694DBA82D9A13FE555A85CF5CFF9A4 C404CA33196D6A1BE55C185996669F269726556A3B5FD85B9E319BB543F703A8DAD1B2 1CF64 |
| 89 | 4168E6EC884F8911B0228E0764F8C19BD6F296DB0450974C691D6054BA18C92870C9942 D91506EEED13008F977F0487E3D1979181ADF4CDF94AEF586725BA67CD93CEB00E5D3 4144DDC693FC45C6BEE0752FBB09A3149CF13D8A90F8C557F496969036963C46025FC5 CE3036 |

(continued)

| Index | Midamble Sequence |
|---|---|
| 90 | FB2A5FFBB4B5F51000D3A50216DD44C23E087B87B5E3BA3FD388FA26C1496A1E7FD9 C82241B15F58138699082462617B21CF83883FC2CBC837CB4296B106E61B557032B16BB2 F6AF855B65C9578CBB8914B5D6B1D42734AF12FA113CF0D2A5521208665D768CF4EF09 774C87 |
| 91 | 0212CFD7C500C63706268AD2898452ABE473367E216324AFD691D1D5CDAB2220541A3 D2DD83FAFD5E8B4816C924BBF44CEEAD156031FDFAF6477103F04EC532000D652EEA C3339353F872B214CC13C9672F9C7C61E4AD245BBA473E9AC42C49DF1CFB5FA83B108 7834ECE3DD |
| 92 | 61F58BA5181BB24A04135DAB88790833745DCCA3DE6D60CC7ECA1B23005F857CBD51 B026331FC0270D96C98E27898EB4834887950A883E1F8A6F12980A8960CDCA9932F38E0 644651DADDCDD94A8AADAB89C48D060F0CBB5E55F7E153F61DA3703338B1C788F83 A4D85E95A4 |
| 93 | ABB128C1A21E66A10B7608E863A74CDE024861E2B85C281CB2924F730159C0EC17293E 69ABEC86CF34C638E97BCFC626FB90339EFC85AA155B4222B0849CA65D844A4C0ED6 E7ED175315E850779D7D6246FBB789837C980FCB885AF165EA1146CF69C52EBDF64400 CFD9D7BA |
| 94 | 5338E06F511DD928ED915B3D90AC32A9F5AF2842F0603831CA2FB2214D0981DA6C431 D3FA4369B62D4FD4BD33A4D6D04F083D2BE56575C67633457702CC811DF0FAA70CDA 12C79147151F070F876166D918DC88F502B08FDEBC0CB7BDA6F2DFE3AE0FDB6F99D37 D920CA90B1 |
| 95 | 051D4E2516208E243D84A8D720952DB22CF448240B35DEA79DF84193FB4C22F0A9361E B724D7581E8031D66F7D7366E33B508704C467F1724D97CF89ABABE47B7944E14FA12D C01EDD062A55EA5880B4920136078019BF3C93735EFF7249502EF78F0CE092ED87915E5 709F8 |
| 96 | CE1E46C4AF94CF3008637C6431117F382ED836C9E4623E27330292B69AD88E2F62D9F5E A956EC57006BC47343D7A82479281614608B80D2A0DF5C54B497E3AB8E40FD920B7E72 F7C1547EC919F8FD96D5823C98A96A42221C2DDBCAFAEB01EF830114CF50CF06F547C B5BC6B |
| 97 | F16010EB82291AE761E54F162169A643A8F29F127F35652442153DEF17C968E96938E5E00 4E24683BF15433CEF1B132D6A0004AF50C65CBD35BD882F6F372966EF6E3A0FBA56174 96C3F4A9AF087320A80A5380D7810D0BAE6A6DB16E670B16EDB1122B3D8DD05C88F9 3B62C |

EP 2 453 623 A1

(continued)

| Index | Midamble Sequence |
|---|---|
| 98 | EE87505F304F4BD4EA03D416C434B7FA5AC5AE33ED6068AA5A9209404DEB8689E9A43 64D274B1C3003932CB32A4B1708E06A757BB63B8B76467F7C20E466601863B2AA7DF6F BA3750472D28B63E080ECFD97AA51AE33CAD67616C73F8C57B055674F24C59DEA02E5 7E0CD9A0 |
| 99 | 483C872ED9382602A05DA003D881EB896CE6EEDD539AC9D9846738CA895F166792EEE 52219A3CC4CF217B642A2435F0CE7536CA7865F48F6BD69C009991940A9D639928B5EE0 9A83621F15E63BF702CD2F01D322F533D1E0A30A2C1E13934EB6D6AFB602FC77252929 CB6399 |
| 100 | F46817C2072889973988B9D3A2692DD5491D5EB438ADE0E5291C18FA5AF152126CCB69 267009BF6F0F110230D7EDB9B858060753992FB0AEC1372F13855BEFBAA853DEAE4E10 D8ADB1D5245CEDA117B0C11485E9A4773284FABEA1FACAE8DB6826B2214373DE0B67 8F7D10E4 |
| 101 | 8C79D340C978DD4AD3E226BFC804BA626107CCA90395963DDC0463CBAC9BAA8C763 A4F16F384D907B152107D0377976C21005730D1C3977D8F0D008D5AD9C621601352D333 CF3D17B0B262AED131D59A32F226A600535F69206C181BBE04AB35AE2F4136835D927B E8F5E995 |
| 102 | 8C67D9C612ADE1EF640180F6A19C80013922ADDE7A4160D60D5CD46CB20138BC6272 A31E20836A703D963DCDC86742413F70E7408ACB28E3B22B363780389ECE96E56876201 B982E3DC5AFCBDF9343A46E18AB400C52580B722E47FD1FA3C8A6B6C97E9A75569D9 4CDA23C68 |
| 103 | C162185479D70786E4A20355E312D1A4A55F2E1E429C4472D6CFC0389EEFC4B83ACF03 F44404ACEAF1E891F06691A0F5AC936832773C55877D1F14B7F17F70ECE864BA04AB53 BC8373DA293D8ED8EAD46473061821942CCABEC7424DE983330A0CEDE2A9C8C2C8B 547D46344 |
| 104 | 569161899498874F0C05BC4CE237A8CD9DF58453E89F2680EB0AAB501D2C02975D6F0A 85838B2E8721B8D0C2B8F470A947D92904D9FDFB25B9AF6114ACE51FD18D5E27351FE6 97D89496870D1333752CCEFECAFA12E3E836A0108B2C64889CA2DF24F33FC048B821ED FA450B |
| 105 | 3D004CB32FA1C05455E02FBB4E8B0A0907418C8C57F5DAA054035D1017B61A71C8B2F 3EE55E76CD8D1281719558E6E247A7360A22C9338598F13C4E8719A5D2E13259430DFD1 D7BB04E98DF93D5474FD21D6AAE49E06463E2E45FF5D52D63119E82051277332D519F4 2064E6 |
| 106 | 52F21A90E9B0E79DDAAB915E0845F75D126DA548CD9711146876A81622C52BD88DC15 0239B900BCDD8E6E453516B930E757CDC0DA2EB84F00CC11B343167711CF096BFE80B 947964EBF85F121CCEBBFE8E6838F181F7CC20D358D09ADE9A0B51E3FF6E460B14BC5 7B11EBC9F |

| Index | Midamble Sequence |
|---|---|
| 107 | 5D35C0373411A8E108C1A274122A29B3658EF416E32A8E615F71633E0375F438A71CAB1 DFAA340535999ACF108C172902B73A2D8B457581AA8C29153FA504A627680EB4993823 A48CFD83F9C21175997C374A95D7D2322BCE2F00B4F81334BEE9B66F97815358A593BC 8EEB7 |
| 108 | D0498E1CD501392A90B29A5D11A202F0DC32E0E942F454E340637CE41F6C56082F9CBA FFCC69A5B959C48A8D1F4810AA7431E51C61176EE52903A47858E1E5768DC56D18EEE2 2E020DCE06FEE4B763276DDD88B882AAE216F7720BF640F99D24F48394AA5CD9286C8 33B8C73 |
| 109 | A9EADF536718C4C48FC9DB43166AB27981B3A056BA8617B44EF6D2BD23CB7CA3904C D8F10D8B8260B307F695582C721E0AB563501676EC0D9BB6E36487E93B0077CD6B110B 06846B057CD4FE103FDFEAC27A9F37DA9502537C4CA7B669863187E0DFA42746237DC E1A4AAF04 |
| 110 | 59ED64CA408986C911CFFFB4584687AB982AE63AF52A7A8EB21F21430416C580B27A04 F04A838B2EBD27C46EF71C3BDCC4B31B704B3BF0FE86350B30FEA346F2BA5284F6539 1CD0A09BAD52C11845907720CAD0F6C088B3046BCA4DB50142AF1D7D48CD6EABC9F 5C796EC113 |
| 111 | 8A1DC9FBF5A7B6BB278DE5875E09A184C982241F01FC149F2C92A4BE6C8C6586550474 3A4AACE7380A8B856D11C7217DD32169D573019C8A4BCECD0E50AA8595D39F060CFC 5EBF7875BA331003FDDEB78904837B8E049399CB38D96AB1EC3E3A55CFAB40CB820A 61CD9385D3 |
| 112 | 470BF9A1B0B4E0AD8D0B6076F86C5899D47620C064AFAEBAA8A13B2D08E8237718A7 9CDED28CB6E2F93F160FC320574DE21928A00992503B0926A8617BDFD72C3A1CEF9A8 6A2431A70E8254DB1460B63B0B4C3F3032721A7C92458D199E8EDA678D84935BDD796 C29E6CFF2B |
| 113 | 5943957EBAA3D1EB01D576868ECC0208A12B6CC180BE0985544B2EE12A95D627E1E63 D1424E7C177640976325E22824309EA4FF16D4A8CD306C6E985B52C5ADFE6283EDB5F3 A765B13F5F3892043B681C547B1BFFB06C556E475364B0E867531B51E37DADA05A44690 90B073 |
| 114 | 366BDDA9F0DA41E2C75D1494C152E55901A082F8D70088E77383F293A48902B65E0B21 5931195CE0F7A122EFB06156A859684E4A4BB495BEF6998298C256F33368E0FCEAA2CC 600DFF611C62BA694E00BAF307A426E089DC19F3D0A5932CF2AD535328EC151C1E52C D183A5B |

| Index | Midamble Sequence |
|---|---|
| 115 | 9602AA640F47064DDB9E790DE2994FF759000A5FEDD0E455BAF168EE8C5C4B97B3242 DC031D12CBE040451D06E7F6135A74D2180D845E88BB509C016F51F85372683B6C5C16F CF95AD5BAABFC14A6BED5EF106A024C78A1CD5BE3B92D9228F6042DAD9094A90836 A0F78C688 |
| 116 | BF87CDAB38F12065E98FD60164DF249C97B531D17406D134FA84545057856BB997CA07 07D291E257DC2052040560DC825CC1F08F23A2B42A038073FAFE9326F1C4082E867DD95 5320E7789ADDCAC7FD41ADF79DB2FA8E15AC773996C76457BB40C5058B0430277A634 DCB495 |
| 117 | FF6BD31D6A1F0CCD33AC0019AB0C2087DA69F17F1809D6353735E3AC9E35845F1A1CF 486E3A846EB24A9C1D3981289C8DE670A24C8992D0A93F95E629B9543BE31917852C671 0E12BF20D96ECD98B4D5748A65B51EF655E4A1A4056801C1AB35947C47EEE977B06DC 06FD1E3 |
| 118 | 0EC24D4CC73AFAE1714463357E492AF99B84AD93F43380B944454F0934BF689F9B7F4B8 A8D8806E2018A15F596100E87A9AA25B21601E7F6890B61C34935EF8741113F9A09C9A5 D95E18650C130A568DE15AA3D2DF97FDB989202932AE5D29F0B3E0BCEA8037ED65AB A34A17 |
| 119 | 77AC1B4102CAA22DE1C7E6083ACEC15D892C4976BF42296F8EAA0646C19B1237953BD C7AB94246CBA049530B5BE29F500503A1D933870587DB5C70389E315F2D0F7D264FB71 8E617D1F5DA08B9A9ADBEB628A06579D3A841E06331777E50A39950B4B59F09954884B 3A98FC2 |
| 120 | F2DE1287A54816B401F2B952AB704DF1F08C71B54CE0C80549F2083120B1E21681B035D CC22526DBFE787D242F580BEC54810E56F65FEBFA505FDD640084196D5561E89C7BAFA E1A60D3829FE07D56A588ACC3164BA9E29EFF4D880AABEB949C2CC9411AFD9AF9404 E198E64 |
| 121 | 94C9968F5C7F54C1A8B51159F0E1102B0D6E8F58134B7E61411598441595EAB4909EC507 B3EF046072BD172B903FCD0A4E71EA0832A161BE99FE134E86C59BCFD30780FE0067B6 E55292EB0C5E52ECB87E365C5DB9C3E61E0E9CDE5F1BF38014394E59ADB14E840D708 5AC62 |
| 122 | 711A94C842CE4FBDB29032DBC6F1691D73E01D51D884961EB36A6B0E45ECDE342FB74 541820CB4A8B4007E77CBF8034EE4EF8C2BC9F4BCD84D6E86056E4CAC93675084ECEF 7265138BDB7FBB03AB6806A18268B4D22E0D8016A9FB50575802A4A8A2BABE8B07E87 BF22E86BF |

EP 2 453 623 A1

| Index | Midamble Sequence |
|---|---|
| 123 | 094E6A5E724E665D4436A9EE1513C9ACE0B33B48305254477FD1A729973F50160CCE9F C4F8D8883064818DA76B8014ADD271F968E5145B2153920107D388F0D861BA3CF2D719 F639057FA2A954EDB84470D53CCA157EECE75969C70D545E9EC4909F4903C0DF5AA5D 2C25C1D |
| 124 | A0CA7051F49AC2F1AADAD50E5B96C13039A46E1B29A698ADDC4942442E330562EB69 889E6D66823415D2C1A8793854A141D5B6B9ADD973341FAE7BB19AA414089D83011E4 BD807D6EE409C438F357EC0C7E2AA891A7DF6E5A6D61384FF27C40EB28C99A8E7F54F 95036E839C |
| 125 | 8C5237086BE0F5AFACF20E65B3D091311DCD7C14706BD80770DD00BB314FD342B8EF8 C9FDA908C39849387945318612E6D24EE889B21C8AF78594A05A016DFAD3D131C9ED78 E5468E01458200A749C8C359FD4CD971A4462E906098E42EC7A3F5D98D8BC7683FDFA8 FCF9E31 |
| 126 | 26788792160F058C8BE5406D7213C475A9AE8D013B408A0BC2681884F84A9018DC80AC D443C7D56537AA8844E6D1DEC7529E2E42CF4E27D6710364437D5E7EBA22B142DA5E4 23365C2FD97988283BF3BECDBABB287807E6702E034DA2567CAC094266EE889E582716 8AADC91 |
| 127 | BB5AB1B91449B428233EE7BA3ED2419A31AB123F36BD8F0D9CE3C853BEF38CC5365A 1602BDB1189430BEBD90D0C872272D29CCB8600D22F03EE4E83C18F2E1416DDA1169A AA33BD9EC45A24198CB1F3A7B31C597795274FB9E88AA112C0A33DAA5A9234767EE9 F07E0F446F2 |
| 128 | E46236F9C888D29A19AA1F35C7DFB0FAEEB2CFEACB388CB210A3BED13C1D710081D 0742A80D86BE20366685290240590DD51EDDF8C3A83E84729E395050BC9FEEF6427072B 413979EB94F7BA4BA9768D76B6B7D1003091BE85B3052BEB5F0DF910B9ACB1AAA9A4 78891AA2ED |
| 129 | 8D427F9C4543B3616EE27CF73C6D1016527A1ABD78FE70F75E15FC22E14149382B4109D 77C488C6205921EE72D801482D8B3018CA21361BF4B0EF7C16C341759557CE26E8808DC B2DD37F3AC14A2A4B5E6484693E1CF9CD81C207065A59103DF9F81CD4FA66539738274 7426 |
| 130 | A3F2F3F2C89BA413E232753E2D287105EEBA85FB4444598796D707816C8C5C0709F79D6 741074E9F186BD04999E201842144D6A7393F21F4269A45C895304CC55BC3A53009FD227 4F66E62BDD9F14799D264B9BA3E7EE78F08804F362BC6E0AFB691388ECB825C4910B40 EAE |

137

EP 2 453 623 A1

(continued)

| Index | Midamble Sequence |
|---|---|
| 131 | 930B4B38F0B117A2DAA7ED538F77262E7170C7CD8553A9CE8335920E24461D24E3E0A6 8CB6059707891045C1608408765DCD3ADE9F9DA30016AE0DB514CB579C0E89921BFE55 DDB63DA5141B52593DF1FCB476E84615428B7A16F81B7BA7B6AA15160BF94005F36F1 A99858D |
| 132 | 32DA3B101369755E83EA9F029CD2D67268DC4956A2E1A87FE4D304C7350B0C915BDE9 C976C780F61F3505C6499DA7F2CB2EE712D2280B3B503BD91D4955EBF05780189373C71 F64F5013AC6A4F9E88CDA756531EFC7E681F920F1F273AA38714BDEE23870EF4533848 CDA780 |
| 133 | 1E1F844A23461DBEB3D87B33CAF1E44420FBE28ECD2845E7267EF740F0BD1B012C80B 0C05DE196FD06622C2D98091F46631D2F24485708DE155B0F3262F137A605FAE64E7C45 7F7224986B9738B32A0D97892E2C63E1525B688ACACD9F10F4F1C2C35EF02AA6C3E42 C908ADE |
| 134 | 6E3F3AAF8799B81FD01B099C8BCA131C2A6651A825B3427506CC25D3371C1E0CF857D 9EE7D34211402428F9F05D4D965A8210C26A2D1381D0B257BC796B097D03C18F55A15A F86D6644DBB292402138646B12CCA9FFB80ABCE2F7DC671C33FC9CD57544C0BBA0C0 37B8BC136 |
| 135 | 065AC1273925B449027B8852B988A689028E358898FBE32348D22D560A223D3390E8FAD E5FE6AF729997326AEBA86E0F9F8403176799E01768F42725AA31460FC24520CCC72C95 5E81F05A3433BC1BDE787E10BA7B98A71697909FCFD002EC0DBEDECE61A3964F6D80 649D55 |
| 136 | 28D73C05A4FC15F34823D886003865E81DBB0CDC60E8C9E9E9F9A82A8669E369897BD2 17451AB2FAD06C0444662205F5459605EA537627F6AD91EE2FD618048B5EB53703991064 79AF76B29C84AF3B2720331E848BC434A3C84BCDF5544EE1F6C2E577A1343A90EDA25 FD51B |
| 137 | 08299890EA8E90C5F8CA077CA89D7C8F2952597825A695CE763E8816E917CC465A518E2 72DBE312533BE86F034A6A382E330179A9C1C7503AA9FC9D22B8C8D8CEB4BBDF0175 ED089E5AA70E7BDD31B12C37B1C028BFF5AE99B130A9956F116C6D8A4A08491D851C 0668FD7B3 |
| 138 | 1A7319A234B2AE80CBC85162E46995A80D4E8E6A85BE808BC44092C431DF359C049193 3E3A1E8C0483EE1DBDCA4B93C3DFB00BBD3D2034C3D9D4161899CCF0ED21D3FE3F6 C3D5337E612BEF5DEA24420C526CE58AC96864A898384FCE96F8C050AEEF68CE22DD0 47CBB21152 |
| 139 | C34714FA6CFF76BD1C22785DB92BA109EF680089A18E530FF17950FF9D1AB0810177740 D6002B5A7EC518B00C4708BED3AB83240052A09987776517DDD4E243D6CD3A0702A7E 0C52ECBD11C73DE708BEBE9E1F81D292805D85A15EEBD2CA6595A21345549B588283C E39F53C |

| Index | Midamble Sequence |
|---|---|
| 140 | EB54EE2C70B6F2B04B140BB3BA3E8888A533C843D1FE081D852D6969D9B7A1AC6BA5 7DE88C2CA02A32B881394838A0C510BEEAE292480E95B6FC551D1AE35D57F5D3EF369 262744EA4EAA8A684A4B20F1C6376C757223FEB43F48681E7E41A18C453C4EB97A2A9E 954A7A2D0 |
| 141 | F64982599B15DD075C06A86E409B9DE1CFA2BA12E78949A50489303B0D49E309410E1D 507BDB447E75B74150606FE532E46449AE8365913782D465D3106FD97343C9C6AB054D2 18E86CAE1EF51DE56F57DB1F63F4B0B8A3C693F68FF2D5C9C4D6BD161730EE31281861 15E7A |
| 142 | D5800B985CC8CA4706489C1893BD3552B8872996F0A109DEE9234C9EF16D8531C71063 B303C3886358E0E3BED85C8FE16BF8F09A807AC8BF60D779752AFB618494AD04E37C54 B285783E819691C9D715A4AAB390C69D78114EE9DCBC6822AFE987AFA43B2BA7C5804 3EB17B6 |
| 143 | F9406334F0A2F00957AC7B80585E6829103B3C21410DEEC637551C3F566A9002AFC7A2F D111CE160304C84224B780BADC5AD8FA5F34F182689C9559CD31C58BA0B8098D59AEB 81DF64FB1ABF51D095F54703DD7C927FDC04956616A67C8528811CFE88ADA04E537950 794B70 |
| 144 | CE54AE91E15A4CC7610D8C3E2D261087C15474C1EF403F0729FF50E89059B6E795DDFC D5F06ED0C73158D40C9DD190922854C556EC7CBB02BA04413F3F88DB54BD0EDBF8CA 557740DA569A9A21C3A97CE468D90A5D113CEA35F3DB4C9EECB809EDC655025A738F 956A7142A5 |
| 145 | 2971BC7A5DF2D4B2E7C110438599DD1160C3C350E80873184815A365C077706EBB20F17 0A9B5CC3782C5BF249CBE10D92D46CE3D1870A40578DF40D5F9D5A1D7A7381582ABE CA08F34E52AC717F9830FE18A67628158691CF76FC67B7EB928F71644372E14AF05E25E 528FA9 |
| 146 | 9C23044ACDB8520B475F5D7A6B69C1589E6BB5517C00C86C4723427D0F682C536DC7E4 B43FBB4102A528F8A4BDBA70E1065061AA1AC8D084898EF713D4EAEFABC93E2A06FF 9B9217FCF4DDBC9474AAC608897193CA11AE3728B6947DBD3EE4E8864040F962B4FE6 A6E18648C |
| 147 | 9AF900C7B209BA66DE4E9C0A82FA7A54D1EF45B039420844161AFB7B9A441D7665D64 6561E3838087F161441D7225DA452DB4BE82B84855DEE0A52116181F661F88899ACF9D3 B552217F7E3D61AC772490F7B08984BC6811FAB5D37B0C79616B99D596122DA1E315B1 A9B1F3 |

139

| Index | Midamble Sequence |
|---|---|
| 148 | 121102F98AAF5E6375849B9761D2B7B2E0B0EE84F2BB42E2F4C7C1E9DBD85C68855584 689B72E84C6394CECA1683228FDD01483C93CC8F97D630BB8A89251AA752352778DC48 5B81BA41AAA505E458DB3217FF9F9E3B53CF78487CC1C2259808FE0206BA536EAAED A45DB867 |
| 149 | 6156516376C8ED00584D27A75B327CEEBC5C20CC0284978CE18CE042729CE0D5D1911D 86136DD0531E93D9868874763E32F80F7510143D1CA310DE4ACA1ACD1F8FDE69B55F93 E0BE8868D4940DC8D3F32A1E6ABDDE2FC016C44F18FA2694CB62A820192056F94E4DC 4AB97BE |
| 150 | 35844EADB00F637D297A0C65D8E28B97634EAA2840F83F06AC99DF8C6827F692C33F6D 718F3497659266D70203874C8011700094507FEAB2EC5792C5728AD8A49C4F7A628F2209 E743855701B7608F3D68BE2B71AE42E81072DE4C794F8E7DB8D034EE4CEFBB5A414428 F033 |
| 151 | CBD4BB8E4D29F4655163C1408BBB112D809091044F52C1E89C5D911FDD7040DA05D4F 2C7369B82F68411CB43765BDBA29305185E9E561753AC2B66120A039146FB8411BED13A F5DE67197DE6D4A7F1A0B08D724C22622C4810D569BEC8664CB1D391E9281ADD5BF2 F25C6262 |
| 152 | 7F21B992C1AC209241DB93270D3988F23E38572B8266CA8C96827B75924F1843CFC04646 E6175CDECBA85918E1C2B882107760CCE461AA992F2D7CF66952F6669758F060A8E2B2 41D5471129DCCAA3F7CD3EA2D5CAD6E9F198BF54FD531CEEFD98D929D7048C00028B 29F794 |
| 153 | 433B8E2AD567B53C7E34F5FD14C0DC2F2035821244A1B17D8F23676C5F237E4B4C2D59 C82CC573429B429E2A356C502184E8B8C0F7030CDF2F6D2F0C3F4E135716842FFBA9A5 5A689B4430D5E81CB83BDB14BCF716AA52096BD28542376B99FFB6F231810E4BC31244 71D8D8 |
| 154 | 016F5449C2ED28DA71C55D50791294C13D96447F6BEA4D704E72F1AC6AA80608ECB4C 9F36D45CFB4608CF9D25062A52424F8EE1AA4365B06EB175057242BD8047C79BCCBD8 F0D966C71F20DD21C717F697406C54A11C8F83F57A7F2300185D5E977CE215A801CB421 F1DCD1A |
| 155 | C4351DD994EA7FC6557285C814D036B38882F847ABD9A03903B098312161AA753405B76 CA0A234C157220520A7ACAF180B5165C7E1D647EC3667DF86F8B9D64C655D46DD2A49 D424F53C69A2E73340A302CF23E839B702FC7017D0DEBF74683340B309164BCA797645 A73993 |

| Index | Midamble Sequence |
|---|---|
| 156 | 44DFC2C32611C3AC72340B7313CB95E34943CC2E39A6294F8C3B783BA080F965220E96 D50B8C05979B164F0C208DBF82312E3612292A579825984111C2180D5F0212CDFE553675 FDC54C41ED0DDBF39EB718BEBBBBDAA49270D34B626030DAA438E86F53AF7EF79887 8C126EB |
| 157 | D5D0AA9AA27DFE9281CFA84B2989A83A54119EAAD47B5E9B1C9E6471264783287230E 548EE9AFE102C37331B834609AB30E3628299A973CC7430FEB4B0DE1B402EBE602A9B CB7DB6772D3D8A8A0952FD5E4BFD3FE4AC38A7890D8911DFEB4148304D0A4C838C5F 10F8D1B88A |
| 158 | 4D9152A02172EA047DBF52236304D7D494768515AC25751823E09228203CC6E9688808A3 5A0FC6ED925CCE1AED10E4E9E532587B04F40B50415A8368677A0D7B60B8B3040E43D 1C39DB34CF21AF9A78BA953D451DA1F7BD61400C1515C629BD095AB7A5D2D61827E1 6D7FD4A |
| 159 | A96DD04CD23E721FC59D9E68249EA72F2895B3C47219870D6F98D13E48E7C2D09A831F 4B0E220E25C6A5C6E44131E0A2C93894251528581E9CBAB8CCF0DAFDAA36E06A14416 EE16AA2974CF6B64E94125B07107B665B47400F6BF2AB859FB0003F4176F50A1ED8672C BEF678 |
| 160 | 239D4513B7E0A3989D85B7CC85205C5DB92A483A34A8297010D8802A6411B0D378C76B 2D89AB2ABF08C5B17850CD42EBDB86CD9C5882DE1784EC9FD5C230B440D11A6603E9 8FFCE4B1EEA06B950B828A1A6DB0C6A5984CABB5DF894FC88AFAC315D0C58FF24784 A8EAC5395E |
| 161 | 823F7DC31064113ED063F2397B79D0D0EAB40A13990FA056918C2C1DBB3452EDA8AB0 BCB128FD6209145B7AB82A97B4FED1E037181E0C8E9D01AA52B30077AF7659BF07352 EDF1610DE589FE8EAE6196FB40F14D9BA714F695D32799869028514FA6121A9BA354B6 |
| | 27E73C37 |
| 162 | 31698F1E27516014E9EC2C069225F320A08BE62C852C911C6E978C363E1EEABA801C516 68D611D6889B9442080F6067C1535459F9F7E590DE4546DB3B92218BE162A0A8A18D246 8F329B9C00E64976F407CAD4564AA6CD28C61521745FEDDB7FC3CF6C3D5AA05C10B2 FED2FD |
| 163 | 6AE65C183888E9B26E712B3F86E2D8C98B4F43354C8869DE64FA504045A685F73C0280E 1810B4211EA7AE3271044669258FB4E974F05C961011E889424F0B61B8EA8BF94677C35F BC7515681ABA9B92AC9B1A989573257E43852B7ED42BFBF488F88A931265C48C7197B9 F91 |

| Index | Midamble Sequence |
|---|---|
| 164 | 810470ED428C7A29428B74C86BC69B81E67BEFC9E3F2D7EBBA20E84658E72386CF31CF 15771ACA89591B00F4EE13728A92A05827537C9EA23BF1327EDC53B1714BED25BA4126 8E9B6E1945E3FF6A324E07C11489BB09EA103E88792463195FC4ADCBBB9CB85FC0E2C 748AD8C |
| 165 | 05C80BFD3FFEB8544F493FB289145D00EA0A817E40C29423EE3923191334997DB230C82 B084987F09F1CB35020CF008BF14685E2BFD8A0236FDF4879B53AE63A74B40EB3F0B05 16DD94515379DD0301AC0E370399173053A61DC8481E07C9C548F3C8A740D29DB7BA95 ·367DD |
| 166 | 07CE0238A423B5AC0A20D34EDDCEB11E3152945CD32409EC690D921AE3BB2802FAA2 712AF39B2892254DEACC65CE23E253F8DE0C02F9F3AEE1F43E7DB3E8487A6DF3E0551 EF791A6CB283806704D6934D500016D12A0EF8924F2433F4F55F3A43F7C5D677908A97B C6759D5B |
| 167 | 149D56458BADF7328579800EE41F126EE403FFCDE4A20A702DE077F138892A59C26CE0 69FF50F8F653CC6041D9A32848543D5641460E3C1CB6CB9A88051C4CAD33456BE8ACE 575BE15BCA5575A3EF27281F247C2693E14032FF40E1D7CC29E00FBEDC8F9AB2199417 155765E |
| 168 | A75C328B821432606FAF5294D0CC73D10803A243E2B00045AE4A772C9CEB615419F8CA 816DCF6157B2C4D4908E26298AA107EAF17E804270DA300461307BF8163A017712EF8B9 AD30C6F11D52961D91A7BC6DB5AFA8761C56EF0AC957A4CFF4C04CE4A8C67E3D3EF 2044174D |
| 169 | D862C45183347B76AC7E8964BB6A60BEC11DFD44F75016D968111D5A6657C7612E11423 28AA445D9354814F93F082A2B1DCECB8159C1ED195A867B5851CB777DAC152866F0E3 709B80C02FD335C462AC961667203E373D4A4ECA9B2A0DAF12E61DA7A360AC95E78B C0D2BAD2 |
| 170 | 99A5E420F2B697EC6700C2CD0D4CDE3D0850FC607E167AD2CA89822B5B249AB1CE5C 418EE407F7105E3E9DB993261923A2E98870291CEE83416F2487C3A59135146D82D1763C F3C4E5CF5CDE75C30144683F85D31EF570C88CF94CC1C061A2CF10DDAB717CF8E4C71 82EB61C |
| 171 | 1EB39A3870707F7AEBB280520DFA02E913069105C2FA464A20A85E82663950A564A582A 762B1F407343F1AC4C8C581ECD6ACECC3832D323D76894F82D77C1D7D841DF4908C32 461E9C3B0CB2725DC3D105AC3E4B0CA76311CD01C03F33DC4CDA3FE3B82A3F25DE2 E7E8E0767 |

| Index | Midamble Sequence |
|---|---|
| 172 | 3F891E877528399CD5041878C32069A44984311E4AC7E019562BB212ECF18CFF7FA4C011D63E612112698FDAE90EC5075DF68E929899EE850FC22646B33EE6E97CF8E1B0827252C94AE796AA4D5A88A46168F404E62C975D1A2C50CD0562E3F4E6D8DC28FDABF2A05FEBF0C3 |
| 173 | A32242F3D09855F0E3758CD738DE89F1765151A343024089D2C20C030A7E78905864D90E6E07EA748A3F4B3DE75A33817C826645511D12EC14ADF69E28B51A221B2EA075F7ABEF51007614470CBCD74E9B3A766A3F3D9253304E0125AED37935CFD08222F6BDFC30FA83E47F |
| 174 | 1CB64328E0C847C7DAC87438575BB0085B30C23F257E8D5495320154106353EBF3D2B1C7BF929C0B98645B0763BB993111FA3D972DBA8A2B4A530E5DD40407A5A168C805953817E55ACADB2E3385244962CBA3275A22B69CDE4CACB03FFA1ABEB233C3F9AC40B2EE67A1D49B |
| 175 | 3223C7E17BDA06691B8E0EAE41B37122CD9C6095A4354F6994F39CB8D1F57E21BE3F282320957B8353AB31CC526EA52560AE7C434C6185BCF19532FF75D1EE0D94C6EE4F61E74BD620205A22A723CAE5304EC0C2C802D8B364ABFB06C96941A3950EC412AC87BAD7F9AEE9DB |
| 176 | B2A63033CA1445305124614C42333A0716D6F374917D4FBD16663D6EF3C0F8986D5A4C40F0E24AB911743BC270726CC613AB015E85C92832E1CD068633A54673165894E1E3D7BE621FB129414A6EAE289B96DBCA2CBC5A59281F18F740867BBF79EEA481525B23F28FC80A6F |
| 177 | D30A9DC76738C8AADB4345D6EBB0135190A537589874DAD1E0E6BA20030CD4A384151343D13F93BD7C657E523B4082C90FF115901460010E699EF3261039FCA5B6F3F58FCAAAF913F5CE027DB24624479C809B624CF1A1DF4500C5A27F6A1C9DB889E35918B05CDB<br><br>B6B11B16 |
| 178 | 3A216F92D59281D3134A007247479811DE2EC64DE280AB4171DD39D755B86E420801DB7228F8FAA7959F3186D4D6E988883C27503199851F8C3449DF56B7A748647F1AA31C702A8477594D218C794A61CE26DD4B2BB5C7932A4AF7BEE2F24BAD64D5699CEAFA55C0D018754F |
| 179 | 4A7C625B088540F9D649BCE5F1F34A5DFEE03422140C35D379B7605DA44EEFAC476102A1D78C1F0658F70C6ADC740915C448361C08789D90C0C7826F610FA828660441705D6E85DC9EA977BAE28DDDF7F4FD3DF9D6C29760B07393334CE3A1D91B8A6489D9BEE4A83412DC45 |

(continued)

| Index | Midamble Sequence |
|---|---|
| 180 | 07A1C2177841668890000719A1EE17DDED00D2B2F258C8F0D45B5B16D4881DF4A32E4DBC4EA43F4E1EB2D858478149316F6DD314463AECCBEC5702F9DE9B6B0643C56C286493DAFB3DE393671689B57507493565512A654632D7E131627F8A23A7C4E61F8CB1F29B319C1DC4C62 |
| 181 | 08F46691AC9141514F5F1F8879CA6BA85E542760D03A680C8BEC28A5CA124FC3AE96BA8E5880A72F141498A79451 92B5B49F65748A8A3A90BB4E46FF19324370BABC50FE9BE0BB992F208B46C0A760B8E09942D7C992D2262DFF17CBFBDDC98FCF3B51A9E42645804FD18F4E2 |
| 182 | 1077A1E03EEBBF1E21E5CDE770165801 09B0166E9E9DC749DB896FFEC7201851262A46564EB80B0CD1B03F3086BC5B57DD53052003B718EC0AE9427F9BA9A8C837685465B8B4BF7C1DC09BDC8B87E46C98690143E30ACB812DB09F7D0E17D1B5295E639BAB2C56236137CA |
| 183 | 427A5699C25776B4575A8860C80011646EA0557E5740201B36392078C09CCAE1D2726435202E96546F506F5F1AAD5D14C35A9F60B5EFF886BD4DD1061ED4904AB64E5DDC422B39B56A13501C456E91D87A78FB68C38ABF27DB7A3E0985CD79EC7F175C9247818D816B5CC1B8 |
| 184 | 082436 1DBEAC8AE8D91EA957AF98FF21D24252986A95A65255FB6B50AEA818438EA8ED1971131BEAA257F03891F7280BE41C9535C010ACE7C8D1264E7E35557BD09CEEB05CE4E7AF90C301FABFC9FDAE0FD7835E184CB0D29927AB6C8903AEAE8830A1DD0C11BBD91E5D838B |
| 185 | 436C49AFA4DD2562C6916A0D2871594E411E2B86889C2D370D2AAE1362B944210820588 9AC5ADEC389193B186DC4A7F72ABFF535ABB38AB46BC0156ABD3FFF46D0046C8201506CDC64EE227669DC3DCB0FEA250B51CAA290D16752BCEEBA0FB8F2222CF683361AE59C8975F4 |
| 186 | B598B0731F8330DB6B436F34FDE4022918496A2812A50D827177A5D6210599CAD919CD49983EC7624CB5A04C35464B858F96A5D40B6CE3F7B30D67AC6C46C621A97B5273818D04FF4FAAAB8E5093932C30BA799745C3ECDE4D04849AD88F58C741F1A6FC5159778B1F8BAE2E2 |
| 187 | F536CDCFCE5940EA7AE14AC039A0674164E5A3271C3EE9BAB4174DA392B4F0BA30D3374D7AD107E600AD0C62A15AE49A44123414EE235176856920D00AFC3F656D2E53C2CF7729AD22D7B9A46EFAD98A93DC0BC68DE8AC78E31D013AED80794C9AD6C491C208CA9D4F94F48A |

(continued)

| Index | Midamble Sequence |
|---|---|
| 188 | 4C17EAC3343672DC70EEE8B33066F705CF07D182110F33EB5EFBCEEB4CDCC520B67A8 0A2E47334FA75F410A1C02B16469A84106BA8AA477D581E16FBF34CE4BE1ACF6AF05F 64B96ECC174688B74ABC5C7E71372D1EE6E0DF40105A364DA524B43E6B00ECC12D358 FCCBDF298 |
| 189 | 0BCF34AF0B1945F2CC85363A5FA27E3431E32724CD071C6C82040B7B22413B0540D647 DC811A4CE993A8EF84880DA07B8133DBED489BAD1ADA1059968C3F74876845790812A F89C1B3E8B030E0C0EA7ADFE737A78563835E21DA3EFB3F4CEF411ED52AA92125C113 E6432AEB |
| 190 | B5310F81B89B5851A9A50CFD63D7440ACF30BCD0DF548649549A2EA073C68F2BD3476 D8187A6E430A51D13D4889449C6F6F0F8CE1C04B15C35DC68220F0F314779994A6E01B0 501EA0993FD1C34E5DAFD4F35AFF73B5E50AA7962AABBF7E0B7A044D83884901FA2A 0A01F962 |
| 191 | 538C954B60E5D1818702A96CE28BF885B2D2FD06D30D009AB4DF1528F0C4339D83B67 AA40D27F54406E22A41F69972D884378F86043BA3CEA254CC3F6CBDB9EF22096ABA5C 2FAECE4BCBA0B83D63FDC9B2E48B4675C3466579E7F5F2C1CA8270202760C290700CF 20EE02589 |
| 192 | 9C5A9E70725C20482455BC90CE1DA82DBBCA7B2A7C6EF343A422E924E190AF0D93C4 37E1CDC18EB020D5A23EBF4188AE8F4A6CD6E66302F36C42165F0FD35325D29EE9DB2 B2CD746BF921DA813BFF1775890EE21AFE149458A63A1BB945D47A9657AA7247F30A2 DD13950478 |
| 193 | 56AE533F6AB123B5201A1E00252B8BE6422F8E6BA642874CE6D12EA8E637938AC9521D 4E0BF5219206341CC1E8EE4B3E378BB49A6721B3FE5915F904ED27394B2ED0F094DAE4 91ECD4492FB22349D87357C4FFE2E182E405147DFD079F263BEB970A630402169A56FB4 A76E9 |
| 194 | 24CAE5DAD6EA49E7602C6ABCF62A7B130385EEFF0A5957510768FC6146105486A0590F 044F503298EE2215843695E949D593E24E10422F4C56BD11A2D5787DEF86CB3D1F4B9B9 0C52ED29C3D4D82B9DCEC84CA4BC60AC980D993E61E7830FA5C88C44D401033CBF35 E45E2BC |
| 195 | 38EC22EE5DEC5C2926B4831C9292331FEAEF6AA0839663A7B1AFD105F4B0240C2D272 626128C87763AE591D039E1C885FAC516A2317CF80B08405A8FD684E8523036881667486 89B702D8830AC76698C25B6CEEFBC5D913C3D127B9063FF18CA52E3D61BB5AFDC55F 5D668A5 |

(continued)

| Index | Midamble Sequence |
|---|---|
| 196 | B892960D7ABB5AC347A4A31242D19E0A56B48A675C3BF0DD8A63C32EBB38F532381C82854C62A9189C614D684CE28FFD784A3A99D2255B285E8BBC362F801157A302DAC837DF05AD8FB12F12F01115FC27A11C466F1587F75E61F8720C2B96851847095736DB45F6CF0CCCE4 |
| 197 | E92AFC90BA929479E33568C5D4097A1119074BA2770D9864125E1DB0075006D7518F125E5286393D60645A391B622C19CC44DB058DDE1A4DA205CC6E25C682596DBD8A74290A9ECB47E0A3A3277F687C89F3F140ECFAE8DDB3B1AFB1AAAD343EDD7C452EEA188A71DB012BC4 |
| 198 | 232CF82480B098A91380085970558501DB12B4DA73B125D39E557C768E951DAE3B800BF0DFF381361E03BF4546B6B6CEA1029D3D9312533A58ABEE0E629A4714622B9CD2BC7122FE61FD8729998B048DFDE45B69B44381B4F139E533E6AEF32B5E47E711B5DB1848F620E1A3 |
| 199 | 21598B243898F08895C462341695C4CE64605D9BA449E3DCB801E16DF815A40C7D20975BF7CF3F4D6B21087580D4099C0177BA53BA1095F1B927F1B0D8E0DC00C5797F4C8513A3CE6FE4D1041D28C2D72E947221173689A603BA902918670177E9FCADED5A00E7E5A6F3D4FD |
| 200 | 5E180D65E4A79CD222352A55D07029699C03903D9062EF4743D0B15FCF87C0F2491B9E8A76DB88382A94989A17E8CA39D9108D844687BFBCFC22E1F500E3A35A1770DC78B48F5F7E54034BC89E0A1EDD8C828C8EFD13D14E5608A44A0D705B064730B3F291ED4CEA5C62FD0D |
| 201 | AAA14E9960C2A069CFAE36861B1C1BCA6C5476248973A24D423398185CF05EE188661710BA6AF4518A694DBED3564DD8B685B42B18B7AA33625BB0339569362EA71614240B6C43D6EF5F708046EB683F5FB98172FEDE0607444F1DB405EAAE3E2AC2A5DF56B646DD0E606798 |
| 202 | 77F6E6DD20C7F1C6762D222ADE92ED4625162C4EB5EC8A1AEBB64091829EE00B9E12BBE806025808E956A469379C66A8291E4D5A1C88629679BC3FBF0D9E4E261742FA01D439AFDF9CA996B791B955F1D90301E1F507E9DF871C3D28C908C66991275E40E5168945D5871E09 |
| 203 | 1927EC4A9309A86697320228EB940CAA33E71501FC3BCAC086C5593544079E53B49DF68F9626F52C0BF6F86542D09D58A6A883ED6CCC509E997B22DFF0FA71FA9943CD3F4BD19D74ABE8C426BF1F107A88F1A1E39B8CB73365B59F4C7789E5C4EA8B59573C3507A920C44880 |

EP 2 453 623 A1

146

| Index | Midamble Sequence |
|-------|-------------------|
| 204 | 09EC0C41F444F1D4011219289B874E9008F5B547F7A4C3899AF4458BA2E1227FD20A4D6 F246F6495D3352FE95044D78547AD34B49DD6A3B08BBDE78E679C5C5A43A76658283D 45DE19910DD693CA171424C7F17B6BD0DA814E04A512B3593A4A8D383D00123333DE7 644D352 |
| 205 | B8181462561202433EC4FA390ACBD05E9FA35BF76C1FEB284E8278CD1D20CB8A0CF5B CE157E2954E4CCFC6E2AB588D920A64041C6D63251C74BC3F4D4890614F6C5F2CD052 BD93FDAE759136DA11CF9FE55C0C223F5393A214CBA5C940899661681B35FA44F36DE C38C24F58 |
| 206 | 945E8487A264D2E4C0464B4483EB2646C16F883998DE54F28EA3C5FCA281EBF5798F5A 9653B200D719C2F2E87982A7980C0874205E650C3A5BB9FDBE555FB05D7C0858DA29BC 9926D00C71C6EAB650E8E0E34D1A635F06929BCD5B04D58FFB6C4400D11AA3BBFA02 E6065ED1 |
| 207 | 0CAC03B4EFA2C20F28BE144FE8658A8D95C182BB17CA8EAC8B455D423520BB2679B4 05F458813668DAB39894EB39EFC66F8AA105AC4446A2D1E01E446C5ECED38177F5671D 97ED7512D909EF3F08C91C6CB47BACB4E915E37707C168213F2565BE786DE99E11215B 83F1A4A1 |
| 208 | 6DAE8FFDE0A21C63C935683DE6E80845161542D66A9AA0282D73F303705D9992EDC3E 100300D84195D8317C3B82AE7315EEE400F03F3C8E0B2540BAB0E35A6BA62D10065486 E736326C17BB812438A89E81EF4A6E2BFECF486EC9F38909E111C4D568833D4DCFD94C C2E34DC |
| 209 | 81753C414489C476ACA594729C93EC0F228541FDCE0C59FC3A3D3BB79924130F0FC1D1 3F1DC546B2723096705F4BC7541C69CC5E126893A7630C07DB6E089DBAAC9A46990A0 C99863A190A0EEB01F44CF1AA8C7155FFCDB925DFDB0D1E0E02A72A53A7AF573BC6 5087BE108F |
| 210 | F14241E3402F9D54FA94D0D3A953061622B70A20F621C86B27118B50F8EA9AB89E60021 49CB12E2566FCBE7E54F1035EDAC2A0ED01044032ADF769F64BCC4B3844751C050BA0 3C0223EBBCCE1C051B1B517D962D5BDD70123767339974657AEBFF3522D3CF45D51162 DC5C9C5 |
| 211 | 6C83F932192F86628BDC9DA605E958B849E617749F2E887001C3B00A87A367E14972B712 E20FCCD93890DCD60A8C8E1B33CA5E6A6284E221098B93A2878405FE03D4D39038F315 5FEB04E8E88EFB038598DC33CEE984B15FF6AED9BD91A2296E9A7BF6F7EC7C779E2F1 1CC00 |

EP 2 453 623 A1

| Index | Midamble Sequence |
|---|---|
| 212 | 3499FE1921003A1A24CD986CD90173576DFECAB26245771605018796l1F9F90785236F32 C91F9431F578E954300768E549F9188A907AEAF4B181F2818572D7267717C2C20C2BF796 A8796CAB105C5201B782A7089ED998DBDE50E3348679F57A1766A33F9EBCD49F508DE 818 |
| 213 | A743905C98F16847ABC923A507663CD590A78BE3A1852881AE018C5099DE66A63F2A57 185B739B7B5F4C39919DE01B05ED847094EC0B7D1861FD6EF625494927F6DA196683792 A907B6896EE4A42BCC552372A1D4C433254B3EE00F6334D2B8E3C130193576AED3A82F 33C03 |
| 214 | 680D839C46F2408BA6DD114A42ED314F501DD4A3844FCE0217114318FC0A1469ACBA8 B5F0608DAAF15D34D778326990CE3154DD1C5FFBF933D496C850BAAD8DCE3E3D2126 2F3A17C80823F25D3847804D34F284B28D8C8CE75E2FF0755BD465E11F5A1D59397790F DC895D33 |
| 215 | B8B20CE326D990B3714D2B6E7B38944343A548B915A161CF14750D54052015556903D10 AAD2DC9C3C34758C1A67CAC80D2C464CAF5CCEAF930A037E9B3DA798F0CB59F3449 57BCA8382722AD00F122E1FD0F36D28ECE301AD9937F1463EF2D944072302BE49F9CB7 9D602BA8 |
| 216 | 89B4472B1CA87DCBB57917D601C50F8EB1C171459713504A89338ECC6C01AC710DE0E F059708681F6D6C3DA7DB5D97D41571A4F2C9D42BE7CFB51620177DDDE70262E0C210 34539AF711B4E417A57897CD7F106DAE21E81ADECEB9A36D6BDBF2C10CD1F42F608B 860B97A1C4 |
| 217 | 62D3836D4A393ADC8AB19086CC09BB3D062AA3D51616E86250AE7C1A1526C11951D53 A9BF3018A1393BB6B4DEA0DC3F53167A6202E622E01DB43112022B72A46E726D353CF3 B3EF5D34CB9286FB90EEE8B87BF5961CE4D41809D07E5D254AB9FBD8204977FB2BC1 CC5A62208 |
| 218 | DDFC969E205C1AF6712ED59459612B55F7B6E48C08F54448ACF01EEE204C5CC28B61A E4D089A9CCD02C7CF58F9DCE631E7D4564D10148AEBBE8FD8B1479FF3D0A00F551F9 333F6A2F28496FDBD0C0071615DDE296CC96036F631E9C5A1562C5DE06BFCBD2DD104 0098700DFE |
| 219 | 5C2324717C3DDFC6A328E30460C5816621245900F6C5E746F9C2766FB708588CF00FFE9B 3E2F33228E1930D7EEB2EB02482B80784AE46BDE47502CB6C6064EA52524838AFE3AB BDD0BF04EE8635D34C2C2EBC9D9D62AFE120B642365BE042B0D717A7065C4BDD6921 531B4CC |

| Index | Midamble Sequence |
|---|---|
| 220 | FA6E3715B58A705882D5585461915B61B6C104A8AEECB01DA6F376E8B86B88660F7011 F1A59B9B7DCA461A1044E71594DF4260243D9A107C30AE7705734C2233260DADE14CF 92EF6C9C989DA34423D1BE46DDB29627D0C09E2E04722E5E33CD56BEF87113BFB0FA1 FB26D1D6 |
| 221 | 6981C23178761A60193C90DA9CE6DBFF060787FC5B34C1F05246A674908D7B0B0369C18 CCF321C63309B4E2CF20840DE8449D5660B21263735F21CB74643A925310B6B349296523 A3152817E4873F5D1A991E918755CB716539F57D546B03BEE9E0A1DB0D6F4C7CF66453 830 |
| 222 | 35776418E933B8AE4A8A30C6D132FB2B1DA8DE84E48C9F14570B366211DB546073C72D 8D5803B03582368ACF571584D309C2D1292F74AC2FBF70D00215D1FC417F1990908A079 ACF943B9A93B8D3803B2F3B83B64FC326EFA69B6BE1469A1234A2B51997149D33A6F53 C29E3 |
| 223 | 2D76F01E608260FD69397272E113D982E8B29223950C88F7587C1A9500801A25FCF351497 F56A379D683E105A3025FF0917676380348799E69AAB51681FFAA493D8BBC32568FB385 3BDF307259108D1D49BB959ED19C43F65C6100A3990A2CBA23815092EB54D72CA73215 BC |
| 224 | 3D916B89DB00507D02E1538BA5AC6F855BFADDD3EBE763A8AE121928611B24B33AFE AC628D2A981F66288E8929A6388C1D6A54449B3C424DCE8772EB92AD50BD2F252B8A7 8F35A32BF7EBDE5989FD0BCD82F0F5833027E8D04DDD48F1A11C57FB2222464DDCA4 2784C765921 |
| 225 | FBB58C665C9D333FEB5C2CA023AB777AEE4AB5514C4B8022841565D0BE1A4E0CBB29 A84A43CC0E237C161AD8F065C0110D93394382CE7EE7AAE7615FF718101A9A0B05E452 C8D6EE30883631F404A78012CC98723C7FEF39759A33AB397A36528D2B0456896E20F92 9F6D973 |
| 226 | E110BA65D30189413F04F325A332245B5152996E1695439170B3F41CD3B2513674FF8B942 47A0161D77BA49240DE4C3D6986BFCEF8C9AE888FEA0E4AA3006F2D864556B46DFD0 F20E96425ABDD8E07D1C7F3FEA0E5ADDB3FA074668523B448A70371EC86522F037D38 8FCB5E |
| 227 | 45D03A74A2647C45DAD49F33F1F292B01876113268CDA492863CD01AC2A402E479A29F E0C25991E5870F2EA15EEB1096AD0750BB6242224CFE67205500916A8820E38276C7C71 6EB5D45EC1FCD267B59878F05716595A929753C3ED17563A3B8979CB14E28989FFE85B ECA1E |

EP 2 453 623 A1

(continued)

| Index | Midamble Sequence |
|---|---|
| 228 | 19C8CA6D66BDB1BD8F4C919F34E0A5AD14008833292F26A89FC90192E0A741F2441666 9C16F43C7DF34C2D10C41B23A5347B6AA6182388B518461608A983B8030C021EEC19CA 6EC414B1CBF3BC0B7F7BB8DC64D2AE1E9D94DC8FFC498D666905AC0BE6AD1F71FC5 A30A47FBC |
| 229 | 5CD144342762E1C9D8453CBFC10923A691CEE708A9A5D18451AA06221714AAEE5373A 76F0A52AE995725092054967A236AD8EBA240B6AB516FBEC9EA84A27D83FE5ADACE9 F210DF06339B8826A5E4313E1153CB7D0C1A258DCF580364423AF6B9379955EB30A6791 C2574DE7 |
| 230 | 7167549F8C7F173B351B04E3AF0688029093AD1809E50C8D20F243DC1972470B84D87F77 4B6413F874DC2B5385720A73492329C48E5B1AEFC5B0ECE2E35B26C3DFD87A9E85997 E731E58B4179851006FF477C1908FB151301C30E59821DA245F6B3277A015FECFE3A4C3 543D |
| 231 | 9240F8E2EFBA1764DC8CF0F9BF0A34F44A55F248D0444B36A55A524657D1DC5A1EE14 191A1171ECA114C12093E76527DBCC9BE5584E8378973D5807567742F086C7E69B72BEB 9051CC487D03D5B4DBE7DAC64F139F71708BD24EA21044ABB9323FEEA3B128C63C0B DD5EC0D9 |
| 232 | 318E14D52D013A9372B780FCBA44C761C8A20EB726E0ED08CE19DD60F240AE1851406 E3768F23B1983B74E918DDA73996120AA921BAC5C260B1C759FD8BBECA135D99CBE9 C50471918EF8BB290646361F9A836E89FE1DF710AC891F178FF6854A9C2942CD19B140C 50D07981 |
| 233 | 16D2A410323CFB1B83558CC1FACB6E90C3894092F98C6E63D69A86C8F409084682F4340 A50B0BFD132F0F41BA78E92EF15AB209EBCEFCB318BD95E447A38BC7660A905873A6 6B80579811133C517566651AFA38F39575B55EA879D40CE9AFB511FBB4E905AF497C522 888DA3 |
| 234 | E8A737452C36D50F1304E206678722E7409E1E0F99A5B9CC4A43C1E776F0A605926B6EA 21502757CE1F2AB529E78C22AB2081CB0D1A85F6382BAA847604D3DE445837F33D3630 439DFEE0C54472760CB0ECB900C2756ACEC6BCB771B9C10BDD371B123741EB452E768 D8A39C |
| 235 | FFFE9AB492942C8F9CE9B8E09C3389340A7BBAE5549B9BC541C08F02A2EA9E91A6483 C75E325E448A5210C10C349109FC44EF9724776C86B9CB87896545A5E150E022126FA7B5 082A5CEEBF27F9375B37BAD4FA44BACF170ECDD42B0F5E10F4F84869C32048BC6EC1 9CAA81F |

(continued)

| Index | Midamble Sequence |
|---|---|
| 236 | 526847E45F2BA996F0BF5C504E5229D6290D2887A45548126C903422F00C0F5606CF1A30F53FC6E672429FB3B9E1E1B33EA302C2A98020EDC69FD0E201B5D1BD7050AAFB36256886F70541AF37AAF8CD2883D18FAEC7BF7591664B1159FBC0C426F2A8720B8C6C8FFDAE69A |
| 237 | E47966D563C26A7EF5884FC4E4C1F6D085769B6885E2828488342A2720103C717F4B4FA02D6FC56602C55F02909966608773 41A7B802F88E01A027D740579F5ADC6A31176498B185B7222B7DDCE0B193D579F67A6D6A4530CDAABDDFC5F472436B31D16693274C90324AC3A6 |
| 238 | D7FC3832B820698F6ACB9A2C785CC609A6922A661F7818662076D198194C979D6455CBCC816235874 2618E75D7592597D8AA85395EA96F60C691AEA1A428E8CB8790A67ED00A73A92391DE0E447E473BACAE1B1943CC53A490BDA8E9A89A8EEBD20664495D8E2DD9B9BF6751 |
| 239 | 6A8B841322671FBAA8A008968181E5FC09589EF200EE50D5FD0D929D61C5AC4058A1F844B36E25FABFD16A634C76E436DBA6BC60D712C88DC9B94764788CA6187ED0DC214806F508E9BBF6BE52A4ACCF4F28D8FC9995BDEBE25EEFF459F6B29C561F4348D9244E9A22AE1861 |
| 240 | 830DF432DC9E892AE59109E1A7DC7676AA44D74533E1DD65211EEB4F2E25602A4F5482E1DA6F663409CCDA2CF438CCC03B2B180AB185A14B38C61F811D47220B29BBD3DFB7C4AC16A916342A197AD6FAB7C935FEDB9C690E06A414FE1144817C3521EB528F9C0089916275FC |
| 241 | 85A7B2573B0A3174CDCB3D9C0B8863A8ABA4C362A7DF4310AB0E46D2A24B93AC1B8F12F0D0287ABB54A64A4FB40541C66809891C3647A959D2FE7699E622F5F5C9D135C414922EEA446EC5FFE63C4A611E64D15425FF22E9AF24EB28D3B280BF3FB905960D186EA05211A0D7 |
| 242 | E381047388 9F96A54D4191BE3CE2920ACB1A2A98CCE245A95388EE4B404A37D2E5475975D93FD7E4844D25449 12839E89D6A93BE647526A84388C033CB8901A57BCE95C37AE6A16680D207D0F79E6F23D86F390435FE2AEDE90305DA849920CF52C58FADCAE0E8693DF6F1DB |
| 243 | D3988839AD6C49FD0A689D60DBC211A53153144223502448760 5D283BD727A4C35717482B4CE939ED50317D1DCEF3A87AE9D20616CE2288A31E8A4173A34D9B5865103BE5D1F2249815F9D682716DA4313888027676CFF47C25D39E3A5DD6AB046C6CE85E561AEB7BBFBCE17 |

(continued)

| Index | Midamble Sequence |
|---|---|
| 244 | 133312B8F4474B90988DD1A8B79F0628BB6399A9A97611CD0B97DD5F0A264AA4700B2 E1D844300E588325C7A4D48F5D4C5B64E31E1A8B8390154A7EDE8BDF783AD4D689EF7 81BD0F58F00F204BF13FAC88BFAE636CD2927437EC4AAB4A4602DC8161FFB9B9142DE 478201A68 |
| 245 | 05EA2EC503AA2784727C4C1DF51D7BC6EE1646489BAFC64ED4D853C502083C04B023D 9CD8AC9D868EB4E9E593E25453994A2E33281C064AC26287F29343CE4FB56972E145C1 DDFDB51C34194397C830AF027190FDA934290FDA6928BB6E4CA21EC45EF8C5097C10E B283BFAC |
| 246 | C5A000C1E39707751D9EF6CD58A08691A67D2103AEC4C5F10AC64C88489AEFDE40968 8316BCE78B132BDA27E2597769D74BB48951A728847DA1EDA775EA4961B2F5F6222CF E9C9CD036432F332BEA6E38877E5AE2C30FC5795925D4A0941B00ED93DC70E428CEBB CD8B2F712 |
| 247 | 0340AEA06B4FF1B5EB1EC05D34163AC2E4F1D8261EFFF6ACC4C729082FD0B2470D065 0E43A062F5526FC892776C603880BD1CF328C57235B5D9D5609E1E296989AB5EE8ED2D 0E0C98FC2E814640034CCFC50365D431E90AEDAA7FE3B82F3426BE99012BA160BF4830 8826FF6 |
| 248 | 780CB288BE1E7C3CF5563457C4E715953B08D213C05FDB917917600C01A8585496E4A3D 936307FA6F2E5683DBC9E06500938C6DCCC592688F9FC3BADC960C2A536C5C5B4CAD 42127CA2680A43F98C24D52EF49B7758ECA2BBCF8072D15D96E0723E148FABF7B2F6E7 ADD2922 |
| 249 | E4781A6CDEAE569C07980311F02F8072A4A3C784BD5FFEF10D4222730D1CCB42E63029 0F7E6AD9A77E1DA040B15012E8905B02BB3F3A544BA19C390A0F1BE07278AAB2D2E5 53AF05B2E937FCC93C1AF3DB4151D087E61065CF657273521312FFFB6215892E6F5B596 696BF10 |
| 250 | 8130C982E8BE1D9B2A9CD2909876E4897684837D2CA4B20CD7C7648511A4BF41D20850 6BC921B9AB16BBA10873FE55651F7B71F1B8D41D4A9C6AC3391455030B754F57A3AAD ABD7CE9642A3C4D3B61ECC42281A437FC8511B57FD3678B0BF81AC56DA547DEBAC8 93C9818F56 |
| 251 | 66590EF5FA826030DB5011CFE2089C607D7CDEA84E47A13840A28A15C8ED4C0D03A86 0486F3472DACA4B7FF0AB4D23D58B05391044DD1FF0D269D4DB6739FE558FC1547075 338D9681E185DFA5942BB089D8FF199614155BD3A351A3E8B708E72657B2D280D76BCD 02D860F2 |

| Index | Midamble Sequence |
|---|---|
| 252 | 501AE494B0330D903C5A25ED84DC728472A56CFED115D66A4167E748B3C767640E0891 5F557261DC84E27921F7D0915A1D32EC232CB32AE42D23764642729427CCD1F5A8072F0 751F4B50DB69ABCA2F1451D64F70FFC12584F6AFEF05BE660C8D9481340E4715A6AC6 DBB1EA |
| 253 | 686897C317B2144EF8044B5BD95A08E6813D0B1AA0AD297DA1C52BB5190289E62519B D9098C63A299E3B240186CA29A1EEC98405FD8382942B41466300D53C8F85B61D6AEE7 EAF31D9B5F39F4DCD741758338735B1B1DB1FB5002423C7896CE404785AA7CA2BBBF6 8837208D |
| 254 | 0C27EDBC479C30E850023175915E442EEB28B66C84E0B3B57EB6A1AFB89C87A9ADB20 4D6CB99C3D98BB8DC6892ABC1D510300122A9E30C6BF95886FA7DBE233DC922C3D2E 2315103AE13CD136AE104D5FB5323F3CDA5E5687B5836C5A6991F8FF169302829DE06D A126B675D |
| 255 | 34AFB545DD58EBBDD09F26605A02351C941348F163DE52100C25DD76A21CAB305AF02 334C33BE0694CBC7B77705812E4378228D5928269D518961F17101A8A2302C258F3304323 422B6CE7E8B81A9357ED867241CB3FC6EE24499327EC5495C6CDC590BFE0ED4D1B61F AA686 |
| 256 | BFCD82CDBFC034624E580A8343D932D53A1EA883B433890D8AA5B5F7654C888DC634F 728A7D2D12749C9A96F41C021C11E05F6DAA6415CAF3471949CF5E3FD8CB3786FFE402 098EA5F15D9E3CF181A557F05C0B912F82209D92D53E700ABC86CAFCEE76CECA59A0 2F60B20BC |
| 257 | 5226A742A032C35088E9E0B8F3CC65A3AD0BEBDCCF2A0BC65C8A8AEEB1758062976E C0142E600AAE534F26574E2D2D2EA0DC94170C014F07A5B9D3567D414C407AB9EBFE0 D21FF2BF4907815AFBDAB279810BB2196BF20ADCF383088A1808797D5434B60CB0AF6 4B335CE3C2 |
| 258 | C3048DAB6DF410DC67A6AA6872277C47623E4448C6F8D08A4381D699E21005E85A7546 20F6BE579C835D85C46579E1453CA853DC2283CA459B5A4144F60B654F5F48887E00704 F3E59B4454607664CDF8B1CA415246B28A838E76C72D3DF60E8BCBEB1FCFB941B866B 399ABC |
| 259 | C710653299FC28CE72B7624EAFCD163A1E494DA05641829C410BECD9083DF673751A7C E6195D4986DE4A260850ED42AE9094308D490FCBAB3C6D07863C549CCBBBF1D591FD DC920D0399C3E3D265664C3E57CA5A7193162B2279A6995A32FF45E79DCCC6138A9614 A0DAE183 |

EP 2 453 623 A1

153

| Index | Midamble Sequence |
|---|---|
| 260 | 6DC1DB17479A7C051D0F0A57458E2694898560BDB73E8C6981923C0560283E9B6703767 2173F56A0344BCF650849D968F75C44935A66A5142A2F1C41A1156DFC66E70ED22D1E85 220890F1EB3AE5B401E7EB3D2D4FA05E3014E21FB6784BCE833F997EFBDA2CF7119F16 86A6 |
| 261 | DC501349802235193I207422D67891D045428C31F484DE24F2221ABD67611FE89406552A7 DCFE1B034F622AC87ABD9BFD33F3A9AB9CA0EF0A94E629246E016559E726A13F3A2C 3B73833DE8F55EF8E907391AF5AA4E2174EC2C27C00FA9760267E47FBD9E97CBD50D4 751D53 |
| 262 | CF9231C697D585B4833B07B1880E4EC3D9BCE11FDC23D40912E380818C01C4DDD0BE0 D1746FCBD9EF236591C88A6928B2A89277889610031088A2FF85E9586E49966C4535E27E 6726503BD61C65EE8DC089432C67B683B8ACC34FA710F0B33BEF09E7AE164136BBAC2 F3902D |
| 263 | BD5046F11CBE9E27E7E57FAB88449EA70E811D1C84D08F587E8AD1B0F3AA863293A87 1AF388786C1447F0411BC28408413ED14E1F900182EC3972D7E0735373E64EDFE27D50F BA86E1030F3CDE66D2528A795F18EC55E7F5A267D915328CA0511147ED5FF10004E0339 0B5B7 |
| 264 | 6DF1F1261CF5D1B885F4C3F170CCA572ED88E60086232CEF8937B002B8530DDBB9CC0 7C51F04C4F5784632997C2CD8C27CBD8ACC1D030589294D97AB59E666E8D69FCF1F11F 111DD5FD079B7390A5D6198242B85C5AAA75E7401F5A40A746ADDF8B4450D6304B0F7 997DBFCE |
| 265 | C515C90450E6022BB9C249D78EBC11FB198713588748E650C34BEBFA21A93A740C5C25 5D886E5D03EED87E386CC226D204E0A7227E389B1DA38623FA23437748F3E6697CCFA5 8F84F02726DE379B5B02ACA80F62CAA92854956CA537A6EE47254D00843C57D6109750 AA0BDC |
| 266 | 2DF1CAAE58C86B81B9320011CCCBEF42E1B7385669143A231DFEA850066403347F94EC 1A9970B3C9CAB01B03F4C7624E5E5D781629E627298166CF49FA2E1A94314FB7BFE9BD F388DF8F82B6F4C2E41B32A88E2C3608210D5869091C98447EE08EAEBB8749BEA8F15A 3928E7 |
| 267 | 3F207E65A79E990378EF3AA65C083C4DAC9FA10BBC925509235502900D3C8C591C8440 7C05F8F96B1B8E66557D5863D1C794E4D79FA8FEA79E852036A2A9944687D65049776D AD1907B643421634F1A1338DE267B672777CE6A794128EF2C9AAAA32977E0A3E1C54E E330EF2 |

| Index | Midamble Sequence |
|---|---|
| 268 | 8270BC882B4D1BF460FA06CFC352937A17574BC5EBABC35811C94211F3C902FC7637BB 2D58DCE3FE3B1801B5A67020C770C057896AE52E7A236E06DE689AD78E025B8BBDBB 7E2BDA461A7A40B483DB219DF8545DADA1D421251813E1FC7A8A21531CFDE5987251 4664CA608B |
| 269 | 41C83D4617F20B929F34207480B533481A781912C0260C150F6F727C5BF56D4C0D63C036 0576AC463D75B48E85D74ABADCDB1489AF974A5161D11988F215B8C4808395DE55999 C975D305FADF7BFDE60A868C2D894F9FE0C09BE261B30DEF93AE3B305E6DC74449F74 70B492 |
| 270 | 94D2368B50A5DDFFD48303455F01E730D19414BCEE7548EA1390702444F700919E9A8FD 34354BD3B22B16ADDD1C10D2AC49CD82C9325795AC7674FC0DE3BA9E30C49C77C2B 4E9A6C35F33AE2339B585E223BBB6D9A1418DFDD6C16F432DB4C0E5411B1DDA1B548 801B7C79AB |
| 271 | 6752F0966C18DF89B464C67D96640A52136F9C1CEBE096322EA163196AA72203F9F4702 CD43A9EA4D08104EC14547F4831F9EE428229F0BF3A94AF1019F71761AE54F87A2560F4 1ACA60D7CD4310594C52EC0ABDF077C04F791555D3C38DCB57DE52A06568C8FB5CA6 F66A6E |
| 272 | 5E1A692EB852F3563C506C6EF0344720CAEAFBBEDEE8813830402AA73B21033FB73D5 A63F71D203147A28F92A1F28DA3E1080E06AEA1C24DDA9D549DEB5F364A7CE13A172 63154D7C7E254EB7C139FDF8B90B2D02604E74D75D8222C5BB72168993B76D2680794A 4AE11612D |
| 273 | 24F8008847596CE87D4CEDDB142369B46CA970D3E304C58E73F9B8120D602143687FAB 26618F52BB86492B717043B034CB171A052968510AFEC461B042ECE88EBFF4358F181F5 D4CC68EE6D5CF5DFC79AD0FF056FDF3AF93B95A230719861A88CC8D2F8A99E12E51A 2B05214 |
| 274 | 75107D18074E88C0BF7BE770CCEF864C8943D55DA16DDE3D45069842767C5392C24109 9860D2D992C6A7B895E60EE7614336D8C131023DA94A73A9EEA9A9CCA260DE149B16F EEE62ADBD7752D26C1FF7F12E4A979AD2DE1A3CF29A2601D8EFEFBE9169724AB67E3 182381E41 |
| 275 | 9CC108256287E116991EC4F1374066E096D1DC9A8929675A3C5866A7F606A6B004B7702 CCD21A6C4CF12B34E887ECE6905CD4D68687C81566101C0DC77FE7D100AD2C3129B9 DF9423ECAA356FD82CB8FD17E4616960CC91663C4CF1440164863AC2F9BE2C53FA9C8 BBF10BCB |

| Index | Midamble Sequence |
|---|---|
| 276 | 27C097A265CC0B4D4463293A848805F0683B0CB66A8EB5E03E16A9F1AD3902867AF4A3CA09E682927E64F5AEA532B806479D015F20DCDEE79B18FB9A536A3885E117BFEEAE1BEE92E15394C0A5714435BB1C5E3E57AA6B78F12A5601241C5BC6B4DC32188089ADF019EE00D6 |
| 277 | 19C3B4868E790DDCA047CF98048A0330C09F4FB1ECBC01E44F8590AF919A6E5E8B58AF42C213518D9A6485B9C435E45F51DD227E477361C7D157C9F4257856E650B975E68D90C329564C92F18EBC59831B90B22EC574F0E58107F7CE7FB76F27287BD07351054D6BA19C6ABC |
| 278 | 4BC3F063A46FED15004AD95BC2CBC377F64843BB5D8E20B688022E8C527FA487FD3638547A9B84811F8C88171DD5658C9F91C6C653403ABAA3A120E3710136224E744F28C0614D67287CFAF5EBD530E5ACCEAFFFB6B72AD761724D611BC53FB83A7906809D24B868441DF00D |
| 279 | B293205434E526870E6CB105257A105B4D9C7322D15C0900F7EC916650E87F75592CFF82B6FB4B8A01638EC205B013E03D71035463315B5141734179DDE15E45E8218E3DFB1CBD5DB0799F5284AE4E55A1722153D553849E3A4AADCDFEA93E5D5494C80C47E2E26C71559DF8 |
| 280 | FDC544519FD06B9F8FC24D38B278B0BB8A177F9160CC86B063088961227157AACA6B844308517E751881CBAAA9D1EE38CF7FB55211283917296E64B3AE119D5EE4F92CE5EAF4EB578E261B2C02365D696443A56879DC5F901DA2049E38A33701595B69A06D7D8FA0CD583B62 |
| 281 | 0BFE80E58C69C54A13B5E57E0DA2B1CD9FEF299D76D70310EA146AD2700FC4E1ACF6B243D3048CA058A079D68AF603020495BCDD434001DF9757DE1C485FBA74C069F7A4F0B3E7170AF2B22034A6C243AC3F5904FD8CEB9716E8534A74A64679D30DC8B2BF74E4E8DA1EDC15 |
| 282 | E4E6A88AE296834A98A331902491867A32FD0661C4BF40D9CDEFC60962578B06D47C2BFF054D317BF118F6144786C5CE3016B71A007468105B8A3E5F197B32C9AA5AA6C69415A5B161A33DD9FFB2308260B628D076355F990CBF04440768D5DFB27C22B7AA47030EA5DE1CB0 |
| 283 | D328156913C7542A77EE8C746A2A837C4318A5919A14F1CBB29C35BBA9374155E879CC8813A2BAC3CCC089D3D417B92F68CF816DAD8496FEF8C8E4C37075238DB84611C05C1983B3BFF65EB127FE0F1594459CC7F0342593B38597FAF0A0E54705569BFB8EA873B5B84A779B |

EP 2 453 623 A1

(continued)

| Index | Midamble Sequence |
|---|---|
| 284 | 16F923D8652047F03B40217E487A9C4694798D0B51F18FB0E5F622472D7D4A73C6F93E24 A6C5EC406866A77BC890D9B198E98EC5059B50767D7CD5EAD803A34B856CFCEF27DD 01B914AE911AEB86EE3E061BC98F4948102A086070CE08E147CE43682065E4FA7BF92D9 5703A |
| 285 | D97479CB49F050A9B2615125BA5A91C851EB479211474636773 2265163A58E386F20320B 8147C924C5A6B7CE6E9B7068E9465719912642D4C0EAD503233B7C9E551287E2EE7CE30 183EE324996F93E40D32762FFD4F949BEF93F4673AC574DFB56270C90B0A60CBC17F982 BA |
| 286 | 64A259CD81AA5373B02EBF94842D260351EC440EC076BD4A071E14151163C3DBB027D 2A0C0D27873BD68BDC400F20163277555D55D195C17F8AA3F6E9CFF163DA10B2CBF1D A1D02DFA82622BBDB3B4592B1CD60B532CC064125E680439A78CC6C94855474F01C98 A3F5F7ED1 |
| 287 | 221BA02875D14CF49341214027BE1DA69DE862417EA55EBDDBA8292227A20171009A19 29272FBB2A9DC5745BD54E19478A454FB3EBF084BB5A1E3342D9494AAD0586FAD7236 5E936592BD246F185661F2F76B5147EACCD98B6E4E5C7DEB03AF9BC3A5002C0218E631 862F9D7 |
| 288 | 431674A909AB2329266A5C33444160C2E105B71EEBCBBB19386009FA3835921971983587 23E27FB88AE45A92653FB03B36D2A48F05CEF0CFFF4AB2C6D1C7B869B5407124A8D85 427D5DFE31E2C9931E3C150DB320455B0C21D7345640525F9C5313D768E66598CC2D7B9 F405 |
| 289 | 22C2200456B122332656EA5C994CAD2A308647B2D477497ED744B896DD90AB8415E34D 2D3A8352B65ABEB2FBBDA0D84CF2756451BFC8388C4EDEB7B06C046299FFE53F6D3E B1B8EEE98708F90ACD902EF450215D7AC15AF8952AFF75200F0F21DBD9016D069D3655

224AEC30 |
| 290 | CD4E383C00D2448D4D438514CAB7AD1A6018790428B9A813992516B45A4B7A1E069B1 AC8223CE574F303E65E0A31F66966EE5CA6079D29094FA3F2CCDE5232C83847221EC9C B5A206CB76FA0EF957FD313B4165DB53B51C739C1017460FD6B89B2B299100D5C87933 A9DBE0B |
| 291 | E5D6867648B1B58A685666954A97410D18ACF833048285B82DE6FAF8C58001F435A5942 4D84529CC6179158158CEBB180786A98D88D488494FDB63A1B758C6A45670946F7D3A5 C0055DFF5CDEAB847E33847C96B052A8A0972E36672AE8C881D73430377B2C299CF024 0DB47 |

EP 2 453 623 A1

157

(continued)

| Index | Midamble Sequence |
|---|---|
| 292 | 99F428CB50B30E4CE390A226B06E1AD9A4D78525506671D20E81184FE9FA33FB2475A4 60AFAF087AEA201DA160E9F1AC93C4D952097FFE1A2CD183B84096ADE881494DF32A DDCB0F5F2578BE130A1CABA68E062406DF7CE71090A7E854EF1D4F695BB991E156362 97742D8A5 |
| 293 | A1C51641C200B5CBBCB21A41A73329932FBBD2284F5A2A03906E4934CE7AEB717E511 D3C59350001C340667574B62182BE4B283A44FB96A768DF4A43638D348EAB78B60B01B 2007FFD24B8904EF210024A8802B22F330BF25E77969CCD9D5ED78EE7C2ADCC6B2886 C9E1FDC7 |
| 294 | 5FFF9F11071065A4F58FA30D9F2FA32D246AAE4558134F5198849E78E0A4531131F6541E 901CE01A90710E163BEAA2B95F85DAD20ABB2FBAD95DDF06DC656A7A181971FC6A7 1802833028FF2A94003902791503777687 9E7E9D07E2CB4679C11D6E9B1527243D17B6936 4710 |
| 295 | CCAC3333A9D5C4100870B5D888C2D9D12408F6623AA4B8703EEC8E8945AD18FA22AB B3AEBA26DD96B18C5D04F4083D99431AB462916C42B491F2AE4058FB463B151EB23DD 724AC3B28EB21BED275A97BC42B9931F5A0107DF71BEA2C2215B1619264052FB4D0FF 66180E6516 |
| 296 | E0BCB9200E21C20F7A240E5D2136A37BACF0647EA0B16138814A85AB3AC5A9363CBA 83B59D9DEB012BBEE29B4632163524CEAE37E82551A26CDFEF4773C1127E9EF4590E97 BD965D66E4DD84D9A28724B89D61EB0817A20FE31F8A8BD5A182E9952560908FD777B D5383025C |
| 297 | 5EC6D82C1F03667FF25A6E48F42B9B178D0427F10C1561053A6F09B0EBFD1C29BED220 64646B6ABD85367F618D32118481AB0C96CA3E4AE77E5A9C5BC28A875E676D32BE6E2 E0C403D1E8DB95D8E6B3AD6E692A45B1B72485A4584E48E3FDCB49F98D82DFF185BA 46382F993 |
| 298 | 3B2106CA2FB81662D926CCBC53774084B16E8E7A12C560CB8EB9275C1C232E26727323 2CE91AACA4B4A791068EE72C07AB45C8A15B9C1A1729153138511349D2392834F4B6C2 12B991B6E81E663D4B432629FC4F7D37D48BBED4D46E2D55E33BB75BA561D45DCB73 A8B4C25C |
| 299 | E5E662C0F806CBD740349660778431ED267DDDFE754A936150CB79800C784330F43478E EE2E48B84793E497DB0020E91B0D4CD1BD8895D3A921583118D1D214E14856D726F2EF FA057A0C8DBB894BA880122F7781399D9EAC4F60B802AB6A6947F1CB5D5A2B3BED39 A3BF4D2 |

158

| Index | Midamble Sequence |
|---|---|
| 300 | BBC66A0231730DD3F183EBF20004F6678491B81BB9BE548A3153E96F4B9B9276BB04A3 D0BAEC930C10854E61E77695697D3945710A42F63492CEEDDE7B4352C03EA2E20491D1 D8814D67D8BC4BD648EE564E8FEDBF65F39C5F050333D5BBC674AE60F35442F44C833 0EC5BF2 |
| 301 | 8B82E2802F78411E4224255BF69F8E8555040D6917ABA9BE1B9E2C443148A30611DA2E4 F941D6C8438AD6BAFCDF29E0A9A24B1579129E6F068A348F4D1AF2AC51881C103DAF 15D805BA63BD2F69CF3F9911F8E60D48856E79A951B4E6B3DA8CB4F8C63319B5FEA10 9ADC5B0A |
| 302 | 68C4888C6C5A61927485286EFF1EB7A055411199570032C872ACE48B8BB15593419175B0 B2A22B9384B263D47A289B0994AE0F4FA33C95069E90CBE946F727D2FE3AEDA70A46F 961A6F8D26640A0428DC805CC786A59AC242B8E2BFC139EBBEADE194F687569FE905C 12D732 |
| 303 | 3AA7F64926B9FCCF2B8CAC222620901943DB114A960C085945EDE194499138B0660D04 A4511FFFC750CE5548327672D08CE94D9263C8C383F7951DC123FD93DFCBC36C0018A6 E6085EAF7DF5686853098830ED650E7B1ECF9AE96DCCB56AC0DC008678CE0E53A6A17 3CE9E3B |
| 304 | 8C63D6BBA0910F791128E8EA0A96C6C3A18131E2C51EE1E377E2464F22AC9689062211 BB1FFE47F642AC209A6CD26A0814D6E2BA82EB760CED16F6C33992FABD27E8D6F706 06F9F0B18308EE29FB5AD1D19B03377EDA111578857AD4CB4D91798CC85C45D94D471 DF82E99DB |
| 305 | 5480D82042C32556D4F9C0E90176143B865B966305300ACB6727B38AC5637D2E9BB4264 57DAAEAEC84227222E174779CDE745FBFA469608DE99039FA684B0A29076B76F543601 37D249CD5433506B2A304EBBDD8B52361BED36ED9EE3B3C0B20691F4BCA44663F4F1 C5950E8 |
| 306 | 5BC6FCDDD922AD0DC4AB16971A89C539232CD6E048A1A37D4194E9F604486EB890E2 683281AF4B7BAA81EE8438F0E3905CE3545DC87545AF0E040C66BAD9DBEFD455EB6E F4AC451CFB5BC8F355C7D90E6201D3D3684EB3080A4720410CAB4F5C474F0B12CFC74 063FA055972 |
| 307 | 329C09A05E0A273BFF299F2016140510446E5A40B878E3A2F7D05F015C8BBC9397BC083 C9BA3F95D9819B68CE0B7147024B7A60C11182E2FB9895A25E384F477DBB42B3C32A72 AC107D85A44E5518E69ADD5661744583  73B35E857AD234763F4910E43D1C86A5B6595C AF44E |

EP 2 453 623 A1

159

(continued)

| Index | Midamble Sequence |
|---|---|
| 308 | 18855A039C7160C3846EA305F3054FF22A6831F28285A4AD26EF09DA1E8D8B606584D75 35900BD4E3DB34177FD3A5DD20061178A8BCAF74382B3D86B18CC87D0D1F52FA4375 DE6EEE4635A43D0C306462C935BB2E523C1D35A5CA57EFE4066D98BAEE606D4869A9 EDFC396D1 |
| 309 | 9793894473D5709B5CE47866B3F0A9120C8174442F8995C4F08E282FAEC38E63CA2D6024 8850367D483E406BCE300BB5BEE83285EC7445DF9B929EBF8EB956FFAD4AB12A3A0F3 22A208A192611016B70F88481E55D8C6AE85FF94FB97F685902E0AD6A1DB89F3A5BBA C36C48 |
| 310 | CA55ED001A7AE487657224705DC5733EF0C59988B0F0E100774AC61597E658C525450A4 93745F637ED89CF1D834358770A0A27CB5C060DF9A718B5FA197EDC17ED449E7E01FF B977BB47949FA0FDB8231C4894007934642B0BD78EE7D52F2F8840A8BE8D27491434709 D136D |
| 311 | 0DE94280156C76E744576B445B8EEE9250DECBAAA5B9685A6EC3503460651454364B60 A6D9F935087BE533F54027426B133E8CC9031042181E64BCED90AF433ACAA779630B3F E842F4EFE282BBA709FF3E68E68090A2F4B4648ADD30259C93F2734D9AA2B3AF06167 C146D8E |
| 312 | 36311AA851E2628F861BBD9A78639A1C8B49C850D12BA736A6179E499E06D7845CA3C9 C5E6538A7E189BC0CE048981EF37A6F2034038E3830BCC095FA4136B59B22D7CC605107 06E0DD3DCF4945D27DA768DB1D376ED27AF7997CD56804AA4AC002B9C4651B8F41F4 039DEFE |
| 313 | EE7C4CF100E001F7D3973967D31F08400234704138505EB767812089C0467FB4955A9C276 DED0B18C516484485E502F4CB95BF769DDFD4B9E8B9C30C5EF7FB4B777438E9CD15FA B4B71A221CF04C9493C9FBC2E0B8278090B5A409976F86D4AC7E73A6E1C5AA9E6C1D7 38480 |
| 314 | D5C449C6363839628013CCE5DD83763A47610303973A05C65E1C7DDE2F9C3AAA9B56A 1ADBC18021F5DB42A9C80C9F664923BB3C242CE509DCEFDE44B89F59FA2BB12E3B7F 97641503D06E650B51B328C9730CE57ABAD9004F84F1A66C2ADE144450974CDC03C9B C98D616F3D |
| 315 | 19451FB42B36226C876982814C1CE96902943227F9F85AE6E85E0125F4B0C375487F5754B 2EBF243D7694FE8762A90C320F260E5AF31DD348B8151893C4E20D74373C6F1B789F6E4 DC59886B5ECFABF88E67159DF356DF321AD81B0D3DB66AC9CC511A70C282E8DC1236 851A |

| Index | Midamble Sequence |
|---|---|
| 316 | 8BAF00800F5C9008986403400CFAA39D8CCEA0C672619D6D6BDB416C90CE1617E6E68 FB32457CBB43AA6F5FD728A4402CC4F8040B543575E9DE3DA4F2954DF659930447B265 D8194FE245B82B0270B4ED66713DDB3F21C56F444B5831868C9893CFAA378823145A489 6471FD |
| 317 | 533D82C607A901A781271C58791FAC906E204BBD1AAE0EB39FAEBFAD648956E4E0151 720002D9F7E60838B72230B20C79EE4510A88B6AA1E5A537CB219E3CA8BDD3B8C4788 9E46962F2DBFE5B44E566F99B22748C5D09133CED140DF61D43B91B4EA34FE8308216B 4485D9E8 |
| 318 | 0B82F5FE820D5333EF389B5D37C71DEC6020CB5A8D425917F34F49A610F01662F113DC4 0F56EA609E51123471D241920C61627EFC144CDD4426EA4CA1FC7313063A258E8F67EC2 E203354E80A85229E38F402C19B6F5AF215CFA7A4CFEB39B15EF44E1A464275B6CA6F4 455B |
| 319 | 2969526CE5A95EC78E660089543C1FA9043A6E6B7514A10F0D958E64C1B9E9170088A5B CCF83F65E385AF91CF598C8091744C6ACD8A0DDE4418E6ACFB5F805B52555D52BE6E A0B30D3E343F9B88FF08898FC06EF692612C57B4540C27F2C9411F2FD80FF5B63CCC311 B9C1BB |
| 320 | 79420FA9FA882DA221225CBE214E3DDE42D16B41C92181627C2664739D7301A2222C6C 70B6951064B4BD2311D2A31C2E2D7BD86CA350FCB9C65DFEA89E1B199A6D531691C0 F9F151A21A8894232EB44A782768CF0A056641527B897B55EAE3F8FFB772BFC4ED71164 AB98B66 |
| 321 | DB1007E3EE16A5419FD31A082609B9DDC48CFB7EB052D18861DFDC900CA2A19E2162 7645809119052A2946132CA97E657EBF1D12A06166711AF2193CBAE6CDA4EC1E3DCE9 CB8ADED482461A0BE27DBCF68CB9210CE1E2961EECF50E3FC8E2C3D5009415B5813D D86536AB738 |
| 322 | FCE4D07D6C26A00AE3F7DDC7A075106913AE4D89134BAB8631006B2C4163092A83A2F 8B99A09A5C1AB34EA933AD60DF9C549F03A0ED76300D056F6A94F1F84051BA10B4789 5C25E91ABC894786893D0936F4E6FC9BD14B9EDD65E0EF68899BF2E34E83B339B141A3 BFB980E3 |
| 323 | 3607801C314EA8C9AAA339D1479F23E4BA040214875F39692E06024A6347A16E592928F FEB100B96FE3BFF042D814BD8E03E5C5EB63E6692BD8A479CAB44DF4565F8ED215EE6 D633AA23D6DE4AC4BB6FF021D32B2C202DA5CF1931BFE38A8F0C5DA90B54055166B3 448DCD88 |

EP 2 453 623 A1

| Index | Midamble Sequence |
|---|---|
| 324 | 2FB50C6C366012034B9D858648FC5CD16B786BC93089513B41222CE2340A00A5AB9874F 241D224FD6D17F43E00506D871B8D3577FACE8EF766A89AC23F67708A6DB20B3E753C4 4A0610D147FED126698281AB46FF23C4335D18CE2BC48EECA821AFFD5C3F87394E08E 397CA5 |
| 325 | 401C79AD33F6EE1F3325F4B105D0094373A91D5E4B9B892AFD7D18DE142A24887E2728 534697292E222768E5A24DC69EB087B6D9680AEF549F08500383650CD2F19311E252E6F9 56F43D215B4C0D96A67AC3673E337C2339B9C20DC24E1FF357F9C9689994EC37E9CB8F F34E |
| 326 | 81C85A9106A91A08D6B706FDAA9995C24C644BB7E3312136B5566A5E033F01C54CE690 032AC674D0CFF356C951C8CFDD568047A2892DE747F4073D379E57D1A21E65C52B79CF A072EA16CFA4AF5025296DB5EE9E19343D3983A14700F1C928946748047C97F7C928575 1A358 |
| 327 | C81F6693C6658E93A8DC16A4890A737B1A4B83887210FD157B11779D2AA0C178AC3053 136C4C3097E12786D3B46B0D3BE40AB9DD808468484F0AAEBA5FCE7ECF5060CBE054 6E0D6EF373141073C0D62F8EDEC9537187241DB69841FAF6BD0F2C4E2A368C0618A7AF B885D2AE |
| 328 | 0A85A364A2C6127D18DC487818D7DC0180E8506643BBAEC539DA92D063CC16D6540F AF3A57B5283DDFE29D3B0A8884AC811AA7497E6658F16AE3992D7BA955E6E432B2857 2892E332DF46EF32248F4283B99F8FDD6CA68063B51A4733CC4DFCF4A67D91F33A1366 A26259D83 |
| 329 | 0D4A188364DCC78CFDF29D5E07EFD63D9046E54B50D3049A4702B314AE8385184B6A7 20984C55E6451E6586B9C7DA513D39D6A93979FF53E6CD7D367EE8A05000F9BDA5CE4 F5E50D1E48390F075A7EC027D259EEAF95C252A608CAB90ABBC1E78463BE7F6182CC4 301EAD170 |
| 330 | 5995B49497E04F0169620A8C61BB718ADF1FB6F4E9074644AD7270D8074AA3C388004C5 4D949B57A61DEB9845A69C87F3FEE805B134CC5D5618AB9B39CDD043C352DDED3A00 3B8D75706862FD652C2FFCFBE14E02A0EC9098F4C4255F9E34A7238D7EA6BBD260C13 0652C7B2 |
| 331 | 2DE19FA6C7777522DF882346D735BCA73261AFBAB2919C2511D1A2CD63026A0DA5510 1125CD58BF019C5E58239A935481FD36017738333D130916F9A28A8CB890D782793C7816 51B7685D921559716C70F61A4DF999E92B94873BE57F38CC22635056CF5E749DA384532 CF1A |

| Index | Midamble Sequence |
|---|---|
| 332 | DEE896495361E37E83C751EEDBEB1B043AF4A5C12A56CE5E420504098472C34E823E15 BC48408151BAA6D622D6BC07FF294E321E05FC1EA6F35166D1C928AE30999E47E851C5 A6630D95A31E58F18E38763047370696B666DD619273EE5659C8E2C582F12B4EBCB3DA 3B1A8B |
| 333 | 8ED016E1713C88FE2BF464F99961AC20E8F98AE91EC96AC069C686C6AC27B9AA186BC 794019E09A31154B0E81B1007E528A4F618BB81E0C197FFA9983900C4D24AF19A514E0C CEAD7444081495BB94ECFAF8EBA8A883F72C4B0666A59A01D1FD28CC350A8F737FD5 A461ED2B |
| 334 | 1370CFC254933BA2CB07A2AD344C09351402CC08C87297A250B8B364E236059F554C791 A9626077A25502B228595F06FBD9899EE0EBF7D7F00D6F37E2532E473943D7DA8349302 29D827DAA5EDF4FEE5038D32FACF31D886956C4181F8D56AD7004AD42C844D7340C06 46A9D |
| 335 | AD96A39C1FB50147140EEDD20942BF7076822B69DBBD1D01DF333C6202D0B314059B1 14BE6EEBC941046150FDEB94102297F02785774374F0477587D27CFB6F1F7809A693FCB3 3EDA02519E82938A49CB9AE26AE73047D5A8A10C03574697D0AD7FB97C5C77892891E 00B73E |
| 336 | 146C77679A2316C5C9D3B33453C010B8F6BEB02A92EF8E8A6C7695A10EB06B3C6A4D6 1BB15EC022E0FF20152BC84B43099CCC98457617346C078EBE0C2029EE732658A075EB1 C3051B1CD73EA875859340B85D16FEDA750442E9F121F56626C08178159BDDF7135C919 CBC22 |
| 337 | 55828F99555EABAF9A02B15366C68051C4C0BA5C5925E7021A41A8F3D43C29CAB93169 FBD3DA1ECA180D55B8EE0378368876DE7840FCB6C5B8DA7C42FC9A56FC54EFD26A4 12C954FC586D081722F4E7AB051C835A5C623374239B43D9CB3A14A71A550377F8A7F9 E845A55B7 |
| 338 | 4B46E80A10EA8BE699D02543509CDA9D1047C03DCC74A0F9B6417E7A7052F5565E1994 E34F59E0CB88551A1DC5B3473B4D6B02CFB231DB4C3B4F1617567FFC234069A185F9F1 2FDFCF7668137CA424C6362AEBE926FAB4D3012B485DD63556A6377414D01FEC70B0C B6E8780 |
| 339 | FD4BD97E31EABC873E667000548856DFAE56F9CB44CE88951D6C3F190062B21C318097 626C21AB80B0B29EFD027206986BB732289D45734B8CE77775FBB69902878DA1C24E09 E3842EA5239A5301C8FD50904850760E22AAFDDE0A4C17DEC159676BA3CD8B6FA3AF 3A4E0530 |

163

EP 2 453 623 A1

| Index | Midamble Sequence |
|---|---|
| 340 | E6DCC774532E9186FE3B9988CC4D4DFB26881166118D0D9894CA66A64DA209143CC0D FB32395EE68ED390CE5A8D02EB4D1C57005A266240302BE55FB4BDF0690F920AE1317E 12AF5D671B6F88814AA1CC5B5178D5B6B4F8078B2E36C3A84985A057E3BCED3E7C3E E1CA69748 |
| 341 | E8BBC9283376C06E03ADA357AEE2E4718C31B37F230FA4C76D855EDA44218C4630CDC 940595A90FD227C42C03BBD3475CE9668343358FCBB60382E452DBC74A1DEE9D79F958 57952911AE89382AC6D32E39EAC42866C720E812F62ED6782025629AE64D71413B8CC33 683BEA |
| 342 | 36A311BF1A8477BA46EC1AF0115B059625A29E7F0518A562701CBA1B7DB3FC7063AAD B092B4B502A148316FE2B919E81F59601F1C7E03A7549DB78FF180F61371B2FB3FF99A0 62E0A3B7C10CC4CF4B633C92173640D1E757984D6CBF21F1BFE9BA14200CE15E5FA229 8827EC |
| 343 | A600879F827156E90924DF3F431A05DDB2BEC4C95028BC6C0A0E1C3EF0FAD2A72D00C 1A25AEF96DC4E20B56247806F00B76C850BD1D5AD762281A7F89357734A8E3B547CD41 750B58F3CBEB88A5BF2CCE45658425DD1331A597B48F4C21835713F144C17A6023E83B 8D9AD96 |
| 344 | 00E440B77E0E012E7108831E41669B06BF2B52C3067F289379616912E534BD8C7F8B2C66 ABB36540267E681D0E59351A9435E25EB3DB0B19E0F11348CF2F524E8AE15C3D5D90B6 E50FD3E4B94CED9795D5DCCC5A5325347FE9BF61A38098CF8BEB0526B113450DA03C7 4FC94 |
| 345 | 1C6A9693BFB2CC0CDAE4B187B25C81E811EA1E00BAB139508AF80D36C51F12E95DCA 6A5C6096F5B27B772010C2B2070B39972C5E391A01BF8A3261498BBC99A94954B77B5E2 3448061A8CB65BB9E2B1FC0A620A89B1DE66C7BBBF512F5DA1F2198F48D67F536401E 61B57A00 |
| 346 | 03414246951B0968B04011849366B04A70C962BA47D9E7F159F7AFB52DD22633939493C0 AEC84D73063BF8E3EAC104DC8270CC2AE2CE69A3BEDE2F78130C57C189AD4E39EE45 19EAED2A81D516C351ED9FE0E861B4E8B879310A9D4BC409E9FC142DEBB73664B0570 B261020 |
| 347 | 43483164E0CACC302554142A8298B4C510823FEAE78F529BA24E83D1EFB0FC7658694B1 A2688A31B79DC36BF6FEDAA86955D90240951E95060D60980F512C60A433ACC34C3CE 533E8AF7711DA4DC6444A5707BFC8542AE520735453A25FBA58DA0712C4C2F7E4CF1C F8BD72F |

(continued)

| Index | Midamble Sequence |
|---|---|
| 348 | C8117E811FEAD8CA258258982349 9E0214155DCAB0FFE6C527218FD3 B5E6A8D653228E 039ADAD3691CD2A28FCA47188B6A C4E436AD8E4A5E83A0F4885C797B CFAC1E13E0B 23D84C6526C2618F50226E53C071 751D6656 2769DDDCAD4D8DEC49FF5B22BAF 2DD1D AE1B19AEBF5 |
| 349 | 3DDDC21502E4166CB640EA09031 5D003342 35633DD82B42DA48661 1ED794F2792BBE13 3965CC633DD03C37D05819B284E1 113C0BEFBBE74B626C00A78E4617 CB0DDCFDA201 7327257 16B92CAB392569294FFE24DA25A5 64393CCF1B45D6D94E26AE7943EA 85B5030 1135FF5F |
| 350 | 424CD5F16CE4E1269242ACAA405 026ECC34AFB7E921F3847B05D5D 0855AE3186D648B 89A4A2A9DCE225D25CCC280CEE8 EFA10BE9BAE7BDD6F8151 3652728DDD031C50B01 62F23D61144CB03FFDEBC5DFC8B 46BB0753B84AE17843A92175360 D83773036C767E8B 08B838D062 |
| 351 | A96E48BBCE7852FAD9CD83DBB31 AAD8656A8472980115120BB18853 874341FAF322705 9709B859773A17C6A5FB66B935DB FD27883A1DF230F46D887B6CF4F 2B9B795FA1D1CA 2CED194EC3B2D74B204060FB2228 3033AB93723E0777C187995B77DD 07829C05822BDB A2C64DC |
| 352 | 87EC694FE6FC86C4BA3C0ED314A BB9833844831 32307E02D99170060 79742EBB620EA37 2763B53BF38EFA322819B02E65D4 8610F0ACCF6CE877B8A1066FADD E5BDCEBBB9A4D 886D7356D8C2A1077C566C4CA29 D18F27673861A9518B82AFCFA0FD 11590271E65A22E 5C08AD5 |
| 353 | BF0DBE448452C111ADE99C1E305 42BE6F0128A9D0271 9772BB5A4F 64F29C4C0EE5794A 70BC69C10CB9D20EEE0006608769 BC6016E9B43842C80EEA5B57FF14 74F62957302BEC11 CADFE6391A78683EAC86FD7F91ED 706D812A846BB701CCA3862356B6 B45CCD0307169 |
| 354 | 33C52084D28291BBB10F5A384F4 CEA7F6242D226D45A96E796BA64 62924CC698060 1057 01E775AE4A32DB69C88B22A6BAE A7A47BC8F6F45FA AE0F4E5EF162D557F46DA56F82 3B28974C82229444C28DC5BE3990 482CF6F563389251 7A6703D650A2D8FD2D1F7B0168B E30911 |
| 355 | 23BE98CE27887DE2A9598F04B70 A7A3C8D241337C7DC1BBF6D103B 6AC5C8E80AA8D4 33660F52C524602909235C003241 2AB9EAD36EF04A706D5897136B8 FDC954CBE23AFA2 38EC17EF920CCA5E5320EF39727D 1D6848D503DB6AA935A50CA8664 7F5FEEA859B2FB C3A62A930 |

(continued)

| Index | Midamble Sequence |
|---|---|
| 356 | 02DF69CE0438D8BBBEEAC432B90668C71E26C57D3632B68A82A841304EC68C064EDBE A81A66CC7CBC32A19B47BC2A61318C82A02D1D3E2A0F579365A218AC831885EAF746 BFAFB522160EB1D55424F6466C91DCACA499ED7BA3123F6211AB4E6806BFBF1C01B60 B4A81F0C77 |
| 357 | E030A3FB76A5E2246864F83B2F69849C15985FA6641EB39C6F73C8A147EA27933C9016C C825C7D1F7B4084C5E50079BE3096898D65241452930F5423EB8CA5CE99D594D7CB1492 EB67182AB66093DD36796362BE573D052BD2A7586A7DB2EDBFAA012A6717DAAC2782 794700 |
| 358 | 4FA10087AA1A27EED6DD8347A8780A56E583CB1807C0D032138EE0C2814ED50FC14E0 49E53FE49E71660E3F482F0AEFBC28D71DC0E5A6C73B774F22B64F65DEE08F14600E29 3E2AE32FAC9F13316C34AD72F629675B18A21793F4DEA4417071B66798B66D9406ED45 B9ECCCE |
| 359 | 0AE0595F64DB9494C64E1AA8C7B66D7D04C2199EF4822B51796E14B5CB41FC373FE330 8920D575EE00DB305B4BB9C3FC41F60944886526ABB820981FAC737723CF7BA7C479EE DB340AA445427B7A350D71C81A904E39D845D7BDA6B835484574169036E3F0BB5D7D1 938DA5D |
| 360 | 9941EA8C45F070E3A65350EB8AC867A06C0F099C80AB914218341194F7AB38C3BCE17F EC3DF3289C054C8A9E8BD53C21ED026FD2850A8A236274D1557C6ED7136DE80859D5F 24F898CE8FC702E3E6485744BA15BB64F90E4200BC807FE6CF27CC4B7882202861EDAC B730659 |
| 361 | 926D1B53968560FB3B57769358A642DEA0D554AC96FF7C113C9934F0934411885A13C4B 51A3C216EB2DB771DF520E5AD00654A9CC1E21A8385D173DF0A52CC15ADE9C9C9B0 C5DF52DA254D174A34672334D9A331704CBE579CAA9FEF5CAB9349A84360902DBDF5 46227A30CE |
| 362 | D4C76312DFD04799C738C8AD2DA9131FA1D1CE7690F91C876E958473F07D468851F963 0839B826C0DC1052A6A12249441AD8F68C5DD5546C13E44E85E629E93A98220D14BAE E17EDEC86515A06EA1B233BB9DFA0D7A4A8516A960E10FA3AAEADFB36C7B7953C4D 0F2285655C |
| 363 | 28EAEDCCA5DC80C1E54B80F432B7B2428689A96314873118301EAA0F56CF80F15CC04 B71E7124B14FB0D2D2A53B70F4FBAF8DA9075C63B69E2ABDB3D1A43431089ED9D72C 82A365343EB358F4E16DFBA016111A4C16D4169E2EE0265F19534FC6F1AE8F863A4E31 BA29337E0 |

(continued)

| Index | Midamble Sequence |
|---|---|
| 364 | 65295B56A77B9701954BF1F2C0A7D395FC10CA511196D02060A8C3B05BF86885F6074B6 18690C58A9EBEB3243AF15B79D5CB5D78A004E30FFCF03350056D13B95235C76DC8071 2DB128E4EDE38B57043CF92E704918C1575EFE9558C833EB94388A86ABF4C817D5A079 24DA1 |
| 365 | 21C1D638D2CBB5117BECA4751B4D3169EDEAD2209A4E1B45820F8EBA8B8341A1A201 F8E24E4247C14A1DF99C792C84456E88AB5442E718BF7DA08846DACC1E8CE76476E945 78147DA98E09BF9F7612DBE4B815B4AF13C30CD6630E61BCB4A3642ABAB350F7AA3D 23E4AEC688 |
| 366 | 0D1605B06B69C7198624CAE79762C30706A40274DD2E7131E62D0B22BF0A9EC0ACBC7 1A59A44411DF6CAD103955D8990E86956C2DB3B864C00AD9325CCBF5FD081E20EEA56 6BC423D7A2E629ECCC63A3F0F5123BBB8008829FA8AA6874D40AA7B3582F5EEFBB58 6B90B2E62E |
| 367 | 66E3FBD7B6C39C3F03A2744C90E4636D2025410044581C0ADEC0846422A161C5D4A79A ED94605A58057E483D6C604DFC8F19B56F2C784D47969D2DCBA3681BCFAA140EA9548 13B97B9A9FE5EF31C46A859C523975C24765951918DF24109FD8C1DB6F9C6162D9FCEA 323AC6D |
| 368 | FB00BB835046D4819F9EE7B5083AFFA73096E40021509B4EF6ECD1221705764E8DC2C80 2AC779890846E93B9FDD0D03401B58DFA402E8D669FD97D48E5F14CA0254651875BB3 D0976039B20A8F8AD5B707B652F49AB238783B4C46B3486FB6DA85974E3CE22053F20E 8A9911 |
| 369 | CF22D4ED2D4A3074490E21A7A9842D7B4286309AD9DDCC49B20DFEA83C720B93A6C0 BAC0ACB430C4603B2CA82E68BF89E9B1A841C5226B7EE40D9DA51ECC78EB3465B48 BA9142E9C5E75E93378570A6DF92E23028A4B77C10C4A3DAC17504C24F6DC7A74F577 58841F517BC2 |
| 370 | B220802A3321D7EF21464F86F75934CAF13A4C091F4D293EDC06AE026BAEC1D62BE14 D61B55831624640E5B9DA5970C93CCA0A1CEBC2831D6FA9AA2E10BC3677C558EB5ED 11CFF262FE55E85C17A5064AD1D812E7F44458C6BEF77D715B022AC104960ABBE1AF7 862219135B |
| 371 | D6BDC3B8232E908FC48511508D44E8549E08CFA1FA3494A6D5F85B52097D28C8473CE6 2D7D27742C79426250C11A896F5CAB64D84860ADCBA31A5F072C3ABEBD314FF128D8 E10B456CEBA896DBFAEF0151DE3EA96B9451A8A9CDFC5ADD1A37283EBBE26445F25 C206A311A00 |

EP 2 453 623 A1

| Index | Midamble Sequence |
|---|---|
| 372 | 4462C00019136A9E21C43EC4FF46355A203D03158A2218600A3168FBD89CE432257359D1B277ED3658A83A5D2EE05646CEB29C8FCD5931FCC514A6117B5BB4CB0A5FEED9024E82D8E8E1D6C793D5AA12368EB096865EC032BB4D895BDA1FE99A06E0F16D7818528E09D5CBDB |
| 373 | C7E8C07FADD275D38B651447B79E4027AC1A2D2BB45C10A56B26CE9C116E86F33289F880A465834102B42CBA76612550C4A984C2FCE42F8456B290F935E5D97D93BBD72DA28E822FF027758B84860C9BA8A4C721D6EDF4BD0349267C48F11727FBD8535A3158017FE0331473 |
| 374 | 9EA00EBE3F093365724AEC44141C6CA3207AB6527EABB924674D84B2C2469B1B903A1D33468B469398D89FA1483673634E81AB04E858ED597A6E5D7C1ECF377F60F28F600330860511706B0711984F8F8EBA6CE9C890D16BEA69EFD2DB591E24792ACF63DC552BFE874E996B |
| 375 | 787FAE2BB4446CAADF24963EB3829E42C2B13CAB1178DD428912B44E86C7271B2B8A02467D7132DB7934745CA7324828DE702F5401C6FCA624CA71E12EAA3C9CE83E45CA7185E4F7089EE7BE5AF3E7430B8BDD2913A7A4EB0056CB18BF411EA5F8C55C189751C4C0E8192E66 |
| 376 | 5DEAD82D0403C1FDE96216F933A98ADD2C99168F974DA31AA81101349ED10FBDE35C916026CAF8AC196B48E03370E50030505FE088ACA3F608D7EB9A392B9E2418B6F9888C058BDD44FBCB9583EF0222597B2C5BD2A406B501C1D91F450850A2C22B3B26BBAEB56C34EEB9BF |
| 377 | C4CD8E175C67CDDCA41FC0AD064D84AE7405911CCC21250E79BFC0442D5F2651012F47A7AC15DEA662A9E1C48C0F1671355B927215B8BB53F2DA1B21DF5E45AF8148395989FAEC2C6FA5E78C790756132BD411A30DE38B18F193DD884C6734F81B36369B480F4A0EB4568A68 |
| 378 | 096490666476D1675524836575580D2A693BB056FE5643E480AC6340E9C58D19AE7C3A3F6C79D2CA0B964D0BEA410D7061486775A2A75A96AEE1E37DE48EFC10E076720BBB8BE012CCD0502816834D4433BDC6D88F44BE279F022575AB116B2E5AC67BC963938472602F50AF |
| 379 | 40AB8162EA9ACF52716D056FB3D9FEFC80F7D06E812A9F8C33BCF48A902C565858302A50130172E2F75894961D90F14F17E928C95B624914B55BDDDD980BD5C12A147B30B5D0CDAE83E841F382BBA4A2BAA61F9D751D71B21EA39643A1C50BC3BA8DD164FE1281AAE6052F87 |

EP 2 453 623 A1

168

| Index | Midamble Sequence |
|---|---|
| 380 | 11939EA555EA4F601B1FFABE7BF0CA9CD152250589EF8501709AF7B880429B9E4580C8 E308828BDA386DA1D249CD0B94197411D855A9035D8FD008F416F9779B764F6818AC92 364C76F438E20E2AD870F10F94DA94FA9F73E57B2E25F042A84F9878BA0060A6C49CBB 1BDCEC |
| 381 | 7495E71C49CFCAAD62D125AEAB14AA3122E162D74BAD5E9CF9E674711F97A79878959 4297A5804663111E380D0A876082BC48018B339A23311AE26290B69FC1306741B0AFF776 A2D5150328D1B8CA87BBE3E5A355854CE3ADEBA87FA206D29D04CFF651274B2FA8CD 38E9EA0 |
| 382 | E93501AB714AB649493ED29C2C6050E51B7D370E73C976197870EF47C0A09A5FB082455 15630BA93F5124489C99F63991315BA2811FA7DC6CAF4490DD2DB12F936D4CE4BE44B9 A408F515A510085D07018B9E99D8CFDF98567479450BE7E585A6E482242DFD774C429D3 D24F |
| 383 | 6478A685810BF792A407BA103E7F21A998CAB76A1C84E21F6B61FE289430CCBB28A4C 0B56528050B5E4F7BE1E0A0FA3160D3FA9826A8F342E29E1E3AE295D56C621B13E9D83 9E2AA50DF822D76E30ECF527FB4B3B8E3C134D76F4471A7FBC036C209E6464F0B8C641 7BF2AE3 |
| 384 | 322C1EC699A4A1CF16C03CEF1C45BCF0B64529BE361D2B7E6D599410B1BF6750F865C 6B2037552B37447A68FA0180C6C040C810DCBB4F3016D1464027E10F43F125969F4A8C8 3DD8936C46111EA7491E5668CD981A5EBED8C0372ED573D5FBE08A0FBE0F23F022EA0 6A1B475 |
| 385 | 16010C03B8039153CBF25627CC94F0F8D4D6403E9CC44C2B96EC69AF7944159FC64CBD D797157BEAD009E7056AD86BA1218A98268B4CA296CD8107D60DA46380A9F39F1C720 5612FC57516E364EECE59E2DEF3C1B555E1C7FD1C34D706FE3F5B854C68CB34E7C1932 00F763B |
| 386 | 8BD133DBE0CE5E163FD7A00838C9E6E81A42B0CDF97BE154420E90D7CCCC5D31C4C8 0026C1362E5CB3B96B2B038F31CE12921F7A050DEFBFBBD3AB3C92E8C7C13589A8C1 BE0917A2D4EB2E179C0DE86431DD852260E0ABDA795DD9FB8FF4348A80A1CE834231 D8B1E0017079 |
| 387 | A22D0CF1B703545AFBC1F8C1B2767AA130E01EA91B42C139E4E27646401354673D155D A98F9478AF2BA4977C398D9F847B210086939584D5C208A421C9FCB64F331A320D4E47F A45EC6749A2A7962C5DF05E507CF1AAF5E2470E94C6D0B41734A7583FFDDC3BDE51A D2B5E6B |

EP 2 453 623 A1

| Index | Midamble Sequence |
|---|---|
| 388 | 3CDDA32D083B9AB0E0797C0B704B1CCEA5232C24B662378F7A64F942D96CD70DAB39 D66CC59BB19408169E2E276DCEFF18400E0272AA6CD165CB83512CE7ECA2C4C72D302 548C99617B9830D1BEC7B5E023F63D2C0A32117FB3C91DC9FCA5F3FA6135342EAF668 C53ED2C167 |
| 389 | 155E0661DA8DBA9FFC578C4231044435963DD4ABF90E836958B38621BC604CE861B387 AD838DED71B426B079922130DAE9151C976C76B2C160C3C5AEEBCC00B18E79A81E56 F7A0089A8C2967A7C83F3ED52B3236D5B7A1AEDA3221E98EE3489C59B4A9166A4B839 9BDB4DF0F |
| 390 | 79E64A3550F6B0831E98A4534BAE05EF30945BED192EDBD5B3383C03302D423452EDF0 E31843E27BBE42110D3F107F687D0A867881773E22C9745C64EBB48CE0EC8F8F9274F63 49B7E0D534126AC0D7ABE31B1756BD12D0C1E1BFFB2518C6A86FE8EAFC71D445E410 890D4E9 |
| 391 | EC3713953AF1C4A1224E2316867748924BC4B6450BE6309E4D7ED35FCE8B121C2548440 825495D16820A4CF6C2E2D56EE99E01BB4306403E9BA789A3F160E58C3F82FEA289B87 D4E7A9ABAD685E8249429E0C63A7690608E1B5EE5635FDC5D98FE99092F0995BD2C7F D1333F |
| 392 | 4B7051325B10601E465FF5B9E5BE7910315216B3D8021AC7B316DF6DC18E100A43CF6D 6E404C8C8BB2D80CAB70D1362EC79A182435E2140EFA1E89B6EAB501B3CA1BE9DA76 217D2D9523CDC97208D56254AF72A95070187F28C918653730A79E09F7BDEFE7EEAE76 6177E071 |
| 393 | ABD1AD8CE31F030100834AC788CE4D988ADA283AC7D669EE506190A7C63A1FD30CB A9003C110C4A8DED537A2FEB2FC59FCEB64AEC390B84E9DE8093C7D5B8005AD8365E 160ECB2CF320CD4B13F0F0DE0E2871BC653AEC3A7BCFACECC07192EAEB64AE42CC7 F42BDE4772C1DB |
| 394 | 86D700DAA30FD1F0BB9D4059512CB522C6EAAAC0A52C214C82D4B564B00D6EF1BEA 437333349F31CA945AC0BA13533D08F8726F5C27161B025FE89838054669C1D0BC2B908 6B68D5B596C72CCD9424BFD2B7ABADBF38101DDD4325C860F7A242DF1FF0FADF740 4F598C64C91 |
| 395 | E26E9FB5954D32C7E5B7EDC804ED1D4405304B889C3F8AF41433AF8D3C81D3CB6CBB 874506744F6797E204544423CD95E0DC7D8A44761EFBDA59F79D7A3F46B9911EC561372 FCBFE1E96FDC591AB8508B3850558A0D442154E42619F4F04C0AE9483CFE9C5C722184 CB43B16 |

(continued)

| Index | Midamble Sequence |
|---|---|
| 396 | AB46B06E226D90582DC6F4252C2EFE25F136A3450C050F843949C42FF0B399919D7D3FF611159E85104E4E045902B57972D08033D8C7354A28A9CE7C454D3E6DA5A3B10A103FCBA7B9F824A3D0461ED32EF3DE4EDFD993DB270DB2A1AC5D4928D9DF76EC319222B18494200C |
| 397 | 995C2CF4BC8D655F65864AA5986A0AB90A7FD87CDC51B0ED553B08560B2C2941EA713005FB449B30D79EA6C91B75EBF967AD6F1400090522F1C9268C89E16B15E3270E780DFDC2999B2B6DDF28C6C6487DEEC5E3FE2979829E74B6010A0CEF627DEE2DF964511387EB41B58D |
| 398 | 276C1E51C122AC93A1F01EF79B95182ABD799052F49554884199C575997A3007B7E1D8D1A05F277151EC20600CBD29557996F4825200305FCD9389C42276DCA5D21CE363B3853B3C0010A4F65866B306F1A5CAFE48A03C0F7EA272979A1EE496B5C0C7492EF97116FAA159DB |
| 399 | 0E2E28573A009079D047C66ED6D97150425120E4C585366EBFDB4F90B794F5F116646BF4D05486B017046E27D21C0E2A0AE530C3C2C849A55C8FBDD8A4B312201DEE9F14025EB07FA440A3C768F0D1A41A32B3BC8768CAEFC8406A6BD9575B1AEDED23FADAD48DE19F11C3DD |
| 400 | 42793DBCFA4B0B8CC129CA214BE30E6C2458537023087CCB4955570ED420606BBE7089349E6624519037F7B8F1B845965F6B9E0A9F800E67C6CE0FDDD2D48CAFF1524A3C48B5D9DC752BDF6CE164C3B4CC754183F61366C9B47CA8B323628811FCCFD30E3E92B242110D374C |
| 401 | E189A4B5A3215B23CCFAAF0D1864EB25288CA52308BAFFCAD29CB81B0A1016435DCC693E03A8C9F066EA6B7E011C327429C8552194DDA4669133FD00594A448A048AAAD7AE59ED38E6B5A3BF68B1E3CA5D4046BA19D095DF5BEB725556C192F3E9E12D014FAA<br><br>608278ED7DD0 |
| 402 | 4C608B15BE23B8C245381A942FC21FFE24457E228C3A4FF61E19922465F83B03A4877A8AD4E3E1FB120223963FAC87488F4887D295DB8E2627D3B9480B7B7B0B6C418661360923D4531E0CCEB91A9AADA5FC9FD51799D55455B62CDE6CB01A0F38E36D4683C78B5285C4BE3E |
| 403 | A104114F83F3D4172563AC852EC601A8848FE7F27689AB9FC07422209677C19B5C7607A5D7641769F92150C4BA011419D72C6535A325BC13894B5B1CB890F7EB19E8F26FA19E92F1C63730BAB01448CB23B40F3CFF729AEBF626A066087AA47B3A24D27B8C602F0697CFC8A5 |

| Index | Midamble Sequence |
|---|---|
| 404 | A6109967F19D185844BCAFB8DF8AB97ACC672C4704E5BAC1C8609284387520139CB2D 79B689CE828237FC175B86E42A2B09A92910E94040A545C40CBD657E675CA2B7815B22 C7092EC452E87F3BC3D1B614A4CDE32064D2465D25C598B3CB5ECFDB048A161FCCC5 FDF81BEF1 |
| 405 | 285A6B015DD54DC114644B8576365B4933D3A0038773B18FA4F12F0EA4AA076294D73D 4D1870F9C5B1598ED08867069C296E8F0D05DC1F250E95B5E025A3FF4EB238E3D7E9521 2458420B050DCEBF7C8AB552C1A62BBC7EB7CD032BFCFBEFF734A090CE6CC13B111E 27616FD |
| 406 | 256484735FF5418B14F08E1B32E91E4ACD8C1222B219EB3ACD6F331EAF81AE584ED670 2915670310520E7F84156A6246D2ACF59DE7465560BA86EEE328949FB7D3706DDF856E6 62CC9AA0F1F5897972C2B79FD18B26C59457585EF3A052B5CAB81CC284EAEA0975470 342689 |
| 407 | D1B652C1161A2EDC7D250625D44891C356D07191BBD60E97C5F78DA216DF08B5B4CE7 DEFBF601B3B3A40605066808CB60110C648E869736A880B786A8FC26DF1CF087A92C95 46986B2883ADF81B58C6B0E1F0620556FFD62561AE207C708EEE96B2A13345E10527CD E55AEEE |
| 408 | 77F257A3F6B92B04EB806400551859318F07D0D2CA60F46B858A31702862C259CD87B62 FBE21760B2271268ECE99668DA52201F9C7044DC33C236BAE1DDF22F1D6AA0E51E036 F6CDD0829763059F3D770F1DAC112D6C86A190F7583EEEF1491C4AF82873369BA5B965 937BC1 |
| 409 | 9072046124ADF55133680752666BADD3EEA61D2D2EA80D2723810057B8D079F362069A 22C63ADAEBDDD437041D54DAF87001145692D437347E1B1DB14617AA109FA6A7822E C99BAE95697458B0A78941702F77C6455F2DE5B9D321077123D2F9AC1BBBCDDF41C0F 6E50861B0 |
| 410 | 81D1DDB6559A542995D1F6049913F0A0029536598EA15605AD3C6372B2578821F79CA46 C744531DA2AE84D8F98238FB78305229C261AC2757EB034FFFA9FBC88E8A3BE19732EE DE1B53505E1B9C50AC75242BE44B0CE0844599AF23C07BF6D8DF0AA06E72196CD2080 BB3969 |
| 411 | AC2FCD99EE02DD37DCD8385E4E417F1689D541E86386BB3E8962C0A49916401F0CAAE 839B50222CBF86A05B32C2BA39FA8837F42F06A3A3647642369FD6012F2B15DB44FF597 2D1C40A5772A199D7A16286489ABBDEB9A9BA193FA5AD106D2085A41451D58FE7D97 A56CD96E |

EP 2 453 623 A1

172

| Index | Midamble Sequence |
|---|---|
| 412 | 1DE540595B410A8A3503811C5E8A42EE89CD2EE19E9CA10DBEA394CFDA2CD296C310 005AC06F086EA4569F3F06B36239BE50CDCCFB731D38DDD5143FF9385451ABE2505CE 8FBB7B0EBD53F486E8A58A022CF8FA9C598604E3226C6035633DA223EA178D82583D60 C3FE3D71D |
| 413 | 90A1911C24F4627171080E109523AADB26A33FE7AC534082818C9A70546B282874936D18 D97F230B3360EFC63F2AE309A35D42D67EAEBD1F6C04399EC55529920716189853C7A0 03F78A96CAE04EBCFACBBFD20667C9E044FB07B32F0FF3A00FC1443AD7F7C44EDE3F C77D06 |
| 414 | C0B72CB2B4409CEF293694400715F1AAD3DB22F3562AC9D52016E959535357BB2261927 E50CD58F6C3EE2EA0366FA71750DC48884B58BD9BA34A174219C211D3667E3519A7F10 5D82A500B9F80B8F20FC7FB60D2DF3C801CA1055AF7BCB9D0D44485CF5F85C5F39686 75FA33 |
| 415 | 6F2305F04A25B8AE693BF0B3A742423C55D9E38A652620A0470E5C8226F2F273F0F582A D1DB39A29026412BA3F9E01D8FB333B0DD142700A94D06DBA5AA735DBEDA3DB1F83 2A145EB1E53FF843069DB36E2348212801ECB4677270B43C11344E707C353F5D297B9C28 D6E8F2 |
| 416 | C80BA2FEC407BB96774205977DCD4EE8A921A07EA85DDF48C9929B7CCCBC2926C5F6 7040B520A45689F1B2134AAD43472EF4920501883DEFB570E862E66411CD17D28ABFC7 F8EB9641FB5229E4B7C66E902D41D65849BFE561C046B68E84DA99F0C1B835EF31895A 0714F358 |
| 417 | 52959B885000517C56F333B53674F7296287D8723D16086D15A851C7518C095B1A4788B7 A6E0248E1B4B7A2D0431B1595486EBB072C45302AD456D046714030EACA752F5F3F60C A0BEDC8BB9B807E8E9C9460FEDC86068BD8B421D2E659635425FD7E8F3748CA1F622A<br><br>37287 |
| 418 | 754F8B9E8D4DE32CB864ACDA6A71B2F591A1D71B8E6BE0B9CB40280E2A5B90496673 2782F6A7172022D032C8E3FC236802E0876259B5F1586A0612792446C01FDFB893239D43 2BF42007146FE8906FB4C5016A7BB5F14FA36DBD3CB566FDF6548400B9858580848E46D 9B18A |
| 419 | BDD6103300F533DB67F63A1A742224B20D69E1CC739CE6590F672EC0997CC6722D225C 051225C204EEBE0B0912CA938A0060658A9937900AB9E7AA133C153892ED82CFB0D9F0 79005CF8C8483F1557839B7702FDA4715DEDB5AC0FB39C17B236DDB04208CE8D0E70D E56E47E |

(continued)

| Index | Midamble Sequence |
|---|---|
| 420 | A4788D36C01E14CDB6416EC06444EAAC703DEA0D1DF627B00B4E0DACF44C44B70745 61C7B8CE8F1451C792821D90FD51DACE7AC20BA22B4713E27EBEC47809F27B7F46A11 DC403CBEB0A908ECED8E37A70F55D7F689D46B574E0D2285E4848AC9F83AA16782000 61D01ABB3F |
| 421 | 808403DB4511CE927B110BB29A379D831B8825D352BB89F166C83E13F2590B36D06A43 B953CA03BFA4A586CE2A0F370068FCEF68ED11515E9221C28218C639C1523730E24BE2 DB1F1425465A11F2E145EF566D1672F57D1BAD7DCB129654D1CBE211D0EFD46CD51F E94F2541 |
| 422 | CBB4F0A6D589248C0056C714F5CA228113910E1851A0D3021149AF1C14C5BCA566D019 D0D97CA458E80732B316D4EEFAEF5FA5456D326B1EAC6A44197D1718C39940323D268 DCCFEC125BF1001EDE73E0A645FD402FF0D158AE3D3FD401D4E2C7E9F6C4F445F4E5 F7C44AC3E |
| 423 | FCAB27255FBD6774F1287D20502122A826D45FC0923088E1AA78D6CFC026918CC198AB 856829000DE3389957C62DBC273646D0518AD20FF8E1C0233E36B3BF27446A24B74B21B 2CF795853808B7E1640C0B7D93974A68E3994D04715DF57B8E6C0A4D6DBB5230A7CB61 597AA |
| 424 | B306178D3EC621064DAB67EDE5862315B0A965649817F81D2A8D425FC0E726451015100 FF06ECEEC06A9133610896C85C6148BBE626615DAB048129B0091343AC16E8F8EBE738 D56D6DE1A5D312DCAE58CBD78E21105D161CD636DC3741E878EF15F4AB3A4A6F2D5 CE7A4D9C |
| 425 | 09DD0DD6425DB2118913BA30317B5DA0EBC3C26A085FA4838EB5D9670C06905D0DB7 1E42800600F532A233190EEDDC3460F3877330EF51586173FD5FAAE03D39CA613C48B06 7F6B4D772F8DDF90616E8EA3CF822302322048FE151974D529C3CD1A2EE8F0E5FCC579 955CABA |
| 426 | 0196B39F1D991935A3FE6963EFC8C244403C18A84E5E403EA9950A1AC801295A690BFA CF12C4056E28597DB4CEC011C27E49D11E9A1C2673D95BBFCD9D9043C06188E2BB88F 82C93BBFF568D686D3B2FA950E2B2757C1FA72AB1F92598B0A58F42CC2580BC498EA6 15D9B10C |
| 427 | E6CEC445B353352D046374627FA821A8AFBC68A310B89350163A55D1926F5C94C8705D E868B220C6C488512E78D8FA8A76B29A0C7B0F37878F92CAF357D3F7EA8677184BA02E 5D08401ED786AB7BA512DCF48CBB0E570535FBF2090F18D9D46639C8924B4E0D1C49F 9919C1D |

| Index | Midamble Sequence |
|---|---|
| 428 | 96921B39B8849BDE6A52E81B7AB3CC6EB240DA0060545BEF5EB728D1B232D2A90A96 1436A71C85C929024717B0574AA737732E87CB02F86EF8498ECBC8D039E714D609F5A43 2D3CEF447715893F9F848B2106F43956155A80227C37248A9D43873E75FDE2DDBABB862 DB5912 |
| 429 | B5A8918ACCF6BA602AABA953871BE036D18656F043C72DE22B95D939813412548C6385 4CDBDF4A95A526FC133C4622D5158C2A88003E57E676CE587291723A3DCDEA1E3C9C0 C86FDA1F605F4DC53898AC93A7B003159091577802E6188F47EAE77F7A6D83EEEAF7A0 79C1F6A |
| 430 | FA334B9895D339D12CA0EE7412027D302C4275247E5E6AD092321A80D029B75FB25067 C5C1558392EAACDB38A814816C69CE813A6403C79F3686C487F4F8B0C6155B26342D14 8095989E0A1D67502EFCB68A207CDCCA71818F3728BC4DBEE438BFB158F70B48FA3E3 88F2BEA |
| 431 | 40D44830EDEB94E444475B2EC21C7DE878A6F81668E4EC8B04E4C48305A593DFC38291 54376424EF28FCCAB18F8816AF595326E68A98ED4FE7231C03E4FA751D9D1F96FB1708F 4501A161F29B7706F20A62CDF79E606DA430ACE4C3FCA65F5ACEA216E0A59B5D0F522 E0E39C |
| 432 | 003EBC670D96098067C8CFFA82EA624461D1A0226CF5FBEE71F94644614A0C140A18B3 5A82CE61273F7B7484625F12F2F854DD095C9FB0B0D602F843CDED264050CCEF6ADAD 3A5168A91596FFE511D7C6C986BB3414504B2E692CB1FC6E3081F4FE42B3379F375990F A156F1 |
| 433 | 91068C31FA291A9C1BFA88D31CFE1194A57E96D4D3082950F40082F7EA31579E3CB4BD BCAC627BBF00BF05323E0406DC61C002460FD57CA63CED380B7A2C24E25C940542647 3FEB2B4B07597502B8010E86BE7059DE666F2A1F6579F5D283C59605CD6662BBB3797A  8CC5AD9 |
| 434 | 44DA19B5495B239D77653010271E22265B75D079C6C91F92E07462E48DED5C53FEAAD4 DE92904726E04A054ABA0B4C2C74D1E0936F9DA0BDF66BB2867D6914AD2DD4D7981B C2EA2E8B97FA1FACCB3EFD0277ECE9E94A021DCB52F8C6051DE85D4E2C2A0AAE096 08CB2D93F77 |
| 435 | BA9CA8276E2F048933227C0B3CE4E668AAE60B7630FA0BC446CA921D8760698330872D 2E954123BC7B45B5F7F0232F4EA020C3CFBC31E8422B5E5EF7C5970012D10AE4FD7A28 85A1C45F463DC02934757C9B091C172F781D9234EDD82C881D14975A41CFAE9EB19D39 BCFB38 |

| Index | Midamble Sequence |
|---|---|
| 436 | 7071D431E60E2B8869FE72429540CBA16CC02AB22F1E1368815DE6A377D425C2225A21 E4374742A4B94D16CE6BBAE115164C0A1EA488BE38906E0F1EC56CB7DCFE0153136C6 84B012928E5FF2CCF01291073B2EA5A7503E8C4DB1D479F963E65B25BCB0364DD1A723 4235709 |
| 437 | 8FD9BA95F56D22A96F934161A3A5B6DAB8DE4C3B80D43CCA45973A0B244B407AA61 C72ACEA4CA910292D6B7444CC3E72C80AE88101E93AA87061BC9CAF4089E34D3ABE B7688229C31A26281AFC23ACED7D450BBF20F2D0445E80B96A4F1B024ABE6E87EE43E 7FCD203E4FE1B |
| 438 | 8F79D248D352FD94C6072144A5A982AC7E28C106F6190B08A89AE4D77591765B3D8E4E 1BA0FAC3240375260234267F7DBFB9D044AF4A426CF795AEE64D333EE52E4809DDC20 8B0A9FAC9BD6D97D0574FFF873C0B970BA1C47D493A39F1CB24ADE011CC293FD4DF1 C3093F5BC |
| 439 | F24B284881D2D692442CEFD61A06227F1434461D847FB8F95AC688470F7041F6F4C98831 01F89D681F96E3AC0AF8CFD008B85852DF529F2754876201F5D2559EA183E6237B3E0E6 2947893875DF558EB9CE0AF4FAAC16306CD91B9621C8CA4C9596B1723A27696972A4A1 FC6 |
| 440 | A160BCA96E6001F40E6FA9C3A0E84C2A139FACA0BC79BA580085B8C7622543CD24634 76003FD2183CD75FEF393143331D36C2CD1D318C34FCBC943F60DC8191CB6C0A38FF49 7E375555BBF2B3C47E20E3A85559A160CCAB5A7731499AC8484EC4B10422713DB27DF D86AB90F |
| 441 | 3CC19A990CF3083A5E207AD346977777B64B81CF004B3599A610F84B51635D5651306C8 342C805B20630632D5598F7A032C4FB1A4E10D323FB18D74284ABCD84ACBF175304036 4BFF155A409EE7F65934E3C940E8D0B3A6F2C656ECB7EB1C00A708AF2329AF32AC9CF DA6769 |
| 442 | 3E9F529EFD9AE0225A67773E1503ADC55031E1FE7DA3287122EBC434D291AB176E1D2 5F83B08BA95AB8D101C002E8431B5582C3D2DAD013A5804F849F016D443130E18329B4 53FBEFB33AAFA2E9B5994F0EB697B15EAF752BC4CF72C24CBE12543383DC8D2786A00 047CC1BE |
| 443 | 24C134EB11BB5AED862F838080643A474B59CB44A9C3EE754640E30D1EB406AB6AA70 C4DC321F171298A779DA75C1F12A2130C2CBBFEB0B03931A5BA2594DA15DDEAB431 ABFD4657344EF04974AC9F1F025838A82748891AC0FB089A149784591F9A73CA3FD6C1 486AEB84BC |

EP 2 453 623 A1

176

(continued)

| Index | Midamble Sequence |
|---|---|
| 444 | 6551A30277E0E61EC280BA1587B5A3654B558EE303A5EFE75600CE05B1B8A9866C693C D58CC02C33FF0F4C8A470D06F8867E85B4D2F22026D7B1BB42EF1E2C1307D4777B4739 23FBBA99956E5E48E2B6AF3F63DE60646F8AF5926E7BDEA083251EFF860574290B03178 F5E80 |
| 445 | 170C698D88B82C37DFB98917BBEA223748194F80116922D91A5D50E22C2019B5EF35517 C78DC38605FB5DEC35E5209EE3CD80059049AF19E5874BD46BB5B8956F104D36C86F7 DB5C4ECAA5A8DA57940FACD742C82A527BBBCDF00D5D64BF3C9C122C74D72A0310 7021B85DDF |
| 446 | 3DAD88037C61AF61A301E40D02A41801F48A95E876AE9B005EC81EB32F34D5AE20A0B 47B3F55815F1B8BA221DE8336C2317CF9AC458C6CE16CFC6BAB60CEA7296BAD857BE CA77A8B4633295719D9938B0EA383129A8CB764504A1E0A3815B3EA6A284AF49F71E6 D12A165E9E |
| 447 | 3EC3E216648CC48E035FC62CBA09952705282DCCD4B84EDEF7838E075597270BF731BA 76C1A999C82E5CF86223E5671B4EA310750A86835B2BC2591BA956DE51117A3AD8879C D79914BE3CD6D85FDC95A561134291EFEEA6585ED78107BFDB006AB69828D358555E4 9D1C638 |
| 448 | 1EB20899321A72F489178E90F71B77514669082727E10FAA71EEFB110FC58FCC929812F6 A16EE8F87C82061503328550EF0FAA920F7170009E8FB8C098110CD7FFF9968E0E13F0C CAAA2C46AA1E049FEC1AEEED752F73B907907D0ECBB8ED3720B5CB9D253BD4982F D269096 |
| 449 | 40F044C5E961E3AB0A7C090A2E2E23778AA4C6828F17AD435AE3E31E1DBB9E44FAFC 5417B214452660048400BDB4B79ECFA12649C3292CDDE9BDE7F5FA8555B2698A0FE1D4 0EECCB24C4C7E69D613C657D5C0A1284F97D4651B0B46AF9616DAC4C60E6CBE59419<br><br>BE0D711942 |
| 450 | E0D56B63F1BC59B577D7A740C4FC2745BD226C1245DB0B1C000B23610962641DEBA68 B27D0E704306BB35D19CD9941C1CD7215C1F0DCCE3F92DCCA923B75644CB2A928729 81F2B5D082F3AC5A92B437616EF351202C560A918B2433F7E45B7A67D9F13FE619099F6 D5F86446 |
| 451 | 0684D4E39B5149094E0D901A61C929B19E08F91CB1B92E49B756573311391C3A3E2EE1C4 3B102BE22BDA9DC4995955B27A8DE9CAC1025415EFD315E082D42F0AF95CD92501A4 A372F4BBE8412AF0E9B94B831AB9D5DA5E48CAA7D9590EC08184D71815D982546FFA 9AE07C690 |

| Index | Midamble Sequence |
|---|---|
| 452 | 447622968E92CCC7C0D302603AE6E2E3B9C8A580BAD9660495915F22097A935A73A67A 22DB340C2C3DA8F450690ADA45C1F6119FA7CE4132BCCA914CA3792ABAC7A7149841 6CD16B16FD374F600A2EBB9C8F217C41CCF0C86572A23230CDA3351C987BC67D2B812 548B17DEB |
| 453 | 1C63AD310C95301ED1001C5B33E3A33286480F560CEA304812D40B65BC674AE1DCF8E 9CFF843CAC085FC0D9D3616CCABE9156926EFFCEC50F2B4DF55FDB3A3CDFD00E57C A8A77A26B36985607C6445EF4774144D26D1C711FF1AA853228D3CD6B721656E03DB1B E18992F443 |
| 454 | 82219A52D301F7E32CBA0446437509EB5D100D013CAC912D41249E4F48DC2CCBF88D8 B312CD0EDBA0437FC7BEF310C9DDACADD3343D5976F37F82C2905AE7F3921D477DD E04FEF65938F19474719064E0EF5511C704B2636E382E4474125EA0F247367F674727EF39 DB5C68E |
| 455 | 6E9C1A5CE4B75DF94132940D781F10BDCCDA2D768E74414CF4C8892A38F4FFB9E281D 4CA0444C4A60A7082759E4971496A04507B9C8BC6CECF56A1780015D16DE4235740C76 268BBE516FF56BC17B1561450E673FA3EB57681C0CB07C0C43EFE8E5ED463B0169EA8 AECA50F0 |
| 456 | 4478A99C4C41B61041FBCEAD10C3F4928A2650A890132E9E65FDF0289E79B66B15FB27 46619108061B091BE115B10875A3BE0FFD264988EC904FDD85A05B036DCF3FA55207FC D3C281B4AAA4FAD22A2D6CD7126EF0C3FEDDE97C589E2AD144D429DC061EF826208 CEB52383A |
| 457 | 7228D5DE01DF92A3C0C3FA01EDF05EEC92D5328A27141FCD4C5212D9083625455877E B46CDA75509058A440C199AA0644AB9224BCFE16657AEEA01E888618B5E12FC30A274 EA1AAF75295BD7338653CAC7AA6448047AB42BD5010F5F1E7F7531CB00FE5B740B929 AEF77C1B1 |
| 458 | 26B82A6FAAE691996456AF12543F50AD515810841BCA4F77C2482F4CCB766819396029A 62FE4055A701AEDA360640F5413EE0D84E07B7B4401205D313A64262B704E63EAF8D49 319EA8D09BAD2C15B0FFB6D7CBDCC05CB540C72FF15CE40EA5A617772F521D9511C1 E4FA375 |
| 459 | D8AFB5267D4A50402EDAAC17C58AF4C62B41A533E8AA986098F82504D0DC587C0EF2 7546D813B290A4B35B166E7E64F45843CF9A86C7CBE9CB9D2F64EEEE75684D984F6F86 59165C062517321DD06DA4E4BDF8E7154C78A13F8BD8EDD048A9C78D019C6BAECF41 432E168E38 |
| 460 | 8C762884A1FA0FB1BF359BA3AFDFA609292182B9A95D85AF12835B25C0100A4EE715E4 B10B14683FB1D6CE42672E84B1432A302134E136DAC5035CCCBC130C15572AB33C1212 FC806734787CDC43CE8F4F8BAEEB32ED6FFF856232A7C28158529E7435AF1D1FD892D 6FF6684 |

| Index | Midamble Sequence |
|---|---|
| 461 | D48E039A68520DCB8E48AFC4B647202A5EE9A09778DC88D3F96FBE6235461F770222F8 DCE063B039F0B2EA01C737124294DFEF857494998FE43D1697ED6B846991461D56CD520 770C1399F0E3FC549AC0F4D57BD29915201D303B3580DE4D181A7A39D7EA5EB92FC65 5EDFA8 |
| 462 | 12F11F0C507A1C8E475B31428C65DD9562FF75425C05BA4F468C1382384C2BF19EBD680 29499B979102A503559E2B6C51C8E1AD84634D3D96DEF6F591A6D53F62B59F03A1DC66 9CCEBAC8C608C7AF4C3866554894EDFD22B3F0B657B69C0460EF409CC10A1B6D8D15 17864B1 |
| 463 | 4B1CA84BFC9CD581FEB2153CF418C3AB850C701C6395D18E60DAB0BC3068DE687032 D5560C811E563FB4B6163652BCE47702804896CC00B30A43560AD186FFDC975F466FFF5 40CC36909BC1E077736F004FC6894B1F973A8FDE97D0AE8094476BDCDC2CA5CAEF637 0968762A |
| 464 | C40D82F5AFAF140E4464662529F5827CE48F65C8F8A2E08ED3800DF762B36D77E228083 0E2DE0503AAD15859FBA7F230E3E791C498838364199C2A11E94D2517DB1B27B15A82D DEDF8C35BFFDF25E9168CA968ABF414CD241802EF9E68C571BFDE3C10917874DCF4A 8D8972B |
| 465 | D087BDC6A454ABE26C7DD47C6A130A3521E86B82EBC8A65FDEAE4C9AE2AFA3301A 0CF96B20229B5A513053C21B504359154F64CE7A92E0C9F33EFEB70C4EA93E3E1CF9FD C5CB0FE180FAFC3A30799202748A5C57C88C2103731F1563A3DD9E0E9D5F205F72EC34 9D6A1ADE28 |
| 466 | E166FF24A2A8F8086085673206BB378608A894F7436A9DB4F9431024DAB074790C4B471 C8F2E557A86D83F7B4B33D79E0402A6541A8D0294F199FE7880238E88FF12A564AB6633 FA179483F05FC76D270B7539E7A8D3A5BA13024AB5C3D8323678AFDBB52638AC122D C5893F |
| 467 | 23113882B89C5DCA7D7C1E50F8DB44013B3E3448A398248A5AD72CF3B3A3195EC2D7B 386A91EA1FF2022389029778A994939B06AB13B8397B56B58BE0AA0F762FFDEEC00D4E 6A9F2FB36C74166C9252D30A2B4834B7544C03125C721DDA63D54FB0086525175 79EFD C7013EC |
| 468 | 72F5C860A40E9C71727551DE5F677F4FB4C4989C9236A422FD0462A04A3B57BF181A269 32029BE135BF8174840A009C2DE30DE28AC89E51E0C8DAC0D8216615C6119750B4BCC AD6FF2EC47BA7E517A3F0F16A24E3CDEC34664E6555BCF49B2835B04C00896D09B19B 62F4E07 |

| Index | Midamble Sequence |
|---|---|
| 469 | 8051748B0D330C27B4F331217815E9AE8D8DEEBD70C79429DA73545A44922748075C04 CE97EBB29E0F7820CF1B61B8B6D15771A0AA14E039494C3213C65CC061D5AEBEDDB7 8E2B1F979164CC4B62CBA04A8AD3335DD686C2BE314A5A3FD902D18AAF7F7C886790 5AACD569FA |
| 470 | 83610F95B2795C40DDB5F17D7865D021BCC6162FB29EFA6B5471034382AE1BC25DFB21 748650291BBAD60F3496848DEB9CE4121C4AC3A814CB4D5FB2448EB84EE775BCFE5C0 644D83C611C26B6ADEC94A13BE2D8FB2732C1199B1E52FCB7A5C04051169D3234261D 9794CEC2 |
| 471 | 34C27AE11A02ACFAAF2233803923DD03FEC09892E3022A5CEFD5DC0D02D4C26F07187 3EC2A100089296803A2F47F7DAE76B5A422BFFB622D8E23BBC030CFCB5676C18584144 EB31504F8A36B132EC92E40761BD7A92D1E85FF4FB26D53FE98EF89DD8D80B112A774 7234F6BE |
| 472 | 32F37C942089F11C1691BAD45FEB8D9AAAD531B7023553FD0AC1EC441EAE13490A914 87462A98F309158DF01A93AE289372C6ECB9C8418198B8C754FA6399724E72E6BBCA122 6EFFEEEF47D89EA0D237468A6652E955000F0FE7CB79371C3D34B3B09C427221B9AB6F F24F87 |
| 473 | 554DB029EA2A24DC771F8C30213BFFAFC6EEE15120DD60129D102D30A96618D039E02 5140299879C357B3A13D75A8A777C752321823827837BDD51C001D9D9AD90166B1371C8 643C161BD8C3D4AC554B5E9C9F4DC6418059D031489F9F63718FED6D8EF648F6DE95B6 38C252 |
| 474 | BB3633CA51895A10475555FA0A2D3B9EFC0A9DDAA832D9FCC489D6DA88407984B60D BBD453C11D1A6EC7160F1B5689C16309E8C87E165AFD1F3DFC6D6042D7F88BAFDC5E 9086B50879772C2FC8EA389850007742C1A17C913B738BBEDCD160035AC1C17497DE69 F4039530FB |
| 475 | 411C0C19D44A02EC808CEDB39951EEFEA0B4F14CBD458346F879C62E240EB1ACEC1E 8882A0E4A12480F023385CFE212AD35F56439D36CC19E87A1A51FC675EE3C3AFE91F6F 4996407C061DCF3B8E89FC9E6A0E544EAF5430EF5053030909BD2D086E98AA1BF596CF 927A54C9 |
| 476 | 117921400BFC8B24022D4F3674637471A07F5C6145E1082150B86CD4C1E7D4FAA4045779 943E30A44656E8FA6D06532A1EB7D4E0D1FDB2D335ED10091B8882CB2D8D811B32354 793C8B147C0F4C0D34372C59F248FCDC036D6A2EEACBD0E65920DA7AA5944FBD2149 8BABD49 |

EP 2 453 623 A1

180

(continued)

| Index | Midamble Sequence |
|---|---|
| 477 | 56525F2B28F61A864D431B1D235548954602D60C2893FC09CD9798D496CDB12287799928E3080BF8B71D23EEAA65D87137107D31A0858928C2018299AD395A1D019C0F2E3F2F0E89D73BD3BF59499AE74C40F09BAE835DEB6CF7169F259F72167AB2CB570A63E211A13 1986E6 |
| 478 | ED181B175849E6D92F7FA137228EA7460D765ECEC5333C69A09130FB060D945C7BC7BE41F1A1155D9BA0BF12EB3A510E01568516F8027A006E9A2E4A2A54B0A3E9E116A321ECF08203C05AB5EC1BD2F5A7A9887753156A8F53426E75D28BF4362E911FB9DDE683266 B6693E8 |
| 479 | 5EE61632DCC5A773F0F01FB2398B67A32038404948AD614D345EB0FE88921ECE377917A2A2304D0BE747265E88A1D15EC7D844813695 1AE3C62A27ACEC0A2B850CB44CC95B70D7EF61EDB53BBE0C6FD5544AF53BEBA691431 7369D8955D6E408FDED0F447D55203 600DB3C03 |
| 480 | B65B6D6014F96E0562842AA81AC6D7793A5EAD00B22391AD9380D9122480AE0B3247F64960FB0913C219610D3FCF95C40A41F56C5603D16EC31F37A84E2EF10725D845CF94167AE520B322EED8D6AC4F7A2F6402095EABB075558CA7D69CA163F0077420E3162A30F 77D7E16 |
| 481 | 366507E2CF53F84A0931B8509035C71024A772C544FD89462BA00054EE8EE1972F3EFEFAA38ECC451F057271388E096BBF6326ACB8725E0138B0E378B3FC0D65F3C098427BFA3C57BF078A6237EC648733D897CD1DF1BC180D355AA56ECC16CF5EA5C31C1CFED942D 42844FF |
| 482 | A4313464A54017B834B3E5BC40234B240FC559B182DC3E42D06BC22199D374133B1138DBEBF9270D4B22CE6C175861D246CE49C55BD7E1D5F14B93992CA456DA37DCCC5B3009FDC5BB555A6EEDA47CCF1E2E54BEA0A33371A38454103342BF8A2B8A05AE535DE02 ACFEA724F |
| 483 | 44A1119AEA80BE0926C7B3D38AF50B86D10CD9B8E021268B134377 1CB0BFEE269727CC0DFB483B4D2125E5CE94098CC3B437753D014E4A71B19009DA5B7347AE9AD907D6539AE1DC342403E8A815898BB5B2A217F6567A23706B5ABB81789E2B5B743A9F2B66BF40 1F42A84C |
| 484 | 5331BFF720FD332E2118EA6BF48503AA211EC16C081F4D831A6086137960AFC48DF9E02FFB9E854173DEB09070E91234889D55E727945BFAC48E1A9651A9966A9E860AE5E992C44F89DA35A969E115981 8DEB47AAEA278FECACAACCF0178F61D6B52A10C7EBD814D9 B146967 |

| Index | Midamble Sequence |
|---|---|
| 485 | 4E7D284C1F415B82D7883341F44C492A4D2EB831CB30044DE7F223D2D3CA44D3B67D9 2F1E8E65BA51EDC81FE84595E8806F3913E00B7BE69DA61944F9EC657655EBCF03C475 7EBB4375423093A957331F16C4DC4DC5F0446B2A77362E4AC7D64EFCB5406A3B4F0027 98C7263 |
| 486 | F9F006801E13A62A33386EDD842FD0B60C13513460A6BF7548ACCE9E86D85273BA70C B062536A0D6C3F5488EC372B33FBA795DEA37088785FE69EF4932B290656B059002A2A3 7119FF18185DE450FCFA8C239D54AF43965FAB35AB1D6A5B370C1BD7EC768274FAB99 A073C7B |
| 487 | 3803E2F2DA609B248DAF3D0321B245522CCF95D43A4B6F99B8D33A78045239C1C1E2A 6C865D83E5228541AC74E78DCD729407AE0080724FE06ADB4A657B13FBDA75243786B 14D0978044F07006131F985C7B04D627B77D02DA31DAFDC16FB59454CB795DFA99BAB F7CEB4018 |
| 488 | F42BB3BE4D657021C821C35CE168DD0F8339BA117CA904C9CB70A61D816A6CD18D85 5002FA7161947DDFAC77F19044F0E171B4CEC59385E224ACF7E4544EDBCCD4442E7551 2C9703C44E39B97377778649B702A0D196349D48359E390E62694F525A7BA696D223937D 4E47F9 |
| 489 | 15050E1C786ED88ACB13448B6BB26EF69AB447DE25585DE15D4B4C53BE028B453FC22 61A1B38C8A2C094814ABAB31184EF39322E28177964B00B5839D510F2BCB6485076FFB5 885FC1C8FAF86393E2A4CC6DD0939EE55FAD5635582EAD454AF5B82CE99B9E30C6C28 2ADF96F |
| 490 | 3050F3997B01D362B51967A56450155D20E81C53278BEFDF1D252F05CACC0BB2EC8460 0EE2A65BC9595CD524C205CFD85EC6A5D2035A988F59DE1A7A443E5851DEA96577E69 B8C4F6EF3F85B40D613D8000D614C1D6FBCEB1C2F4F1D42E9C4916F836538D428D823 C6824B66 |
| 491 | CC6D40F06D290AE446AF4B4D3FD913F7E59611B8DA642D6FC9E1A6A65C3682EA07FE 82E2C30ACD03C46E0A2AA495070D0F37D9000C5446D43D9D19E579C7360EF71BF913B 584571972C00246D55756C689E335B64E8A51BB1CEA0B74689D73AF7F0CB049D6D0AF7 B2BEFE089 |
| 492 | 57D2526410D0634127CF529FFC6408EB65BB2BB73A8640476B6219580E552674C49F73B8 CBB22EE3855804ABEEF0481989340C4E5C8FD71725D9E3637E9A2A9A3E29ECAF447A2 3AD4D32AD33D229B38A6B85829C56665121DE12FFA19617C9705FC13218BBE04555363 D44E4 |

EP 2 453 623 A1

182

| Index | Midamble Sequence |
|---|---|
| 493 | 8C6E3A63748451B011E03080E6E68E161EFD8163CE215EB75480F8843C1C3CAF433FFA6 A0C811E010F190FC7CE1CF2D9A9C938B0CF6D311664BA1FEAD401554AF9FC8826AB59 BC811E562A3B495959E8F4945618AE6B9FF24B563BEE86A3B1416F6B80B1CE55FF81B3 1A9980 |
| 494 | 69904F80CB054690A13616ABBC618B4B1BA86B8E836FAC1490EBBBED31696FC6F2F4C A8522434982D09619E4D5117EB2277989723BD98919D915B386C64D1E6BA784780417777 F8D820198825A59CE70B9115366977AB752ED45EBA83AB48B8BF520B79DF520A47DB9 06FC57 |
| 495 | 2B0C14367F0430364656D7A42716F9C8D6FC1C49CB445ECB6B82B2204C8AA6F3A3B706 576E68B7FA7DF542D7504009A31C200EE5C5377398343DAB5C6A694EE08E8CFA45C174 840EBEFA31EA3CB667B0B9B691FD49D97960840D3FBDFA8FAA158D09F82CCC7D0483 D7EC050D |
| 496 | 2A9D24EAD6860DF6837813FBF2833D278462284A8116CB894C0F6FD18F374F0A252D44 B0CC30F3CE6F484AE1204E0A3BFD0C8564F43D3EEE75393AEEFD1A09054DAEF22CC7 46C9B4F67548070129930DE7B1C34835453868893FECAD7DFB04E2FA136064974A2E7A8 20C3283 |
| 497 | C22F977ECF66AD531122E6049B8B86261E91C24F5020D01DBBF8808D322CDC5B8B4A82 CF0CB2F83612CA74EE891EE9933C918C7684673C9BE87AA4C5C74BEBB81AD481E80C9 DE44D517378B15885BCD4252F6D5871A0A25C781D5B68FE14BB29F39C38FF4E5119E01 9958293 |
| 498 | C7746C2DA0E70F383B6F6DE8BE47F6459A57C5C15875071E580A1E064E2017E422E054C 5ABE98C00EA06F0AB4648D7464F2ADCC210EDB5A1995AE2A467CE5F4639AA2A39590 74B6B9B38AE411C4757A71F55027DA09BE5C66D0A353B53C8A74650BAE0E7BE683A30 8ACDE4B8 |
| 499 | DE1EE52E33C97208FDC6FA01FD53F838AE1CCBACF7A68AC7CC2360F12C07240E68FA 158CA0F023942F37D10F218C61220ECAD5B60DDC269551958B95853503AE9E001DCB64 FC6EAEE9353D9267BE7A47533DA018D4084D653E742A4E4193BA5B56A553CB952C272 DCC17CB9D |
| 500 | CC102131636B5E5DC4C655E07D865160CB971B2C9C0397F5C10448B825CC8D33E0463C 050023A3AAC51B869F045BE67387AB005DBAA85E5987884755A53FBB17E09B95EA8663 5D1A549FCE31400297846030919C9F952AFFDF6551AC73035415253636942CEF426D2397 FB05 |

EP 2 453 623 A1

| Index | Midamble Sequence |
|---|---|
| 501 | 5A7EF290406AB1E5327D05F9E62EDF08E8EE22B0D857B7D61702B812A807A0C4221106 9AC0F7A62E922D4B4308C6C561079B60D1CEDBC4EEEE6E9A021DE9747351E214D7573 343691709324665B6CAF235A7709D5C135AD27116BF3F49B4E160C44911E109E8B73CC4 8BE07F |
| 502 | 003DAABC68FCC6CDBC0804FFCDD2B24EC16217641026281621194DFE311F5E676F1741 EEE4586EA2A2B306A5A2AD67C48A780A600B9619F33887C1C5AFAC6227505E0DCA7E C335F572D655A78F14BB05549DA69263BA809A4BC1222D3EE9014A4DB45DAE391C433 0D9E274AA |
| 503 | 526C8B6267F6C3460CC137757B42A22BE105A07C72AD0365F778C24D0412350416961CE 70EDF9B71B3C2C5AB37385839D785052ED68D71C1E627B1337284EF788F4F527513DFA2 7094D227F1E92BC5CDEC9D82C8A044DCF10493771ED04017E17486AF08AB442FE25914 1995 |
| 504 | F32AF8F8E3B3B012F340E5D6A6525F1C60A62A27E422094E0060CA42B0DC2D1B823FF5 477066E210455D26885C87DA0CE71EFD9C42225FF8ED79ED4F74F641BFD114A8FBA40 D38B081CA14DE924E5585BFCDCC70FE00A344FBE42D60C854A3BD3705825A7E62AFA D73687291 |
| 505 | 3FBE3804D170DCC397D44C51D3D865B0CED03639AE993648D605EC6D29A9D79140D5 E84C0B8963C12890EC4B3A550B048A811F385588E4368D5AB1FB910305DF3B4650454FA 7AD0082E9B7D4F6CE1C8085C65C64A9ABA69B0A6645563C17FA82762EEB0B41CCD61 D6B59D8FD |
| 506 | 80B25F0570E1FBA4CD156A133289180BCD145A84B6E095815B71358227D70E0647711526 BC9D59819D95AD484F3268537D2D7CD781CD5C75385382AA98679A9F7B01E24A5BEC5 FD7A9C53B52ED1DD07AB9179D3793F75369715369B2247380A8786121756CF45C71E5C9 E618 |
| 507 | 010D0AF3370B0C27E3A2ED30C76536C731AC7EBECF600B02A4886DDAB4ABC84524D7 6E1342E84089B849BB59E688E3D5A2129110A7CE2095AA2DF38190B7323791F0C3803D9 4A7702EEB5E4D8593E9175715B30801BEB660CCEFA115DE4786131A012E25F14BC3FFC 8CD36EF |
| 508 | 42A0A42C03832D67D03D4D280B7923038ACE51FCB69A6F01E56913D5F6AD4710014A25 A9F1468861A199F17BC362B388D3507518CEBD7CD141F527A8DCC02FE757350488D853 B56F9F72932BFF03B655D0B41B672E6A6FA647C294423F24B752DA24D443EFCA503ECE D5A205 |

| Index | Midamble Sequence |
|---|---|
| 509 | 72D2502AD7C9003A95528A9AABE54481E922CAA6C0E0AA74CF7D4BB25EE2334DFFB 481601D3091FC0411051458B8C551FB6F6FAC3F1B84A061C1DBE9CD2D66282D7923BF0 B5CD995C061A5F2F2B434C5BF52BB689DC5FDD8D849825944AFA0C3BBD6DB7515609 008473031CF |
| 510 | 1B5467B8C46E38924F9202ED8F343241047A8A71A148FA203715B0CFE3E610DE34303B6 5DE9CF4132AD219937433CD7445244932B54742981F04F4DF2E1D26B9310D94BA9557F3 5D2317D631DA179A2FB38F3AD7CC312655440F0E7CCC8B44BCB544EEFA1EA0327C4A E5D654 |
| 511 | 03C96A059DFA7EA40C29977876DB1BBC1DFC5A399A06A1B6C028B99DAC01E2E4853B 22E11D5801D2654828E03DA2660DEF9659386BA77AB0A85F4C7D042E709E9F81564119B BF0F62197CB6FC78F9EE9CE592661F8C6E2C51A9151E273C67AC7A24591A0C7C7224B A890B983 |
| 512 | 9EE8101B293F05662F0F628CF6F29695AA15366E0B8F8F1E13E4059B1CC04B82CF5F9074 2F2C76AAAAAC7240E3100C008CF39274E2ADE79B44CA9BC7A1F8968211371161073A06 95AEA02DB021EC6F3607A873C3155E782E82482F26EFFCEEB12C50FC21C1B0137967A9 1600D |
| 513 | 7B0F1BD9CBDD1CC71BA120440F566CDE9663E4D20801D69B7809DAD033FD02D318BC 91AD3C19A3E8375ABAE448D10017E36B98626E873865EE5F86433BCB20FEB6B82B2C11 CE6BDE2C5FC0518E3ED112A3771715C3790D0CB0B85B668137D1DBAA49D2A8CA8853 2DEBE47C99 |
| 514 | 923BC45FF1AAE76005D6AC3DA9EDE83062281D904A19CB8982E645218D46AB41B6B20 261DA8112061BB7EA7CF7485DA45E0EAE745E5BDCE03BDE733AB2E890D24B8D11C37 19BB9631E203ABB05C1D0754D800794CEF51B39FCAF8A94FEABAC9108306BAF2BEEB CA05A8DF435 |
| 515 | C7B9D873CEB110151EC1E28C2B8C9CD03066278E3BFEB4911524C452C343B84500BF4E E29C12CD3EC488367B6094544D72BDF1C88039F83041A9B93FF2DBDF2FAAA34B82861 44119FE3D9E85B35992BDE15A7E183ED3A8011A602E2B3E60CB89E6F560BE53EC83080 7B41C44 |
| 516 | 7A4CA4CCEBDAA64BFD3C32DB005B30F08E5CE17CA3E28E15A9B9E483F7B8076906C D8416F71F0520EB1F6DB17100145F6CBA1819441966C94F2E4A17E739E2D6C291EC3BF E02A6A1B1A8A24E5F7351E6B409F15D3458C3E3ABB1F02E7858C88AD0517ADEE622BF AF7A6D7E32 |

(continued)

| Index | Midamble Sequence |
|---|---|
| 517 | E857603E9E0F9DEE2129B84883F804415EE275E89EA68202457B12DA289F200DA3E09AE 4238CA43AA016EBEEC9B010722F749A7F353E94D09D7F95A3638E6EAB598C40F623553 064A57DE5441F9FBE8C34827A9424FB5A91BEFE5443F3836C116EBCAFFC916B21CD682 89BF2 |
| 518 | 02A1A689186A542E4F32158B51B78E050E571D4F14E0A7C1292B7AA3E6EF1414F44B605 9C24EB2C617326B541D88DB73F9CFD2F71B8D729D61F00B94E2F74AEA8CE8B0B2C6C 0FAC6679EA9E51DB2A7CDA21364EAB81F3B653A0B3348867B4E605831953BC3AC025B 7FCEED66 |
| 519 | F76CC191551160041BCA004FCB11BC111DDB53BE0007300C926076918A598FC64A0946F 8BD1B6757C49EAC3902FDB0B958A9A3E08C012FB7838AB68D692746294B7B1ABD0772 FCD124C69805AE52A1CDE51C7AF3928B14FEDAFB4123E95D904294A965CC9C571F106 CEBBA60 |
| 520 | CA2E76BCAF51943639AD4E1B0DC0FCAE1E54A85F30CA3890B3621A93729120BB725B 648B689B8CFC1BA3802A8D8D891A6A4D3D95DD8115420414567566AB09FC3AC90F6D6 91448182ECDB1200EDC8DBFF75559398A4E7ADA8DEF7DD6116DA0315E087C316BABF CCE8258FA81 |
| 521 | B44158204E601A94B6D8074F7D56FEF7E745C0C38B41DF9A8E41298584D0C923192458D 862746925F4955AA784769BDC79771181F44E68C0448C7EA75621161BA01272212A3ACF C6FDBF761902C865DD888A6EABD0F51BDD76D68B9F4D1F295B8A7CE11F7EC8B19A1 7BFDC2B |
| 522 | 9529D9DA2C0E22111C812C0D2FFCA6A513345311283668AD789F239A1CA6EFCF90E4D 552F93E5B22AA318EA93D38B071E19E08958D435301B906DE9C65E0F4173F568D9A8732 619575A45BD72667051FFAC344DF97DE278CE03CB0FD3D91AE097D8D483618960BBC9 2C8E0B4 |
| 523 | D3E5EC3437E2508FF9AB794B0849B3204393E475ED378F60B408DD1D9D6B2F6300181F3 0E085E804135849535C876270446CBD51C2319B36D6F52E011C7755F4333A1186D863B70 3F882D303880D385D7D9D1E33626D3604F64990BDF41F30860E88B31C9F79DEB1CFBD7 A94 |
| 524 | C21DA060A7D0DED4901A460175BA3705D8AE7E460F0A27DF8620E1C9C14E028E75FA5 13271FF161511CB08516AFC030F7355DB95E41390B75386A42CA28A958EC54F5CEAA72 5D41D8760F19ACD06C837957D19AF532405F6F14D286A1D763CE56C8C1EDA7FEB3472 365E758C |

| Index | Midamble Sequence |
|---|---|
| 525 | C94D8DFB58320EDA1015AA818C218ADE06D570DE1C9C6A931381F37F76FFC0DB3002 DF16D0449A1DC2010901CC6AA68D2560BF2398B37F1F0FD28E560F7A6FB4C9ECEC588 446756121C0487FB770CE8506CC801110C5A89F5557DA147A41A73C2CAC469487F6BB49 B5EE4BED |
| 526 | 1E25899865878EAE6E1450061F49A29F0A834B9C9247AD087F4084BE30395AE36C10379 B180FB6133F75A3B9CE0FD5B5704203119915FAB3C3200DC3D5E91B826A54568E46F1F3 E453A4EC46588F7DFE911B18ADBE89445BD75A2DA2E97926E96CD54F51614CCB943D7 1AEAE |
| 527 | 8893D7003607A8C0466EE6490209A8E7A5D9EB52A0AD383AED6866332C5C7A4FAA34B 98CAB1E34174D57771FD011E8009C2232BA76A76DDAA3FD57A3D889CF078C88FFF3F0 6C928A539EACDD41A6FDED5AC8DAC6A34E1985103E0325B87571B0253C2949A1E863 81749C31A3 |
| 528 | 0754263FA8163F90FC08EA227E72C2858D9F2054D5420639A843E0FBEBD32DC0056526E 065E08AAC5249F8190CC57CBC4651C736118CDA7BDA59715BD9D5661FCA4885675CD0 B8ECA4AD4693421A1AC7A368B0D522CE370B032E8A0EEE250A3C4BD66DED6F12013 DD1026617 |
| 529 | F59140001B196491E5A3ECFC06774E438948F14AC5B02C11C85AD864D33EE144891419F 1AE393BDCA6CF5ACA3BC27FE266C0FD72D8289EE4CC201478221C18E9CD526255E01 7F5A50C551E77EEEFBFE894C38EEA702D3944AFF9498E6AC54791FF0EE7C88CADA588 CD70798F |
| 530 | BBDA305E3C69033A4A433EC7FE039410EBE5096B7BC7EE5BF65B5274E12C04736E9AC 214510A453B40AB444AD1C1653E2D0C1147699EB74BE0390F9FAE37395EFAA9901ED5C EE5118D4C1E8036A9B681C265BCC3267AE2278F8CBB54307ECD486082FCFBEAE632AE 7D19B30E |
| 531 | C628F42AE6A75B22AE70B0F14E66FF71415A0E3619171E20F13FA5B7571C6252434B1A9 A3FD197E055143112C91C7960ABBC12A79D24884D580C318014384812DDCF31C7565B8 0F82F4B5E0781A9D378CCA64E4F59DF6FE3B279ABCDCC0FB7422A4D07BF25481DF8F 0E87E3B |
| 532 | 45CFE04DC449811292D09E0293B719B747511C1F77004660E0D37C284E472338A291DB05 EC07C75FB263A8D8977282F13E866AA7EC28B59D2DF7F130C3BCDD25ABACAC0C1D4 A2B2C8EBE5FA0E74152930763CED65DEFB1641D987FF1C208297E7016F642CB85B8711 BE922A0 |

EP 2 453 623 A1

| Index | Midamble Sequence |
|---|---|
| 533 | 8C97CBA32F98810A0B5EAA3DAC7695F759102306610FF710DC8109904C74A3A86B5C50 3452751959B83D3F2864EA17B85509D0C5CE3BB19486F4AC1926FF9592B6D057C99586D B5A597EA798A207757ED0F15522421C347A409D019F81F406BF136492EFD46E197178CA BF33 |
| 534 | 0326C8C12D550F85952CEC3C50733F3CECBA1AEF8A46F6082D20DEC3FAEBDDEF8B3 D136896EA04BF002A8C7892E2C648D2071C58DA5C150DF9278F7FFB2707CA0E6795E53 EC3B43A98AC76292E5D032BF705B5ED15226166550F698F916B71332E5568FEC11414118 24EA3F8 |
| 535 | 9C8A1CA68D1949F075FCFDB7EB9446212A47D8F004C67F80389569AE0C3EA991B080B DAF5B6626A3DC9931231056692A0C6AEABC0E9E6144741EF21738C922FA56253CE9682 18EBF74F149B43B0337FDE5CBD8A72A947A650A24C7C3F57690A7337BC65A05E8D836 7793448F |
| 536 | 39369C980AE99D1A15B27085C424E19894FCEEF80553692A8D5AB21D867598CF4BE101 DADCC897A1A490AB339A07F5F22D7823055BFA2CC180DA818F34B41FAAB5E2412837 9C38A75646CEF09FA293135374BFFE379FFD8A8C63330823015A4DA470F6D037BDCEC9 B7DD034C |
| 537 | 67737558E0AB21468CCAF18373092D05384076B200880AE565A1337E7C3D8D8A28BDCE 65B0BD17CDFF1AB94CD2923075E39A2743166E340750ED1EEDAF116A8AF403DC6613A C95D7C5991EC9913D5FC81D4D6BEF6697AE699E792523E2700A13C7975A556ED932B3B E17A096 |
| 538 | 8A9E3ABAB127076589E06511CB40650E53505512F47BFCA29517F6742B2C682E34537BA DE16706CF7A1E225607ED000152318B3E5426D0A3B43D8E4D614BDA97EF0FFE2704AD A28261B90A4AF0609C12DC4B5343380B7DAD0AFC203027FBBC228735EDEA00CAB46D FF79B1E5 |
| 539 | 1663E6C5B1E145535AD0F89217F31A13F1A0D3A6B4DC455C71030C22CEBD0CCA4E058 552EF814C727D27A94ADCD972881CF97740626F2B3A04776007341F50A77BC4A0C74C2 FFC67475A099965E52FF26E7B7968EDB56FCC6123811A8FB7F68B285D187044523CF8A3 7C83D8 |
| 540 | 1AD8D030AC21941F201AF4E2068FD5089F84A1FB8F56816C624B48819FA84D8DCAC563 9D7A11564DE82CAFBFE4B8AB1A53733B3C0248368F6D21398B670343B1D3E4A248FB5 5DF66672603044F1995CE9E889CE2185EE50C9733095C4A6ADF797B812DCFA805185FCF 19F382 |

| Index | Midamble Sequence |
|---|---|
| 541 | C9FDECA2AB214080A44C94D8531834528457F90F65052E85F109135833EB1911E6F551E AAAAF4A66810ECE2E2E775385DB705ECC82AA212687FAC77DAF49298C7A4B148530E 83E9F6162C1AD3FB0430BED72CBD6F9B76FBEDE0D2FD3205A98C03EA6592C1B60D42 E0E566AC8 |
| 542 | 2821DDFBCD6679224C0D20A9E3A089666CE1DFB71A2724A309B017E4E8402F6F4AC62 CB38307F250428488107A692CD975B1D9EBF069F34013DA977FC625B3ABB94F4419C9F 3BA9C5830DF9DA2AA8371ED84219C56FAE2741A862BF0381C370F172E7AE208C6F8130 B237312 |
| 543 | 4BA4E463C11A676309E9F5DF4C432664A0C14ABEE81D85BE79ABA5037CC631F050F37 C89D08A61D2A5594103ED820ECD82E53E4FE8D5E25F1C9062BEAF8C483D3BD349F132 8F3B16E2EDC9648063F1ABC84F2009D8C020BD792ADD78C109D2CCDB84E71CF610F6 B8E3E37A95 |
| 544 | 2E83E7EEDC94436AC4061756E906B71496B3A89D0E281C1C665A646E9C8598029E568C9 5288941752050934E6C261E339F5DD0837D92E6C30934709D753AD7A98A3A684689564E E2ED69F9555F690EA459218779F046398C4204E5AFCF2B30CFCE027CEA5E628691570D DBDD |
| 545 | 732109A2AA322431A9E642A8C5B3C32058FCEA02116450B36B603619A31F37FB1FD71C 5A108079B70DE1B7F14CD3918676599354229A929523BF8AA3F454C5C346B93CE24E439 4AA07C3DD799DA52F16C84DE5E063B6A9ED716E42B37167905A790AC268CD1AE93E2


E3B791A |
| 546 | 4496BE3197B2D69C58A80A129AF3F9846604357ED5CAE7180E1E511966040A17B759892 A1160527516A5E9DB9E8F04BE8C2E974772ECE86213D087DE0C7C0C54286128BE6F0949 73E6D52BE7C0BE6A6D5E9CE6FA1EC2F1CD18FD613102A57A7C3A19EB0D6AAACAD4 F752B14C |
| 547 | D51F8AF120AC85CAF20E2195A9DE4C4EF4D2DF9714944C70681FE15148037F7D5E0488 A68A90F83A88175F81B08815472897A60261AAD7F1510A2E4B6788EBD990BB227E17EF 8C6E0E6F3B5D82D4031987DAF104CB749C3EF7DE34F40450DB087A51F985C3618D450B 8355BE |
| 548 | AA1986E5708EC111334A88A6813D3AACD1BDD9889BB31E43A5F16E50B22661B97A151 BFD12DB878A2079508692DD2C1DA959B9559190109E6F527DAD735810582F45EF9E9E1 28523B61EAC4F8E239B4CCA9A08A27EBF3961E09FB6C95DCB730B261DDCF69083E4C 6B998048A |

EP 2 453 623 A1

| Index | Midamble Sequence |
|---|---|
| 549 | E96CA0C1E07B6226708FC5F1DD9AC6A41803CCF3A03945C2A6B9F5953D2113A04D917 44B9F0DAB8E5AADF3C226F277E8F92D2022E660DD4B4536A42AD81FB6D704CCFB8E D03E0BA930DF50A476A89DDF226540AB35787E86A650311FE2D094FC661EF1F5548D45 41D93FB988 |
| 550 | 0ED9DEE28BC79B5E5EEF08789199400DB3048F765D538E0C2FCD0EDFE39117D51BC34 6E88F228204D942CA05567AE091486E3482D12A29D2D9D00507C7B7789477021B27B4CF 5AE54FE49CC17B54A03979A791F583A6DB4E3BCC782F8F21B8FFC41103DEAE34B9C5C 1C8A1EE |
| 551 | FE83CCC5C69A80BE3AE4A3D360D171A2CC57E0BB306FDB14F4805AE42851B85D0E19 129CF6C089CEE32BA186BE95CC96E91CC18D2A0C520E555D436B4609F67AEE671A001 E0BA659F551C37A60686790D4F53F4B3B6C11B3F13E11974E58F0F6E0B6CED509E28298 ACBF8124 |
| 552 | 7A7C621BC432C4EE3C00FFEF54EFEAD8D9DA00693312360F149290881DB12421CABB6 2AC8F965BB8784D718C07682B4F80F9744451149CBF1A3DC012FD5AD91A6133B28561A 1350D808D9B608C8DA58B6567B09B271A173A3F19AF28DA02D2D798454221C3FC35DB FBECEBF0 |
| 553 | 45D1395769E326B3846509BC1E0E524C8423EE2A01B928B4F8104ADA4F4D78AD66DB66 3FC8BB8F25208860B95A01E338D2CCA5EEB8CF6449EEFCE186C5589329316897F0338B AAC8D56F7FBE524DAD5684B82C74105E621B8AFA75BA0254A03FC512791B36694B924 3B8A150 |
| 554 | B52822E415A8ED02A578E9D6236779F90D462BFD3C9336DDCE6AA3314C83EBBDD1EB 438412039044314923A233E432F58DB8201B4FB0B0348496E4353AC03E28B6CE506BB85F 81E53886E8F3E0C4F8E86E82699CB6B4F5234EFB7B60E3B25F60CB1AB3A2AA946ADF3 D22D128 |
| 555 | 91F18530F020C229E6B40231A5B84BB10D8CCBE0A8D5A0A9B222698A887DE19687F5B 2470E30191F7F27FFE39BB756B84098990FABB3395257E59CF47DAE92F055B623F0088F9 115C9AC8519510F71120A36FA1AD47BC41FDE4789DADFADEDD5FECE6855E9FDCC02 4C795138 |
| 556 | CA65272E01264FCF8202FD041A10C8A053F0D70D778FD3DF39572CBD1ED1118D705701 E6954F4AB2D5647458828333883972948BB8DC1DF131F187646E6E56DA5E71A3983FF610 99BEDD54C1601337AFF2371974CC2C2E247F99A1A4BE16F73473123C8169DBCC1BD43 DF4804 |

| Index | Midamble Sequence |
|-------|-------------------|
| 557 | C12606330E4A92D260CD3112E01ABAECE0D8A95C1C3A862329D6D1B56FC0971F535E4 B9E580DB1E18831D8A531D25532492F360008671B6D451B78102A505FC3F90F58179EA1 037418223AF52CC8DEA6B8EF67A6D145BC3AC0CC81991E66335ED7C059A99B9E0A3D 9FEEB3FF |
| 558 | 03C155194E6138B390427F9B767FE11CC798B20295E9E755246B7DEDD0A9A9924071B95 B61A40AEFF4456A1614011FD12999D5F40DC6F9D44B1129D60E2EAD73010D9621B0261 5B72A315D45DE3D27679A244E13BBD3DE34D0E7CCE35CBBEB4EE21924B2EB7DD5A3 132A1A5A |
| 559 | CBAF61FD062218FEB0E258B04A2716A53CDE7277284F241861A3005DBE08BD4379A280 1261090111563E8D7E51EC291A0DC9C268DFC0AE35C5BB5F5C7C8FE0DAD45187B4BA D51409673A895CE1345C7AF03920DDE957DC35FF81CCDC9323E483E810AC7E4B945046 4AE6262B |
| 560 | 12A0B2C12388F06E383A689AE1A6DA73D83D74016B2C98A38175A9ADC0A3BF36B6EA 6160A951B7784459084D48AD64E03522946D8E7562AC8E67721C9359B6A7C6222EB4E47 0D424BD4887F35D495D12357948DB18067187FD1851EFD2930E2E2009FE7DAA27761BD 60E22BD |
| 561 | 5DBA57642907ACB1DC868D453793ADD988485341C59128CAD44A89B50B3C165AA4E7 6615F97FCAC40B8CC65082EE6B8C22CC6D05740704A0C1714E5CC652D3EFFD8FF6C0E 4EC3309B66ABE4AF92056F8BF03FD9BBDCA56791007F57C0581E684ECA51FB4B65B62  8C49B10366 |
| 562 | 831234860C8938EA26C7090F98077D50C86A74730440AF28C9D33923129214EA9A6FBCA9 34B88A5B71C873FBD0F97C5442960B7AB67966C2892BFECF3891D031A7C7128FDB82E AAAF2A5DF75C986B61C99DCCF68C95C9B388E5687DCF29FE949AA0ED061A0CF60630 AF8E5F0A |
| 563 | 5DE0846FE1F424C09D8D2156D72E02911322B2583944420B32A5C2F6CF3A794FCE908C3 99EC63E16B084E553081EB179E15C547C805C81669EBBCADC7C0BEDA9DE0D99E6CC9 B53B755B517686C8F017A6259B9A4010D0DF7541E67BC67606C5115BA436BB0C4C60DE 4B0A7DB |
| 564 | 33F6B0AFD003F5789C1D539C00FBC9335C1DDBD17F044B4781C5422631510A338769806 A23C3E078000A53DEB844864C33A0B8D4DE8C31611647F7A96019CB437CEBEB7646688 AC5C33BB6E5957A4DE1D3049183198333D6CCB4E6FF0A3C7CD2CD26DB5E52471012C 3759EB8 |

EP 2 453 623 A1

| Index | Midamble Sequence |
|---|---|
| 565 | FC674896AB94A20CBFCA61E0103CF317B040E8988C84CA01470C43F5226FE3ED7B5888 2A2C87C31AE92470549CA07187B033F9477FA6FD9767CC4F3CC471FD7520E26A8F64E5 48CA4661B78ACA002E082F999C3EC05348A86578A910189FA3EF156E75FB32B5B296667 7A075 |
| 566 | 1CD614636321B74BB263667D70A2E2D844888C3BA869801BF8102C3467EFE85F3DF1FE CA55EEC8CF20B5426DA1AD2888B2261C621134632835D9145D5F303BF836030A99AF6A 6FB4677C52C9217431490345ECCEDA3F1241DAF17E75DBEA751D1C5A7189E62F923260 F106F5 |
| 567 | 522EC5B58401C91BE8BB47B907D1335EDC2C4062AF26099F9DE53021404F055F885938D 9A1F778CBFC534883C3C6224A71BCD151D53CDDF371694696DFD361838EAA7F4E4D2 B542B6F2F887136350DB765129C47D15DAAD4CC50F7E5251C3288E459CF0B95A318A1C BC021ED |
| 568 | 5832D5589A840B1C6600D93FF8FF009236944FC3331E7A1B32EB44C00D171C93A79742B 015D5472DA47E922404C7ADDA48DE4B57F7C574229E3509AC7914E0D8FA06298C1E40 A11451DCA24C76FB9E68B217FF51E42BD3A0B879B3BDE0DAED44FE29EEA1162BDEB 1BB262B19 |
| 569 | 2DAA253AC854AB5AFF0F96C190B1CDB91F30C08DEA3E5E62A62F64867A037E0D63F1 2E01AAFE747386900CF1341A828A209432EEA48E526A50E01194E7F244C7ED4D53B36F D06E4594DFB9AD8A10765129E60E5D742D9B2A2EF80A89462539BD4034CDD06624F92 ED327FD3B |
| 570 | 1D03114026D615A55DBF082E9C0DCD80425A8F03F66E42957095483823B2EFC23D0E821 1BBC574DE884BC099F45CE8321207669F5DA50E1D0354C4C358656E3A18F3536769504E 9E65CA4741E32EBB79B215AAA35A5DD302E365378A3FCA2D90577ADEC77125AB2789 E026A3 |
| 571 | 8C5CBC0B6124DE2B886B4421C7FB30399484B3CBA3A503FA07193E25BDE615489642A F8FCBDEFB40ECF8E946EF6E10A64718367A98CC6FDCCBD2FFC6448A6BA450D059641 EE5F4482A9A437F53156044D9911E20FB5B384C9F2F79B59E57C61A2A4DAACFF6B35D 39E44B0682 |
| 572 | A0C2BA7B051D19AC8F51DC721A11C0C077DFA597B8E7CDE5A6FDECB2C22A4D37462 F02024E8C1030883E41DCB017E0A074F2F8722C82ECBB52CB0711F82CA42DB95877361 B0DD04C07BD5B3362F23207E54D74D13E7C76836D5158E5D0AD44AD203D2955352FB6 6E416C56A5 |

(continued)

(continued)

| Index | Midamble Sequence |
|---|---|
| 573 | AC12E6A560B6705A8D1011D4BA67CB00D099647D6353BE3041981CF871AD15B43A0BE2C5DFD1E60C584288E50BA0336A0B1351FE68C45994D5ED21119ACB7728C61A5611461B628225DE5708E06FBFF39D7C71B0CB8C6B615EED9FC8BDC26BA717C278CC76398C801C8F2B45 |
| 574 | B10994C3A6A897522B67D208F519642208E24AB3A886D0E59E72FED389D3427883894B0EC9A39A250AAB4C0EFC2C915DE95297E330E0FE1E19B5C5ECBBE2C989AA040CD4CD8EAEB00AE29C211C932CBB1CEA289231A35592BDC35B64A87C7725C2FB09C839F92FA3C33FF6CC |
| 575 | 3A74D0D584B4C0747BD6CF6E06E0C1D5743586C33F2AE5E495919B722E18301C975145284F31BC7972ECE61B890437B468D7061FAD1CD886A71BC7B07A29F9AD143EEBA5F90FCE25CF224C0D3BD2D4134CD20F42470ED439CDD235D2328ABA3173688C903FD2AD8A19C394E3 |
| 576 | 9A0F3E4F0A5155D33E7EA0434A42B721925E1AD12ADDC57239634080B1E964309216504F7457DCB852A77C2511893130E3A9471F8AB2DA625EBDE562EC81EFBD430643A0860F94FC39E967A6865IFF06632305FB217726681C780DC443F7C226B50BEC93A73261A9ADDC2E2 |
| 577 | 9D784C7DBB6EAC379D44CA30350F0EEDB9D700D1AA5382B6CE21FD3116E56740E6C8840328857064436E907FD86069F304D0E40384574F70033E7DF3EC914574DAEEE9CE178935F3DE38B7F0F99452E189A88AD3794FCA4EA58772DF648A1C214E49844C053B44FFC |
| 578 | 199B2D<br>0A8744348E4FC0C8D6F518FCFAFEFF2B88B76346180E85E0E9706204207185D10E9851F1210E2D6BA709BA1198339949713569D50BB289E5ABA2624D52DF0695BACAF8144BF1D00B0EF0379DC668A3025757E4FC154B436D04B5B3C2C0CE098A1DE2431AFE2BAA537A3C45FB8 |
| 579 | FC0EC51FB10FF2CE13BAF4312C1CEB77E1D340A2D71245A09208AFEC1B6CA639226AEF05D1B90311310E431AD7A79287EB800483A93802DD9B7C3BB7C1988BADE7B188CCC807683B91F5ADAE7F186EF8355519A76297D6DCDCD14A6E4CE41ABAE603AA55C1839E791DA2BB04 |
| 580 | 16EA3FA58F7C6C51FF5A2F5A0289C92C136E14D6D54BA8192C822C65280DAE9303DA9CD28CE0CF71E204AC7C23284166C6B1E856BD77FF9D3BF088198315866A543D2CC14288D36FBADBE99EFE7DE0461CFC65378A75273B42AC067C3DD0F5218DBF9B12D42AC00A27E98079 |

| Index | Midamble Sequence |
|---|---|
| 581 | 2F491AFEC2208146BA5FABB4817436D1E54273918690B6440D68C7998C4603156DF09D0 F0FDB6191902DCCF0C6343292142E6245D147EB566DF8B89F01E5BCB00E98738671776B 777614EFB11F28069B57B03D39E274430326E657D66768586AB9CB289F03B4F74AB8D8B 18A |
| 582 | 77ABC23490F554460781FA5D7282DE04D165B035CC4A30BA192F64B22B45A712A22115 99B0B17E297BA4EA15FBC3D6835003A06B5CA83CA6FAB6A9F9F19B444E8818F3BC788 3FB83D46E6FA67484E11C34D6D6392218B3BA8EA5AE9C4EB9E22C256591CE68F8426A 3A83C16C |
| 583 | 04C29D29ECC9D5E990F9D2899899F791ACD50423FEA932DA0395636EE2FAA45A2B6CD 5813AF30B54526EF488202914855E7920291357191000D64367646BC26A7DB9093D3FE6E E04729B40A3E01353CC17E8788E3E8EEE26BB2136EC091E45B62A7398FC4447460FF41E 529B |
| 584 | 238958830A020E7ED3E2B4C1658C51C1C259AB650B67A914789CCD1FA68429DAAEB54 1BAC1C6BD8F1CCD8256D8526CC40DE0BCCCAAA9856D6799BEA04749BA569ABB711 21805FD9256F6DE37D62CD2A799BEF1A9E45400E45F3F4727F183C565D536A05846C076 92931B0ECC |
| 585 | 711BE1E0DCE4120075EA08290548991660A6C4AF03DBEFBA0C4015B1C4DB526FD9C2F AD8B72D780364359E50ED7E4F4380D8EB678A880D56EA527B66CDDD18B6BB0FDA0C A7B6EEDFCB94B840460E6045315C93FE754496EFC21EAC69EDA520E1108946E4CEAE0 F1C041383C6 |
| 586 | C0C265655AA3999088E1A053EC0D6B953C0BFAE88300003508D17509524E5F5FAC5DC1 9EB2440655D8C679BCA250CBA8848C355D9CFC7905F177AF8127647E2E15DAC8A0AB9 4F8921374573FA5AD357C83948F640B7E6FB1EFC1877A5FF6FEC7294127EC2333A33870 9CD01B |
| 587 | FCD48BCC274BB3F32EE534983D08D171A47C1B378204003B401EAA4B7C35B268E1A48 0B2C7F6DD4AE3622B6704652E7394CEE44B20CE8EACE7D2B5761155EF4992FC6997AA 95001445AD20245C9A928775BDBE37C01384888C4DF25D6639DA47D19CCEDC1B521CE AE7FF5258 |
| 588 | 2CBCE915C1A1E668DC17E252A9D56F240600CC8CD34517BD8DB126A373909C6678B50 3336C028359A82F7800975530CF69315EB851A4C30856DDE1E4E2A0B761ABF03B8B162F 32B2288CBF4EB664E6AE689D1DAF26E8B7C10FE83B19EC29DBB70D90160A3FB63AA4 9984C0C2 |

| Index | Midamble Sequence |
|---|---|
| 589 | 2D75FB64925B2BDA3CB47104907E434DEA5FC3BBD00D3DE14E6A02B78134BF89894B B6209A0405C76E54508A68BE6610B603A8BB43B1B5129621EF90F763BCF9B5FD1CCFC6 C04D70789AFDFA5417E8E6985737D42310502B318725F3ABC684720423505BD7A8D60B BC3D7886 |
| 590 | 54B35F362011461D0D139645BD01100D48198C627DE66F98A4A78C8854F4F0D09274810F CE89DA5B9C85CB6902B64791F230CF486E3651A3B914064B92883BE0D8B4AB542E5235 9890819F64BB0CD85E44D77E2AF51FE0FAA99237D3116F652C456D9553FA0F990EEFD8 0B2F |
| 591 | 5A436A6048B2B53F3DC6655BAB140C7924B823CF234A62BA15C563A16E32040C4CE497 86526833AB1736CD1DE65161F21C55E701A97E4CA0DBB86969A1C536A3A97E661E33A 94B3EF07A4F1110C91D98E31F09B3E8992F0B805224A580E38577ACA3ABE4ABA38DDB 67B27658 |
| 592 | CF7C634D4850B5BA96E2032D9800CB9B365937EF2561381ADAC6DF24E598523914C953 94604243CDA04D55A150EC9C12F7A826B0B95151DD856F945A96D8460E4FE3999D7DE E27BEC42C84923F88B7222539B071DC80083803C64D9967E329A35FA54CE23BA461D657 255166 |
| 593 | 749D810C154081D69C8A5CEA430FCEBD50BD714D83B5E8A806310D6489AE5218B8139 2912E21A57D7140304A705DD21F5A8FA001FC884D89DDB7D36E8119E2E4AF60E309557 9A20FB33C30C4F066C602F22879986335BAB1C33071B906536AEBA22655E14A352FFBC<br><br>EFBCDB7 |
| 594 | 32074551ACFF152B59C339D0825B3F3DDC42F40902435147606534C04AF5AA3961E4156 EB4613B77B33FF4F4CF685543161F8710E3C18ECD3E9007DD4947C6A60D80C32A322562 4C180CD9847F3C56C0ABB2FF04D108DFD8341E6DF7376CB8A137757F55EB7FE72E23E 204EA |
| 595 | 05D3055B3C4A8136CCA02B8CCE0B442D121455AF7B299D8E908A5AA6F068CFAE6CAE 8AE1603CD7D5CA35328E9D03772752733333C971F90FE2725C71EC39A86704157ECEFB1 0C31C16679D946B36D18CDA98D3E079D0EF915925A0F2526240FA5AFDA4D289C5C350 77ADDFDA |
| 596 | AABBA1FA70C808524CE4080C56CAFC32D6A2E44832C0CF24A27663966B4279E976B8C 42C6F65575C61A769B8C48D11465FBA2729C0219E4DD82EA39D3900CAFC16A5DAA68 D6175180A634FB117348004F110F3ECCF94B7D1CA094E1FFC43F88ADA704DFA5C33B8 AC89B53A7E |

| Index | Midamble Sequence |
|---|---|
| 597 | 372D0B8730A7F50E09DF7FC0024954601162CB22D8E28B24B058540D85E3408B6D2C181 E577C9FCD5FDEB9603713A7D12F7381043EE7152273D61605C6F5B39CE6DEF00C8A212 0DBE4EC2EA112EC4FCD99A684CA1235745A532AB60949EBAFDA7A9A2B6EFC6FA4A FC35BAF61 |
| 598 | 57FFA8E354838948D1E87D457D3CEEF4A724B25A5B406A4B91A876C2B320A650AC105 90FC2A8B87E2645E7A44B099E6F6E97CD569A0335AA1F8811976CDDECDA9CB33C9366 7C7630CFD72F6986A795E0336B05CEA14C1B66223FA876B0CCC6A60C136AC49FA2B92 898129EAA |
| 599 | E63E0E5C74D7D852E42C441F1A3A4BCEB12D7D60C4D233C997D4682061C8FA32CD1F1 981D896702AB21F46C14A54E61F6B70D73EF515A89E0C6084AF4F92165D76E10DF91088 2A0366CDE234E2C74DDA33302EEC82DA52422170C797BF739C5B2FBC28FB398FEA3FF 500EE84 |
| 600 | EC8CB84C7FC4BA40A7E10582E4AB6C1626DB56AC04E1620159AB51E0C4C46C61C97C A3B154ACF2FBE6980820D080D0B02BA7CEC8864A1FE7F301E41B9EB2E09405042A6CC 996AE80C064CE6628C1C9249BD0E7CD182A5016DF0B6F989BE2F4EFBA811F4FB176B2 703EF3178F |
| 601 | D2F01D03A62E6220C1562E81882F0A6B43D5C3A3AAC0DAA9B6636579B0ED34843E905 C2D64D97D778FF787732AA8CDD7FA84001A3283546DA2246B00454611F7FB0D7DA841 BA5D3DF340F9A3D81D6FF98A6D2518BD2E8449C84DBCB1C111539C4D3B62BD55A6F4 CF5D9D71FC |
| 602 | 8377978A3AB8CE20EDB18B1A6FD51418161A14809DA33176FAD376BF63AAF5F0A44B5 26A9ADAC0CF2DE5360EDE1A7BD839497A75202033844408DBCC457C582742DF976735 F47FA078A66995B1DB4CDB6A51625EB33869DD3775B284697AB2FE7A925808DBD5559 72E884DAE |
| 603 | D6235ECD0DE29BA8D229A0976EF6A48262B15F497848C9350518D4C4201343CA16FB36 53ED4678D281402D0970F1B0E5B01950BECBA5C080BEF82CDEC57B8717B2EEC18F4A4 03764485AD97B691468198C3ADB2FC0EAF5E49110A8ADDB22D5BE0694A5B4AFEA6D6 2C8F77D6B |
| 604 | C2A14A127BC32394ACBFB83660E149305F8E2874D04B1CFB036ACAC92AD4D1DC0843 E8D08675694AD1A66282E5B29988F67575E64F285509B691E0FDF948D47A80AF8FCF44B 937CED3275C7C2A78BDFA9DA0486AD067A379AD8E969B845AC3A8A46A4E4D94E30F A43CF02A3F |

EP 2 453 623 A1

196

| Index | Midamble Sequence |
|---|---|
| 605 | FD696932CC42175C850175E5083DD1A07626461C10F5242ED9C742AEA799D291041D287 D03C9C577C8E72C13E312C6B854ACF9BC9468242335F06FDD964EEEA6233369B1BA110 BE60160F8401BC829F41F8B50A0A4B3BDF3507503D482FFAF0A3ABEF4C015A8DE10D4 C5B8CD |
| 606 | CAD14FD18EC126F8E428BCB011F2795D6B690827054C23C28529A09B1FD9D78D06F750 FCBB76047DFA2D49072AC2D5062BC0103A379D988C6E7020C8EFD74711010DA6FB494 1E5CD45756624C723537D066D4ED56F3ADD80B87DDA90CF562C253B52D8BD05A16E0 EC21EB7D6 |
| 607 | 3A94F70E00288F07014C69DB09843B42E3D9AE20A4F8242404CA68EE1ED6E2F0609706C 881C3A6A785F2A2E58B1F3F889CB155836FA1EDA37D32BA6912D48CE38E65D22063507 AC581FD7DF2902F2E2275993AE18436F37D67C92C0EC892FC74248C0952E665BA68B56 E37DE |
| 608 | 9C26B97F67091A88762788A934660CB76DE3DAA65329602308B5D84A42709150B4FA7C4 85B283B54F8B227F4AB3902A129F5805D3E20C1AFAACAB883041DBE8A77A1E177A1A 16E7A6920D5FFF6A5111B369779A4A49990906C4B8C98266576AEBDEC3EB6D05750B04 F2F50D8 |
| 609 | 3AD10424EB1524FAED7872BCC4462021B8B0287B5ABCCC24BB586892A0D921420AAF 1B912144632EAAABA75C86A011B02FF5A3657482870CD4032C7B62A7AD105790313E0A 52D8EFAECB51377EF213180A13E122320379E10DABA69618B982B7B2D72F7D98555DD<br><br>C751BA27D |
| 610 | 070E08672F42A81B7EB109DE33CDF843719B9A25D2967083CDFF22B427D25CD26013C5 6BABE9DED05C6228A4C097ADD8C405158112E6478A7A307F8B9FBE76A843046096A60 92BFDC2834C5E1668241046DDC62571AC6ACF629BC2F5F07F797BFE7C19232F4D86D5 CC2A7145 |
| 611 | 37404C4CCD159E2384CC06E3AB5AC3B5444F26E0BE3173E0A49DA104B8C7160C40F06 804A902DFD0CF61E99F01FF8DA3409BAB0724ACCB5FFE45DCCA99CBE358B566A2330 F502818CE6EF7E9162AEA12890EF6D68339A8BBA4961265FC78B118822EA79140107CA4 39C5D96A |
| 612 | 6C113433F4D1A0E7A3B2DD52F6DF0A670847A7585A842C50A54E44011F419C9EB58224 50C0E15E96DA0E8886278231FFBA810DFA7638D2166A910AB1E1F00D2E4D5842B7E844 E288EB1BA087EB7BB12BEDADCA0995D81BB981EC80D85FA4B7E3234A8E6F99F45B75 26BD33D4 |

EP 2 453 623 A1

197

| Index | Midamble Sequence |
|---|---|
| 613 | E9A9C4AF801BCB889EC344419F8017821FFC471C9ACB2ECFF00A074C56D7715010B507 C6691ADBC5DB501CCA2146BAEA4B223562D760515C9895C48A59C76BA514559985C39 C1924536DB48E9E52DFA18FA171B1470B3F6B5F735ED268B12E7DCBECFA0CA1CE17B D364EC805 |
| 614 | 101A8633885A49AC37E3B256905C98746AD0EFC904053C647016C7B5C3B0F0A3F78AD7 28205AC7591BD9CEE2221074B3366345F2CD1DEB07BE75EB7ACEC58710F9A0393386B 27596C516F845503DD988FDD44CF8556DDA465FEBD69E0E558141196451C8ED9B33FEC 04D074B |
| 615 | 19B761B6AE1065A7B6B22CCA36159673B240E884C08BD18307402B90C5FFB331A05206 59646B5C32F39C0886BC036C1F9F8ACE05CD7EC70D05F0B3F89CE4CA0E9BCFBAD6B6 2DF37055065D56518082A5EC897D2417983A8CF893799213DE14681447A619BB9572EBD 0344561 |
| 616 | 334F515E7496CC86944B709C162AB400782ED09750496C20145B99025ABA4EE3035C0BD BE67D750C20F4DE20CAC2D19BC5F5AF51EA2A7AD60ECE5B1199B5ABA9A28DDBBF7 2D2B270152AE3C30F127BFCD9C0F85157A44413A34288A4557FC3304A6221E54045BE75 593CA73B |
| 617 | 0BE11E69DC8E6FB89196180C72C82620096C1C8FA78B37F4D3CC90520B60C1AA116A62 12D2DAE5A385139C7C36E17BB67FFE210EE921A3C8BDF5A06C39CAC91F0B11B9626C 88891FCA99AC1F1DC9358E1BA6265D5CB0EE9CD5375947D378917A327885D74DD48D5 FFD671CB0 |
| 618 | 21D22717455C0BCCDA04106B429117E172370BAEB1C792E9E931A31889DF919FA5EEA9 B54FB2D301DA484631D007C306BC5D68DC0A3D92DB6B8EB9885BD7F31FDD769CCC7 E8A40C0D1136995A7644888049661850DC6595F5FBD12B57106337D8132207D262AAF14 AEBE01DF |
| 619 | 6131990C9EA544AA3A5FEEBF9D9006F80CFF97B508B3867FA9E3950944E7711978A60E4 98B78D43DFCF45C034B7420466719C4F7A810C0372C7DA86457E1478F0CD2D1E9114B0 1F027555F3DBBF497FFEA43B7D786508F95127F4AEA88A682549955871CD121B76CD619 DDAD |
| 620 | EA72310C3A94F0CA7808E5951622048F901CB0AB6DAC16A0B9E6EE143CA57859F622B 73DA18B21E18FA962C519BBB6AB085F003A099127D21456879EDB1F38504762A23BB7E F2B8D795804433941273E659C57FC0D450BBBEA5B0836D56625EEB2F628EAF3B2AC962 AD19179 |

| Index | Midamble Sequence |
|---|---|
| 621 | 022A2305FC84A0B7A6B3C34D4B5943DA0AA0508E548584305A165AFD3314D66DBFF05 8062D8FEFF268AA75201D1D0C95D52DFA29E1A4C0E9ED70B8525F5ED73236B929374B D01375A7032D9A7CF3EA32222C9CCB8EF5C81F8C655E90BFF93F2472088A5315AD90B 091A3AC06 |
| 622 | C6AEE6400E3C62ABF49521FB4EEBE03355C3586F1A4189D7D11CE04C6FD2941E7C078 BA7261B01FCCADC087C04A402970F778F06A331D7F12ECB923C6BEDF98DD40FAB3C1 90D8905029E1795ED1B601D696A39A2A53A8CB706B63AE468854B0199D2EFB84D37308 26CBC7AA4 |
| 623 | 1A8AB0C28819F7311B7637D75E9F42F1E5614C8B85C01F9692C1C7B460C9E7C2330ECD 03447BB8DA8551D0214BB0AA824C8BBC4FBB40AB0DB16C56DE66ACF2E3C08B49C75 FE292C9E5DD399B4E8C1B57505E885BD84E0246337129FF27D243A324D8EA38BE935AB A4A658D78 |
| 624 | 0D466E74651AFB53D1410DB1DAB6D03ED7A402189179226F4D97A22F401B8AC50A432 E3093194015C5508B065DB39FCDB39E01F6C0DF25F12DEC16CE7614F06D17ED76C86E3 8DCEDEF1B78F2F47E8B7499330DB26E019DA1A338DCC2C91A41A643D85997AAD0E1 AF3CA36314 |
| 625 | 071C1822819DEF3ADE05701277614D69AADD3B873F88D0F927805B4AC456A2D2A1187 E85996E9EC786205B31110CA1CD683D72BED9CA5E57B203F919627975D374E2CAB7A9 EC8E8744242BF634C76490AEA92FF55C1E8BAF0ED770383AFA369C0072C40B4C849277 <br><br> DA2D6F9B |
| 626 | D21859E76FFDCE26C6C30626CEB109C91E131C5841E11AE8CB4BDC534A44382732185F 8E030126FA8E54DEC0C1F164549FCFF9E80991073ED230E8B4F6901C71F5C58151E2ECF C7D16E5A922B9B0D9C51729FD58415A56A6D2CFF629B1FE4FE6D2B8EB07C34A95413 A81D2E9 |
| 627 | F5BDE511C3BBF65822504B3A211A90477B5704831B67604832DDD4AABADA828B2A659 88F2A5D049EC0C9F42670F40B724D27ECA97C882AF1CC820B22B047343431C43A2790F 16CFF17E165301275B113C568D71BBADEB866A1D77C0CD53EDC3B3F7BB8CFD09F886 0287A10D3 |
| 628 | F1A88F2D1171E53F0BF5E4BD922885E06244098D325B5455660A95463B96C98C7B852D7 C33A363E96A18467B11F0A3A2900603EE7500C29B672636F56A5ECB1E3A888C854E4641 FE9729B4D6C9BB7098F63C05B854A906F32EAF12C02EB6B0A78A69F9D1F06055486BE6 BF00 |

EP 2 453 623 A1

| Index | Midamble Sequence |
|---|---|
| 629 | 412D7B24B88CE052AC3858E48684AF4E3CC9E2AA132084765B5C349ACC552B83D83B1 3431EFE9F834EBBF097EA02E1B18C14952E8E8DEED9B89149I7927CBEF40993B81D7E8 FB21658237983800C604E55086DAD1F366219F6EA63658C9B2B4CB7C3F6187D9C949CA 346D282 |
| 630 | 1E2C25A84B8E01C9D7B7BE3022B4DB067E8E338987E5D2EA18068AB2CC184D329BEB 544D4824C23A25BA1C270BA570BECC9FC8C981D7A6EB5AB1C86ECD04C3DA4A74598 43D98BFAD5EC9F016251C39B60BC493153ACC8D7B49C792AA23CF668DA8AF27E5116 ECA8BECE40028 |
| 631 | DF4C53A3DDA48BDF110AD604340A85C080642726B0B1C29DAE00836B93A4E51D43C5 A9E416C0AFF12DF448645328DB37FEAB5F0C00B50C9947B720900E9B81592A54C0DE54 F0C9ECBF88EF84830482FA1A9129A57B3CB0A88B277FC03BDEA44D8DAD42F670D2AF E4EDD1DF61 |
| 632 | 9FCF810A9DCA9EA03AEF81B9663921CCDE50096A430C5348EEAB4123D8ADE3A2BD6 579FB85C3A07BC580250FEA0C36D1B67B6151428FB8B876448807C87214C484CB5191A9 C13F8F3DAC55857CBD8C638A800BD79CEDEDE838B8CB72A72F0B32837AF56EDFCF3 792D4920C64 |
| 633 | 766D96DB9E1F53EE18034F09025E139B17E0224F687AB2061580F248C7AFDE9862181402 B110DDD11C9C73BEA14CA6F40511925D03A9288F6A74D329CC2E1BDAB7AA78E153D 0BF2E868414C35F30B1777664F37BCE2937DA5EE86B3E82A204124A985F6ACE46038E90 72C5AD |
| 634 | 253BD44C9DF767C649ED6EC5158359877248371994125215661767D2E5B100C68808D759 F001B6E0267D62BB4242DE9307622E231DC33C23F14D7549072682BE8D6ADFFB0F8764 142974CE336CD7D0BD3B796304308DBB475B1852C38D14FDF4ACE59508420F89C99185 87C2 |
| 635 | 86979B962B7C76B3C3815A502132A37B9C9E5403A829C43171F5A087F31160FF8778C851 CA4E982C20DA6CF900A2D9A2349A0B72E23A0359609661F3E4D1EA45F64C7F7731C1B 2860D27DEFE852BDFEF1C680B00722FD073944132186E9416827362342ED0D7C8BDB77 E9A4C |
| 636 | 720FE1DB0B8D0E08C02D1FE5C00BAFDAEC50CC093D6EDCACFE8A1CDE61131BE8B2 1C448B1406B66C5F408969804720EF7A56FDCA8FE3333947509I7433CF6E642D48AF32F A06AEF44CC80F90571FBB56504D578EDE46F48C2A93E62DE695ED80F3427FA6FCC7FB 950A8280B0 |

| Index | Midamble Sequence |
|---|---|
| 637 | 05C6063FC36D804BF68F2679C6AD27F6C4E686110481B4615C840561BA40B0D0B8BAC7 237AB50B517312C60BA0AAA87700E2BAB3C365A87CF7C9B2868ABBF394485CA173D0 3DFF72CE157B207601515DCDF7624262898C7949398790CCA94BCD75286CD179EB51CA FE538F85 |
| 638 | 9B9899A323C288A397866AACA80733A022A2B42C79D12D8B21F5C6718AAE583D8423D 815A8993D08EA9C6FC5332B231ECEECC77211B708081FED1DA99F284C4BEACC259A7 CB681C241B1CDFD5BF71676904063CEBDE58B6C6D933D5F18061275F5CE4706EDDEB EAAF57A8792 |
| 639 | 49F2050B495ACF0619C8CD6CE4610B9F05153042929A8F1A441D01C758A1C88249A0876 7871FDCC92A87B9586C7751CE7B24868ECD7FC43667FD0B7A20A2229970A0CA98CE9B 2EF3ABFFDA585F38D013FC0DA9B9F6AEEC2E01E9D1458F0B6D0EFD4015A88A5072BF 73783CD2 |
| 640 | 874ED9ABFD0AE7155F20AC5E8FDF854E923C4404DE8FDD4218C68901CD05A134A94F C4BC8925E44A924FD733386E9BD9D346180294F6B1AB2A532C485499C610D27EBE0141 87C15B02D4696EB884BC1CD15F5D1893E34177B13D8D6E88AA339A1C1C4D976B07CE B71F0DE598 |
| 641 | 0C35D10BA6E85C7A6E87AD1EA6DFC4C4D616842C3A84C1AF730923F176B72002BED0 094F59FE00AC01EE704A7501DAC53428E985C1141CB48B78CF0DAFE6DCDDDF812D15 35877E8B8FA79456D43910525CB034FD91E259BCC1BE379A6D924069FF18D0590548EA5 3202B2134 |
| 642 | D4A5D11637546542B397E64DC8BB0D511A923B7D4538BBA39A81C756AAEB00272CA0 1987BF2348367318B3E6906D23224A4018F96FBA7FCA8E085E346881E56F3CD9783DA9E 9718EEC26DB52009213BC6781118B1A5BC476996E6AB0E8F1463D8FEEC87C1DBB70FC 3A6C4B0F |
| 643 | 70ADE0C18AD17093157C20566DE3ACB4BD73574D257A74057AE24F7DB675207446D22 33D022A182733FA5A16CAC9C5D45A13700D57487CEA38DE2692910F52CE462C4FE5544 3361855D9F1DB704AC9A3FA6E4E07D4252B27F2511AACF6869D138ED4B6C0D288910D 05BF6CD0 |
| 644 | 9C89602A955ACB84EC7D5C597667562A035DEC00F0428C8CFAA499CBC92C63FF589B4 79F0A18C828131A8B6B9A517910F339F52141CD5B16194E9CB7AB7E4F61496E38FC3100 FEC9D83A072916639184BE8F9A8843B35D51FB95AE60F2F77EE4AB82B45928594D44F9 571B82 |

EP 2 453 623 A1

201

| Index | Midamble Sequence |
|---|---|
| 645 | 871C7E10523590FA0FA2C0433D431C871DA125A40DB63C49AA8A9534929A767BDFB2A F12A3ADDFC87486A04A3D509C649C52659C3E6F6D8841B433E3DD49AB3B04529B9619 3E6A9A3EA2559C8088689B856871C4506C6FFA42E99DF936FA99C713709CBA4ACCCDF FF4C987A5 |
| 646 | 872398CDF359DC4616A95538198911A254D19CEDBAFE58DB4783B0438B3A43C4D8DB DA8A1F82DACC19BBC0BA6A745D95044430D78B4E6D6BCEF71D0EC5D00FA7366BD5 A5B7C0AA96598240CD365F91C90BAB717EEEC318B1DF14D8497F99C0B8B28657273540 00253604BF47 |
| 647 | E182A08012C89C1305183F3163606342BD0357C26589538328DB9B3CB9E96C2B9C7731F2 17AD141093AB5B64350CA7B380EA7D344421F17F648043A7E9F92F7052D3E39DBB44C2 40DF40CB941DC0AB7DC686674A284E5179AE68F23BFE4976410546476928BDF9E56BAE 109B |
| 648 | 45523CC03F25F28B85C62D79004500FCCD013D59E6F34E469BADAF8379040502895B52A 0FF36A38AC193F4525D88386888D6E82B357614218E449D4BF9275ECDFE08D64C584B1E 6828CFAB64E4C2AE50B084D9F95E5D23346DF2761A51ECA4A3E0C1BD6271333C9F157 F3C66 |
| 649 | 7CB20FC64A703AB462A1990EFCC03D13E50BAC2BBF9A60CD45A74F1A7EF61D2B6DB 4064D4282C0A51D2CF208AF4194459CC14A6F2969AA7488CE230BF71C4D9165076BFBD 4710F9B0BD10398D5BD531375FCA04E242C3A5544F8B7222A9763B4458FDFBE4F07571 98949305B |
| 650 | 5ADF4ABDB8A1147C8A98CDF0301C08874C1D523DCDA5E148A6D33C85D834BA9AB62 263CBC9851A28443A6317DEA56D82F0010F2531F901E640A11161A3CFA527A3225D83E6 9CF1A5A656089CB06CF715E6D5F606BBBD4D508BBDB19439FF52A04FE7CA8DD2E615 70AC12EF1A |
| 651 | 87631E14E5E1E09B42E6189A44CA3971269B8550ABB2080755CDD3F4116542821C141430 259C86AEA1028FB5CCE0EE06DFCC7EB8E3023D9D9BCCDB3C3A0DCC9A46235C275C A9CE9ADD36D15699DB506D1028504611AD1AEEAEBCD96C441FA6F65B06BB82DCBE2 68F794BD3CC |
| 652 | 76AD57707DABA7586048E3742F0BFBD42A8E0782ADF3BCDD7842715A22D30D0200C5 F591A3660B8E030791A95C3012AD8EDC584511D8A3E44AEE08B69EE89E1951C03CD92 B8FA428DD992953D71F587879B96C2C2210389B39CFFD267A00FBCC4C5829D16BD14E 34A57D517C |

(continued)

| Index | Midamble Sequence |
|---|---|
| 653 | F5DC38FA17439937601DE819C5ED9C109D35468FA184CE53981AA9F505F504CCEBB27A 491228C31BB15020098DE563A32662F42C008B6C0AE27A673E6D9D8DA75CA080A2ADF AC95273C5234EB9F1095B0A9209726094C5EBC8FAD767F3A4FE8453AB7D7F2E9E498C6 B4F9305 |
| 654 | 1618074D819D5BE2E1308948699484D982D58345358B82BBE50929748CAE8DA0C960C6D 817575E1DF1FD3C5B3B84F01FD216D4880227E2C3B2C6AEE0E1044AEF25898A8780C87 EA513CA0EDC8339ED18A2DD5CD79CE11AC9A2EFDF32869E446502E1E85D1B46555C BBEB3137 |
| 655 | E36AE742CE6D5215146F10648AF82B65BB4AF6B503E3A18E6B13F51C1DB3C71E8483B7 5409260CA49CA0B49858DC4603D02F1C7ADD40F5F38FBF67C4053D28EB66C95B8BF58 EC520A30C194BA822DC85C59094D23FF51220B5D700EDC01EC9A1AB1A2EA4A108481 FB8CD9EAD |
| 656 | F488C2FBBCE4F84D64E69BF105BF64687397A3F5BD7C10AC5F1C58671140522C8B4EA6 D54598534C498CD95568107466C25A37C98045C9BA50E6B97912AD415DD5AD3A2F12C C9EFBC89DB7A1F77AB11BE9F4006BC352CA882C421D1BDF7701033AD70CCB1095928 F8B7D4F89 |
| 657 | 147C003292B1E44B497440571FCA15E0987DE73518ED421FE687607595BE0B9B6990C43 BC2E8F12D86D41B86DFE6D430AB8662E1D881FA246FB88D21BD7CCBBB8E9057DDB8 9D9902FF7AD9A60CFB28A9905711F85CC669E803E1F023D220CA4F0163272AC3D6AB79  56A025B2 |
| 658 | 60A28BA2A36C571C27B8096D3767854E1F1C010E0124C1A72D9C8E4EE08FF260DB3AA A9289D9C500A933ED1792FDBEE70C8A84087F72FBF6446A9E61A3BC83D66F001DFF53 D56A0E3311BEA96886E76BD895B876B34F44CC94D414DDDFCAF893E4D197FC8CD04E 6336A0A5CA |
| 659 | 242E25E877C1F83A82318A4D739D5C02F0E2320B1D94C1E9913FBB18FED110E6181BF42 F21554C49CC9A0AC052A4A1C2E3746784C61389F6D8B4FADF245B996534FCE2D5F39D B08AEE1FF6542199C670925B328780DCD2F49294A856EA58183346BCE9DE5C814B94B8 F58001 |
| 660 | 50587670B98F5587589EDD38E8E6062041437CF6B828258AA77B746B84ECA8DD7EA087 57165A0D35882D9437B03C249922624A86D01D158050C157CFA9B3F5A9E56C5C8F5C539 475C2168CFA3D44E53E09B6ED3E34BE431AFFE420D75DEE4CC6A5B391388026B9C097 060A8B |

| Index | Midamble Sequence |
|---|---|
| 661 | DAE2574521E8343C3B60E6A29AE65A1CC5A7279B00616789E5C36095074003FDBB9578 370C3AF292280393B6E53CCD4317D566F1A28505DC61E9B8A6D2D1B8E6E21783CD3091 F77F74E524F8958881FF297595DA0B71E860816D733929169A1C0BEAF40185867C3CD957 4667 |
| 662 | C4F81BA5EEAE4610006B2A5F32A23D9AD33B7C7E01A7CF9C013173F32E182D1660998 3E94212D010D1F4E84077CC031E626B3D2B59B12F44905EDAD705FC38926C8CF3CA9B7 34D363DA152B1C9045F20E29DFA1542CA863BA92B0247D8F7B3E320B01F2CC8368C4E FE3D9B4D |
| 663 | 4622B0BA4835ACA83CABD1F305A1934D206EBB99D08B00081C61DC31C98D5E12455E A8800F6455F17ECBC7AAF601F5BAD0B81EBFCEC7CB3F49E63DA69C5E98F4395B0416 64C141D1003C45D2664B7DBEC3D43268F660C647E13489572D1DBBBA2270367D3D4DD 45C284FF8B3 |
| 664 | 791E9D81BE06190D7FDA6B01EAA8463942A79E8471902E75DBD784C46EAB63054A542 568F81FB201A60F11816037442C9BC0CB3E51DCB8B65A4A3D7CB7F9B38A97BD1AEFE E42D0F9912D4999369734DFDEB894515D13E3861D1B43D4820C86B44138D5712A501276 16D792DC |
| 665 | 6AE3F12FC8A462A114181D96CAE468DDDEF2C96FB076AD5B180A4101C9AB1A0332A2 AB28A43B80B26F11E92F08EE91356081D6E3DE05A4DD3FE3A1BE60E84C0E2DD01C195 7CD59E69A2B640A5EB111435F9A0F9C94E035E5469BC8B8C5106C1FDC648578DEA4F1 49DF28EB20 |
| 666 | FC555A1DBFA8023AE93B8B3BD02DB65C9E05CA9796A91A191BD809F2BB2BE29C3354 F8420EFC2C6910489897E62635BE83A0161AE20A1BB66F2FC00B506CC4F29693A04C25E EB780864803E359BD0E35247A756D9918F0C351B2F5AF83F8FCF1C923A1878B3C8F26A0 CDA02F |
| 667 | 4F0CD8E3016981B185A8991E57D7E9D448F354AF9EA7750978884189944E471E057278B4 2A27FDA9AC64A24D2571926521F3B27B66442A3D855B514A38A97CDC4072B0DEC4C7 B7499253494CEC5EF0419DDC6EF8E05F68D45368CEED34F8F8520918B978176601EA6C3 258E3 |
| 668 | E2B6BC9038AC84A83279DEA8868C8B9B0E4A28A6548ABF447B451459C6D8A0FDCEC6 59611E41E360D70541C7A4A86CE1CA9F781B4D42EDA47FC5324FC362F6B6943E8AEFF9 ABDD98657FC6062AA9FA30F5920367F6F3FF3DBC42887C87851D0890EB30F20436514D 42FD3301 |

EP 2 453 623 A1

| Index | Midamble Sequence |
|---|---|
| 669 | A3B345EF2CA05FF9E400B950866B5B1C2B76339489B2152D01107EF5A68F2A3A4884EC 23AA4CDC4DB0F55B39A439390DB1294FC86B0D66718CBFE2C7B030F11343F4B6B0FB0 116268ACC38151CDA5A7A5864C7A158288A14ADE9C68803C7AB3A5E69BF4B9DB10B8 6FB07735F |
| 670 | CCC2ADF6C48F434983C90928061C712B4A5976E404F0D2960725F7560E0A0C53A8C3390 072FB4CCF94384BF80152FE631DF9DB884EAEF0ACFE07502723F32473D8DA9EA378620 41108F020FB9FB7A8B85CC7AEDCFE88EA27450FB091822669EAD911FE0C64B8FDCCF6 B95CB0 |
| 671 | 631B73C2E513CAA79649C1E6064B8270E118EBA6F58C3524F9134D5D2682A39F4B56E8F B45B03AB2A4DD82401094F2087CC16E8F344A578731F2D92F969C615212246DAEB96033 53EC421289B9B924B243CF501371E869D0FF99DCDC831E0DFEB773E323DBBB34366882 0AD6 |
| 672 | 5A1073FC030100AAAF328068E5973A7A5A5066121E6756A79715A8789077691EDFCED1 D2A8F769D81E10510CDAC6AA0D18EA6AE4B03A865DB4647F81962B92996ED76FFDF6 56954434198FA6F193D8552AA33721FA5B2AA429B840A84D41A1A7A59B54898C0D9D5 A96B2A247 |
| 673 | D94B74E26360B3591BBCAD10FE3F3AAE8A8FC729A34C29704D6703BF18416A112FBA2 048580FCAC1D19ED12C0D2A1063910322F9403A2303E64C87735DC1367132FEB2AE11E CE6A1DE3010B84691629155BBBEC8D0E1757765FE58A15B7C71D0D311B0BF4D0997181 BB57759 |
| 674 | 86141F28BBF6CA368598E175B182A1AA6945A1ED5DA80EBDBD72D354903D04E42D54 60902084E6D0575410F64598D5D62D33B1074362FC60D713FA97230C0452127CE6437587 AFFA8D670459CFFEC2C502098CB2877377151A64187462F019BF9BF2E69997A0FEEDB7 142499 |
| 675 | D4432C25C52A1033397B9BC689C022B9AD796620ED221D0BCD1D579980A9DBAA769E 8593C645F591E00890991CF2A472C4007770F34840278E002FC2F9E9E7448B8FA30356CE B5223E1E3C03D69E98624835E5958DC195BDC98BF867E3D69728B6CBE2EB9FFB116CA 31C8DF1 |
| 676 | 00743CF14E5AAC9C242B74C06EF2BD4CFB63E8839B45A7772557518E3AC82D0C22004E DE661D412E4D6CD590E8A3630FB34A42C4FCD4E77AFB120877BB552166E10C4437ED0 972C00E8777CE5B5F66E763A9245C8329CD8C6EF024A79B3607E2BA7E19812498E9C51F 8214E1 |

(continued)

| Index | Midamble Sequence |
|---|---|
| 677 | AF410934ADB554DA3FBCA10ED4287A562E1450C3B0ABA22BE48FE0221BB9C499654B6DAFC312A211F430F8026164555714444FC70966164C3A48724F53E5444F8D68DB9B621B9787B97EB177B020F93BF6753909ED20CAB4BFBB2FE70A10742B9234I2696235BC0DC695C23FE |
| 678 | B869FCEB1725C001856A4CE559D00E170132BC21E3D884B6C46EBEDC11CD0CCAF4CF075C66823855917 6AC37228153 86928IA9A4BAD6D59930IF7757274 8F5A44389CCD2E0CB31631B6AA9A493F16BCB0696E62496D2B7EB38450AFAF52B260E824991534B97E31DCF06A082 |
| 679 | B24691398IC6A4C511224BB0826378D3DEDC2D788C6859C3B82E94964236FCA2DA00D92B0AD11E8870DA652A6B320E4FCE945BCD4F1F78E16DBE182D51DA7C0787C628D5AAB8DD1956408949CDE78310D53799788DEDCC439B659C9A3C513A5E233A0DB9FADC995A01DFD240 |
| 680 | 4C1A6699D763537F2D9D1033E5F1585EFFF3118B364AFC92CAA1E402566BAAFA054238018B45C3D605187331329361I325CC25674141CFE3DD22F216C5CDE6C41E0668319BAD2CEDF3A4AF2EF1C3C078A2D0F1BF91B93D49E02852836EB1B4A03E9CC349B3652E2EF473AA06 |
| 681 | 03143D80B937AD01FBAD715EAD9D17729778D10C032336953CD31CDC2EE59E2C49D3C3F434E234D3E1598583527504 0A00BF54355B45C77781AD7D6D838A0422E547F35A3432B656844F245338B29BAABEA2B7B6E12B474599F42F274E83A7309A5A19A35FC6AA472D1A9E8C |
| 682 | 86CD5A9F62F59D38311163061F709C39B74F62309B5108579E109CD9CBC8A49A31E01B89CE7B7908A4B17A28C203739978D44E1EDA6E421D9326A8BD4CA8B9478C3550C7D2E5377D7E8ABFA70BE4834619A794E0BE3693C07B5409B1F3E06401BE6CDCEFD59C8AE6A5B43AB1D |
| 683 | 4844445872CB5CC9587065F28305CA1B0B0BF598157AFCEC87632495 81C867861945AEAAA97F11C37C5B183B16902CCEA06BCBDB923B2A9E1583B0C16ED49623C9A692AA0BC6AB3CDBFC45AF8A7253E5377183342 87FF18243C16DB359B7C364E0E952D6722D613EAAF7F40E |
| 684 | 01A07206C060A48BD6C1076E794C1DF7BC69F1B28F6F66CC6E9A02AE811528CFE2267E658B9AF4574A686E262555B0C7511C4D5AF32A51705B0A3BD2F1483CABECD246B00CE26834F85D3F0EDDE9E02D841FD8E504092BE0104F1A7E05AE67DF492754820DD6935CF79611E4 |
| 685 | 765D5A4B6A62455CDB1128F14080C53CABAC0F8B952D28FA2DB6CEA8080BE0FB811F01D6811BA28CD12D98F65E308DA4BEFD788954C1229B9F61D5FD0A8BDF43FEE54F1C4FF91A0BC52C1F8AE2BBF377886913D59484B9E866CAD09408A0D80433C85B5E0097E3CC381CEDF0 |

| Index | Midamble Sequence |
|---|---|
| 686 | EF76756D0E44243E8E11324B0A6FF5299515C5A236BA46E5329C4AE221B42800DAF112E FB9ACF2F8F511136E434ADA42A84664C8E84E1A1A7627A7CFEDB28D72C791571140052 57FF5D86F1925F0B61008AB1DCB3A37DAA76DE6A3A7E1CECDAE40877D2D488B6F68 550B1C25 |
| 687 | 4DC6E14831368B4B34CECD81F6E1FB2BE45EFB828583DDCB370E0D42D6225C35BD898 9F6A9C5603AE6B632E226126F86E0B206F11C6924F63972B574847810F9F78A841A91315 E218094A9C707FFDB7ABEADBAF9FA2F9135ED1238B40D6769BF93B2A6B020A18252C 5B3F355 |
| 688 | 7AD3DA4390917845CEBB27C412D85EEF34D667050163869019E59842D078400DC783D75 AF8475C77ECE20D582942FEABE84D670E993E3DAB59FA1C2A1286C7FDDACB38ECE2 AD48338D640C585B5CA8C23600D2DD57C2344EBB7A78B84ADBBEAAD8AEDB3523F2 00BDC174AC23 . |
| 689 | 1823F515F064D23241DCDA43D7497E05DFE215093134B440F520B2FF61BAA5F5910293F D7B576DD09461901590583AD060385714EFA8A09593AC7FDD84E27763D79FC46B169E7 CA0888AB1C319D186CF920B4EB5A530849C39577CA80C1D9C0321BCCFC3E0D7725B1

C54BCDA |
| 690 | 1B6B5200B37DB0912EB8E0587190C74DB4B4C051D9CDD3BEF032E838923C9CD778653 0CB928E101EAF27CCE4B2B9CC3E1734427830803AA3AE90989566CBC47CDA6EBDA44 BD3544D8A6669BEDA814987AB36D981862DF5C401486D3F7BDE1D35960BE65D140254 FCE940EA62 |
| 691 | 3D687252667763061F678C8613AB6D460849748917CC9404E12F096622659177B133E25FD 16A2B5F4138806460978B45B28EBBD2BDC4252D40AA8C8A584E57532628BC67D58671C 1A74F6A90E1DD39DB43EFCC6EF7BC5421C9FC8AEDAD218F8841433F88289C2DDF2A5 D3494 |
| 692 | BF625C000E0F490ACF52C5F140A4F1D346EDE0B351945F17B14081EDD012DD89F30E54 C2538C897E6818373536EB12059F581D04A22876D5FC4F9337BB566D5AEE0341692E3F3 DC2008EAAE110DAF9CC5509B60104604 81352A08703796DF4AFBBC2FCB383A4DA8E3 D1C56F3 |
| 693 | 962A0D8B0FF6FD3D76724D0708DC43091E1408DBEB60728213CE5444F8132E096C6A8D 9C0FD48757A89DA82E57EDC557220E714C4D300A5F81F1130D804E6FD677E1D4180A38 8335BC3E8809DB234F138052F8789B57A139C7D8E6C3C526C7A6D562618E65F414B5B3 B6AFEA |

| Index | Midamble Sequence |
|---|---|
| 694 | 42AC1B8C7F31E406894CAFA9249B08506ACA58CC1A794088535DF9A769454584D19A81B12F96DB216FE2D8E158AAF0315D5FF0D91C6CA6FD2FD4855C30307792852969437DF4040FE2D95D6EAE2B9C9818486A4069F48A3D42E756C09FC55ACFE66B4CA94E7953C436CFC289 |
| 695 | 86606D80FDC913286D321ECC1E4332C0E8891CD34D44EF909AADF9224C696EBD9E2F3C54C88E0F511FF69BC1554454A8D316081573F57AF71754D92D6FCBA0B01CAB7550E94A6E7C727F7D12F0357A47D0B8981ACB3D10A38EF8353277305B734633FB8A84A590A544011C2D |
| 696 | 46FAC0E6F5F4BEE9F25E31B6A92A08E51CC124687B498C604C98011AE4D55F472B12C7AA090183A576A77F991213A03C757D4F406F1937CE8131957204029C6841D88912B2BB697AFF7895171456F5CB536F0F35F5A592F8332599A156C4B1D42DBF6827C37F748E69BDB50F |
| 697 | C24F29342C2901C09F810099BDD883D0C853A2259C648CD4AD6F248F89B351FAA61F90C320AB4FBEDD3318E470953CFAA9C0AB76CC4A6CAB456CD9D1994504A29F1D0431CA88847D728C7E5AC6D4B2D16A2BBFD4C6BAC9CDFBC65C540682F658883DE96EAB17A49541DD81BF |
| 698 | 5FA1037B34EE8172E43A1CAF362055C1879F00B770BC961721469C82D48C175A0A799545B9C493D04C8C15C5C04A1EE78A1ABEAB5CAC3953802264C6C6F473A9532C9737B2A8CF2497F5837B68479AF1119A0699B7E96476E242577662CE53CC872B2977B7238602AA4B98B7 |
| 699 | 277748B64FE92BD65C4491119FC69B25B7BAC9DACE0A91145E5ED18001E499C67CDE3E32C4D6207C13260FAA3D445E6324F02133107EFDD8DEAFB95D270D9E044E77C0EB90D72F6630A9F25A909F18E278817A21CC28AAF87EB15EE9EED0F1E67315FC115F9521A1403C4899 |
| 700 | A4881B65005C025CDB4F118760E785A97CAAE721C01E4CE1AA998F4016FBA231425434F7D5E9F5F2ECE19FC07D78A672E39260CC50B1426F7304AC50F9BAE268E545A517DD9544DFF915DBE519226E97B8B921EC59E5CF48DBE94E0D24A07034C601B155F4D7460F448CFD07 |
| 701 | 1C1768BC40521C2CC97C6C61D9713419EB4EF982C2593C83846CAC72BB8AF9B0BF04CF79B03567DDABBA03B8D00FCC09B29A595001C8F76AF2C14A4740FF55112D03E9CFB98A2F537919BA786E245583D480A7794364C3ED6A5FF920C1EE256003E3AC69861C64490C243CEE |

| Index | Midamble Sequence |
|---|---|
| 702 | B3814542B322E9DC0BD466C708842320725749EE69D61A842F8A74F7EBCD8D767128E06 5729C34855BB82597AEE1F3F53ED2B4648558A328E9F3ADE7E0B7930491C8302DFE402F F36C27C5FD957C097A566FD6F411866A42CE493C6C7805E2F9A15C03470E52AADD10B3 CEEF |
| 703 | C13C055FE492FBA5B56158AB4B06DAB8F17F0F7DC138308EA6A968AA1070FE9C08D95 00BA812646073916C040B504E69FCEEEAC737C184FBD2E61C32207C6B321FE99A3A120 BB3021B22BC3306E56A660BDE2581B787319F7B5B3E7B60ADA7AB552A25A9D77AC6A 36A9A1D28 |
| 704 | B0B8F79587F57E7D183010DB40288A4A8E84A4CBB640166EA2A47386428C9FA47D9691 D842CC9213FDDF08065A63608123AAB78170953BA2569AEDA1017CB70E50E61C2CD9E 7322A4AD9CD85C0B480E7BFEED0F12C6DAB3917B0CD6672D4FB5B66FC12358415879 BD2163520 |
| 705 | 9A464948CB773590D8B18DC5755842A893BA09B85830B8797146DDF5EB01E4016C90851 39A47E036E0629686831C78C4F6694ECDF7071EE9ED5B735AEF2014670FA286080EB05F CC017EEDDD2A0005F7348DFF3E10EC0D87A6DE520F316CA644F9C4BD8432C3059E33 B75B70 |
| 706 | A25E293E031109163837B822303AD9DA2F06606FD43AE2E2CCD28017811DB2A4C51BE9 80E4C54AED3C85EE813EA9636AE997404C53BF65E10C652458E2AE9EB71D4968D6B64 AB8759F1489906E28467DA2DB776E390C8C62E900ABAE692856A7A1D1C209DCDFEED C2469F0F1 |
| 707 | 43301520D80CE206881861082CEFCDC18D4D8137C99719CCE519AE169EA6D564215E36 C68425C0EA73E829083E874AC686F073375DA780574E04909FC53B763AF9F670F72C59A A9E0ABDE07C027104944755F2A80FE6FDBEE24FB598C86EAAE7A9F781C6D685F201A EC1E50E |
| 708 | AB115E586057ECE291F81FC5765D8106059184005BCF46A214818962C7AD5A167496749 AA22923BFAC7BA55DBA95398AD37350FEC30C7E423D5E3248A9564C47E2789653E2D2 D6B9110E1F3D903C3B85A2F0797F9EF39310F7004A752D8C577F0B7F1BE1D52D61B2678 BC19F |
| 709 | 930EA84B3326C5BBA0A144051C7BA1930A86153CA5FA506ADC151097D30AD9F9A5AB F08078B278DBD8B8D097273FB884043B87B918A55B884E3CE15AF373479189DE8DE31F 8B20F43D5F98D34485C4015D7FFCB2D3F397443434B6A6C85E38C23105B2A147B351E47 1838BB4 |

(continued)

| Index | Midamble Sequence |
|---|---|
| 710 | 132B009BA40FA4680E052D525618B9E55DE76D5E4B84D03834B550DD23BD8180622741A3FCF235C1A721B08D1995D2A1B0526C40CFB0CD7690A4AB46852E212FDE6CC58C0ADC635FBA745FF03AF9CB3906E0D01027A2DFB1CDE3EA4D3C1A06141641E4A5CEFDA5FC7C09E51F |
| 711 | 198F911ECA6177995318722A2DD614A4A3DCAA40FCD15B67662D9BF202327B740918D06850609C205B17614EE7E0DDC17C01E7632E4F87A88C34715ED733E31F600E4B22E17164AA940C47C99F084E5AFEAB0EB0961F23CBCD95B92D7E6B109B499FF089BBEA720388DC145A |
| 712 | 128F94B151C691BD7F89E622EBF118BF1C730439612A3B5244030ABD09EAB8DE6EE005EAC0235995589C40172BB9770C938A6C8DDA68A8980746DBEFB77B097142B486A740969ADCE163CBC4F459FB7CC0B519FAF99D45664EE4090E9DE25CE2A6C751681E40A601D097CB34 |
| 713 | 0AC13A7EE8204112DA0A58AE286C98CF7933ADB8151C9D5BB8C122971F1A762F8700DB0A5C31D1E90290B0D70E40E61629C467A4B7DEEA12F2DE159EC0794E5507B26CBF5E9F5BC7864FDCBAF3007ED6B1675430D42941580FE02D7DCAE5E1CF64BF45B10722FBB804332710 |
| 714 | 140F36FB21271431EDA246D7B0F44D06E47780A4FEC0A8455581EE80EF7667039ECFF13D469A334823018223E30B5E4EAD39940A78828AE3385C5DFB6CFE7D320B0C73E5FDC813225B1F02CD2C62B9D21DAF3159DA8F1C74682AC816AF4A0A867AABEE407F741E7D11DC18DE |
| 715 | AA52036689089B80E25AFAF62481287E313C2DC64D86C581BDE70B5DF28393F455215038B605C720A0EF88D1330A151EB575DBD29A3FFE313E713A80A45328B5144B3E51BD3ADDBD3794135DCD9F58E9F25B698F9FCC610C0C5EE5B1D56C48B312A3B66C96907F2121686DF6 |
| 716 | 2542C3DC7384EB495CC23E4F2125517B92745D4600848D248E2FA5F6B2C0C54A9A864F383F1E39DABA93428235C71272FF70D692819BFEC6E517676A4CCE2F3A88ED3426610AB83861C0B457F31FB3AEC07F880B5D3C442C205BF634C82EA80C072C38BAB9448F08DF79A4D6 |
| 717 | DA65114E1A6383FB460597E9F24056EFD8060BE2F6E460DE288145291DA34EAD143EF27109B344483212712D57492A4511AECCE87E3EA6C34212CC9D9D08F458A786507038E193D2B7D17D042050EAEA9D8A8FE2BB9A2AED476570A93AD831E6F505FB1F923BB329702CC419 |

| Index | Midamble Sequence |
|-------|-------------------|
| 718 | 1F608A13D64A41B17ED8271C601C0CA2A92315CF9045531E6628457F9E325CD0222AAE D80921343172BBE14626F63AAC8E7754C9E92B858F8FF6732B06B021E272BD64B8C2AE 78713118F743868F393C59BFC59A625788D4EE92A57E6E16C3B60FDA675C6FD9CBD4B1 5D76C0 |
| 719 | C8BB60484258E62027A85115113C6D42AC2DC14C634FA5A6504A0562E6E5F6B2A2B7E2 1B901D53D1F9ED24D790F25B99B88617B954E3A0F24FC31995F875559F2D9028CD4F164 39E8E4FB441174845558A13FE78E59ADB0387B75A2426A0A0792E4E91810743F594CC7C 43DF |
| 720 | 5E1803C56FD44E08D8CB872637FE43B83BF85B5A4C10653E015AA8CD41837B20161AA0 E3EFB32C0CD77662A4DE1732D2BA51534CA7C5832B5A935F5E29B4DDE9967C8CAEA5 E3EF4C3A5B45A98409D225531E19878EFDDAC05C1792F6B04E1BF299A5D72052BE3E6 9746A54C0 |
| 721 | 250DD8F16ED1E8CA96483EF8AF17C14D4F652EE1C088F734F9A41AC1B82DA008397C1 3842DCAF2040CE385EC0B2CE6A5A9BD6991A048762CEF26224F09F3A14C14E62B6D69 409AFB767A45D6C2FDA1D384F8760C21FE95AA34DA2167A2796B881AE54B19CC97C7

C57A233F88 |
| 722 | 163E0AE4E7ECAB8A727FA20EA907ED5695FFA00E190F7032DCA7D25E80840343066BE 95A7E3E0791A55B41EC19D263088DEA2819038B4402695624C5B9A7477B7D32ED5FF91 74B3DDFD2C0997615A3E8B23DA3152E0D7F025E040202EC4CCEA9E4ABDF95812C3687 427D34F3 |
| 723 | EA09090400B9A64F40A80935B6C887816A519AB4CFC0BB3888B42768CB392F9F8600D5 81645F1D01570FAAAD13A6396AC11FB20AF93501646CBE77AAF978D1C00D6F34F8D4A 9F08DD2A54899E93AC789C3CADADE94172BB8E9CA6FAA52CCA36268B323B97C45904 24D4F23A9 |
| 724 | 8917198347F266A513D6E630504C95338DC864BC1D25BDB190B3C8545E80FD4C9ACC73 80303C4F2C72DCEB541AEFB4DC81173590988AEEFF3B69CBB568AF8D900C3AE8A1C8 5D055FDC03536E4C2721E270C3C8335CF575457509E01AF83219D5B96375E9A31B0F575 96D8F88 |
| 725 | DA1317C84D806E8F3084B69E7A4670D888FEEB22D08840D2322D03E2FF1A044164C897 153215DE77B507ED8AB76948909797B08E5D576D623F3839BF595A452FC9CE78923C7A5 428D02A8E0444534C071F7CEF8D32379BC3DA87B0CBB55D4E78D60BBCCC8A6CA221F E205F02 |

| Index | Midamble Sequence |
|---|---|
| 726 | 61052E11108CC421740662D4C2C2CAB5AFEBFE0E68CDEB0B8284417E3CDF5E05914DA 0D7A68A8EAB24BA4170EEA2C8B5E102D8EFB8723016CEC1CBECBC2796379D8C34462 A55AFB22DB1C7C6644B9B6831C2CF34F5764D72CE42A1BACFD70D6E4281A6F990B21 B3CA59D1E73 |
| 727 | DF20B6E49DC7A4CBD1278BAA159B6B32627F1212C987C29839F971E2358EF90010E1A A5E42D1AC86F3CAACC20E5B8561006928811C2EE0951E5BF5B242A42AC5BEBA8B325 D1AE6A4292571D5A28D887A2C9464846528A39642521397EE03BAF4B87F18D504F50F96 977B78F6 |
| 728 | 2E4888280C069A7A33E3A4E15DAE18846EA24885609EADAEBBC121A3EF092F7A508A2 F7ED9D32C4E49C37834E22FBE8A7CD4F12A93D098B415B719AC32049FA4466F294EC8 D6D8EBD7958BA38508690835185E5B0DAC3B23BDBAC27997B2F733155DC5DCBFD8B 0EC63463E24 |
| 729 | 674CDAFB8D913C6E8FCD62F962D00ACCD200F91404DA2481EA6961F991162B9BA6EE 464B6ACE221790C9B9BF13849DA9C231881A312F8C3E936E28A68F47EF505FE3FD9328 E483FEC626A5AF134D0CC8957777B89DCA4EBE14864FF92E88192E1B023024A324972F AF4450DF |
| 730 | EF40797F2D2DFAD41FE3CB832EC902A808E498E3310ADE128CD0CF55D2975817844A4 7A009091ADC975883CF2BCD55E62A020D58D792BE0DDEE4B10118F53A2AEA8AA3717 D37492B349C1F0AD720AB6CA6C66E7470CB9259E07692D9C65C02A395CC8CBD3190F5 F372D39ABF |
| 731 | A1754A146C78BA4B4102CEE0DB6D10F03B7E4089121118534FAD12214525C4C6C815DB 6D8CA3989340A8140567C36C2EACF7EE256D60FDE23D250386FE3CCE0DA3B264854F4 27CDFDC726AD180980C65B9038524EE2A51BDFEAF232F50FAA0B0DF293D5A29E0AEC 1ED39E882 |
| 732 | 4C0ED31D531BBE3E454B913E4AAA0C2FE541934CDAD7D9FA84F480F6E5B2548418AF 3D8601D26136AD00F6020194EB376C4D18FC015E6702198CAEA873A79EC1C5C3794CFE 3A949745C3BC92F83195FECF64B47FE29044835074D742305AB00548E1DAD7602734BF7 E0593BE |
| 733 | 12C82E5E3D99BF6D040910B980309E295A0EE78105B8FA62F3BDC45C6BE791D9C582EF 87942012A73817598515E43CE04AAADFAB62A6B915AC43C22A94FFC194E80F4E611C5 DC8579698E9A18E8ADF060EF02981E723F551EC12AF08E5F75877CCFF128B7B63D7E81 BD44908 |

| Index | Midamble Sequence |
|---|---|
| 734 | 109E4CE1809268F9E0AE8C9256F2FBADE7F30B88BB28DFD82210AE0A80388EFEBCBB07C714B46C75C2382055B32D9E883AB8A546803A9867EDACC90FBA6DDAAC66AF4B7820D9952BA54D20048FD4F573500BB9D082812D5DC53CFCF58BF8D9884B80770F29D8EF34D0711CFA |
| 735 | B0D578982A5C6A69CF4A0D110488A3CD2B843A34EDA8D91F3811B2177B8DA9A029E82604DC7D0CCF19E4BA7313676C36DC105000317CCB409E3656FF4463D5F88BFC1C9473DF7F4C058966254E7A35B87546481EF8E8A44C926972850EAD20A85CBD9D174C1D13C60D19E63A |
| 736 | 49A6545F09480233467636E952C046407B3F508B842C4F8D144601FA3E2D38256976944D253C388EF88CF92D83AE85203B9CA5CF37F576C8B15B0F57010558BEBD579B3DEF9609EA3EDE58EF5CC4101226B35C8172161154FBDDD042E4CCEFE9EB17CA5D858DD0D1543758B0 |
| 737 | ECE5622E8289350FA52506A1B6A163734730C5D52498A58AEE30D9FC2B1D5DF76B06F091F06410AD0ADBA1704D27A47B718C9A56213ABCA448945017533D276F658A9ADF5B06E99A59F448F3CEBD65AE7A1173450EF957A26DE10DEB6EBC2D13EA667D90756E8C59

454001BE |
| 738 | E2CB97A291B04B58822402DAA9DB0E6DF484A463EBD5D28A00331DEC170603863934C5E7FE0317AC540F1150735D1E349D0D98EFBEA3284CA0D18F964FDD23EC22A3068B6857464F6E915F5B08E3C815517B392B923D452029F847FC22E24E3ACFBD4F753B23EA4E94F27C12 |
| 739 | 012699F7E183BAA13616E0238471F7E74286741C2D0E6001AB98E97AFB4E24D89E1782480603314505F6A9A537A64F76A39CEBF2ED535C40474004CAE4FD49503713E228AFBE6223FB7E9334D1618E999EBEEF36A92F9A177A35A9AEB2C7E37A7133401A0FC57CC119D47DC3 |
| 740 | A4766B17F5DBAB3545777045EC92DBAF49CA1228CC5E35D08B1E179B8A820A4608B4A47021F9AC1690B8B4220251F12DEEACD50ED058C7321D95E19EC740CA2C3EC105DDC567CBDF8B866F5001BF2E68CA5C6D04B4CF61F5BBF22C9050DBDD8A847DA06A8464900234875F97 |
| 741 | E4173106FE2FC801279926B5F49113319B970D392193892CE55606385D869D2DD3890D89E4A71571E492938C284558E6503E334118F507DAF9087BF86A18322DB9CC5D3C1E671011492A359F9EC683587DA9B4747C2E95E4CAF0D2B4F93D4254A1CDD37BB66C8CBE64B4A451 |

| Index | Midamble Sequence |
|---|---|
| 742 | 411B58A181785D91EB08F3FB923B9A3921A2F11D262719F218AA48D7232C9A58D094866 E5806D8234540B7AC121EFC993E9A0873B7C5E1A5C467FFDC4B9E49FB85D7390E37C55 2AC0B6DD4E7D05987160507E26C5EAE2836174090CD819231C591AE304DA2464297771 B00C7 |
| 743 | 6CDAABF408679979840E116E264D31A600A1B6A2EF8C42B09DE341806830DF47FD21EE 0726EE161272442593995BD4E72E5EBDFA754859CB31C8E4FFC613DA890B582B8A03BA 710ABFC8BCE9B1251544F66111D6AC8547651061C34224C5F247912D4BF7B97FF8A8295 82F6D |
| 744 | 776F21A6B719E5BF7135560A58831F80B0D425E901827804C38C4DE26A849529BF3CA08 B781769426106F0BB29E082DA2EEEF5A80CC6934E2F192668C2EB939E894B31ABA7731 AB11508A03B10ADBA5E0D607914F8EAA6478ED5DC191CBDB7CD254F91CF35EE13263 82949AB |
| 745 | 8627BE511B12501A07A6A9FC64A5247D7CA732E33DA4CDCC697830005199287E3CE6A 5D3008CC90302226B21B483BEC36D00885547413B6DE3CC6165DC7E3FC360CBD6FEC1 E2A2324D2238FC70CEFD18813574E0A30C45E8800AF4AC096AFEAE458D38636D0AB4F F846B1979 |
| 746 | 2AA5EC5A885C449C24F1531BD80948350D013FA0F7C852F48228BCC115F6E05BC83987 E4F2B603859151A26CFBECFA94D9C5DCFF6C0EB1EEC5730A10B2418EB54B8233E6C86 F64D2636ACAE360061BFCDC30C251C1C51D7E8A3A2D4FBBA8DCF2BB2B46AFD8C29 5D0D65124F7 |
| 747 | ACB9E15A4B6735A2DA90774E4F42B20380AA8C463927E9398225497BE905AE616028041 65CF9F3E0D463B11466E6134551FBDD8C723247CC3BED9F6E11269392B57B29A8D8025 DF7D54AB7F045650DFD25878643FA85CC18FDF15A3E0CA98571FA29124EB918F2B0296 64E60 |
| 748 | A30B59CA6C566CA39C97B47C26FDDF5B0E978C31042F1E150A877834461642064AB021 49DFC6E5235A28262BC5A0BD59863A0F22821967B40025AD44FD70A586B53B6435A90C 674B50AF8C128C89DE4B98B833BA63582DA14393999A59519FCACB4D8A278ADFB078 DB9B3FEC |
| 749 | 5900CB5CB43ED710F896F10820998D44C1890C3B2A44D12D0DD7B03DEE6907C807DF1 8A232F6231CA356F95B63C83357F1B8AA8C383929423EF93EEB4B4C49FA08B0F0F7339 AFBF93DFD161B5C95339ED6A5D2504B562819483A2CF36A832300447293981A28D57FA 5BEFB66 |

| Index | Midamble Sequence |
|---|---|
| 750 | C3E02561969FAE8353C4CCE9379EC3A556A0F918E931148F64A2BCFAD3A4E015C49D61 2216125DC5A6206014EBCE0958765CCD14E82122DD35ACBED5820A59BC68AE7395385 99BC3AA4D3F46F2483C570BAC047E137571E575675618966F3DD0770BA559674E56AE7 DA08355 |
| 751 | 8C3FBAAA08DC681D2505E7686B493E908068C0323F550BD6E780AE87B51BB5F0952C24 2B9E8A2675322E4001383499B9A0C82B0E5FAC672D664DB04E88D4AE55477D6A318D7 B32AF866785AA427600BFEC5EC76C51609CD3E2856D7BCCDF3BB0A25139E0AD85127 625AFDDA1 |
| 752 | D0490D5035C5C313144576E5FBC9CC57F7805DA7E6CE02BC234F33BAE724408F7C8CA 621603B82C6CA457194D0B2A74A0C159EA46580320ACDBD02E83EA4B6449E77DC98D F74F8A55EB8218A496AB9E4E62ED0F41766EBC985DD995D688D20FDCA904CA0C9AF9 3668539F802 |
| 753 | E24EA125500340CFC40C42A4C1F20D833F1664F543C2CD2E79B99645BA90705A8830816 42D1FFAD4BA5236D5A528BC54AD1D790327B24F4F4952F27D85CDE3CA8E89D484E7F 28811800689CF24743EBE2013B803BA11549B59DA3EB3CC652A69EDF8EC4FD1458C3A DF2E550D |
| 754 | 8C4CAB87F07AD985D1E855C46DD37BF18B012E2318AA1019CBA9A75E13F2DA6CC862 F475E41553A90ED06C510B0529D600412A46E9AB5D5A22B9C454B519A7C0C3E008A2C 1F5CBE77FF89505770F836C48993CBC5B24B679CF09CB6983930B59D6128136ED6BC0E7 E1388BE8 |
| 755 | 4E9E6993F0F5FC3F26848C0A1B0D32A4613B8C7712007DAC8BA831AB98AE334513B106 31688EEF39F1CAB04122498FFE34552A700597907447937E1344D4F1F8FE8DD774742867 AC9B699420C661DB90DB4698574FF2B34E4183F28620B9810CCF3121B70632AD7F71182 9DD |
| 756 | B3C5380314232F21A573F646EE910D0E140DEAC10134CCC46B6B461A0BE36E3B8C3E36 201C6D91552C3C960903095ADF079DD0308FF777D8D0B9BC52AA3FF95943B08CD5F961 4A5A74B110F83A873B54C5C035D68817A3B754949E374FB996AB3841C22353843A889F1 54AF1 |
| 757 | 650D2028AF5B45AFE7120D70156E86B14667A8C070BC83D987DD8A801250DD7523500A 14E6AB24367EFA541D6D76C8B048634CE07C7C0C778C71DBD85EF9DC15E5A8D3C7E0 BC5AC1DB0A0BDA58A2CF58FFC0BC7809BEB2EAB240CA34FF0150E5001DBC4F66C2 D751AF253D78 |

(continued)

| Index | Midamble Sequence |
|---|---|
| 758 | 3A5DDC8E2415B4EB3153692AC86A9387376A31461B254BA853EE0A6A00B77983560309 810F7146DDB92B4D8644CE10C57C780B52A85F6538EA74C8863619C2242A1C3CEA24E9 7C1D363A0B4909E2C8DC3F3FE8CB7C20FBC590E1148BBE2C5CF0FE271939399DFC78A 1DCADE9 |
| 759 | BBAC033D0725491F60113523307F3CBB4B4AA453D30E82600A0033490C37265687D3892 3B903FB11A8AC2BC5AC5087B05806F7C6CFA5FC5D41A42F5B4CC89B4F1A593C62FDA 680DEF0C45467259E8AF7B93787C38286F34707FD50F3C4D82CCAA5F0B0C7CE338A1F7 FCEA2A4 |
| 760 | AD6D96F0913CC2E79843DC34FDD0691BAE59C2421AA4D76783CB20503C2AB4D74D74 61A3A66C60A89463B37538F47D32999C00147F79B677B81ADC2FD1D580D9D9A6673101 5A588DD5CB84A7E5368CB8B10BD0EC55B4C449F4409D3547390B0FBF8BC31454C7AFF FFFE77B03 |
| 761 | 591BD335634324847CEEB0C379C5B3B5247A3559089130AE69B539123D9FEBB8A1013D 216D82E333101909FB1051A755AE4300E9AE6C752A3561542B4D5FEAF5A1FE1B43076B 4EC1054307EF505759069C25C4CF96EF8679FCA77FC5316B9196EDA4AF9AC82E6E8610 6E0E66 |
| 762 | 5D90526D26E44303AB3E0F28807B52E298D5706EDC8EA8F0828286547C80698F4A2FC76 2B4FC0A2F1053B4C490653D0E2A9AF7ECDFE80F9B54970BE676B62056EBE35B9FD518 00CD81B87C0136E21C53FB7C9123A452D7E31A304D83B41F9EF542CC2AB07D1899A6D 9EDEE5D |
| 763 | 8D1B13C4218DEF20BF5B288822ECE8B400A1031C8E1DB22BD89511BA1CB5ED0590410 2026A74A6A1809DC9F7CBBC095BB1691A763E5D761085F854C972BC2FB5326171C0B0 D0F3DA66B6C01AAA9880606ADFD3EF1B677891CB23D788DA67AC472A5C987E481AE 28A170FA4EA |
| 764 | 7559D140499B60913D06C6E6926C17E8D321043AA43741B6EE0EA15C70EC7606A43F164 A28922B858941367A7F3F45AD72E6D025067005B8CCAB5DCF5A6A6B0214E94A064DB8 978031CCC85173E86BDB41DF5349B6C2213FF0E3F86471E07BBC7D4153CD62D3AE9580 5D399A |
| 765 | 24D22AB1DD4AAF4CD4E28023564C04F1A6D8F8A116C212DCA8374326EDC63AE7056F 5803D8D2600C253A7FCA63A5A745C7F6ECEC70334894FD1233909AB15B590ECB692422 20E90B4D2FB2441DDD7EFB4103D7CEAB629BF721C83E995B1FF2E3EE8D907085A7232 EC42BD72C |

(continued)

| Index | Midamble Sequence |
|---|---|
| 766 | BE5A1C38596A7FFA9E7C87CE14001428A05D7967AAA1E7764728A3CD1D95D7E5094A E1BCC704E9349095190C0663D6401B3CC0B01928A825919FB4CDC31B904AC6C91AD2E 43E50AEF1780C9193D84F06B633910E75FE5FAEB5CCF6B15652D1D8B0589698E3DDCC BC123A6286 |
| 767 | DD95CD83249D2231677812D40488178F1C42293D4881D2B4C595A18A67E0B9A35FFD98 DCEB5CBB1884D59456B31A44DE864E25229FF793D64A659CC65ED3E40275C075641195 C3DDA120F869B65278F562F92DFA23BB8F31EC20313A038BF946F27BAE0290B608EB41 157AEC |

Table 6 $N_{FFT}$ = 512, $N_{Tx}$ = 8 , Length = 18, Reuse=3

| Index | Midamble Sequence | Index | Midamble Sequence | Index | Midamble Sequence | Index | Midamble Sequence |
|---|---|---|---|---|---|---|---|
| 0 | 05390 | 128 | 051B0 | 256 | 0CD6C | 384 | 0AE58 |
| 1 | 0546C | 129 | 0564C | 257 | 072CC | 385 | 0A398 |
| 2 | 05138 | 130 | 03828 | 258 | 07530 | 386 | 0A464 |
| 3 | 056C4 | 131 | 03CD4 | 259 | 06A8C | 387 | 029E4 |
| 4 | 051D8 | 132 | 06254 | 260 | 06D70 | 388 | 02E18 |
| 5 | 05624 | 133 | 065A8 | 261 | 01AB0 | 389 | 0A334 |
| 6 | 05370 | 134 | 06358 | 262 | 01D4C | 390 | 0A4C8 |
| 7 | 0548C | 135 | 064A4 | 263 | 07244 | 391 | 05B18 |
| 8 | 0328C | 136 | 05318 | 264 | 075B8 | 392 | 05CE4 |
| 9 | 03570 | 137 | 054E4 | 265 | 0CBD0 | 393 | 0D3B0 |
| 10 | 049A8 | 138 | 03A98 | 266 | 0CC2C | 394 | 0D44C |
| 11 | 04E54 | 139 | 03D64 | 267 | 04A9C | 395 | 0B28C |
| 12 | 031D4 | 140 | 062B4 | 268 | 04D60 | 396 | 0B570 |
| 13 | 03628 | 141 | 06548 | 269 | 0C978 | 397 | 0AB4C |
| 14 | 090B8 | 142 | 060B4 | 270 | 0CE84 | 398 | 0ACB0 |
| 15 | 09744 | 143 | 06748 | 271 | 019A8 | 399 | 06944 |
| 16 | 093A0 | 144 | 0625C | 272 | 01E54 | 400 | 06EB8 |
| 17 | 0945C | 145 | 065A0 | 273 | 03354 | 401 | 04AF0 |
| 18 | 04AB0 | 146 | 04AC4 | 274 | 034A8 | 402 | 04D0C |
| 19 | 04D4C | 147 | 04D38 | 275 | 032A4 | 403 | 02B0C |
| 20 | 07128 | 148 | 04B94 | 276 | 03558 | 404 | 02CF0 |
| 21 | 076D4 | 149 | 04C68 | 277 | 073B4 | 405 | 06A18 |
| 22 | 07290 | 150 | 0519C | 278 | 07448 | 406 | 06DE4 |
| 23 | 0756C | 151 | 05660 | 279 | 0CADC | 407 | 05AC4 |
| 24 | 0A930 | 152 | 0A2CC | 280 | 0CD20 | 408 | 05D38 |
| 25 | 0AECC | 153 | 0A530 | 281 | 0C894 | 409 | 032B0 |
| 26 | 02B38 | 154 | 0CBE8 | 282 | 0CF68 | 410 | 0354C |
| 27 | 02CC4 | 155 | 0CC14 | 283 | 01A94 | 411 | 05B94 |
| 28 | 02B98 | 156 | 0A194 | 284 | 01D68 | 412 | 05C68 |
| 29 | 02C64 | 157 | 0A668 | 285 | 08BA4 | 413 | 06298 |
| 30 | 0A990 | 158 | 0B064 | 286 | 08C58 | 414 | 06564 |
| 31 | 0AE6C | 159 | 0B798 | 287 | 07AA4 | 415 | 01AE4 |
| 32 | 04A70 | 160 | 02A70 | 288 | 07D58 | 416 | 01D18 |
| 33 | 04D8C | 161 | 02D8C | 289 | 08B44 | 417 | 06BAC |
| 34 | 01B54 | 162 | 0A8D8 | 290 | 08CB8 | 418 | 06C50 |
| 35 | 01CAB | 163 | 0AF24 | 291 | 03B4C | 419 | 0DIB8 |
| 36 | 04A8C | 164 | 0B33C | 292 | 03CB0 | 420 | 06A70 |
| 37 | 04D70 | 165 | 0B4C0 | 293 | 01AD4 | 421 | 06D8C |
| 38 | 0]AA4 | 166 | 0CB40 | 294 | 01D28 | 422 | 09AA4 |
| 39 | 01D58 | 167 | 0CCBC | 295 | 07B54 | 423 | 09D58 |
| 40 | 049C8 | 168 | 08AF0 | 296 | 07CA8 | 424 | 031A8 |
| 41 | 04E34 | 169 | 08D0C | 297 | 05BCC | 425 | 03654 |
| 42 | 049D4 | 170 | 05A60 | 298 | 05C30 | 426 | 07358 |
| 43 | 04E28 | 171 | 05D9C | 299 | 028E4 | 427 | 074A4 |
| 44 | 0A9B0 | 172 | 050CC | 300 | 02F18 | 428 | 05B8C |
| 45 | 0AE4C | 173 | 05730 | 301 | 039A4 | 429 | 05C70 |
| 46 | 02818 | 174 | 0D188 | 302 | 03E58 | 430 | 09B54 |
| 47 | 02CE4 | 175 | 0CAF8 | 303 | 0A9B4 | 431 | 09CA8 |

(continued)

| Index | Midamble Sequence | Index | Midamble Sequence | Index | Midamble Sequence | Index | Midamble Sequence |
|---|---|---|---|---|---|---|---|
| 48 | 05988 | 176 | 0CD04 | 304 | 0AE48 | 432 | 06808 |
| 49 | 05E74 | 177 | 0A11C | 305 | 05984 | 433 | 06CF4 |
| 50 | 02B8C | 178 | 0A6E0 | 306 | 05E78 | 434 | 01B14 |
| 51 | 02C70 | 179 | 05264 | 307 | 0AA4C | 435 | 01CE8 |
| 52 | 0A924 | 180 | 05598 | 308 | 0ADB0 | 436 | 08BD0 |
| 53 | 0AED8 | 181 | 0D320 | 309 | 0C350 | 437 | 08C2C |
| 54 | 05A30 | 182 | 0D4DC | 310 | 0C4AC | 438 | 0D118 |
| 55 | 05DCC | 183 | 09960 | 311 | 0C158 | 439 | 0D310 |
| 56 | 0AB6C | 184 | 09E9C | 312 | 0C6A4 | 440 | 0D4EC |
| 57 | 0AC90 | 185 | 029C8 | 313 | 02B1C | 441 | 06328 |
| 58 | 029C4 | 186 | 02E34 | 314 | 02CE0 | 442 | 064D4 |
| 59 | 02E38 | 187 | 0D230 | 315 | 0B144 | 443 | 069C8 |
| 60 | 03394 | 188 | 0C858 | 316 | 086B8 | 444 | 06E34 |
| 61 | 03468 | 189 | 0CFA4 | 317 | 0AB24 | 445 | 08978 |
| 62 | 032C4 | 190 | 058C8 | 318 | 0ACD8 | 446 | 08E84 |
| 63 | 03538 | 191 | 05F34 | 319 | 03948 | 447 | 0D370 |
| 64 | 09950 | 192 | 05334 | 320 | 03EB4 | 448 | 0D48C |
| 65 | 09EAC | 193 | 054C8 | 321 | 058C4 | 449 | 059C4 |
| 66 | 0B994 | 194 | 0B2EC | 322 | 05F38 | 450 | 05E38 |
| 67 | 0BE68 | 195 | 0B510 | 323 | 0298C | 451 | 06158 |
| 68 | 0A3B0 | 196 | 0AB60 | 324 | 02E70 | 452 | 066A4 |
| 69 | 0A44C | 197 | 0AC9C | 325 | 09B5C | 453 | 06350 |
| 70 | 0CA14 | 198 | 0B114 | 326 | 09CA0 | 454 | 064AC |
| 71 | 0CDE8 | 199 | 086E8 | 327 | 098A4 | 455 | 09AE4 |
| 72 | 0A1B8 | 200 | 0A0EC | 328 | 09F58 | 456 | 09D18 |
| 73 | 0A644 | 201 | 0A710 | 329 | 0BBCC | 457 | 09B14 |
| 74 | 0BACC | 202 | 089E8 | 330 | 0BC30 | 458 | 09CE8 |
| 75 | 0BD30 | 203 | 08E14 | 331 | 0B3AC | 459 | 0D390 |
| 76 | 0CAF4 | 204 | 0714C | 332 | 08450 | 460 | 0D46C |
| 77 | 0CD08 | 205 | 076B0 | 333 | 0735C | 461 | 0D1D8 |
| 78 | 04B88 | 206 | 0D098 | 334 | 074A0 | 462 | 0D138 |
| 79 | 04C74 | 207 | 098D0 | 335 | 05B9C | 463 | 071B4 |
| 80 | 04A38 | 208 | 09F2C | 336 | 05C60 | 464 | 07648 |
| 81 | 04DC4 | 209 | 071AC | 337 | 0AB64 | 465 | 0B388 |
| 82 | 04AE0 | 210 | 07650 | 338 | 0AC98 | 466 | 08474 |
| 83 | 04D1C | 211 | 08970 | 339 | 0B984 | 467 | 0923C |
| 84 | 048E8 | 212 | 08E8C | 340 | 0BE78 | 468 | 095C0 |
| 85 | 04F14 | 213 | 09A84 | 341 | 03A50 | 469 | 0B230 |
| 86 | 0928C | 214 | 09D78 | 342 | 03DAC | 470 | 0B5CC |
| 87 | 09570 | 215 | 060AC | 343 | 029CC | 471 | 0A06C |
| 88 | 091D4 | 216 | 06750 | 344 | 02E30 | 472 | 0A790 |
| 89 | 09628 | 217 | 06B5C | 345 | 070A4 | 473 | 01A64 |
| 90 | 01AC4 | 218 | 06CA0 | 346 | 07758 | 474 | 01D98 |
| 91 | 01D38 | 219 | 089D0 | 347 | 05B98 | 475 | 0A13C |
| 92 | 01B94 | 220 | 08E2C | 348 | 05C64 | 476 | 0A6C0 |
| 93 | 01C68 | 221 | 0615C | 349 | 07148 | 477 | 0B238 |
| 94 | 0C854 | 222 | 066A0 | 350 | 076B4 | 478 | 0B5C4 |
| 95 | 0CFA8 | 223 | 091D0 | 351 | 05B38 | 479 | 08A5C |
| 96 | 02994 | 224 | 0962C | 352 | 05CC4 | 480 | 08DA0 |

(continued)

| Index | Midamble Sequence | Index | Midamble Sequence | Index | Midamble Sequence | Index | Midamble Sequence |
|---|---|---|---|---|---|---|---|
| 97 | 02E68 | 225 | 09BD4 | 353 | 08B60 | 481 | 09074 |
| 98 | 0A864 | 226 | 09C28 | 354 | 08C9C | 482 | 09788 |
| 99 | 0AF98 | 227 | 05B14 | 355 | 07250 | 483 | 07948 |
| 100 | 050D8 | 228 | 05CE8 | 356 | 075AC | 484 | 07EB4 |
| 101 | 05724 | 229 | 030D4 | 357 | 01ACC | 485 | 07A50 |
| 102 | 02ACC | 230 | 03728 | 358 | 01D30 | 486 | 07DAC |
| 103 | 02D30 | 231 | 069A8 | 359 | 088D8 | 487 | 0B188 |
| 104 | 092E0 | 232 | 06E54 | 360 | 08F24 | 488 | 0B674 |
| 105 | 0951C | 233 | 05AE4 | 361 | 0CB54 | 489 | 032CC |
| 106 | 05360 | 234 | 05018 | 362 | 0CCA8 | 490 | 03530 |
| 107 | 0549C | 235 | 031AC | 363 | 072D8 | 491 | 01B34 |
| 108 | 090E8 | 236 | 03650 | 364 | 07524 | 492 | 01CC8 |
| 109 | 09714 | 237 | 0329C | 365 | 01994 | 493 | 0A0D8 |
| 110 | 0AB3C | 238 | 03560 | 366 | 01E68 | 494 | 0A724 |
| 111 | 0ACC0 | 239 | 068A4 | 367 | 0CAA4 | 495 | 0724C |
| 112 | 0CABC | 240 | 06F58 | 368 | 0CD58 | 496 | 075B0 |
| 113 | 0CD40 | 241 | 07194 | 369 | 049E8 | 497 | 0A360 |
| 114 | 05270 | 242 | 07668 | 370 | 04E14 | 498 | 0A49C |
| 115 | 0558C | 243 | 0314C | 371 | 07368 | 499 | 088B4 |
| 116 | 01A98 | 244 | 036B0 | 372 | 07494 | 500 | 08F48 |
| 117 | 01D64 | 245 | 06AB0 | 373 | 0B1D4 | 501 | 0B3B8 |
| 118 | 062A4 | 246 | 06D4C | 374 | 0B628 | 502 | 0B444 |
| 119 | 06558 | 247 | 0C928 | 375 | 0B8C8 | 503 | 0A09C |
| 120 | 051C8 | 248 | 0CED4 | 376 | 0BF34 | 504 | 0A760 |
| 121 | 05634 | 249 | 09170 | 377 | 0BA60 | 505 | 03298 |
| 122 | 01B28 | 250 | 0968C | 378 | 0BD9C | 506 | 03564 |
| 123 | 01CD4 | 251 | 069D4 | 379 | 0A338 | 507 | 062B0 |
| 124 | 06354 | 252 | 06E28 | 380 | 0A4C4 | 508 | 0654C |
| 125 | 064A8 | 253 | 048D4 | 381 | 0A264 | 509 | 0D224 |
| 126 | 0C950 | 254 | 04F28 | 382 | 0A598 | 510 | 0C9A8 |
| 127 | 0CEAC | 255 | 0CA90 | 383 | 0A9A4 | 511 | 0CE54 |

Table 7 $N_{FFT}$ = 512/1024, $N_{Tx}$ = 4/8, Length=36, Reuse=3

| Index | Midamble Sequence | Index | Midamble Sequence | Index | Midamble Sequence | Index | Midamble Sequence |
|---|---|---|---|---|---|---|---|
| 0 | A51E3FCCC | 128 | C664829F5 | 256 | F96501995 | 384 | 032B16419 |
| 1 | 5AE1FFCCC | 129 | BBC46D0F1 | 257 | 9F6518195 | 385 | FCD4D6419 |
| 2 | F04B6A999 | 130 | 4BC3AEF11 | 258 | 775A7743C | 386 | 590640CAC |
| 3 | FF3329478 | 131 | 2296E1F10 | 259 | DD0F1DD69 | 387 | CFCD700D5 |
| 4 | FF528F0CC | 132 | 843DDD0E8 | 260 | C537FD8B8 | 388 | FCD4C334C |
| 5 | 55F81A599 | 133 | 959F8C334 | 261 | 0F4B15799 | 389 | 956026A60 |
| 6 | AA07DA599 | 134 | 883C74A45 | 262 | F0B4D5799 | 390 | C03573F35 |
| 7 | C3CCC02B5 | 135 | AF64A73F4 | 263 | 88DA1E289 | 391 | 3FCAB3F35 |
| 8 | 77C3B75A4 | 136 | F6D1BD8B8 | 264 | F564F19F4 | 392 | 0CD300CAC |
| 9 | DD69220F1 | 137 | F62E024B9 | 265 | FC2B3CD4D | 393 | 65E7A5580 |
| 10 | FC186A534 | 138 | 90D1E40B9 | 266 | 03D4FCD4D | 394 | 4425B87DC |
| 11 | 03E7AA534 | 139 | 667FB0EB4 | 267 | 0AC98E741 | 395 | E1F72EF69 |
| 12 | A94D3F061 | 140 | 998070EB4 | 268 | CCD5659E1 | 396 | 6661A9401 |

(continued)

| Index | Midamble Sequence | Index | Midamble Sequence | Index | Midamble Sequence | Index | Midamble Sequence |
|---|---|---|---|---|---|---|---|
| 13 | 30FE596AC | 141 | 3A7B715EC | 269 | 7D3EAC69C | 397 | 36FAC178C |
| 14 | 9A54CC3F9 | 142 | EE112D0F1 | 270 | 2D6EA1D11 | 398 | A66055860 |
| 15 | 885D9E169 | 143 | B43C7B844 | 271 | FCAB33D34 | 399 | 5667D6580 |
| 16 | 5A61E6600 | 144 | 3C4CE9601 | 272 | 0354F3D34 | 400 | A02864F39 |
| 17 | 87A588BDD | 145 | C97D31A14 | 273 | 397AB25F5 | 401 | C0CA8314C |
| 18 | 785A5DE89 | 146 | A0D7DB338 | 274 | CCCB3C154 | 402 | A9FE66861 |
| 19 | DD089E169 | 147 | C584E40B9 | 275 | D714391C9 | 403 | 6A6016419 |
| 20 | 77A20B43C | 148 | 56D300E19 | 276 | A679D59F8 | 404 | 9A186A7F9 |
| 21 | 22F70B43C | 149 | FA1B7D58C | 277 | CF4D300D5 | 405 | 304D40CAC |
| 22 | 2D0F1DE88 | 150 | FC7995B4C | 278 | 967873355 | 406 | 954D30061 |
| 23 | D2F0DDE88 | 151 | A50066678 | 279 | D28F375DC | 407 | A92C80E18 |
| 24 | 87259DE88 | 152 | BB44785A4 | 280 | 447712E3C | 408 | A6AB7CFF8 |
| 25 | D270C8BDD | 153 | C57B1BCB9 | 281 | FAA872738 | 409 | C01865534 |
| 26 | 0F550CD2C | 154 | 96F873354 | 282 | A5E1802CC | 410 | 3FE7A5534 |
| 27 | CF60268D5 | 155 | EE91385A4 | 283 | 567999780 | 411 | FF4CCF0B4 |
| 28 | 562CB3F80 | 156 | 116EF85A4 | 284 | FC54CC335 | 412 | 99FF96878 |
| 29 | FF3330EB4 | 157 | 5C7B28DED | 285 | FC6795B34 | 413 | 8BBA61109 |
| 30 | 00CCF0EB4 | 158 | 902E5BCB8 | 286 | 886EDE1A4 | 414 | 2110F445C |
| 31 | 3C52FFCCC | 159 | 823EDC8E4 | 287 | D2F75E288 | 415 | 844262EE9 |
| 32 | C3AD3FCCC | 160 | A981CC334 | 288 | EE69510F0 | 416 | DEEF3445C |
| 33 | F02ADA599 | 161 | 743A1EF08 | 289 | BBC3FB9A5 | 417 | F52FCE6D9 |
| 34 | 443BF87A5 | 162 | 654AB3D81 | 290 | 2DF761E88 | 418 | 875DF4BDD |
| 35 | 997F96879 | 163 | A9533F218 | 291 | D208A1E88 | 419 | B44407845 |
| 36 | 1E16AEF10 | 164 | FC066A74D | 292 | 785DCB7DD | 420 | C982C2B8C |
| 37 | A57F8F0CC | 165 | 3C52E6601 | 293 | 87A20B7DD | 421 | CF4ABF34C |
| 38 | 6661FFCB4 | 166 | CCD525BE1 | 294 | 1EEE92D10 | 422 | F6E2BD874 |
| 39 | ED092EI71 | 167 | 0A7D4E66D | 295 | 932857F39 | 423 | 0354FCF4D |
| 40 | B85C7B424 | 168 | B13EEF8E4 | 296 | C9050178C | 424 | FCAB3CF4D |
| 41 | 47A3BB424 | 169 | AF4E280D9 | 297 | DDF0E2169 | 425 | FF4CD6878 |
| 42 | FF5299879 | 170 | CF32D59F8 | 298 | A0631B214 | 426 | A9FE69A18 |
| 43 | 55F80CD2C | 171 | CF32959F9 | 299 | 937AE818C | 427 | D70DF6229 |
| 44 | 96F82A999 | 172 | A0366BD38 | 300 | C92801738 | 428 | 6357E4F41 |
| 45 | AA6665BE0 | 173 | DEC5B4708 | 301 | C92841538 | 429 | 9518567F9 |
| 46 | 3C52BFCCC | 174 | 1.49E+56 | 302 | B4C4110F0 | 430 | F354F0134 |
| 47 | FF3330EB5 | 175 | F929FE758 | 303 | 44C392D10 | 431 | 8DA0E0A9C |
| 48 | DE6F22CE9 | 176 | 4E275077D | 304 | 8B10A125C | 432 | CA3041B58 |
| 49 | 5A61FFCCC | 177 | F32C959F9 | 305 | 213A34509 | 433 | 2DF73763D |
| 50 | A59E3FCCC | 178 | 659840CAD | 306 | D142484E8 | 434 | 1B0DB5E50 |
| 51 | FF3329678 | 179 | F04B33355 | 307 | BB3BC79A4 | 435 | 22708B7DC |
| 52 | F0CB6A999 | 180 | BE209389D | 308 | FA1B71814 | 436 | DD8F4B7DC |
| 53 | 99FF8F0B5 | 181 | 3F4ABCF4C | 309 | 3602FD78D | 437 | 7DA76377C |
| 54 | 77DA3743C | 182 | 0379EA54C | 310 | 0A1CB27F4 | 438 | C0B566861 |
| 55 | 959F96618 | 183 | 601AD4E0D | 311 | A37B5BE75 | 439 | 632857ED9 |
| 56 | 9961C02B4 | 184 | 1EF712E89 | 312 | 5C849BE75 | 440 | 9CD797ED9 |
| 57 | DD0F1DF68 | 185 | 6F2E715EC | 313 | 6F9D68DED | 441 | A6F9D59F9 |
| 58 | C3D2800CD | 186 | 93506BD38 | 314 | A686300D4 | 442 | 00CCB0CB4 |
| 59 | DD70A2169 | 187 | 9C50542D9 | 315 | C03529A18 | 443 | A6862A7F9 |
| 60 | 5A7FB0CCD | 188 | 95E029A19 | 316 | A9818C134 | 444 | AA66259E1 |
| 61 | 5A61E6601 | 189 | 998029479 | 317 | 6A9FBCF4D | 445 | D7F249C29 |

(continued)

| Index | Midamble Sequence | Index | Midamble Sequence | Index | Midamble Sequence | Index | Midamble Sequence |
|---|---|---|---|---|---|---|---|
| 62 | 697815598 | 190 | BE3913B04 | 318 | 95607CF4D | 446 | 63D02BED9 |
| 63 | 9687D5598 | 191 | 968795799 | 319 | 651840CAC | 447 | 9C2FEBED9 |
| 64 | 4B224463D | 192 | 96E66A9E0 | 320 | 0C2CA5581 | 448 | 96786A998 |
| 65 | F05525998 | 193 | 9A67959F9 | 321 | 8B90A105C | 449 | C32D3FCCD |
| 66 | E188D1368 | 194 | F3D3302D5 | 322 | 213A34708 | 450 | F61D02475 |
| 67 | F04B73354 | 195 | A679959F9 | 323 | D1C2084E8 | 451 | C97ABEB8C |
| 68 | 118F52C89 | 196 | A98196619 | 324 | 148A06DC8 | 452 | 55E643D2C |
| 69 | EE7092C89 | 197 | 567E56619 | 325 | E48DC5228 | 453 | AFD0272D9 |
| 70 | 96663C154 | 198 | 0CD340CA | 326 | EB75C6DC8 | 454 | A036670A1 |
| 71 | A57F99878 | 199 | AC7CAB20D | 327 | 659800CAC | 455 | A07A9B38C |
| 72 | FA2872739 | 200 | DE45F4709 | 328 | CFB2D59F9 | 456 | FCAB69A18 |
| 73 | 9CD0542D8 | 201 | 0F4B55799 | 329 | CF9F95B4D | 457 | 95E033D34 |
| 74 | 0AFD0E66D | 202 | F0B495799 | 330 | A6AB70061 | 458 | 6A1FF3D34 |
| 75 | 9C9B2BDF4 | 203 | A9818C335 | 331 | 6.54E+23 | 459 | FF4CD6879 |
| 76 | 6364EBDF4 | 204 | B45D87BDC | 332 | 9ACAC0E18 | 460 | 304A80F4C |
| 77 | BB25C79DC | 205 | 00D2B0ECC | 333 | 954D3CFF8 | 461 | CFB540F4C |
| 78 | 367AC178D | 206 | FF2D70ECC | 334 | F3FE25534 | 462 | 0564BD78C |
| 79 | C9850178D | 207 | CA1AC1A0D | 335 | 0C01E5534 | 463 | 9F6514E0D |
| 80 | C66482BF4 | 208 | DE6F22EE9 | 336 | 955330218 | 464 | 504998F40 |
| 81 | C9CE7E8A1 | 209 | AF64A71F5 | 337 | 3F79E554C | 465 | 96282475 |
| 82 | A0579B338 | 210 | BB3C045A5 | 338 | 9AAB73FF8 | 466 | AF9B58FF4 |
| 83 | 997F8F085 | 211 | 44C3C45A5 | 339 | C0066574D | 467 | 506498FF4 |
| 84 | F6848EA75 | 212 | FCD48334D | 340 | 998030CB4 | 468 | 9AE015A19 |
| 85 | EE7091369 | 213 | 93CE282A1 | 341 | 998029478 | 469 | 7220DF69D |
| 86 | 3A9D425ED | 214 | 60B054F58 | 342 | 99FF8F1B4 | 470 | 8DDF1F69D |
| 87 | 9037D71B8 | 215 | 9F4F94F58 | 343 | 667FF1CB4 | 471 | C9E33EA15 |
| 88 | 3949BD740 | 216 | F62E1EB20 | 344 | 3CD2E6600 | 472 | 9AB57F019 |
| 89 | 93E328215 | 217 | 537C94E0D | 345 | B12720905 | 473 | 5A61BFCCD |
| 90 | F5D031AD9 | 218 | 5979A5780 | 346 | 82416C49C | 474 | A59E7FCCD |
| 91 | 5F7AA4F8C | 219 | F9D601B58 | 347 | A50070CCC | 475 | F51CCD9F4 |
| 92 | A08564F8C | 220 | EE6907845 | 348 | 991E3FCB5 | 476 | 6349ABF40 |
| 93 | 723E9069C | 221 | C61B7D5F4 | 349 | 2D70B77DC | 477 | 0C5340CAC |
| 94 | 8DC15069C | 222 | 39C9BD741 | 350 | 882261F69 | 478 | 281446FC9 |
| 95 | FF2D26479 | 223 | 567E16618 | 351 | 936328214 | 479 | D7EB86FC9 |
| 96 | FC2B26861 | 224 | A981D6618 | 352 | 0A504E4D8 | 480 | 354FCD4C0 |
| 97 | CF4D2A5F9 | 225 | AFE4A71F4 | 353 | A08524D8C | 481 | 82BED3A9C |
| 98 | D894053C9 | 226 | 39D07D4D9 | 354 | 6364ABFF4 | 482 | F3D36A7F8 |
| 99 | FA853258C | 227 | C62FBD4D9 | 355 | 9350670A0 | 483 | F0CB2A998 |
| 100 | 057AF258C | 228 | 5031E4F41 | 356 | C605325F5 | 484 | FC4D032D4 |
| 101 | E16EFB9A4 | 229 | 335503F2D | 357 | 934E280A1 | 485 | 5601FCF4D |
| 102 | FF4C8F0B5 | 230 | FCD30C2D5 | 358 | A02864D38 | 486 | A9FE3CF4D |
| 103 | A97E73D34 | 231 | DD44348F1 | 359 | 3964BD7F4 | 487 | FF4CD6A79 |
| 104 | 5681B3D34 | 232 | 55E643D2D | 360 | A5E1C02CC | 488 | 270A75FC9 |
| 105 | FF3329479 | 233 | F5D0718D9 | 361 | 99FF8F2B5 | 489 | D8F5B5FC9 |
| 106 | 63C9ABF41 | 234 | 9CA8682D8 | 362 | 876922045 | 490 | C04ACC134 |
| 107 | 367A8178C | 235 | AA7825B99 | 363 | 1EDA44489 | 491 | 534FD4CC0 |
| 108 | C9854178C | 236 | 6C7A97F8C | 364 | EEDD87B69 | 492 | 9062E4074 |
| 109 | EE0F2ED69 | 237 | 938557F8C | 365 | E12584489 | 493 | FACE0DAA1 |
| 110 | 39854166C | 238 | B470DIIDC | 366 | 881161DA4 | 494 | 875DA2368 |

(continued)

| Index | Midamble Sequence | Index | Midamble Sequence | | Midamble Sequence | | Midamble Sequence |
|---|---|---|---|---|---|---|---|
| 111 | 697815798 | 239 | C9CE3EAA1 | 367 | 0A504E6D9 | 495 | C67A8DBF4 |
| 112 | C9633EA14 | 240 | C3B33FCB5 | 368 | 5F7AE4D8C | 496 | D88A4A3C8 |
| 113 | C3D2802CD | 241 | 3C4CFFCB5 | 369 | 9C9B6BFF4 | 497 | 30B2E5780 |
| 114 | AFD0670D9 | 242 | C6D002AD9 | 370 | A97E69818 | 498 | 057AB278C |
| 115 | F04B2A999 | 243 | 87DA22289 | 371 | 956026861 | 499 | FA857278C |
| 116 | 932FD4339 | 244 | 335503D2D | 372 | A6062A5F9 | 500 | DE108BA5C |
| 117 | CC4B2A9E1 | 245 | 0F551A599 | 373 | 6567E5580 | 501 | F564B1BF4 |
| 118 | 873BC89A5 | 246 | C69B3D5F4 | 374 | 874434845 | 502 | 9A18702D5 |
| 119 | 9CD0142D9 | 247 | 3964FD5F4 | 375 | E1F76D288 | 503 | A9018334C |
| 120 | A51E7FCCC | 248 | C03573D34 | 376 | 8843889A5 | 504 | C97D3D58C |
| 121 | SAE1BFCCC | 249 | 3FCAB3D34 | 377 | E10892E88 | 505 | F90332B94 |
| 122 | E1693BA44 | 250 | E191445A5 | 378 | 4B5DF87DD | 506 | 9FB06B159 |
| 123 | 87C4375A4 | 251 | 1E6E845A5 | 379 | B4A2387DD | 507 | A34857120 |
| 124 | 783BF75A4 | 252 | 65E02A619 | 380 | 883C375A5 | 508 | 55E643F2C |
| 125 | C0679AB34 | 253 | 9A1FEA619 | 381 | 445A0463C | 509 | C5484EB21 |
| 126 | D291620F1 | 254 | F33500D35 | 382 | 06567E759 | 510 | 8B45DEF09 |
| 127 | C9A841738 | 255 | 0CCAC0D35 | 383 | AC8314C0C | 511 | BB5A787DD |

Table 8 $N_{FFT}$ = 512/1024/2048, $N_{Tx}$ =2/4/8, Length=72, Reuse=3

| Index | MidambleSequence | Index | MidambleSequence |
|---|---|---|---|
| 0 | AA4B3C198662D4F001 | 256 | EB0A791C827EC4A250 |
| 1 | F019AA8D3C380266B5 | 257 | B158AFA8282C1636E4 |
| 2 | 992D0F1FFAA3483D98 | 258 | D86C0A3AEEB75C6FC9 |
| 3 | A5333FE7869D54CFE0 | 259 | E4723AE28281409FB1 |
| 4 | 995280DFFAACB3C398 | 260 | D813B5DAFEB8A393C8 |
| 5 | CC079A5550061A96CC | 261 | 8D469F7054120EC49D |
| 6 | SA4CC018769550CFE1 | 262 | 1B0DC53D6281409DB1 |
| 7 | EE5A088F11EA274911 | 263 | EB8A393C827EC4A250 |
| 8 | B408DE1BABB0F1DDA5 | 264 | B158AFA838241634E4 |
| 9 | DD3C3B897D2BBB8689 | 265 | D86C4A1AEEBF5C6FC8 |
| 10 | E1220BS1111DA376F1 | 266 | E4723AE29281449DB1 |
| 11 | DD4384696D24447A89 | 267 | D813F5FAFEB8A393C8 |
| 12 | 8816AEE3C786ED2FDD | 268 | 8D46DF5044120AC49D |
| 13 | 1E5DB4AEF115A774F1 | 269 | 1B0DC53D7281409FB0 |
| 14 | EEE907A45443C6D311 | 270 | E1772D0892D911E311 |
| 15 | B43B9110FE111445A5 | 271 | BB25BBBC288BC775A4 |
| 16 | DD0F34A2388A5A1E88 | 272 | D2111E0EEE108D2E88 |
| 17 | E111045A44B446EEF0 | 273 | EE0F2ED6922695DCF0 |
| 18 | DD70CB622885A1E088 | 274 | D26EE1CEEE1772D089 |
| 19 | 8825E1E892270CB7DC | 275 | 873B8B4444BDDF87DC |
| 20 | 1E6EBB85A4B446EEF0 | 276 | 11709109622695DCF1 |
| 21 | AA4B3C19866AD0F200 | 277 | AA7825B99661E56801 |
| 22 | F019AAAD2C380666B4 | 278 | F02AB30D2C3333FEB4 |
| 23 | 992D0F1FFAA3483F98 | 279 | 991E169FFAA879A798 |
| 24 | A5333FE7869D54CFE1 | 280 | A5002667869E6555E0 |
| 25 | 9952B0FFFAACB3C398 | 281 | 9961E97FFAAF865B98 |
| 26 | CC079A5550061E96CD | 282 | CC3483D550052B0ECC |

(continued)

| Inde | MidambleSequence | Index | MidambleSequence |
|---|---|---|---|
| 27 | 5A4CC018769D54CFE0 | 283 | SA7FD998669E6155E0 |
| 28 | F929B2AC006D6328C0 | 284 | ED5C049701DA438891 |
| 29 | A37B6438BA3FB1BE75 | 285 | B70E9203AB80951E24 |
| 30 | CA4F818A7CA4FFE758 | 286 | DE3A77B17D13DF4508 |
| 31 | F651B152109AE71521 | 287 | E2244769112DC3B570 |
| 32 | CA303E4A7CAB001959 | 288 | DEC5C8517D1420BB09 |
| 33 | 9F6514C0D601AD4C0D | 289 | 1D5BF896F125C3B570 |
| 34 | 092E0E8DE09AE31521 | 290 | EB6C06E5114EC39250 |
| 35 | DD69622F12D115E110 | 291 | B13E9051AB141106E4 |
| 36 | 87BBF4BBA883C377A4 | 292 | D80A35C37D875F5DC9 |
| 37 | EE0F11096E18892E88 | 293 | E414051B01B147AFB0 |
| 38 | D21121D1022E91DCF1 | 294 | D875CA037D80A0A3C9 |
| 39 | EE70EEE96E1776D289 | 295 | 8D20A089C72A09F49D |
| 40 | BBA5C443C4BDDF85DD | 296 | 1BEBBAC4E1B943AFB0 |
| 41 | 2D6E9E0EF22695DCF0 | 297 | FA28318D8364E42B40 |
| 42 | AA7825998669E16A00 | 298 | A07AE739393632BFF4 |
| 43 | F02AB30D2C3333FCB5 | 299 | C94E02ABEFA57CE6D9 |
| 44 | 991E169FFAA079A798 | 300 | F550725383936014A1 |
| 45 | A5002647969E6555E1 | 301 | C931BD4BEFAA8318D9 |
| 46 | 9961E97FFAA7865998 | 302 | 9C6497E155002E4D8D |
| 47 | CC3483D5400D2B0ECC | 303 | 0A2F8D8C73936016A0 |
| 48 | 5A7F99B8669E6557E0 | 304 | C97AA7340368567340 |
| 49 | EE0F11097E18892C89 | 305 | 93283180B93284E7F4 |
| 50 | D21161D1022691DCF1 | 306 | FA1CD4327FA9CABCD8 |
| 51 | EE70EEE97E1F76D089 | 307 | C602A4CA0397D64EA0 |
| 52 | BBA5C463D4BDDF85DC | 308 | FA636BF26FA63140D8 |
| 53 | 2D6E9E2EE22E91DCF0 | 309 | AF360178C50498158D |
| 54 | AA4B331EISAB30F201 | 310 | 397D1B15F397D64CA0 |
| 55 | F019ASAAAFF9E664B5 | 311 | CC4B2A9E03CB316A00 |
| 56 | 992D4018696AA83D98 | 312 | 9619BC0AA991E7FCB5 |
| 57 | A53330E0055CB0CDE0 | 313 | FF2D19B86F0AA9A598 |
| 58 | 9952BFD8796553C398 | 314 | C3332940133CB555E1 |
| 59 | CC079552C3CFFA94CD | 315 | FF52A6587F05565998 |
| 60 | 5A4C8F1FF55CBOCFE1 | 316 | AA078CD2C5A7FFOCCC |
| 61 | E15A3B8882D3C08B10 | 317 | 3C4C96BFE33CB555E1 |
| 62 | BB08ED1C2889161FA4 | 318 | CC4B2A9E03CB316A01 |
| 63 | D23C088EEE125C4488 | 319 | 96198C0AA999E3FEB4 |
| 64 | EE223856922C44B4F1 | 320 | FF2D59986F02ADA799 |
| 65 | D243B76EFE1DA3BA88 | 321 | C3336940133CB555E0 |
| 66 | 87169DC444B70EEFDC | 322 | FF52E6586F05525999 |
| 67 | 115D8789722C40B4F1 | 323 | AA078CD2C5A7FFOCCD |
| 68 | EB0A391C9276C0A250 | 324 | 3C4CD69FF33CB555E0 |
| 69 | B158AFA8282C1236E4 | 325 | FA1B31815504E5B340 |
| 70 | D86COA1AFEBF586FC9 | 326 | A049A715EF5E3325F5 |
| 71 | E4723AE28281409DB1 | 327 | C97D028739C57D7CD8 |
| 72 | D813B5DAFEB0A791C8 | 328 | F563325F55F3658CA0 |
| 73 | 8D469F5054120EC49D | 329 | C902BD4729C28680D8 |
| 74 | 1B0DC51D7289449FB0 | 330 | 9C5797CD83602BD78C |
| 75 | F066259545A334F200 | 331 | 0A1CCDAOA5FB658EA1 |
| 76 | AA34B301EFF1E666B4 | 332 | E1772D2882D111E110 |

(continued)

| Inde | MidambleSequence | Index | MidambleSequence |
|------|------------------|-------|------------------|
| 77 | C30056933962A83F99 | 333 | BB25BBBC3883C775A4 |
| 78 | FF1E664B455CB0CDE0 | 334 | D2111E0EEE18892C89 |
| 79 | C37FE953296553C398 | 335 | EE8F2ED6822695DCF0 |
| 80 | 962A83D983CFFA94CD | 336 | D26EE1EEEE1F76D288 |
| 81 | 00619994B554B4CDE0 | 337 | 873B8B4454BDDF85DD |
| 82 | FA4E4D8A10A3631940 | 338 | 11709109722691DEF0 |
| 83 | A01C9B3EBAF1B58DF5 | 339 | BB25FBBC3883C377A4 |
| 84 | C9283E8C7C6AFBD6D8 | 340 | D2111E0EFE10892E88 |
| 85 | F5360E741054E724A1 | 341 | EE8F2EF6822691DEF1 |
| 86 | C957814C7C65002AD8 | 342 | 873B8B6444B5DF87DD |
| 87 | 9C02ABE6C6C7A97F8D | 343 | 11709109722E95DCF1 |
| 88 | 0AC9B18BE05CE326A1 | 344 | EE0F11097E18892E89 |
| 89 | FC4D15A600CB569B80 | 345 | D29121F1122691DEF1 |
| 90 | A61F8312BA99840F35 | 346 | EEF0AEC96E1776D088 |
| 91 | CF2B26807C0ACA5618 | 347 | 2D6E9E2EF22695DCF1 |
| 92 | F33556581034D6A661 | 348 | DD4474AF02DBC08910 |
| 93 | CF5499606C0535AA19 | 349 | 8716A23BA881121DA5 |
| 94 | 9A01B3CAD6A798FF4C | 350 | EE2207A97E125C4489 |
| 95 | 0C4AA987F034D6A460 | 351 | D23C7751122C44B4F0 |
| 96 | E46BB92511B1479051 | 352 | EE5DB8696E15A3B889 |
| 97 | BEB92F91ABE39504E4 | 353 | BB0892E3C4B70EEFDC |
| 98 | D70D8A237D70DF5DC9 | 354 | 2D43888EE22444B4F1 |
| 99 | EB93BAFB1146C7AFB1 | 355 | CF4D302D465181A981 |
| 100 | D77235E36D7720A1C9 | 356 | 951FA6B9EC03533F35 |
| 101 | 82275F49C7DD89F49C | 357 | FC2B030B3A90196619 |
| 102 | 146C0504F146C3AFB0 | 358 | C03533D356A6019660 |
| 103 | D86C35C51276C0A250 | 359 | FC54FCEB3A97E29818 |
| 104 | 823EE371B8241236E4 | 360 | A9019641803D4BCD4D |
| 105 | EB0A06C37EBF586FC9 | 361 | 3F4A8C0CB6AE059461 |
| 106 | D714363B1281449DB1 | 362 | F9560D6C106D6328C1 |
| 107 | EB75F9237EB0A791C8 | 363 | A3049BF8AA37B1BC75 |
| 108 | BE209389C41A0AC49D | 364 | CAB03E4A7CA4FBE559 |
| 109 | 286B89C4F281409DB1 | 365 | F62E0E920092E31720 |
| 110 | EB6C451B11B1439251 | 366 | CACF81AA7CA3001958 |
| 111 | B13E938FBBEB9104E5 | 367 | 9F1AEB00C601A94E0D |
| 112 | D80A361D7D70DF5FC9 | 368 | 0951B14DF09AE31520 |
| 113 | E41446C50146C7AFB1 | 369 | E177748444B225E311 |
| 114 | D87589FD6D7720A3C9 | 370 | BB25E210EEE0F777A5 |
| 115 | 8D20A357D7DD8DF49D | 371 | D21107822873BD2E88 |
| 116 | 1BEBB93AF146C7AFB1 | 372 | EE0F777A5445A1DCF1 |
| 117 | EE5A07889223C34B10 | 373 | D26EB862287C42D088 |
| 118 | B408911C287115DDA4 | 374 | 873BD2C882DEEF87DD |
| 119 | DD3C348EFEE25B8688 | 375 | 1170C885A44DA5DEF0 |
| 120 | E122045682DC4374F1 | 376 | F91AAB2C106E52B2C1 |
| 121 | DDC38B4EFEE5A07889 | 377 | A3483D98BA34842474 |
| 122 | 8816A1C4444F092DDD | 378 | CA7C982A6CA7CE7F59 |
| 123 | 1E5DBB8972DC4774F1 | 379 | F662A8F20099D68F20 |
| 124 | D86886051271436250 | 380 | CA0367EA6CA0318158 |
| 125 | 82392091A82B91F4E5 | 381 | 9F560D40C60298D60C |
| 126 | EB0D85236EB0DFAFC9 | 382 | 091D172DF091D68D21 |

(continued)

| Inde | MidambleSequence | Index | MidambleSequence |
|---|---|---|---|
| 127 | D713B5DB128EC75DB1 | 383 | ED8EAE09112F16E291 |
| 128 | EB723AE36EB72051C9 | 384 | B75C389DBB75C47424 |
| 129 | BE275049C41D89049C | 385 | DE689D2F6DE68E2F09 |
| 130 | 286C0A04F286C35FB0 | 386 | E276ADD701D092DF71 |
| 131 | FC06268D556534C180 | 387 | DE1762CF6DE171D309 |
| 132 | A654B039EF3FE65535 | 388 | 8B420845C743D8865C |
| 133 | CF60158B39A4ACOE18 | 389 | 1D091208E1D096DF70 |
| 134 | F37E65734592B4FE61 | 390 | E1697B8444B3C51311 |
| 135 | CF1FAA4B39A357F018 | 391 | BB3BAD30EEE11385A5 |
| 136 | 9A4A80C18301FAA74C | 392 | D20F088228725DDC88 |
| 137 | 0C019AACA59AB4FC61 | 393 | EE11385A5444452CF0 |
| 138 | EE0F2D28822691E311 | 394 | D270B762287DA22088 |
| 139 | B45DBB9C287C4775A5 | 395 | 87259DC892D70F75DD |
| 140 | DD695E0EEEE70D2E89 | 396 | 116E8785A444412EF0 |
| 141 | E1772ED682D111DEF0 | 397 | E188F4BBBEE8F377A5 |
| 142 | DD16A1CEFEEOF6D088 | 398 | 883C11097873B92E88 |
| 143 | 88438B4454425F85DC | 399 | B42261D10445A1DCF1 |
| 144 | 1E08912972D115DCF1 | 400 | 8843AEE9787C42D288 |
| 145 | F550318D839B602941 | 401 | DD168443D2DEEB87DD |
| 146 | AF02E71929C9B2BDF4 | 402 | 4B5DDE2EF445A1DEF0 |
| 147 | C63602ABFF52FCE4D9 | 403 | E2712DC911DF112291 |
| 148 | FA2832738364E014A1 | 404 | B823BB5DBB8DC3B625 |
| 149 | C649BD6BEF55031AD8 | 405 | D1171ECF7D1E8DED09 |
| 150 | 931C97C155FFAA4D8D | 406 | ED096E171120911D71 |
| 151 | 05578D8C6364E416A0 | 407 | D168A10F7D11761108 |
| 152 | A9F9E6B80560626B80 | 408 | 843D8B85C7BBDB445D |
| 153 | F32B302CAF32B0FD35 | 409 | 127691C8F128911F71 |
| 154 | 9A1F95BE69A1FAA419 | 410 | F92981B58CAB0328C0 |
| 155 | A601A546159FE65461 | 411 | A37B570126F1D5BE75 |
| 156 | 9A602A5E79A6055A18 | 412 | CA4FF293F0629BE759 |
| 157 | CF3500F4C304A80D4D | 413 | F651826B9C54871521 |
| 158 | 597E1AB9E597E25461 | 414 | CA300D53E065601B58 |
| 159 | ED23B8890125C38A90 | 415 | 9F6527D95AC7C94E0D |
| 160 | B7712E1DAB77151E24 | 416 | 092E3D946C54871720 |
| 161 | DEC58B8F6DE45F4509 | 417 | E16907BASBB4451111 |
| 162 | E25BBB5711DA47B571 | 418 | BB3B910EE1E69787A4 |
| 163 | DE3A346F7DEBA0BB08 | 419 | D20F34BC3775DDDC89 |
| 164 | 8B6F1EE5D7410DEC5D | 420 | EE1104444843C52EF0 |
| 165 | 1D240488E1DA47B571 | 421 | D2708B7C2772222089 |
| 166 | ED5C049701D2478A90 | 422 | 8725E1D68DD08B75DD |
| 167 | B70E9203AB80951C25 | 423 | 116EBB9BBB43C52EF0 |
| 168 | DE3A37B17D13DF4508 | 424 | DD440B4F1D2BC08B11 |
| 169 | E2240769012DC3B570 | 425 | 87169DDBB771161DA5 |
| 170 | DEC5C8517D14208908 | 426 | EE22384961E2584489 |
| 171 | 8B10E2DBC7B68DEE5D | 427 | D23C08911DDC40B4F1 |
| 172 | 1D5BF896E125C7B771 | 428 | EE5DC7A971E5A3B888 |
| 173 | EEE9112F11E916D310 | 429 | BB08AD23CB4F0EEFDC |
| 174 | B43B879BBBBBC047A5 | 430 | 2D43B74EEDD444B4F1 |
| 175 | DD0F22097D288A1E89 | 431 | F56342B8C93501B140 |
| 176 | E11112D1011E92ECF1 | 432 | AF31942C736FD327F4 |

(continued)

| Inde | MidambleSequence | Index | MidambleSequence |
|---|---|---|---|
| 177 | DD70DDE97D2775E088 | 433 | C605319EA5FC997CD9 |
| 178 | 8825B763C78DD8B5DC | 434 | FA1B0146D9C2858CA0 |
| 179 | 1E6EEDOEE11E96EEF0 | 435 | C67A8E5EA5F36680D8 |
| 180 | F563682D9390558140 | 436 | 932FE4D41F51C8D58C |
| 181 | AF31FEB939C28327F4 | 437 | 0564BE9939C2858CA0 |
| 182 | C6051B0BFF59C97CD9 | 438 | A9531594DCF600C181 |
| 183 | FA1B2BD3936FD18EA1 | 439 | F301830076ACD65535 |
| 184 | C6FAA4EBFF563682D9 | 440 | 9A352692B03F980E19 |
| 185 | 932F8E4155FC9FD58D | 441 | A62B164ADC0180FE60 |
| 186 | 0564940C636FD18EA1 | 442 | 9A4A9952A03067F218 |
| 187 | F353700D459061A981 | 443 | CF1FB3D81A92CEA74C |
| 188 | A901A6B9FFC2B73D35 | 444 | 5954A9952C0980FC61 |
| 189 | C03503082959F96619 | 445 | DD43888F0D24474B10 |
| 190 | FC2B33F34567E19461 | 446 | 87111E3BA77E95DFA4 |
| 191 | C04ABCCB3956029819 | 447 | EE25FB8961EDDB8488 |
| 192 | 951F964193F4AFCD4D | 448 | D23B8B511DDBC376F0 |
| 193 | 03548C2CA567E19460 | 449 | EE5A044961E2247A88 |
| 194 | E177748444B225E111 | 450 | BB0F2EC3CB408D2FDC |
| 195 | BB25A210FEE8F377A5 | 451 | 2D44348EEDDBC774F1 |
| 196 | D21107822873BD2C88 | 452 | E15A07B68DD4448B11 |
| 197 | EE0F775A5445AIDCF0 | 453 | BB0891223786961DA5 |
| 198 | D26EB862287442D089 | 454 | D23C3490F11DD84489 |
| 199 | 873B92E882D6EB85DD | 455 | EE2204488D23C4B6F0 |
| 200 | 117088A5A445A1DCF1 | 456 | D2438B50F11223BA88 |
| 201 | B43B9110FE191047A5 | 457 | 8716A1FA4BB88EEFDC |
| 202 | DD0F74A2388A5E1C89 | 458 | 115DFBB77D2BC0B6F1 |
| 203 | E111445A44BC46ECF0 | 459 | FC4D558600CB529980 |
| 204 | DD70CB622885A5E289 | 460 | A61F8332AA91800D35 |
| 205 | 88A5A1C8822708B7DC | 461 | CF2B26A07C0ACA5618 |
| 206 | 1E6EBB85B4B446EEF0 | 462 | F33556781034D6A461 |
| 207 | BB5A222F04B225E111 | 463 | CF54D9606C0531A818 |
| 208 | E188F4BBBEE0F777A5 | 464 | 9A01B3EAC6AF98FD4C |
| 209 | 883C11096873BD2C88 | 465 | 0C4AA9A7F034D6A461 |
| 210 | B42221D1144DA5DCF1 | 466 | E16912EFOEE9111110 |
| 211 | 8843AEC9787442D288 | 467 | BB3BC47BB4BBC785A5 |
| 212 | DD168443D2D6EF85DC | 468 | D20F21C9722089DE88 |
| 213 | 4B5D9E2EF445A5DCF1 | 469 | EE1111110E16952CF1 |
| 214 | F9032B1583565182C0 | 470 | D2709E29622F722088 |
| 215 | A351BD813904871474 | 471 | 8725F4A3D88DDF75DD |
| 216 | CA651813FF97CD4D59 | 472 | 116EAEEEEE16952EF1 |
| 217 | F67B28EB83A1D1BD21 | 473 | BB5A1116987441E310 |
| 218 | CA1AE7F3EF9032B158 | 474 | E10887A222269377A5 |
| 219 | 9F4FCD79453A9FE60D | 475 | 88BC2210E4BDD92E89 |
| 220 | 0904971463A1D5BD20 | 476 | B42252C8988BC5DEF0 |
| 221 | AA4B3C398662D0F001 | 477 | 88439DD0F4B222D288 |
| 222 | F019AAAD3C300266B4 | 478 | DD96B77A4E108F87DD |
| 223 | 992D0F1FFAAB483F99 | 479 | 4B5DED17688BC5DCF0 |
| 224 | A5337FC7869554CFE1 | 480 | E17712C88D2115E110 |
| 225 | 9952F0DFFAA4B3C198 | 481 | BB25847C3773C775A5 |
| 226 | CC079A55500E1A96CD | 482 | D21121CEE1E8892C89 |

(continued)

| Index | MidambleSequence | Index | MidambleSequence |
|---|---|---|---|
| 227 | 5A4CC038669550CDE0 | 483 | EE0F11368DDE91DCF0 |
| 228 | C957B194036A831941 | 484 | D26EDE0EE1E772D089 |
| 229 | 93056700A930558FF5 | 485 | 873BB4844B45DF87DC |
| 230 | FA3182B26FA31BD4D9 | 486 | 1170AEE96DDE95DEF1 |
| 231 | C62FB26A13950726A1 | 487 | FC4D030D5569829B81 |
| 232 | FA4E3D527FA4E428D8 | 488 | A61FD599EF33500D35 |
| 233 | AF1B57F8C506497D8C | 489 | CF2B302B39A01E5419 |
| 234 | 39500D95F3950326A0 | 490 | F33500D3559E02A661 |
| 235 | C957F194036A831940 | 491 | CF548FEB29A7E5AA19 |
| 236 | 93852700A930558DF5 | 492 | 9A01A561830548FD4D |
| 237 | FAB182927FAB1BD4D8 | 493 | 0C4ABF2CA59602A461 |
| 238 | C62FF24A03950324A1 | 494 | ED71049C547A42E091 |
| 239 | FA4E7D526FACE028D8 | 495 | B7239208FE28907625 |
| 240 | AF9B17D8C5064D7D8C | 496 | DE9777BA28BBDA2D09 |
| 241 | 39500D95F3950724A0 | 497 | E2090742548DC6DD71 |
| 242 | ED23B8890125C38A91 | 498 | DEE8887A38B421D109 |
| 243 | B7716E1DAB77111C25 | 499 | 1D76B89DB485C6DD71 |
| 244 | DEC58B8F7DEC5F4708 | 500 | A337D70DEF69D02474 |
| 245 | E25BFB5701DA43B570 | 501 | CA0332BF29F29E7F59 |
| 246 | DEBA346F6DEBAOB908 | 502 | F61D026745CC868F20 |
| 247 | 8BEF1EC5C7410DEC5C | 503 | CAFC8D7F39F5618159 |
| 248 | 1D240488F1D247B570 | 504 | 9F29E7F5935FCCD40D |
| 249 | A9533F01865350C380 | 505 | 0962FD98A5C4828D21 |
| 250 | F301A9952C09825535 | 506 | DD444B4F1D23C08B11 |
| 251 | 9A350C07FA9AC80E19 | 507 | 87169DFBA779121DA4 |
| 252 | A62B3CFF96ACD0FE60 | 508 | EE22384961E2584688 |
| 253 | 9A4AB3C7FA9D33F019 | 509 | D23C08B10DD444B6F1 |
| 254 | CF1F994D50379AA74C | 510 | EEDD878961EDA3BA88 |
| 255 | 5954830066A4D4FC60 | 511 | BB08AD23DB470EEDDD |

Table 9 $N_{FFT}$=1024/2048, $N_{TX}$=2/4

| Index | Midamblesequence | Index | MidambleSeqq |
|---|---|---|---|
| 0 | 0332FF134A9E7D5A600C35430D5A6E069B81 | 256 | 0C355647E0CB569B80F3CAA99800C3529B80 |
| 1 | 0354D59F8CFB2E6A600CD369A19C0B55AB81 | 257 | 0564D4138F59CE82D836FD272A1C6851B140 |
| 2 | 110F785DCBBDA52E8822697484588BC5E311 | 258 | 5534D68CC3387CF200AA4B568CCCC780F001 |
| 3 | 0379 D594CA9ACFF2183060668D59AB54C381 | 259 | 05056BD4036E3672D8C96358CD8FA8554141 |
| 4 | 1E25C4576E1DA7BA882DBC089102D3C08B10 | 260 | 1223C4971ED5C04B71E25BF8A901D2438890 |
| 5 | 001E568CCCCF865854AA487C198662D0F001 | 261 | 0306594D4FC8666AD4A95373D8056530C181 |
| 6 | 36054D81463AFE7340C9FA8D8149C5027340 | 262 | 140DF61AEEBF249E501472760511147236051 |
| 7 | 3334D541ECCCB6ABE03C3316A013CB356A01 | 263 | 4723D1D70B8A3EE37048246DE91B7A452091 |
| 8 | 5507D987899EIEABE05A0065B9996E656801 | 264 | 5031D8CA05FC9DB340AFCE18CA0A0361B340 |
| 9 | 1E0F488444BDA5DF10E18F77645B45A62310 | 265 | 0A0557D40C6E364ED839635B2D9F50568140 |
| 10 | 1276D1D7012896E371E28EADC91E2F152291 | 266 | 5534C007866AD733E0A5CCBC19896550F200 |
| 11 | 552D5992D994B2A8B40F000F399C3663C201 | 267 | 032B6A5F8CFCD596600C5369819C0B55AB81 |
| 12 | 117752D691E0F11088DD9121CF1D26922311 | 268 | 33334F12C99E665A780FAD00354A5F86AA01 |
| 13 | 110F4B444EE8F74A44BB5A61D10445A1E111 | 269 | 0F2AD68013C3325998C3CCA5999F05516A01 |
| 14 | 22114B5A477C45E2F0D2E93764587BC62310 | 270 | 060354D58CAE567EC0F9036B3583565180C |
| 15 | 002D59878F0D565B98CC4B6ABE13CB356801 | 271 | 112247968E1DA7BA89DD4434AF12D3C48911 |
| 16 | 1E0F4B5A411F748A44B45A61CF0BB2222111 | 272 | 0F34CF0B45599D9A00F0CB4F0B4AA6619800 |
| 17 | 002D59878F0D565B98CC4B6A9E03C3316801 | 273 | 562B40DF8A6D37CE1865CD4C06195B530180 |
| 18 | 5601D959EA9FE66A6159065AB8159065AB80 | 274 | 333343CB499E6697E03CCB00354961E2A800 |
| 19 | 33334F12C0FAD40354996625A78A5F86AA01 | 275 | 0557CD938FAA84DB3839C9C2B40C6B642B41 |
| 20 | 1111479A5E1693B844BB442D2F14B3C51310 | 276 | 3032DA87E30CD5AB80CFCD25580304D1AB80 |
| 21 | 0C2CC314C6A9FDAB80F3530334C95E01A980 | 277 | 4723D1D71485B92090B8DC11D71B72412291 |
| 22 | 5534D68CC009E7C39899D2E5B55CCF80F201 | 278 | 037E4301865CD5AAD4A9AB29B4DCF9870380 |
| 23 | 1125C88F0EEDA48AF0E1DDB49101E2234B10 | 279 | 0F34CF084008373355A561A59E1AA6619801 |
| 24 | 05054D98CC9E37EA14AFD0672D963B654340 | 280 | 03066A54D56533F018CFE0594D49AB50C181 |
| 25 | 3334D541E3CB356A00CC4B6A9E03C3316801 | 281 | 0306594D4FC8666AD4A95373F8156D34C181 |
| 26 | 05284E4D8FAA871AD9C94E7D54136CE42941 | 282 | 110F6ED682D9161F10EE8F11168D2111E310 |
| 27 | 443BD2DOF4B3C11110BB446D2F04BBC51110 | 283 | 061AC1995F96501994ACCFEB0C053B06B0C1 |
| 28 | 1E16D2CF011EED1310E16952EF1EE9151110 | 284 | 1276C743A47DC52290ED09789C447DC52291 |
| 29 | 0332D5860F3CAE9B80FCCD15A610CB569B80 | 285 | 037E4C06059D35AAD4A92B26B34F38670380 |
| 30 | 223BCB4F02DC3C8B11DD440B6F1D2BC48911 | 286 | 1E25CB4F0E1DA4B6F0115DC8B11EEA248911 |
| 31 | 120EC49C4EDF144BC4B85BEE09047242E091 | 287 | 1BODCA1AE1BF24A250E47275C501B720A051 |
| 32 | 55335692C33804F3E0A54B6A8CCC37833001 | 288 | 1116C7844BBC3ED310EE6947844443C2D111 |

(continued)

| Index | Midamblesequence | Index | MidambleSeqq |
|---|---|---|---|
| 33 | 562CD594C9ACAE6AD403067F018CF600C181 | 289 | 4425DDD0E4BA25E310BB5A620F04BA25E311 |
| 34 | 5601D946056FE66A60A6F9A5580A6061AB80 | 290 | 0629CD4C0F9D64D6C1F9A9B28C006D6728C1 |
| 35 | 5632D64D503183CD80A932A9AD5FC1843380 | 291 | 1E16C4444B4C3EEF101E697B844B43C11111 |
| 36 | 3602D8CA039FADB340C97D58EA1C6851B141 | 292 | 36054D81463AFE7340C97ACD8149C5027141 |
| 37 | 1D0ED216E1DF152291E2716DE901DF152290 | 293 | 2216DDCF02D9161F10DD16E22F1D2915E111 |
| 38 | 4425DDCF0BBA5E22F04BA221D10B4221E310 | 294 | 0C2CD64183FB565780F32CE9818C0351A981 |
| 39 | 562CD94D4038673F80A9ACA68D5FC864C380 | 295 | 032CD5818CFCAE6B80FCD315818303526B80 |
| 40 | 562CD594C03867F2189A4AE6AD5CFE04C181 | 296 | 1E22478882DBBF4B10E15D87A88D24434B10 |
| 41 | 3631CD9380AAFC2B40C94E4D938F55002941 | 297 | 05284E4D8FAA871AD8C94E7D540364E02941 |
| 42 | 0379D594C65CACC380FC065594C9AB54C381 | 298 | 1E08D2D762D915E310E1776D2882D111E110 |
| 43 | 361CC141463B66BF40C91CFE8149C3614141 | 299 | 0564C298C36FD71A15AF31A80D99C285B140 |
| 44 | 0F1E5A4B4A5CB70FE0006659955AAB373201 | 300 | 0F2D4CCCC3CCB40354A5F866599969E6A801 |
| 45 | 5534D68CC99D2E5B54001E7C198CC780F001 | 301 | 3032CFD2ACFCD702D565981A98165185AB81 |
| 46 | 0379D594C30E066AD5A9ACFF2189AB54C181 | 302 | 0354D959EFCAB66A600C535A9800C531A981 |
| 47 | 1D244756E1DA478A90E25BF88901D2438891 | 303 | 037E5654CA9AB7CE1830181AAD49ACD30381 |
| 48 | 067CC180C35E572894ACA9EB3599FB0182C | 304 | 0531C28D9C957B1B41FA4E02AD936A871B41 |
| 49 | 0C065A8D459D34FF80F386256D5A6D370380 | 305 | 051B54138F5E3682D8C97D670A039055B140 |
| 50 | 5519D9800A5E1E5BE05A1E659E0AA6619801 | 306 | 051CD40D8C9FAE7340FAE3142D8368567341 |
| 51 | 560655818659FE6B80A9F9958189A6026B80 | 307 | 3631CE4D905283D540C931B1AD9FAA802941 |
| 52 | 1209789C447DC6DE90ED09475C4B85C12091 | 308 | 1116EED0E1E916D310EE69112F01E916D310 |
| 53 | 33005A4B499D570FE03C7819B54962D73000 | 309 | 35304D53ECACFF2AC035B032AC135B032AC0 |
| 54 | 00334F0B4F0CB73354AA66659E05A1E19801 | 310 | 3631C14A039B67D740C931FE8A0C63602941 |
| 55 | 1111785A4EE9147BA44B3C6EF11B4BC51111 | 311 | 110F775A444DA622F0E1774B444B4221E111 |
| 56 | 5632C0C6056CD7F260A64AFCD80A63503181 | 312 | 1125F750EEEDA48AF01EA2349101E2234B10 |
| 57 | 332ACF0B46987D9A00CC554F0B596F859A01 | 313 | 3631C14A036CE7EAA0C6C9BD741C6B642940 |
| 58 | 051B4E414FA9B71A14AF4E64F4150CE5B341 | 314 | 552D5992C99CB6AAB40F800F198C3663C200 |
| 59 | 037E4301865CD5AAD4A9AB69B4DCF9830380 | 315 | 562CD94D403F9CC380A953596D5FC860C381 |
| 60 | 1E25CB4F011DDC8B10E15A4B4F1EEA248B11 | 316 | 333355400C3CB697E03C4B569E0CC332A801 |
| 61 | 1B0DCA0501BF275E50E40DF5C50E4720A051 | 317 | 0F2D4CCCCA5F8667983C4B00355961E6AA01 |
| 62 | 1413C6C50EB93F9250EBEC06C50146C39250 | 318 | 057D4E58C369B42A14AF2864CD89C4E28141 |
| 63 | 00664F1E05ACB59B54AAB3258B5F01E33000 | 319 | 11774783CDD9174BA44B5A51288873C22110 |
| 64 | 057D58D38C99B6BEA00A851B0D8C66328340 | 320 | 0F34C00CC5A9E6AB99C352B315496F819800 |
| 65 | 0A36428D839AFF1B40F5C9828D8C65071940 | 321 | 120EFB43AEDF144BC447A42E29147A46E290 |

230

(continued)

| Index | Midamblesequence | Index | MidambleSeqq |
|---|---|---|---|
| 66 | 5601D959E59865AB80A97E6686059061A981 | 322 | 331E43C0099CB69754664B16B54CC1E3C200 |
| 67 | 55005A47899E6697E05AF819B99969E6AA00 | 323 | 051B7D58CFA9B42B8D63A824D409CA85B340 |
| 68 | 1E0F52D68E18F6D36822115DF11DD1122110 | 324 | 0A1CCE4145FC9DB340F5630E614A0B65B141 |
| 69 | 05057258D36633E814AF5018ED99C3654340 | 325 | 1E1152CEE1E916D310E16EED3111E916D111 |
| 70 | 05284D938C9CE7EAA0F5D0318D8393602B40 | 326 | 5329D813E53D6582C0AC5667CC05356180C1 |
| 71 | 2216CB44477BC61F11DD96B4A4588BC1E111 | 327 | 0354D65E630CD5AB80FCAB69A19304D1AB80 |
| 72 | 06034D594ACD667EC0F9037299553D6582C1 | 328 | 0367D652A56CD43380FC1869AD4564D03180 |
| 73 | 0306594D4A9D373F80FC8626AD556D34C380 | 329 | 5632C0C60A6CAFCF8156CD3F061A63503181 |
| 74 | 112247968E1DA7BA89DD4434AF02D3C08B10 | 330 | 351AD813E35E5582C0CAE527CC03565182C0 |
| 75 | 5329D4D5860B067EC0ACA9AB1589F30182C0 | 331 | 0F34CCCAAF0CB733545A1E598005A1E19801 |
| 76 | 223BC89102DBC74AF0D2C3B4AF0DD4408B10 | 332 | 0A2FCE4D8C6C9FD7400A5031AD8C6B642B41 |
| 77 | 1223F896F125C38890ED5C07690125C78A91 | 333 | 1276C743A47DC52290ED09789C4475C12091 |
| 78 | 0F1E5692D553300198C3F8258B599D533001 | 334 | 0367D593459CAC3380FC1855934A6B543381 |
| 79 | 361CD8CD8C9E358ED8057AD4140FA0514141 | 335 | 1276D1D70E28EEDE9112092E370E27112291 |
| 80 | 0318564D4A9CD7CF80FC9829AD556CD43380 | 336 | 03187F060A9CD55B345935698D4F36003181 |
| 81 | 1111479A4E1E97BA44BBC42D2F14BBC51310 | 337 | 443BD2CF0B4C3EEF1044446D2F1B4BC51111 |
| 82 | 2216CB44477BC61F10DD96F4A4488BC1E310 | 338 | 002D7312DAA78198783C333C15596E616A01 |
| 83 | 067CD4D58359A1D82C0F90354F59CAE5580C1 | 339 | 1111479A4BBC46D2F0E1697B8444B3C11111 |
| 84 | 0629C1958CACFF2AC1F95641B5935B072AC0 | 340 | 05287D54036CE71AD8C9CE0E4D9FA2842940 |
| 85 | 067CD4D58CA9AE7EC006036B359CAE5580C1 | 341 | 00785992C3CE656B55AA2D7307996B37C001 |
| 86 | 00665692D66550F1E0F01E2A8CD96AD33201 | 342 | 0564D8D5E0AE358340FA1B670A10AE358341 |
| 87 | 1E25CB4F0E1DA4B6F011DD88910EE2208B10 | 343 | 562B4C06059D34FF80A92B73C60A65330181 |
| 88 | 051CD40D8FAE3542D9C97AE7340368567340 | 344 | 1E08C79DDB45DAD0882D1174A4487C45E110 |
| 89 | 0332EA59EFCCD55A600C3529B800C3529981 | 345 | 0332C30D4A9E7E9B80FC4D430D4561829981 |
| 90 | 030673D8056D366AD4A953594D4FC060C181 | 346 | 5329D4D5860CFD82C1AC5614D599FB0182C0 |
| 91 | 140DFADC814F2453C8D8EB89C50D81436250 | 347 | 067CD4D58359AD82C0F98314D58CAE5582C0 |
| 92 | 5534D68CC009E7C39899D2E5B55CCF80F200 | 348 | 361B4E58DC91B3198C502817F41AF2868340 |
| 93 | 3032D94603FB565780CF32E6861C0351A981 | 349 | 0629C1958CACFF2AC1F95601B5835B0328C0 |
| 94 | 223BC8910D2C3F4AF02D3C74AF1DDC448911 | 350 | 051CCD814AFC9E7340FA634D81550B667341 |
| 95 | 361CC141436E37EA149C49EBD409C3614141 | 351 | 051CF25EAFAE34DA14503667140503627141 |
| 96 | 0A2FC2940C6C9F1AD839B631AD9F5D042B40 | 352 | 1116C7844EEE947A44BBC3AD110443C2D310 |
| 97 | 032CFF14D5686158 19CF4A8C2D59AE066B81 | 353 | 0C065A8D459D34FF80F306656D5A6D370181 |
| 98 | 56065947F560666B80A9F9A6981568666B81 | 354 | 1111785A41EE97BA44BBC412CFOB43C11310 |

(continued)

| Index | Midamblesequence | Index | MidambleSeqq |
|---|---|---|---|
| 99 | 032B56418FCAB69A18CF4D65580304D1A981 | 355 | 3631CD93805A87EAA0C649F18D8F55002941 |
| 100 | 1475C6C36EB8A793C827EC4A251276C4A251 | 356 | 0629C1958CACFF2AC0F95641B5935B0728C1 |
| 101 | 032B59460FCAB66A60F353655800C531A981 | 357 | 032B4314CA9FE69A18CF4D700D565981A980 |
| 102 | 1E08D2D762D915E310E1776D0882D115E110 | 358 | 061AC1994ACCFEB2C0F9E54199553306B2C0 |
| 103 | 1E08CB4441EF774A44B45DE1D10B4221E111 | 359 | 5632D64D403987CF81A932E9AD5FC1803380 |
| 104 | 1E25C45762DBC48B10E15A7B8882D3C08911 | 360 | 1223C4971ED5C04970E25BF8A901DA478890 |
| 105 | 052872538FAA84DB3839363D741C6B642B40 | 361 | 1B0DC6DC828EBCA250E47246FC9D7144A050 |
| 106 | 051B4298CAFCE682D8C9FD7181563285B341 | 362 | 333343CB4CCB37C2B4691E55601969E6A801 |
| 107 | 1223C7490EDA3F8A90ED5C47490125C38891 | 363 | 0354D65E6FCAB69A18304D1AB80304D5AB81 |
| 108 | 0F2D4CCCC699E55601F02D332CD961E6A801 | 364 | 032B59461FC2B26860F353257810C535AB80 |
| 109 | 0C065654CA6D37CE183F605A8D5953530180 | 365 | 110F7B83D48222D088DDE9489A487C41E111 |
| 110 | 0F1E40198A5CB6AACC692D19B54C3F873201 | 366 | 067CCD46A53D6582C0F90372B9553D6582C1 |
| 111 | 0306594D4A9D373F80FC86268D556534C381 | 367 | 56065947EA9F9E6B80568626B81568666B80 |
| 112 | 120ED1C90ED8EEE290EDF111C9112716E291 | 368 | 037E558ACCF9866B345953430199553530180 |
| 113 | 1413FAC4EEBEC453B11B14392501B9439250 | 369 | 1D0EC75C4E2F1477C4485B92291B7A452290 |
| 114 | 1170CB5BA44DA5E310EE0F34A4544DA5E311 | 370 | 0564D413839FADB340FA1B54339C6851B141 |
| 115 | 5534C007866AD733E0A5CCBC39996D54F200 | 371 | 3307D98B4CCF859AB4692ACF00096D51F00 |
| 116 | 037E4C06059D35AAD5A92B66B34F30630380 | 372 | 140A7AC2827EC763B0E4F206DC8D7140A250 |
| 117 | 5632D59340C9FC3380A94D55B35F3E043181 | 373 | 55005A47866E656BE0A57866598961E2A801 |
| 118 | 562B5654C30984FF80A92B6994CCF1830181 | 374 | 0379CC180A9ACE6AD45653668D4FC060C181 |
| 119 | 067CD4D58359AD82C0F90314F59CAE5582C1 | 375 | 562B40DF865CD4C260A6D33CE1995B570380 |
| 120 | 5601D959EA9FE66A6059865A98159065AB81 | 376 | 1170D11692D6E9E110EE8F11169D2911E111 |
| 121 | 067CCD594F9834D7945329D80C0AC56180C1 | 377 | 533054D3E53B06B2C1AC4FAB0C053B06B0C0 |
| 122 | 067CD4D5806836B358CA1AE7EC1CAE5580C1 | 378 | 3602D8D5E39855B340C97D670A039855B141 |
| 123 | 562B40DF859D3432189A4D73C60953530181 | 379 | 110F489A4BBDA622F0E17774A454BA25E311 |
| 124 | 0332FF134A9E7D5A600CB5032D4A66029980 | 380 | 1475C5028D893F63B01B72793C9D7944A050 |
| 125 | 057D4E58DC91B3D41450A85BOD99CCE28140 | 381 | 065641959F92981958354FF2AC0CA3032AC1 |
| 126 | 0629FE55806D641B58CA4FCD4C0CA30328C1 | 382 | 22114B5A478BC5DF11DD91349A487BC62111 |
| 127 | 1116D10F0E1EEED310EE69510F01E916D311 | 383 | 140DFADC8279449E50EB0DC51C8D81436051 |
| 128 | 030673D8056D366A1D4A9D3196D5FC860C380 | 384 | 110F52C88DDE961F10EE0F2D28822E95E310 |
| 129 | 050558CD9C9632BF41FA05272D936E354140 | 385 | 0F005695469B34F398C366658CCA5553C001 |
| 130 | 140DC51C9EB72051C8D86BF6250279476050 | 386 | 0564C298C63D7DB340FA9B02B8C9CA85B341 |
| 131 | 120EFB5C51271049C4B85B91E91B8242E291 | 387 | 032CF3D2BFC530C0D4560626981568626B81 |

(continued)

| Index | Midamblesequence | Index | MidambleSeq |
|---|---|---|---|
| 132 | 361B58D38C99B673380A8517D40F50528340 | 388 | 361CCD98CC9E34DB8C502FD4140AF5014141 |
| 133 | 361B540A0C99B6BEA0396357D40C66328141 | 389 | 562CCC07E56D34C380A95373D8056530C181 |
| 134 | 05057E814C9E34DB8C6336272D8AFD054341 | 390 | 0065692C3CF859B54AA333C27996AD73001 |
| 135 | 3602CD9F439857 1A149C57E70A193D058341 | 391 | 032B73D34FCAB4C334598625580A6061AB80 |
| 136 | 032B59460F3D365780FC2B668600C531A981 | 392 | 110F51168E1F76D288DD69620F02D111E111 |
| 137 | 533054CC053CFEB2C0AC4FD4E0ACB06BOC1 | 393 | 00785992C5AD54F399CC1E6A8B496337C000 |
| 138 | 1E1152CEE1E916D310E1EEAD3111E112D110 | 394 | 2216DDCF022E9622F0D2EEA1D11D2915E311 |
| 139 | 0F2D4CCCC3CCB40354A5F8665999969E6AA01 | 395 | 1E08D2C881EF76D288D26EE1D10D2111E111 |
| 140 | 032CEA5E630B566B80FC5355A1830B566B81 | 396 | 00337C12C3CAD73354AA6616A7996F819A00 |
| 141 | 1111785A4EE9147BA44BBC2EF11B4BC51310 | 397 | 110F6ED682D9161F10EE0F51368D2911E110 |
| 142 | 3333401 54699E56BE0C34B3C2B499E66A801 | 398 | 1170D2D7622E95E310EE8F2D28822691E110 |
| 143 | 30184FD8065CD5AAD49A4D656D5CF98711181 | 399 | 1D0ED216E1 DF152291E2716DE901D7112290 |
| 144 | 051B725F40AE371A14AFCE18EA1A0B65B341 | 400 | 0F1E5A4B455B34CE00F01E25AB4AA3373201 |
| 145 | 06037E40CACD654F5835E532B959FB0582C0 | 401 | 060354D58CAE567EC0F9036B35935E5582C1 |
| 146 | 4425D2C88BBA5ED288773C21F1088BC1E110 | 402 | 361B58D380A8557F40C99B27339F58568340 |
| 147 | 05057258C63B66BF40FA850DB8D9CB654340 | 403 | 0564D413839FA1DB340FA1B54138C6051B141 |
| 148 | 55335692C33804F3E0A5CB6AACDC37833200 | 404 | 1D0ED2090E28EEDE901DF12DC90E27112091 |
| 149 | 361CCD98C50AFD4340C9634D98CAFD054341 | 405 | 1170C89A41EF774A44BBA5A20F084221E310 |
| 150 | 032B59460F3D365780FC2B26A600CD35AB81 | 406 | 2216DE0EE22E95E310DDE921F1122691E110 |
| 151 | 032B4314CA9FE69A18CF4D700D565181A980 | 407 | 03066A54C56D37F218CFE0196D59AB54C380 |
| 152 | 22114B5A478BC5DF10DD11749A4873C22111 | 408 | 0A1CD7CD80AE3682D8C67AA4F41C6855B141 |
| 153 | 1E0F4B5A4E18F74BA444221DF11BB2262111 | 409 | 037E5953456AB4C260F306256D5A6D370180 |
| 154 | 361B58D380A8557F40C99B27338F50528140 | 410 | 0306594D4A9D373F80FC86268D556530C380 |
| 155 | 002D7312CF0D54F2CC669E6ABE1966656A00 | 411 | 0C065A8D459D34FF80F306256D4A65370381 |
| 156 | 0A2FCE4D80AD071AD8C649FD741C6B642941 | 412 | 1475C6C3627EC4A250EB8A793C927EC0A250 |
| 157 | 05284D938F5D071AD8C94E7E8A0393602941 | 413 | 0367C318056CD69AD4A932E98D4FC1803181 |
| 158 | 0C065654C6AB54FF80F3066994C953530181 | 414 | 0318 55934F3E069AD4A94D7F060593503181 |
| 159 | 5519D68786987D9A01AA661687896F819801 | 415 | 2713C9DB028EBCA250D8EC09DB0D7140A250 |
| 160 | 0F1E5692C338059B55A5CB3C07899D533200 | 416 | 11116ED101EE96D2F0E16912EF0EE9111110 |
| 161 | 06034D594F98372B94AC5667CC05356180C | 417 | 001E568CCCCF865B54AACB3C198662D0F001 |
| 162 | 0A055B0D839E357F41F50524ED8C66368341 | 418 | 110F7B83CBBDA513682D913484587C45E311 |
| 163 | 067CD4D58359AD82C0F98314D58CA65580C0 | 419 | 0629F293E06D672AC0F9564D4C00656328C1 |
| 164 | 032B56418CFCD65780FC2B69818304D5A981 | 420 | 443BD1110B4C3ED2F04BBC2D2F1BBC451310 |

(continued)

| Index | Midamblesequence | Index | MidambleSeqq |
|---|---|---|---|
| 165 | 1276C482447DC6E370E20EF89C4B72412091 | 421 | 552D43C0066CB4F398994B70F99AAAD7C001 |
| 166 | 5031D7CD89CD7E4F4150CE282D99CA81B141 | 422 | 03186A53459B57CF80FC1855934A63503181 |
| 167 | 0332D5860F3CAE9B80FCCD158600C3529B80 | 423 | 061AEB13E06E56B2C1F96514EC106656B0C1 |
| 168 | 0033731154F0CB4F2B45A9E259E1AA6619800 | 424 | 1E11478444BBBED310E16EC7844B4442D111 |
| 169 | 066541995534FAB0C0F91A81B95AC302BC1 | 425 | 3334D98780FAAD6A00CC4B59878F05516801 |
| 170 | 3334D987800AD6ABE0C34CE5998F05556A01 | 426 | 5632D64D403E7C3380A9CD164D4FC1803380 |
| 171 | 0531FD52636A871B41FA4E42AD9362871940 | 427 | 05057258D36633EA14AF5018ED99CB654341 |
| 172 | 361B415F439E342A149C4E6BCA0933628141 | 428 | 032B7CD4D304D300D4A9FE564199A981A980 |
| 173 | 051B4298CAFCE682D8C9FD31A1563A85B340 | 429 | 001E6A92C5AB37C398CC7819AB596D54F200 |
| 174 | 115DC7968E1A5FBA8822C434AF1D2BC48B10 | 430 | 2713CA1AE27EC4A251D86C75C5127EC4A251 |
| 175 | 0A0557D40C6E364ED839631B2D8F50568140 | 431 | 4723D1D70B8DC51F7048DBD2291B7A412291 |
| 176 | 061AFE46A53B06B2C1F96501B9553306B0C1 | 432 | 120EFB5C412F144BC4B8DB91E9188246E291 |
| 177 | 0F2D4CCCC699E55600F0AD332CD969E6A801 | 433 | 0A05580D9396317D40F58564CD8C6E328141 |
| 178 | 1111479A4BBC46D2F0E1697B8454BBC51311 | 434 | 5632D59340C9FC3380A9CD159344F36043180 |
| 179 | 3602D8CA0C6FAE4F4036FD272A1C6851B140 | 435 | 00785992C5AD54F399CC1E6AAB496B37C200 |
| 180 | 115DC7968E1A5FBA88224434AF1D2BC48B10 | 436 | 0C2CC314C6A9FDAB80F3530334C95E01AB81 |
| 181 | 06564195835CFF2AC0F929C1959CAB072AC1 | 437 | 06036B158F98354F5835E527CC0CA65182C0 |
| 182 | 115DC796822C474AF0E125FBA89D2BC48911 | 438 | 561855860599FE9B80A9E795A61A6E069980 |
| 183 | 032CCC0D4FCD34C2D4A9F9E6B8156866698 0 | 439 | 0F34C00CCA5E1EAB983C2D731549678 19801 |
| 184 | 3602CE4149CD7E4F41367D31A159C281B140 | 440 | 0564C298C36FD71A14AF31E80D89C281B141 |
| 185 | 0F0056595469B34F398C366658CCA5557C000 | 441 | 115DC796822C474AF0E125FBA89D2BC48B10 |
| 186 | 0531CD8A0FACE4DAA0F549F19400A3631941 | 442 | 503658CBE50B667340AF49E7140503627141 |
| 187 | 1125F8576EEEDA47A88223C74910223C34911 | 443 | 22115E0F0DD9161EF02D695DD10D26922111 |
| 188 | 562CC0C1856D37F2189A4AF3D809A350C181 | 444 | 117752D681E8F51288DD1161EF1D2E962111 |
| 189 | 0033731545A9E65BE0F04B4F0B4AA6619801 | 445 | 333343CB4699E55600CC337C0B4961E2A801 |
| 190 | 3334D9878C3CCE5B9800AD2ABE1F0D556A00 | 446 | 051B54138F5E3682D8C97D670A039051B141 |
| 191 | 56065947E568666B81A979E6B81568626B81 | 447 | 037E4301865CD5AAD5A92B2994CCF9830180 |
| 192 | 3602CD9F463A8672A0C67AF1A1593D05B141 | 448 | 331E401E069B356B55994B6A8B4C3663C200 |
| 193 | 1111479A4E1E97BA44BBC42D0F04B3C11310 | 449 | 140A761B01BF275E50EB8A09FB1E4F24A050 |
| 194 | 351ACD594CA9AF2B94603027EC09FB0180C0 | 450 | 0629CD4C0F9A9F2AC0F9D64D6C1065672AC0 |
| 195 | 5500599986 99E56BE0A5786587999E66A801 | 451 | 0F2D40154699E59898C348332CCA5F86AA01 |
| 196 | 44225DD10B4DA61EF14B5A5E0F1BBA222111 | 452 | 1475C50281BF2793C8D813F63B0D7140A051 |
| 197 | 05187E86CF5E34288C6328672A093D018141 | 453 | 117752D6822915E2F0E10F6EC88D26922111 |

234

(continued)

| Index | Midamblesequence | Index | MidambleSeqq |
|---|---|---|---|
| 198 | 552D4CC7869B343E01AA2D7307996337C201 | 454 | 562CD94D4038673F80A9ACA68D4FC060C380 |
| 199 | 562B40DF865CD4C260A6537CC1995B570381 | 455 | 1475C5028E48DF93C927EC763B0D7144A251 |
| 200 | 5507DA466669E56A00AAF865B99669E16A00 | 456 | 5601D641856FE69A189A67E57819A985A981 |
| 201 | 36284D8A039AFF1B40C957CDAA1C6D071941 | 457 | 1209475C4ED8978BC4B85C6DC9147DC52291 |
| 202 | 562CD94D4038673F80A9ACA6AD5FC864C380 | 458 | 443C52CEE44BC6D310BBC3AD31144BC6D310 |
| 203 | 351AD813ECAE567EC035E5582C03565180C0 | 459 | 3631CD93805A87EAA0C649F1AD9F55002B40 |
| 204 | 067CC180C53D66B358CA1AF2B959FB0580C1 | 460 | 22115E0F02DE95DF11DD1121EF0D26922310 |
| 205 | 110F775A444DA622F0E1774B644B4A25E311 | 461 | 4723D216E47DC52291B85C2DE9047DC12090 |
| 206 | 55335692C99D565AB50F9E40198C37873000 | 462 | 032B73D34598665780FC2B0C334A6065A981 |
| 207 | 0629FE4A6F9D641B58358032AC1358072AC1 | 463 | 0A1CC298C5FB6682D8C67AF181493501B141 |
| 208 | 553343C7899D570FE05ACB00198962D33001 | 464 | 0C2CCFCD40CD3702D4A679E5580A6061A981 |
| 209 | 0F004F198A5D565ACC693316B54C3E67C001 | 465 | 562CCC07E56D34C380A95373F8156D34C181 |
| 210 | 4425D2C88778C61F1088A5ED289883C5E110 | 466 | 111152CF0EE916D2F0E1692EF101EE911110 |
| 211 | 120ED1C90ED8EEE290EDF111C9012712E290 | 467 | 140A7AC28D8EC49FB11B72793C9D7940A251 |
| 212 | 3334C00B4669E6ABE0C34CFC154966616801 | 468 | 1E0F510882DE95DF10E10F2EE88D2E962310 |
| 213 | 2216C89A478BBDE310DD69489A487441E111 | 469 | 1125FB9681EA247A88DD43C8AF1D2C474911 |
| 214 | 1122775101EDA74AF0E1DA0B6F1EEA248B10 | 470 | 0F34D6878C3D2E5BE000336AB99CCD559801 |
| 215 | 3631C14A1364E3E8A0C649BD741C63642B40 | 471 | 3602CE4149CD7E4F4136FD318149C285B140 |
| 216 | 333340155691E16BE0C34B3C2B599E66A800 | 472 | 4425DDD0E4BA25E310BB5A620F14B221E111 |
| 217 | 3307CF00066AD65B5499D2A5954CC780F200 | 473 | 562B5654C9ACD656D403FE03018CF1830380 |
| 218 | 0A1CCE414F5E34E6145F49DB340A08658341 | 474 | 4425D2C8877BC61F10BBA5AD288883C1E110 |
| 219 | 061AD4CC0F99AEB2C0F96554CC006652B0C1 | 475 | 22114B5A4D2E97764477441E2F0873C22111 |
| 220 | 1475C6DC82793CA250EB0A46DC9D8EC4A051 | 476 | 1475C9C4E1BF24A250EBOA763B11BF24A051 |
| 221 | 03066A54D56533F018CF60196D59A354C380 | 477 | 1223FB570EDA3C4B701DA407690E2A478A91 |
| 222 | 057AD414036E3672D8C91CE70D8FA8554141 | 478 | 1E16D10EE1EE951310E1696ED101E6911111 |
| 223 | 56065947E568666B81A979E6980568666B80 | 479 | 0F1E5A4B455B34CE00F01E25AB5AAB373001 |
| 224 | 05054D98CC9E37EA15AF50670D8633654340 | 480 | 057AD8D2636E354341FA85270D9366314141 |
| 225 | 4723D1D71485B92091B85C51F70B7A412090 | 481 | 443BD2CF0BBC452EF04B43D1311B4BC51111 |
| 226 | 061AC1994F9E541B94ACCFAB0C053302B2C0 | 482 | 0C1FD64D459CAC3381F360166D5A63503181 |
| 227 | 0367C318056CD69AD4A932E98D5FC9843181 | 483 | 5534D98B40F99CF200AA4B19AB4F0E60F000 |
| 228 | 360558CBE368567340C97AE7341368567141 | 484 | 002D59878CCCB6ABE0F0D5259993C3316800 |
| 229 | 502FD8CD863C9D4340AF5058CD89C3614141 | 485 | 5031D7CD9632824D40AF31E82D89CA85B140 |
| 230 | 560655818A9F9D5A18651FE69809A6026981 | 486 | 032CFF14C30B54C2D4A9F9958199A6066B81 |

235

| Index | Midamblesequence | Index | MidambleSeqq |
|---|---|---|---|
| 231 | 03065594CA9D37F218CFE026AD565B54C381 | 487 | 03186A53459B57CF80FC1815B34A6B543180 |
| 232 | 1E25C4576E1DA7BA882D3C489102D3C08911 | 488 | 051CD40D9FA63140D8C97AA7340360567341 |
| 233 | 1E08D2C882DEEDE310E17752C88D2111E111 | 489 | 057AD414036E3672D9C91CE70D8FA8554140 |
| 234 | 057D58D38369B542A0F50564ED9C6E368141 | 490 | 0F34C00CCC3D2F33545A1E6AB9996F859801 |
| 235 | 032CEA5E630B566B80FC5355818303526981 | 491 | 116EC79A44BC3D1310EE11479A4B43C11111 |
| 236 | 0F19D68CC3C8065B54A54CFC19896550F001 | 492 | 1223C4970E2DBF8A90ED5C449711DA478A91 |
| 237 | 1E25CB4F011A277710E1A5B4AF1EE2208910 | 493 | 051868D38FA9854338398524D40C60518340 |
| 238 | 562B40DF89ACD73E6059534321995B570180 | 494 | 051CCD814FAE34DA14AFC9A7340503627140 |
| 239 | 003373154F0CB4F2B45A1E659E1AA6619800 | 495 | 116ED1110E196ED2F11E692D0F1EE1111110 |
| 240 | 0531FD52636A871B40FA4E42AD936A871940 | 496 | 3602D8D5E39855B340C97D672A139855B140 |
| 241 | 1116FB9A41E9147A44BBC3D10F1B4C46D311 | 497 | 1170C89A44BDDDE310EE8F089A4B4A21E311 |
| 242 | 3032D94603FB565780CF32E6861C0355AB81 | 498 | 032CCC0D4FCD34C2D4A979E6B81568666981 |
| 243 | 03067F01865B566AD4A9D31594CCF600C380 | 499 | 03065594CCFE066AD4A9D37F21965B54C380 |
| 244 | 0354C314C56FE69A18CFB2B00D59A181A980 | 500 | 1E16C44441EE97BA44B443EED10B43C11111 |
| 245 | 11117B8444BBC6D2F0E169479A4BB4411111 | 501 | 1209789C447DC6DE90ED09475C4B85C12291 |
| 246 | 3631CE4D805D7C2B40C94E4E4D9FAA842941 | 502 | 5534D68CC99D2E5B54001E7C399CCF84F001 |
| 247 | 1122785682DBC77710EE2247B69D2BC48911 | 503 | 140DC9C50EB8DF6250EB7249E5114F276051 |
| 248 | 0557CD938FAA84DB3839C982B41C6B642B40 | 504 | 05057258C63B66BF40FA054D98C9C3614141 |
| 249 | 001E598B4F0E665B54AA4B731E05A330F001 | 505 | 00785992C3CE656B55AA2D3307896333C200 |
| 250 | 140DC9C50EB8DF6250EB7249C50147236051 | 506 | 051B4298CC9FD71A14AF4E682D963A85B141 |
| 251 | 0F34CF0845599D9A00F0CB0F084AA6619A00 | 507 | 553343C785ACB40398995570FE196AD73201 |
| 252 | 0318564D4FC9869AD4A94D7CF8156CD43181 | 508 | 5601D59F8598669A189A67E6A6095E01A980 |
| 253 | 5329D4D5860CFD82C0AC5654D589FB0580C1 | 509 | 0354D59F8CFB2E6A610CD329818C0851AB81 |
| 254 | 11227B888E1DA47B692DBC34AF1DD4408B11 | 510 | 037E4301865CD5AAD5A92B2994DCF1830181 |
| 255 | 051B7D58C63A864F41FA1B42B8C9C281B340 | 511 | 1B1446DAE189479250E468F9050181439051 |

Table 10

| Index | Midamble Sequence |
|---|---|
| 0 | FF662952CC37826554553303C78692DOCC0000661692C3C7819954AA333C27996AD73201 |
| 1 | FF4CBC12CA561AA998332A8F0B469079980000333C12C5A1E2A998CC550F2B596F859A01 |
| 2 | FF52AA9E0C34CA59983334998780F2A96800002D2A9E03C3325998CC4819A79F0D556A01 |
| 3 | CC4CB0D2CF052BFD54CC330F12CF02D0015466199A4785A0795400666625A795AF86AA01 |
| 4 | CC5530D4A9678265FE332A8F084690799800CC550F084967819800CC550F28596F859A01 |
| 5 | FF4CBC12CA561AA998332A8F0B469079980000333C12C5A1E2A998CC554F0B596F859A01 |
| 6 | AA4CB31FEA54B30DE05A348F01E55330CC00AA33330005A4B0F1E05A4B0F3E1AAB373201 |
| 7 | FF6630DE0A54B2655455331A4B40F1E0CC0000660F1E05A4B19954AA3325AB5F09E73201 |
| 8 | CC4CB0D2CF052BFD5466199A4785A0795400CC330F12CF02D00154666625A795AF86AA01 |
| 9 | AA4B295329952A5954FF6183C66CC780F0005534968CC9952A5954001E3C399CCF84F201 |
| 10 | BB442D10EB443AED10443B92CF0B443AED10BB3B92D0EB43C1111044446D0F1B4BC51311 |
| 11 | CC61BFDE0964CA9554CC1E001E09633169546634954B43C1983C00664B2AAB53CE67C201 1 |
| 12 | F06625954F06625954A54CB0DFE5A330F0000F199A4AAF066259545A330F2015AB34F201 |
| 13 | EE690445AE16E87844BB43AED0EB4442D1101116BB9A4E16E87844443C112F1B4C46D311 |
| 14 | EE08B485AE10F3744411770B5A4E10F37444BB5DA1D0EB45A2211044221E2F1B4DA62311 |
| 15 | EE693B9A4E16E87844443C110F04B3BAD1101116BB9A41E1107844BB43912F1B4C46D311 |
| 16 | CC4B3312CF0553C154996199878A57F968003334B312C0F2ABC154661E19A795A8056A01 1 |
| 17 | BB442D10EB443AED10443B92CF0B443AED10BB3B92D0EB43C1111044442D2F1B4BC51311 |
| 18 | A954AA4ACFC7E00DF8A62CA994CF306030186532995343018 33C606A4A9AAD53FE070381 |
| 19 | F04B30D4AFF4CB3154F04B0F0B40033331545A1E1A41E5519998005A1E25BE1AAE659A01 |
| 20 | FA64A715EF56324D40056498D5E0A631B1400511B18CA0F56324D40FA1B672A10AE35B341 |
| 21 | CC7FA6554C307A58B4C3781A4B4CC0019954662A8CC0069528F1E0692D30FE166D573201 |
| 22 | FA64940C6F56317CD8FA1B141380A63280D83602A715E390524D40367D272A1C6855B341 |
| 23 | AA52A5932CC61BC1FEAA2D258CCCC1E3C000552D1A4CC331E03C00AA2D25ACDCC9E7C201 |
| 24 | EE693B9A4443C110F0E16E878444B3BAD1101116BB9A4BB43910F01E1107A45B4C46D311 |
| 25 | CC5533154C3528F0B49678259E0997F99800332AB31543C2D0F0B46907E5BE0668059A01 |
| 26 | ED5C0488EE25B874901223BB570E25B87490ED23BB48EE22438890125C04B71E2A478A91 |
| 27 | CC4CAA9FEC34B295E0CC332A8003C4B169E03C349681E3333154003C4B16BE1CCB36AA01 |
| 28 | FA283D4BEC931B18D8FA2802940364E318D8364E0E526055782940364E31AD9FAA842B41 |
| 29 | FF782652CA55530D9800781992C5A550F198331E154B4693303C00CC1E6AAB596B37C001 |
| 30 | AA662A998A561968789678259E0997F998005519AA9985A1E168786907A5BE1668059A01 |
| 31 | A954A68CAFC7E33C60A653254D40C060FD805654994CA037E0C06059531AAD5F38670381 |
| 32 | AA4B3FD8699528CC1E553480078662D331E0A54CBC19896550F000A54CBC39996D54F201 |
| 33 | CC5533154C3528F0B49678259E0997F99800332AB31543C2D0F0B46907E59E1668059A01 |
| 34 | FA28318D8FA28318D805578E526FA28318D8C931BD4BE364E02940364E42B4036CE42B41 |
| 35 | FA6301472AF49ABD26C97A8D8149C5027140051CBE98C5036140D8C97ACDA149CD067341 |
| 36 | FA7AB258CAF5018CD8057A8D98C5050270D8361C8141463362BD40C99CFEA149CB654141 |
| 37 | AA4B29532FF61BC198AA4B168CC001E3C198662D1A4AA33078F000662D65B55CC784F201 |
| 38 | ED5C3896E122387490ED23B8890ED23B88901223B896EED5C0749012DC78A9112DC78890 |
| 39 | ED092E08EE20EADC90127691D70E20EADC90ED7691C8EE2711209012092E371E2F152291 |
| 40 | FC4D00CCAF34A830D40332BF134F34A830D4A967AA59EA66029980569815A61A6E069B81 |
| 41 | FA648D80AAF4E18CA0051B325F4AF4E18CA0F51C8E5EAA0361B1410A6371A15A0B65B140 |
| 42 | F07FA5932A55530D98F000258CC5A550F1983C19968AA693303C003C665695596B37C201 |
| 43 | FF003C1E099332592CA52D2A954C31E3319833660F0785555168B469CB59ACD0FF800200 |
| 44 | FA7AB258C502F98CD8FA050D98C5050270D8361C814149C49ABD4036637EA159CB654340 |
| 45 | AA4CB31FEAA3333000A54B30DE05A4B0F1E05A348F01E5A4B0F1E055334CE01AAB333201 |
| 46 | AA52A5932994B29554552D1A4CC994B29554FF07B0C66CC1E3C00000784F398CC9E7C201 |
| 47 | AA4B29532FF6183C669952A5954CC780F0005534968CC001E3C1989952E5B55CC784F201 |
| 48 | AF57A80BE9C4E24CD89C31A4D26AF2828140502817D409C4E24CD963CE5B0D9AFA868140 |

(continued)

| Index | Midamble Sequence |
|---|---|
| 49 | F061A94D2FF662A8CCA54B3C0785533001983C079A54A330019954692D4F3E199D533201 |
| 50 | FF660CC00A5481A4840F1E30DE0553326554AA3319954F01E0F1E15ACB65AB500E633000 |
| 51 | BB43AD110BB43AD110BB4392CEE443C2D110443C12CEEBB43AD110443C2D31144BC6D311 |
| 52 | FA57BD540C94E0E4D836318E4D805283D540055782940364E318D8C931F1AD9FAA842941 |
| 53 | F052A5986F02D25878CC4CAA9FECC332A8000F2D1A478F02D2587833B355601CCB32AA00 |
| 54 | EE7711088D2691E0F011772EC882D6921CF0E10F12D68DD111DD101E0F6D369229122311 |
| 55 | FF2ABC0B4C334B30CC334C8F12C0F5280154AA00169E0961E19998666665A795AF86A801 |
| 56 | AF57A80BE9C4E24CD89C31A4D26AF2828140502817D409C4E24CD963CE5B2D8AFA828340 |
| 57 | AF57A70C6A02FA4D26502818D385F501B0D89C4E2BCA09336281419CCE6BEA193B628140 |
| 58 | FA7AB258CAF5018CD8057A8D98C5050270D8361C8141463362BD40C99CFE8159CB654340 |
| 59 | FF19A94D2992AB0C1E00661692C66550F1E0F01E2A8CC962D33201F09E6AACD962D33000 |
| 60 | F04B3FD32A561AA9983C2D0CCAA690799800F04B000CC5A1E2A9983C2D7315596F859A01 |
| 61 | A97E2699EA97E19460A901A6860567E2686059061A87E59062578159F9DA981A6865A980 |
| 62 | FC5300CB2FC533F14CCF4A8C0D430350C0D456062A5E6560615819659FE6B809AE066B80 |
| 63 | EE5DB7510115D88910E15A0B4F01E5A348F01E258B4F0E125F4AF011A277711EEA208910 |
| 64 | FF61AA92C0F19968CC9952B31E0692A8F000001E2A92CF06616ACD662D733E196D54F000 |
| 65 | CC662592CFF00294B4993330C78AA553C1E03C1E198CC0F781575469CB4CF995AAD40000 |
| 66 | A94D2992AFC67BCD80A932A98D40367831805632A992A03183CD8156CD698D5FC9843380 |
| 67 | FC54BCCB230329FD2A032B0314CCF4D300D4A97E298186518A981A9FE6981965985A980 |
| 68 | CC7830DFECC780F0009952A5954662D25954662D1A4AA662D259543307CF201CCF84F001 |
| 69 | FC5483D34A97E1946003548C134567E268600C2C8FCD4590625781F3ACF00D5A6865A980 |
| 70 | FA283E8A0C9318D938F52F82940C636318D8364E0D9380557BE8A139C9F1AD90A5042940 |
| 71 | F97CAB0A6F9032B158060314D58F9032B158351A9813E3565180C1CA6567EC135E5580C0 |
| 72 | AF4E28D389C5798CA0A04997CD8935024D40504E141386357A70A05FC9E82D96C5058340 |
| 73 | C964BD5EAC91B3D4143664829EA361B028149C4E28140634E17D4063CE57F419CCE68140 |
| 74 | F07830C78AA55264CC964B294B4CC663FC000F780F078555519ACC69CB56AB533E640000 |
| 75 | AA52A652CFF07B3078964CA9554C319BC000552D2652C00783307869B3697553CE63C200 |
| 76 | EE77349A4E10F3744411770B5A41E0F0884444221E0F04B5A1DD11BB2261EF0B4DA62311 |
| 77 | F0782A954964833198C31E264CCA52D3FC000F781555469480CD983C9E59ACD5A2D40201 |
| 78 | FF782652C00781992CC366295543C6616954552D0CC78AA2D33078693343E0196337C201 |
| 79 | FC67A992A03679652AA94D3CD80564D031800318164D4FC1829A1D5A9CD7CF81564D43380 |
| 80 | FA64A715E051B18CA00A1C9B0BEF56324D40FA1B270A0FA1B270A10AE35B3410AE31B140 |
| 81 | EB7205036EB723ADC8EB0D851C81472051C82714361AE271409C51276BF6251D89476050 |
| 82 | CF4D3012ACF32800D4CF4D0FCD4304D300D4651B1A87E65679A9816518657819A985A980 |
| 83 | FA02A70C6FA7D2713836649415E3618140A0F50524CD80A05182D939E357F40C6E368140 |
| 84 | ED76BB42412093B424472391D70B85C11D70E20EB89C41D71389C448DBD2291B72452290 |
| 85 | E1772D088E1772D0881E0892D76E1772D088D26EA1CEE2D111E3112D915E1112D911E110 |
| 86 | C964B1872C91B3198C361B0E58CC91B3198CAF57A80BEAF2828140502857F41AFA868340 |
| 87 | EE113B844BB3B91110E116879A4B43C2D0F01E69079A44B43A1D0F111EEFBA45444451310 |
| 88 | EE70885DCBB25A1D088110F385DC445A2D08822168844477439E111DD6948645888C5E110 |
| 89 | CF4D33CCACF4D0C13465181959E651826860C04AB00D43F35302D56A1FDAB8195E01A980 |
| 90 | DD6EB485A884421CF0DD11349A477441E0F02D168898A783C1DF112DE948845878C62110 |
| 91 | ED5C04970ED5C04970E2588756E1D243889012238848EED5C049701DA478A911DA478890 |
| 92 | AA52A5932FF7830D98994829554331E03C0055529A53200780F19866CB56855CC9E7C000 |
| 93 | EE5D87896DD44084F0E12584576D23C08910112238568DD44086F11EDA78A88D28C48810 |
| 94 | FF2AB0CD2F02D330CCAA00258785A7819998334C83D4A3C4B0015466E656BE1961E6AA00 |
| 95 | F3533012AA6799A87E0C2C8FCD4590625580F32CB00D4A6061A981F3ACF00D5A6865A980 |
| 96 | E47235C50E47235C501B0D8A1AEE47235C50E40DB5DAE1B724A2511BF20A2511BF20A050 |
| 97 | BB5A2D1768843A1D10BB25AD08877439E1104425AD176773C21D10445A6D28988BC5E1H |
| 98 | F07FA94AAC366258CC0F0016954C366258CC964CB0C66A5553C00069830F399A5D57C201 |

(continued)

| Index | Midamble Sequence |
|---|---|
| 99 | FF4C8CCAAA5619A41E0033331545A1E259E0F04B0F0B4AA6619801F0CB4F2B4AAE659800 |
| 100 | C957B1940C957B1940C9578E4BE36283194036280E4BEC957B194036A871B4136A831B40 |
| 101 | A97E299E6A901A9818A97E16418567E2981865181A87E65679A9806518657819A985A981 |
| 102 | FC7E3CC189A4D254D456281654C30180FD80037E03018654D1AAD5A9AB6994DCF9870180 |
| 103 | FC018F1F89A32A6934A928158ACCF180C0600C79830186A4A1DAAD459D36984D3FE030180 |
| 104 | C97D319EAC902B18149C57A4D4063579B1403602B19EA367D3181463A864F419CA81B340 |
| 105 | F0782592CAA55331980F781A52C55550CD98C31E2948499333FC003C9E56885668340201 |
| 106 | F9653E594066501994AC4F94CC0534FAB0C0061ABE594F91A8199553B054EC1ACB02B0C0 |
| 107 | FA578D540C931818D805283D540364E318D836318E4D8055782941C94E4E6D9FAA842940 |
| 108 | AA52A64D2F07FB0C66994B2A8B4C3663C000552D1992C0F000F39999CB6AAB4C3E67C200 |
| 109 | F550318D8F550318D80A2F8E526F550318D8C649BD4BE393642B41393642B4139B602940 |
| 110 | A94D2992AFC67BCD80A932A98D40367831805632A992A03183CD8156CD69AD4FC9843181 |
| 111 | BBSA2D1768843A1D10BBSA12C88773C21D10445A12D7677439E11044DA2D28988BCSE111 |
| 112 | FF4C83CD2C3528CCAAAA661687896781980000333C12C3C2D33155AAE656A7996F819800 |
| 113 | FA1B3D472FA1B0298C9C2824CBE9C281814005648298CFA1B0298C63D7983419CA858340 |
| 114 | FC5480CACCF328C1345601AA5F86567A6860F3533CD4CC035300D45986566196AE05A980 |
| 115 | FA028E9F49C31A713836648D86C5057940A0F505028149336182D939E37198D5FD068140 |
| 116 | F061B0DE0AA4CA6554A54B1A4B4FF660CC000F618F1E0554C99B5555A4B65AB500E633201 |
| 117 | EB7205036EB723A1DC82714361AE271409C50EB0D851C81472051C927EBF6251D89436050 |
| 118 | AA55294B499332592CCC6630C78FF003C1E05A2D15554694B198CD3C9E4CF980FF840200 |
| 119 | FF4CBC12C551996878C352B315469079980000333C12CAA66168783CAD7315596F859801 |
| 120 | F06629532C37FA59540F19A95323C0025954A54CBC198692A8F0015AB37C39896D54F000 |
| 121 | FA02BD414C964B198C057D3D414361B3198C9C31A4CD8AF57A8140634E64ED950A868340 |
| 122 | EE5DB490EE15A37510115D8B50E1E5A0891011220B4F015A37511EE2274AF11EDA48910 |
| 123 | CC61A652C9934B3078FF78154B4AA2D001E03C199A4CC694C8F3990F80695555AD57C000 |
| 124 | EE70885DC442592C88DD6908444773C21D101170879DCBB25A1D08822E97484588BC5E310 |
| 125 | ED5C38570122388570125C04970ED2384970E258874901D24074901DDBF8A91E2A438A91 |
| 126 | DD6EA1D0EDD1121CF0226E9E10E22111E0F0D269221102D691DF112DE95DD11D2E922311 |
| 127 | ED71049C4B85B91D6E120EBB43A47242E090ED71049C447242E091EDF104BC547A46E090 |
| 128 | F0782A954C31E264CCA52D3FC00964B331983C1E198CC0F781575569CB0CF995AAD40000 |
| 129 | ED713B43AB85BAE090120E849C4B85BAE090120EBB43A47242E291EDF1449C547A46E090 |
| 130 | EE6EAD10E116E92D0E111112CF0EE112D0F0E1692ED101E6911311E1E96EF111E6951310 |
| 131 | AC4FAB13EAC4F94CC053302B13E533014CC0AC302B0C0534FEB2C1534FEB2C1ACB02B0C0 |
| 132 | A954AA4AC9A4D19534FC0BF1F8CF180C060592C9654C6A35656D40CF9C32193FE030180 |
| 133 | A954AA4ACA6531654CFC01BF1F8F3060301865329953346A35254D430E78C2613FE070380 |
| 134 | FC5333D2AA979A6980032CB3D2A560626980032C8C0D4A979E6B81FCD34C2D4568666980 |
| 135 | FA0282592F5053198C9C31ABD5E933628140057D0D86CF5053198C634E540A193B668341 |
| 136 | FC7E2994C037E1654CCF18254D430181A8D4562803018A9283CC1965CD0FF819ACD70380 |
| 137 | CC4CA5986FF55295E0CC33258780055169E03C34998660F2D154003C4859899F0AD6A801 |
| 138 | FC67BF060A64AA98D403183F0605935298D45632959340C1F83180A9CD55B35F3E043180 |
| 139 | F57ABD414C61CB198C391C8E58C0A7A82814A05017D4093361B0D96CB664CD95FD068140 |
| 140 | FC7E00DF8A6531654CCF180C06095351A8D4562B2A4AC0C063CC1865CD66B353FE030380 |
| 141 | A9532A54C9A4A994D4FC063F018CF1F8C180562CAA54C6535196D503F9FF21930600C180 |
| 142 | C94E3E8A0C94E3E8A0C649BD4BE39360294036318155EC94E3E8A039B642B4139B642940 |
| 143 | AA552592CCC663C1E0A52D264CCC31E3FC0055551A52C336603DE05AAD59ACD3C1E00201 |
| 144 | AF502BCBEAF50141409C49A70D86336270D8633618D266336672D950AFD4141AF5014140 |
| 145 | EE6E910EEE11692D0EE16912CF0EE111111011112ED101E692D0F0E16952EF0EE9151311 |
| 146 | FF61AA92C3307998B4A54CBC198692A8F000001E2A92CCC78198B55AB37C39996554F000 |
| 147 | FC79958B2FC061594C9A4A8C07E9A350C18003062A54CFC061594D65B573F819A354C380 |
| 148 | CC4CBFD54CC33001549661A95E0961E169E03C3483CB43C4B3C0B46619D560166E66A80 |

(continued)

| Index | Midamble Sequence |
|---|---|
| 149 | FF55265980F2D1A478C34B29SE0333315400005519998F02D258783C4B56BE1CCB36AA00 |
| 150 | BB5DAD168B425AEC88445D92D684B259108888441E0F0873C1DF1177C421EF178BC22310 |
| 151 | BB5DAEC88B45A12D688743A1CF088441DD10445D910884B5A2D16878CJDE2FI77C422111 |
| 152 | FC4D3CD2A0332830D4A967A9980A967A99800332BCD2AFC4D030D5569829B81569869B80 |
| 153 | FC01AA4ACF3061654C3067995343F60254D4A954BFIF8A6530301965B2CC0616AB570180 |
| 154 | FF6603C7899551A48455332952C330030DE0F01E00198962D198555ACB6A8CD3CF833000 |
| 155 | ED5C3896E12238896EED2388890125C38890122387490ED5C07690EDA3F8A9112DC38890 |
| 156 | FF4CB0D4A55199A41E00330F0B4AA66259E0F04B331545A1E19801F0CB333555A9E59800 |
| 157 | EE08AD096DD1121CF0EE772D16822111E0F01E70911762D691DD101E8F51288D2E962310 |
| 158 | FC5333D2A032CB3D2A032C8C0D4FC530C0D4A979A69800560666981A9F9E6B81560666B80 |
| 159 | FC54B3D34F32CB00D456019946059799A980032B33 D340C53300D4A9FE19661A6865A981 |
| 160 | C97D325F49C28270A03602B25F46357A70A0C67A8E414932F9B14139854E6156C505B140 |
| 161 | E169385A4B44392CF01E16B85A44B3C12CF0EE113B844BB3BD131111EEFBA45444451110 |
| 162 | CC4B3FD4AC34CBC15499619541E9666168003334800B4C34CFC354669E6ABE196E656800 |
| 163 | FC678307EA94D164D4FC1803180564D298D45632A992A03183CF8156CD698D5FC9843180 |
| 164 | A967AA59EA6601647EA96795860A66029980561815860591FA9981A9E7D5861A6E069980 |
| 165 | BB442D10EB43C2ECEE443B92CF04B4391110BB4412CF0B43C11311BBC412EF1B4BC11310 |
| 166 | FC182A4CAFC1815934A6353CC7EA63503180036795934FC185593559CAC3381A63503180 |
| 167 | FF4CBC12C551996878CC550F0B46600259E00F34800CCA561AA9983CAD7335496F859A00 |
| 168 | BB5A2ED68874421D104425AED68783BA1D1BB2591168873B9E110445A5136978C45E310 |
| 169 | F379A98B2A6533CC180C061654CA6533CC18C01FA552A95B5303813FE05AAD595B570180 |
| 170 | CC61A652CC3661A4CC66348CC78693330D98FF07AA8B4F0001695455D2C03E15A557C200 |
| 171 | F06629532F066168CC965530DFE96550F0000F19968CCF066168CC692ACF20096D54F201 |
| 172 | A967AA59EA6601647E561815860591FA9980A96795860A66029B81A967D5A61A6E069980 |
| 173 | FC7E158ACA92B00DF8CF18195349A4 D0C0600C062994C59533CE193FE0656D56AB530180 |
| 174 | AF57ABCA09C31A7138A05017D4093361B0D8633198D3850D7D42A06CB664ED85F5028140 |
| 175 | BB442ED10BB3B91110B44392CF0B43C2D0F04B3C12CF04B43AD2F144BBEEF1044C411110 |
| 176 | CA653286A9F4F9813E351A8D594603027CC0CA1AB29949F30180C1CA9AF29959FB0580C0 |
| 177 | ED23BB48EE22438890ED23849701DSBB8890125C3B48E1DSBB8890125C44B71E2A478891 |
| 178 | EE5DB8568E125BB888223B8B4F02D43889101122385681E5A3BA89DD444B6F1D2BC08910 |
| 179 | C97D325F49C5798CA0C9028D9F49C28270A039050E4146C2FA4D4039FAF18156CD05B141 |
| 180 | ED093BSDAB82391C8E127684824475C2E170E20EB89C4B72412090E20EF89CSB7A452291 |
| 181 | A97E2A406A679A9818A97E159F859062981865181959E6A1F9A980651866A6195E05AB80 |
| 182 | EE5D84576E15A07968DD44089102D3C348F01E25B849611223BA892DBC34AF1DDC448910 |
| 183 | F97CB286AF9033299406030D594F9033299453299813E5356180C1ACD667EC153D6180C0 |
| 184 | F052B0CD2C34B3C0B4FF55330CC3333001545A079A586699E56BE1550059B9999662A800 |
| 185 | FA648D80AF5630E414FA180D9F40A63318145031A715E5F3664F4150CE672A0A0861 B 140 |
| 186 | EE088843CE170889DC445D92D68482591088DD11085A4D26908A4577C421 EF178BC22110 |
| 187 | FA7D0D86CC66302814AF2818D38933617D40057D3246C39633D61450A8673396CB668140 |
| 188 | A954AA4AC9A32A6934FC7E00DF8CF180C060592C9654C6A4ADAAD40C867CE193FE030180 |
| 189 | FF2AB0CD2F02D330CC9919A94E961E2A80000550F12CF02D330CC66E6569E1969E6AA00 |
| 190 | CC61AA94A9934BFC1EC3662955496333C000331E154846648001E1C3E62975596833C200 |
| 191 | A954A6934FC7E0C060A62CA54D4F3060FD80565499534037E33C60592CDAAD50C8670380 |
| 192 | ED5C3896E122387490ED23B8890ED23B88901223B896EED5C0749012DC78A9112DC38A90 |
| 193 | F9563293EF929B28C006298D4C0F929B28C00629B293E0656328C0F9D64D6C106D632AC0 |
| 194 | AA482A92CFF6180078A54C968CCF0663C198662D198843307831E169AAE58543C004F201 |
| 195 | FA1B3D4729C2824CBE05648298C63579B140FA180298C9C281B141FA9B02B8D9CA85B140 |
| 196 | CF67B01809A32A54D49A4D1A8D4CF180FD8030678FD8065329AAD5654D656D5309830180 |
| 197 | CC61BFDE0994B154B49934AA8B4CC1E001E03C1983C0069332955469CCD6B553CE67C200 |
| 198 | CC61A5932AA52BC1FECC1E258CCAA2D3C000331E1A4CC552D03C00CC1E65ACDAAAD7C001 |

(continued)

| Index | Midamble Sequence |
|---|---|
| 199 | CA4FB293ECA4F8D4C0CA300D53ECA30328C035300D4C0CA4F8D4C135CFF2AC1CA30728C0 |
| 200 | EE70B75A41170889A444259DCF0BB25A20F0E1770B4441E7774A444BA261F11B4A21E110 |
| 201 | CC618FC1E99482A884C3663C00069331695466349554A331E001E0698356854C3E67C001 |
| 202 | F5633D58C935024D40F51C8298C932F9B1400A1CBD58C6C2FE4F410AE302B8D6CD01B140 |
| 203 | FC54BCCB2A97E2981830328FD2A65181A980032B0314CA97E29819CFCD302D565985A980 |
| 204 | FF19BC078992AA58B40F6180198695299954AA331692CCC000F3E15ACB2AACD3CF833000 |
| 205 | FC79B3D80A953194D403798C1805653268D4562C994D4038673F80A9ACE6AD4FC060C180 |
| 206 | ED5C3848E122384970E25888890E2588889012238848EED5C448711DA478A901D2438890 |
| 207 | F052A5986F02D258783C349681 E3C48169E0FF55265980055199993333355601CCB32AA00 |
| 208 | F9563293E06298D4C00629B293EF9560D4C0F929B28C0F929B28C006D672AC10656728C1 |
| 209 | CC4B3FD4AC34C83CAA9961AA9E09666168003334800B43C333C35599E1EABE096E656A00 |
| 210 | CC5530D4A997FA59E0C352B3154690799800332AB0D4A6600259E03C2D73355967859A01 |
| 211 | EE708883CD26EB4844110F3883C2D1134844442591168783898E110885A5136987C45E311 |
| 212 | EE5D888EEEE2208910E15A0B4F01E5A348F01E25B490E1E5A348F111A277711EEA208B10 |
| 213 | DD69375A4D26E88444883C220F087389E1102216875A42D110B44577C3A22F178C45E110 |
| 214 | FF61AA92CF066168CC3307998B43C00259545534800785A333C39999D2B33E196D54F000 |
| 215 | EE08B843CB425AEC88DD6EB49A48743A211011773843C4B5A2EE89229174BA5783C62310 |
| 216 | EE70AEC96E1772D08822169DD0E2D111E110110F11168E1772D288DDE9622F12D911E110 |
| 217 | E170AD168E10F12D68EE08AEC88EE77110882D169E0F02D6921CF022EEDDD11229162310 |
| 218 | FC54B3CCAA97E26860032B0C134A97E268600C2C8FD2A59061AB81F3D3702D459865A980 |
| 219 | D86BB6050D86BB6050271409DAED86BB6050D86B89DAE271436051271476251279476050 |
| 220 | E1693B9BAB443AED10E116845BAB43C111101E1684444B4C3EED111EE97BA45B43C11110 |
| 221 | AF4E2BD38A04997CD89C5798CA0935024D40504E141385F49A80D863D7E72A16CD05B140 |
| 222 | F9652B13EF91AAB0C0061A94CC0F91AAB0C0061AAB13E06652B0C1F9E554CC106E56B0C0 |
| 223 | EE708443CDD16889A44425AED687743A20F0E177385DCD21134A454B2252E8978C41E110 |
| 224 | EE6907844EE6907844BB4392CEE443C2D1101116B85BAEE694784544BC6D31144BC6D110 |
| 225 | EB75851D6EB0A050282713B604E276C361B0E47206DC81B72391C9281475E51D7940A250 |
| 226 | FF61A654A55348CC1E001E198B4AA4B331E0F066259545A330F001F0E6659555AB30F200 |
| 227 | EE08B7444E10FB5A4E170B49A4EE7708844445D9DD104BDA61EF04BA5DE2F1442222110 |
| 228 | EESDB8496E15A3B888112207968E15A3B888223B8B50E2D3C08911DD4474AF12DBC48910 |
| 229 | AA7FA6598A5781A4785A079A4785500265989919AA800961E56BE169E1D6BE066E66A800 |
| 230 | BBSA2ED6888439DCF0BB2591168883C220F04B2212C88783BA1F114BDDED28878C45E110 |
| 231 | FC4D00CCAA967AA59E0332BF134561815860F34A830D4A66029B81F3CAC32D4A6E069980 |
| 232 | 46BB9050E46B86DAEE46BB90501B14390501B1406DAE1B9479250E4EBF92501B1439050 |
| 233 | EB723ADC8EB0D851C8271409C50276BB6050140DBADC81472051C9D8EBC9E51D81476050 |
| 234 | FC2B3CCB2A901965E6CF32B0D49A181A98003548314C567E29819CFB2F02D59A985A980 |
| 235 | AF57ABCA09C31A71389349A4CD8A02FA814050282BCA0634E271396CB664CD95FD068140 |
| 236 | E1772D176E108AD0881E08AD1761E772D088D26EA1D102DEEDE1112D9161F11D2915E110 |
| 237 | FC54830B2CF4D0FCD4FC2B0314C304D300D45601A99E665182578156FE69A189A985A980 |
| 238 | FA648146CF5633D58C3602B25F439050E414AF3194138A036280D963D7E70A16CD0SB140 |
| 239 | FF19B3000A534A58B40F618F1E0554C99954AA3319954F01E0F3E15ACB25AB500E633000 |
| 240 | FF61B31E05534998B4A54CA59540F198F000001E331E0AA4B198B45AB365B54F0E60F20! |
| 241 | E472391C8D7688A050E40D86DC8D71435C50187206DC82868F5E5111B8DB93C928940A050 |
| 242 | EB0A3ADD6D813B61B0E40D86C36D7140A050147585028D813B61B01BF2791C9D7944A250 |
| 243 | FA4E3255EF549B19400531B255E0A363194005318D8A0F549B1940FACE0DAA10AB671B41 |
| 244 | FA57BD540055782940C94E0E4D83ME318D836318E4D8C931B18D805A87D741FAA842940 |
| 245 | F061A594AA54830DE0FF19A64AAAA33330000F1E1A484A54870FE100E659955AAB333000 |
| 246 | ED0EBB43AED0E849C4B82411D6EB8242E0901271049C4ED8EC49C547DBEE291B8A42E090 |
| 247 | AF57ABCA09C4E18D38A02FA814093361B0D8633198D3850A86BEA06CC9DB2D85F5028140 |
| 248 | EE08B843CD216B7444445D92D6878439DD10EE770783CD2690884544A26D36978BC22110 |

(continued)

| Index | Midamble Sequence |
|---|---|
| 249 | E170B485AEE08B75BA1E0F0B5A4117708844B45A21CF0BB2222111B4DA61EFBBA222310 |
| 250 | FA7AB2472C9633E814502F98D2663361414005050D98CC9633E814AF50670D963B654341 |
| 251 | FF660CC00A54B1A4B4F01E0F1E0AA33199545533265540F1E30DE15ACB65AB5006673000 |
| 252 | EE08B7444E10F0B5A4E170B49A4EE7708844445D9DD104BDA61EF14B25DE2F044A22211 |
| 253 | FF78001E0C3660F198994B1992CA55516954552D2A8B46933258CD331E732790F807C000 |
| 254 | FC5480CACF32C8314C3032B3D343F4AB00D4A97E2A5F8A6062981965985966616A605A980 |
| 255 | C94E31926FA578288E36318E4D805283D540C931B18D8FA2802940C981B1AD9FAA842840 |
| 256 | A94D2A4CAA94D15934FC67BF06003183F06059351652A593569AD40C9FC3381F3E003180 |
| 257 | FF4C95466F04B168780F34A958600332A998CC55198003C2D259E13CAD25BE1CCD559800 |
| 258 | EB7205036D86B89C50EB723ADC8271409C5014723AC36276BB605114F2453C9D89436050 |
| 259 | EE708745A1E088858ABB5A220F048221E110110F089A4E1F774A45BBDA222F14BA21E110 |
| 260 | FC7E00DF8A92B1158AC9A4D19534CF180C0600C063CC1859536994D6AB5656D53FE030180 |
| 261 | BB442D10EBB4412CF04B3C110EE4B3C2ED10BB3BAD0F044442D2F14BC3D1111B4BC51110 |
| 262 | EE08BB9DCE10F0783CD216B49A4DD1108844445D910884B5A2D36978C3DE0F177C462110 |
| 263 | EE70AED68E17712C8822169DCF02D1121D101170911681E772D289DD16E22F1D2911E110 |
| 264 | FA64BD58CFA1B0298C503197CD8504E280D836028E414367D318149CD7E4F419CA81B340 |
| 265 | F97CB286A067C8D46AAC5627CC05356180C006030D594F90332894ACD667EC153D6180C0 |
| 266 | E170B49A4B425A1CF0EE7708844BB221DD101E708B5A44BA5DE0F111F777645442222110 |
| 267 | FF550CCCC996615400F02D0F12C961E169E00F2D30D2C691E297E000D5732CD66E66A800 |
| 268 | ED5C3B5701D2407490ED23849701D5BB88901223BB570E25B8769112DC44B71E2A478890 |
| 269 | CC78331E09655259549952998B4C37F8F0003307B31E0692AA5954662D598B53C804F201 |
| 270 | CC4B3FD4ACC4B000B49961AA9E0661E2A9E03C3303CAA3C333C1556999D6A0196E616800 |
| 271 | FC79958B2A95300C18CF60194D4653533D800379AA4B256533F01830E066AD59AB54C180 |
| 272 | EE70AEC9622169DD0EE1772D0882D111E110110F11168DD69222F0E1F76D2892D911E110 |
| 273 | EB75BAC28140A3AC28E40DB91C81B72391C8271389DB0D86C09DB128EB8A251D7944A050 |
| 274 | FF55295E0C34B265980055169E03C4B1999833331A4780F2D15400CC3325A79F0AD6AA01 |
| 275 | EE692ED0E1116.910F0E16EAD110E16EAD1101116AED0EEE69512F11E116D3111E912D110 |
| 276 | CC4B30032FF52BC154CC4B0F0CC00203C154661E1A466550796800661E65B99AAF816A01 |
| 277 | FF5526598F02D258783333154003C4B169E00F2D1A478005519B99C3CB697E1CC332A800 |
| 278 | FC54A699EF3532558003549959E0C531A980032B19460F35325581FCAB26A610C031AB81 |
| 279 | CF67B01809A32A54D49A4D1A8D4CF180FD8030678FD8065329AAD565CD256D5301870180 |
| 280 | ED0EBB43AED0E849C41271049C4ED0E849C4B82411D6EB8246E09147DBEE291B8A46E290 |
| 281 | DD443490ED243B7510DD3BB48F02 D4388910223BB490E2D3C3771122C474AF1D23C48910 |
| 282 | EB0DBAC36D81409DAEEB0D851C8D814360501472051C8276BF6051EB8DC53C9D89476050 |
| 283 | F549BD526C650319400A363D526392FB1940F549828D8392FF1B410AB6428D9C6D031940 |
| 284 | DD4437510DD3B889102D3C0B4F02D43B48F0D2438B4F0D2BC74AF1223BF771122C408910 |
| 285 | F061B31FEA534A64AAA54B26554F01E330000F1E0CC005A4B19B55A5CB66754F09E73000 |
| 286 | FA57BE8A036318D938C94E0D93805283E8A00A2F82940C649B18D939B671AD9F5D042940 |
| 287 | FF2AB0CD2CC333C0B400550F12CCC333C0B4A507A6466961E2A8015AF859999969E2AA00 |
| 288 | EE6EB85A4443B92CF01111385A4BB4412CF0E116BB8444B43911101EE93BA45B4BC51311 |
| 289 | C94E32538C9318D9383631B2538364E0D938F5503D540F52FC2B410AAFBD7410AD002940 |
| 290 | FC79AA54C301F994D4A92CBF018654A8C18003062A54CCF60194 D456537F2199AB50C381 |
| 291 | F9298E4A6CA300D53E065601958354FB28C0F92981958CA3032AC0F929C1B59CAB0328C0 |
| 292 | F91ABE46AAC301403E066501994534FAB0C0F91A81994AC302B0C0F99AC1B95AC306B2C0 |
| 293 | E170AD096D26921CF0EE772EC8822111DD1011E7092C962DE95E2F1117751289DD112211 |
| 294 | CC663FC00C31E3C1E0964B294B499332A954663315554694B168B43C9E43FE033E640200 |
| 295 | CC7FA64AAC378258B43C079A54A33001995499553533000692D0F3E069AD4F3E199D533001 |
| 296 | EE77045DCB45A12D68221137444783C21CF0E10F0783CBB22110892DE974BA477C462110 |
| 297 | FF61BC198AA4B168CC33078F000662 D259545534968CC001E3C39999D2A5B55CCF84F000 |
| 298 | EB72051C8D86B89DAEEB72051C8271436050140DBAC36271476251EB72453C9271436050 |

(continued)

| Index | Midamble Sequence |
|---|---|
| 299 | FA648146CF51C8298CC970325F4C605318145031AB0385F49A80D963A858EA16CD01B140 |
| 300 | F07FB0C66C3663C0005A2A9A532693316954A555258CC693356B550F804F398C3E67C000 |
| 301 | CA4FB293ECA4F8D4C0CA30328C0354FB28C035303293E35300D4C1354FF2AC1CAB0728C0 |
| 302 | FC79B3D80562C994D4A92CA68D403798C180030633D80A953194D45653668D5FC864C381 |
| 303 | EE088843CBB2212D68226E885A4774421CF0E170889DCB45A110882D16C8A45783C62311 |
| 304 | AF57A7138AF2818D38A02FA4CD8A0501B0D86331940A063CE6BEA06CC9D7F406C3628140 |
| 305 | F9563E5580629BE55835300D4C0CA4F8D4C0F9298195806560195935CFF28C1CAB0728C0 |
| 306 | E15A38976D24387510E12584576D23C089101E2584488D243F77111EDA7BA88D2BC4891 |
| 307 | EE6EB845A443B92D0EE1693B8444B3C111101111079A4BB442D0F0E1693BA454BBC51311 |
| 308 | EE0F2EC96DD16A20F0E108AD0882D6E9E1101170AEC962269622F11EF76D289D2911E110 |
| 309 | FF61BC1985534968CC9952A595433078F000001E3C198AA4B168CC662D65B55CCF80F201 |
| 310 | CA653286A9F4FA7CC0CA1AB2994604F980C0351AB286A603027CC135E532B959FB0580C0 |
| 311 | FF7833078331E001E0552D1992C99482A884A555258CC6933169540F804F199C3667C201 |
| 312 | FC01B3C60A62CA54D4FC7E0C060A6531A8D45654995340C798FD8056AB66B350C8670180 |
| 313 | FC183CC7EA932A98D4A9329652AFC1803180036783180A932A98D556CD69AD4FC9843180 |
| 314 | FC7980C18A92C9594C301FB3D80654AA68D4A9532A54CFC063F01965B5196D530E00C380 |
| 315 | FA02BD5EA9C31A4D26C91B3198CAF2828140057D02814634E5B2D8C99B71B8DAFA828140 |
| 316 | FC79AA54C03799594C9A4AB3D80654A8C18003062A54CFC0615B4D65B573F819A354C180 |
| 317 | F04B3C12CAA662A9980F34BC12C5519AA998C3528F0B4997F998003C2D4F2B5668019A01 |
| 318 | E1693845AE169079A44B3C12D0E4B3C2D0F0EE6EBB84411117BA4544BBD1311BBC411110 |
| 319 | E16EB85BAB44412CEE1E11078444B3BA1D110E16E87844B4442D111E1EE87A45B4C42D310 |
| 320 | F5503D4BEC6498E526C649B18D8F550029400A2F82940393631AD9C6C9F1AD9F55042940 |
| 321 | FC54B3D34032B33D34560199460A97E19460F32CB00D40C53300D459F9DAB81A6065AB80 |
| 322 | ED712E16E127111D6EED7111C9012712E090120E91C90ED0EAE290EDF151E9112F12E090 |
| 323 | EE6EAED10E116AD0F011112ED101E692D0F01E1692CF0116E91311E1E952EF1EE1151110 |
| 324 | F9653E46AAC4FAB0C0061ABE46A5330280C0061A81994AC4FAB0C1F9E541B9453B06B0C0 |
| 325 | F07FB0D98C319BC000A5551A4CC9633169545A2A9A4CC69CCD6B550F0070F993C663C000 |
| 326 | FA4E3255E0A360E4BEFA4E0D8A00A363194005318D8A0F549B1B41FACE4D8A10AB671940 |
| 327 | FF662952C553303C7833001A4B4995530DE0F01E2A8CC5A4B003993CF819B5596AD33000 |
| 328 | AC562B1589F3027CC05329AB158604FA7CC0AC2994D589F4F982C053D654F5960B0580C0 |
| 329 | C94E324C6F5503D4BE36318D9380A2F82940C94E0D938F55002941C9CE4D939F5D042940 |
| 330 | AA4CA952CA534AA8CCCC7FB0DE0C307B300055332952C5A4B2A8CD338070FE13CF833200 |
| 331 | FA64ABD38F51CA80D8360298CA0397A9B140051B2BD380A63280D9C9FD18EA1C6855B140 |
| 332 | A94D2A4CAF3603CC7EA94D15934F360031805632959340C1F83381A9CD55B35F36043181 |
| 333 | F07FA94AA964CB0C66C366258CCA5553C0000F001695469330F399C3E665ACCA5D57C000 |
| 334 | EE70AD17622169E0EEEE0F2D08822691E110110F12C88DD6921F11EE8F6D08922E91E110 |
| 335 | F550318D8C649BD4BE0A2F8E526393602940F550318D8393602B41F5D071AD9393602940 |
| 336 | AC562B1589F3027CC0AC2994D589F4F980C05329AB158604FA7EC1535654F5960B0580C0 |
| 337 | EB75851D6D86C09DB0EB0A05028276C361B01B0DB9036281435C511BF2393C9D7944A050 |
| 338 | E15A38496DD44374EE1E2587968223B88910E15A07968DD4408911E1DA47969DDC448911 |
| 339 | FF6630DE00F1E0CC0055331A4B4A54B26554AA33258B45A4B1995400E64F3E1F09E33200 |
| 340 | FA64A715EFAB270A0051B118CA0FA1B270A00A1C9B0BE0A631B341F5E364F410A631B140 |
| 341 | FF660CC00A54B1A4B4AA3319954F01E0F1E00F1E30DE05533265555ACB65AB500E633000 |
| 342 | FF00264CCA52D30C780F781A52C55550CD98CC662A954964B3C1E03C1E56AB566B340001 |
| 343 | C957B255EC9578D8A0C65031940392FB194036283255E36280D8A039AFF1B41C6D031B40 |
| 344 | CC66264CCAA553FC003C1E1A52C5A2D03DE0C31E2592CA52D3C3E133E659ACC55D540000 |
| 345 | FC79AA54C9A4AB3D8003062A54C653533D8003799594C654A8C181FC865594D9AB54C380 |
| 346 | FC79AA54C03062A54C9A4AB3D80653533D8003799594CFC0615B4D65CA8C3819A354C181 |
| 347 | AA552592CA52D264CCFF0030C78F078331986633168B4694B1555433E643FE13C9E40000 |
| 348 | EE708883CB45DA1D0882216889A478389E110110F3883C48222D089DDE9488A587C41E110 |

(continued)

| Index | Midamble Sequence |
|---|---|
| 349 | FC01B3C60A954A6934A62CA54 D4F379B0180037E33C60562B66B3559D3656D50C0630380 |
| 350 | CC61B3078FF78001E0964CA58CCA5551695466349992C552D2A8B43C19CF3990F807C001 |
| 351 | EE708443CBB2591168E177385DCB4222D0882216B75A47743A20F02D914B44578C45E111 |
| 352 | DD443490EDD38848F0D243875102D438891022388490E224434AF12D3C77711D28C08810 |
| 353 | FF4CB0D4A0F348CCAAAA66259E05A1E1980000330F084F04833154AAE6658E15A9E19A00 |
| 354 | FF55265980F2D1A478F02D2587800551999833331540 0C348297E13CCB568E0CCB36A800 |
| 355 | DD693745ADD69089A42D110B5BA2D11348448843A20F0773C222F178BB9E31187C45E110 |
| 356 | C94E324C6C649B18D8FA578155E1F5500294036318D938C649B18D805287EAA1F55042B41 |
| 357 | E177385DCB45D92C88D21134844873B9E1101E08B85DC4BA212E892DEEF4A4478441E110 |
| 358 | AA553FC00964B30C785A2D03DE066330CD98993333198A52D3C3E1694B4F27955D540000 |
| 359 | F061BFC669652A64AAA54B2A8CCC378330000F1E0019869AD59B55A54B6AACDC37833000 |
| 360 | E170AD168D216A1CF0EE08AEC88DD6EA21101E0F2D1682DE961EF111F72EE89229122110 |
| 361 | AA782A9E0A57F9680099619987896662599 8661E198786919A59995587EA9E15A8056800 |
| 362 | FC54BCCB2032B0314CCF4D300D4CF4D300D45601965E6A97E2981965985A98165985A980 |
| 363 | AF57A70C69C4E2BCA0A05024CD86C3617D40505798CC663CE540A15FD05B2D8933628140 |
| 364 | BB5DAD168B425AEC8844222D1684B5A2EC88883BAICF08743A231177C461CF178BC22111 |
| 365 | F9652B13EF91AAB0C0061AAB13E06652B0C0061A94CC0F91AAB0C0F9E554CC106E56B0C1 |
| 366 | A9532692AFC798C07EA92CA68D4FC060C180562C994D4030633F81A9ACE68D5FC860C380 |
| 367 | FC01A9882A9548CDE6CF18254D49A4D30180037E1654C562803219CF18656D59ACD70380 |
| 368 | FC01B3C60A954A6934A92B19534FC7E0C0600C798FD80592CDA8D559D3656D50C8630180 |
| 369 | EE77045DCB45A12D68221137444783C21CF0E10F0783CBB22110892DE974BA5774422310 |
| 370 | FA02BD5EAC91B3198C36648E472057D02814AF2828140634E1B0D963CE5B2D9AF2868140 |
| 371 | FC79BF0189A4AA68D4562C9594C301F8C18003063F018653526AD5A9D355B4CCFE04C180 |
| 372 | FC5480CACCF4D33D340354BF0AC304D0C134A67996418 95602558159F9E9A196AE01AB80 |
| 373 | C97D318149C57A4CBEC97D3181463281B14036028E5EA63281B140C97D71A1563285B341 |
| 374 | EE77349A444221E0F0E10F374444B5A1DD1011770B5A4BB2221CF01E0F48A44B4DA62311 |
| 375 | FC54AA5F80354959F8CF4D19460304D268600C2C96418F32CA98193FB565781C0B55AB80 |
| 376 | FC54BCD4C9A67A5580032B3CD4C65182558003548314C65679A980FCAB4334D9A185AB81 |
| 377 | EE7091096DD169DD0E110F2ED682269220F0E17712C88D2111E110E17752E89D2915E111 |
| 378 | FA64B25F4AF4E18CA005648D9F4504E270A00A1C8E4145F3624D40F59CF1A15A0365B340 |
| 379 | FF5530D2C55001A4780F2D0CCCCA57826598CC333C0B4666616BE13C4B40355961E6A800 |
| 380 | FF662655455330CC00F01E258B45A4B0F1E00F1E1A4B4A54B30FE1006659B55AAB333000 |
| 381 | AA52A652C964CA9554FF07B3078C319BC000552D2652C69332955400787 32783CE67C201 |
| 382 | A954AA4ACF379BCC18562B2A4AC0C063CC189A32A6934C01FF0381654D66B353F6070380 |
| 383 | FC54BF0AC032B3F0AC9A67A68606518268600C2C8314CF3530334D6A9FDAB8195E01A980 |
| 384 | CC663C1E0C31E3FC009933294B4964B2A9546633168B4694B1555433E643FE13C9E40000 |
| 385 | FC01B3C60A954A6934A62CA54D4F379B0180037E33C60562B66B3559D3656D40C8670180 |
| 386 | F0553C154C34C8F0CC0F2ABC1543C330F0CC966625998A57F968016999E5B995A0056A00 |
| 387 | EE0F38422BB25AD0881170879DCBB25AD088DD168B5BA883C5E31122E974A4488BC5E310 |
| 388 | EE5D84488E15A38568E12587968EE223B888223BB75102D3C0B4F02DC3F4AF122C408B10 |
| 389 | CC5530D4A997FA59E03C2D0CCAA690799800CC550F0B46600259E03C2D7315596F859A01 |
| 390 | FA1B3240AF51C8E5EAAF31A70A0A0361B14005648D9F40A6331A15AF31E72A1A0B61B140 |
| 391 | AA4CBFD98A54B03C789652B0DE09955C0C00554C801985A4B3C0786952CF3E166D573200 |
| 392 | A9533F1E6A92CBF018A95300C1856533F01865350C07E654A8C180653573F809AB54C381 |
| 393 | EB75BAC28D813B61B0140A3AC28276C361B01B0D86DC8286B8A051E4F246FC9D7940A050 |
| 394 | AC562B158AC2994D589F3027CC09F4F980C05329AB158535614F59604FE7EC160B0580C0 |
| 395 | FC533F14CCF4A8C0D4032CBF14C30350C0D4560615818651FA6981A9F9D5A199A6066880 |
| 396 | FA02A70C6C91B2BCA0057D18D38C91B2BCA0F57AA4D26C663283410A855B2D9C6E328140 |
| 397 | F052BFD54A57815400C334B30CC961E199983C348CCCC691E265980FD2803555AF86AA00 |
| 398 | AF502BD409C4998CD8AF2F941409C36270D8633618CD8502FABF4163C9E72D9505014140 |

(continued)

| Index | Midamble Sequence |
|---|---|
| 399 | F57AB198CF5050E58C0A7A8E58C0A053198C9349A8140933617D406CC9D7F406CB668341 |
| 400 | FF55330CC333300154A57825878691E169E00F2D0F12CC34B3C0B5558059B9999E62AA00 |
| 401 | FA02ABD5EC91B27138366498CC6057D140A0F5052814039635B2D939635B2D9F50528140 |
| 402 | EE70885DCDD1684844442592C8877439E110110F385DC22693484488DA52E89888C1E310 |
| 403 | EB0A361B0EB0A361B0E40DB5DAE1B720A050147589C4EEB0A361B11BF24A2511B720A250 |
| 404 | F91AAB0C0F91A94D3EF91AAB0C006652B0C0066514D3E06652B0C1F99AEB0C106E56B0C0 |
| 405 | CC4CBC14ACC333C0B4333303CB4CC333C0B49661AA9FE961E2A800699E55401969E2AA01 |
| 406 | FC54B3D34A97E194600C2C8FCD459062558003548C134567E66A61F32CF02D5A6865A980 |
| 407 | ED76B883A1209075C412768743AED09389C4B85C2DC90B85C6DE9147DC5209147DC52090 |
| 408 | FF6603C78AA331692CC3780CC00962D1995455332952C00667C279692D667553CF833000 |
| 409 | F061BFD98C3780CC005A34954CC692D26554A534AA8CC962D59B550F61 C03993CF833000 |
| 410 | A979A6980A979A698056061947EA979A6980A9799947E560666B81568666B81560626981 |
| 411 | FC7980DE6A9531594CCF600C1806535268D4562CAA4B203063F219653566AD5CFE00C180 |
| 412 | EE692ED0EE16EAD1101116910F0E16EAD1101116AED0E1E116D311EEE9512F01E112D110 |
| 413 | EB13B9050EB1386DAEEB1389050146C39050146C06DAE146C39051EB93F925014EC79050 |
| 414 | E1693B9BAB443AED101E69045BA4B4391110E169044444B3C2EF111EE97BA45B4BC11310 |
| 415 | EE113845AEE11079A4116E879A4EE11079A4B43C2ECEEB43C113104BC3D1311B4BC51110 |
| 416 | FF4CBC12CA561AA99800333C12C5A1E2A998332A8F0B4690799800CC554F2B596F819A01 |
| 417 | C964B1872FA02BD5EA9C4E24CD8AF2828140361B0E58C057D02A159C4E64ED9AFA868140 |
| 418 | A954A6934A62CA54D4FC01B3C60F379B0180562B269345953654D503FE73E610C8630180 |
| 419 | A97E2A5F89A182686056111AA5F86567A6860A67996418951F9A9805906566196AE05A981 |
| 420 | FA64B19EAFA1B31814051B0E414FA1B3181450319BBE504E1B141AFCE64F4150CE5B140 |
| 421 | AA78265869961AA9E05507998789961AA9E0A57F9A466966656A005A8065B9996E616801 |
| 422 | E170B843CDD6EB7444B425AD168883BA21101E0F3843C2211374454BDA2D36977C462310 |
| 423 | E170AED76E10F2EC88D216A20EED269221101E0F11088E10F6EC892DE95DF11D2E962110 |
| 424 | EB723AC36140DBAC36140D851C8EB72051C8D86886050271476251D868F6250279476051 |
| 425 | CC5530D4ACC550F0B4332A8F0B4CC550F0B49678265FE967819A016987D9A0096F859800 |
| 426 | FF07AA8B4C319A58CC5552801E0694C8F198CC1E1992CF00056B55664B732795AD53C000 |
| 427 | F9563E55835300D4C0F92981958354FB28C00629BE558CA4F8D6C006D641B59CAB0328C0 |
| 428 | FC5480CACA97E2A5F8F32C8314CA606298183032B3D346518194603FCAF02D56A605AB80 |
| 429 | AA4CBFD98A534BC0785A3483C78554C8019899550CC00962D4F3E169AD70FE066D573000 |
| 430 | FC01AA4AC9A3283C60037E2A4AC654D33C60F379A994C954AB03810C866984D6AB530380 |
| 431 | AC4FAB13EAC302B0C053302B13E534FAB0C0AC4F94CC0534FAB2C153B054EC1ACB02B0C0 |
| 432 | FA57814A0C6498E4D8FA283E8A0C636318D83631B25380A2FBD54136CE4DB390AD002940 |
| 433 | FF782652CA55530D9800781992C5A550F198331E154B4693303C00CC1E6AAB596833C201 |
| 434 | C964B1872C91B3198CFA7D3D414057D0281463319B126634E1B0D850A857F41AFA828141 |
| 435 | FA648146CFA1B3E86C0A1CBD58C0A630298C9C5798CA09C28272A16CAFE4F416C505B140 |
| 436 | CF4D2699ECF4D19460304D1959E304D26860C04AA55803F35255813FCA1DAB81C0355AB80 |
| 437 | FC54AA5F8303299460F353164183F35255800354959F8CF32A68610CD329A19C0B55A980 |
| 438 | CC66264CCFF002A9543C1E1A52C0F78168B4964B30C78A52D3C3E166B34CF99555540000 |
| 439 | EE70B850C22168B44411708790C0016B4844BB5A12C88773C61D1144DA6D289883C1E110 |
| 440 | F9033E40CAC562B158067CBE40C5329AB158CA1A8D5949F4F982C035E54D79560B0580C0 |
| 441 | E1693B844B443AECEEE1693B8444B3C111101E16845BA4B3C11111E1E97BA454BBC11110 |
| 442 | AF4E2715EA03624CBEAF4E18CA0A0361B140503198CA05FC9DB141AFCE58EA1A0361B140 |
| 443 | CF4D3012ACF328FD2A30328FCD4304D300D49A67A55809A181AB819AE7E57809A185AB81 |
| 444 | F57AB0414C61CB198C9349A4C08A02FA81400A05304143963319806CB664E095F0068140 |
| 445 | FA4E305260531B0526053182808FA4E02808C957B1940362831B41C9D7F1B41362871B40 |
| 446 | F57AB0414C61CB198CA0501704093361B008391C8E58C0A7AC2A156C3664ED95F5028140 |
| 447 | F379A994CF3061654C954AB018095350FD800C799654C0C0629B4D6ACACFF816AB530180 |
| 448 | ED713B43A120E849C4120EBB43AED71049C4B85BAE090B85BEE29147A46E29047A42E090 |

(continued)

| Index | Midamble Sequence |
|---|---|
| 449 | FA7A81414C9633258C502FABD40633618CD8C91C8D98CFA053E81463C9A72D950D054340 |
| 450 | C964BE9F4C663028149C31ABCA09336170403664815F43963304156331D42A16CB668140 |
| 451 | C964A70C6F57AA808EC91B27138F50528140361818D380A0517D41C99827339F58568140 |
| 452 | EE7087822DD168BSBA110F385DC226934844BB5A12C88883C5E311BBDA52E8888BC5E110 |
| 453 | CC61AA94AC366295549934BFC1E96333C000331E154B4C36629554664B403E196B37C200 |
| 454 | FF5530D2C00550F12C0F2D0CCCCF02D330CC9966295E06666169E1699E55601969E2AA00 |
| 455 | FC79BF018562C9594C9A4AA68D4301F8C18003063F018A95315B4D65B526AD5CFE04C180 |
| 456 | D86BB6050D86B89DAE271409DAE271436050D86BB6050271436051D8EBF6251279476050 |
| 457 | EE0F3745AE1088B5BA1170889A41E7734844BB25A20F0B4225E311BB25E22F1B4A25E110 |
| 458 | FA7AABD4005052BD40C91CA70D83663270D8361C98CD8C96318CD805FAD4340FA8554340 |
| 459 | FC67AA534FC18159340C1F964D40C60298D4563280C6056CD3F261A6CAFCF81A63503180 |
| 460 | ED76BB424E271075C4472391D7048242DC901276848241D71389C4B8A3EE370B7A452290 |
| 461 | F052A95E0FF2AAA8003C349A478334C99998C34B1A478CC33199990FAD697E100D52A800 |
| 462 | DD443490ED23C374EE223B8B4F02D4388910DD440B4F0D23C08B11DDC44B6F0D2BC08B10 |
| 463 | EE0F38422EE0F079DCDD16B4844226934844445A12D76445A2D28977C3DE31188BC5E110 |
| 464 | FC01AA552A62CBCDE6037E158AC595303018CF1826934953530381CF9866B3495B570380 |
| 465 | F9563E4A6F9560195835300D53E3530328C0062981958F95601959CACFF2AC035B0728C0 |
| 466 | EB75B91C827138A050EB0A06DC8276C35C50147586DC8D813B5E51148A793C8D8EC0A050 |
| 467 | F061AA932C37826554A54B3FD98692D0CC000F61955323C78599555ACB40399962D33201 |
| 468 | FC4D00CCAA96795860F34ABCD2AA660299800332BF134A967D5A600CB5432D5A6E029980 |
| 469 | F97CAB0A6060314D58CA6527CC0CA6527CC0067C94CA6F9032B3593565582C13565580C0 |
| 470 | E25BB896EE2240756EE25B87490E224388901D24074901D5BB8891E2DBC7690E2A478890 |
| 471 | F052B3132F02D330CC0F2D0CCCCF02D330CC9661AA9FE961E2A800691E55601969E2AA01 |
| 472 | CA4FB293ECA30328C0CA4F8D4C0354FB28C035303293E354FB28C035304D6C1CAB032AC1 |
| 473 | A954A68CAA653254D4FC7E33C600C060FD805654994CA59531A8D5037E4C261F38670180 |
| 474 | F379A552AA653301800C799A92A59530FD80F306254D459534FF810C865A8D5A6D330180 |
| 475 | FC530C0D4FC530C0D4032CB3D2AFC530C0D4A9799947E560626B81560666B81568626980 |
| 476 | F0782592CA52D30C78FF00264CCAA55331983C1E168B4694B03DE133E61575566B300200 |
| 477 | FA64A715E056498D5EF56324D400A631B140051B18CA0FA1B270A0F5E364F410A635B340 |
| 478 | C97D319EA9C2824CBEC97D0E4149C281B14036028E41463579B140C9FD0E6159CA85B340 |
| 479 | FC54BCD4C03548314C9A67A558065679A980032B3CD4CFC2B0334C6598657819A981AB80 |
| 480 | FA1B3E86CC9028D9F4F51C8298CC60531814504E141386357A72A05FC9E82D96CD05B140 |
| 481 | F07FA5932F000258CCA55530D985A550F1983C19968AA3C6616954693343E0196B33C201 |
| 482 | ED0EBB43AB8242E090ED0E849C44758AE09012713843A4758EE2911271448C588A46E090 |
| 483 | FC5300CB2CF4A8C0D4A979AA5E69A6026980032CBF14CCF4A8C2D5568655A199AE066981 |
| 484 | FF529541ECC4819878C34C9A466F05516800002D2A9E0CC4819A783CB365899F0D556800 |
| 485 | EE6E845BABB4411110E169079A44B3C2D0F01E16B845A4B3C2D0F111917BA45BBC41131 |
| 486 | DD692210EDD691DCF0DD16A20F02269220F02D111E0EE2D1121F112D6EDE311D2911E111 |
| 487 | E170AD168EE08AEC88E10F12D68EE77110882D169E0F0226E9DD102DE961CF1229162310 |
| 488 | F5633D58CC67A8E4140A1CBD58C39050E414A036280D8932F9B3415F49E82D96CD01B140 |
| 489 | F379A98B2954AB007EF3062994C9535301800C061654D6AB50FF81F38669B4C953530180 |
| 490 | CF6033D809A4A994D4CF1F8C1809A35268D46535194D4301FB3F8065CAE6AD530E00C180 |
| 491 | FC7E2A4AC301819534A6533CC86A350FD80037E158ACCF182693559D34321895B530380 |
| 492 | DD6EB485ADD11349A42D16889BA2D6908844884421CF077441E2F078BC5DF1187BC62110 |
| 493 | C9633E9EAC96301414C91CBE81436633E8146336140BE63362BD416349D43419CB654140 |
| 494 | E170AED76D216A20EE1E0F110882D691DDJ0E10F2EC88D2E922311E18F6EE89D2E92211 |
| 495 | EE5D84576E15A079681E25B849611223B888DD44089102D3C348F12DBC74AF1DDC448B10 |
| 496 | EE690445AEE69389A41E113858A1E11078448843910F0443C110F14888ED31184446D310 |
| 497 | CC7FA594A995530DE0C307A64AA962D3300033001A4B4995570FE03CF859B5596AD73000 |
| 498 | EB75851D6EB0A05028D86C09DB0276C361B01B0DB90361B72393C9289475E51D7140A050 |

(continued)

| Index | Midamble Sequence |
|---|---|
| 499 | FA7D3198CC91B3D41450281B0D8634E17D40057D0E58C361B02814AF2864ED89CCE68341 |
| 500 | D86C3604ED76BB5C502713B604E281435C50D813B61B0286B8A25027EC763B1D7944A050 |
| 501 | EE5A04496EE5A3B968223C3750E223C088F0E15D878881E22078882DBBF4B11D2C434B10 |
| 502 | FA7D140A0C6631BD8C91B18D38F50517D40057D2BCA0396324CD9369B273390A8568140 |
| 503 | C97D325F4C67A8E414632818CA06C2FA4D40C9028D9F4C605318156357E72A16CD05B140 |
| 504 | EB6C3AC4EE46BB90501413851B0E46BB90501413BAC4E1B1439050EBEC451B11B9479250 |
| 505 | FA6301472C97A8D814FA633E98C36050D81450362BD26632FE714150B6542D99CD027140 |
| 506 | E169385A4BB442ED101E16B85A4443BAED10E116879A4BB3B913111E6947BA5444451311 |
| 507 | A9533F1E6A92CBF0189A4A8C07E9A350C180562C80C18A92CBF01965B573F819AB54C380 |
| 508 | BB442ECEEBB44111104B3C12D0E4B3C2D0F0B443AD0F04B3C6D2F144BB91311BBC411110 |
| 509 | FC6780C60A93295934A94D2A534FC183F0600C1FBCD80594AA9AD559B5566D50CE003180 |
| 510 | FC7E00DF8A92B158AC9A4D19534CF180C0600C063CC18595369B4C6AB5656D53F6070180 |
| 511 | F052A95E0C34B1A4780F52969E03C4B25878CC4CA6598FFD55560133CCD9B9800D56A800 |

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

**Claims**

1.  A method for sending a middle pilot, **characterized by** comprising:

    selecting a middle pilot sequence set;
    creating a middle pilot subcarrier union;
    mapping by a base station a middle pilot sequence in the middle pilot sequence set after modulation, through an OFDMA or OFDM symbol used for transmitting the middle pilot, onto a middle pilot subcarrier in a middle pilot subcarrier union corresponding to each transmission antenna, or, mapping by a base station a middle pilot sequence in the middle pilot sequence set, through an OFDMA or OFDM symbol used for transmitting the middle pilot, onto a middle pilot subcarrier in a middle pilot subcarrier union corresponding to each transmission antenna and then performing modulation on data at the subcarrier.

2.  The method according to claim 1, **characterized in that** the step of creating a middle pilot subcarrier union comprises: setting a subcarrier in the OFDMA or OFDM symbol, the index of which meets the following condition, as a union of the middle pilot subcarriers, for transmitting the middle pilot sequence, of all wireless communication networking units:

$$\left[ N_{start} : 1 : N_{start} + f\left( \frac{N_{used} - 1}{2} \right) - 1, N_{start} + f\left( \frac{N_{used} - 1}{2} \right) + 1 : 1 : N_{start} + N_{used} - 1 \right]$$

the above formula represents that the index increases to $N_{start} + f\left( \dfrac{N_{used} - 1}{2} \right) - 1$ in the unit of 1 starting

from $N_{start}$, and then increases to $N_{start} + N_{used}$ -1 in the unit of 1 starting from $N_{start} + f\left( \dfrac{N_{used} - 1}{2} \right) + 1$,

wherein both $N_{start}$ and $N_{used}$ are positive integers, wherein $N_{used}$ is the number of the subcarriers other than protection band subcarriers in an OFDMA or OFDM system, and $f\left(\dfrac{N_{used}-1}{2}\right)$ represents the integral value

by flooring the $\dfrac{N_{used}-1}{2}$ .

3. The method according to claim 2, **characterized in that** when $N_{usea}$ is odd, $f\left(\dfrac{N_{used}-1}{2}\right)=\dfrac{N_{used}-1}{2}$ ,

when $N_{used}$ is even, $f\left(\dfrac{N_{used}-1}{2}\right)$ is the minimum integer greater than $\dfrac{N_{used}-1}{2}$ or the maximum integer

less than $\dfrac{N_{used}-1}{2}$ , or the number obtained by rounding $f\left(\dfrac{N_{used}-1}{2}\right)$ .

4. The method according to claim 1, **characterized in that** said middle pilot sequence is a binary sequence.

5. The method according to claim 4, **characterized in that** said method further comprises:

   if the middle pilot sequence is represented by hexadecimal, then the hexadecimal middle pilot sequence is converted into said binary middle pilot sequence to be transmitted.

6. The method according to claim 1, **characterized in that** said modulation is to modulate element 0 in the sequence to be 1, modulate element 1 in the sequence to be -1, or modulate element 0 in the sequence to be -1 and modulate element 1 in the sequence to be 1.

7. The method according to claim 6, **characterized in that** the middle pilot sequence $b_n b_{n-1} \cdots b_0$ which have been modulated or not are successively mapped, in an order from the highest valid element $b_n$ to the lowest valid element $b_0$, onto middle pilot subcarriers ranked in ascending order corresponding to each transmission antenna, wherein $b_n$ is mapped onto a middle pilot subcarrier with the minimum index or onto a middle pilot subcarrier with the maximum index.

8. The method according to claim 2, **characterized in that** during the mapping, the middle pilot subcarrier, the index of which meets the following condition, in $N_{used}$ subcarriers is regarded as the middle pilot subcarrier used by a middle pilot symbol corresponding to the transmission antenna n:

$$\left[ N_{start}+offset+n:\Delta:N_{start}+offset+n+\left(\frac{P}{2}-1\right)*\Delta, \right.$$

$$\left. N_{start}+offset+\frac{N_{used}-1}{2}+n+1:\Delta:N_{start}+offset+\frac{N_{used}-1}{2}+n+1+\left(\frac{P}{2}-1\right)*\Delta \right]$$

representing that it increase to $N_{start}+offset+n+\left(\dfrac{P}{2}-1\right)*\Delta$ by the interval of $\Delta$ starting from $N_{start}+$

*offset + n,* and then increase to $N_{start} + offset + \dfrac{N_{used}-1}{2} + n + 1 + \left(\dfrac{P}{2}-1\right)*\Delta$ by the interval of $\Delta$

starting from $N_{start} + offset + \dfrac{N_{used}-1}{2} + n + 1$, wherein $0 \le n \le N_{Tx}-1$, $\Delta$ is the interval between adjacent middle pilot subcarriers in each transmission antenna, $N_{Tx}$ is the number of transmission antennae, P is the number of middle pilot subcarriers used by each transmission antenna over the middle pilot symbol, *offset* is the number of specific offset subcarriers corresponding to the wireless communication networking unit and is an integer; and $N_{used}$ is the number of subcarriers other than the protection band subcarrier in the OFDMA or OFDM system;
wherein *offset* is determined by at least one of the following: the index of the wireless communication networking unit and a frequency division multiplexing factor.

9. The method according to claim 1, **characterized in that**
the middle pilot sequence set to which the binary middle pilot sequence corresponding to the wireless communication networking unit belongs is determined by at least one of the following factors: the number of transmission antennae corresponding to the wireless communication networking unit, system bandwidth, the number of subcarriers of the system, the number of discrete Fourier transform points, and the index of the wireless communication networking unit; and
the following factors determine the index of the binary middle pilot sequence in the middle pilot sequence set to which the binary middle pilot sequence belongs, with the binary middle pilot sequence being the one to be transmitted and corresponding to the wireless communication networking unit: the index of the wireless communication networking unit, the number of part or all of sequences contained in a predetermined sequence set to which the middle pilot sequence corresponding to the index of the wireless communication networking unit belongs.

10. The method according to claim 9, **characterized in that** said wireless communication networking unit comprises at least one of the following: a cell, a base station, a sector, and a segment.

11. The method according to claim 9, **characterized in that**
the index I of said middle pilot sequence to be transmitted in the middle pilot sequence set to which said middle pilot sequence belongs is one of the following:

*I = f(BSID,CellID,MaxSeqNum),*
*I = f(BSID,SegmentID,MaxSeqNum)*
*I = f(CellID,MaxSeqNum)*
*I = f(SegmentID,MaxSeqNum)*
*I = f(CellID, SegmentID,MaxSeqNum)*
*I = f(SectorID,SegmentID,MaxSeqNum)*
*I = f(CellID,SectorID,MaxSeqNum)*
*I = f(CellID,SeetorID)*
*I = f(CellID, SegmentID)*

wherein *MaxSeqNum* + 1 is the number of part or all of sequences contained in the middle pilot sequence set to which the base station or cell or sector belongs.

12. The method according to claim 1 or 8, **characterized in that**
after the modulation and the mapping are completed, the data at the subcarrier of an OFDMA symbol corresponding to n-th transmission antenna are:

$$P_{CellID,n}(k) = \begin{cases} 1 - 2q_{CellId}(m), if \ k = m*\Delta + N_{start} + offset + n + \left\lfloor \dfrac{m*\Delta}{\dfrac{N_{used}-1}{2}} \right\rfloor \\ 0, otherwise \end{cases}$$

wherein $k = N_{start}, N_{start} + 1, \cdots N_{start} + N_{used} - 1, k \neq N_{start} + \dfrac{N_{used} - 1}{2}$, $m=0,1,...., P\text{-}1$, $q_{CellID}$ is a middle pilot sequence with the index of *CellID* and corresponding to the wireless communication networking unit; $\Delta$ is the interval between adjacent middle pilots of each antenna, and *offset* is the offset of the specific subcarrier corresponding to the wireless communication networking unit.

**13.** The method according to claim 1, **characterized in that** the middle pilot sequence set is generated via at least one of the following operations:

selecting a natural number n for a middle pilot sequence set which contains *S* sequences, wherein n is the minimum natural number which meets $2^n \geq \dfrac{m}{2}$ or ($2^n \geq m$), and *m* is the length of each sequence in the middle pilot sequence set, and *S* is a natural number;
or generating n middle sequences $x_i(k)$, wherein $1 \leq i \leq n$ and $1 \leq k \leq 2^n$, the length of each middle sequence is $2^n$, wherein then $i$ ($1 \leq i \leq n$) th middle sequence is $x_i = (1,1,\cdots 1,0,0,\cdots 0,\cdots 1,1,\cdots 1,0,0,\cdots 0)$, wherein the number of the consecutive 1s or consecutive 0s is $2^n/2^i$;
or generating *S'* permutation sequences of sequence $[1,2,\cdots n]$ or *S'* different arrangements of sequence $[1,2,\cdots n]$, wherein $S' \geq S$ and *S* is the number of sequences in said middle pilot sequence set;
or generating *S''* Golay complementary sequence pairs of $a_i$ and $b_i$ with the length of $2^n$, wherein $1 \leq i \leq S'$;

wherein, $a_i = \displaystyle\sum_{l=1}^{n-1} x_{\pi_i(l)} x_{\pi_i(l+1)}$, $b_i = \displaystyle\sum_{l=1}^{n-1} x_{\pi_i(l)} x_{\pi(l+1)} + x_{\pi_i(1)}$, and $\pi_i(l)$ represents

the *l-th* element of *i-th* sequence in *S'* permutation sequences;

or selecting M index sequences $I_j = \left[ i_1^j, i_2^j, \cdots i_m^j \right]$, wherein $1 \leq j \leq M$, and any two elements in each index sequences are different and each element belongs to an interval $[1,2^n]$;
or in the generated S' Golay complementary sequence pairs, selecting for each sequence $a_i$ and/or $b_i$ elements corresponding to index $I_j$ to construct a new sequence and totally construct *S'M* new sequences, wherein when

n is the minimum natural number which meets $2^n \geq \dfrac{m}{2}$, the generated new sequence is $[a_i(I_j),b_i(I_j)]$ ($1 \leq i \leq S$,

$1 \leq j \leq M$), and when n is the minimum natural number which meets $2^n \geq m$, the generated new sequence is $a_i(I_j)$ or $b_i(I_j)$ ($1 \leq i \leq S, 1 \leq j \leq M$) ;
wherein $a_i(I_j)$ represents to select the elements with the index of $I_j$ in $a_i$ to generate a new sequence, and $[a_i(I_j), b_i(I_j)]$ represents to cascade the two new sequences $a_i(I_j)$ and $b_i(I_j)$ to form one sequence;
selecting, from said *S'M* new sequences, *S* sequences which meet a predetermined condition to construct a middle pilot sequence set, wherein said predetermined condition is: the maximum peak-to-average power ratios of said S sequences are all less than a first threshold value and the correlation coefficient between any two sequences is less than a second threshold value; and
selecting a middle pilot sequence in the generated middle pilot sequence set.

**14.** The method according to claim 13, **characterized in that** the peak-to-average power ratio is obtained by:

mapping said *S'M* new sequences onto *m* subcarriers in $N_{FFT}$ carriers according to a specific mode, setting the remaining $N_{FFT}\text{-}m$ carriers as zero, forming a sequence F of $N_{FFT}$, and then obtaining a sequence T by performing the discrete Fourier transform of $N_{FFT}$ points on sequence F, with the peak-to-average power ratio being:

$$PAPR = 10 * \log 10 \left( \frac{N_{FFT} * \max\left(T \otimes conj(T)\right)}{\sum_{i=1}^{N_{FFT}} |T(i)|^2} \right)$$

wherein '$\otimes$' represents that corresponding elements of the sequence multiply with each other, and $conj(T)$ represents to take conjugation on each element of sequence $T$;
said correlation coefficient between any two sequences is:

$$R_{kl}(\tau) = \frac{\sum_{i=1}^{N_{FFT}} T_k(i) * conj\left(T_l\left(\mathrm{mod}(i+\tau, N_{FFT})\right)\right)}{m}, \tau = 0,1,\cdots N_{FFT} - 1$$

wherein $T_k$ represents the *k-th* sequence obtained according to the above method.

15. The method according to claim 1, **characterized in that** the middle pilot sequence set is generated via at least one of the following operations:

generating $n$ middle sequences $x_i(k)$, wherein $1 \le i \le n$ and $1 \le k \le 2^n$, and the length of each middle sequence is $2^n$, wherein the $i$ ($1 \le i \le n$) th middle sequence is:

$x_i = (1,1,\cdots 1,0,0,\cdots 0,\cdots 1,1,\cdots 1,0,0,\cdots 0)$, wherein the number of the consecutive 1s or consecutive 0s is $2^n/2^i$;
generating $S'$ permutation sequences $\pi_i, i=1,2,\cdots S'$ of sequence $[1,2,\cdots n]$ or $S'$ different arrangements $\pi_i$, $i=1,2,\cdots S'$ of $[1,2,\cdots n]$, wherein $S' \ge S$ and $S$ is the number of sequences in said middle pilot sequence set;
generating $A_1$ different binary Golay sequences $P_i$, $i = 1,2,...A_1$, with the length of $2^N$, wherein $A_1 \ge A$ and $A$ is the number of middle pilot sequences in said middle pilot sequence set;

said $P_i = \sum_{l=1}^{n-1} x_{\pi_i(l)} x_{\pi(l+1)} + \sum_{l=1}^{n} c_l x_l + c$, $c_l$ and $c$ are any binary numbers (0 or

1); and
inserting into each generated binary Golay sequence $P_i$ a binary sequence $a$ with the length of $M-2^N$ to obtain a sequence $S_i$ with the length of $M$, wherein the $j(1 \le j \le M - 2^N)$th element of binary sequence $a$ is the $(9*j)$th element of sequence $S_i$, wherein $1 \le j \le M - 2^N$;
wherein said binary sequence $a$ meets: $a$ is a sequence, which enables $S_i$ to have the maximum peak-to-average power ratio, in all $2^{M-2^N}$ binary sequences with the length of $M-2^N$.

16. The method according to any one of claims 1 to 5, **characterized in that** other $N-N_{used}$ subcarriers in N subcarriers are set to be in idle state, wherein N is the number of subcarriers of the system or the number of discrete Fourier transform points.

17. The method according to claim 1, **characterized in that** said method further comprises performing a power/amplitude boosting operation on the modulated sequence.

18. The method according to claim 1, **characterized in that** said step of selecting a middle pilot sequence set comprises:

selecting a middle pilot sequence set from a plurality of preset middle pilot sequence sets according to a first preset factor, wherein said first preset factor includes at least one of the following: the number of transmission antennas of the wireless communication networking unit, system bandwidth used by the system, the number of subcarriers of the system, the number of discrete Fourier transform points of the system, and the index of the wireless communication networking unit; and

selecting said middle pilot sequence to be transmitted from said selected middle pilot sequence set according to a second preset factor, wherein said second preset factor includes at least one of the following: the index of the wireless communication networking unit, and the number of part or all of sequences contained in a preset sequence set to which a middle pilot sequence corresponding to the wireless communication networking unit belongs;

wherein said wireless communication networking unit includes at least one of the following: a cell, a base station, a sector, and a segment.

19. The method according to claim 18, **characterized in that** the index $I$ of said middle pilot sequence to be transmitted comprises one of the following:

$I = f(BSID,CellID,MaxSeqNum)$,
$I = f(BSID,SegmentID,MaxSeqNum)$,
$I = f(CellID,MaxSeqNum)$,
$I = f(SegmentID,MaxSeqNum)$,
$I = f(CellID,SegmentID,MaxSeqNum)$,

wherein $MaxSeqNum+1$ is the number of part or all of sequences contained in the middle pilot sequence set to which the wireless communication networking unit belongs, BSID is the index of a base station, and Cell ID or Segment ID is cell index or sector index.

20. The method according to claim 1, **characterized in that** the step of selecting a middle pilot sequence set comprises:

at least one of the following factors determining the middle pilot sequence set to which the middle pilot sequence to be transmitted and corresponding to the wireless communication networking unit belongs: the number of transmission antennae corresponding to the wireless communication networking unit, system bandwidth, the number of subcarriers of the system, the number of discrete Fourier transform points of the system; and

the following factors determining the index of the middle pilot sequence in the middle pilot sequence set to which the middle pilot sequence belongs, with the middle pilot sequence being the one to be transmitted and corresponding to the wireless communication networking unit: the index of the wireless communication networking unit, and the number of part or all of sequences contained in a predetermined sequence set to which the middle pilot sequence corresponding to the wireless communication networking unit belongs;

wherein said wireless communication networking unit includes at least one of the following: a cell, a base station, a sector, and a segment.

21. The method according to claim 18 or 20, **characterized in that** the middle pilot sequence set is generated via the following operations:

choosing a natural number $N$ and enabling $N$ to be the maximum integer which meets $2^N \leq M$, wherein $M$ is the length of the middle pilot sequence in the middle pilot sequence set;

generating $n$ middle sequences $x_i(k)$, wherein $1 \leq i \leq n$ and $1 \leq k \leq 2^n$, and the length of each middle sequence is $2^n$, wherein the $i$ $(1 \leq i \leq n)$ th middle sequence is:

$x_i=(1,1,\cdots1,0,0,\cdots0,\cdots1,1,\cdots1,0,0,\cdots0)$, wherein the number of consecutive 1s or consecutive 0s is $2^n/2^i$;

generating $S'$ permutation sequences $\pi_i$, $i = 1,2,...S'$, of sequence $[1,2,\cdots n]$ or $S'$ different arrangements $\pi_i$, $i = 1,2,...S'$, of $[1,2,\cdots n]$, wherein $S' \geq S$ and $S$ is the number of sequences in said middle pilot sequence set;

generating $A_1$ different binary Golay sequences $P_i$, $i = 1,2,\cdots A_1$, with the length of $2^N$, wherein $A_1 \geq A$ and $A$ is the number of middle pilot sequences in said middle pilot sequence set;

said $$P_i = \sum_{l=1}^{n-1} x_{\pi_i(l)} x_{\pi(l+1)} + \sum_{l=1}^{n} c_l x_l + c$$, $c_l$ and $c$ are any binary numbers (0 or

1); and

inserting into each generated binary Golay sequence $P_i$ a binary sequence $\boldsymbol{a}$ with the length of $M - 2^N$ to obtain a sequence $S_i$ with the length of $M$, wherein the $j$ $(1 \leq j \leq M - 2^N)$ th element of binary sequence $\boldsymbol{a}$ is the $(9*j)$th element of sequence $S_i$, wherein $1 \leq j \leq M - 2^N$;

wherein said binary sequence *a* meets: *a* is a sequence, which enables $S_i$ to have the maximum peak-to-average power ratio, in $2^{M-2N}$ binary sequences with the length of $M$ - $2^N$.

**22.** The method according to claim 18 or 20, **characterized in that** the middle pilot sequence set is generated via at least one of the following operations:

selecting, for a middle pilot sequence set which contains $S$ sequences, a natural number n, wherein n is the minimum natural number which meets $2^n \geq \dfrac{m}{2}$ or ($2^n \geq m$), $m$ is the length of each sequence in the middle pilot sequence set, and $S$ is a natural number;

generating $n$ middle sequences $x_i(k)$, wherein $1 \leq i \leq n$ and $1 \leq k \leq 2^n$, and the length of each middle sequence is $2^n$, wherein the $i$ ($1 \leq i \leq n$) th middle sequence is:

$x_i$=(1,1,$\cdots$1,0,0,$\cdots$0,$\cdots$1,1,$\cdots$1,0,0,$\cdots$0), wherein the number of consecutive 1s or consecutive 0s is $2^n/2^i$;

generating $S'$ permutation sequences of sequence $[1,2,\cdots n]$ or $S'$ different arrangements of $[1,2,\cdots n]$, wherein $S' \geq S$ and S is the number of sequences in said middle pilot sequence set;

generating S' Golay complementary sequence pairs of $a_i$ and $b_i$ with the length of $2^n$, wherein $1 \leq i \leq S'$;

wherein, $a_i = \sum_{l=1}^{n} x_{\pi_i(l)} x_{\pi_i(l+1)}, \; b_i = \sum_{l=1}^{n} x_{\pi_i(l)} x_{\pi(l+1)} + x_{\pi_i(1)} ,$ and $_{\pi i}(l)$ represents the *l-th* element of *i-th* sequence in S' permutation sequences;

selecting $M$ index sequences $I_j = \left[ i_1^j, i_2^j, \cdots i_m^j \right]$, wherein $1 \leq j \leq M$, and any two elements in each index sequence are different and each element belongs to an interval $[1,2^n]$; and

in the generated S' Golay complementary sequence pairs, selecting, for each sequence $a_i$ and/or $b_i$, elements corresponding to index $I_j$ to construct a new sequence and totally construct $S'M$ new sequences, wherein when

$n$ is the minimum natural number which meets $2^n \geq \dfrac{m}{2}$ , the generated new sequence is $[a_i(I_j), b_i(I_j)]$ ($1 \leq i \leq S'$,

$1 \leq j \leq M$), and when $n$ is the minimum natural number which meets $2^n \geq m$, the generated new sequence is $a_i(I_j)$ or $b_i(I_j)$ ($1 \leq i \leq S', 1 \leq j \leq M$) ;

wherein $a_i(I_j)$ represents to select elements with the index of $I_j$ in $a_i$ to generate a new sequence, and $[a_i(I_j), b_i(I_j)]$ represents to cascade the two new sequences $a_i(I_j)$ and $b_i(I_j)$ to form one sequence; and

selecting, from said $S'M$ new sequences, $S$ sequences meeting a predetermined condition, to construct said middle pilot sequence set, wherein said predetermined condition is: the maximum peak-to-average power ratios of said $S$ sequences are all less than a first threshold value and the correlation coefficient between any two sequences is less than a second threshold value.

| CP | useful data |
|----|-------------|

middle pilot time domain OFDM symbol

**Fig. 1**

left protection band — DC subcarrier — right protection band

P1 P2 P1 P2 — P1 P2 P1 P2

$N_{start}$

subcarrier index:
rank in ascending order

⊘ middle pilot subcarrier of antenna 1

⊕ middle pilot subcarrier of antenna 2

**Fig. 2**

left protection band — DC subcarrier — right protection band

P1 P2 P3 P4 — P1 P2 P3 P4

subcarrier index,
rank in ascending order

⊘ middle pilot subcarrier of antenna 1

⊕ middle pilot subcarrier of antenna 2

⊗ middle pilot subcarrier of antenna 3

◐ middle pilot subcarrier of antenna 4

**Fig. 3**

left protection band     DC subcarrier    right protection band

P1 P2 P3 P4 P5 P6 P7 P8     P1 P2 P3 P4 P5 P6 P7 P8

subcarrier index,
rank in ascending order

⊘ middle pilot subcarrier corresponding to antenna 1

⊕ middle pilot subcarrier corresponding to antenna 2

⊗ middle pilot subcarrier corresponding to antenna 3

◔ middle pilot subcarrier corresponding to antenna 4

⊗ middle pilot subcarrier corresponding to antenna 5

⊖ middle pilot subcarrier corresponding to antenna 6

⊙ middle pilot subcarrier corresponding to antenna 7

⊞ middle pilot subcarrier corresponding to antenna 7

# Fig. 4

protection band    DC     protection band

P1 P2     P1 P2        cell 1

protection band    DC     protection band

$N_{start}$

P1 P2     P1 P2        cell 2

offset = 2

protection band    DC     protection band

P1 P2     P1 P2        cell 3

offset = 4

subcarrier index,
rank in ascending order

⊘ middle pilot subcarrier corresponding to antenna 1

⊕ middle pilot subcarrier corresponding to antenna 2

# Fig. 5

255

**Fig. 6**

left protection band

DC    right protection band

P1 P2 P3 P4 P5 P6 P7 P8

left protection band

$N_{start}$

DC    left protection band

P1 P2 P3 P4 P5 P6 P7 P8

offset = 8

left protection band

DC    left protection band

P1 P2 P3 P4 P5 P6 P7 P8

offset = 16

subcarrier index,
rank in ascending order

⊘    middle pilot subcarrier corresponding to antenna 1

⊕    middle pilot subcarrier corresponding to antenna 2

⊘    middle pilot subcarrier corresponding to antenna 3

◫    middle pilot subcarrier corresponding to antenna 4

⊗    middle pilot subcarrier corresponding to antenna 5

⊖    middle pilot subcarrier corresponding to antenna 6

⊙    middle pilot subcarrier corresponding to antenna 7

⊞    middle pilot subcarrier corresponding to antenna 8

# Fig. 7

## INTERNATIONAL SEARCH REPORT

| International application No. |
| --- |
| PCT/CN2010/073517 |

**A. CLASSIFICATION OF SUBJECT MATTER**

see extra sheet
According to International Patent Classification (IPC) or to both national classification and IPC

**B. FIELDS SEARCHED**

Minimum documentation searched (classification system followed by classification symbols)

IPC: H04L, H04J

Documentation searched other than minimum documentation to the extent that such documents are included in the fields searched

Electronic data base consulted during the international search (name of data base and, where practicable, search terms used)

CNKI, CNPAT, CPPABS, CPDIABS, CPRSABS,WPI, EPODOC：middle, pilot, reference, signal, OFDM, MIMO, subcarriers, union, channel, measure, modulated, mapped, antenna, send+, transmit+

**C. DOCUMENTS CONSIDERED TO BE RELEVANT**

| Category* | Citation of document, with indication, where appropriate, of the relevant passages | Relevant to claim No. |
| --- | --- | --- |
| A | CN101184073A (ZTE CORP) 21 May 2008 (21.05.2008)<br>The whole document | 1-22 |
| A | CN101132381A (SHANGHAI WIRELESS COMMUNICATION RES CENT) 27 Feb. 2008 (27.02.2008)   The whole document | 1-22 |
| A | CN101005472A (ZTE CORP) 25 Jul. 2007 (25.07.2007)<br>The whole document | 1-22 |
| A | US2006/0245509A1 (SAMSUNG ELECTRONICS CO LTD) 02 Nov. 2006 (02.11.2006) The whole document | 1-22 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 16 Aug. 2010 (16.08.2010) | **02 Sep. 2010 (02.09.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>CHEN,   Pei<br>Telephone No. (86-10)62411487 |

Form PCT/ISA /210 (second sheet) (July 2009)

## INTERNATIONAL SEARCH REPORT
### Information on patent family members

| | International application No. |
|---|---|
| | PCT/CN2010/073517 |

| Patent Documents referred in the Report | Publication Date | Patent Family | Publication Date |
|---|---|---|---|
| CN101184073A | 21.05.2008 | NONE | |
| CN101132381A | 27.02.2008 | NONE | |
| CN101005472A | 25.07.2007 | NONE | |
| US2006/0245509A1 | 02.11.2006 | NONE | |

Form PCT/ISA /210 (patent family annex) (July 2009)

## INTERNATIONAL SEARCH REPORT

International application No.

PCT/CN2010/073517

**A. CLASSIFICATION OF SUBJECT MATTER**

H04L27/26 (2006.01)i

H04J11/00 (2006.01) i